# EUROPEAN PATENT SPECIFICATION

(11) **EP 2 309 382 B1**
(45) Date of publication and mention of the grant of the patent: **03.12.2014**
(21) Application number: 10179602.7
(22) Date of filing: 24.08.1999
(51) Int. Cl.: G06F 7/483, G06F 7/499, G06F 9/38, G06F 9/302, G06F 9/312, G06F 9/318, G06F 9/30

(54) **System with wide operand architecture and method**
System mit breiter Operandenarchitektur und Verfahren
Système doté d'une architecture d'opérande large et procédé

(30) Priority: 24.08.1998 US 97635 P; 13.10.1998 US 169963
(43) Date of publication of application: 13.04.2011
(62) Divisional of application: 10160103.7
(73) Proprietor: MicroUnity Systems Engineering, Inc., Los Altos, CA 94022 (US)
(72) Inventor: Hansen, Craig, Los Altos, CA 94022 (US)
(74) Representative: Clark, Jane Anne

(56) References cited:
- HANSEN C ED - INSTITUTE OF ELECTRICAL AND ELECTRONICS ENGINEERS: "ARCHITECTURE OF A BROADBAND MEDIAPROCESSOR", DIGEST OF PAPERS OF COMPCON (COMPUTER SOCIETY CONFERENCE) 1996 TECHNOLOGIES FOR THE INFORMATION SUPERHIGHWAY. SANTA CLARA, FEB. 25 - 28, 1996; [DIGEST OF PAPERS OF THE COMPUTER SOCIETY COMPUTER CONFERENCE COMPCON], LOS ALAMITOS, IEEE COMP. SOC. PRESS, vol. CONF. 41, 1 January 1996 (1996-01-01) , pages 1-08, XP002921975, ISBN: 978-0-8186-7414-3
- HANSEN C: "MICROUNITY'S MEDIA PROCESSOR ARCHITECTURE", IEEE MICRO, IEEE SERVICE CENTER, LOS ALAMITOS, CA, US, vol. 16, no. 4, 1 August 1996 (1996-08-01) , pages 34-41, XP000596511, ISSN: 0272-1732, DOI: DOI:10.1109/40.526923
- GWENNAP L: "ULTRASPARC ADDS MULTIMEDIA INSTRUCTIONS. ÖOTHER NEW INSTRUCTIONS HANDLE UNALIGNED AND LITTLE-ENDIAN DATA", MICROPROCESSOR REPORT, MICRODESIGN RESOURCES, MOUNTAIN VIEW, CA, US, 5 December 1994 (1994-12-05), pages 16-18, XP000561690, ISSN: 0899-9341

## Description

### Related Applications

This application is related to Provisional Application No. 60/097,635, filed August 24, 1998, and is a continuation in part of U.S. Patent Application No. 09/169,963, filed October 13, 1998 which is in turn related to U.S. Patent Application No. 08/516,036, filed August 16, 1995, now U.S. Patent No. 5,742,840.

### Field of the Invention

The present invention relates to general purpose processor architectures, and particularly relates to wide operand architectures.

### BACKGROUND OF THE INVENTION

The performance level of a processor, and particularly a general purpose processor, can be estimated from the multiple of a plurality of interdependent factors: clock rate, gates per clock, number of operands, operand and data path width, and operand and data path partitioning. Clock rate is largely influenced by the choice of circuit and logic technology, but is also influenced the number of gates per clock. Gates per clock is how many gates in a pipeline may change state in a single clock cycle. This can be reduced by inserting latches into the data path: when the number of gates between latches is reduced, a higher clock is possible. However, the additional latches produce a longer pipeline length, and thus come at a cost of increased instruction latency. The number of operands is straightforward; for example, by adding with carry-save techniques, three values may be added together with little more delay than is required for adding two values. Operand and data path width defines how much data can be processed at once; wider data paths can perform more complex functions, but generally this comes at a higher implementation cost. Operand and data path partitioning refers to the efficient use of the data path as width is increased, with the objective of maintaining substantially peak usage.

The last factor, operand and data path partitioning, is treated extensively in commonly-assigned U.S. Patent No.'s 5,742,840, 5,794,060, 5,794,061, 5,809,321, and 5,822,603, which describe systems and methods for enhancing the utilization of a general purpose processor by adding classes of instructions. These classes of instructions use the contents of general purpose registers as data path sources, partition the operands into symbols of a specified size, perform operations in parallel, catenate the results and place the catenated results into a general-purpose register. These patents, all of which are assigned to the same assignee as the present invention, teach a general purpose microprocessor which has been optimized for processing and transmitting media data streams through significant parallelism.

While the foregoing patents offered significant improvements in utilization and performance of a general purpose microprocessor, particularly for handling broadband communications such as media data streams, other improvements are possible.

Many general purpose processors have general registers to store operands for instructions, with the register width matched to the size of the data path. Processor designs generally limit the number of accessible registers per instruction because the hardware to access these registers is relatively expensive in power and area. While the number of accessible registers varies among processor designs, it is often limited to two, three or four registers per instruction when such instructions are designed to operate in a single processor clock cycle or a single pipeline flow. Some processors, such as the Motorola 68000 have instructions to save and restore an unlimited number of registers, but require multiple cycles to perform such an instruction.

The Motorola 68000 also attempts to overcome a narrow data path combined with a narrow register file by taking multiple cycles or pipeline flows to perform an instruction, and thus emulating a wider data path. However, such multiple precision techniques offer only marginal improvement in view of the additional clock cycles required. The width and accessible number of the general purpose registers thus fundamentally limits the amount of processing that can be performed by a single instruction in a register-based machine.

Existing processors may provide instructions that accept operands for which one or more operands are read from a general purpose processor's memory system. However, as these memory operands are generally specified by register operands, and the memory system data path is no wider than the processor data path, the width and accessible number of general purpose operands per instruction per cycle or pipeline flow is not enhanced.

The number of general purpose register operands accessible per instruction is generally limited by logical complexity and instructions. For example, it might be possible to implement certain desirable but complex functions by specifying a large number of general purpose registers, but substantial additional logic would have to be added to a conventional design to permit simultaneous feeding and bypassing of the register values. While dedicated registers have been used in some prior art designs to increase the number or size of source operands or results, explicit instructions load or store values into these dedicated registers, and additional instructions are required to save and restore those registers upon a change of processor context.

There has therefore been a need for a processor system capable of efficient handling of operands of greater width than either the memory system or any accessible general purpose register.

The paper entitled "Architecture of a Broadband Media Processor" by Craig Hansen in Proceedings of Institute of Electrical and Electronic Engines COMPCON96, February 25-29, 1996 describes a broadband media processor in which media processor group instructions may be implemented which perform operations on corresponding groups of symbols from two register For example, corresponding symbol group from two registers may be added, subtracted, multiplied, or multiplied and then added to corresponding symbol groups from another register. Group switching operations are also possible In which group symbols from two register files are rearranged, swopped, extract expanded or compressed, for example.

### SUMMARY OF THE INVENTION

According to a first aspect of the present invention, there is provided a processor as set out in Claim 1. In another aspect, the present invention provides a method as set out in Claim 13.

Described herein are a system and method for improving the performance of general processors by expanding at least one source operand to a width greater than the width of either the general purpose register or the data path width. In addition, several classes of instructions will be provided which cannot be performed efficiently if the operands are limited to the width and accessible number of general purpose registers.

As described herein, operands are provided which are substantially larger than the data path width of the processor. This is achieved, in part, by using a general purpose register to specify a memory address from which at least more than one, but typically several data path widths of data can be read. To permit such a wide operand to be performed in a single cycle, the data path functional unit is augmented with dedicated storage to which the memory operand is copied on an initial execution of the instruction. Further execution of the instruction or other similar instrutions that specify the same memory address can read the dedicated storage to obtain the operand value. However, such reads are subject to conditions to verify that the memory operand has not been altered by intervening instructions. If the memory operand remains current - that is, the conditions are met - the memory operand fetch can be combined with one or more register operands in the functional unit, producing a result. The size of the result is, typically, constrained to that of a general register so that no dedicated or other special storage is required for the result.

Exemplary instructions using wide operations include wide instructions that perform bit-level switching (Wide Switch), byte or larger table-lookup (Wide Translate), Wide Multiply Matrix, Wide Multiply Matrix Extract, Wide Multiply Matrix Extract Immediate, Wide Multiply Matrix Floating point, and Wide Multiply Matrix Galois.

The efficient usage of a multiplier array that is fully used for high precision arithmetic, but is only partly used for other, lower precision operations is also addressed herein. This can be accomplished by extracting the high-order portion of the multiplier product or sum of products, adjusted by a dynamic shift amount from a general register or an adjustment specified as part of the instruction, and rounded by a control value from a register or instruction portion. The rounding may be any of several types, including round-to-nearest/even, toward zero, floor, or ceiling. Overflows are typically handled by limiting the result to the largest and smallest values that can be accurately represented in the output result.

When an extract is controlled by a register, the size of the result can be specified, allowing rounding and limiting to a smaller number of bits than can fit in the result. This permits the result to be scaled for use in subsequent operations without concern of overflow or rounding. As a result, performance is enhanced, In those instances where the extract is controlled by is register, a single register value defines the size of the operands, the shift amount and size of the result, and the rounding control. By placing control information in a single register, the size of the instruction is reduced over the number of bits that such an instruction would otherwise require, again improving performance and enhancing processor flexibility. Exemplary instructions are Ensemble Convolve Extract, Ensemble Multiply Extract, Ensemble Multiply Add Extract, and Ensemble Scale Add Extract. With particular regard to the Ensemble Scale Add Extract Instruction, the extract control information is combined in a register with two values used as scalar multipliers to the contents of two vector multiplicands. This combination reduces the number of registers otherwise required, thus reducing the number of bits required for the instruction.

### THE FIGURES

Figure 1 is a system level diagram showing the functional blocks of a system according to the present invention.
Figure 2 is a matrix representation of a wide matrix multiply in accordance with the present invention.
Figure 3 is a further representation of a wide matrix multiple in accordance with the present invention.
Figure 4 is a system level diagram showing the functional blocks of a system incorporating a combined Simultaneous Multi Threading and Decoupled Access from Execution processor in accordance with the present invention.
Figure 5 illustrates a wide operand in accordance with the present invention.
Figure 6 illustrates an approach to specifier decoding in accordance with the present invention.
Figure 7 illustrates in operational block form a Wide Function Unit in accordance with the present invention.
Figure 8 illustrates in flow diagram form the Wide Microcache control function.
Figure 9 illustrates Wide Microcache data structures.
Figures 10 and 11 illustrate a Wide Microcache control.

### DETAILED DESCRIPTION OF THE INVENTION

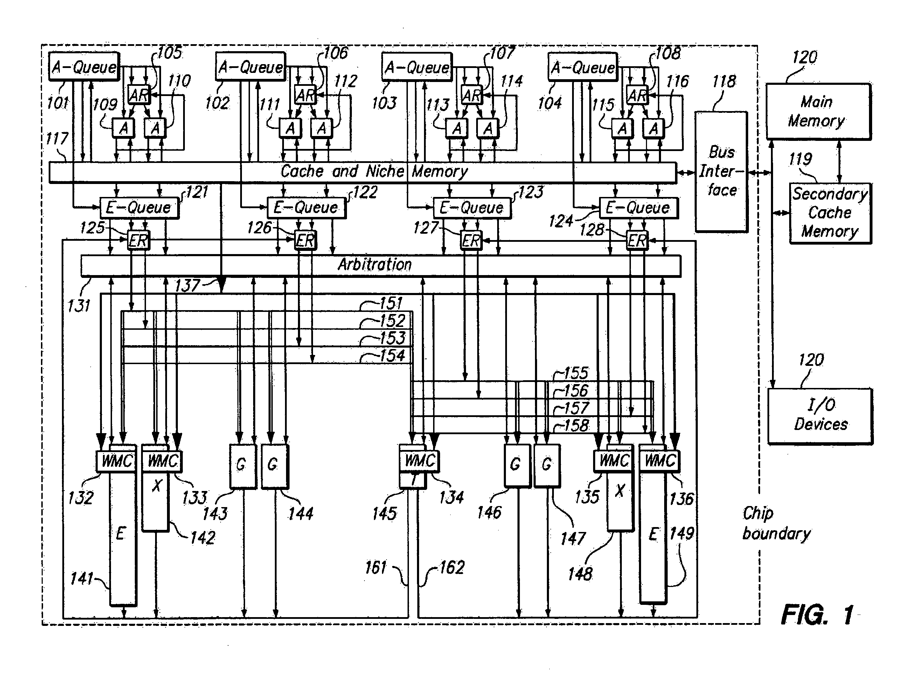

Referring first to Figure 1, a general purpose processor is illustrated therein in block diagram form. In Figure 1, four copies of an access unit are shown, each with an access instruction fetch queue A-Queue 101-104. Each access instruction fetch queue A-Queue 101-104 is coupled to an access register file AR 105-108, which are each coupled to two access functional units A 109-116. In a typical embodiment, each thread of the processor may have on the order of sixty-four general purpose registers (e.g., the AR's 105-108 and ER's 125-128). The access units function independently for four simultaneous threads of execution, and each compute program control flow by performing arithmetic and branch instructions and access memory by performing load and store instructions. These access units also provide wide operand specifiers for wide operand instructions. These eight access functional units A 109-116 produce results for access register files AR 105-108 and memory addresses to a shared memory system 117-120.

The memory system is comprised of a combined cache and niche memory 117, an external bus interface 118, and, externally to the device, a secondary cache 119 and main memory system with I/O devices 120. The memory contents fetched from memory system 117-120 are combined with execute instructions not performed by the access unit, and entered into the four execute instruction queues E-Queue 121-124. For wide instructions, memory contents fetched from memory system 117-120 are also provided to wide operand microcaches 132-136 by bus 137. Instructions and memory data from E-queue 121-124 are presented to execution register files 125-128, which fetch execution register file source operands. The instructions are coupled to the execution unit arbitration unit Arbitration 131, that selects which instructions from the four threads are to be routed to the available execution functional units E 141 and 149, X 142 and 148, G 143-144 and 146-147, and T 145. The execution functional units E 141 and 149, the execution functional units X 142 and 148, and the execution functional unit T 145 each contain a wide operand microcache 132-136, which are each coupled to the memory system 117 by bus 137.

The execution functional units G 143-144 and 146-147 are group arithmetic and logical units that perform simple arithmetic and logical instructions, including group operations wherein the source and result operands represent a group of values of a specified symbol size, which are partitioned and operated on separately, with results catenated together. In a presently preferred embodiment the data path is 128 bits wide, although the present invention is not intended to be limited to any specific size of data path.

The execution functional units X 142 and 148 are crossbar switch units that perform crossbar switch instructions. The crossbar switch units 142 and 148 perform data handling operations on the data stream provided over the data path source operand buses 151-158, including deals, shuffles, shifts, expands, compresses, swizzles, permutes and reverses, plus the wide operations discussed hereinafter. In a key element of a first aspect of the invention, at least one such operation will be expanded to a width greater than the general register and data path width. Examples of the data manipulation operations are described in the System Architecture/BroadMX Architecture descriptions included herein.

The execution functional units E 141 and 149 are ensemble units that perform ensemble instructions using a large array multiplier, including group or vector multiply and matrix multiply of operands partitioned from data path source operand buses 151-158 and treated as integer, floating-point, polynomial or Galois field values. Matrix multiply instructions and other operations described in the System Architecture/BroadMX Architecture descriptions included herein utilize a wide operand loaded into the wide operand microcache 132 and 136.

The execution functional unit T 145 is a translate unit that performs table-look-up operations on a group of operands partitioned from a register operand, and catenates the result. The Wide Translate instruction, described in the System Architecture/BroadMX Architecture descriptions included herein, utilizes a wide operand loaded into the wide operand microcache 134.

The execution functional units E 141, 149, execution functional units X -142, 148, and execution functional unit T each contain dedicated storage to permit storage of source operands including wide operands as discussed hereinafter. The dedicated storage 132-136, which may be thought of as a wide microcache, typically has a width which is a multiple of the width of the data path operands related to the data path source operand buses 151-158. Thus, if the width of the data path 151-158 is 128 bits, the dedicated storage 132-136 may have a width of 256, 512, 1024 or 2048 bits. Operands which utilize the full width of the dedicated storage are referred to herein as wide operands, although it is not necessary in all instances that a wide operand use the entirety of the width of the dedicated storage; it is sufficient that the wide operand use a portion greater than the width of the memory data path of the output of the memory system 117-120 and the functional unit data path of the input of the execution functional units 141-149, though not necessarily greater than the width of the two combined. Because the width of the dedicated storage 132-136 is greater than the width of the memory operand bus 137, portions of wide operands are loaded sequentially into the dedicated storage 132-136. However, once loaded, the wide operands may then be used at substantially the same time. It can be seen that functional units 141-149 and associated execution registers 125-128 form a data functional unit, the exact elements of which may vary with implementation.

The execution register file ER 125-128 source operands are coupled to the execution units 141-145 using source operand buses 151-154 and to the execution units 145-149 using source operand buses 155-158. The function unit result operands from execution units 141-145 are coupled to the execution register file ER 125-128 using result bus 161 and the function units result operands from execution units 145-149 are coupled to the execution register file using result bus 162.

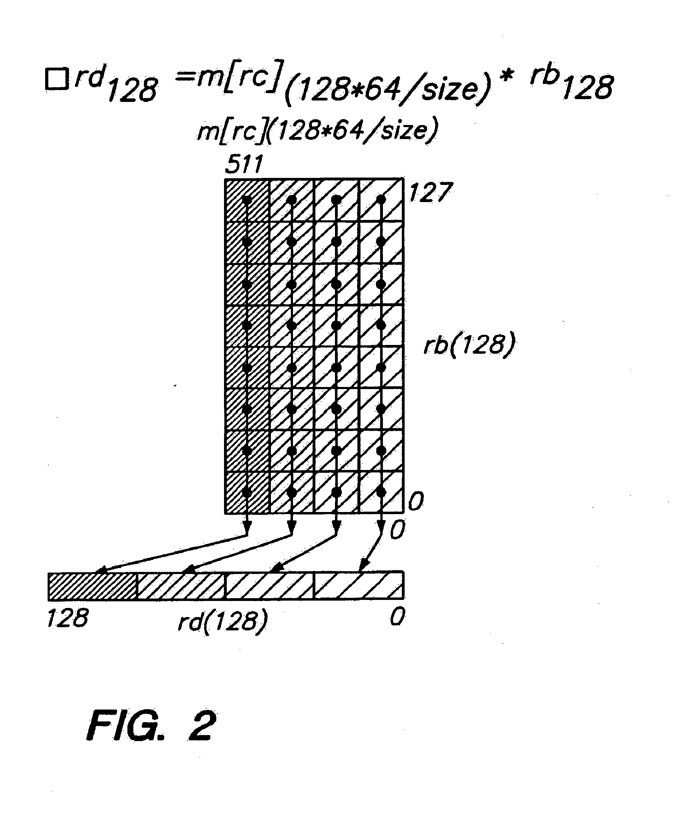

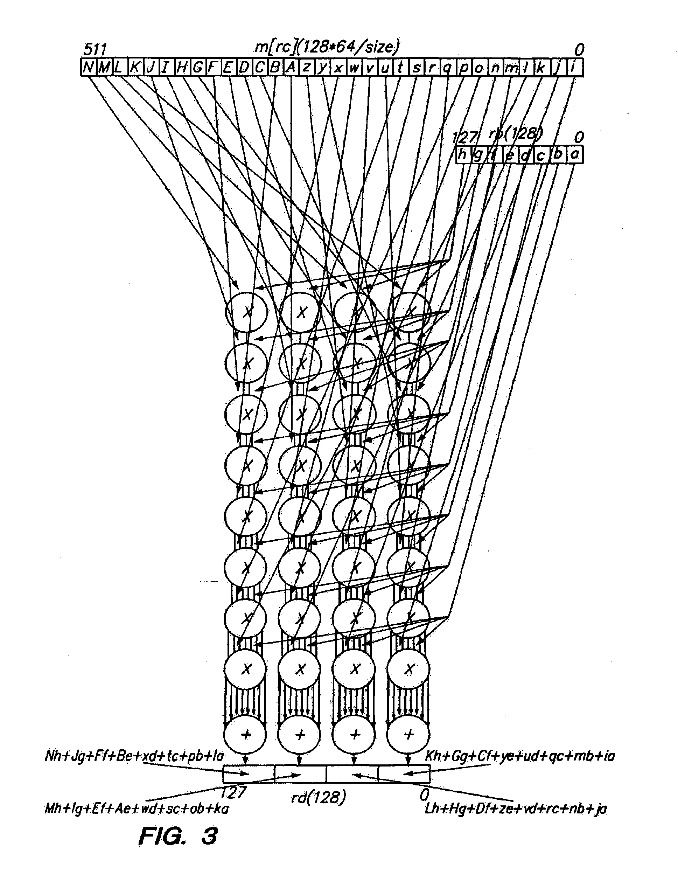

The wide operands of the present invention provide the ability to execute complex instructions such as the wide multiply matrix instruction shown in Figure 2, which can be appreciated in an alternative form, as well, from Figure 3. As can be appreciated from Figures 2 and 3, a wide operand permits, for example, the matrix multiplication of various sizes and shapes which exceed the data path width. The example of Figure 2 involves a matrix specified by register rc having a 128*64/size multiplied by a vector contained in register rb having a 128 size, to yield a result, placed in register rd, of 128 bits.

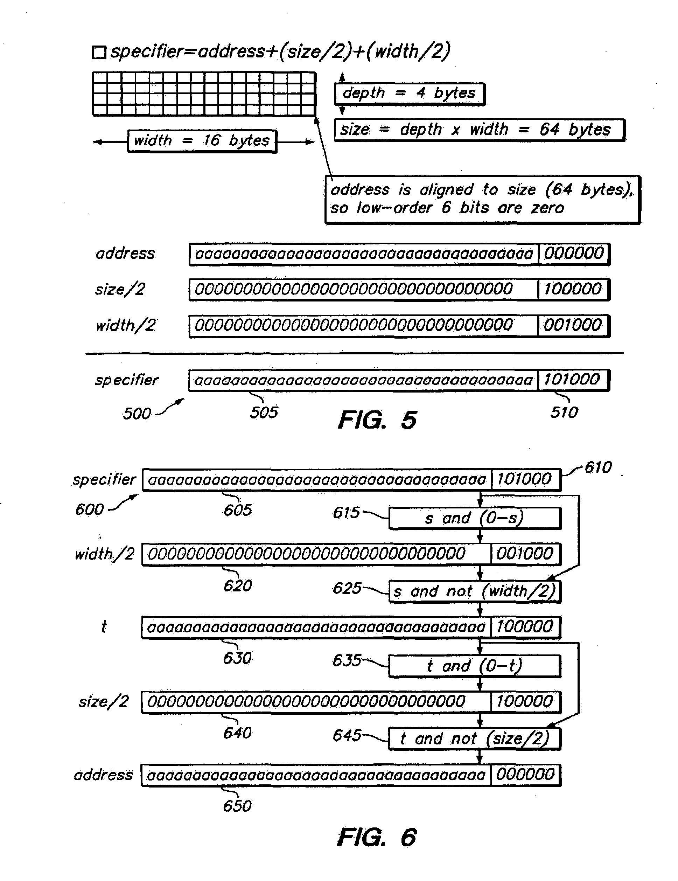

The operands that are substantially larger than the data path width of the processor are provided by using a general-purpose register to specify a memory specifier from which more than one but in some embodiments several data path widths of data can be read into the dedicated storage. The memory specifier typically includes the memory address together with the size and shape of the matrix of data being operated on. The memory specifier or wide operand specifier can be better appreciated from Figure 5, in which a specifier 500 is seen to be an address, plus a field representative of the size/2 and a further field representative of width/2, where size is the product of the depth and width of the data. The address is aligned to a specified size, for example sixty-four bytes, so that a plurality of low order bits (for example, six bits) are zero. The specifier 500 can thus be seen to comprise a first field 505 for the address, plus two field indicia 510 within the low order six bits to indicate size and width.

The decoding of the specifier 500 may be further appreciated from Figure 6 where, for a given specifier 600 made up of an address field 605 together with a field 610 comprising plurality of low order bits. By a series of arithmetic operations shown at steps 615 and 620, the portion of the field 610 representative of width/2 is developed. In a similar series of steps shown at 625 and 630, the value of t is decoded, which can then be used to decode both size and address. The portion of the field 610 representative of size/2 is decoded as shown at steps 635 and 640, while the address is decoded in a similar way at steps 645 and 650.

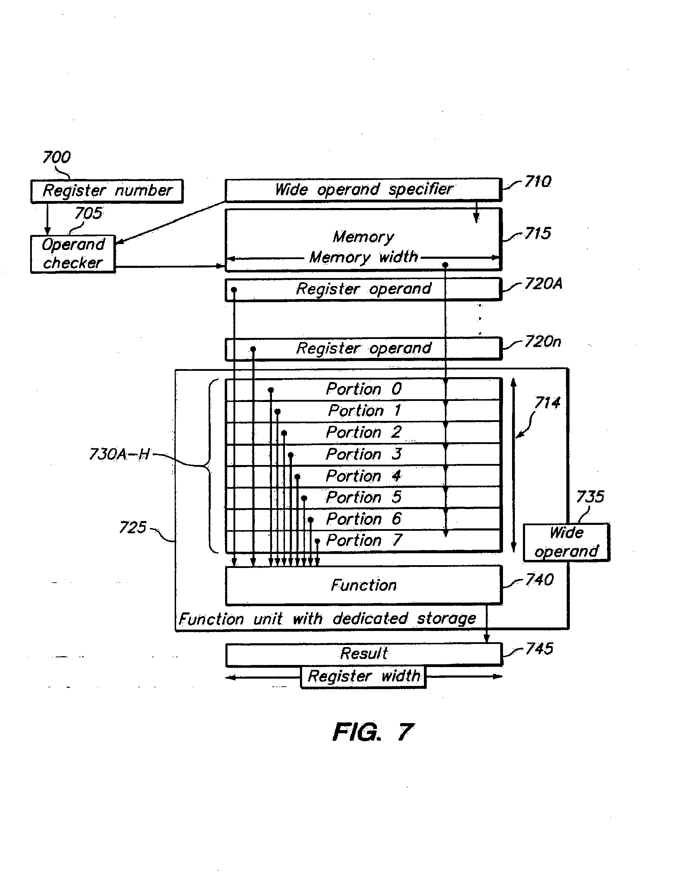

The wide function unit may be better appreciated from Figure 7, in which a register number 700 is provided to an operand checker 705. Wide operand specifier 710 communicates with the operand checker 705 and also addresses memory 715 having a defined memory width. The memory address includes a plurality of register operands 720A-n, which are accumulated in a dedicated storage portion 714 of a data functional unit 725. In the exemplary embodiment shown in Figure 7, the dedicated storage 714 can be seen to have a width equal to eight data path widths, such that eight wide operand portions 730A-H are sequentially loaded into the dedicated storage to form the wide operand. Although eight portions are shown in Figure 7, the present invention is not limited to eight or any other specific multiple of data path widths. Once the wide operand portions 730A-H are sequentially loaded, they may be used as a single wide operand 735 by the functional element 740, which may be any element(s) from Figure 1 connected thereto. The result of the wide operand is then provided to a result register 745, which in a presently preferred embodiment is of the same width as the memory width.

Once the wide operand is successfully loaded into the dedicated storage 714, a second aspect of the present invention may be appreciated. Further execution of this instruction or other similar instructions that specify the same memory address can read the dedicated storage to obtain the operand value under specific conditions that determine whether the memory operand has been altered by intervening instructions. Assuming that these conditions are met, the memory operand fetch from the dedicated storage is combined with one or more register operands in the functional unit, producing a result. In some embodiments, the size of the result is limited to that of a general register, so that no similar dedicated storage is required for the result. However, in some different embodiments, the result may be a wide operand, to further enhance performance.

To permit the wide operand value to be addressed by subsequent instructions specifying the same memory address, various conditions must be checked and confirmed: Those conditions include:
1. Each memory store instruction checks the memory address against the memory addresses recorded for the dedicated storage. Any match causes the storage to be marked invalid, since a memory store instruction directed to any of the memory addresses stored in dedicated storage 714 means that data has been overwritten.
2. The register number used to address the storage is recorded. If no intervening instructions have written to the register, and the same register is used on the subsequent instruction, the storage is valid (unless marked invalid by rule #1).
3. If the register has been modified or a different register number is used, the value of the register is read and compared against the address recorded for the dedicated storage. This uses more resources than #1 because of the need to fetch the register contents and because the width of the register is greater than that of the register number itself. If the address matches, the storage is valid. The new register number is recorded for the dedicated storage.
4. If conditions #2 or #3 are not met, the register contents are used to address the general-purpose processor's memory and load the dedicated storage. If dedicated storage is already fully loaded, a portion of the dedicated storage must be discarded (victimized) to make room for the new value. The instruction is then performed using the newly updated dedicated storage. The address and register number is recorded for the dedicated storage.

By checking the above conditions, the need for saving and restoring the dedicated storage is eliminated. In addition, if the context of the processor is changed and the new context does not employ Wide instructions that reference the same dedicated storage, when the original context is restored, the contents of the dedicated storage are allowed to be used without refreshing the value from memory, using checking rule #3. Because the values in the dedicated storage are read from memory and not modified directly by performing wide operations, the values can be discarded at any time without saving the results into general memory. This property simplifies the implementation of rule #4 above.

An alternate embodiment of the present invention can replace rule #1 above with the following rule:
1.a. Each memory store instruction checks the memory address against the memory addresses recorded for the dedicated storage. Any match causes the dedicated storage to be updated, as well as the general memory.

By use of the above rule 1.a, memory store instructions can modify the dedicated storage, updating just the piece of the dedicated storage that has been changed, leaving the remainder intact. By continuing to update the general memory, it is still true that the contents of the dedicated memory can be discarded at any time without saving the results into general memory. Thus rule #4 is not made more complicated by this choice. The advantage of this alternate embodiment is that the dedicated storage need not be discarded (invalidated) by memory store operations.

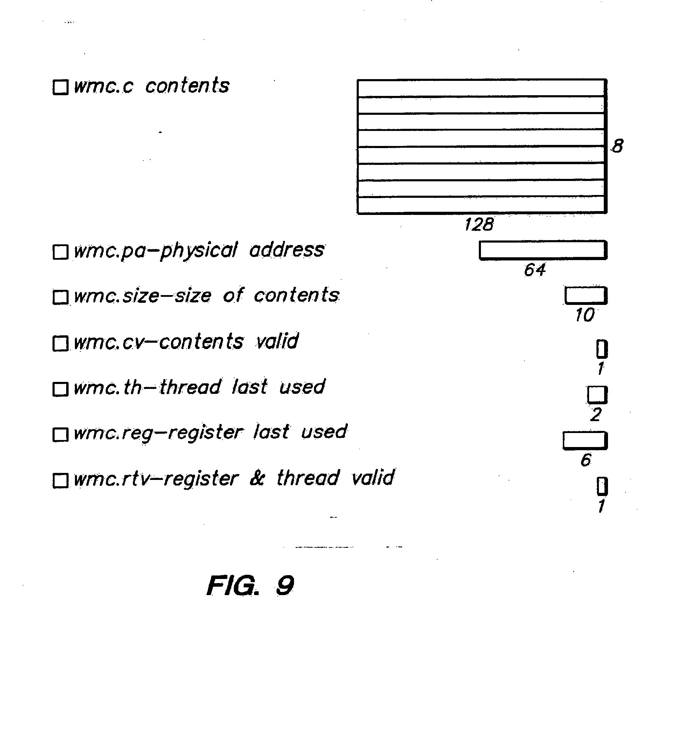

Referring next to Figure 9, an exemplary arrangement of the data structures of the wide microcache or dedicated storage 114 may be better appreciated. The wide microcache contents, wmc.c, can be seen to form a plurality of data path widths 900A-n, although in the example shown the number is eight. The physical address, wmc.pa, is shown as 64 bits in the example shown, although the invention is not limited to a specific width. The size of the contents, wmc.size, is also provided in a field which is shown as 10 bits in an exemplary embodiment. A "contents valid" flag, wmc.cv, of one bit is also included in the data structure, together with a two bit field for thread last used, or wmc.th. In addition, a six bit field for register last used, wmc.reg, is provided in an exemplary embodiment. Further, a one bit flag for register and thread valid, or wmc.rtv, may be provided.

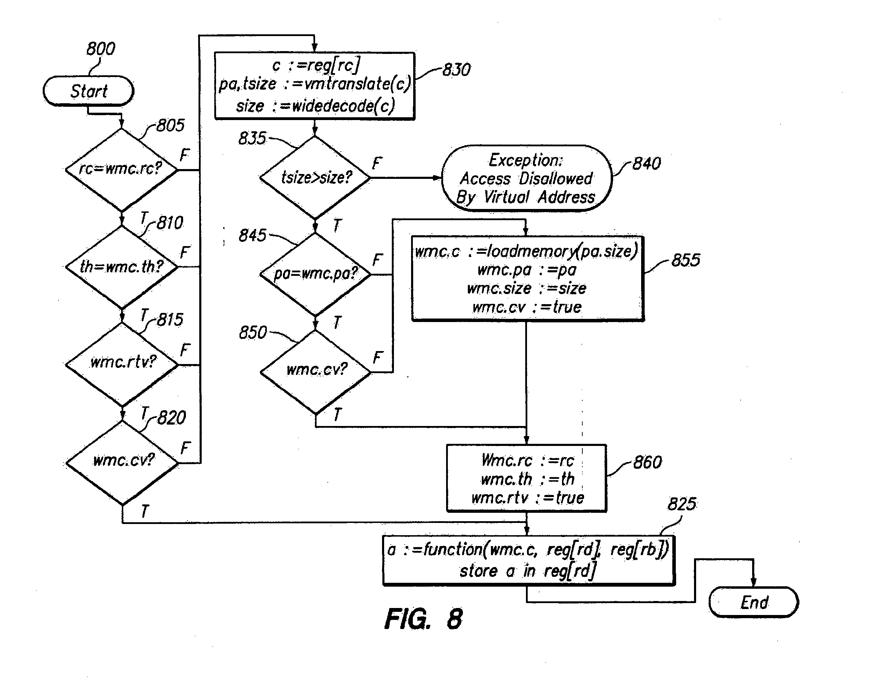

The process by which the microcache is initially written with a wide operand, and thereafter verified as valid for fast subsequent operations, may be better appreciated from Figure 8. The process begins at 800, and progresses to step 805 where a check of the register contents is made against the stored value wmc.rc. If true, a check is made at step 810 to verify the thread. If true, the process then advances to step 815 to verify whether the register and thread are valid. If step 815 reports as true, a check is made at step 820 to verify whether the contents are valid. If all of steps 805 through 820 return as true, the subsequent instruction is able to utilize the existing wide operand as shown at step 825, after which the process ends. However, if any of steps 805 through 820 return as false, the process branches to step 830, where content, physical address and size are set. Because steps 805 through 820 all lead to either step 825 or 830, steps 805 through 820 may be performed in any order or simultaneously without altering the process. The process then advances to step 835 where size is checked. This check basically ensures that the size of the translation unit is greater than or equal to the size of the wide operand, so that a physical address can directly replace the use of a virtual address. The concern is that, in some embodiments, the wide operands may be larger than the minimum region that the virtual memory system is capable of mapping. As a result, it would be possible for a single contiguous virtual address range to be mapped into multiple, disjoint physical address ranges, complicating the task of comparing physical addresses. By determining the size of the wide operand and comparing that size against the size of the virtual address mapping region which is referenced, the instruction is aborted with an exception trap if the wide operand is larger than the mapping region. This ensures secure operation of the processor. Software can then re-map the region using a larger size map to continue execution if desired. Thus, if size is reported as unacceptable at step 835, an exception is generated at step 840. If size is acceptable, the process advances to step 845 where physical address is checked. If the check reports as met, the process advances to step 850, where a check of the contents valid flag is made. If either check at step 845 or 850 reports as false, the process branches and new content is written into the dedicated storage 114, with the fields thereof being set accordingly. Whether the check at step 850 reported true, or whether new content was written at step 855, the process advances to step 860 where appropriate fields are set to indicate the validity of the data, after which the requested function can be performed at step 825. The process then ends.

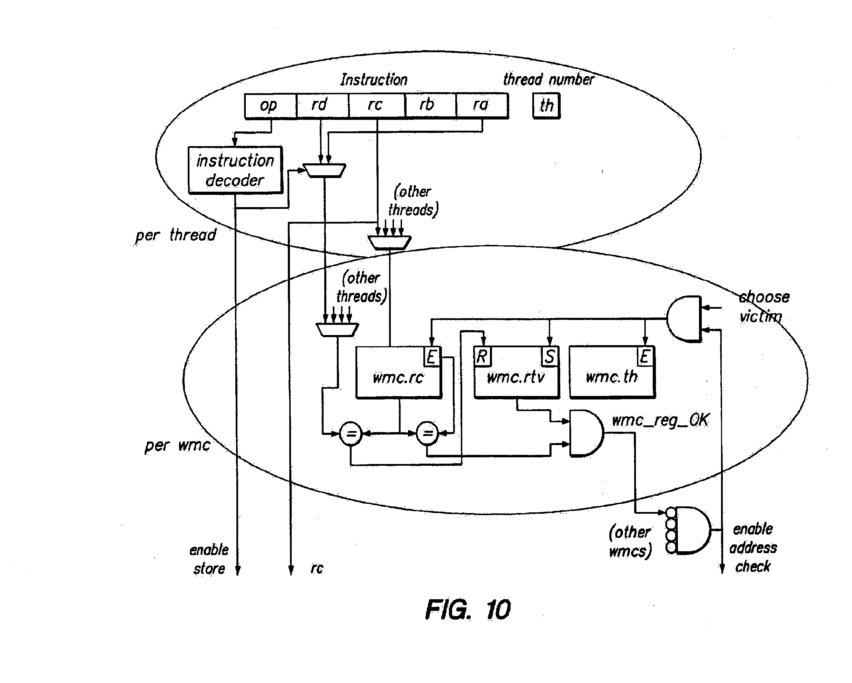

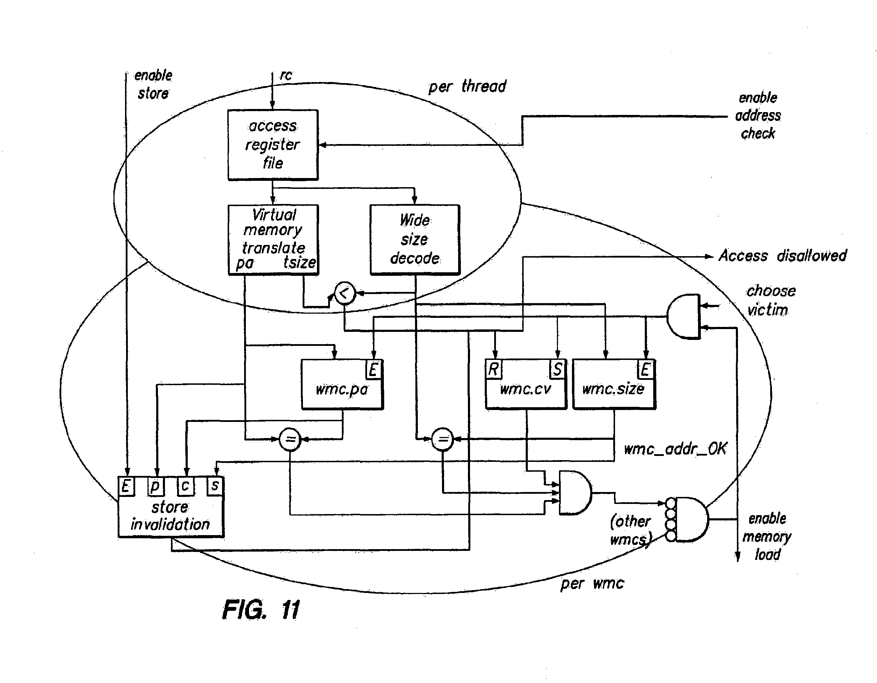

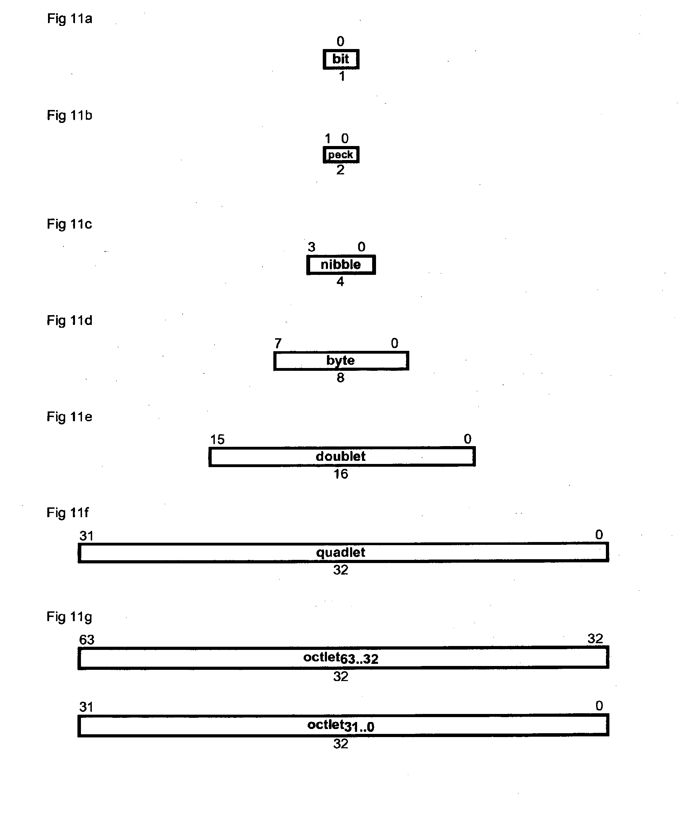

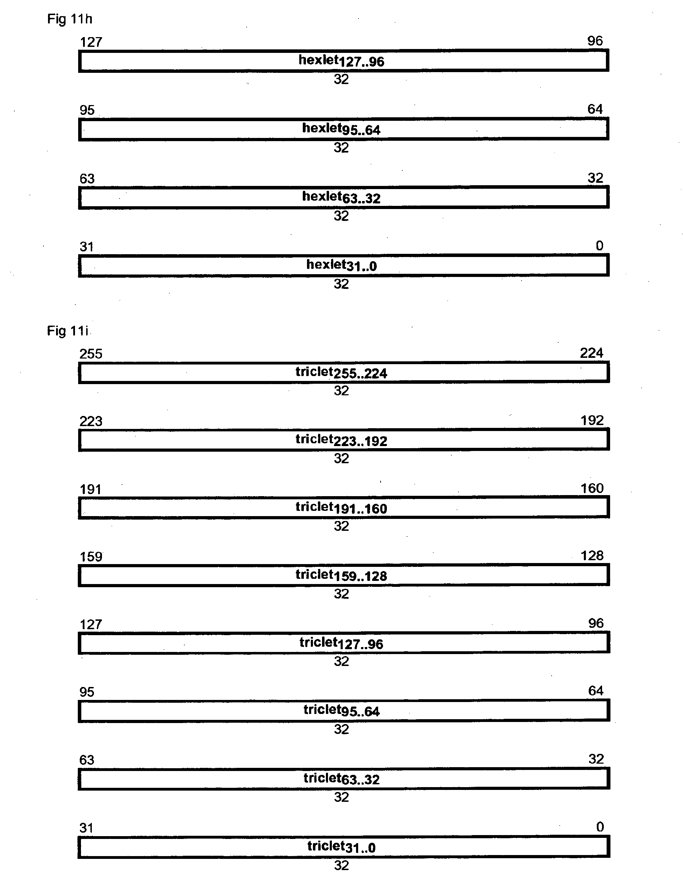

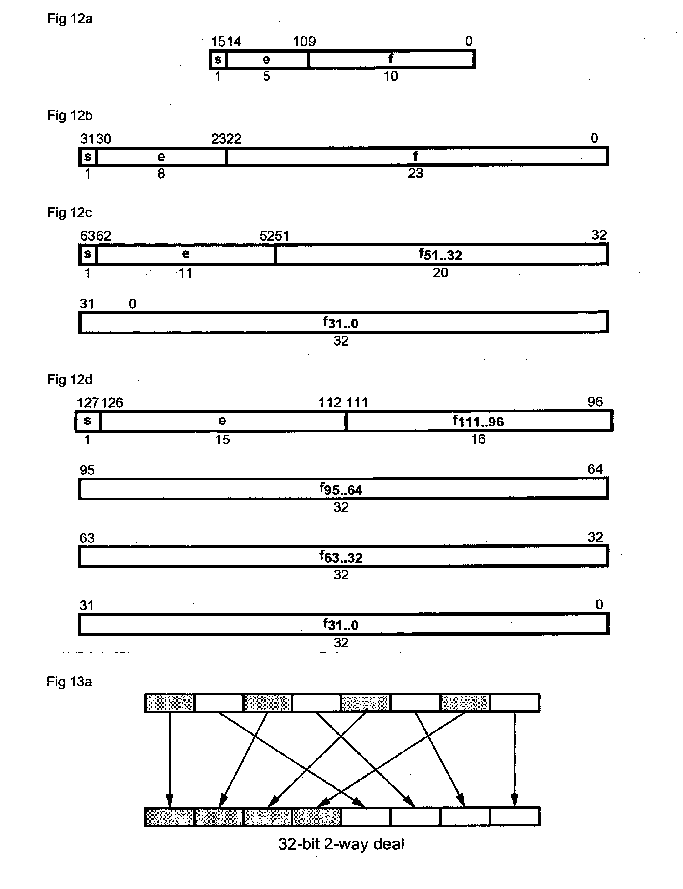

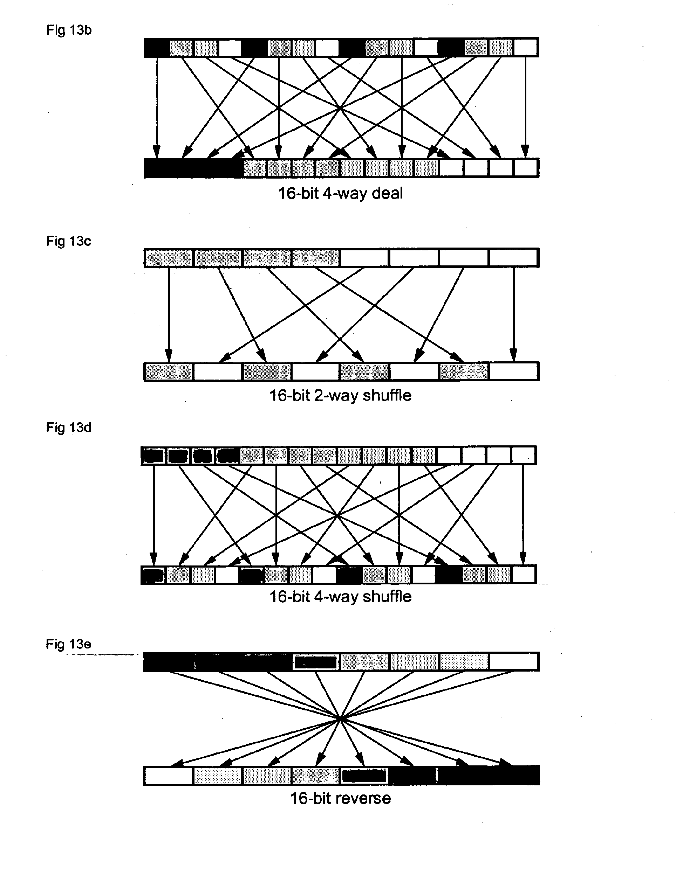

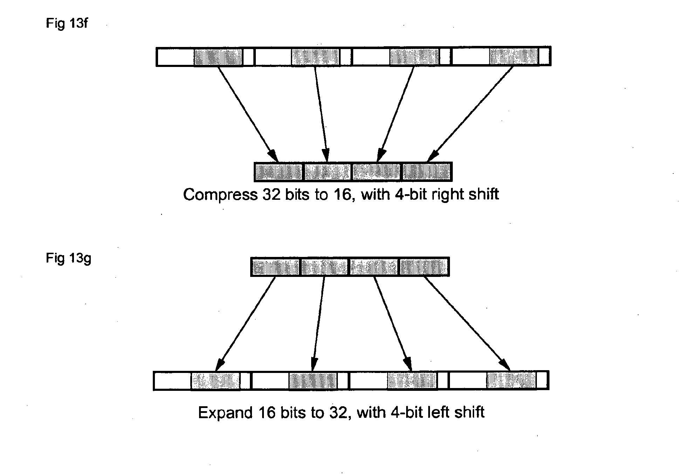

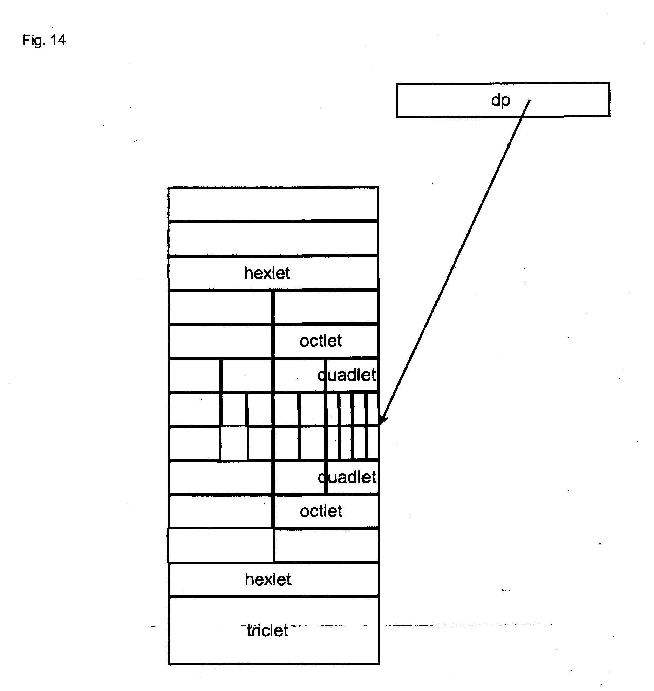

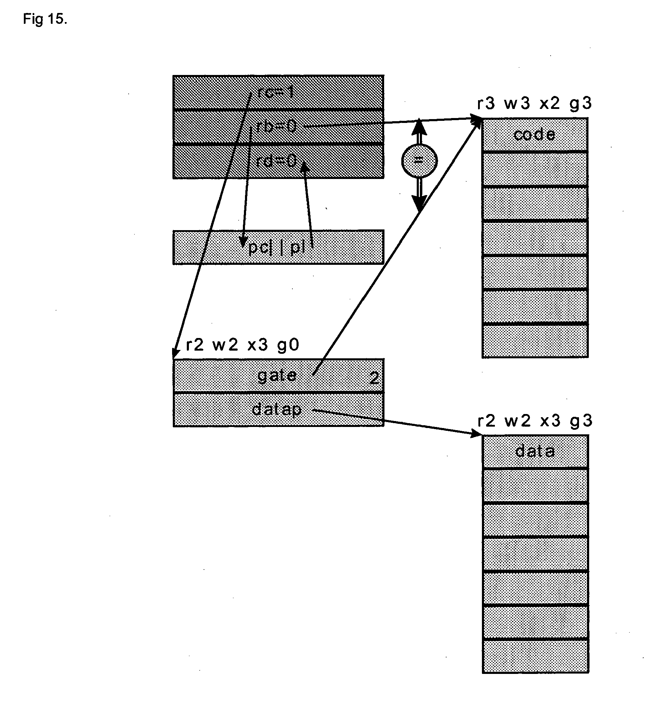

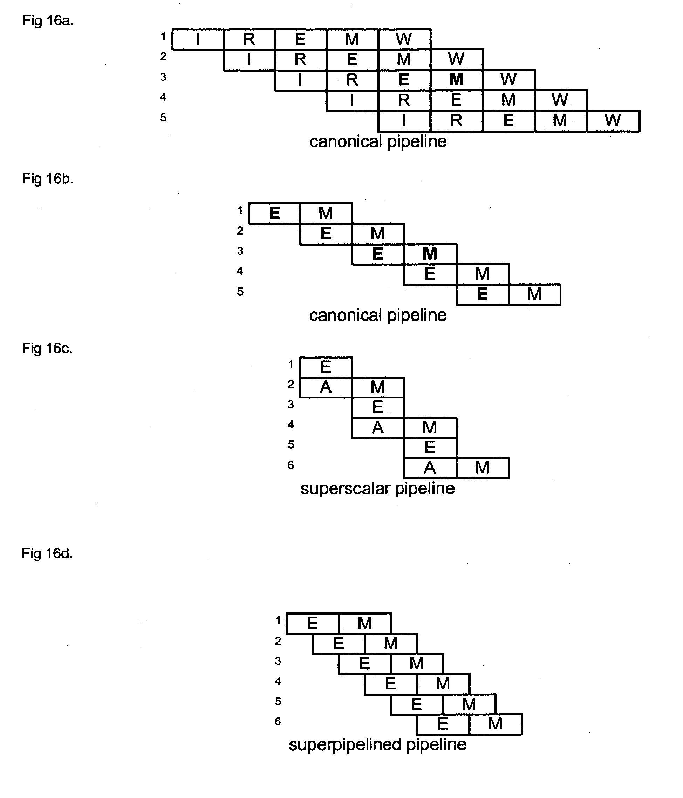

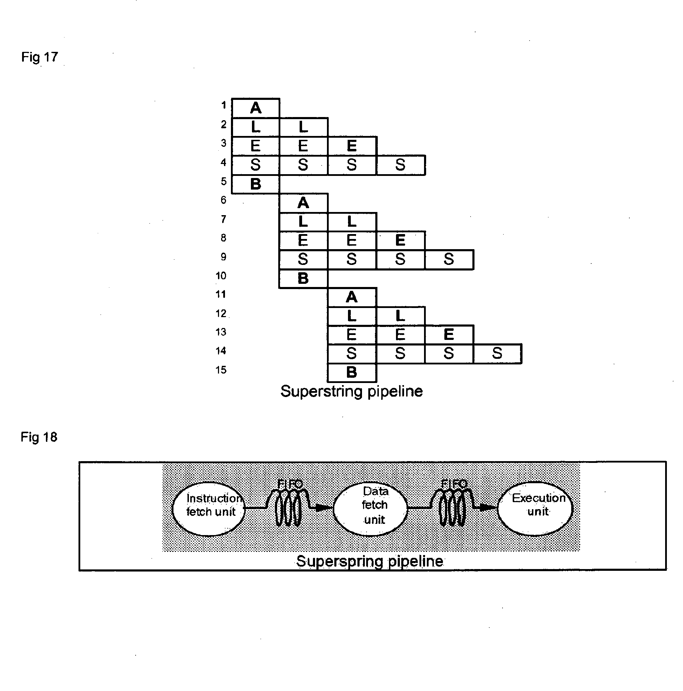

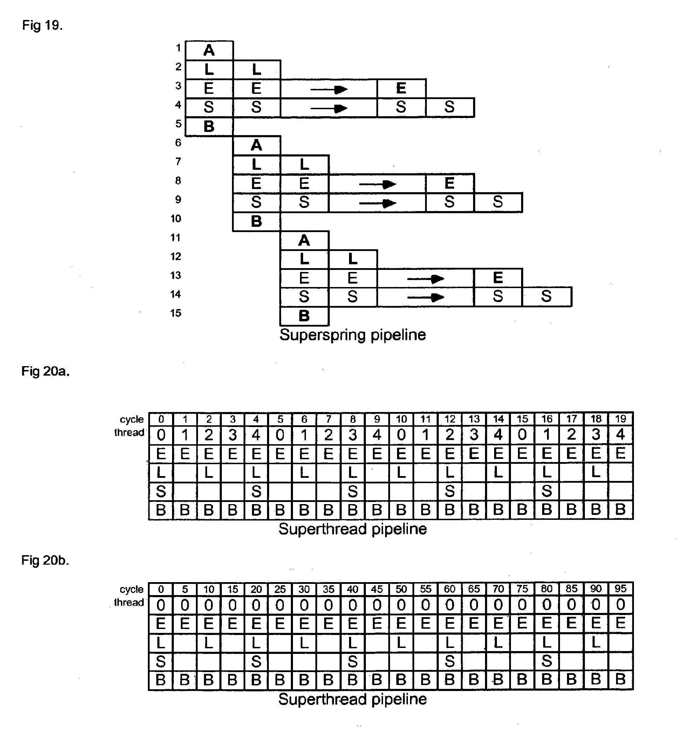

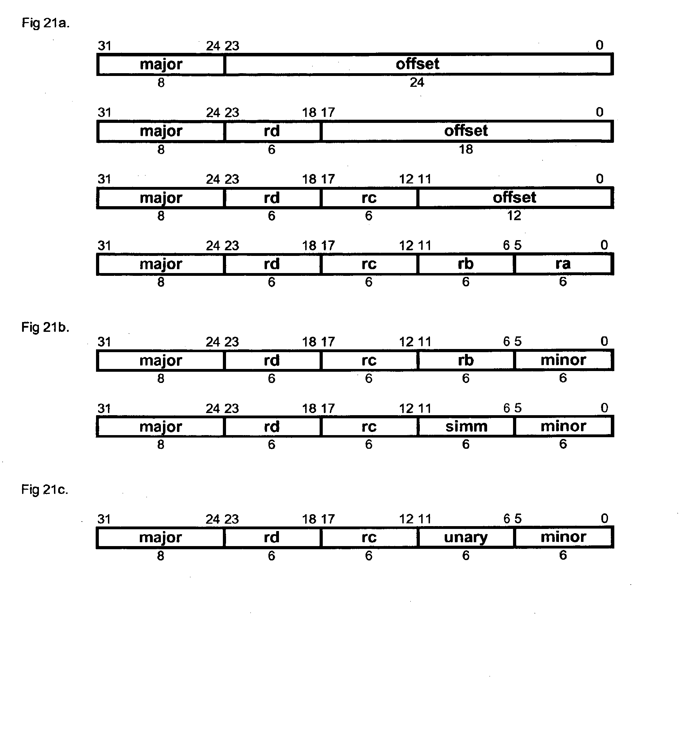

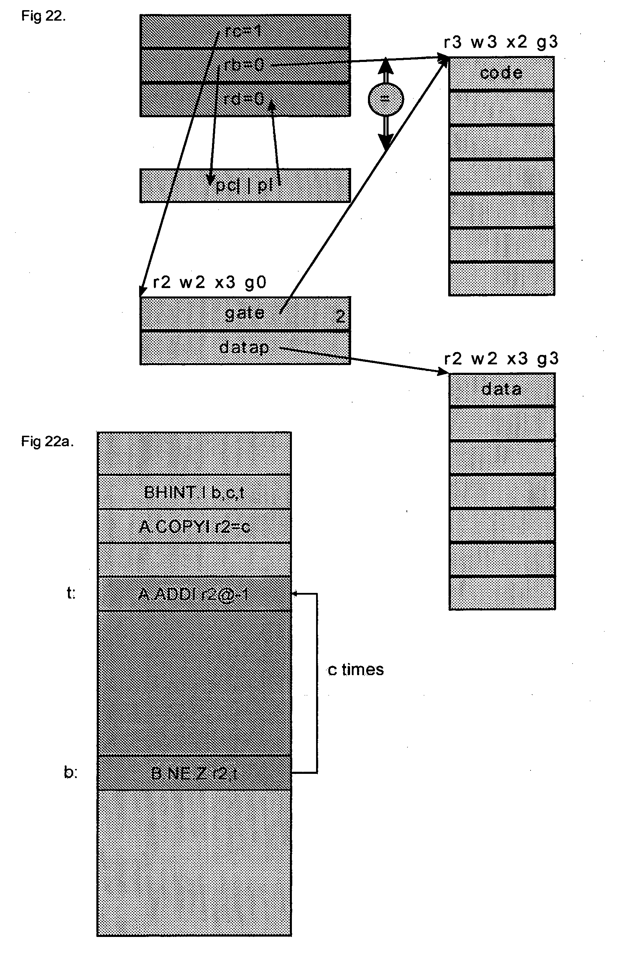

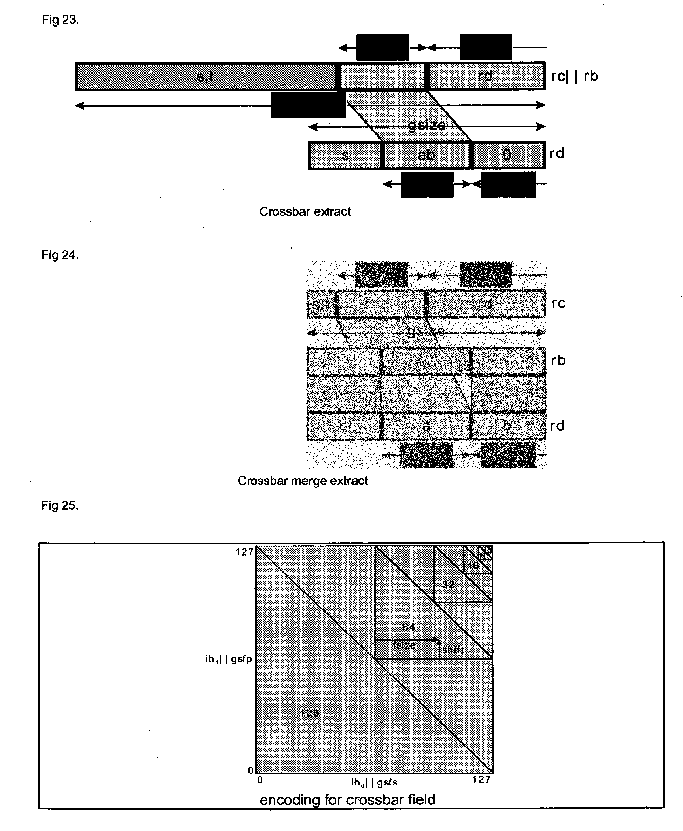

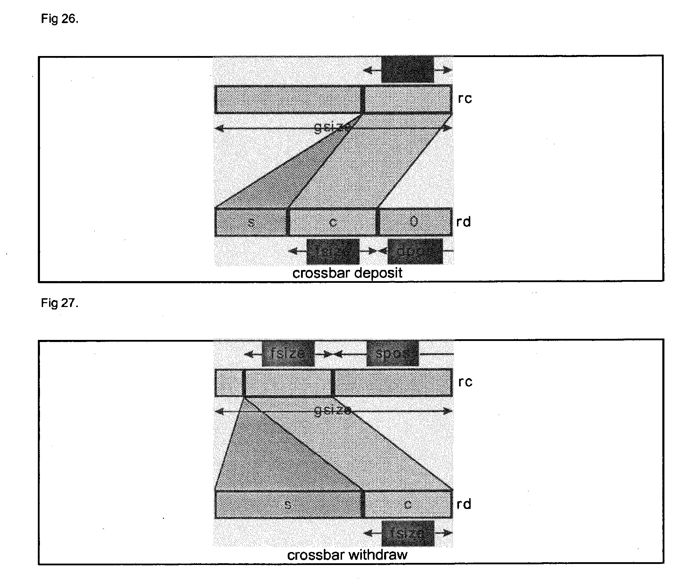

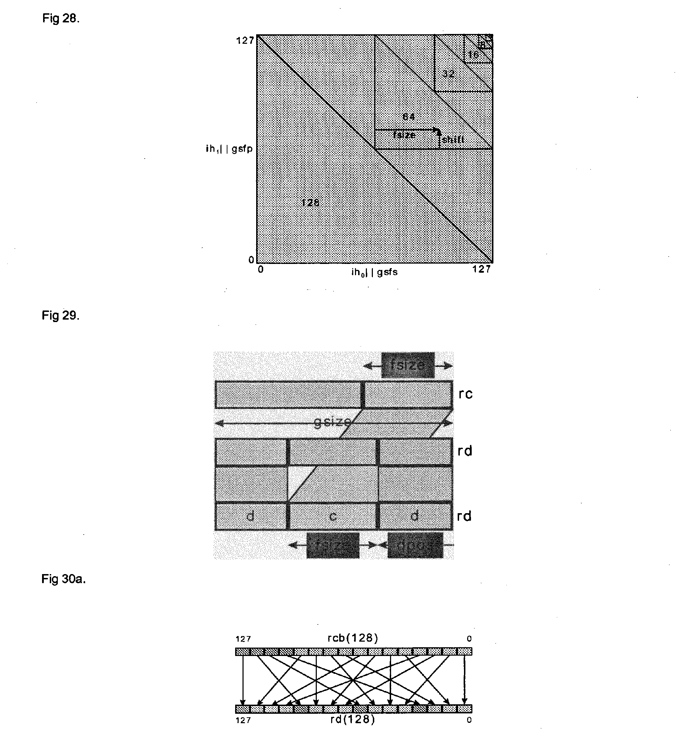

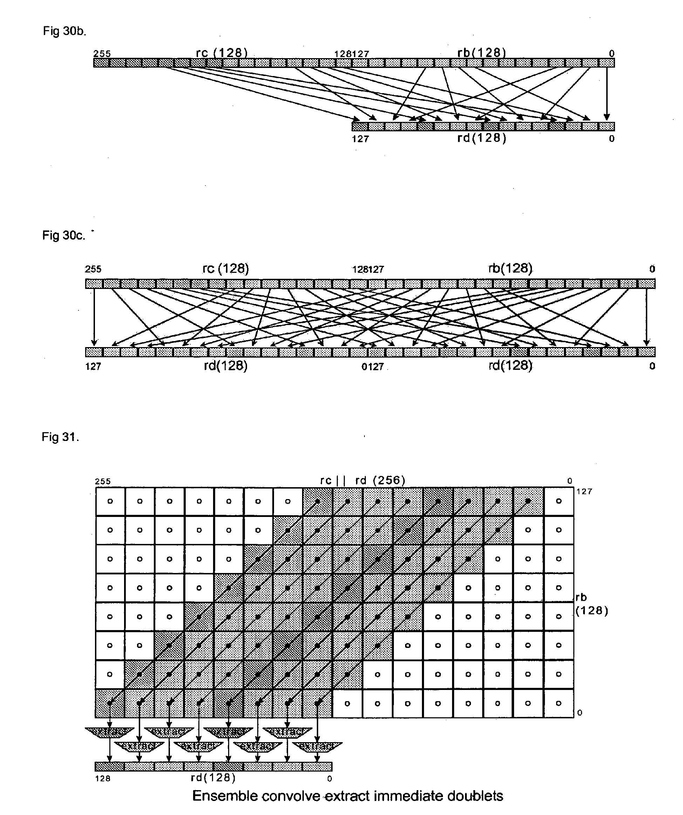

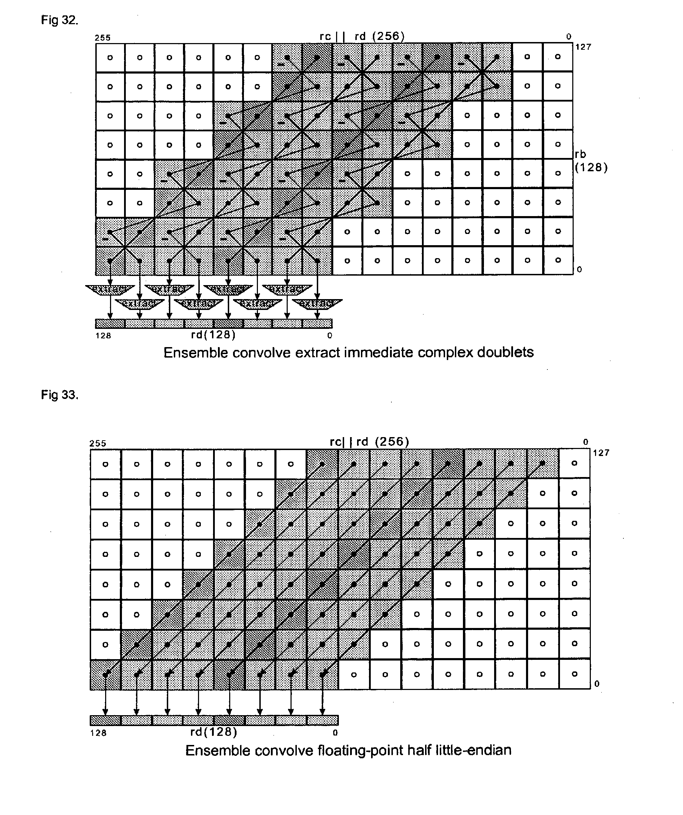

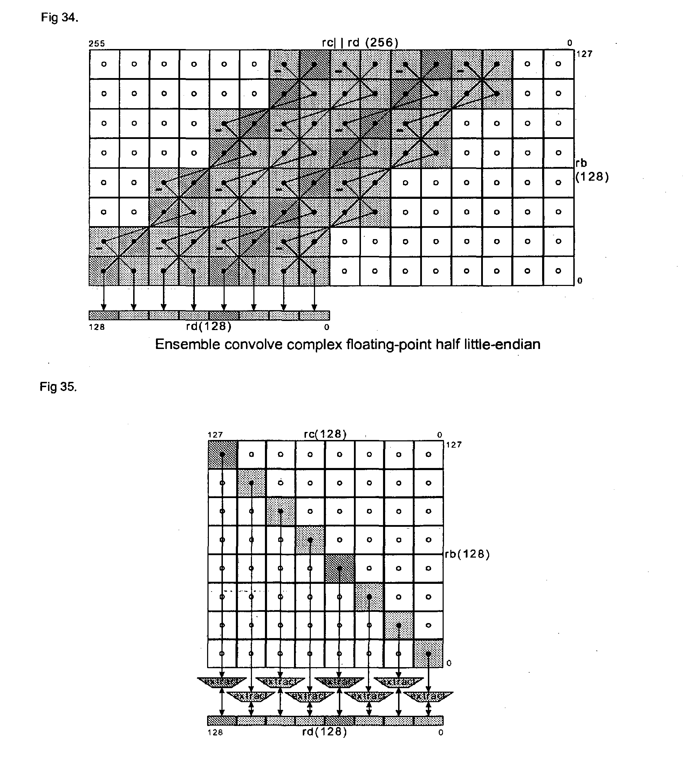

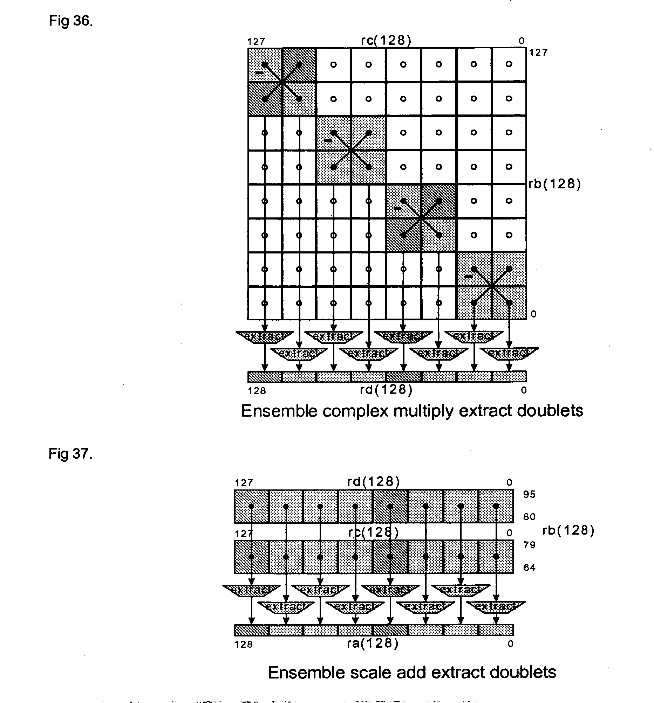

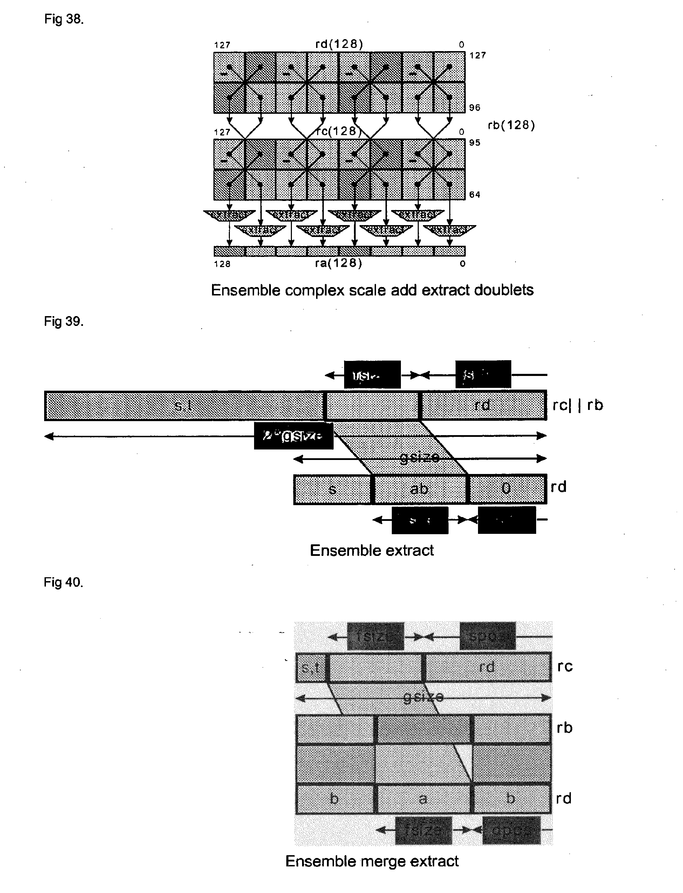

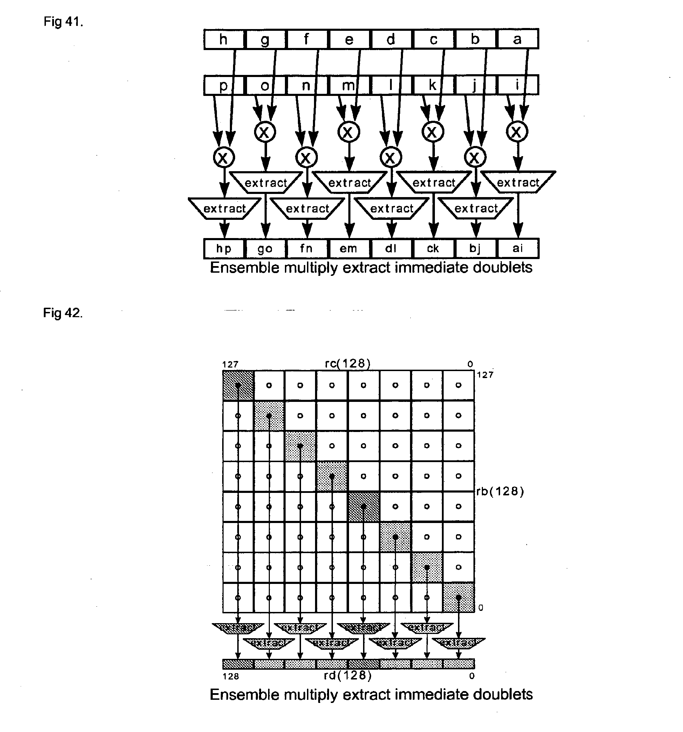

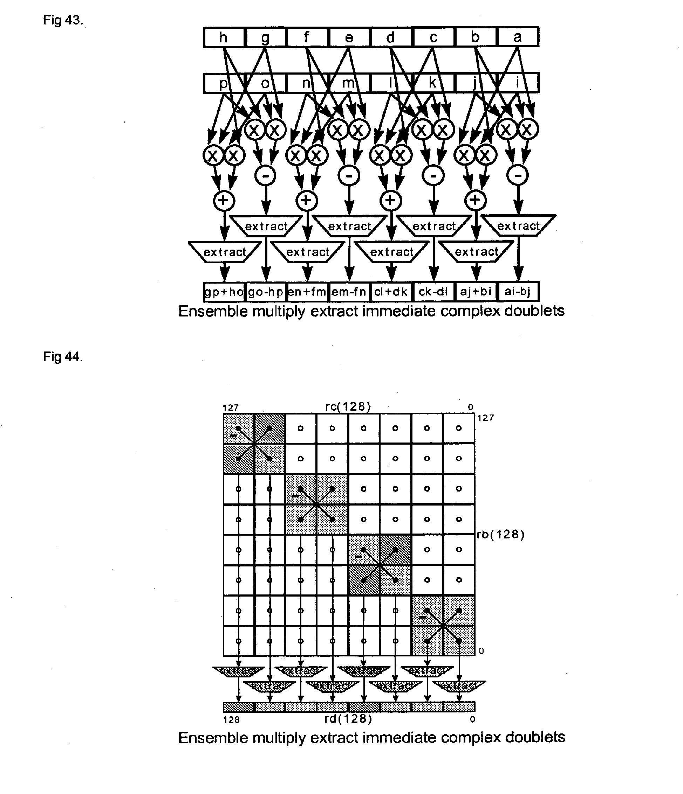

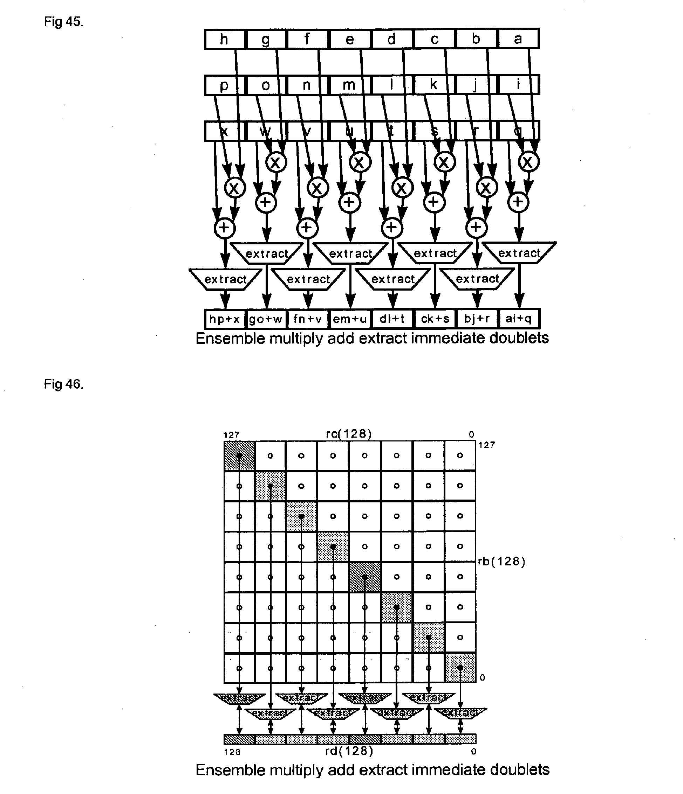

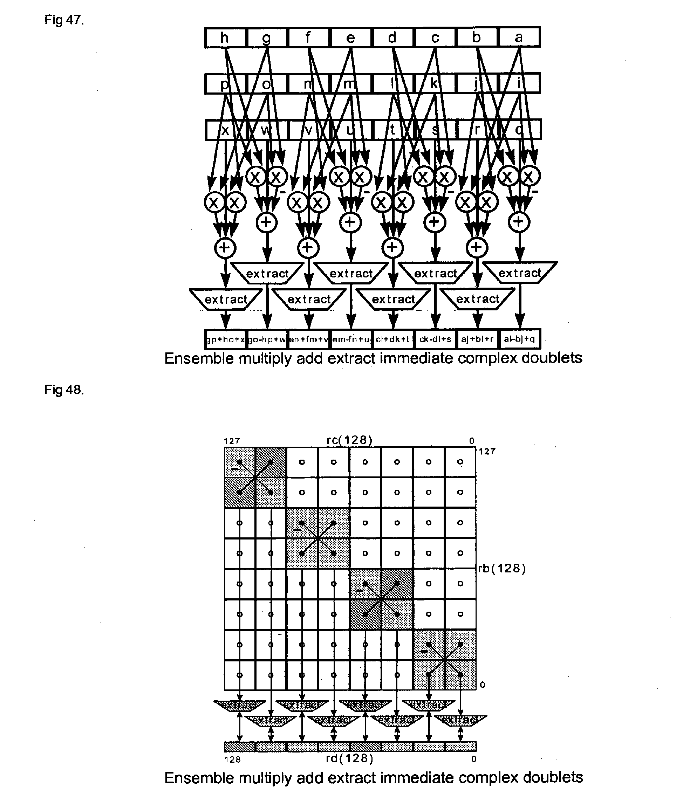

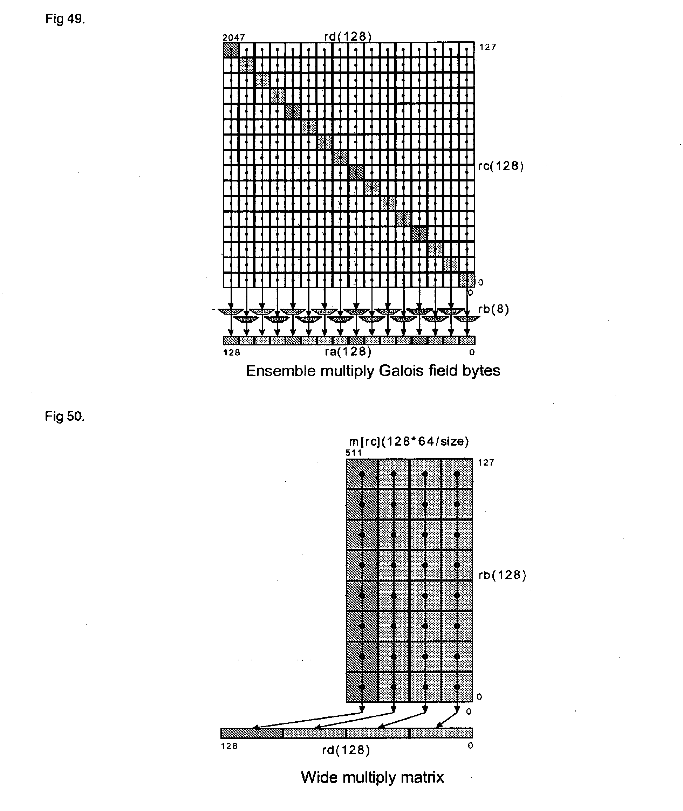

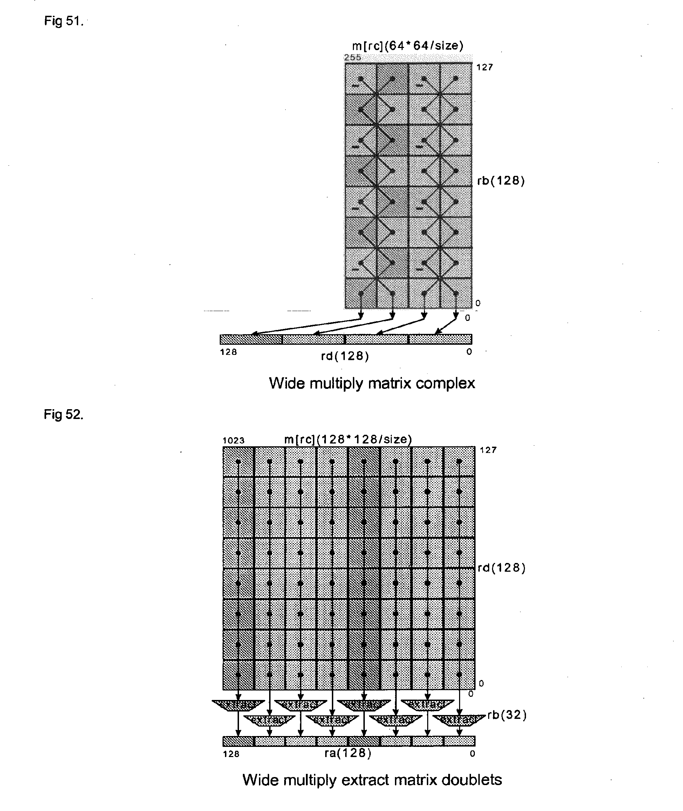

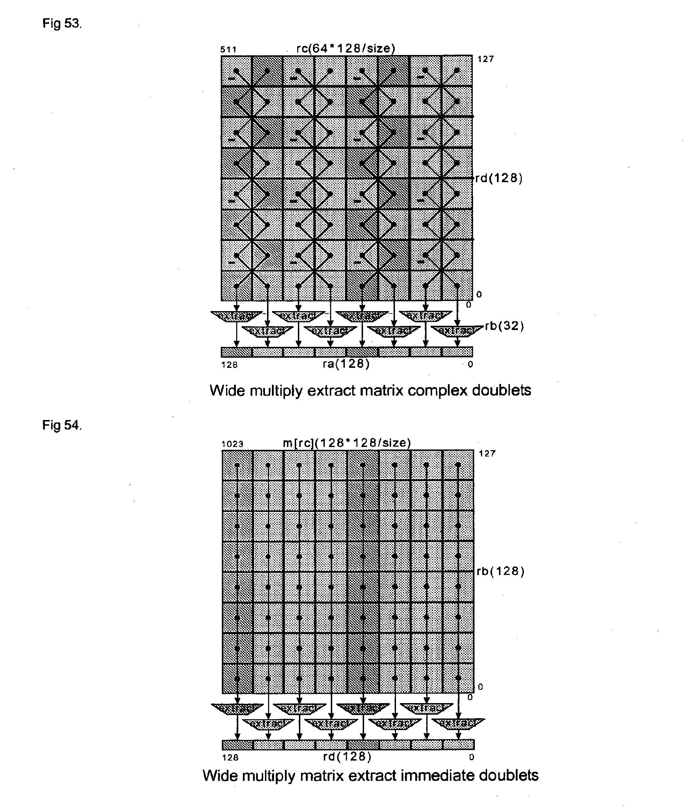

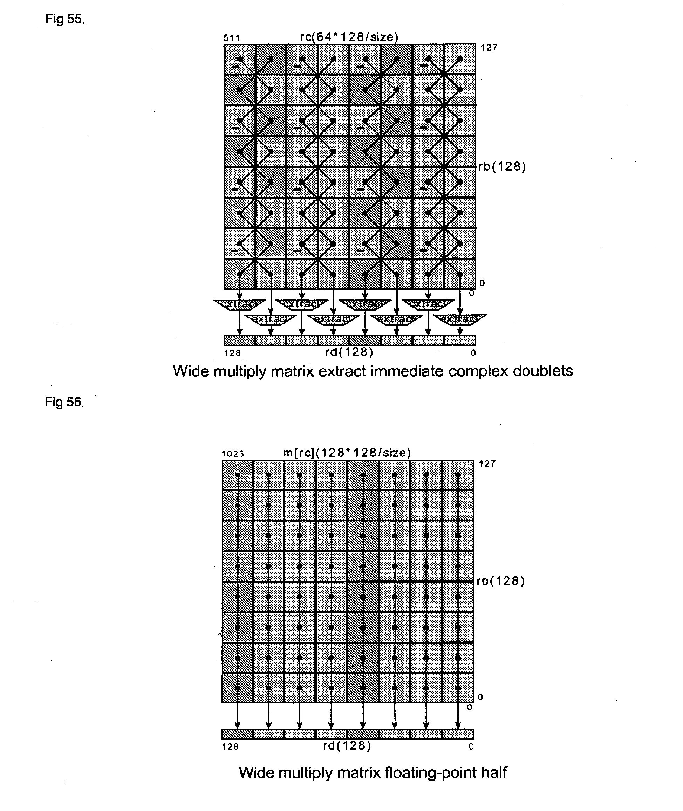

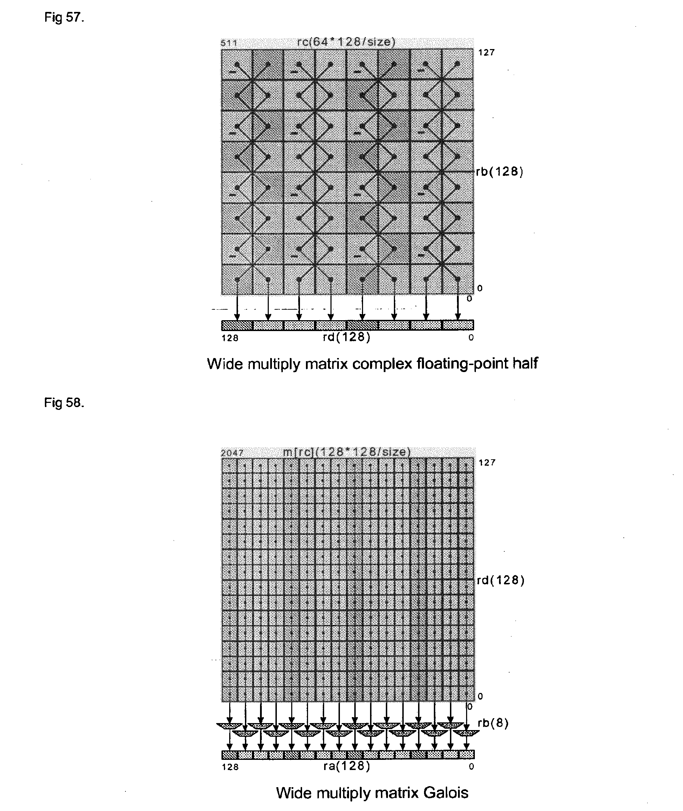

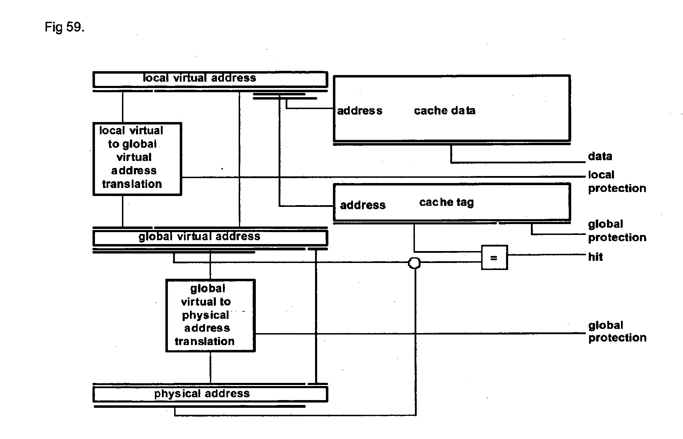

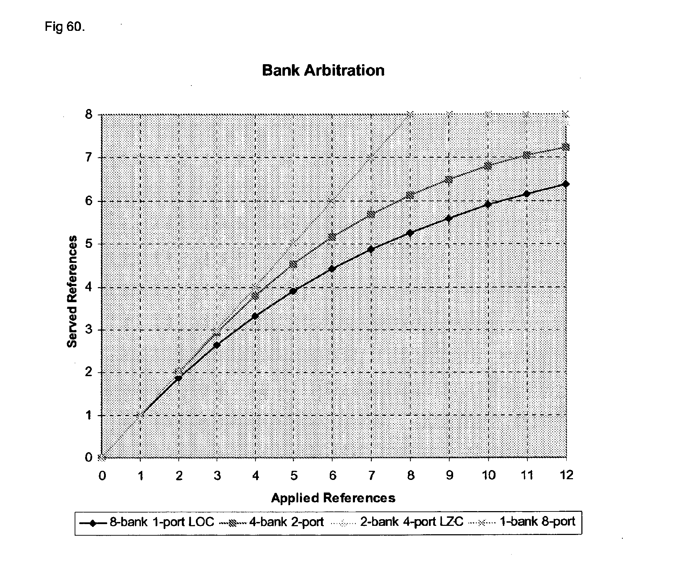

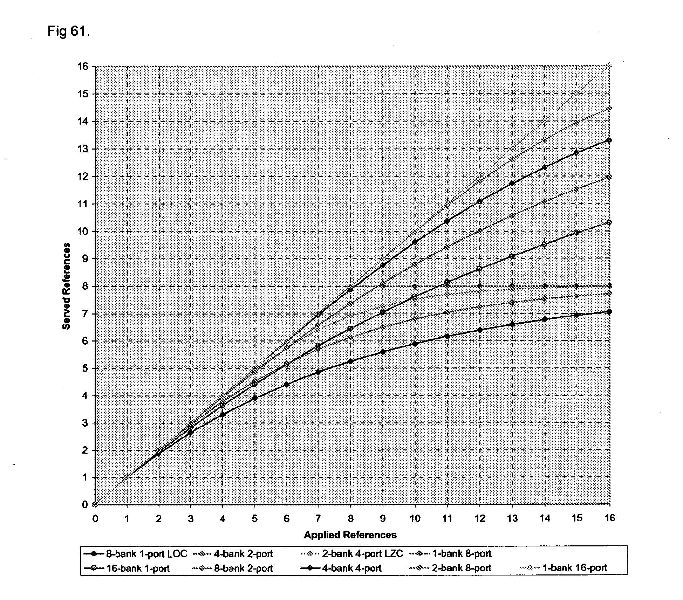

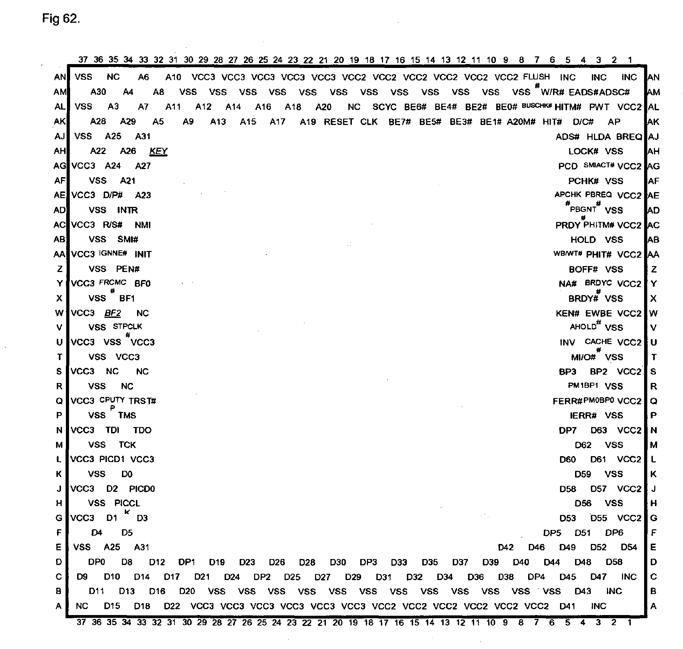

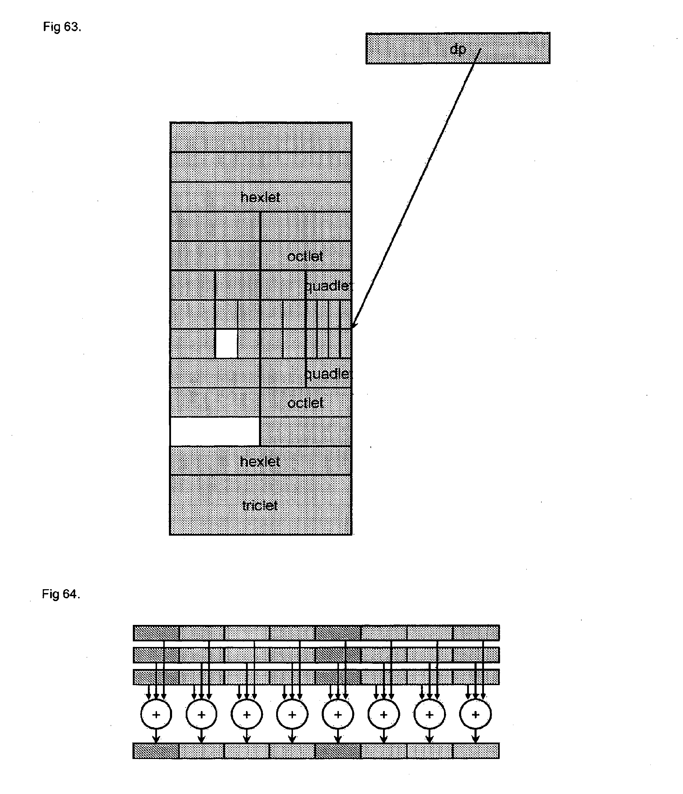

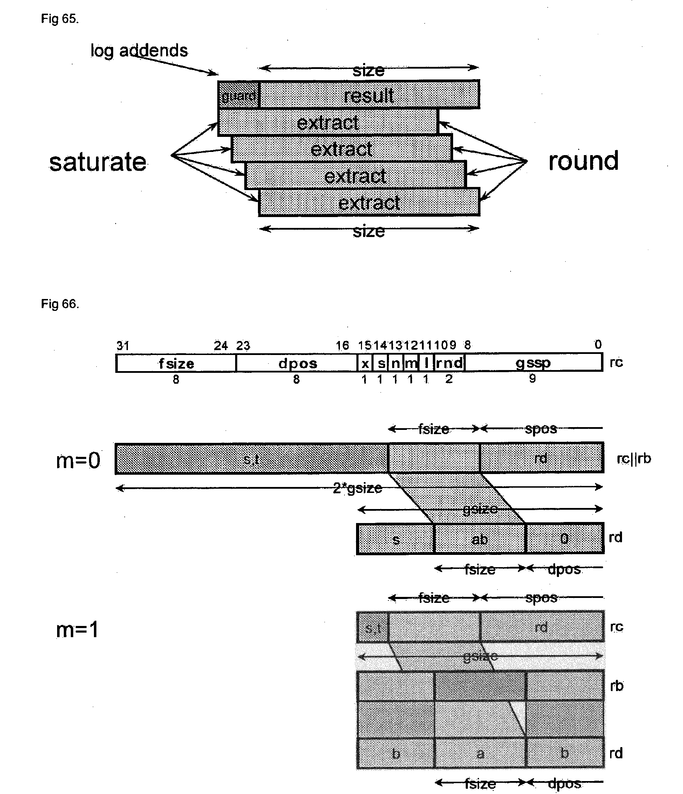

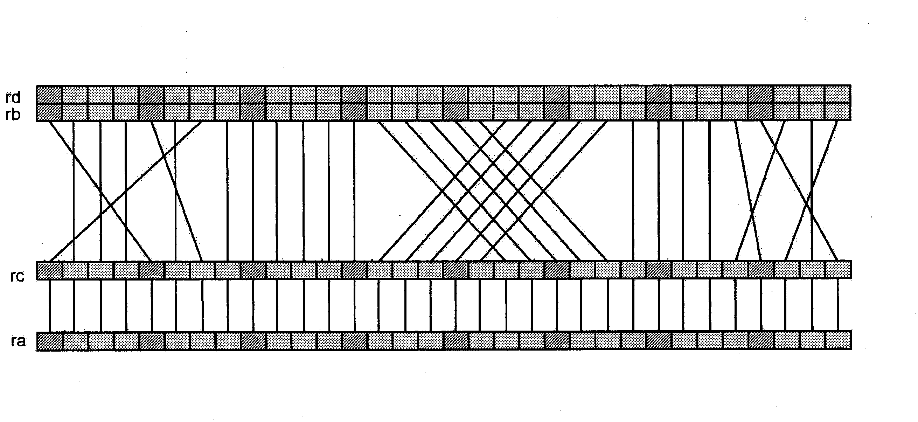

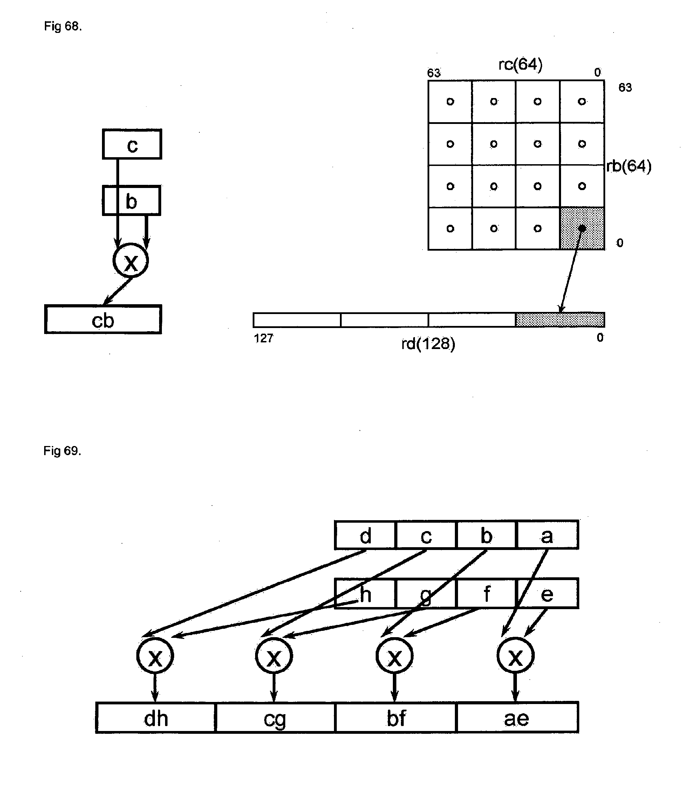

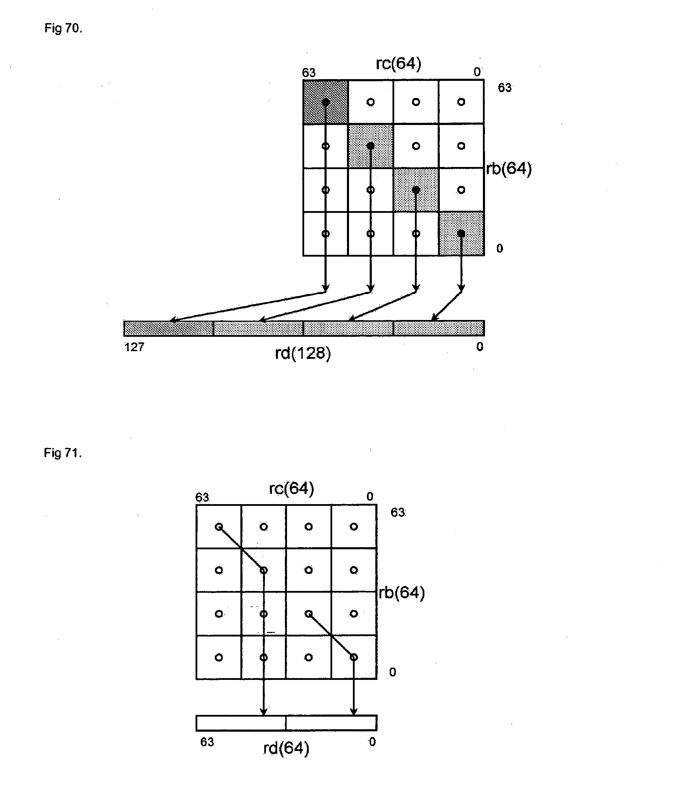

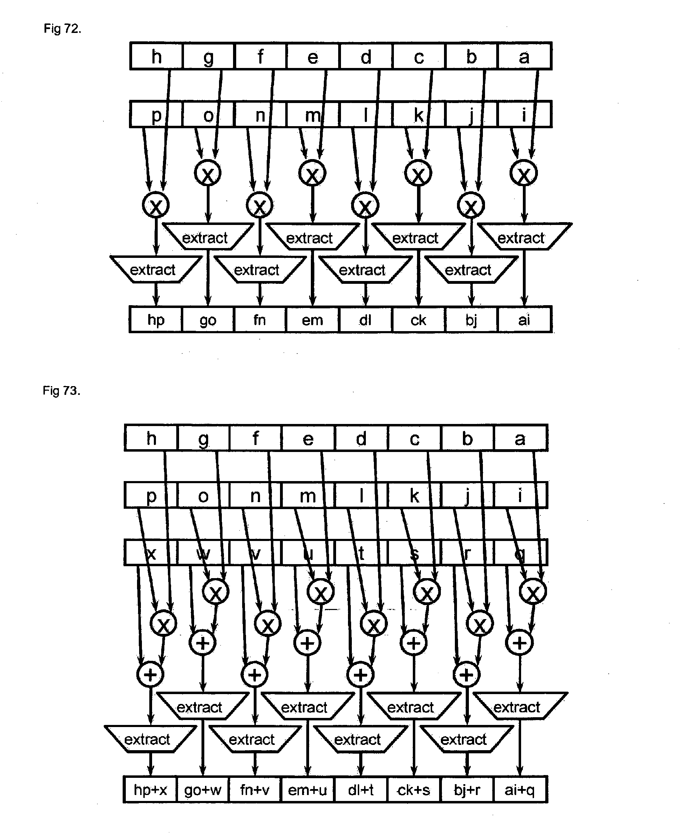

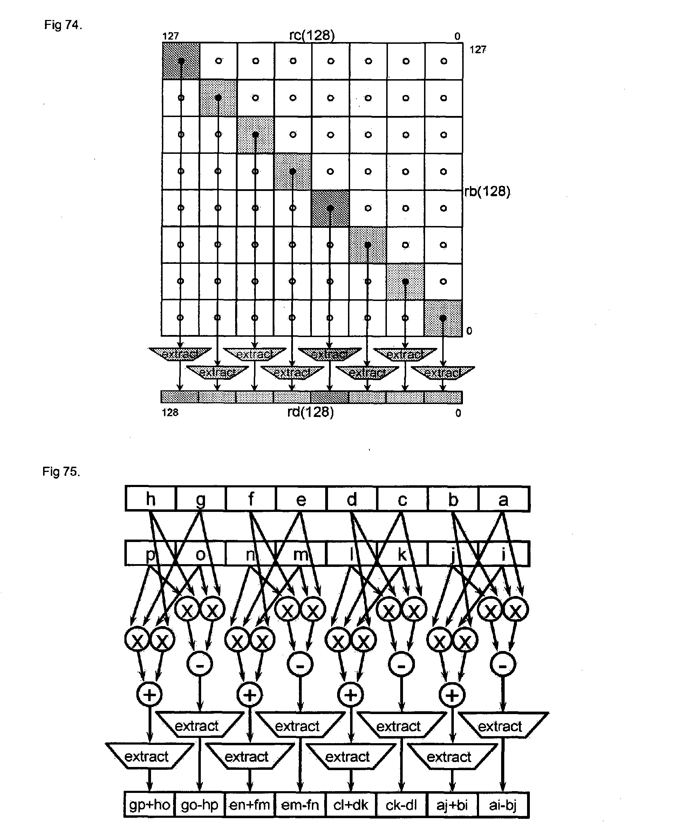

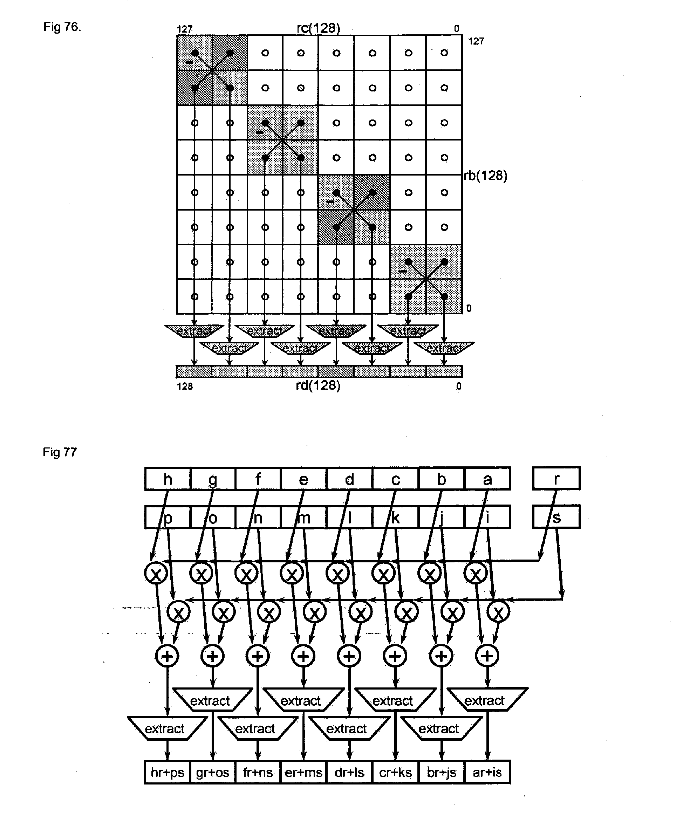

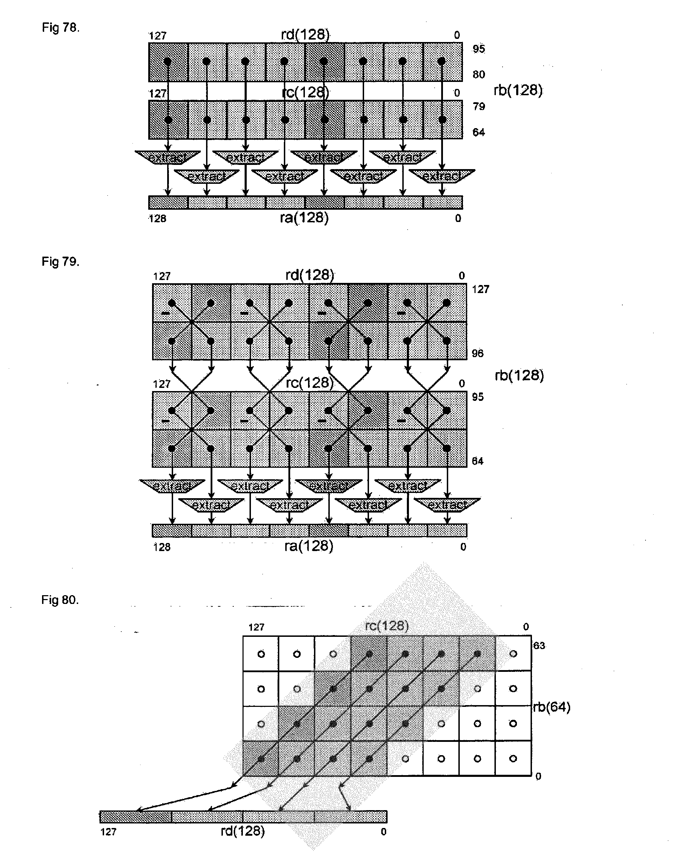

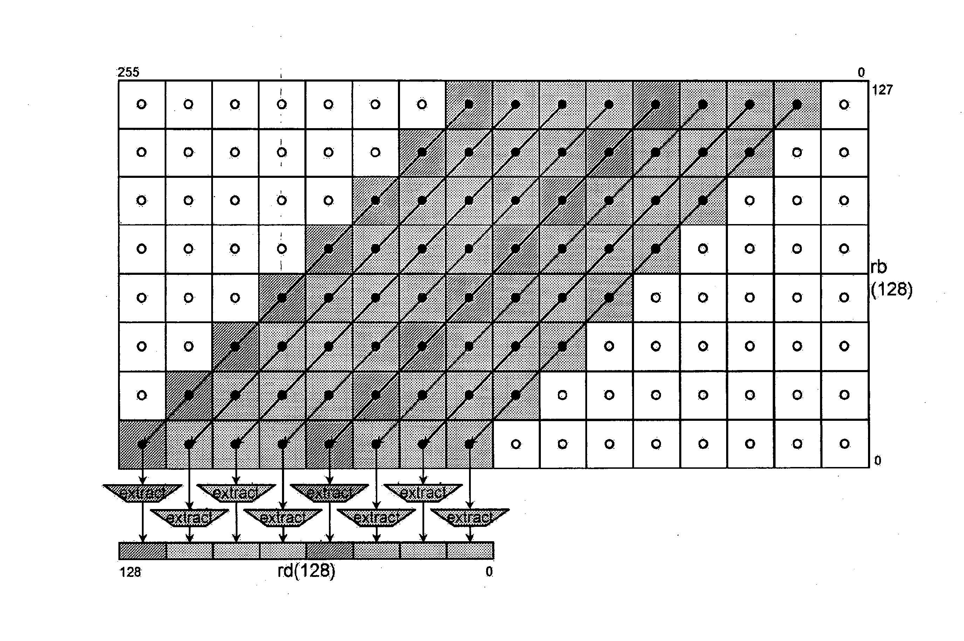

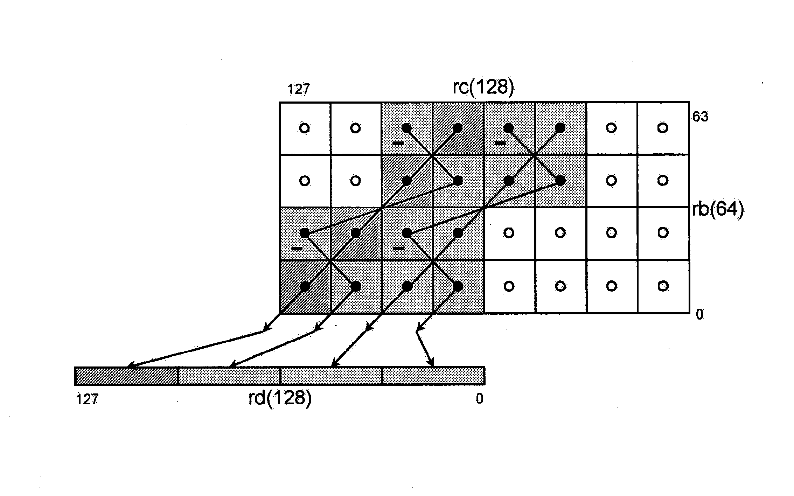

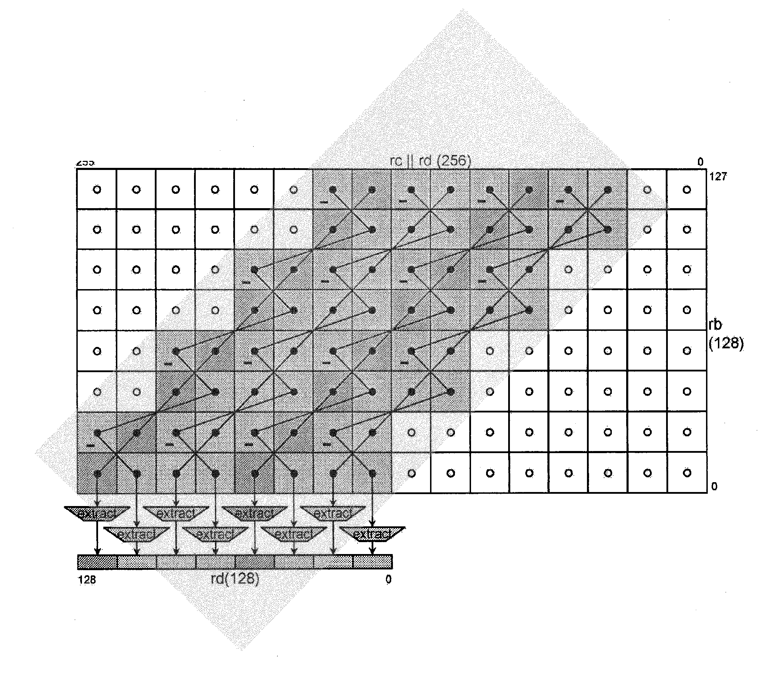

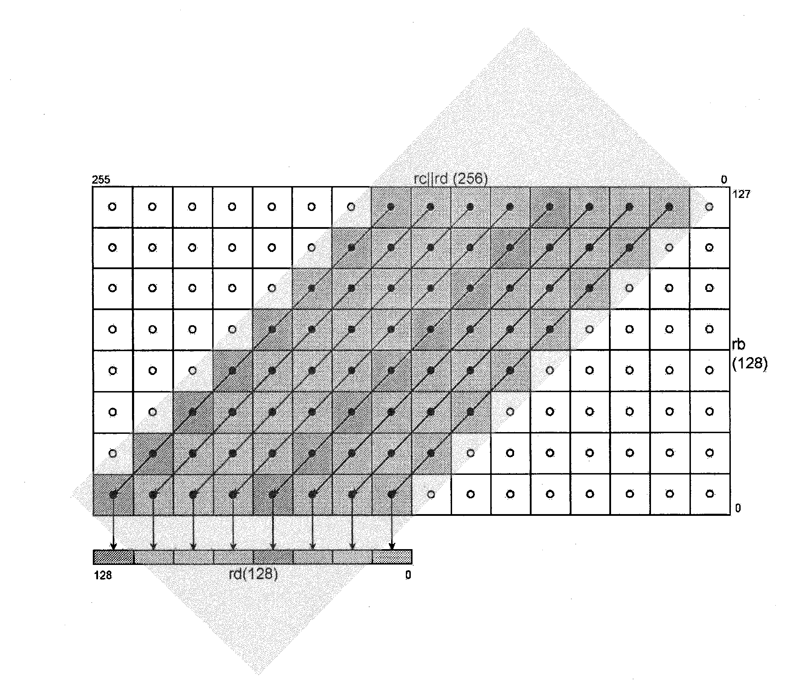

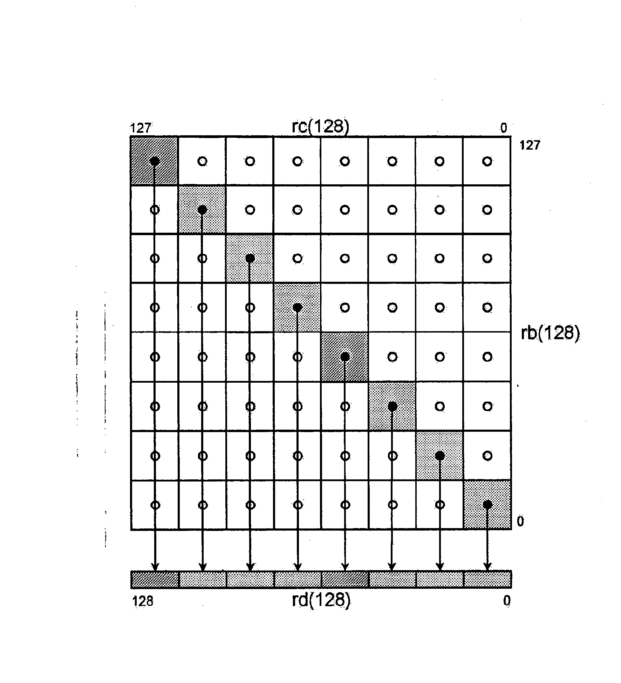

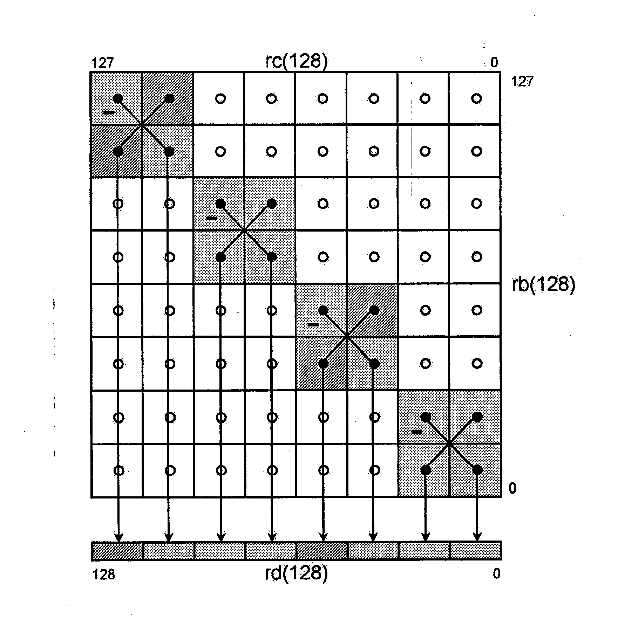

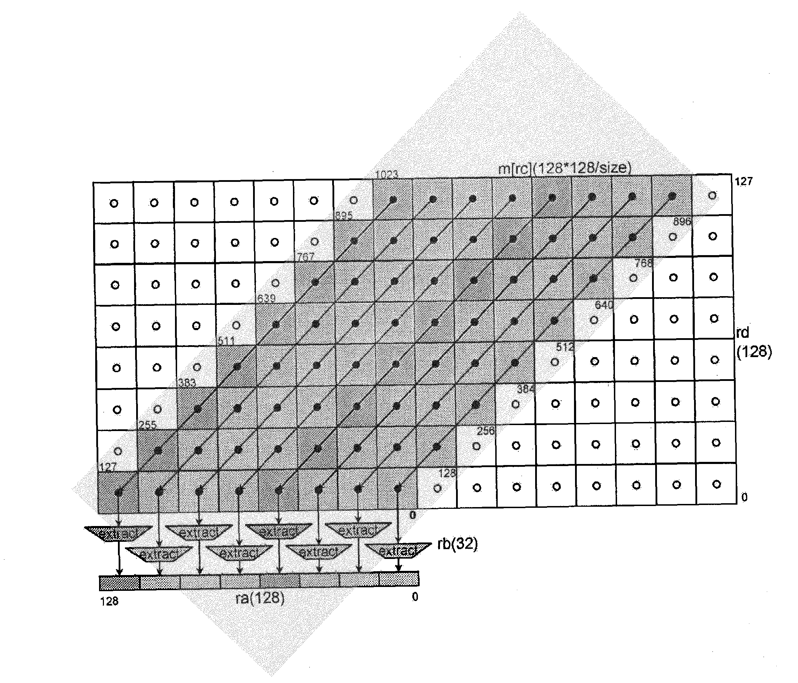

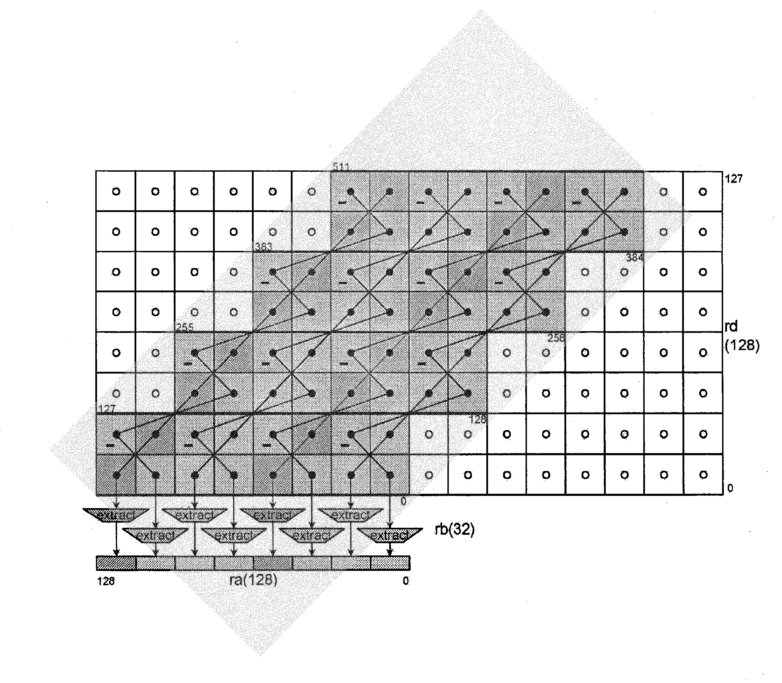

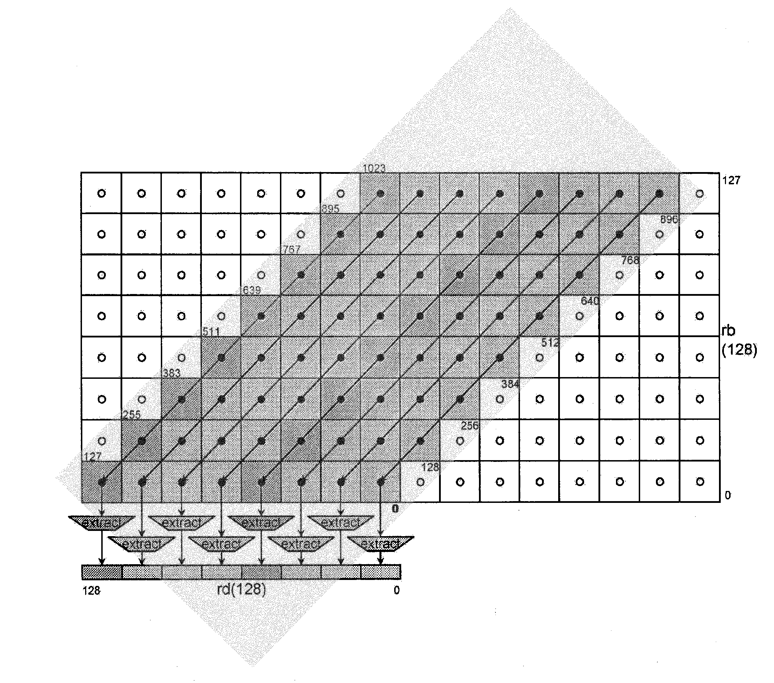

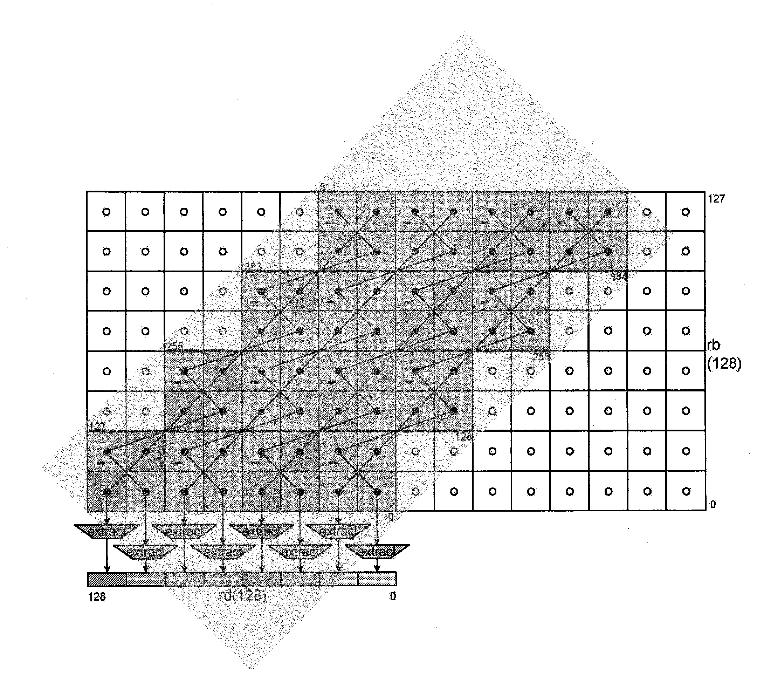

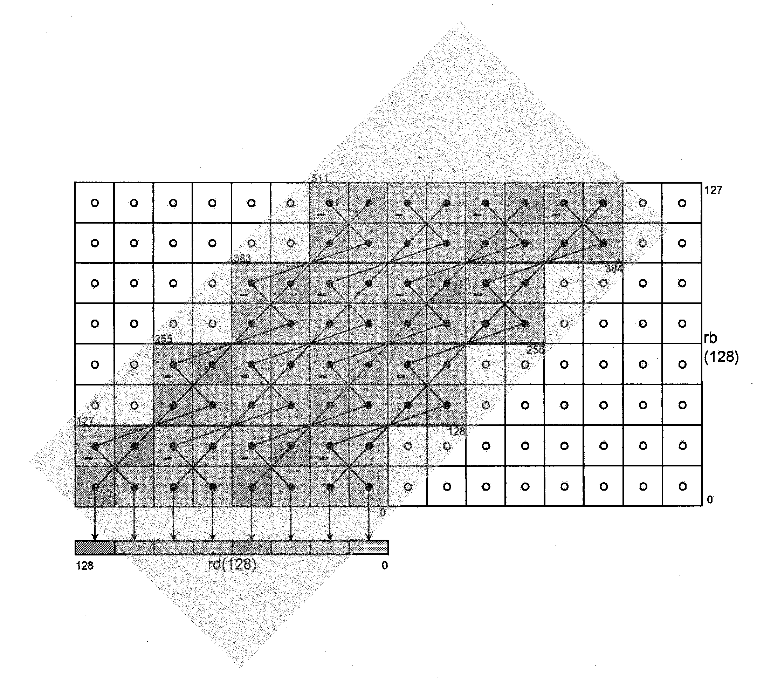

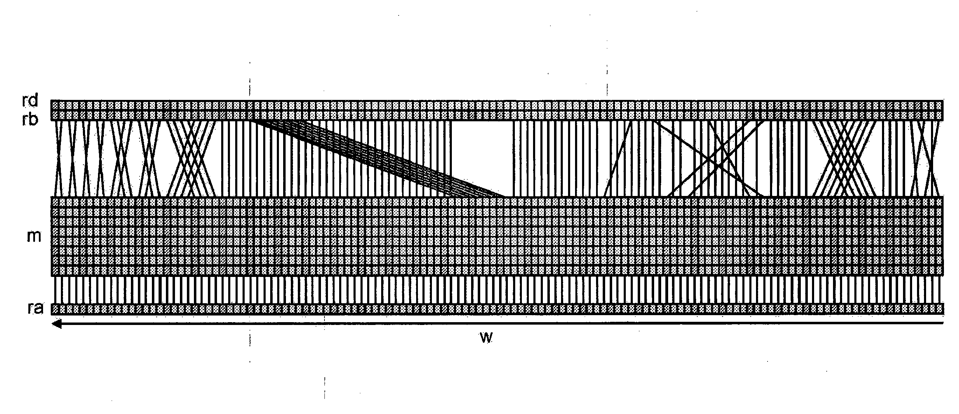

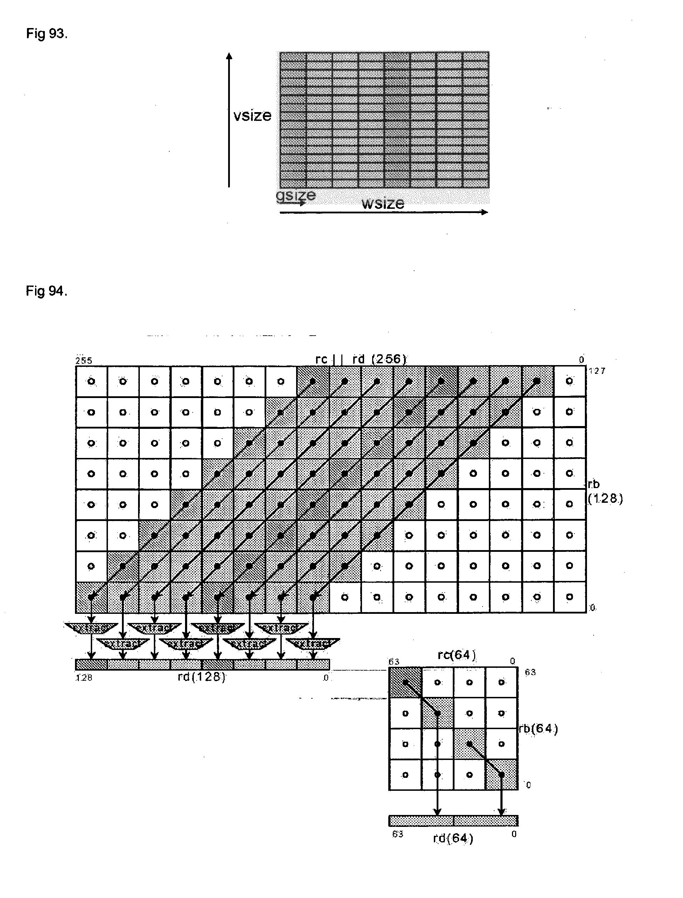

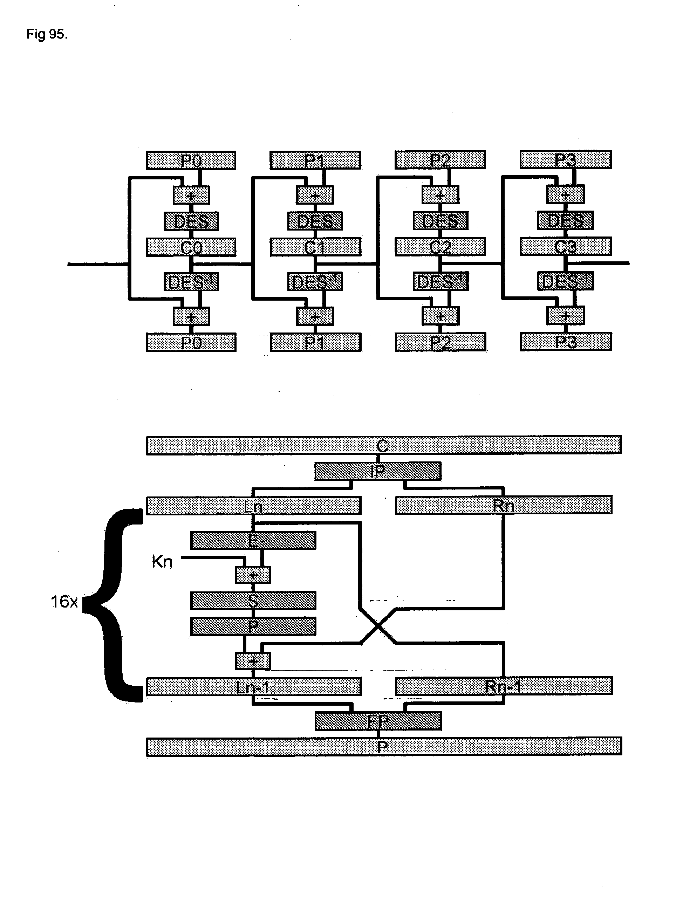

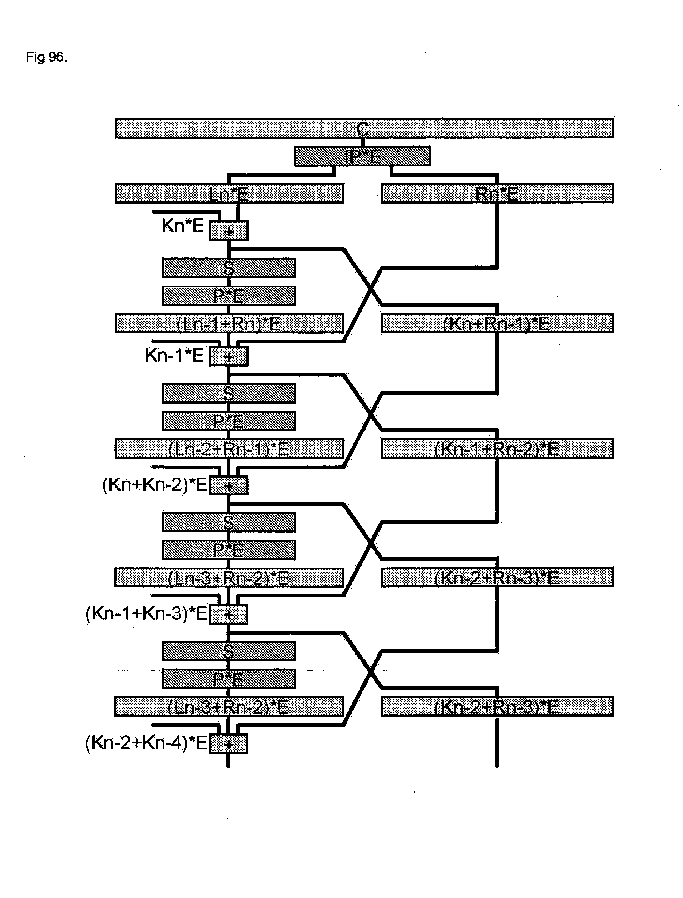

Referring next to Figures 10 and 11, which together show the operation of the microcache controller from a hardware standpoint, the operation of the microcache controller may be better understood. In the hardware implementation, it is clear that conditions which are indicated as sequential steps in Figure 8 and 9 above can be performed in parallel, reducing the delay for such wide operand checking. Further, a copy of the indicated hardware may be included for each wide microcache, and thereby all such microcaches as may be alternatively referenced by an instruction can be tested in parallel. It is believed that no further discussion of Figures 10 and 11 is required in view of the extensive discussion of Figures 8 and 9, above.

Various alternatives to the foregoing approach do exist for the use of wide operands, including an implementation in which a single instruction can accept two wide operands, partition the operands into symbols, multiply corresponding symbols together, and add the products to produce a single scalar value or a vector of partitioned values of width of the register file, possibly after extraction of a portion of the sums. Such an instruction can be valuable for detection of motion or estimation of motion in video compression. A further enhancement of such an instruction can incrementally update the dedicated storage if the address of one wide operand is within the range of previously specified wide operands in the dedicated storage, by loading only the portion not already within the range and shifting the in-range portion as required. Such an enhancement allows the operation to be performed over a "sliding window" of possible values. In such an instruction, one wide operand is aligned and supplies the size and shape information, while the second wide operand, updated incrementally, is not aligned.

Another alternative embodiment of the present invention can define additional instructions where the result operand is a wide operand. Such an enhancement removes the limit that a result can be no larger than the size of a general register, further enhancing performance. These wide results can be cached locally to the functional unit that created them, but must be copied to the general memory system before the storage can be reused and before the virtual memory system alters the mapping of the address of the wide result. Data paths must be added so that load operations and other wide operations can read these wide results - forwarding of a wide result from the output of a functional unit back to its input is relatively easy, but additional data paths may have to be introduced if it is desired to forward wide results back to other functional units as wide operands.

As previously discussed, a specification of the size and shape of the memory operand is included in the low-order bits of the address. In a presently preferred implementation, such memory operands are typically a power of two in size and aligned to that size. Generally, one-half the total size is added (or inclusively or'ed, or exclusively or'ed) to the memory address, and one half of the data width is added (or inclusively or'ed, or exclusively or'ed) to the memory address. These bits can be decoded and stripped from the memory address, so that the controller is made to step through all the required addresses. This decreases the number of distinct operands required for these instructions, as the size, shape and address of the memory operand are combined into a single register operand value.

Particular examples of wide operations which are defined by the present invention include the Wide Switch instruction that performs bit-level switching; the Wide Translate instruction which performs byte (or larger) table-lookup; Wide Multiply Matrix, Wide Multiply Matrix Extract and Wide Multiply Matrix Extract Immediate (discussed below), Wide Multiply Matrix Floating-point, and Wide Multiply Matrix Galois (also discussed below). While the discussion below focuses on particular sizes for the exemplary instructions, it will be appreciated that the invention is not limited to a particular width.

The Wide Switch instruction rearranges the contents of up to two registers (256 bits) at the bit level, producing a full-width (128 bits) register result. To control the rearrangement, a wide operand specified by a single register, consisting of eight bits per bit position is used. For each result bit position, eight wide operand bits for each bit position select which of the 256 possible source register bits to place in the result. When a wide operand size smaller than 128 bytes, the high order bits of the memory operand are replaced with values corresponding to the result bit position, so that the memory operand specifies a bit selection within symbols of the operand size, performing the same operation on each symbol.

The Wide Translate instructions use a wide operand to specify a table of depth up to 256 entries and width of up to 128 bits. The contents of a register is partitioned into operands of one, two, four, or eight bytes; and the partitions are used to select values from the table in parallel. The depth and width of the table can be selected by specifying the size and shape of the wide operand as described above.

The Wide Multiply Matrix instructions use a wide operand to specify a matrix of values of width up to 64 bits (one half of register file and data path width) and depth of up to 128 bits/symbol size. The contents of a general register (128 bits) is used as a source operand, partitioned into a vector of symbols, and multiplied with the matrix, producing a vector of width up to 128 bits of symbols of twice the size of the source operand symbols. The width and depth of the matrix can be selected by specifying the size and shape of the wide operand as described above. Controls within the instruction allow specification of signed, mixed-signed, unsigned, complex, or polynomial operands.

The Wide Multiply Matrix Extract instructions use a wide operand to specify a matrix of value of width up to 128 bits (full width of register file and data path) and depth of up to 128 bits/symbol size. The contents of a general register (128 bits) is used as a source operand, partitioned into a vector of symbols, and multiplied with the matrix, producing a vector of width up to 256 bits of symbols of twice the size of the source operand symbols plus additional bits to represent the sums of products without overflow. The results are then extracted in a manner described below (Enhanced Multiply Bandwidth by Result Extraction), as controlled by the contents of a general register specified by the instruction. The general register also specifies the format of the operands: signed, mixed-signed, unsigned, and complex as well as the size of the operands, byte (8 bit), doublet (16 bit), quadlet (32 bit), or hexlet (64 bit).

The Wide Multiply Matrix Extract Immediate instructions perform the same function as above, except that the extraction, operand format and size is controlled by fields in the instruction. This form encodes common forms of the above instruction without the need to initialize a register with the required control information. Controls within the instruction allow specification of signed, mixed-signed, unsigned, and complex operands.

The Wide Multiply Matrix Floating-point instructions perform a matrix multiply in the same form as above, except that the multiplies and additions are performed in floating-point arithmetic. Sizes of half (16-bit), single (32-bit), double (64-bit), and complex sizes of half, single and double can be specified within the instruction.

Wide Multiply Matrix Galois instructions perform a matrix multiply in the same form as above, except that the multiples and additions are performed in Galois field arithmetic. A size of 8 bits can be specified within the instruction. The contents of a general register specify the polynomial with which to perform the Galois field remainder operation. The nature of the matrix multiplication is novel and described in detail below.

In another aspect of the invention, memory operands of either little-endian or big-endian conventional byte ordering are facilitated. Consequently, all Wide operand instructions are specified in two forms, one for little-endian byte ordering and one for big-endian byte ordering, as specified by a portion of the instruction. The byte order specifies to the memory system the order in which to deliver the bytes within units of the data path width (128 bits), as well as the order to place multiple memory words (128 bits) within a larger Wide operand. Each of these instructions is described in greater detail in the System Architecture/BroadMX Architecture descriptions included herein.

Another aspect of the present invention addresses extraction of a high order portion of a multiplier product or sum of products, as a way of efficiently utilizing a large multiplier array. Related U.S. Patent No. 5,742,840 and U.S. Patent Application No. 08/857596 (notice of allowance 11/13/98), describe a system and method for enhancing the utilization of a multiplier array by adding specific classes of instructions to a general-purpose processor. This addresses the problem of making the most use of a large multiplier array that is fully used for high-precision arithmetic - for example a 64x64 bit multiplier is fully used by a 64-bit by 64-bit multiply, but only one quarter used for a 32-bit by 32-bit multiply) for (relative to the multiplier data width and registers) low-precision arithmetic operations. In particular, operations that perform a great many low-precision multiplies which are combined (added) together in various ways are specified. One of the overriding considerations in selecting the set of operations is a limitation on the size of the result operand. In an exemplary embodiment, for example, this size might be limited to on the order of 128 bits, or a single register, although no specif size limitation need exist.

The size of a multiply result, a product, is generally the sum of the sizes of the operands, multiplicands and multiplier. Consequently, multiply instructions specify operations in which the size of the result is twice the size of identically-sized input operands. For our prior art design, for example, a multiply instruction accepted two 64-bit register sources and produces a single 128-bit register-pair result, using an entire 64x64 multiplier array for 64-bit symbols, or half the multiplier array for pairs of 32-bit symbols, or one-quarter the multiplier array for quads of 16-bit symbols. For all of these cases, note that two register sources of 64 bits are combined, yielding a 128-bit result.

In several of the operations, including complex multiplies, convolve, and matrix multiplication, low-precision multiplier products are added together. The additions further increase the required precision. The sum of two products requires one additional bit of precision; adding four products requires two, adding eight products requires three, adding sixteen products requires four. In some prior designs, some of this precision is lost, requiring scaling of the multiplier operands to avoid overflow, further reducing accuracy of the result.

The use of register pairs creates an undesirable complexity, in that both the register pair and individual register values must be bypassed to subsequent instructions. As a result, with prior art techniques only half of the source operand 128-bit register values could be employed toward producing a single-register 128-bit result.

In the present invention, a high-order portion of the multiplier product or sum of products is extracted, adjusted by a dynamic shift amount from a general register or an adjustment specified as part of the instruction, and rounded by a control value from a register or instruction portion as round-to-nearest/even, toward zero, floor, or ceiling. Overflows are handled by limiting the result to the largest and smallest values that can be accurately represented in the output result. This operation is more fully described in the System Architecture/BroadMX Architecture descriptions included herein.

In the present invention, when the extract is controlled by a register, the size of the result can be specified, allowing rounding and limiting to a smaller number of bits than can fit in the result. This permits the result to be scaled to be used in subsequent operations without concern of overflow or rounding, enhancing performance.

Also in the present invention, when the extract is controlled by a register, a single register value defines the size of the operands, the shift amount and size of the result, and the rounding control. By placing all this control information in a single register, the size of the instruction is reduced over the number of bits that such a instruction would otherwise require, improving performance and enhancing flexibility of the processor.

The particular instructions included in this aspect of the present invention are Ensemble Convolve Extract, Ensemble Multiply Extract, Ensemble Multiply Add Extract and Ensemble Scale Add Extract. each of which is more thoroughly treated in the System Architecture/BroadMX Architecture descriptions included herein..

An aspect of the present invention defines the Ensemble Scale Add Extract instruction, that combines the extract control information in a register along with two values that are used as scalar multipliers to the contents of two vector multiplicands. This combination reduces the number of registers that would otherwise be required, or the number of bits that the instruction would otherwise require, improving performance.

Several of these instructions (Ensemble Convolve Extract, Ensemble Multiply Add Extract) are typically available only in forms where the extract is specified as part of the instruction. An alternative embodiment can incorporate forms of the operations in which the size of the operand, the shift amount and the rounding can be controlled by the contents of a general register (as they are in the Ensemble Multiply Extract instruction). The definition of this kind of instruction for Ensemble Convolve Extract, and Ensemble Multiply Add Extract would require four source registers, which increases complexity by requiring additional general-register read ports.

Another alternative embodiment can reduce the number of register read ports required for implementation of instructions in which the size, shift and rounding of operands is controlled by a register. The value of the extract control register can be fetched using an additional cycle on an initial execution and retained within or near the functional unit for subsequent executions, thus reducing the amount of hardware required for implementation with a small additional performance penalty. The value retained would be marked invalid, causing a re-fetch of the extract control register, by instructions that modify the register, or alternatively, the retained value can be updated by such an operation. A re-fetch of the extract control register would also be required if a different register number were specified on a subsequent execution. It should be clear that the properties of the above two alternative embodiments can be combined.

Another aspect of the invention includes Galois field arithmetic, where multiplies are performed by an initial binary polynomial multiplication (unsigned binary multiplication with carries suppressed), followed by a polynomial modulo/remainder operation (unsigned binary division with carries suppressed). The remainder operation is relatively expensive in area and delay. In Galois field arithmetic, additions are performed by binary addition with carries suppressed, or equivalently, a bitwise exclusive-or operation. In this aspect of the present invention, a matrix multiplication is performed using Galois field arithmetic, where the multiplies and additions are Galois field multiples and additions.

Using prior art methods, a 16 byte vector multipled by a 16x16 byte matrix can be performed as 256 8-bit Galois field multiplies and 16*15=240 8-bit Galois field additions. Included in the 256 Galois field multiplies are 256 polynomial multiplies and 256 polynomial remainder operations. But by use of the present invention, the total computation can be reduced significantly by performing 256 polynomial multiplies, 240 16-bit polynomial additions, and 16 polynomial remainder operations. Note that the cost of the polynomial additions has been doubled, as these are now 16-bit operations, but the cost of the polynomial remainder functions has been reduced by a factor of 16. Overall, this is a favorable tradeoff, as the cost of addition is much lower than the cost of remainder.

In a still further aspect of the present invention, a technique is provided for incorporating floating point information into processor instructions. In related US patent 5812439, a system and method are described for incorporating control of rounding and exceptions for floating-point instructions into the instruction itself. The present invention extends this invention to include separate instructions in which rounding is specified, but default handling of exceptions is also specified, for a particular class of floating-point instructions. Specifically, the SINK instruction (which converts floating-point values to integral values) is available with control in the instruction that include all previously specified combinations (default-near rounding and default exceptions, Z - round-toward-zero and trap on exceptions, N - round to nearest and trap on exceptions, F - floor rounding (toward minus infinity) and trap on exceptions, C - ceiling rounding (toward plus infinity) and trap on exceptions, and X - trap on inexact and other exceptions), as well as three new combinations (Z.D - round toward zero and default exception handling, F.D - floor rounding and default exception handling, and C.D - ceiling rounding and default exception handling). (The other combinations: N.D is equivalent to the default, and X.D - trap on inexact but default handling for other exceptions is possible but not particularly valuable).

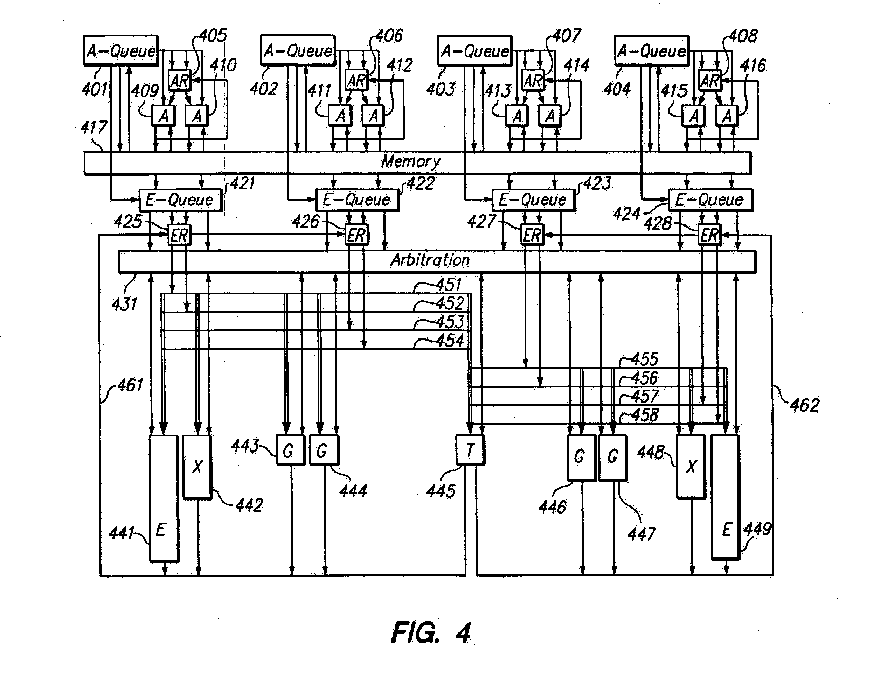

In yet another aspect of the present invention, best shown in Figure 4, the present invention employs both decoupled access from execution pipelines and simultaneous multithreading in a unique way. Simultaneous Multithreaded pipelines have been employed in prior art to enhance the utilization of data path units by allowing instructions to be issued from one of several execution threads to each functional unit. (e.g., Susan Eggers, University of Wash, papers on Simultaneous Multithreading).

Decoupled access from execution pipelines have been employed in prior art to enhance the utilization of execution data path units by buffering results from an access unit, which computes addresses to a memory unit that in turn fetches the requested items from memory, and then presenting them to an execution unit (e.g., James E. Smith, paper on Decoupled Access from Execution).

Compared to conventional pipelines, Eggers prior art used an additional pipeline cycle before instructions could be issued to functional units, the additional cycle needed to determine which threads should be permitted to issue instructions. Consequently, relative to conventional pipelines, the prior art design had additional delay, including dependent branch delay.

The present invention contains individual access data path units, with associated register files, for each execution thread. These access units produce addresses, which are aggregated together to a common memory unit, which fetches all the addresses and places the memory contents in one or more buffers. Instructions for execution units, which are shared to varying degrees among the threads are also buffered for later execution. The execution units then perform operations from all active threads using functional data path units that are shared.

For instructions performed by the execution units, the extra cycle required for prior art simultaneous multithreading designs is overlapped with the memory data access time from prior art decoupled access from execution cycles, so that no additional delay is incurred by the execution functional units for scheduling resources. For instructions performed by the access units, by employing individual access units for each thread the additional cycle for scheduling shared resources is also eliminated.

This is a favorable tradeoff because, while threads do not share the access functional units, these units are relatively small compared to the execution functional units, which are shared by threads.

With regard to the sharing of execution units, the present invention employs several different classes of functional units for the execution unit, with varying cost, utilization, and performance. In particular, the G units, which perform simple addition and bitwise operations is relatively inexpensive (in area and power) compared to the other units, and its utilization is relatively high. Consequently, the design employs four such units, where each unit can be shared between two threads. The X unit, which performs a broad class of data switching functions is more expensive and less used, so two units are provided that are each shared among two threads. The T unit, which performs the Wide Translate instruction, is expensive and utilization is low, so the single unit is shared among all four threads. The E unit, which performs the class of Ensemble instructions, is very expensive in area and power compared to the other functional units, but utilization is relatively high, so we provide two such units, each unit shared by two threads.

In Figure 4, four copies of an access unit are shown, each with an access instruction fetch queue A-Queue 401-404, coupled to an access register file AR 405-408, each of which is, in turn, coupled to two access functional units A 409-416. The access units function independently for four simultaneous threads of execution. These eight access functional units A 409-416 produce results for access register files AR 405-408 and addresses to a shared memory system 417. The memory contents fetched from memory system 417 are combined with execute instructions not performed by the access unit and entered into the four execute instruction queues E-Queue 421-424. Instructions and memory data from E-queue 421-424 are presented to execution register files 425-428, which fetches execution register file source operands. The instructions are coupled to the execution unit arbitration unit Arbitration 431, that selects which instructions from the four threads are to be routed to the available execution units E 441 and 449, X 442 and 448, G 443-444 and 446-447, and T 445. The execution register file source operands ER 425-428 are coupled to the execution units 441-445 using source operand buses 451-454 and to the execution units 445-449 using source operand buses 455-458. The function unit result operands from execution units 441-445 are coupled to the execution register file using result bus 461 and the function units result operands from execution units 445-449 are coupled to the execution register file using result bus 462.

The foregoing elements of the present invention may be better understood with reference to the System Architecture/BroadMX Architecture descriptions included herein.

In a still further aspect of the present invention, an improved interprivilege gateway is described which involves increased parallelism and leads to enhanced performance. In related U.S. Patent Application No. 08/541416, a system and method is described for implementing an instruction that, in a controlled fashion, allows the transfer of control (branch) from a lower-privilege level to a higher-privilege level. The present invention is an improved system and method for a modified instruction that accomplishes the same purpose but with specific advantages.

Many processor resources, such as control of the virtual memory system itself, input and output operations, and system control functions are protected from accidental or malicious misuse by enclosing them in a protective, privileged region. Entry to this region must be established only though particular entry points, called gateways, to maintain the integrity of these protected regions.

Prior art versions of this operation generally load an address from a region of memory using a protected virtual memory attribute that is only set for data regions that contain valid gateway entry points, then perform a branch to an address contained in the contents of memory. Basically, three steps were involved: load, branch, then check. Compared to other instructions, such as register-to-register computation instructions and memory loads and stores, and register-based branches, this is a substantially longer operation, which introduces delays and complexity to a pipelined implementation.

In the present invention, the branch-gateway instruction performs two operations in parallel: 1) a branch is performed to the contents of register 0 and 2) a load is performed using the contents of register 1, using a specified byte order (little-endian) and a specified size (64 bits). If the value loaded from memory does not equal the contents of register 0, the instruction is aborted due to an exception. In addition, 3) a return address (the next sequential instruction address following the branch-gateway instruction) is written into register 0, provided the instruction is not aborted. This approach essentially uses a first instruction to establish the requisite permission to allow user code to access privileged code, and then a second instruction is permitted to branch directly to the privileged code because of the permissions issued for the first instruction.

In the present invention, the new privilege level is also contained in register 0, and the second parallel operation does not need to be performed if the new privilege level is not greater than the old privilege level. When this second operation is suppressed, the remainder of the instruction performs an identical function to a branch-link instruction, which is used for invoking procedures that do not require an increase in privilege. The advantage that this feature brings is that the branch-gateway instruction can be used to call a procedure that may or may not require an increase in privilege.

The memory load operation verifies with the virtual memory system that the region that is loaded has been tagged as containing valid .gateway data. A further advantage of the present invention is that the called procedure may rely on the fact that register 1 contains the address that the gateway data was loaded from, and can use the contents of register 1 to locate additional data or addresses that the procedure may require. Prior art versions of this instruction required that an additional address be loaded from the gateway region of memory in order to initialize that address in a protected manner - the present invention allows the address itself to be loaded with a "normal" load operation that does not require special protection.

The present invention allows a "normal" load operation to also load the contents of register 0 prior to issuing the branch-gateway instruction. The value may be loaded from the same memory address that is loaded by the branch-gateway instruction, because the present invention contains a virtual memory system in which the region may be enabled for normal load operations as well as the special "gateway" load operation performed by the branch-gateway instruction.

In a further aspect of the present invention, a system and method is provided for performing a three-input bitwise Boolean operation in a single instruction. A novel method, described in detail in the System Architecture/BroadMX Architecture descriptions herein, is used to encode the eight possible output states of such an operation into only seven bits, and decoding these seven bits back into the eight states.

In yet a further aspect to the present invention, a system and method is described for improving the branch prediction of simple repetitive loops of code. The method includes providing a count field for indicating how many times a branch is likely to be taken before it is not taken, which enhances the ability to properly predict both the initial and final branches of simple loops when a compiler can determine the number of iterations that the loop will be performed. This improves performance by avoiding misprediction of the branch at the end of a loop.

Having fully described a preferred embodiment of the invention and various alternatives, those skilled in the art will recognize, given the teachings herein, that numerous alternatives and equivalents exist which do not depart from the invention. It is therefore intended that the invention not be limited by the foregoing description, but only by the appended claims.

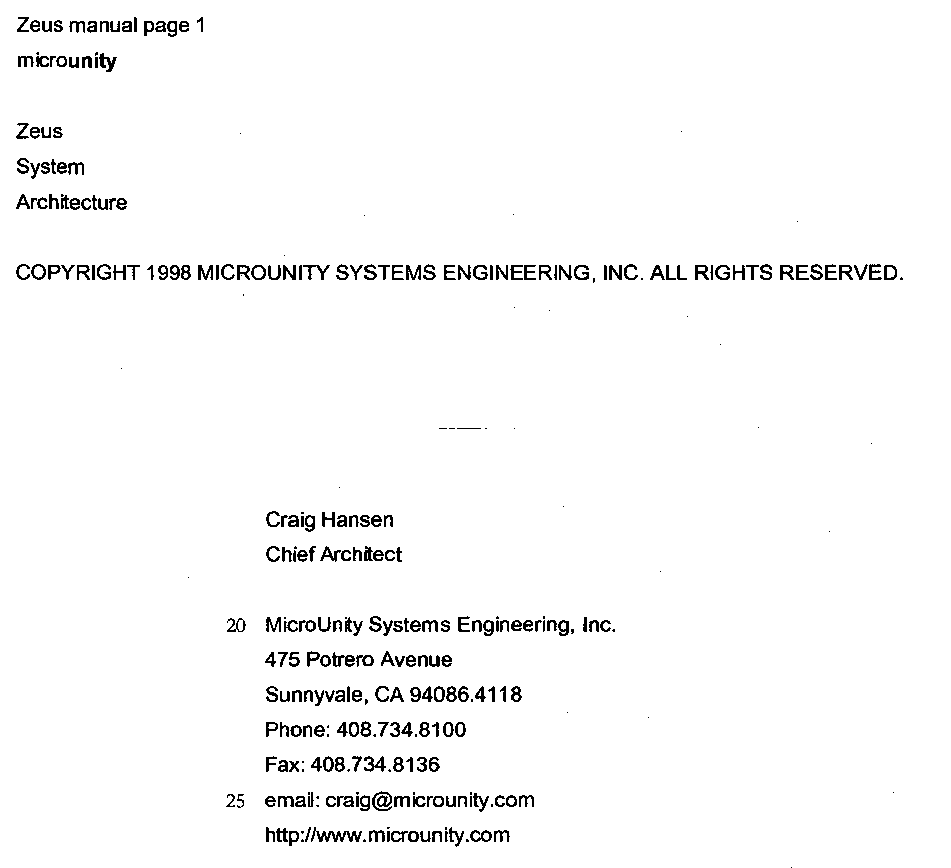

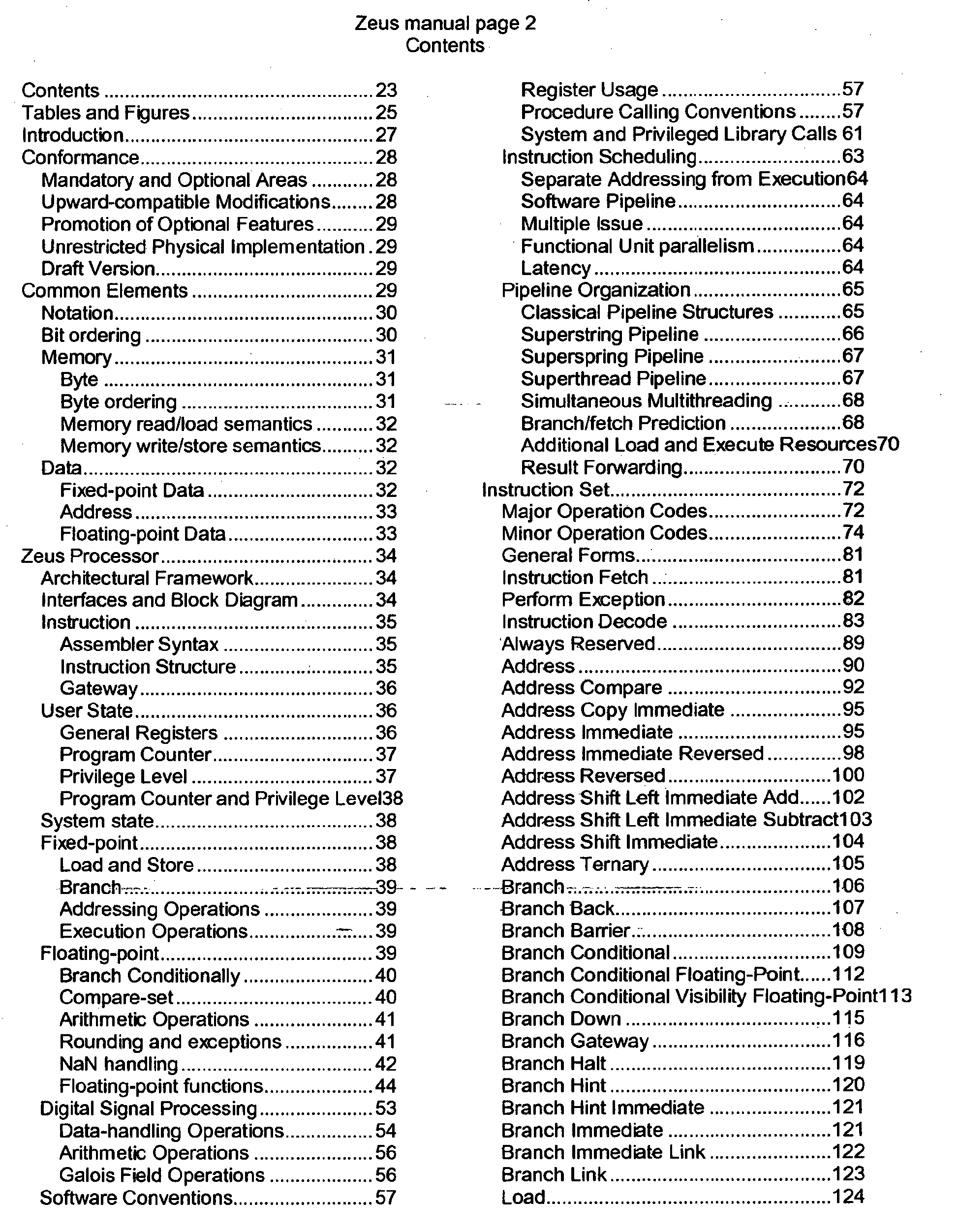

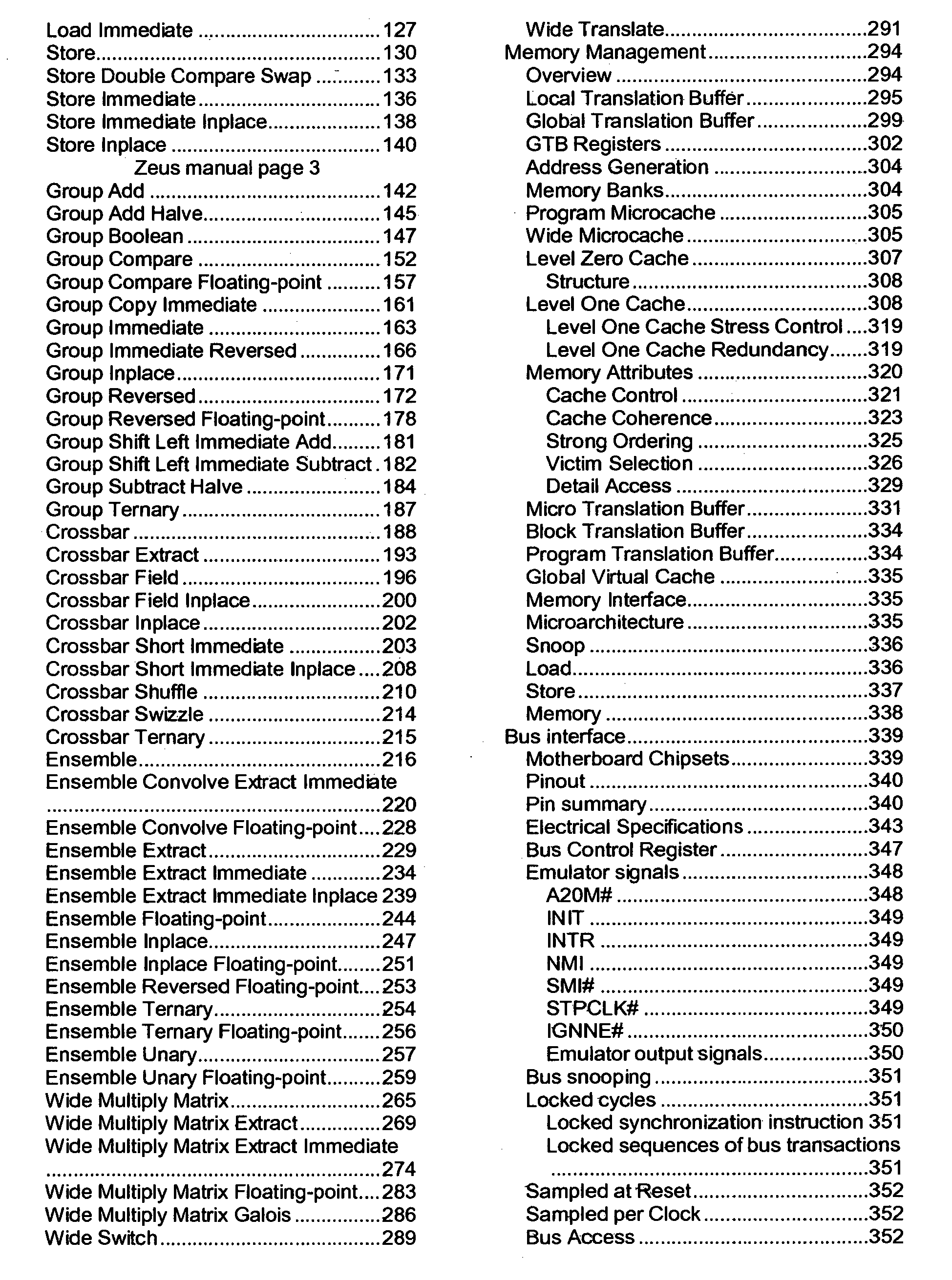

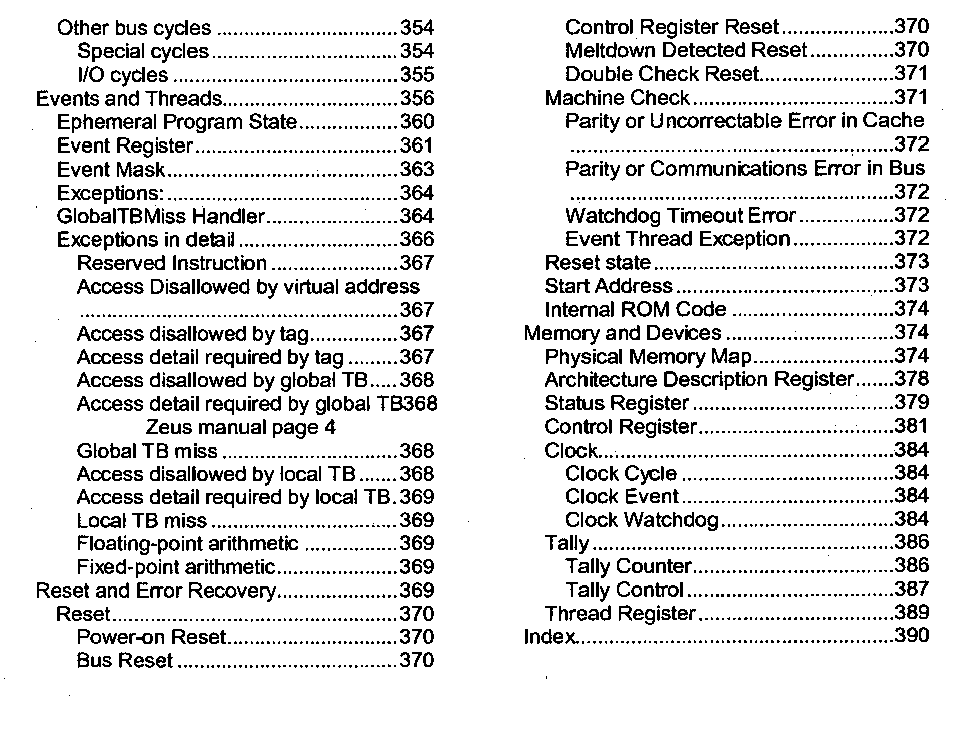

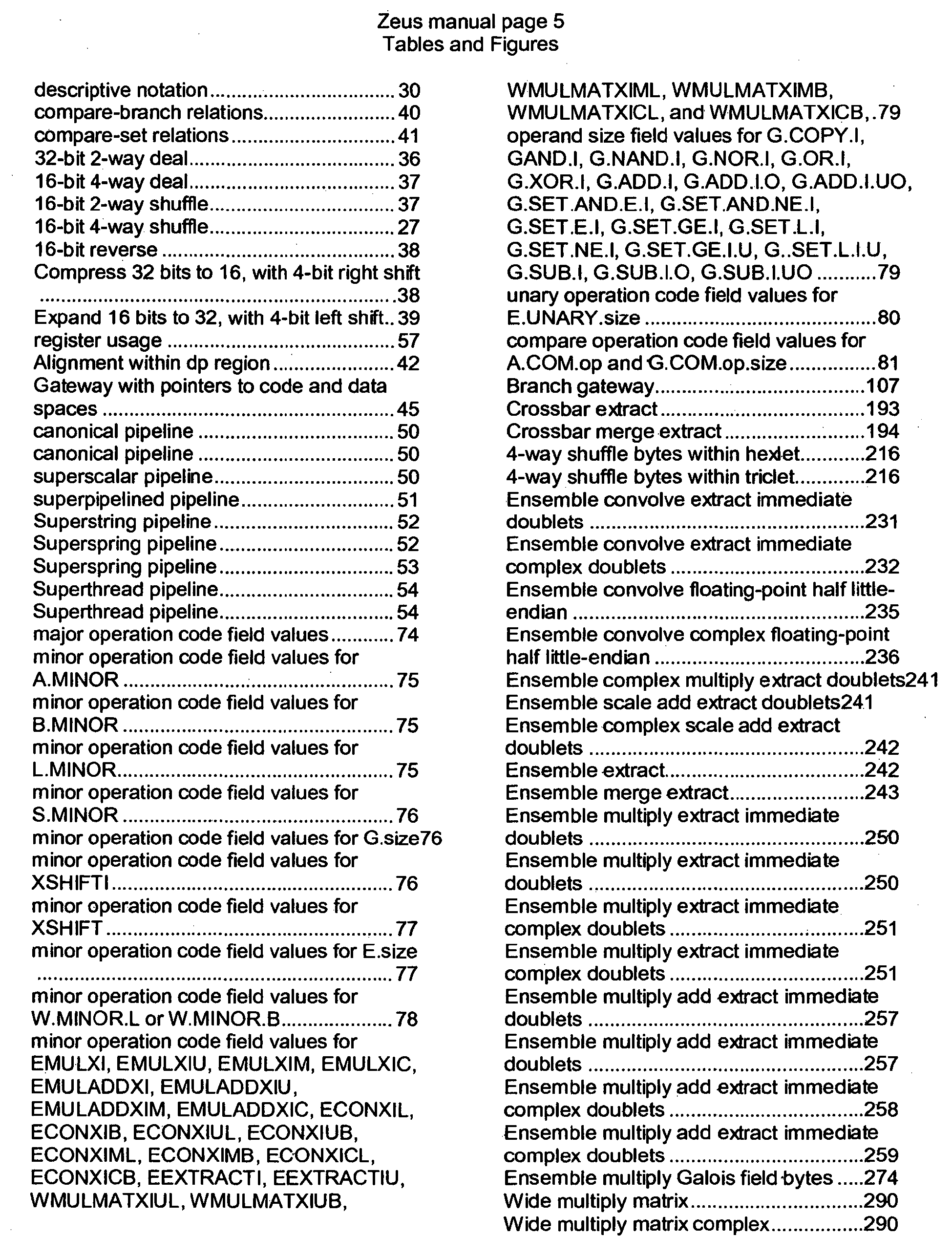

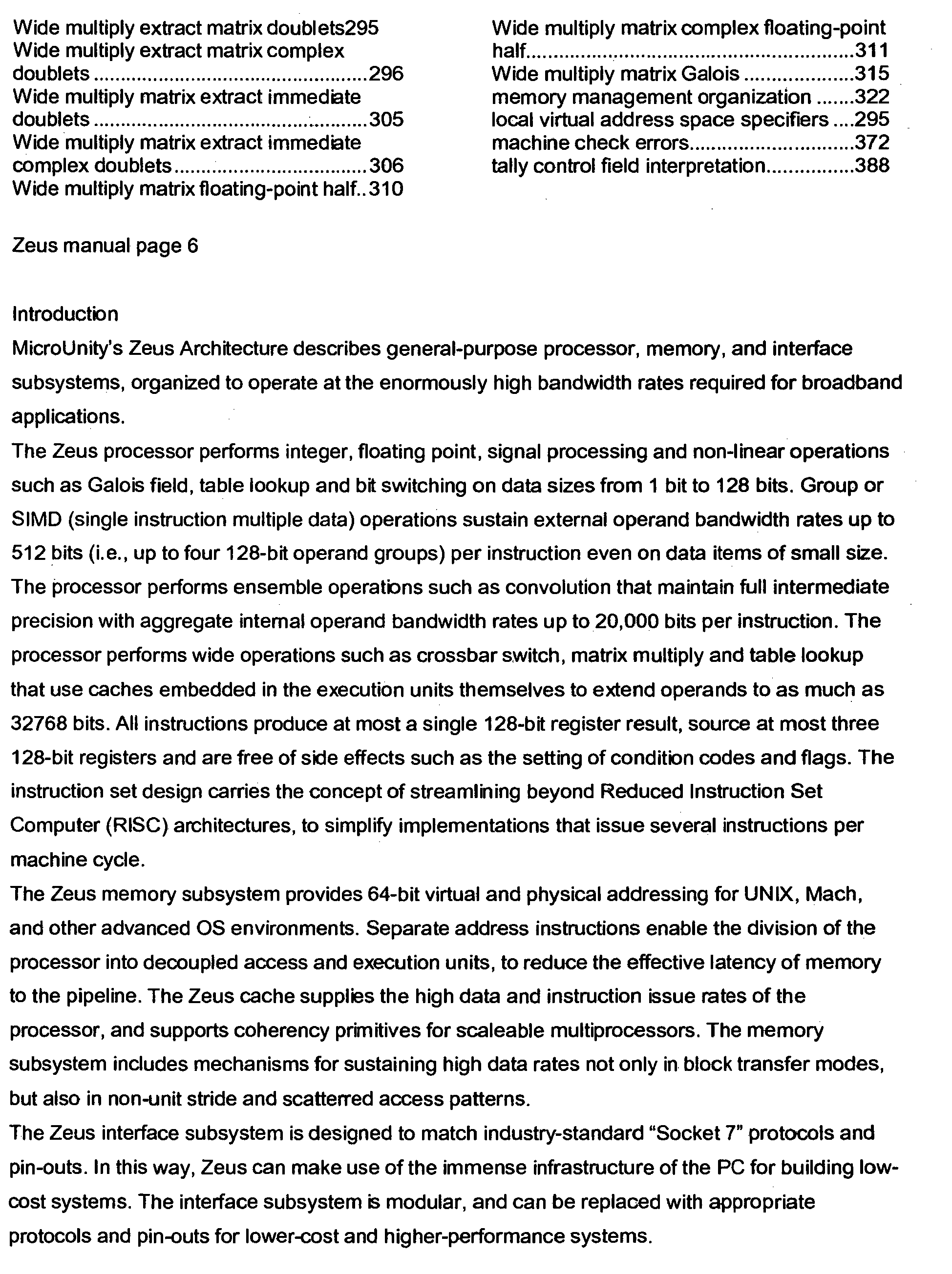

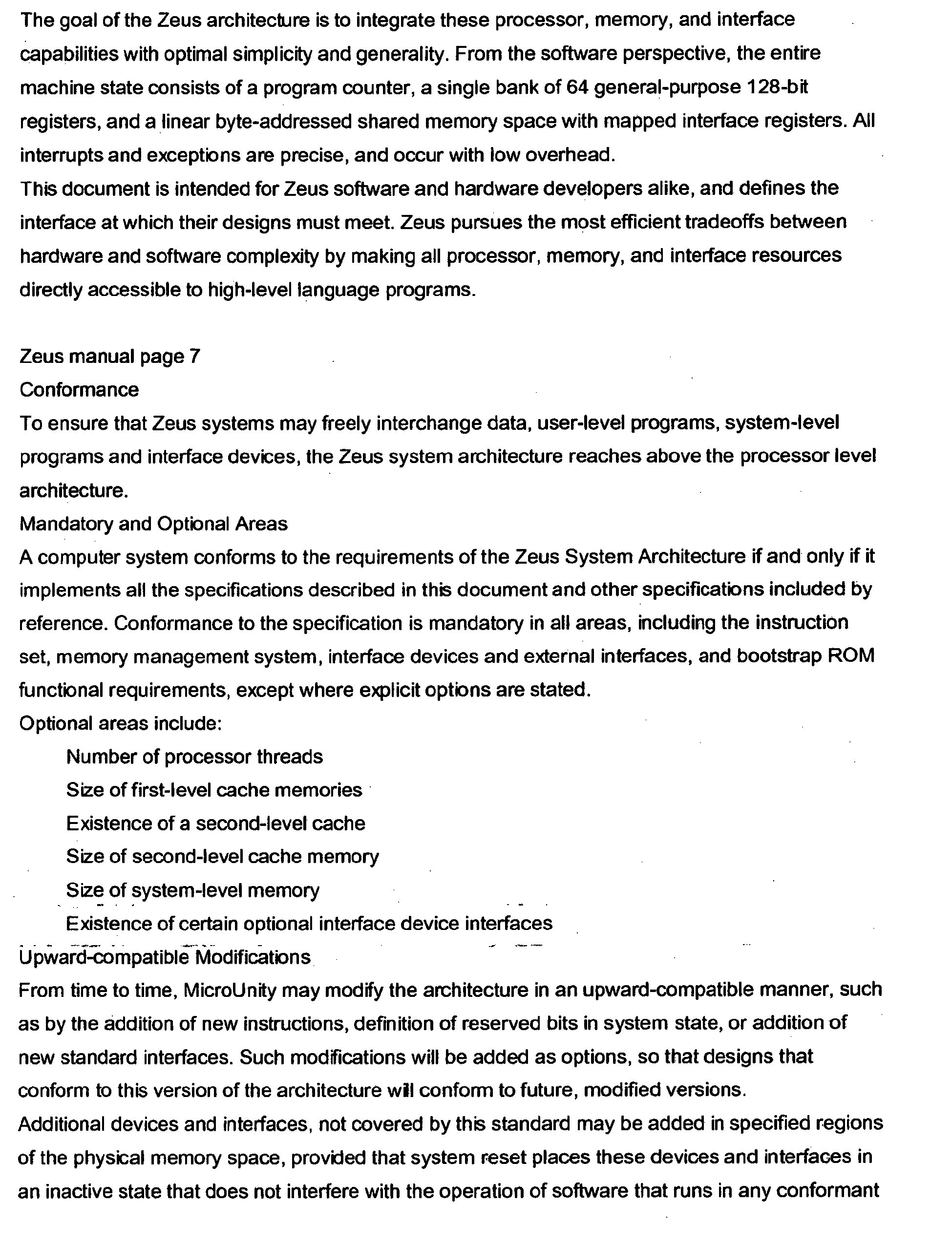

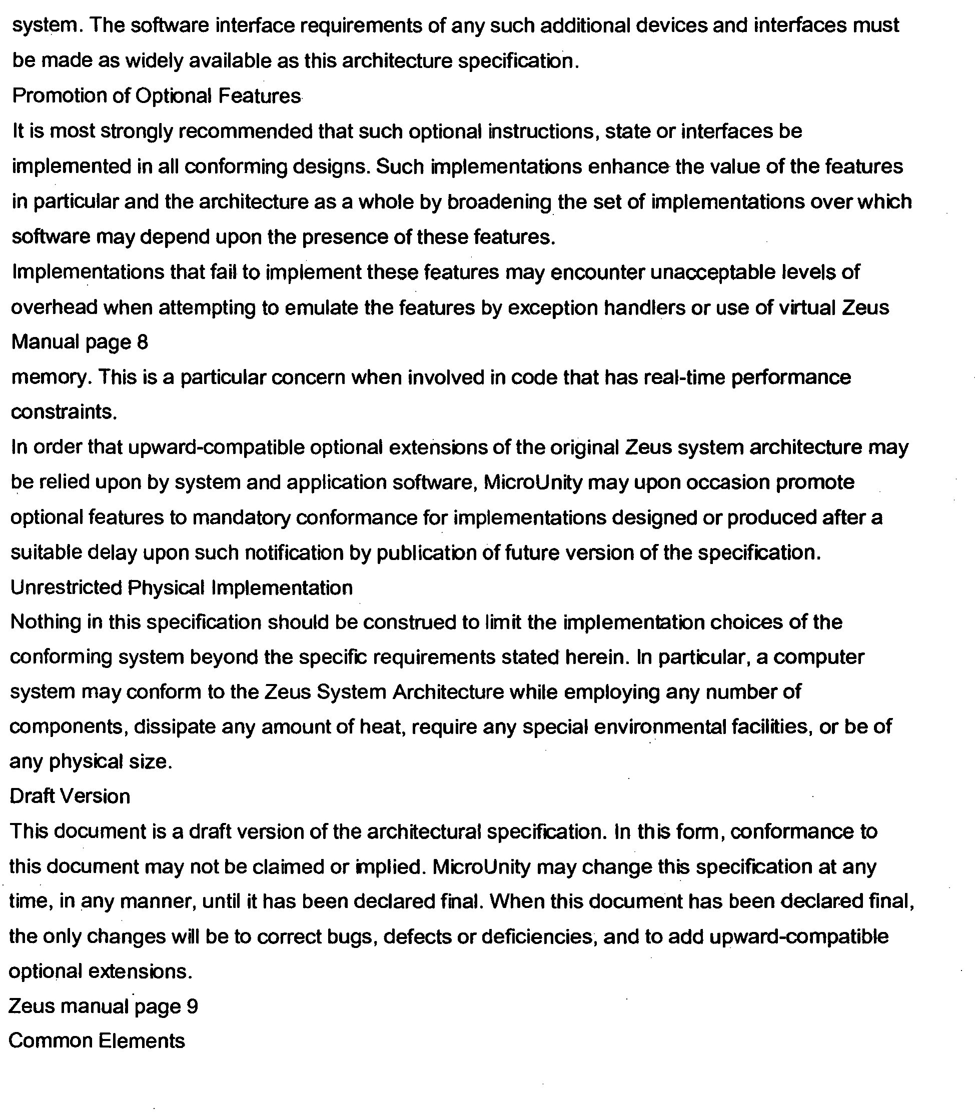

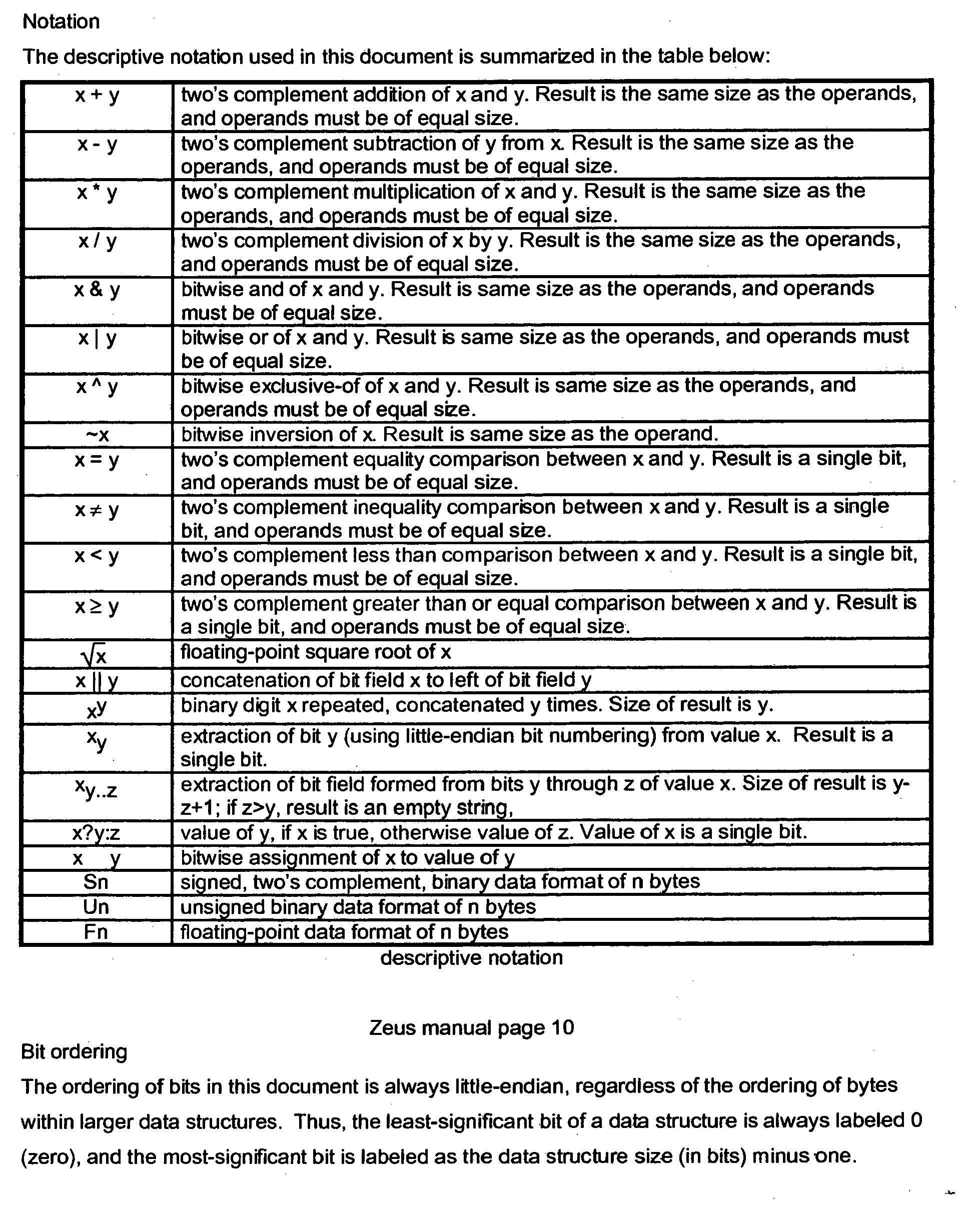

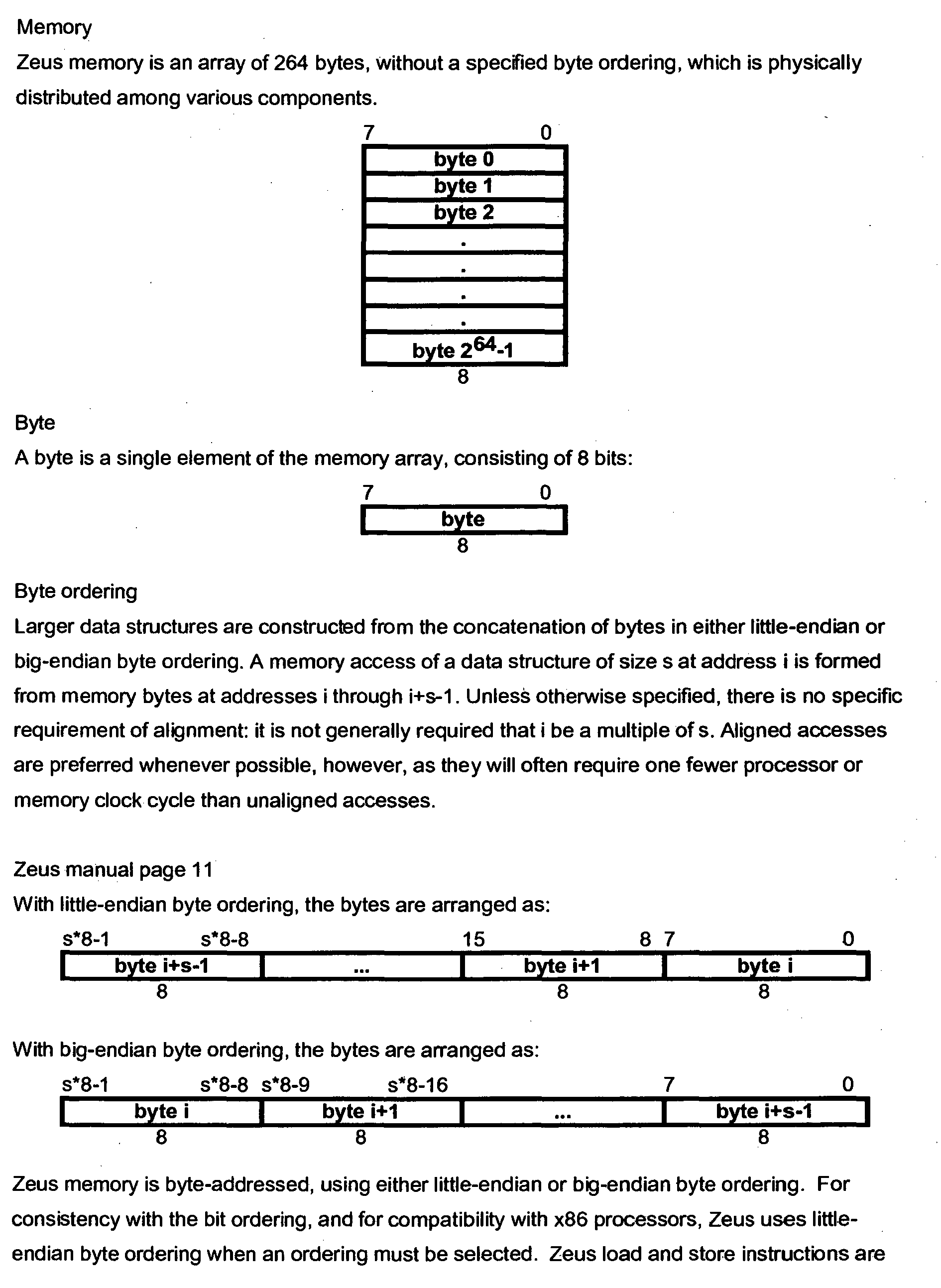

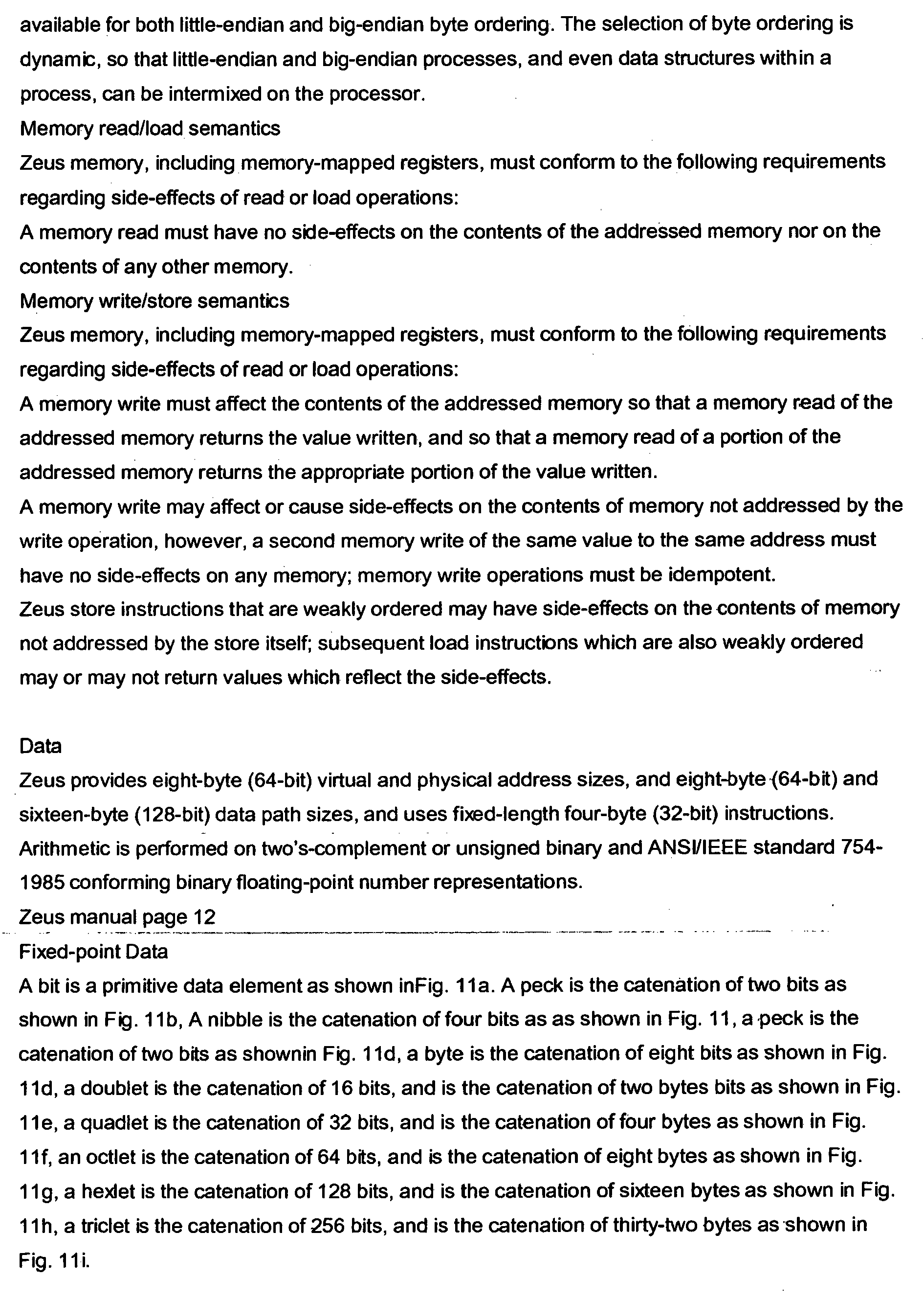

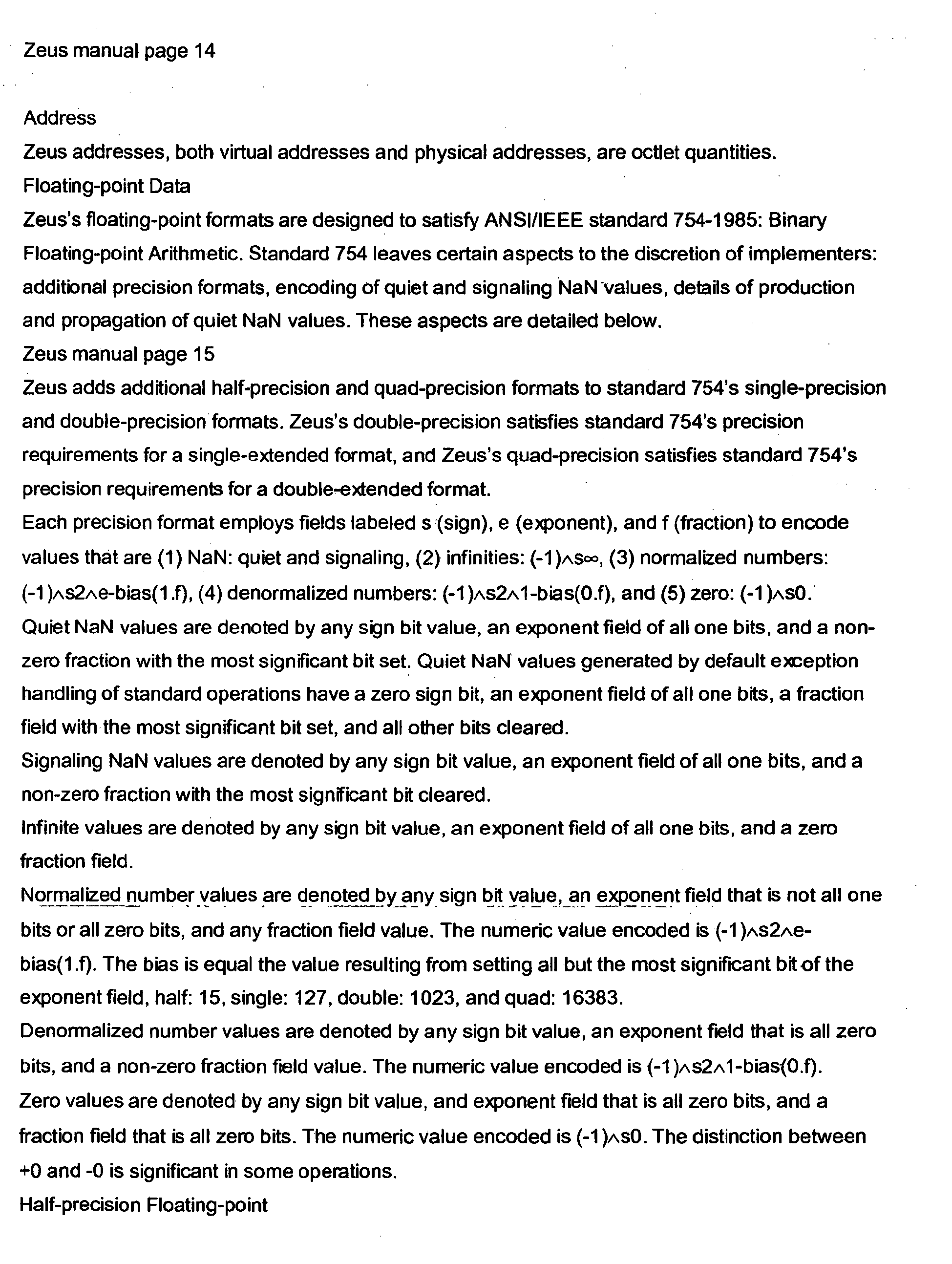

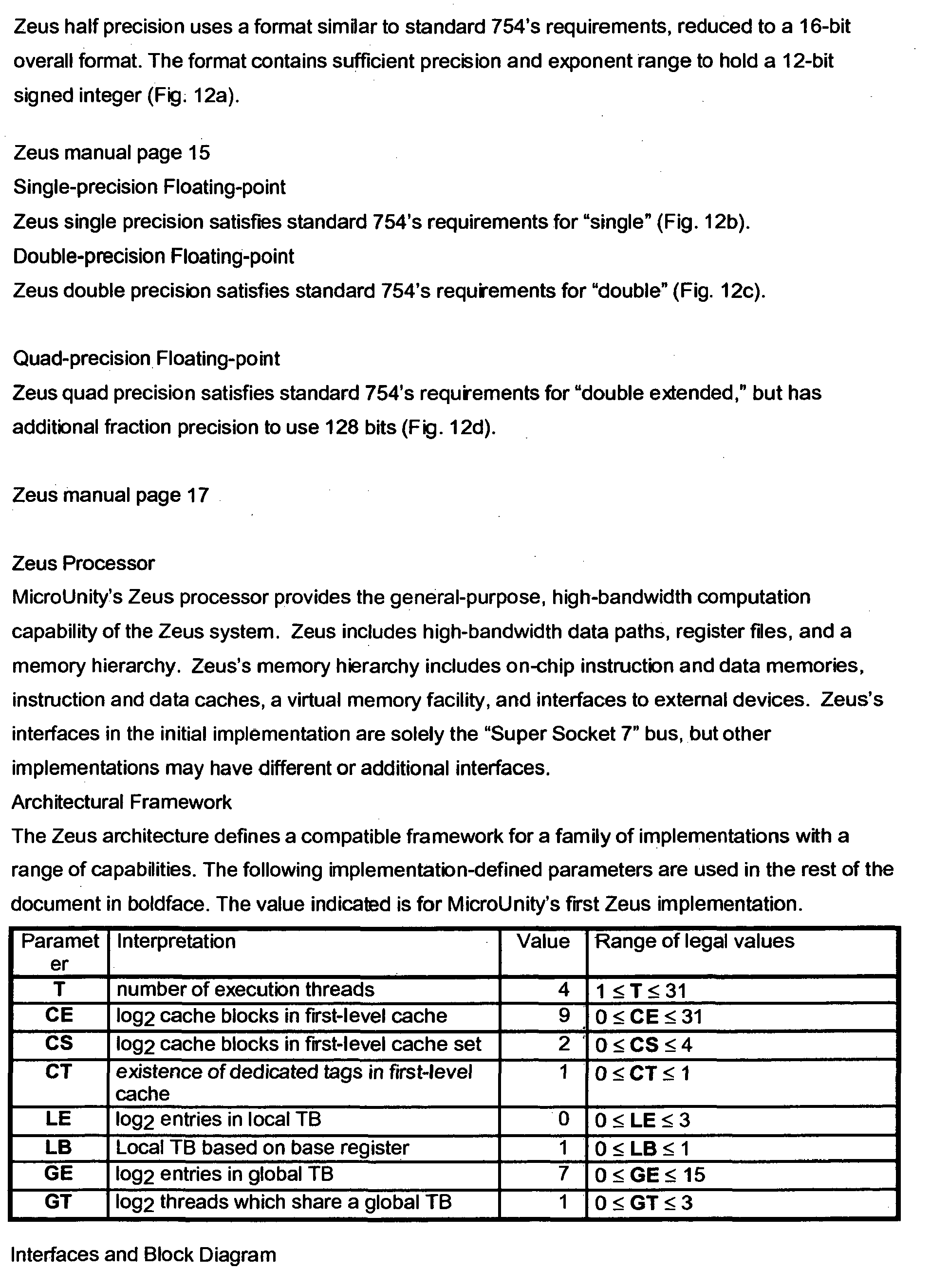

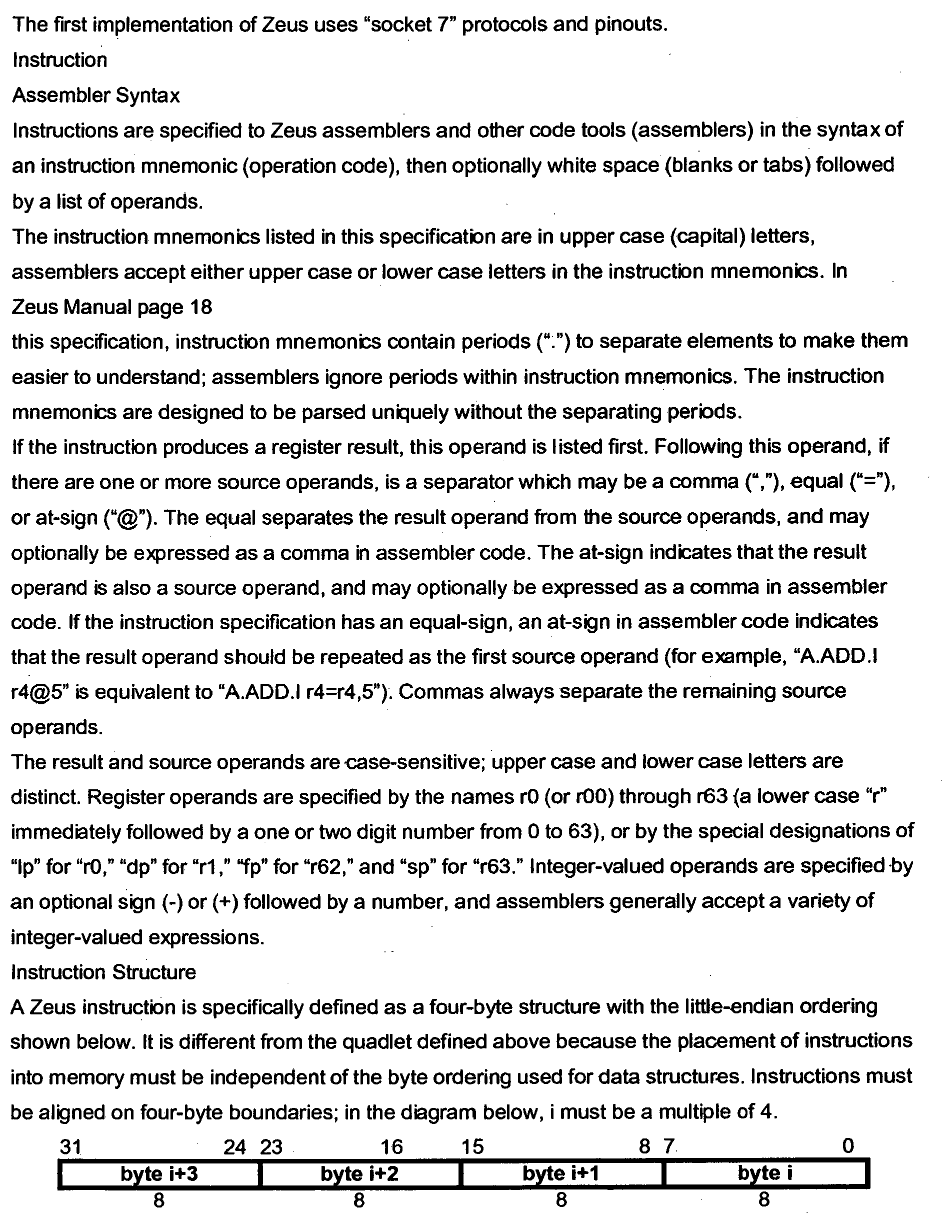

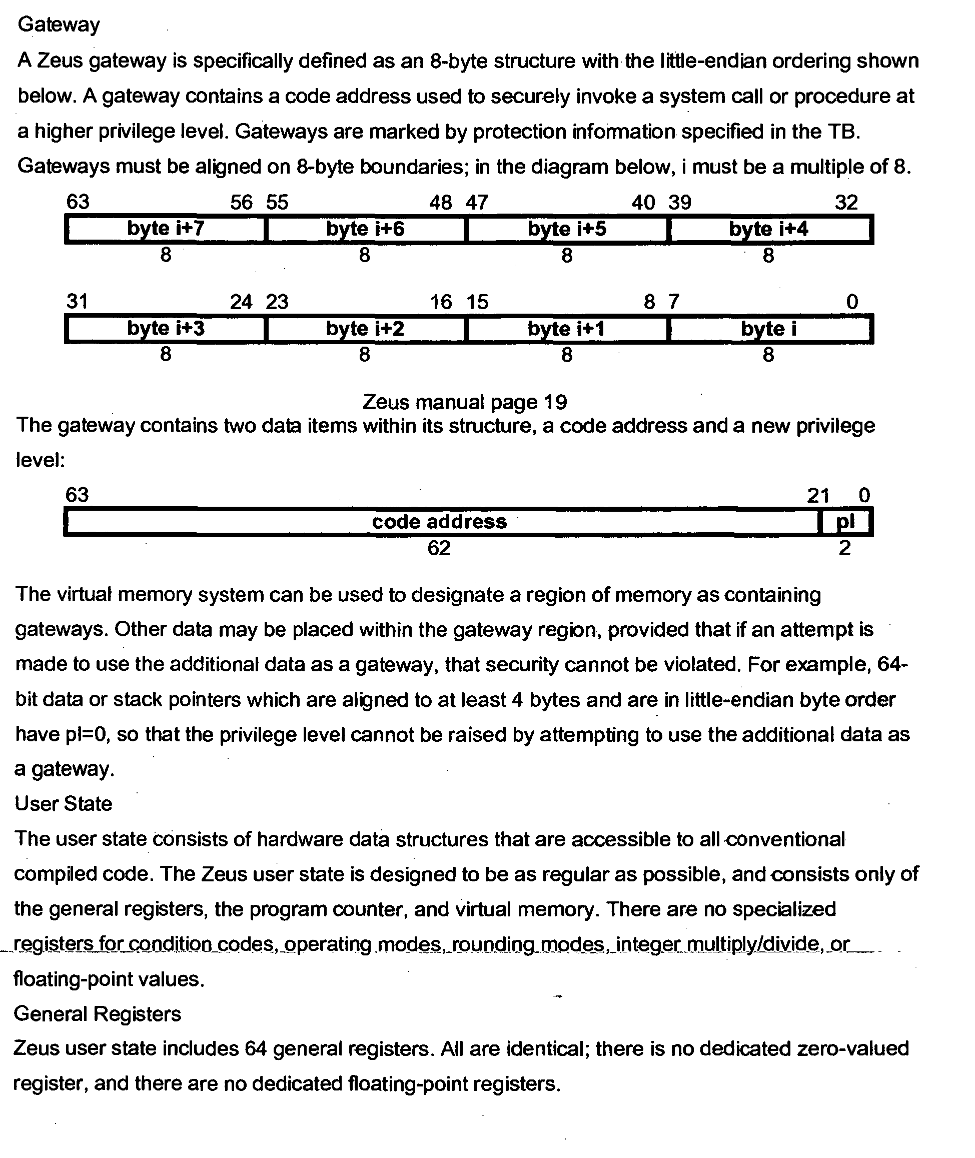

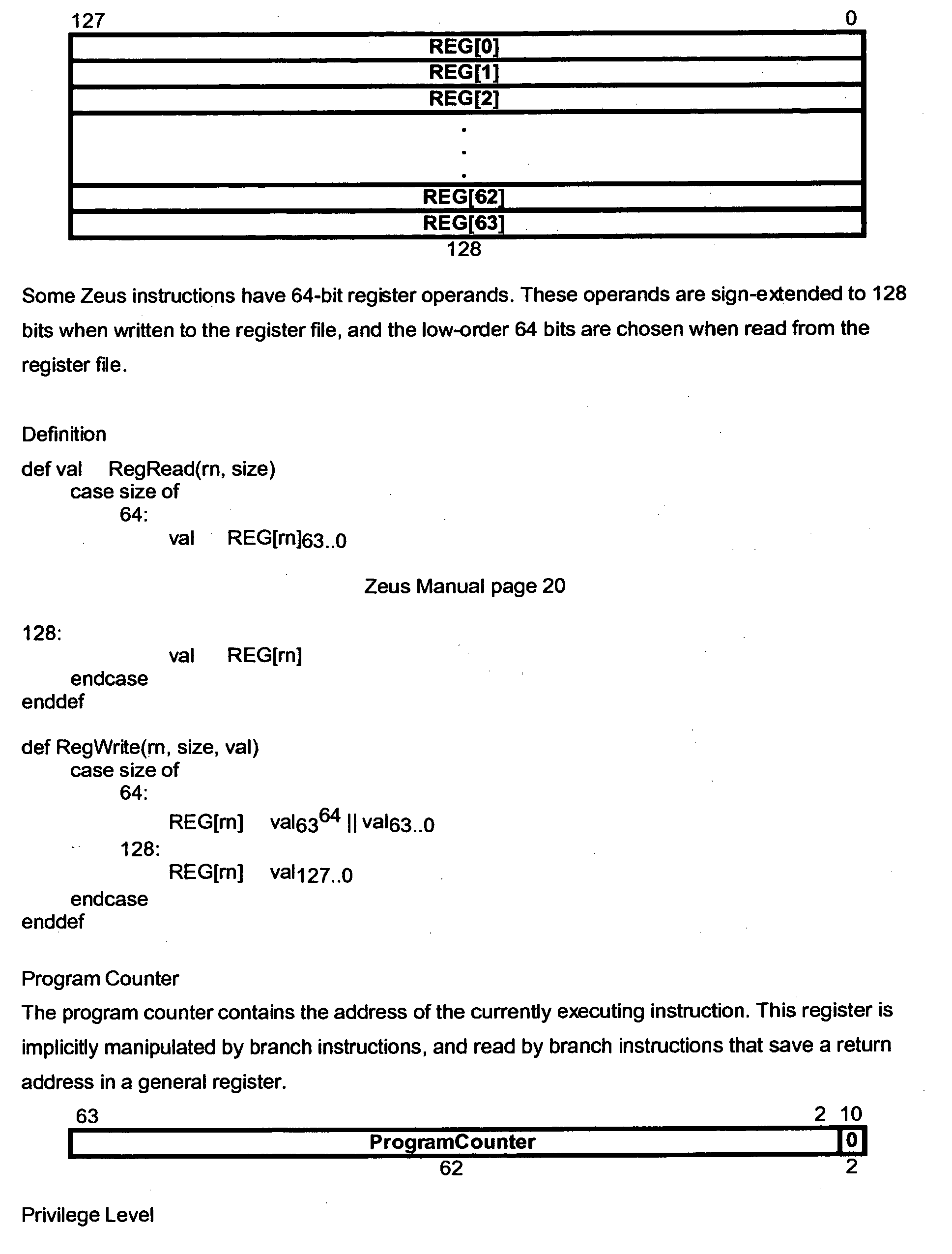

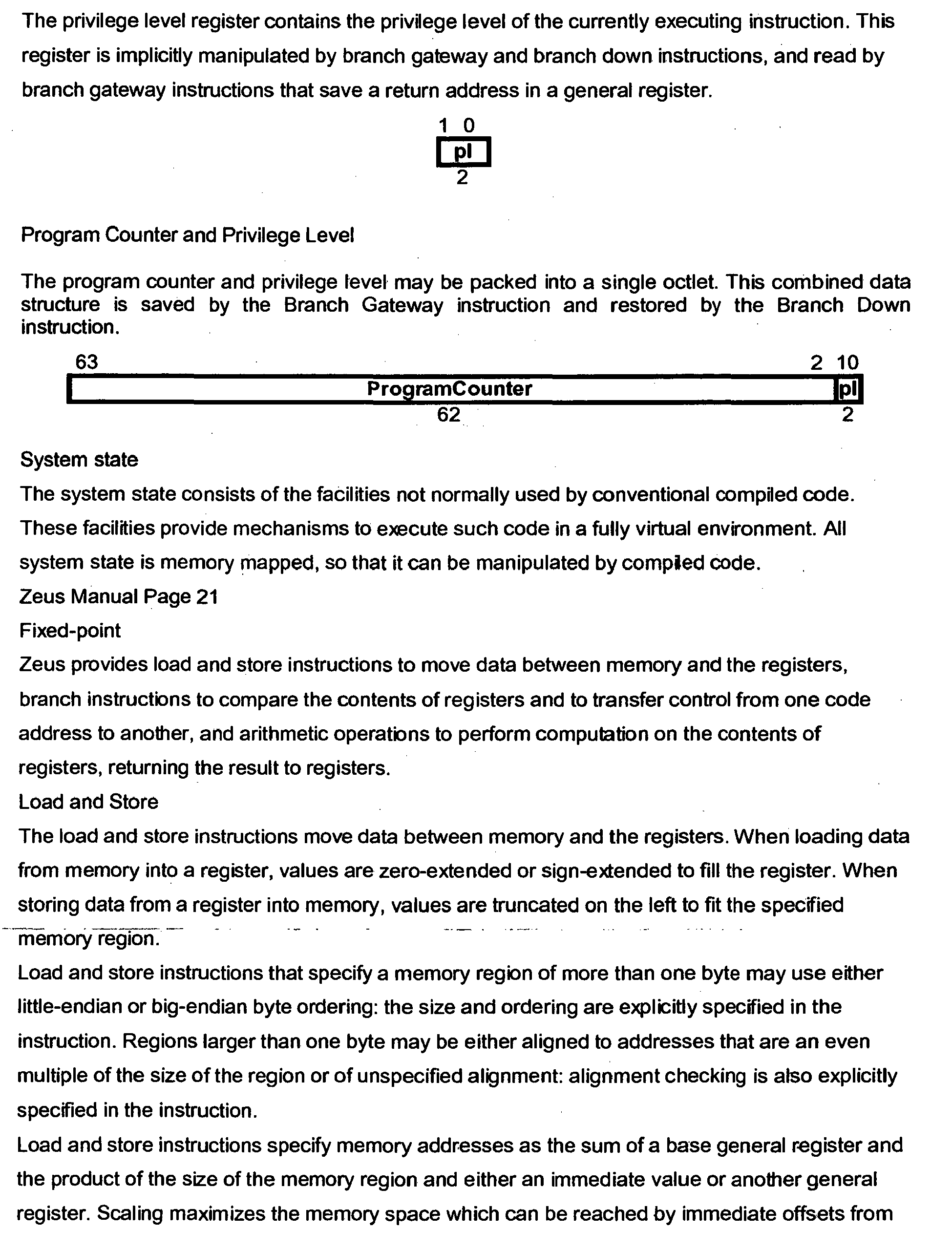

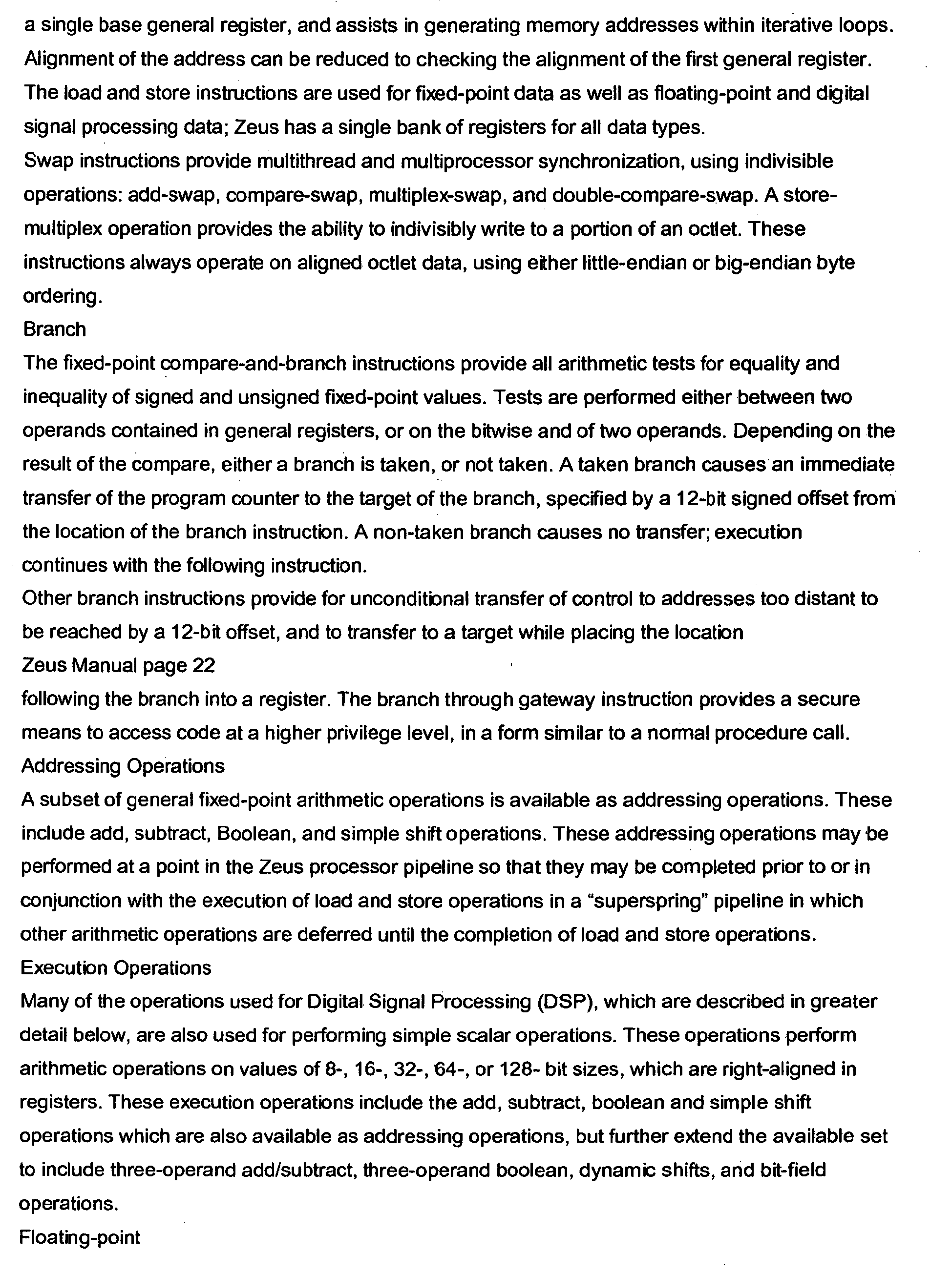

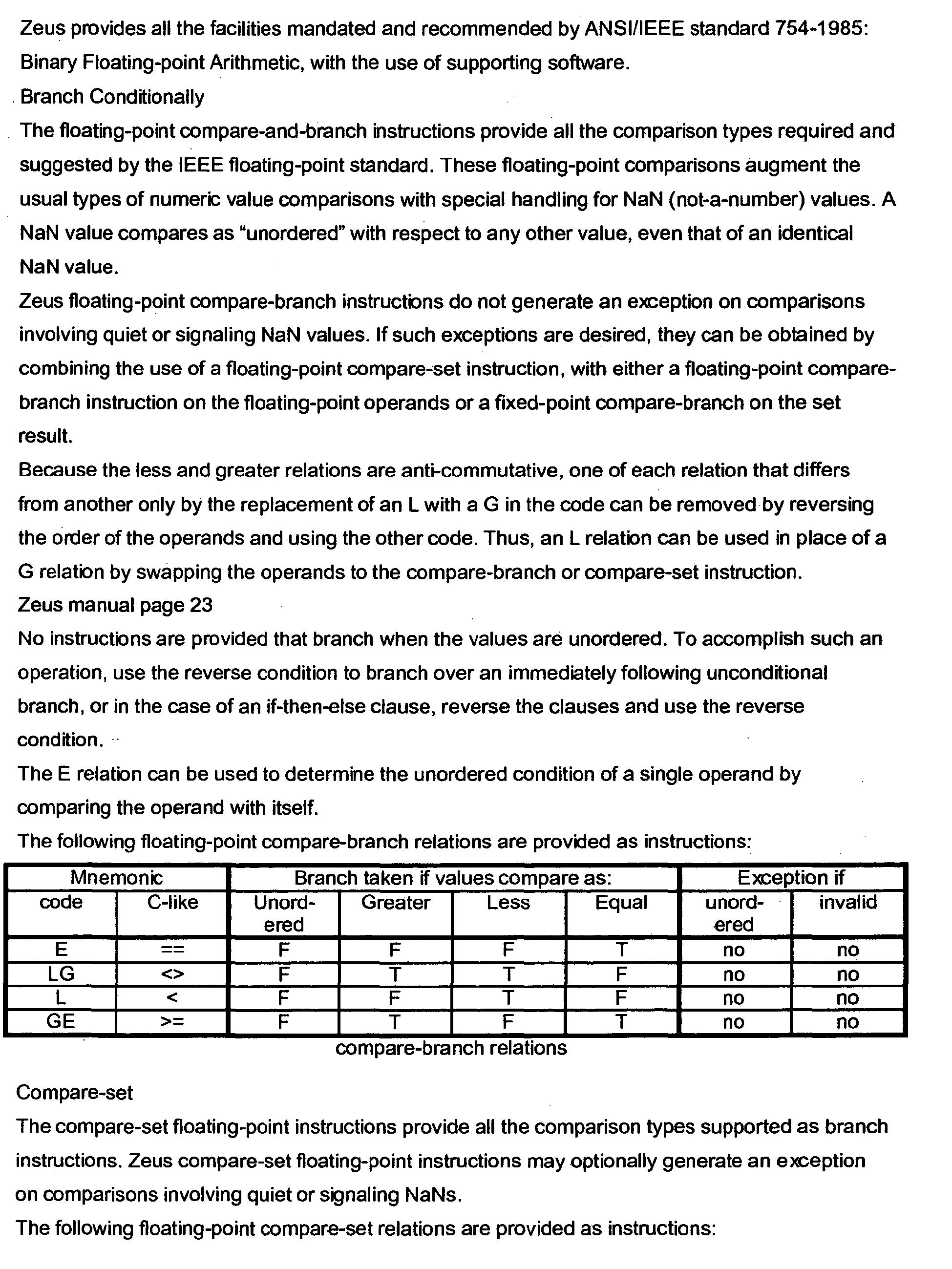

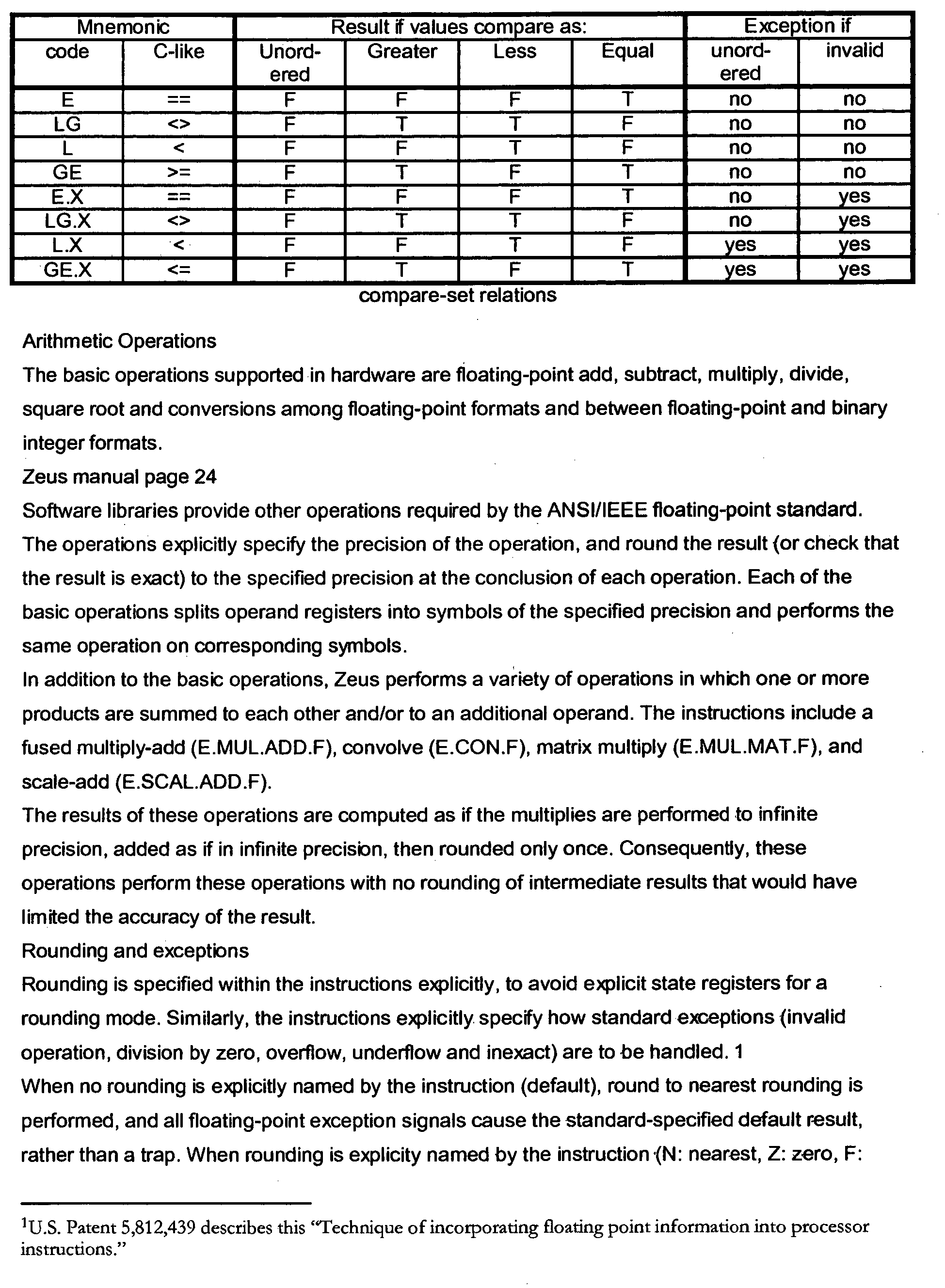

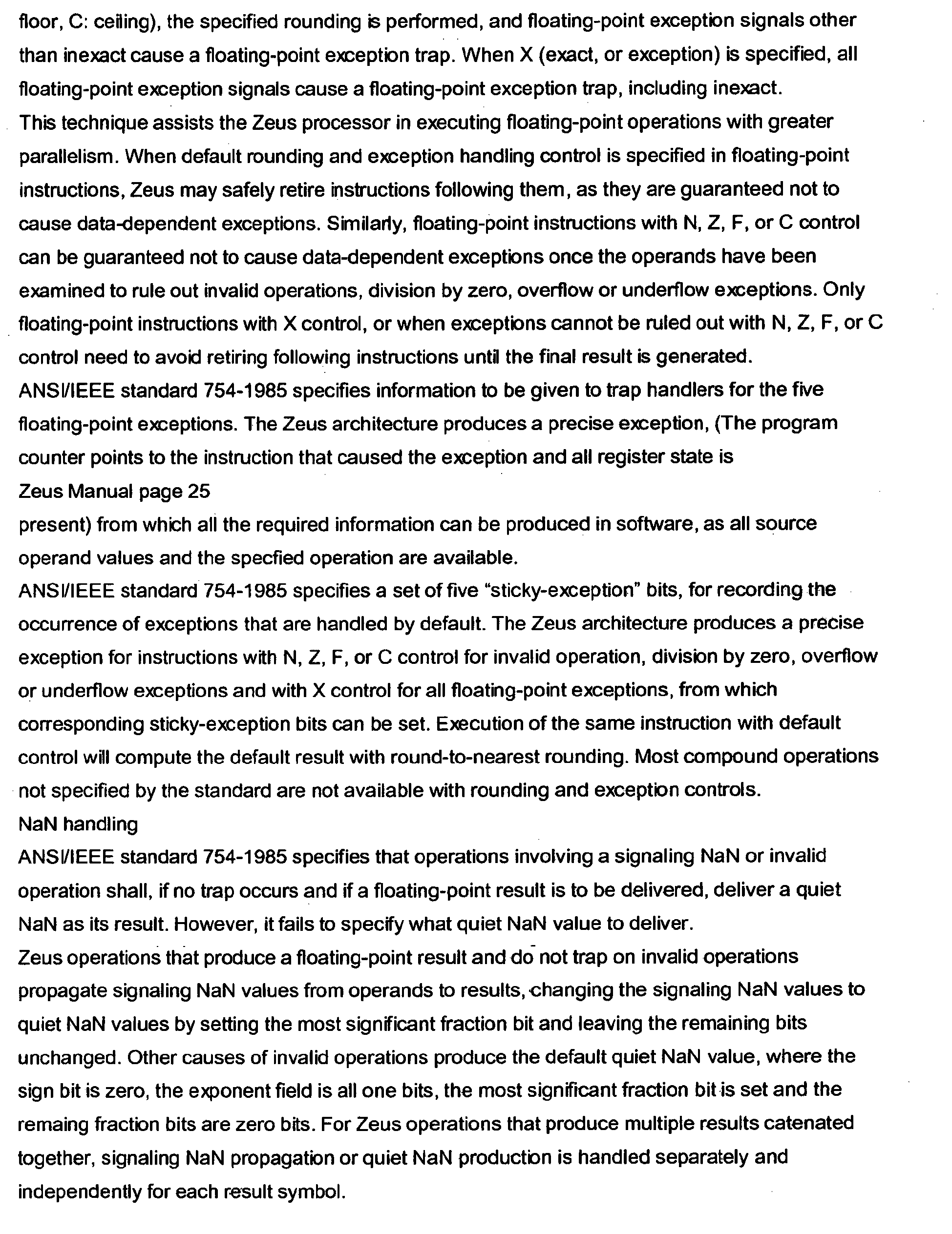

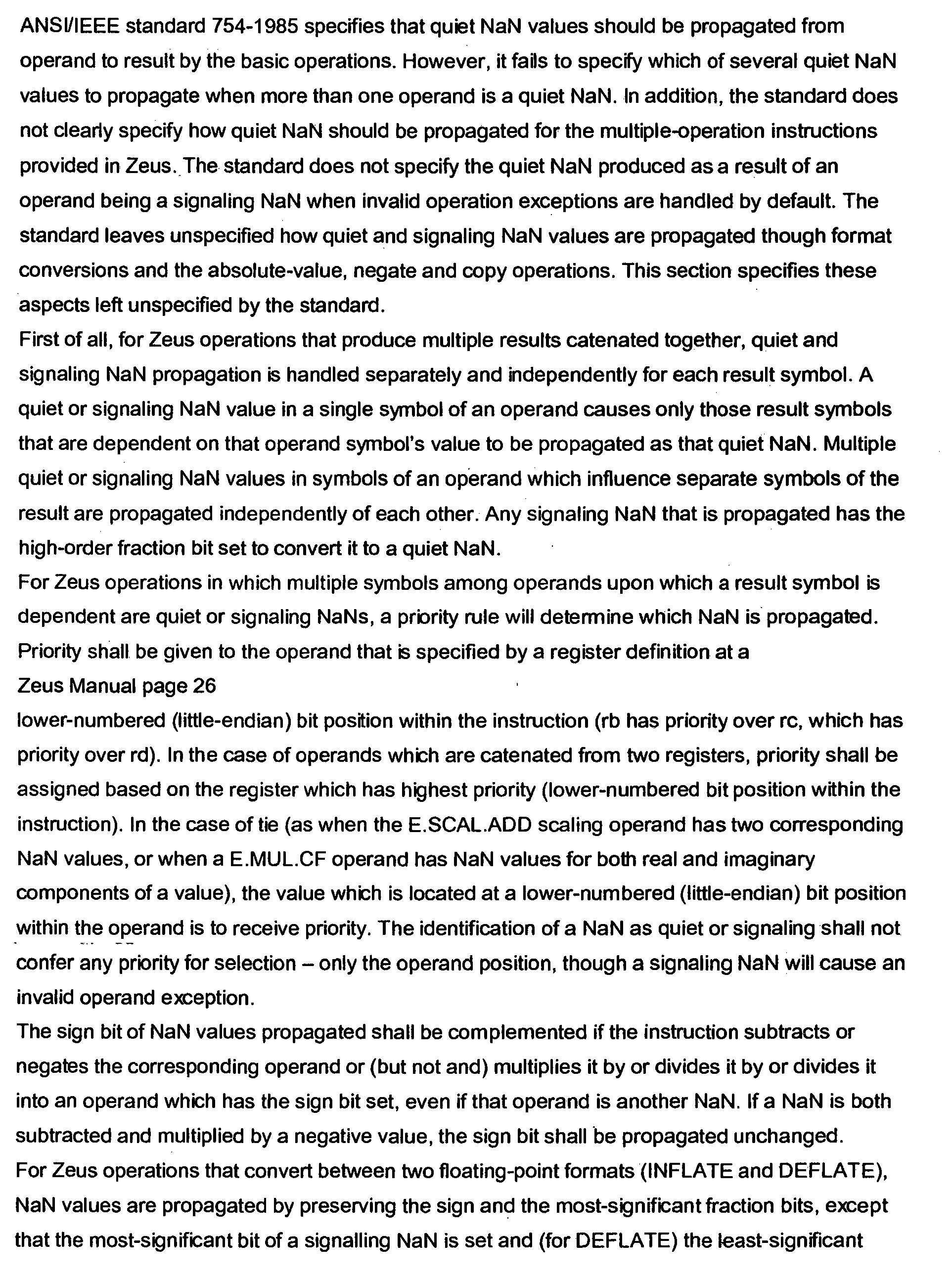

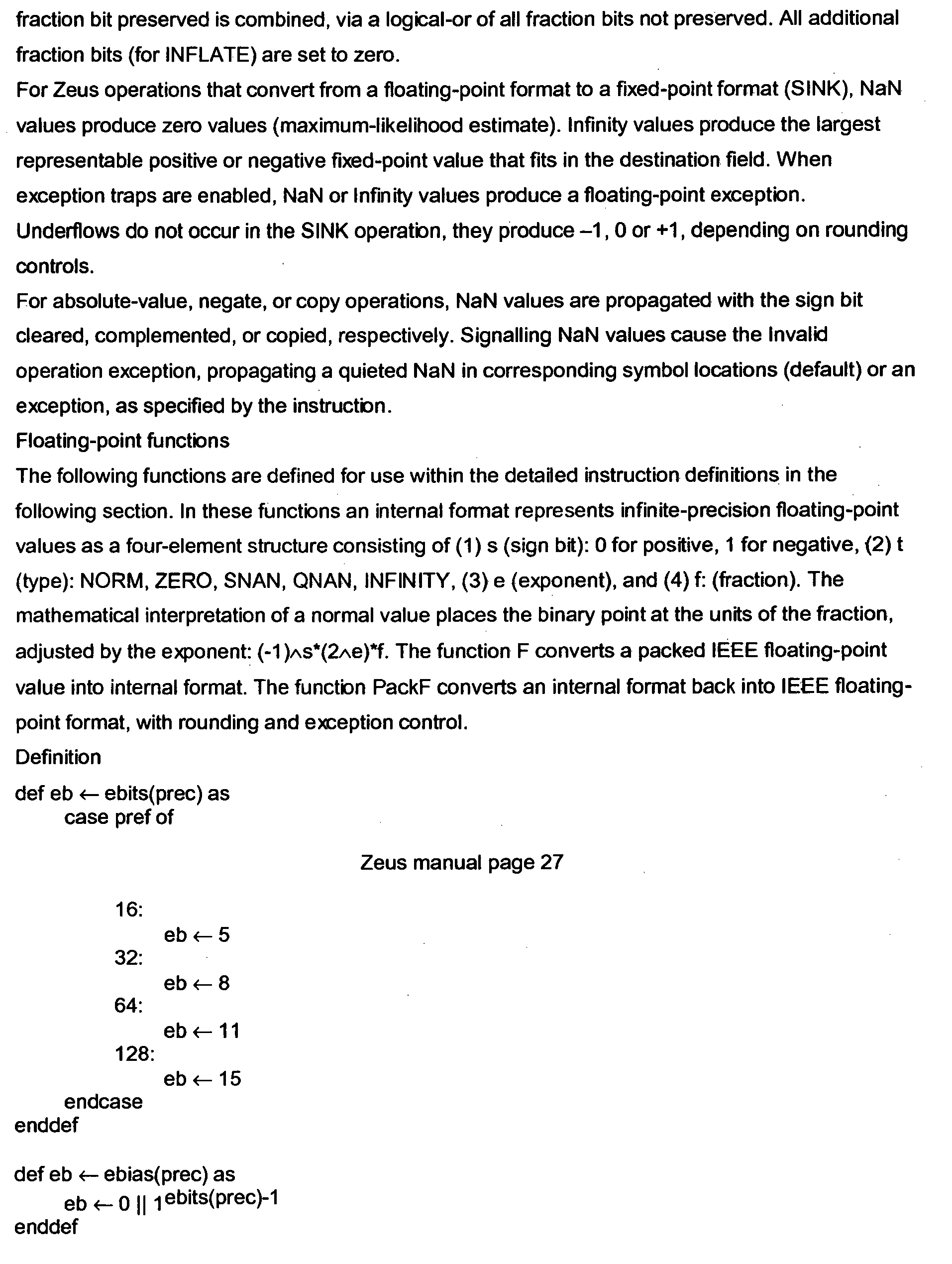

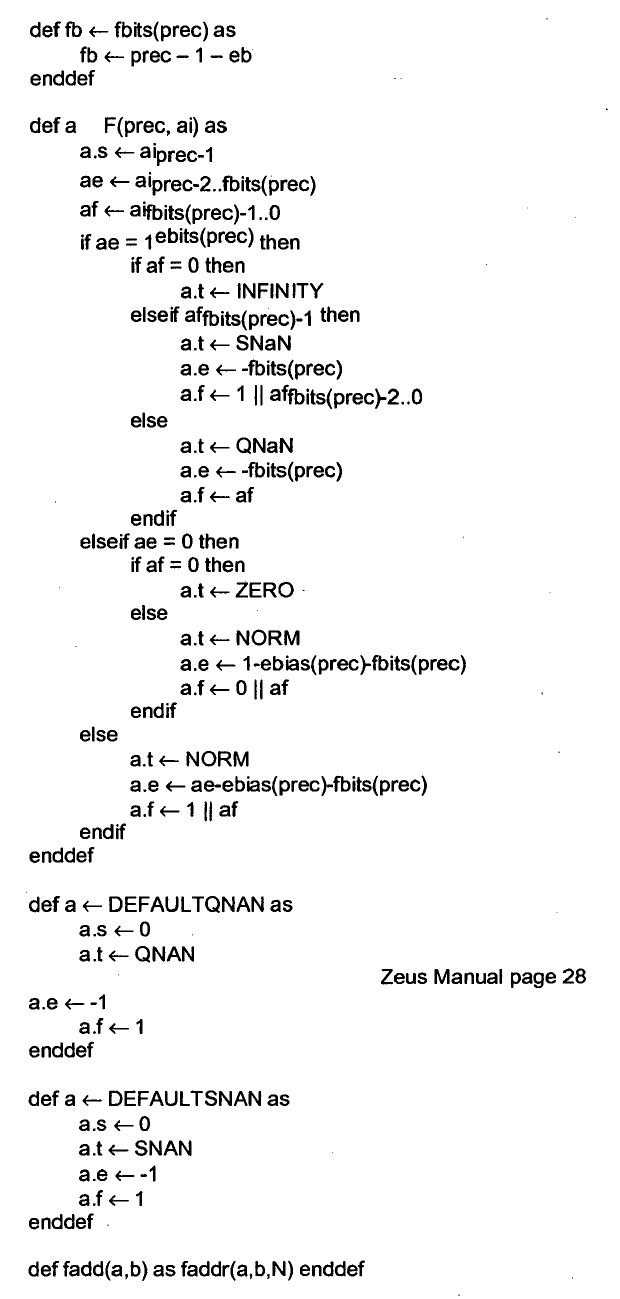

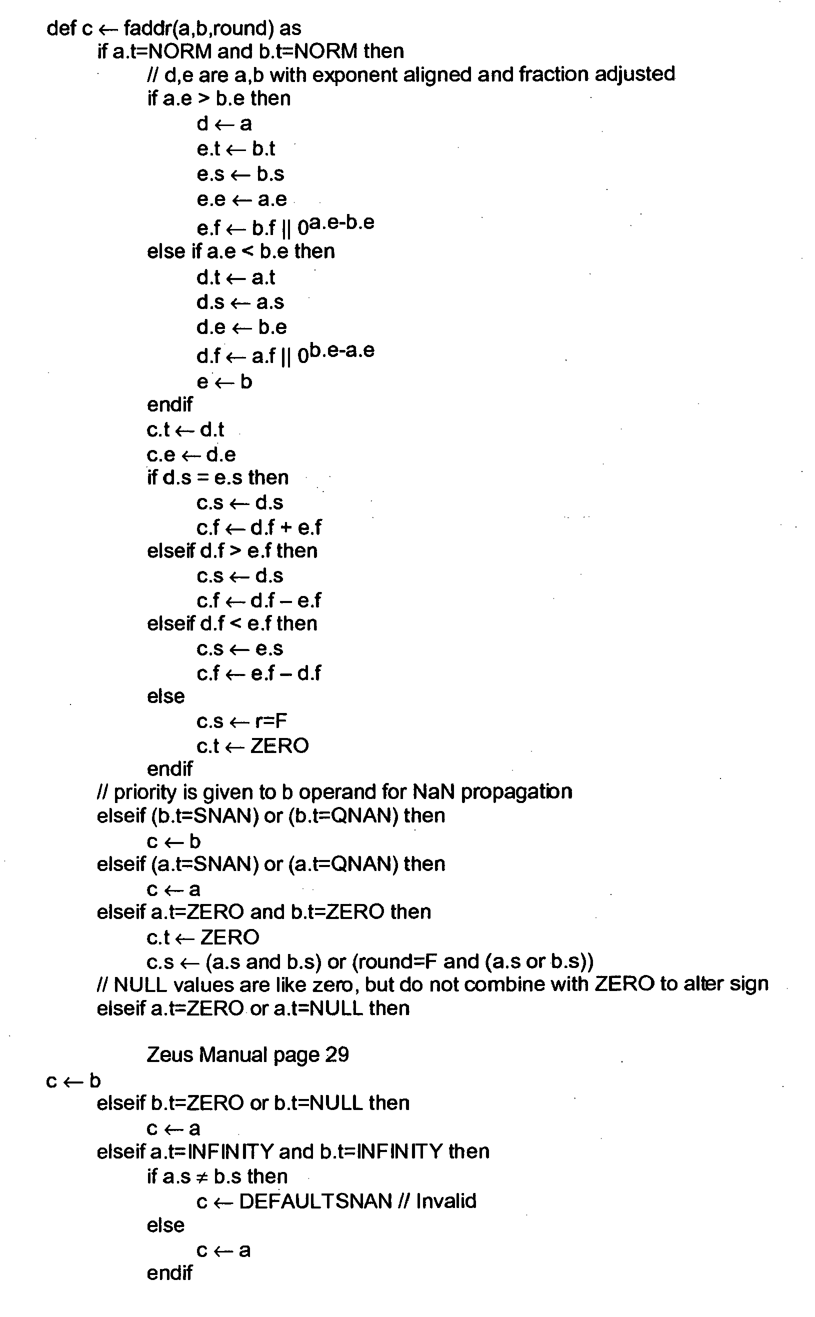

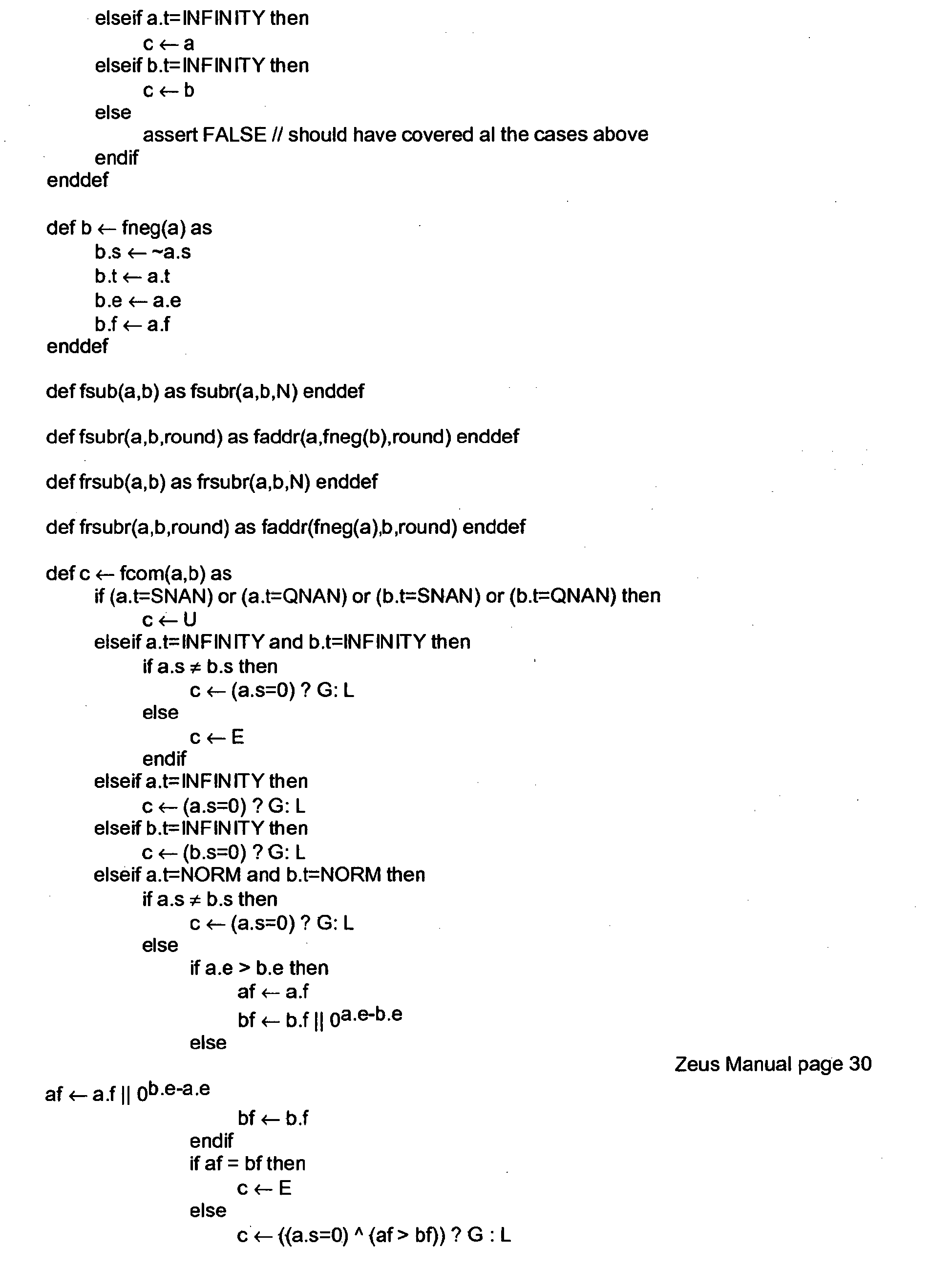

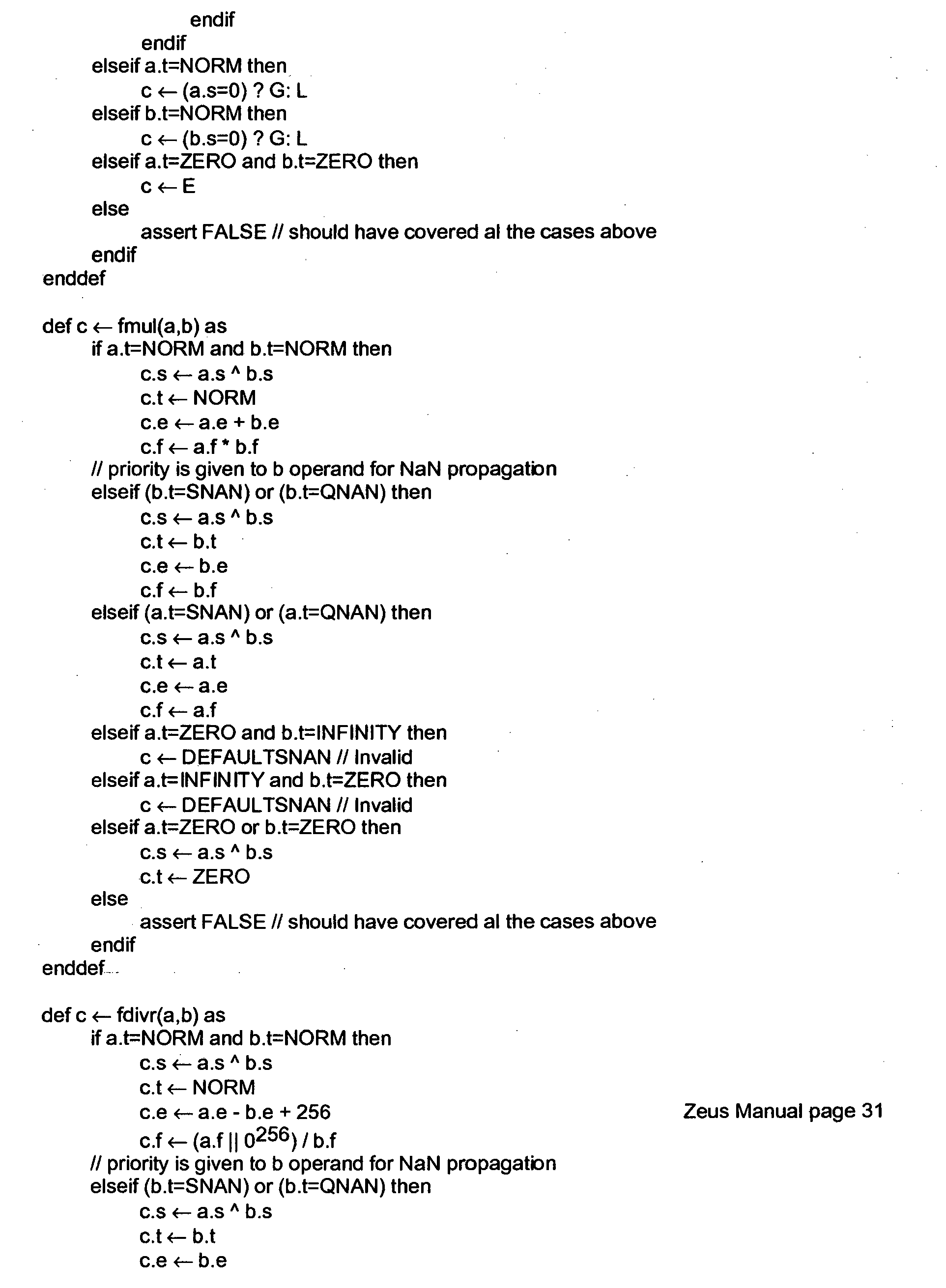

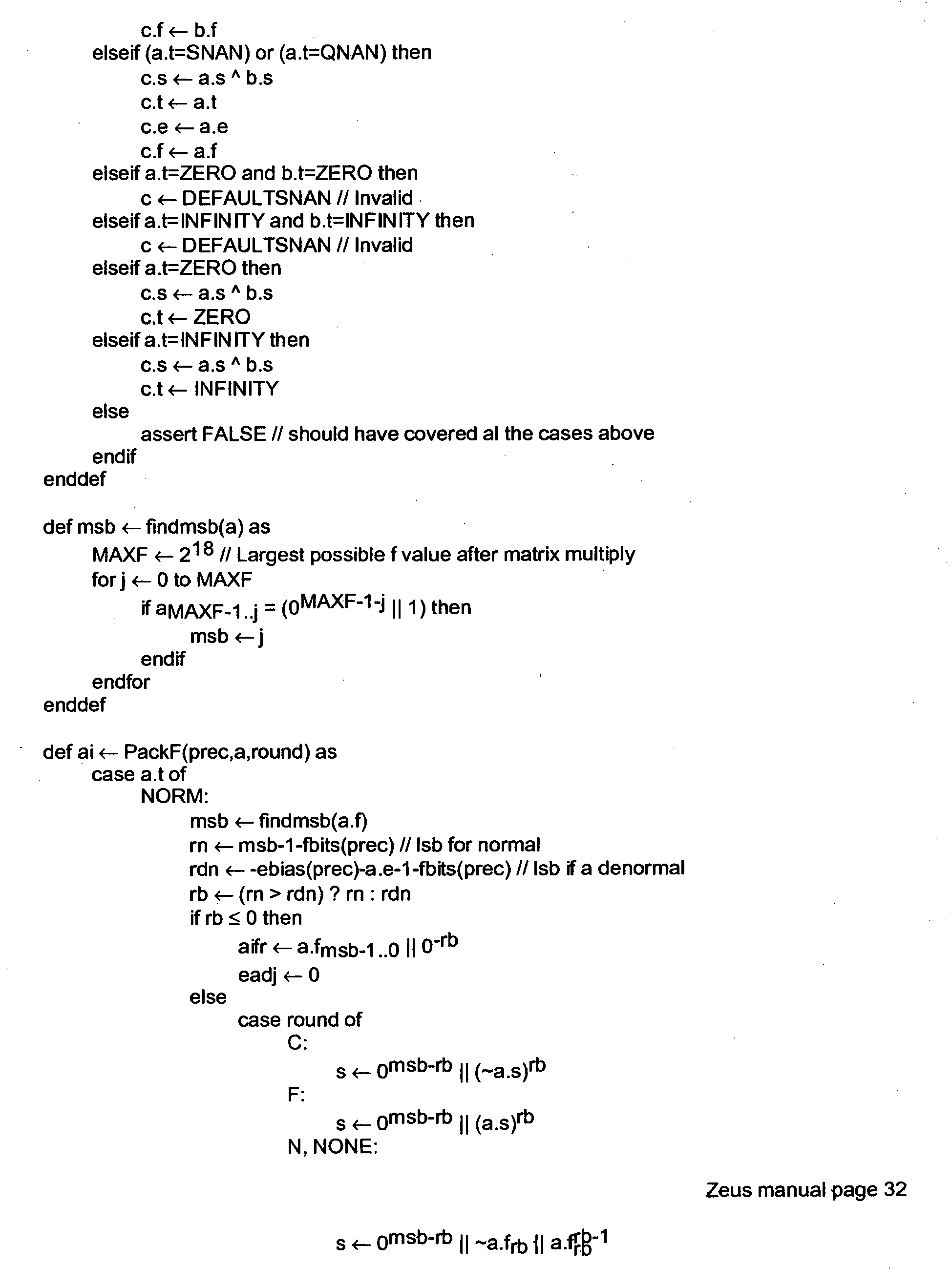

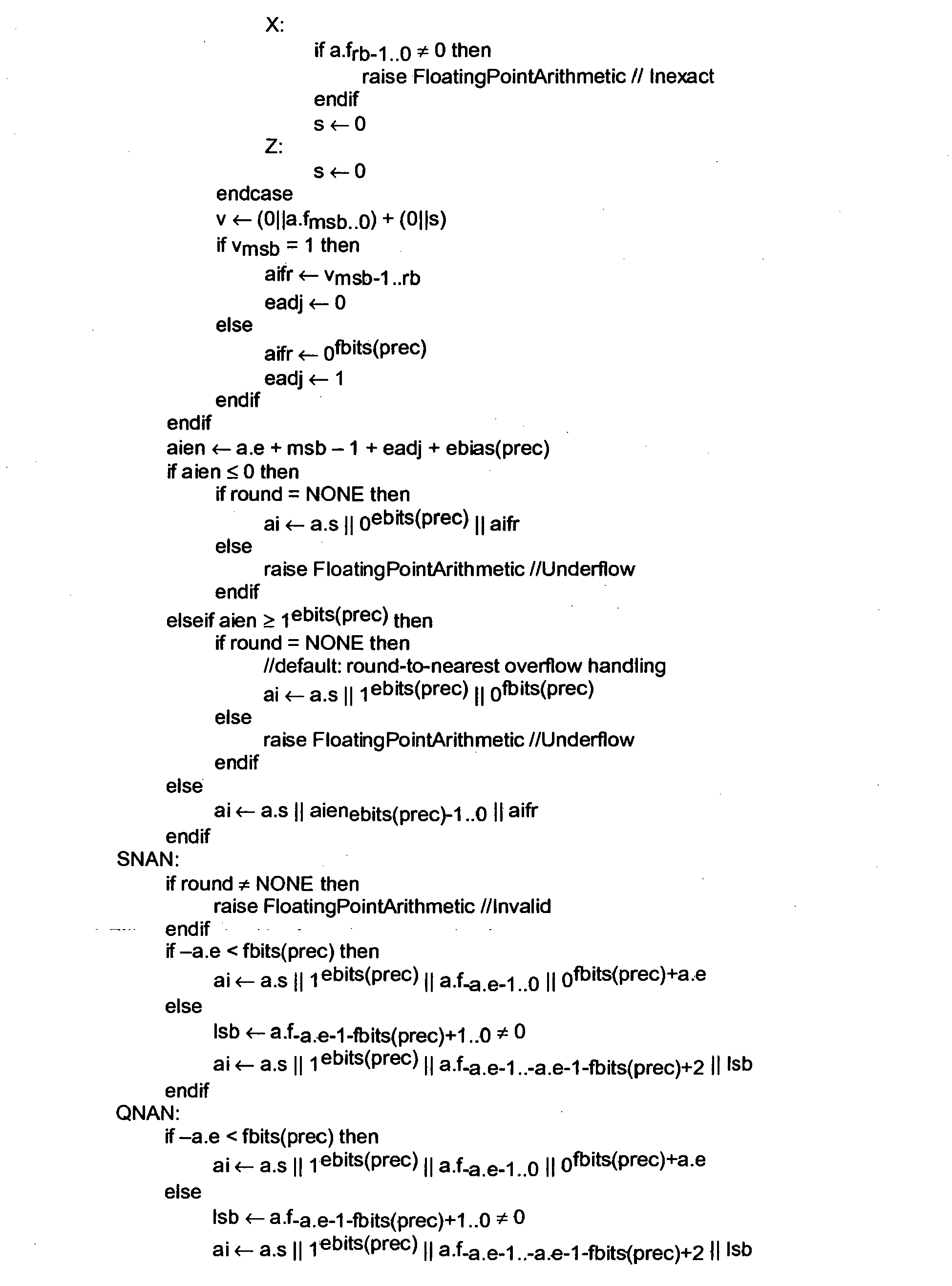

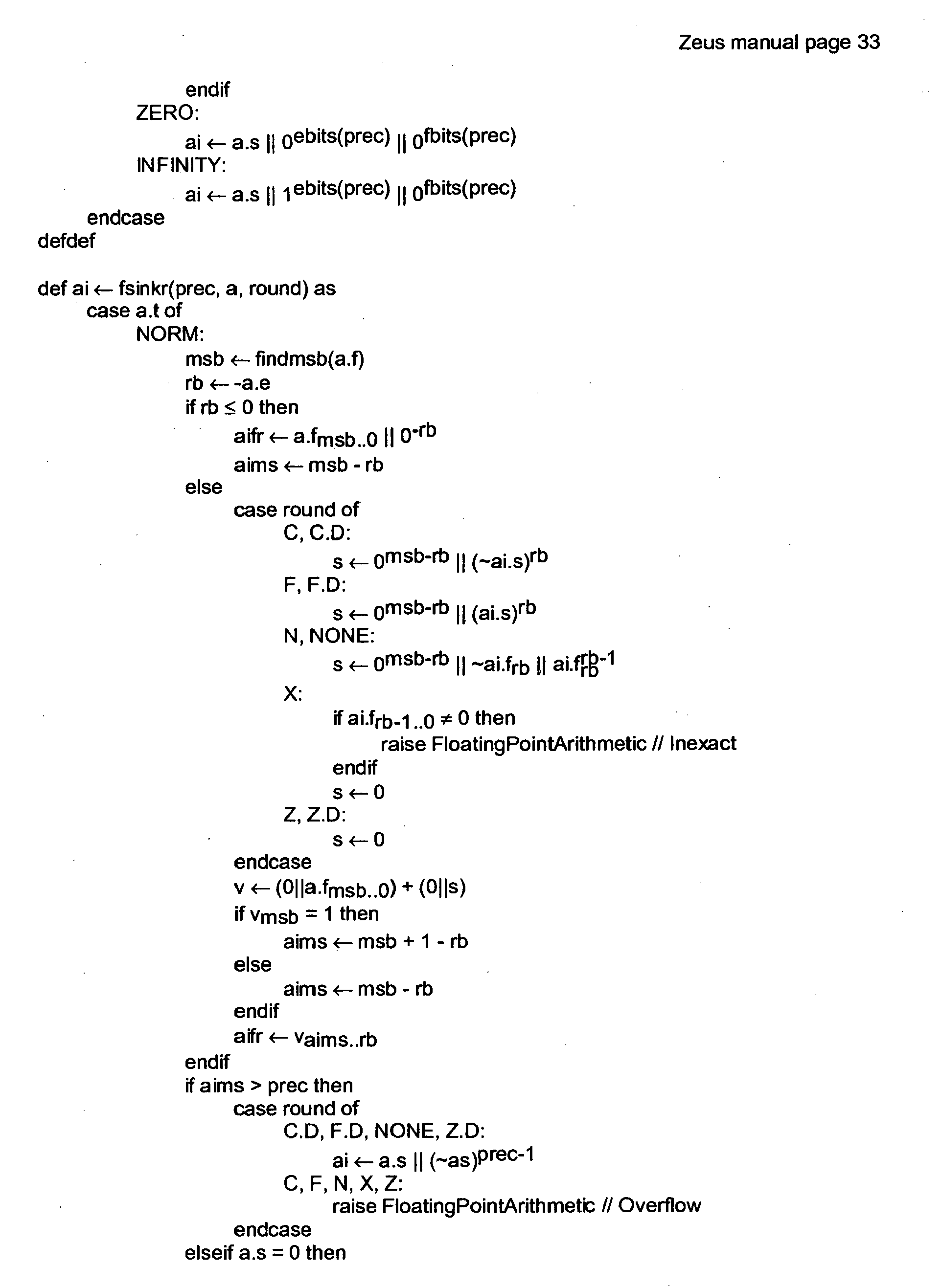

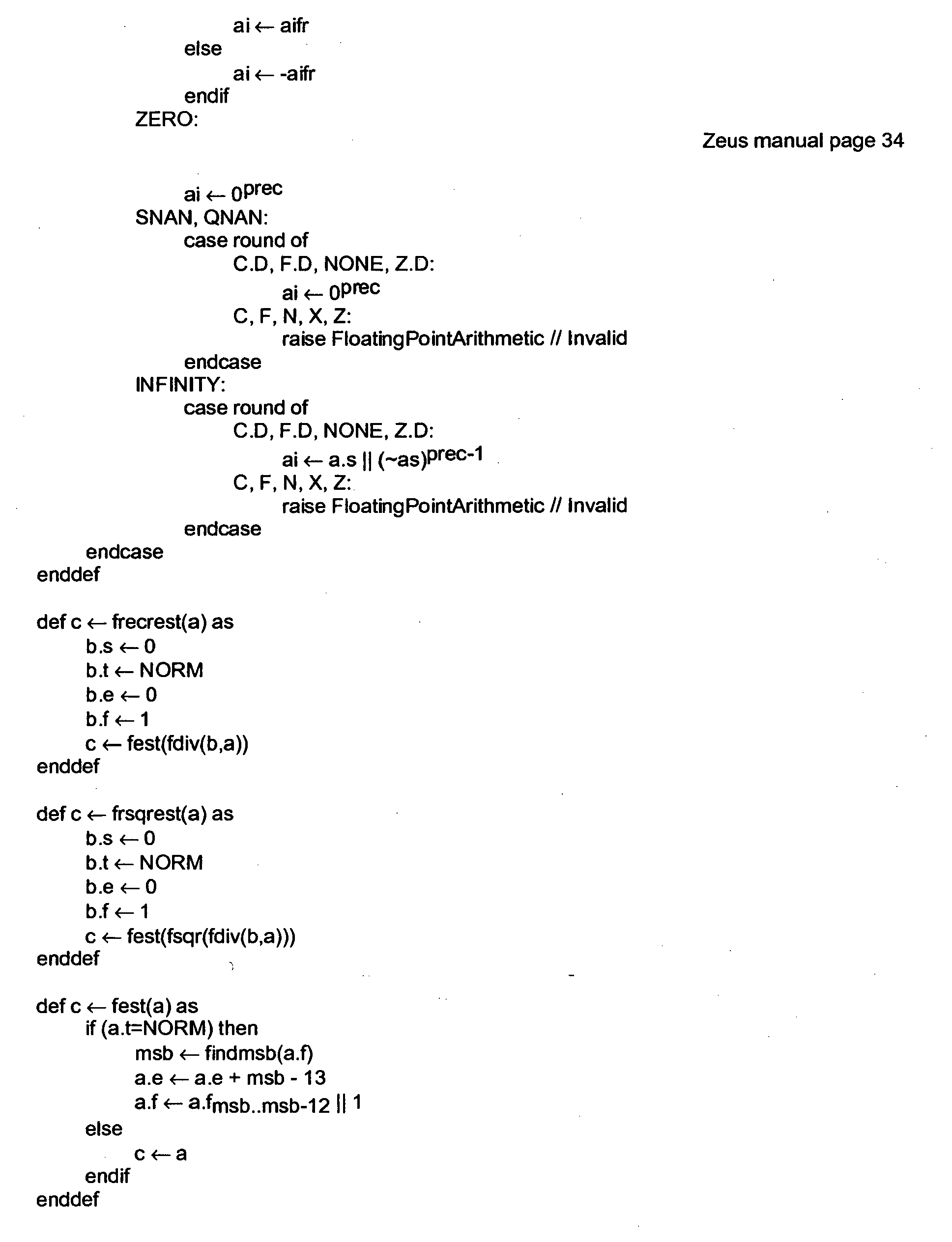

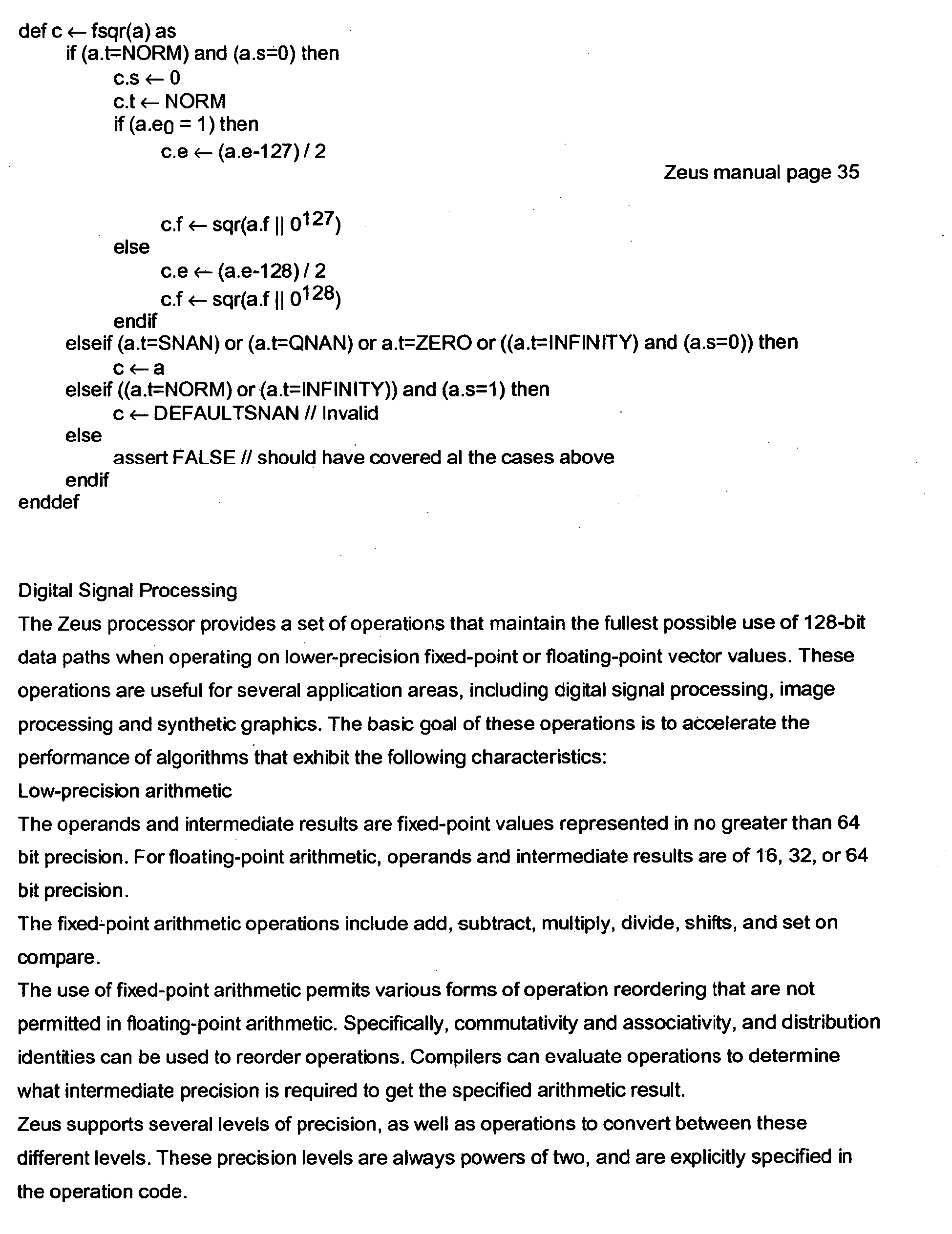

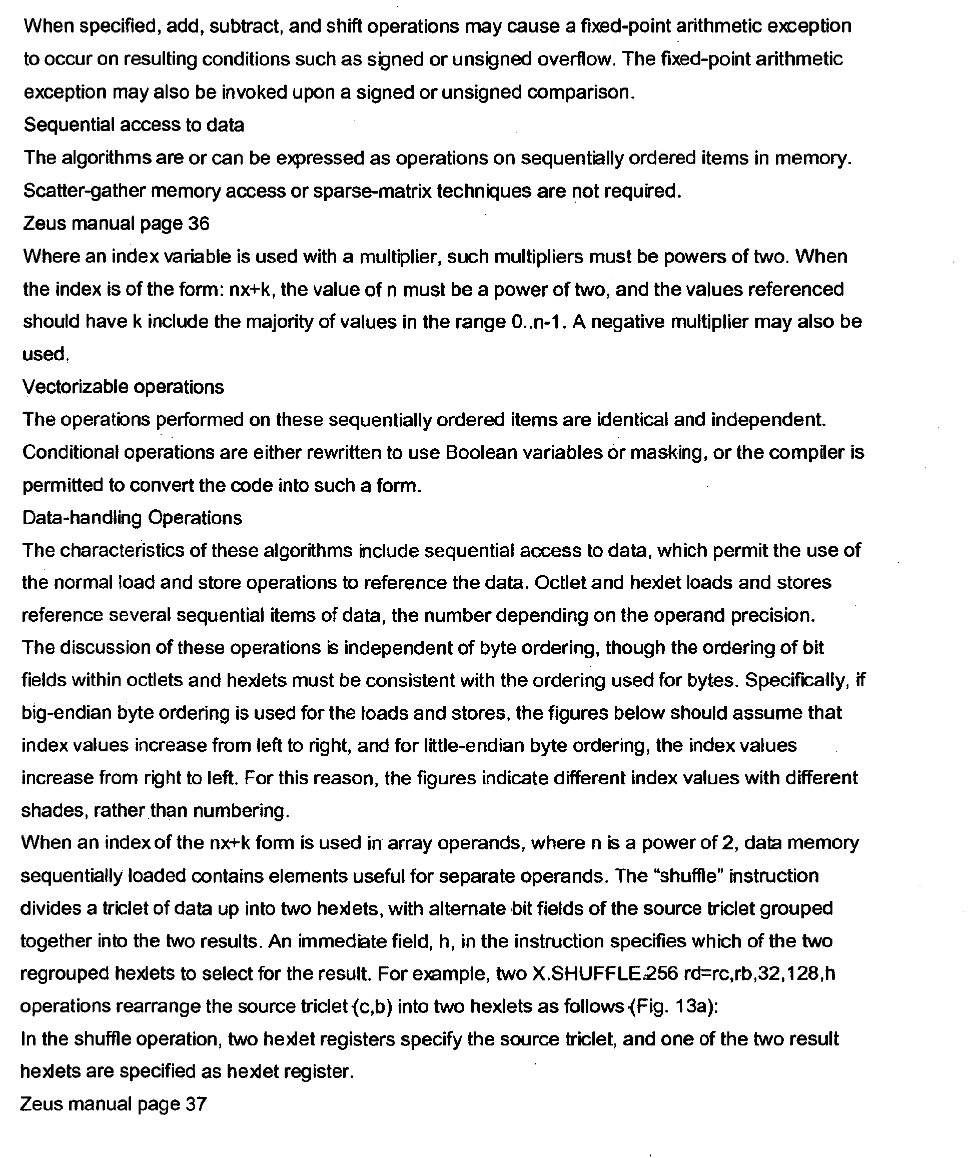

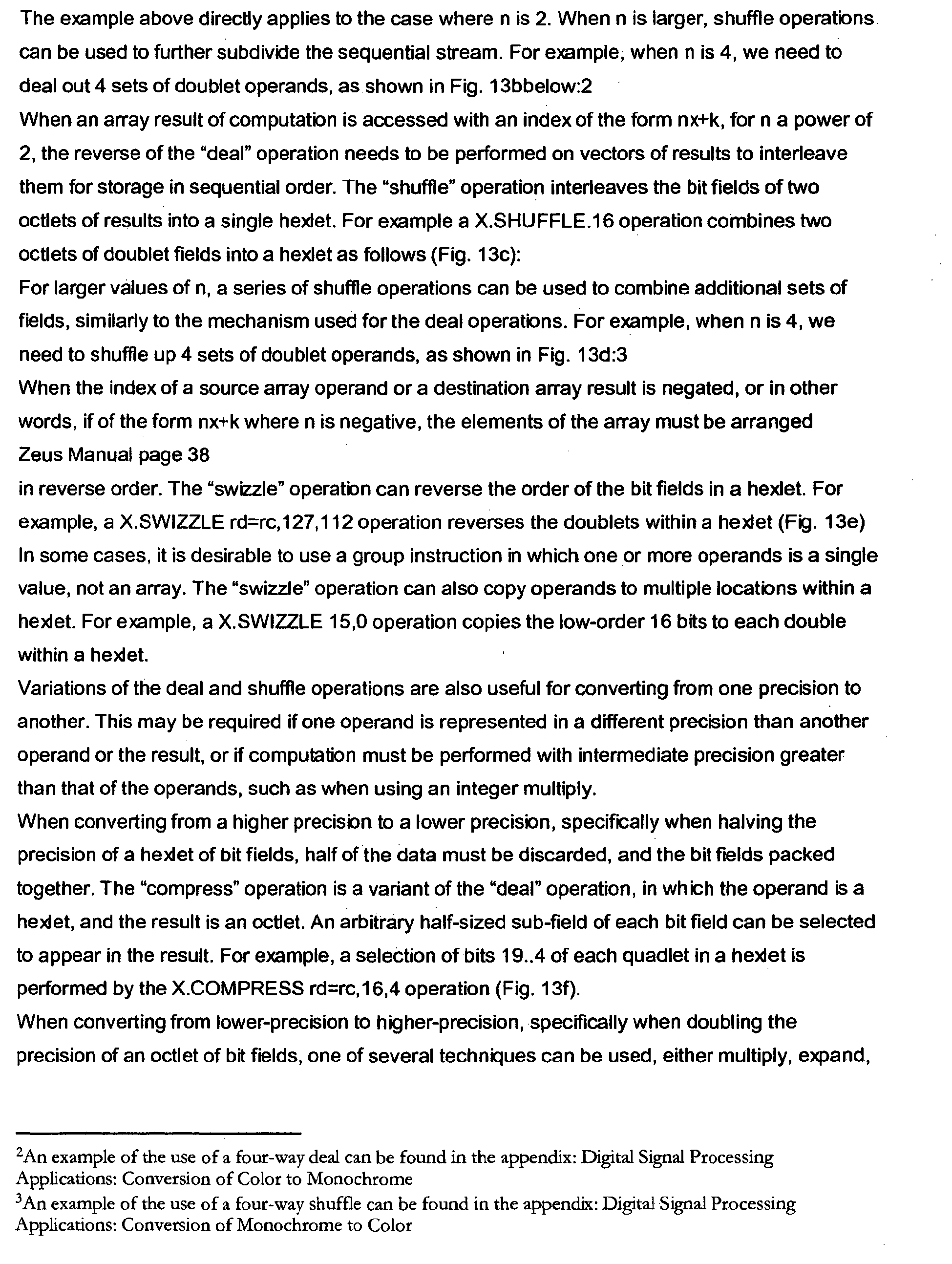

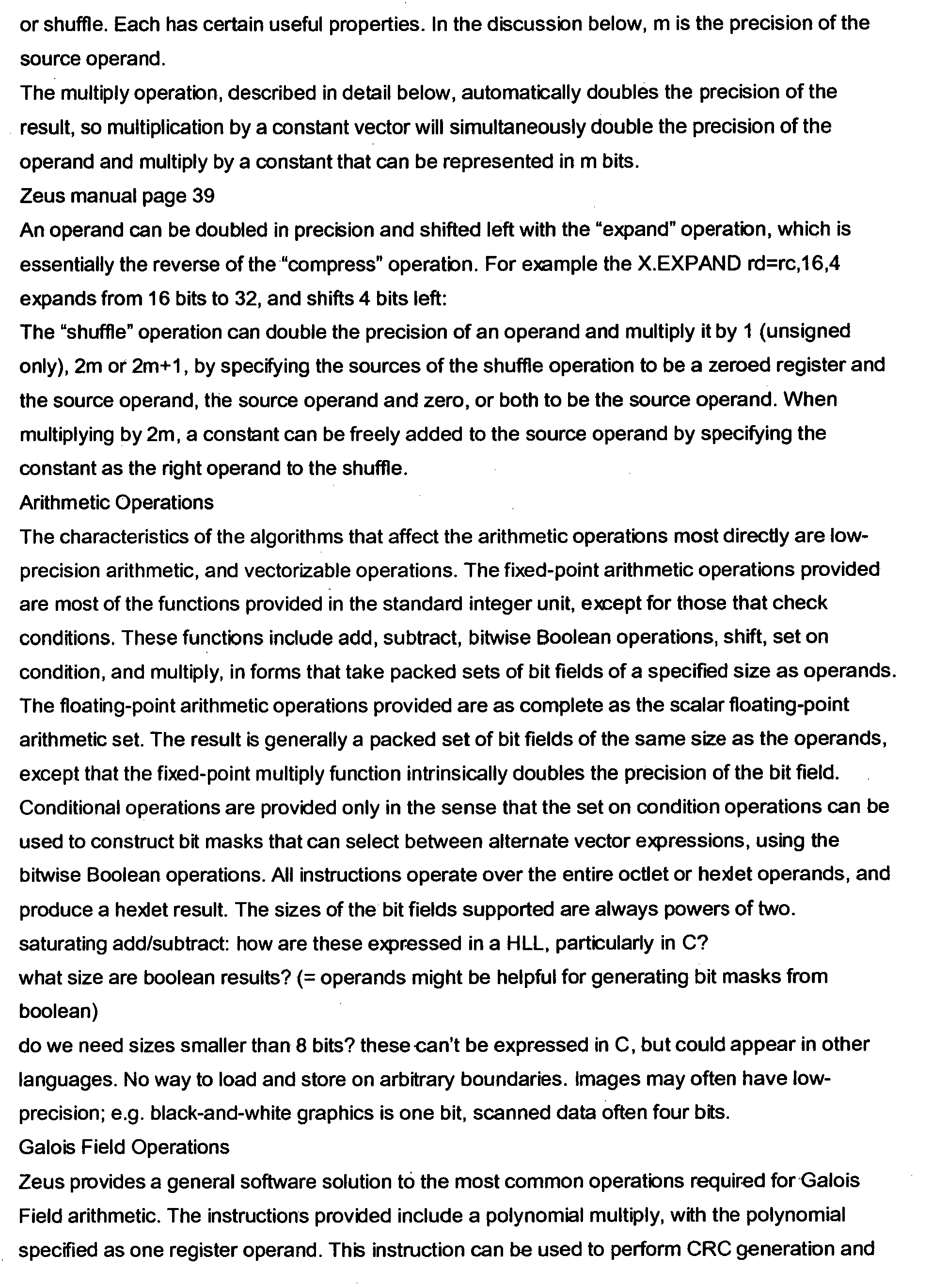

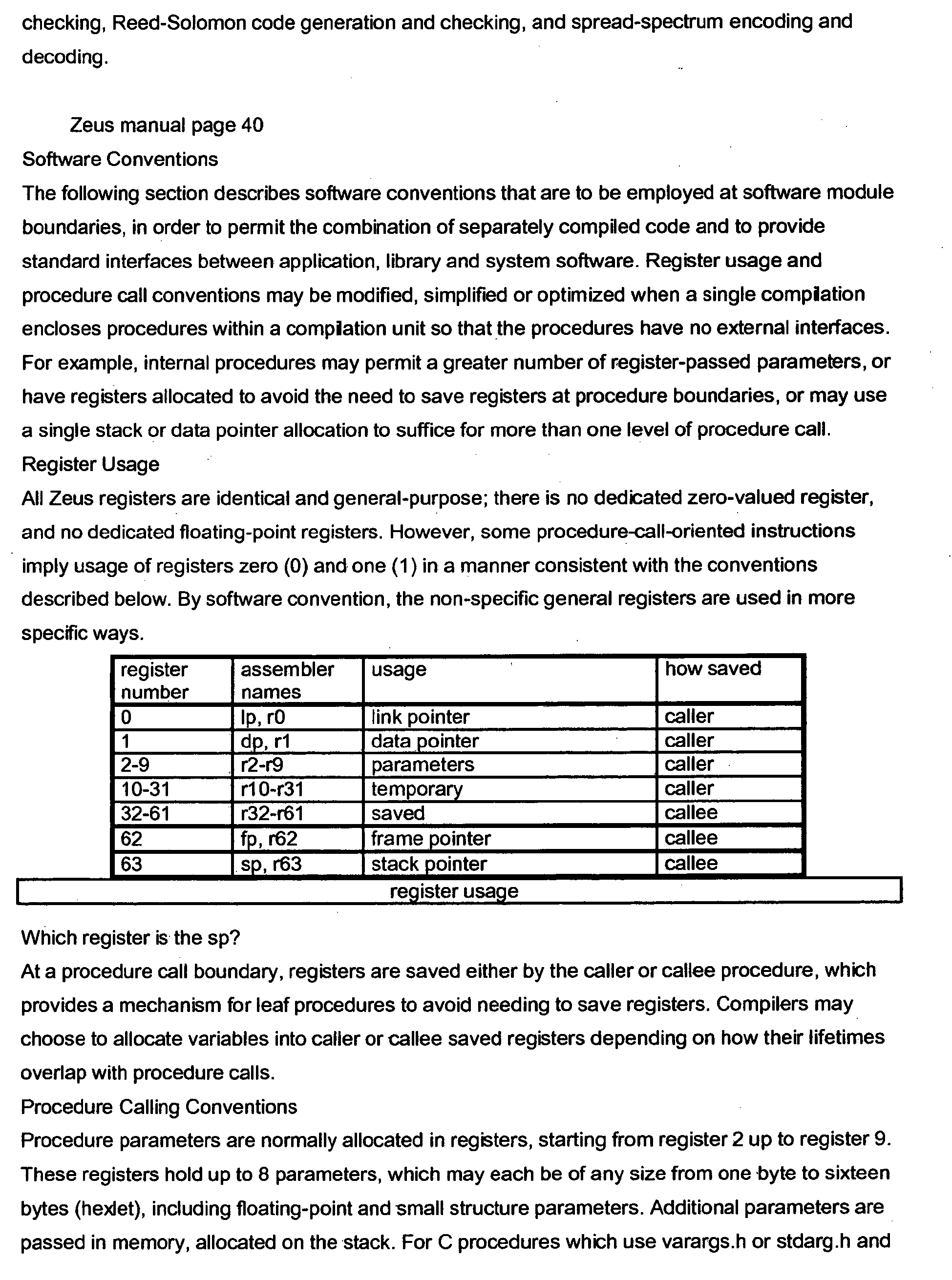

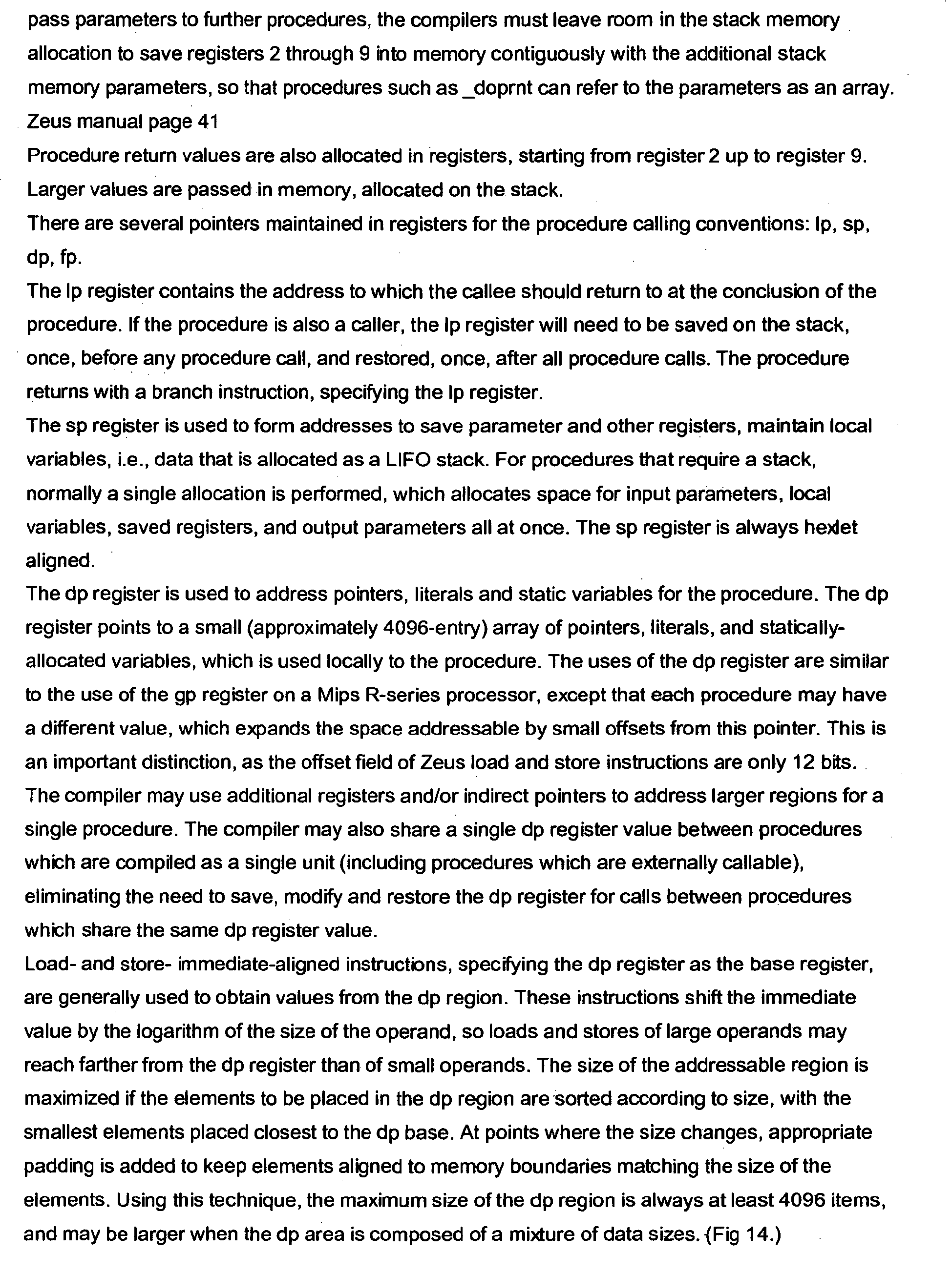

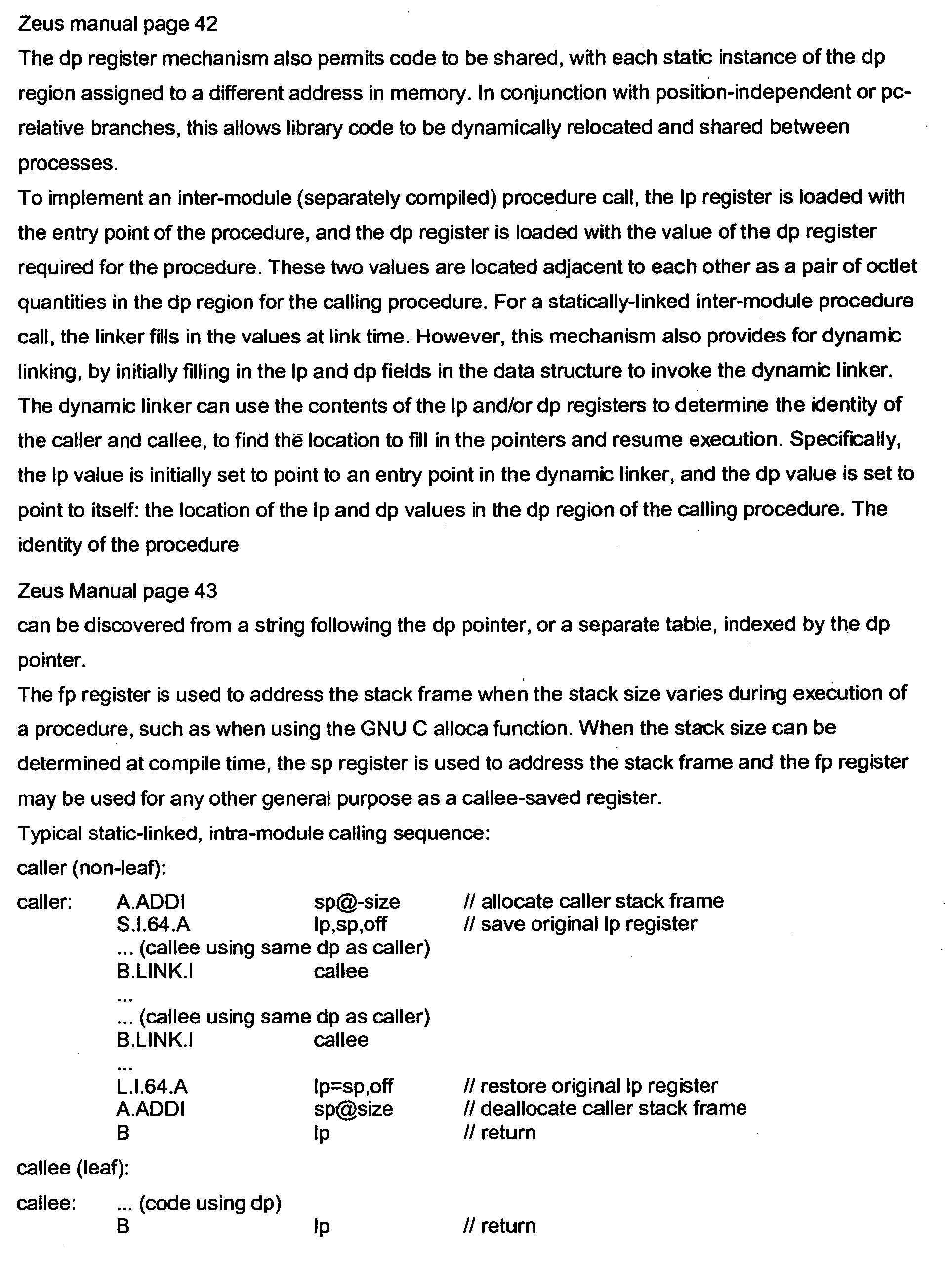

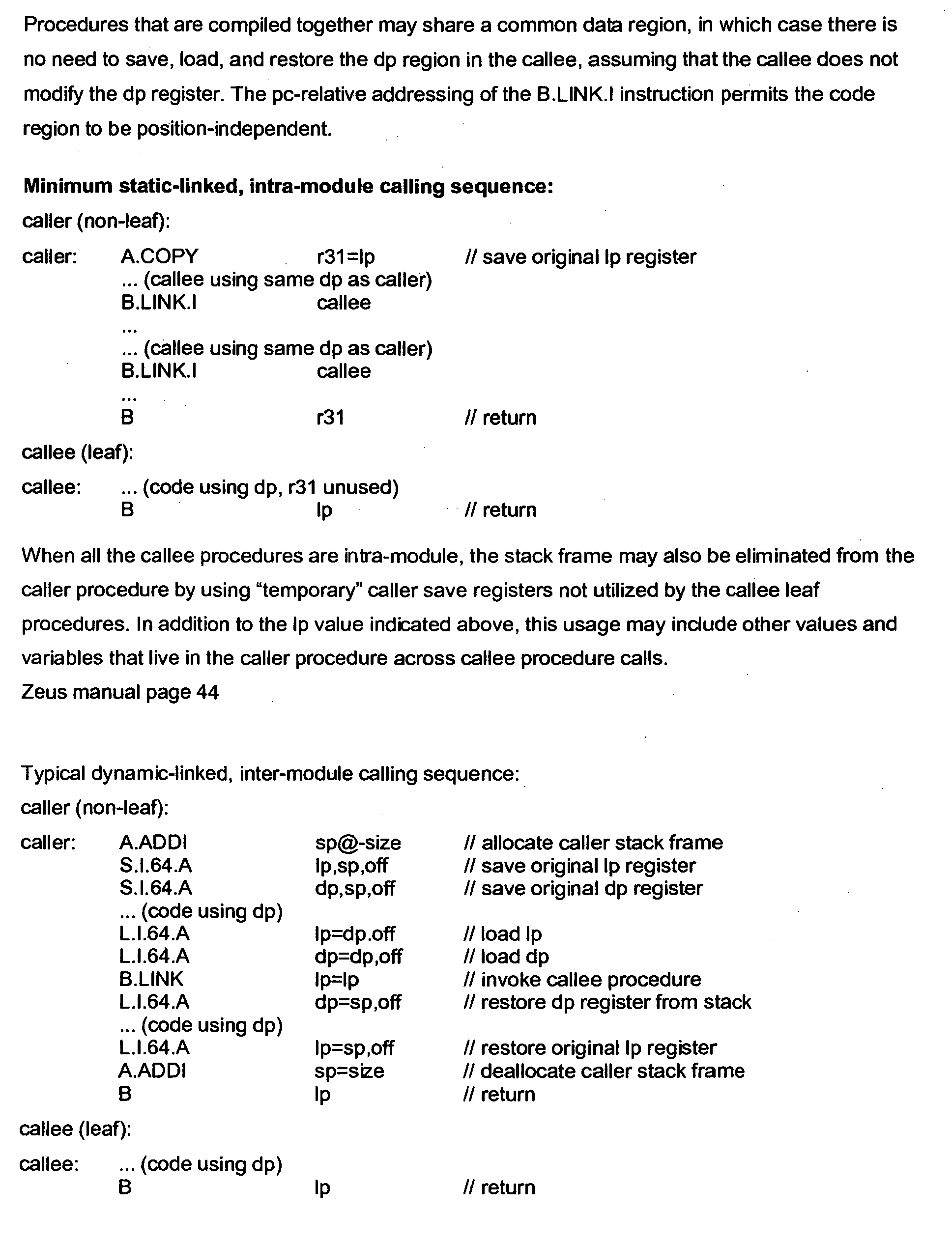

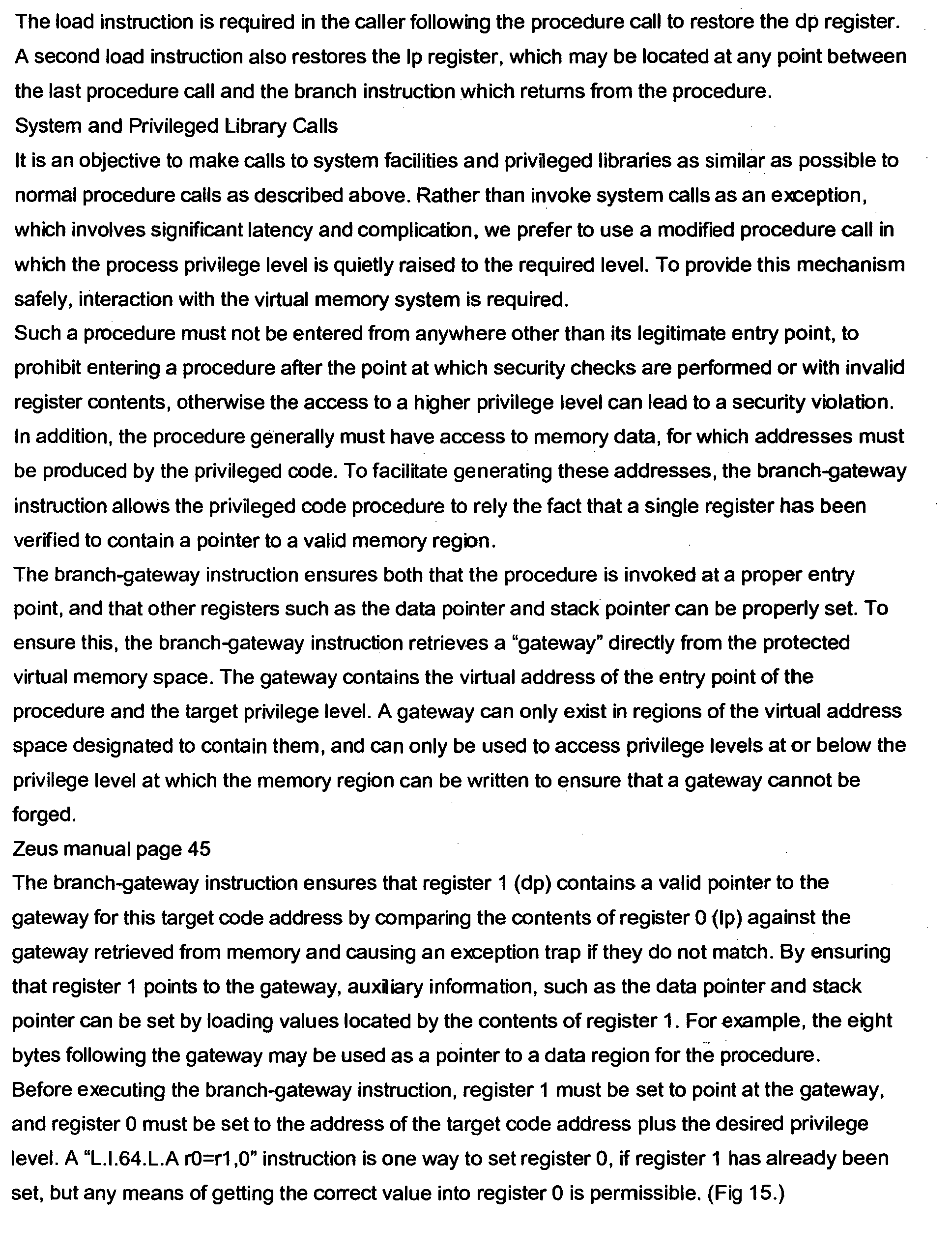

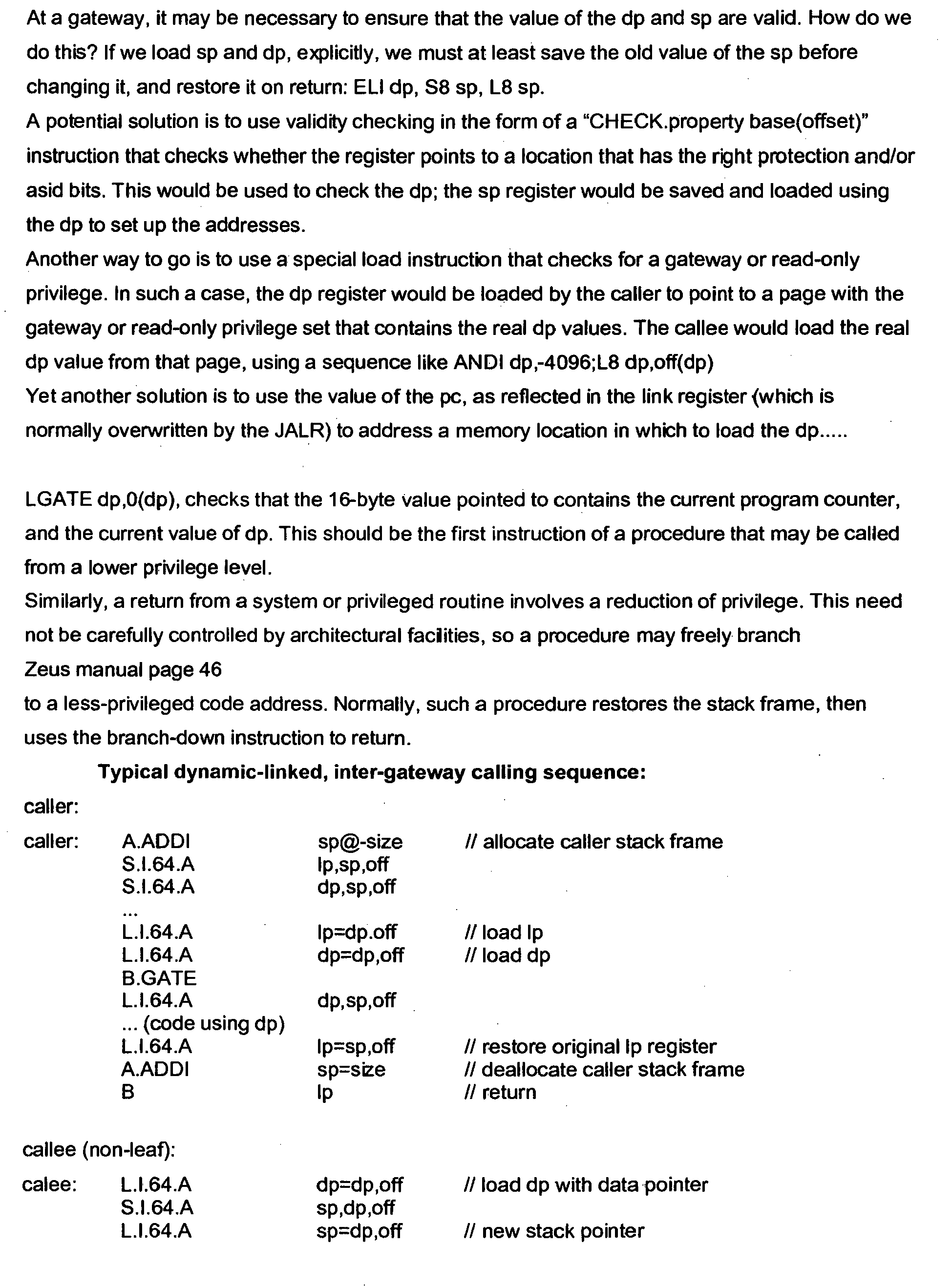

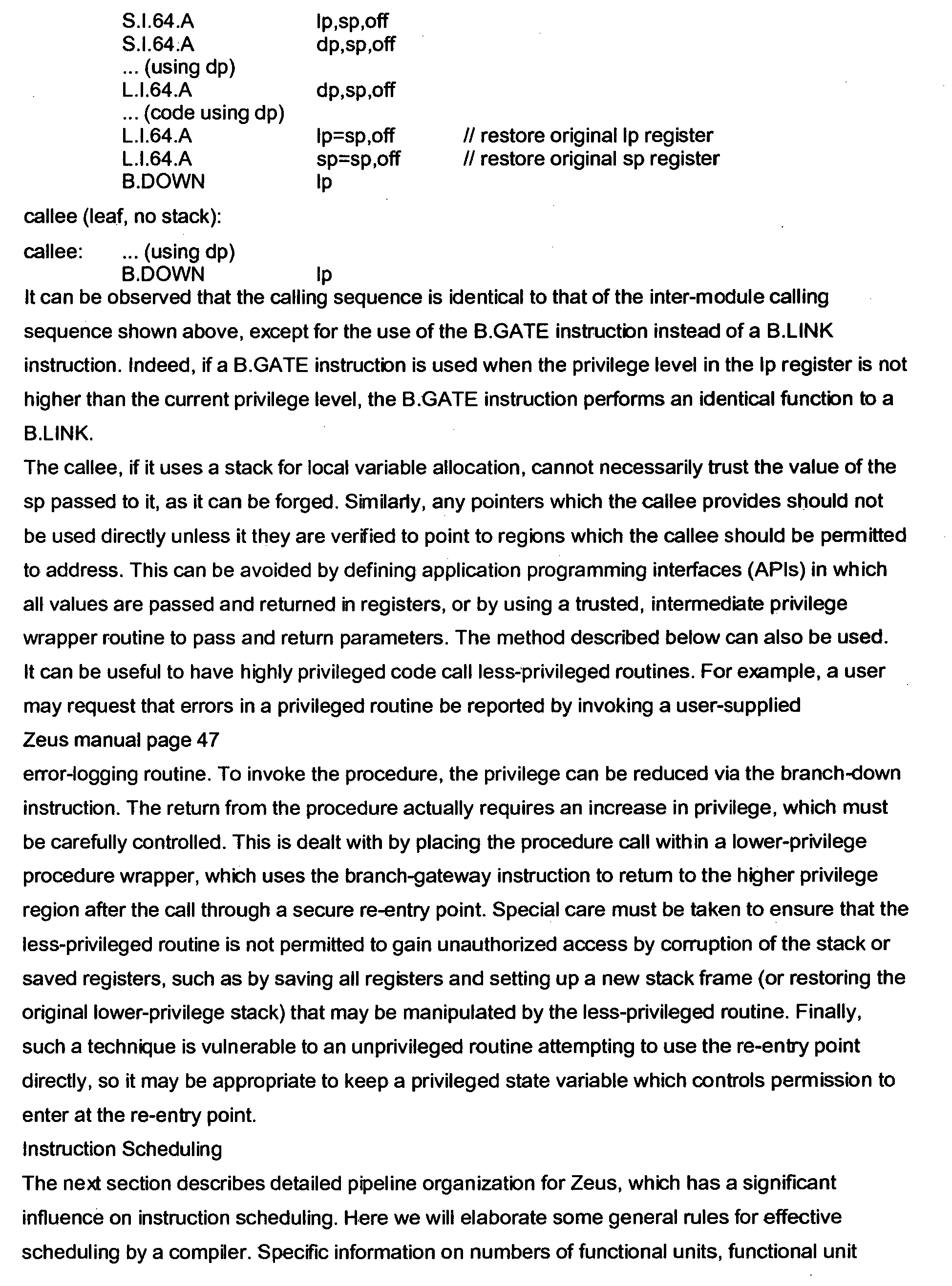

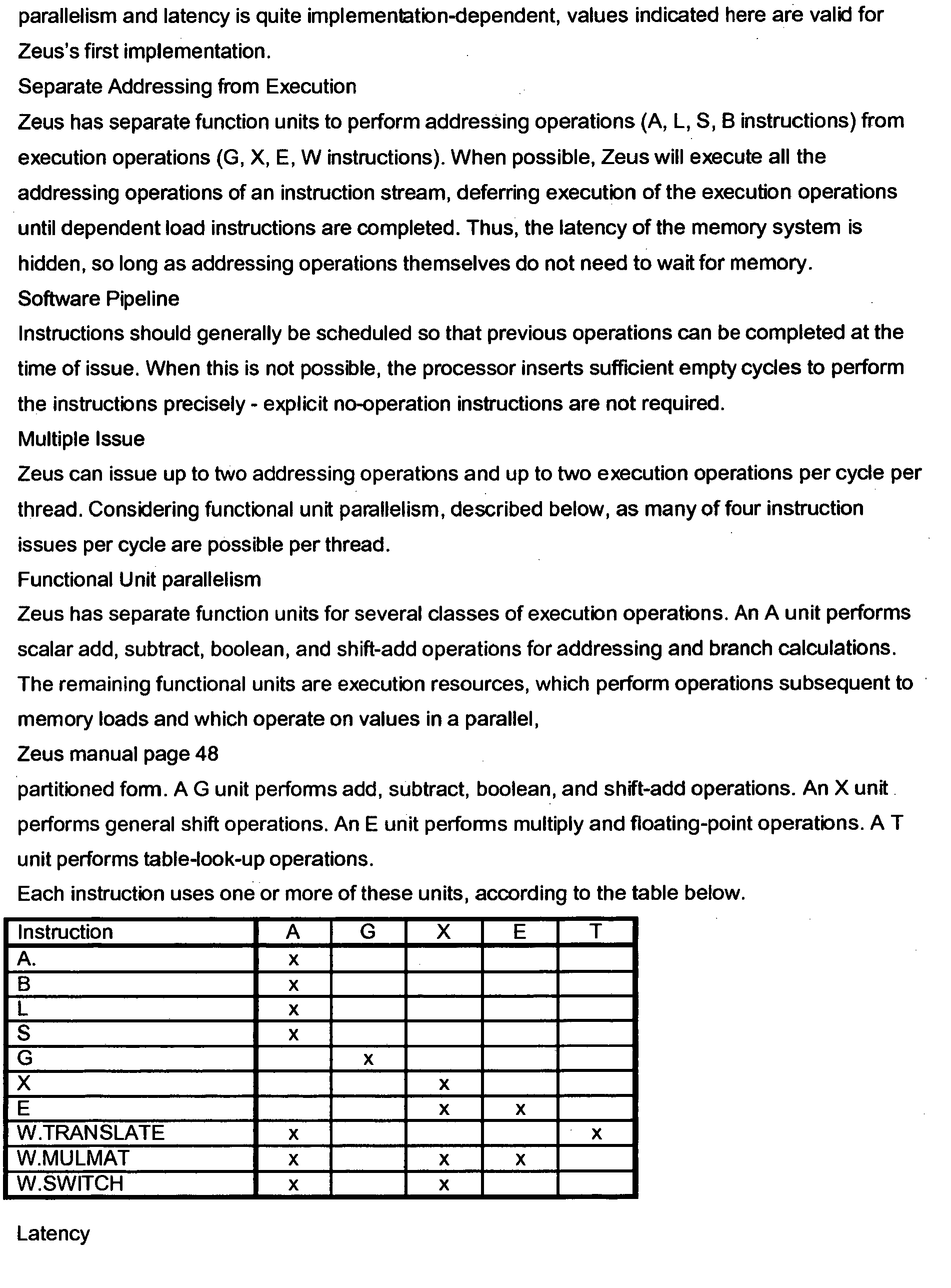

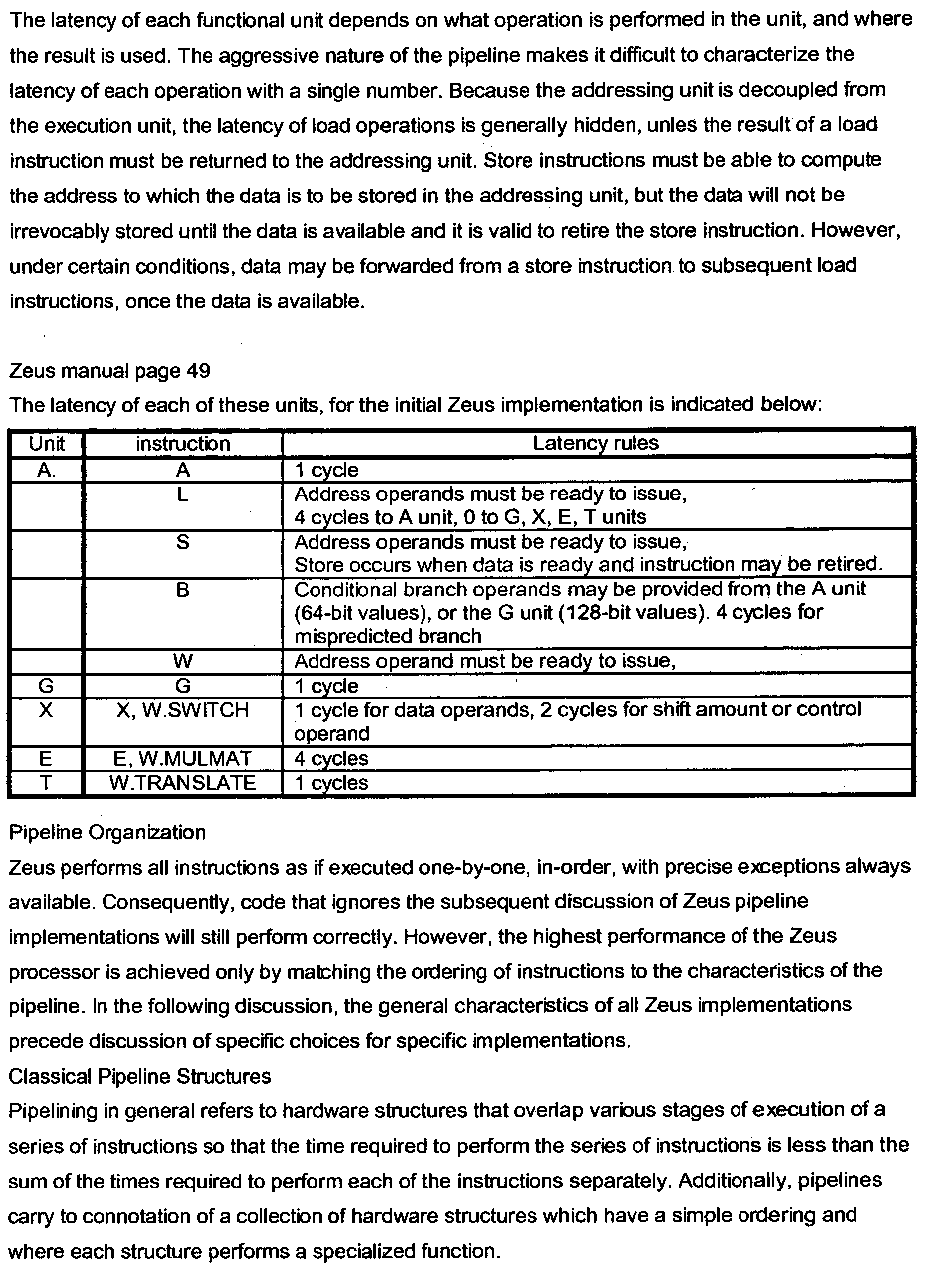

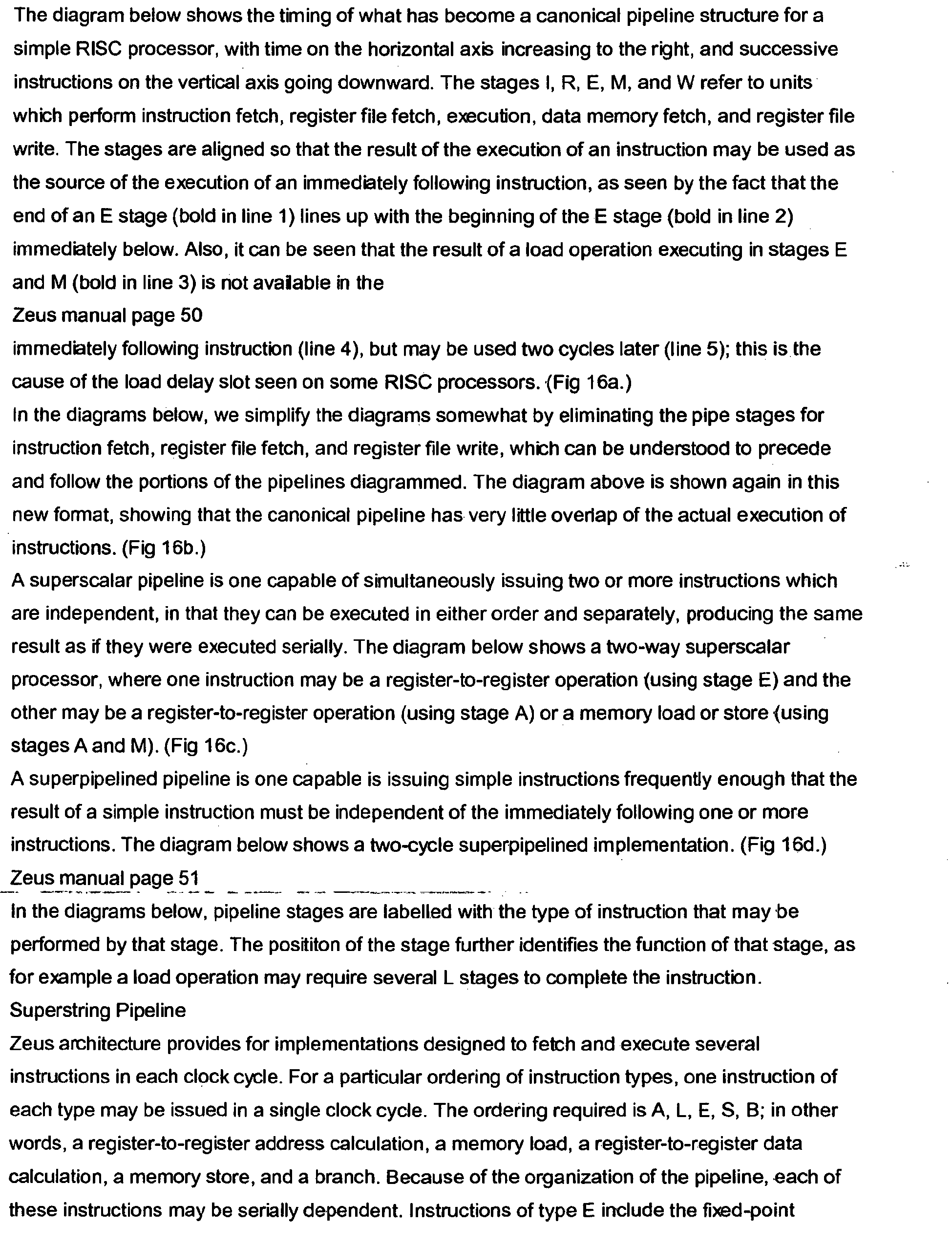

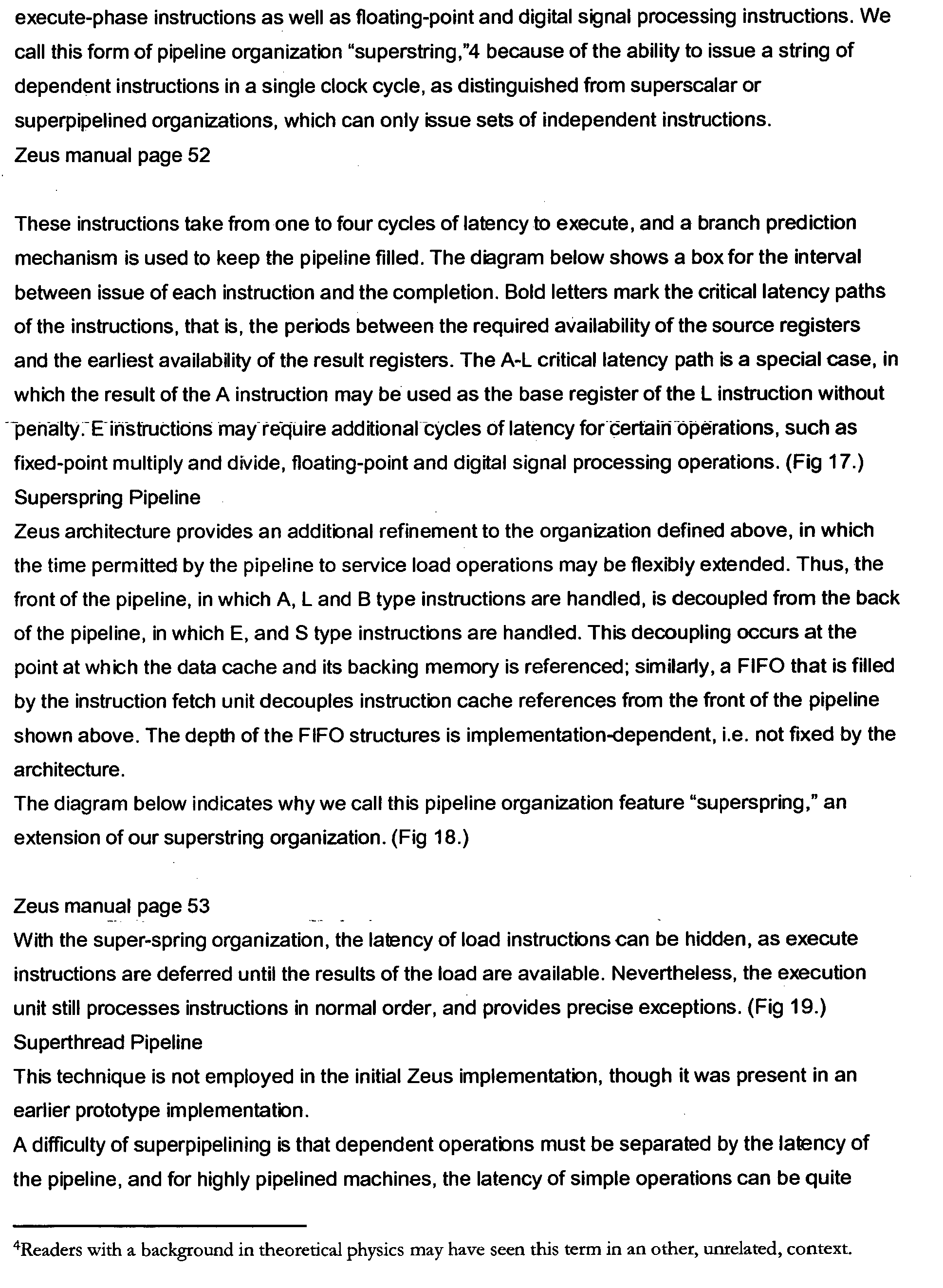

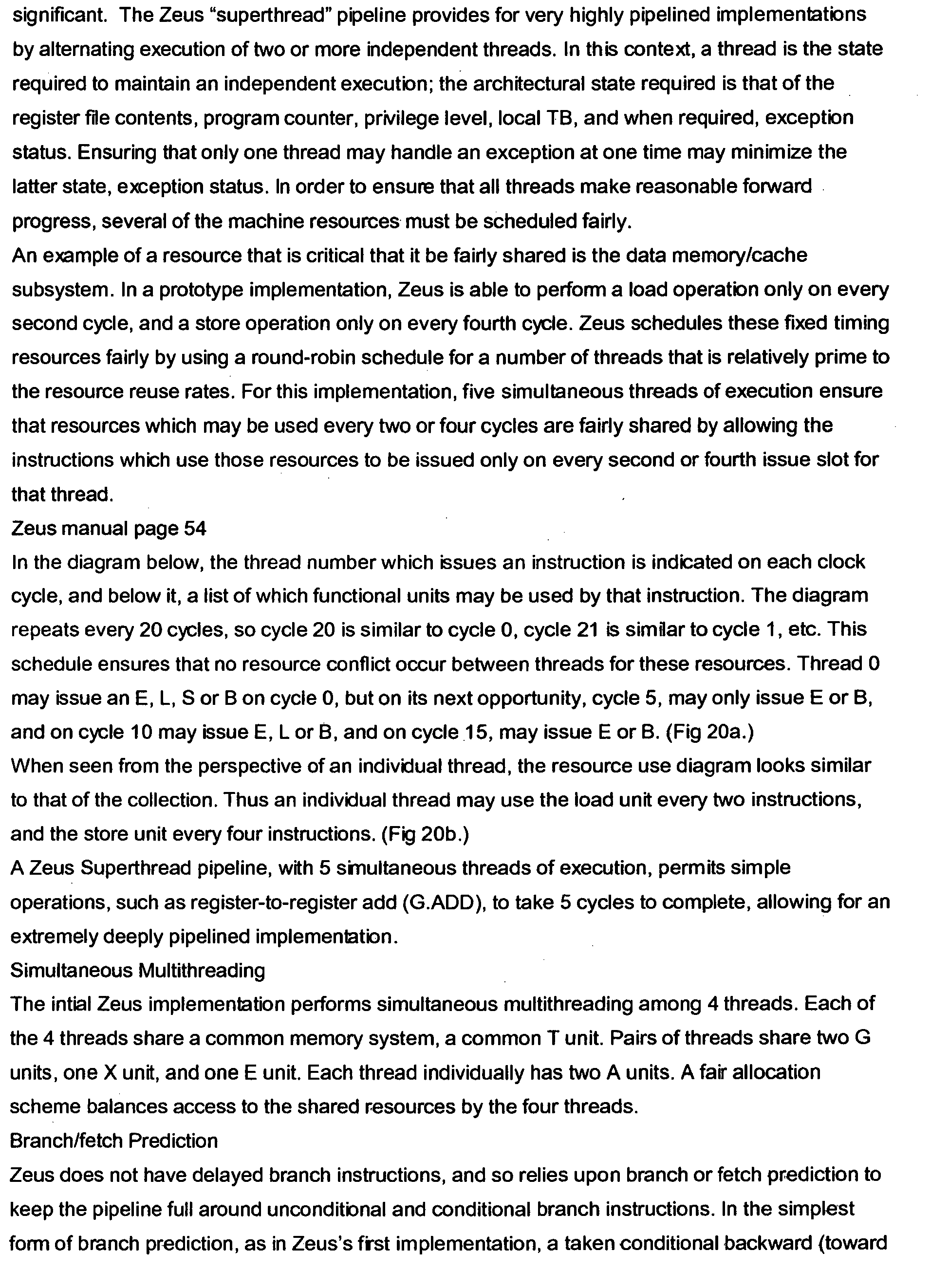

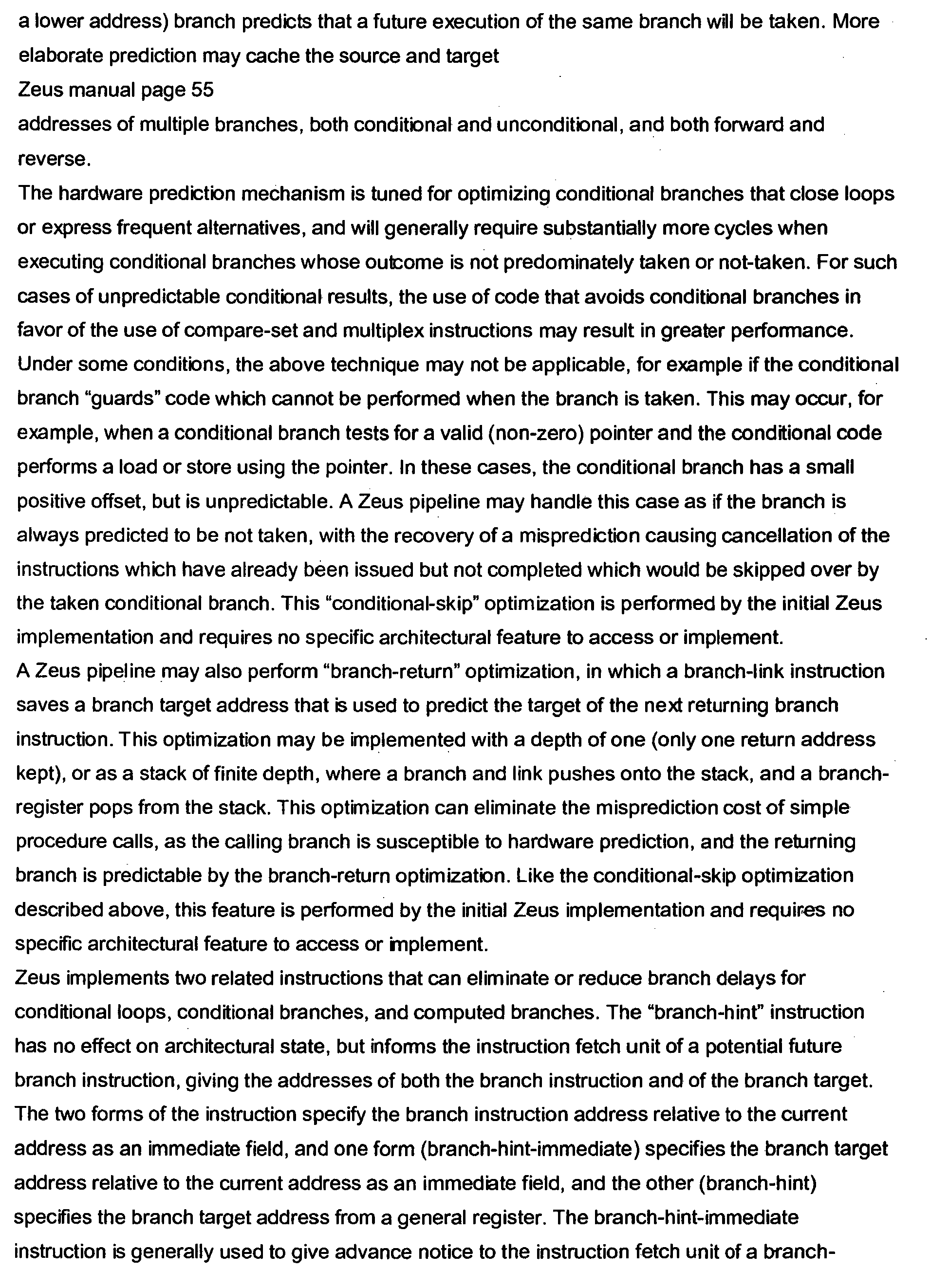

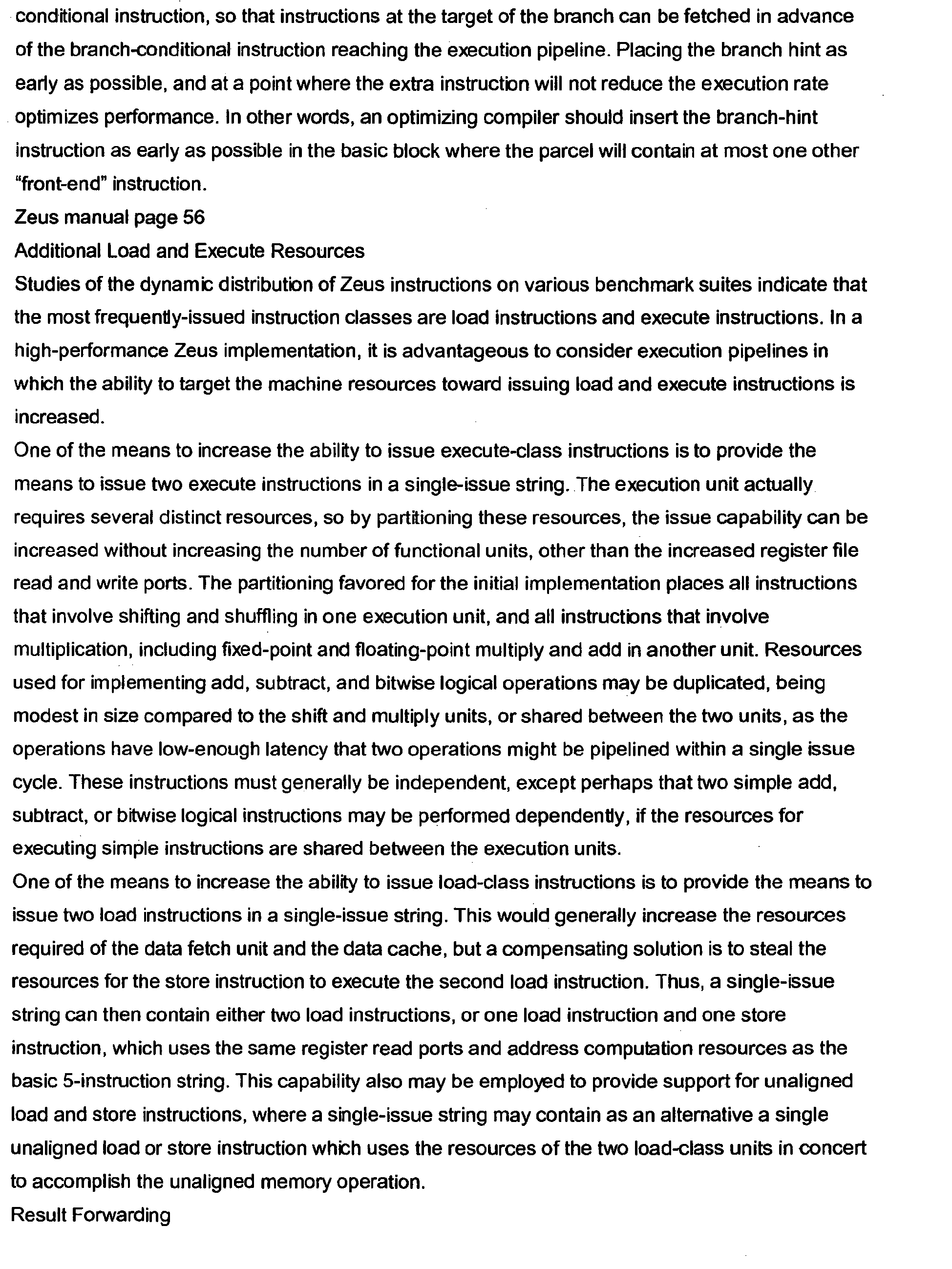

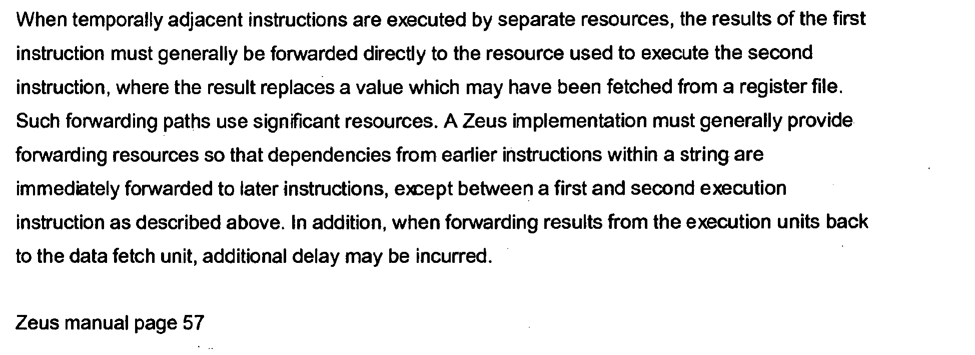

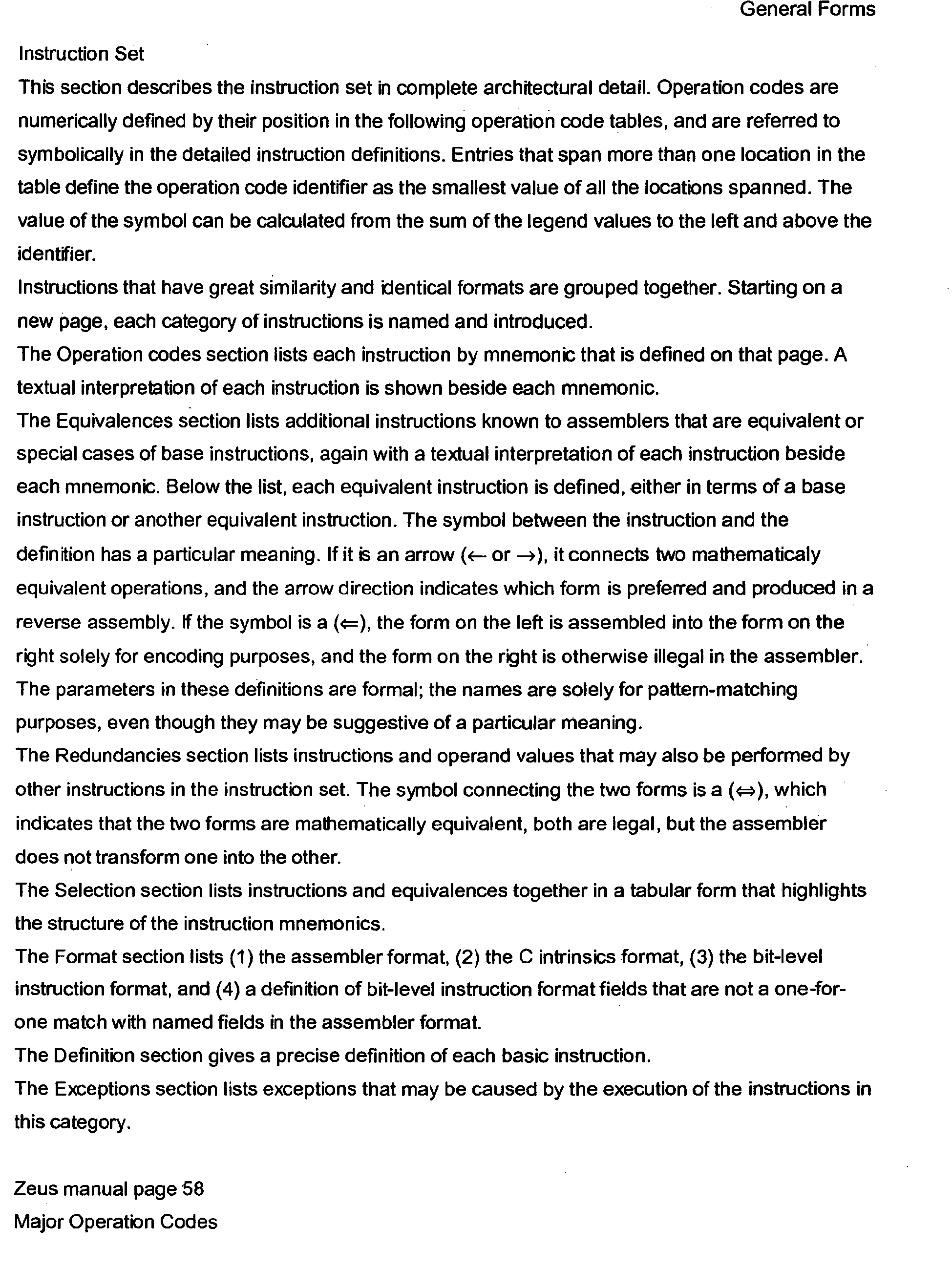

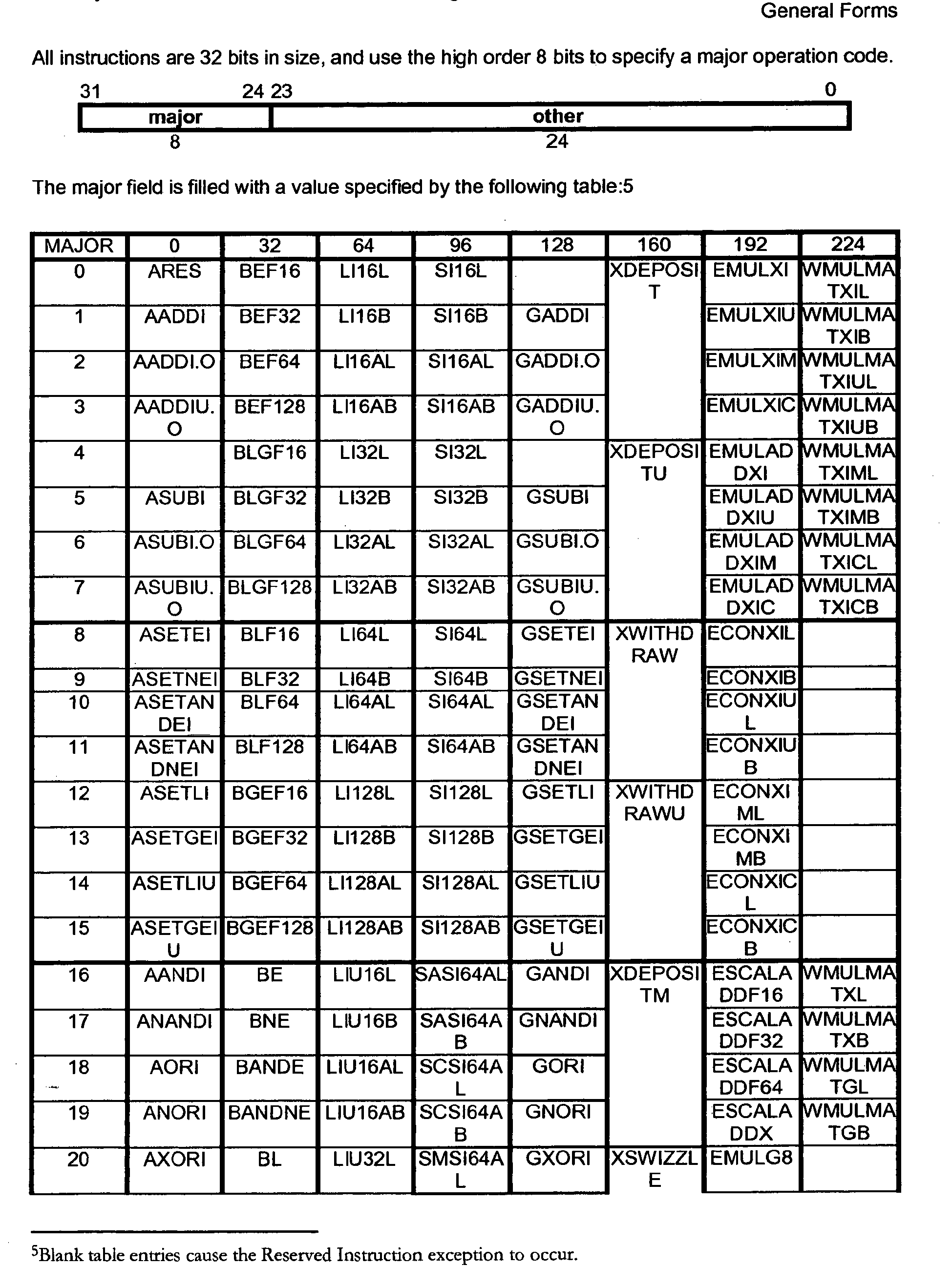

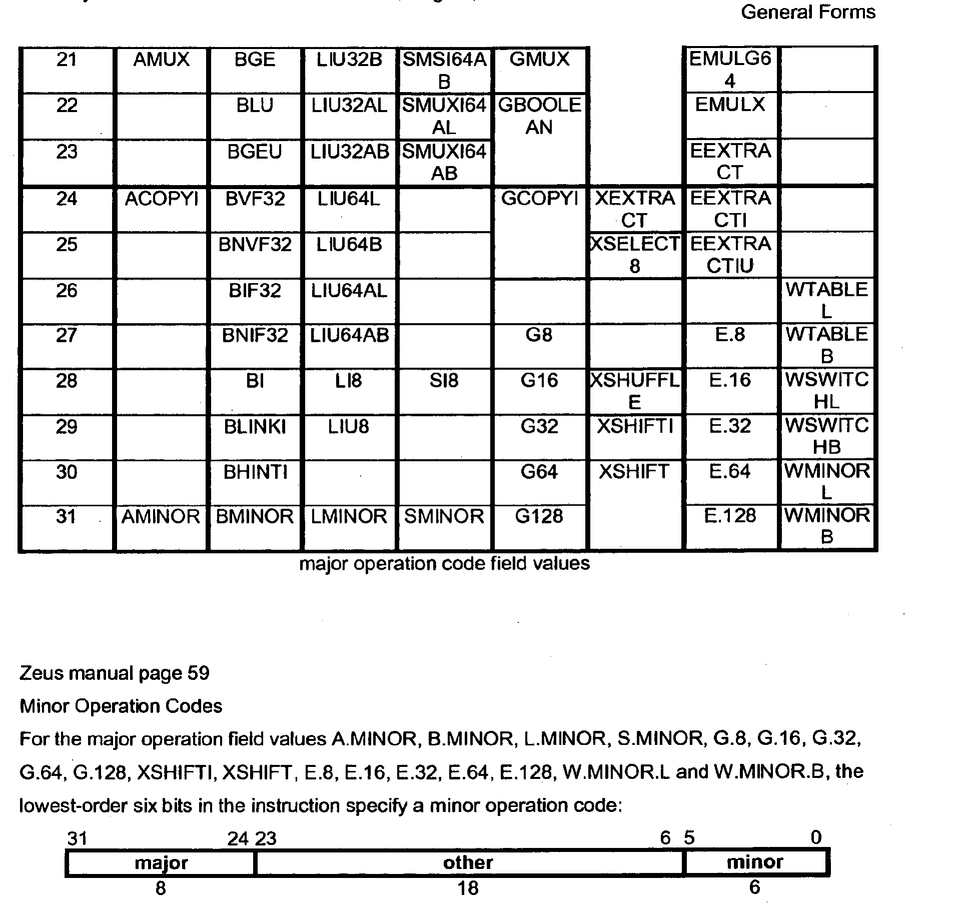

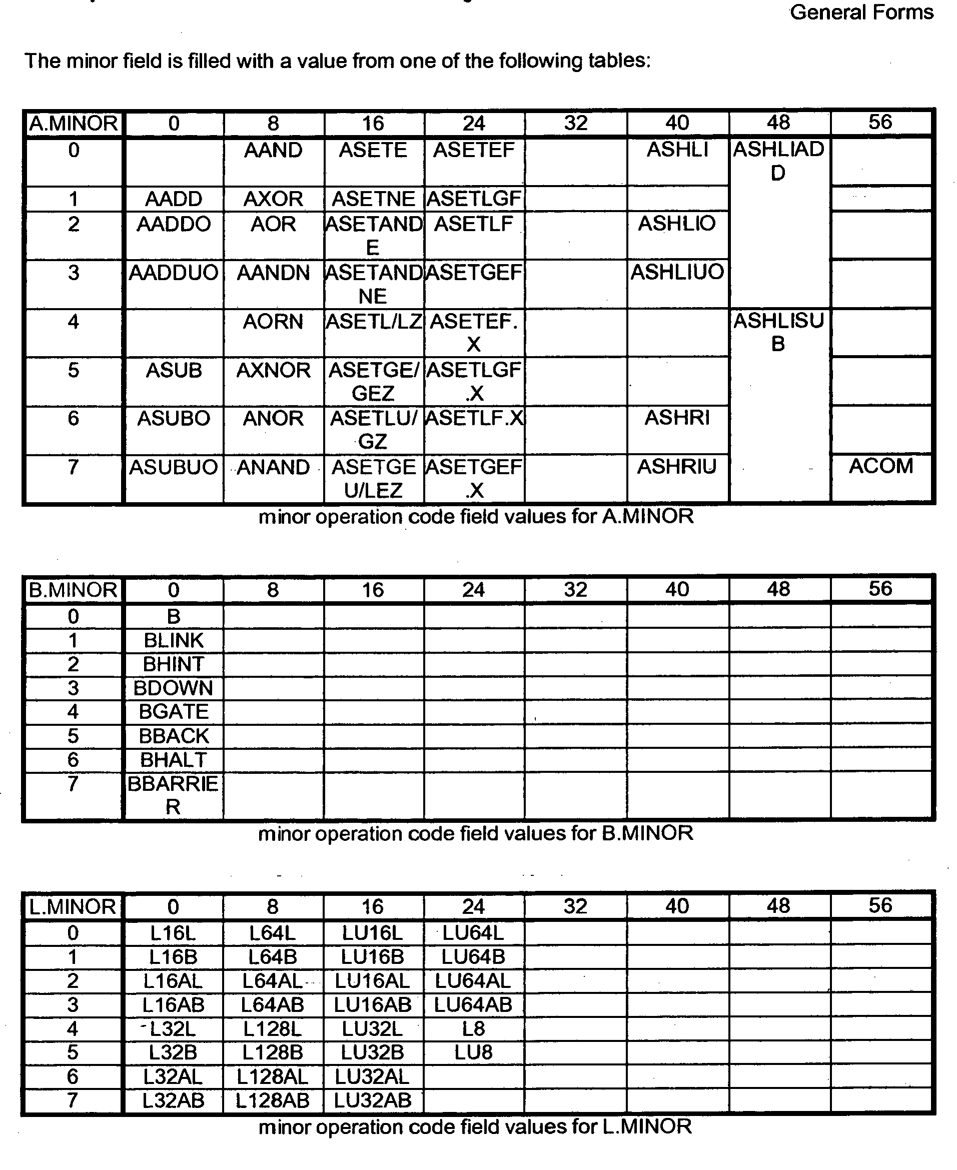

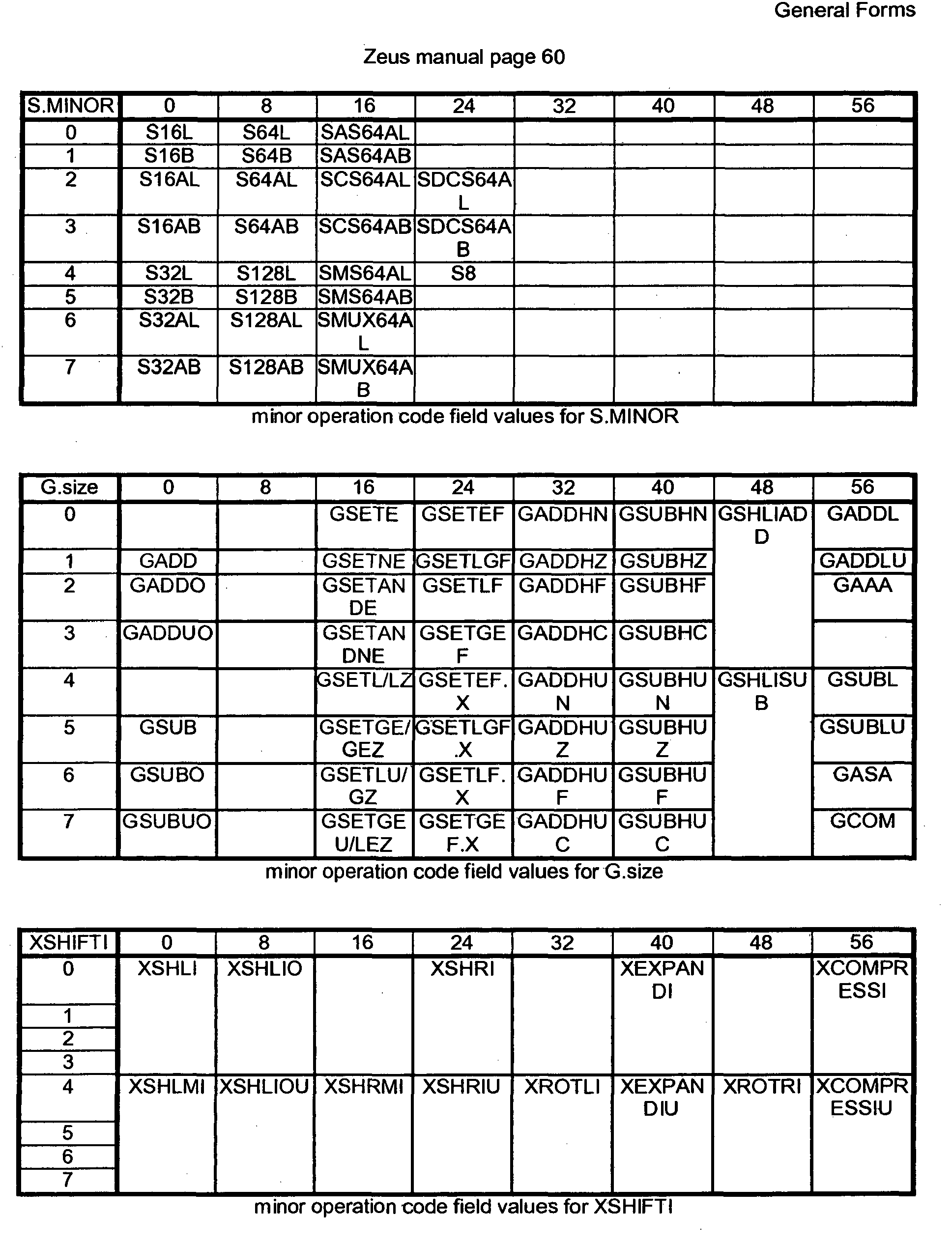

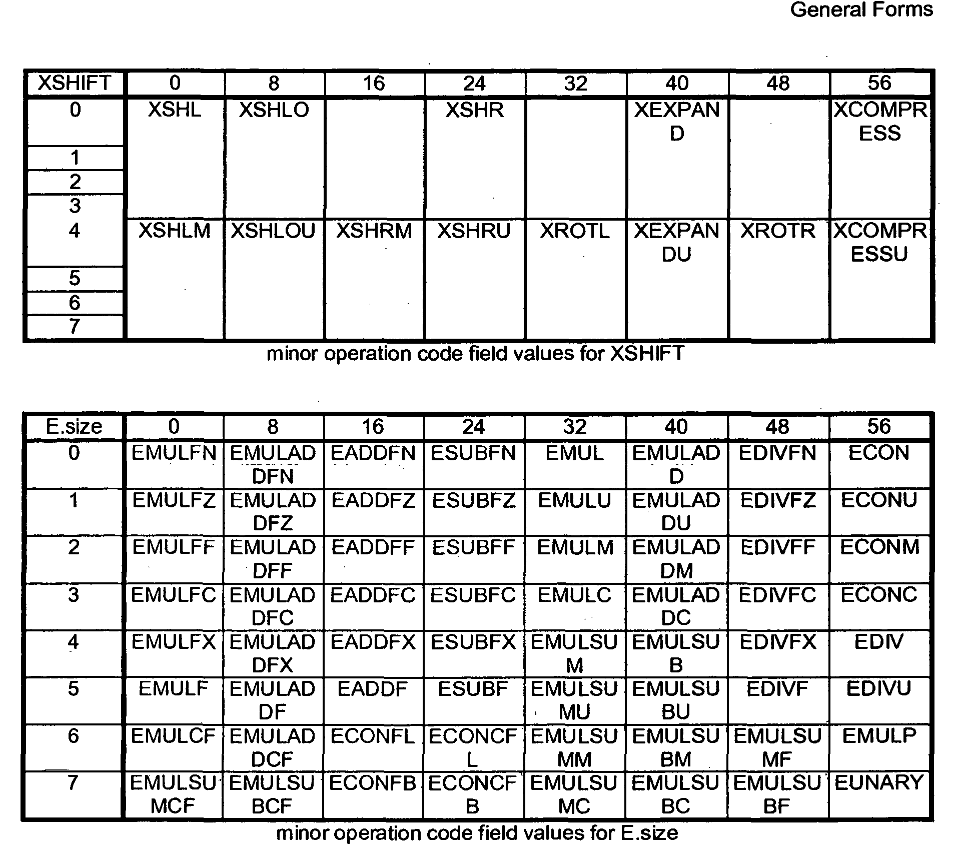

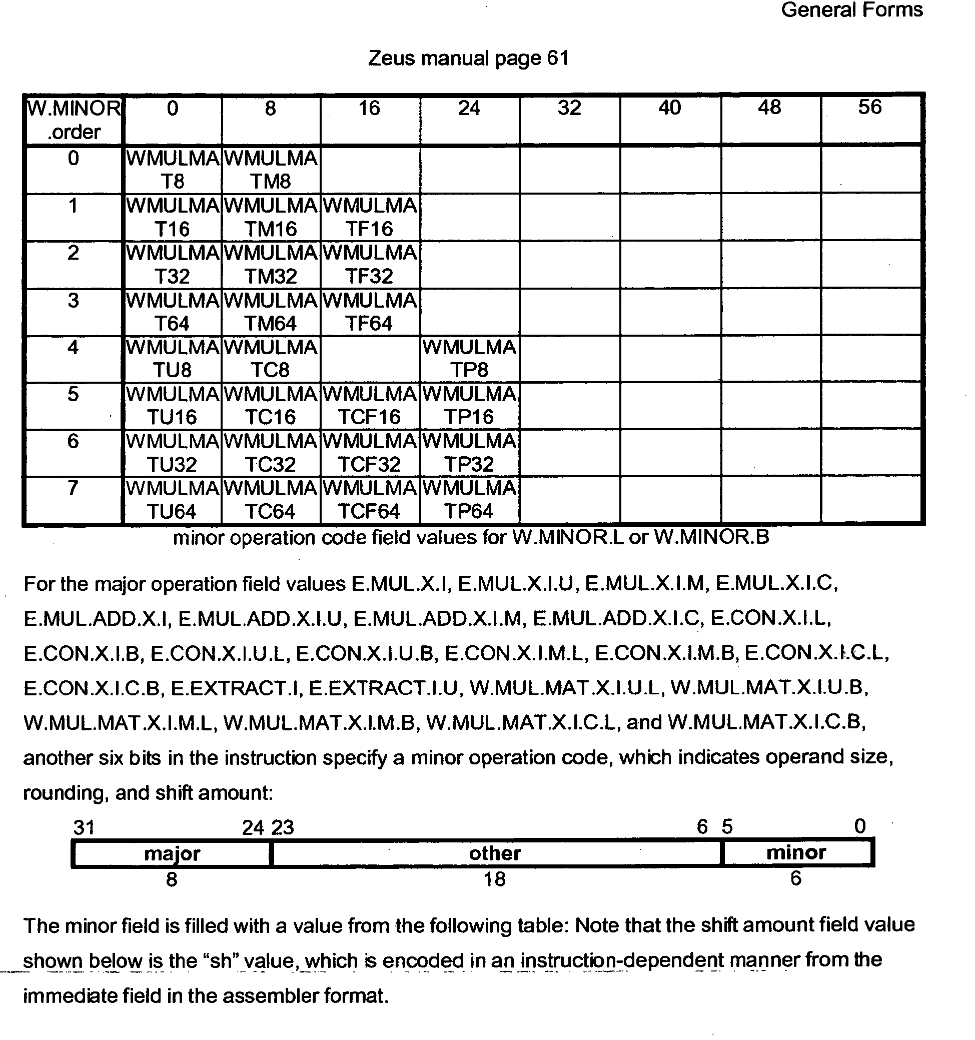

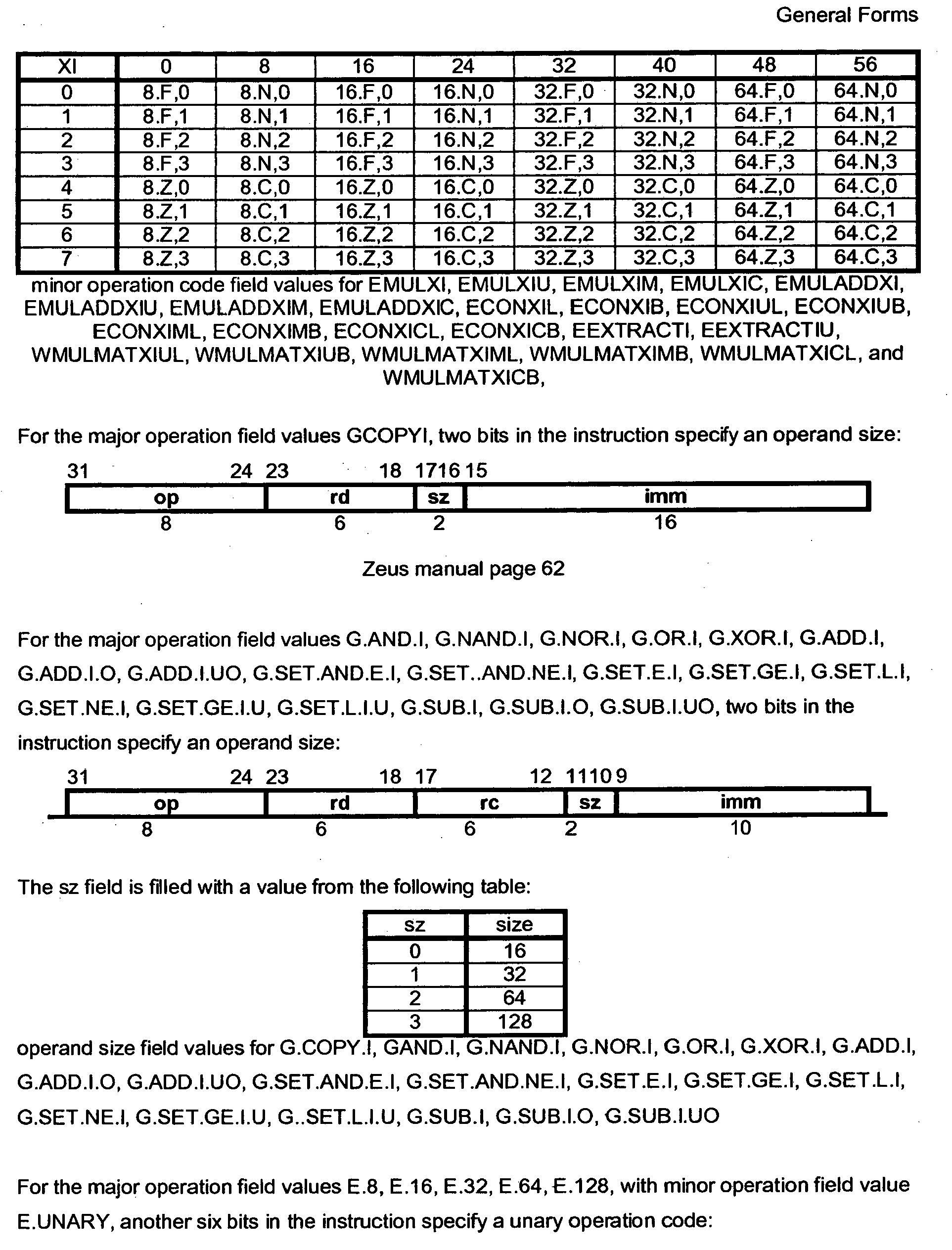

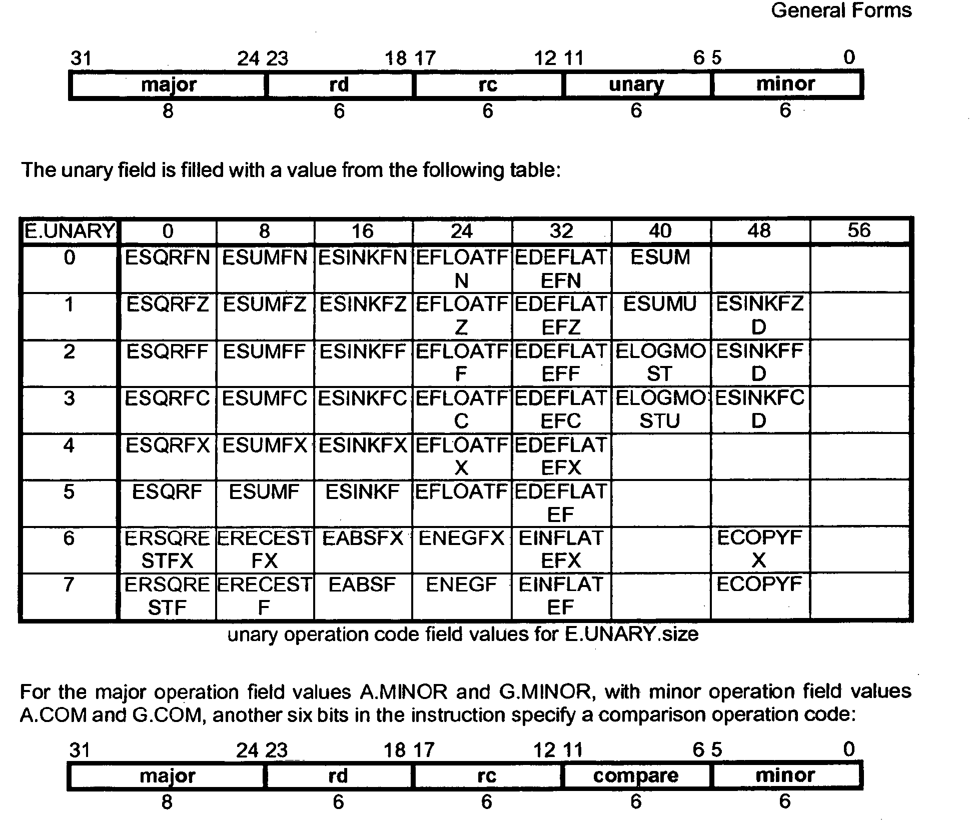

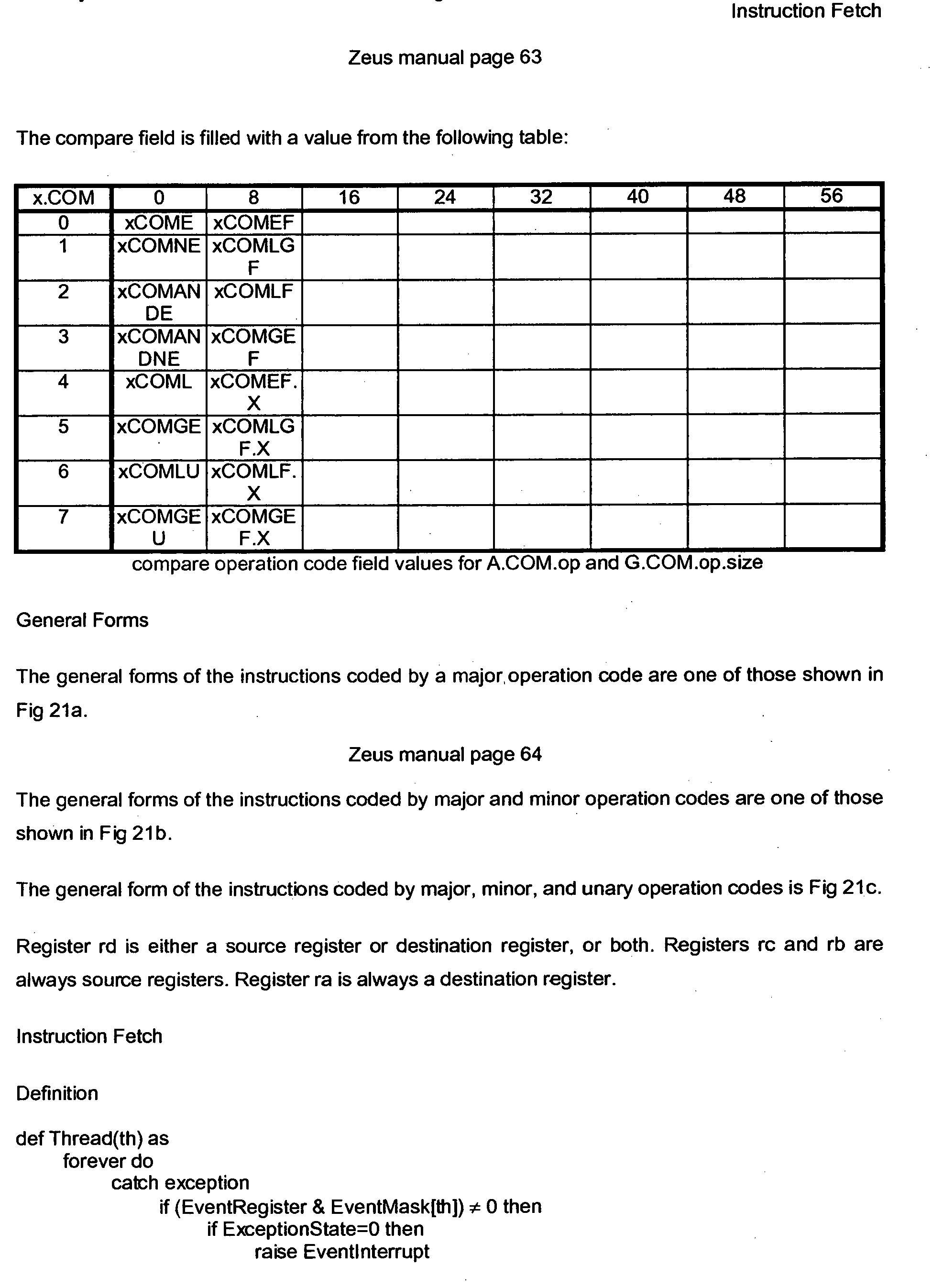

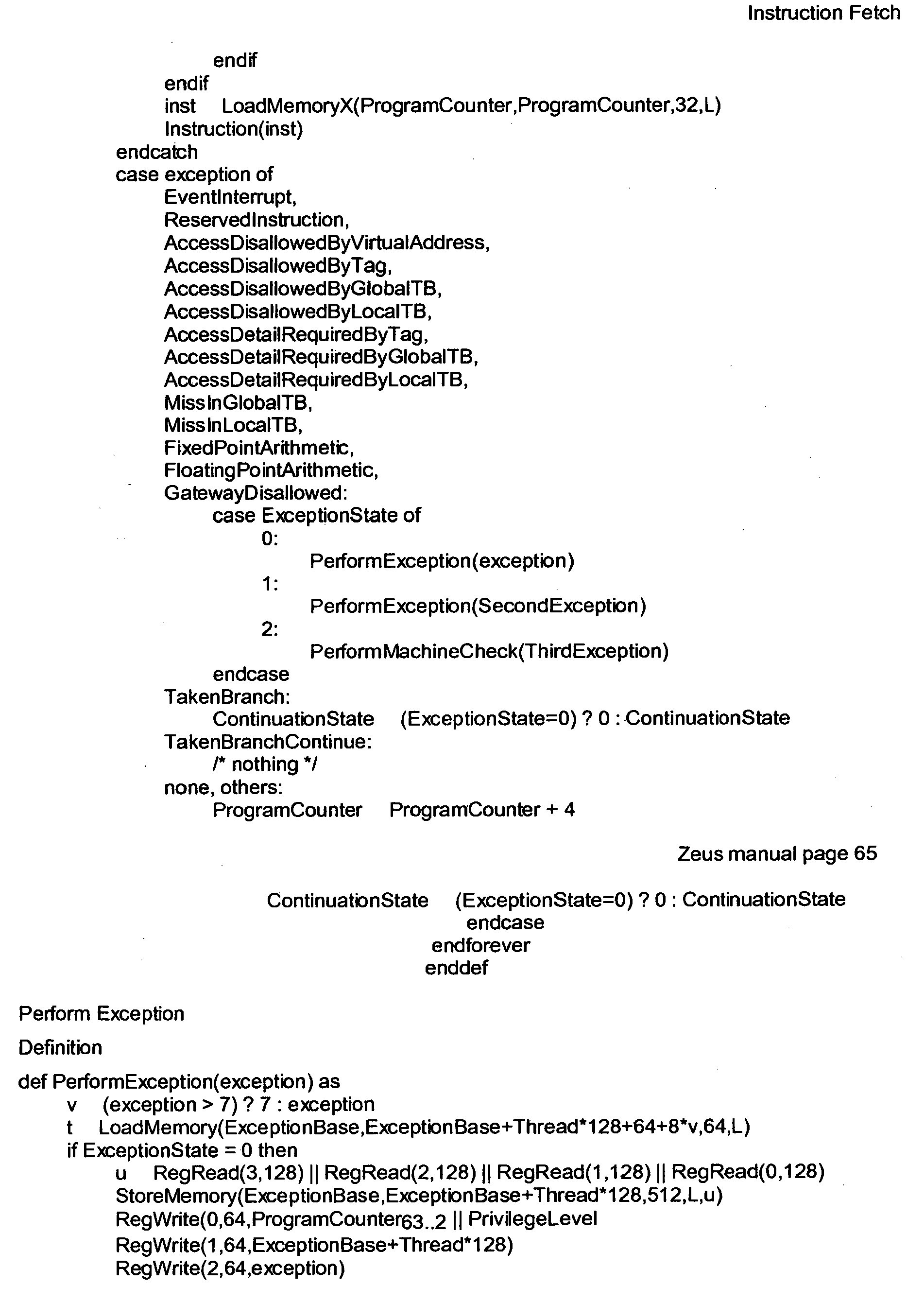

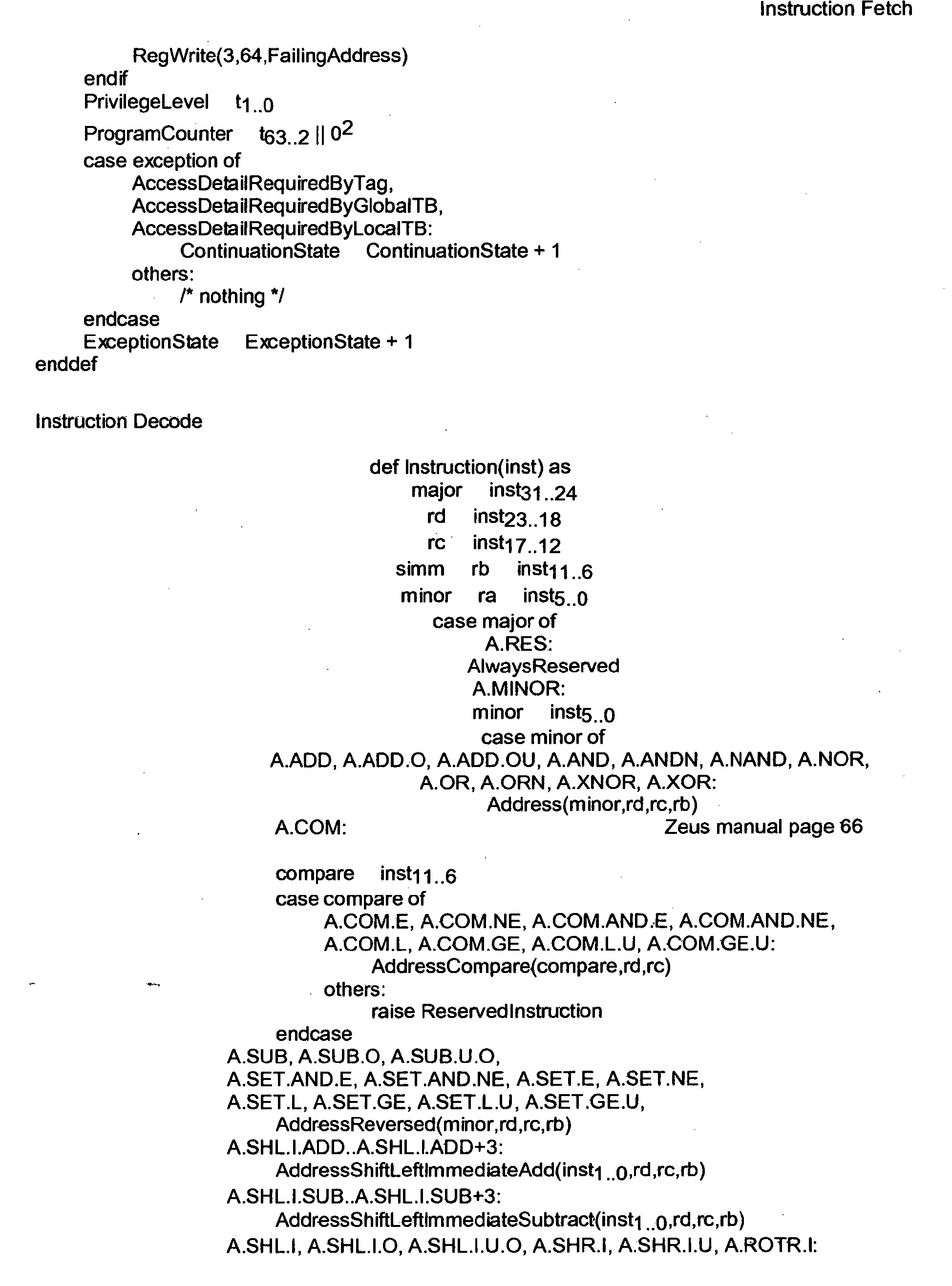

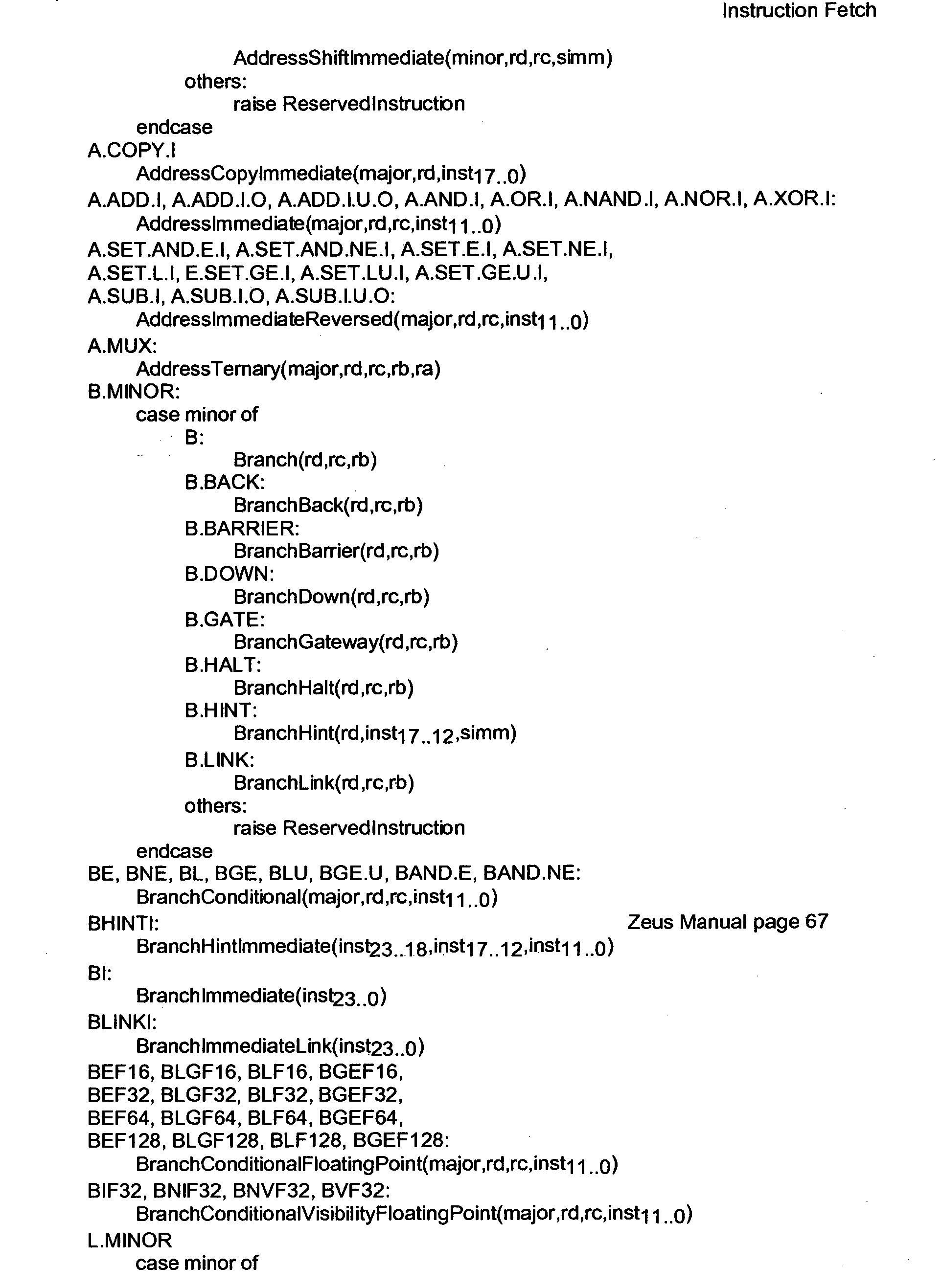

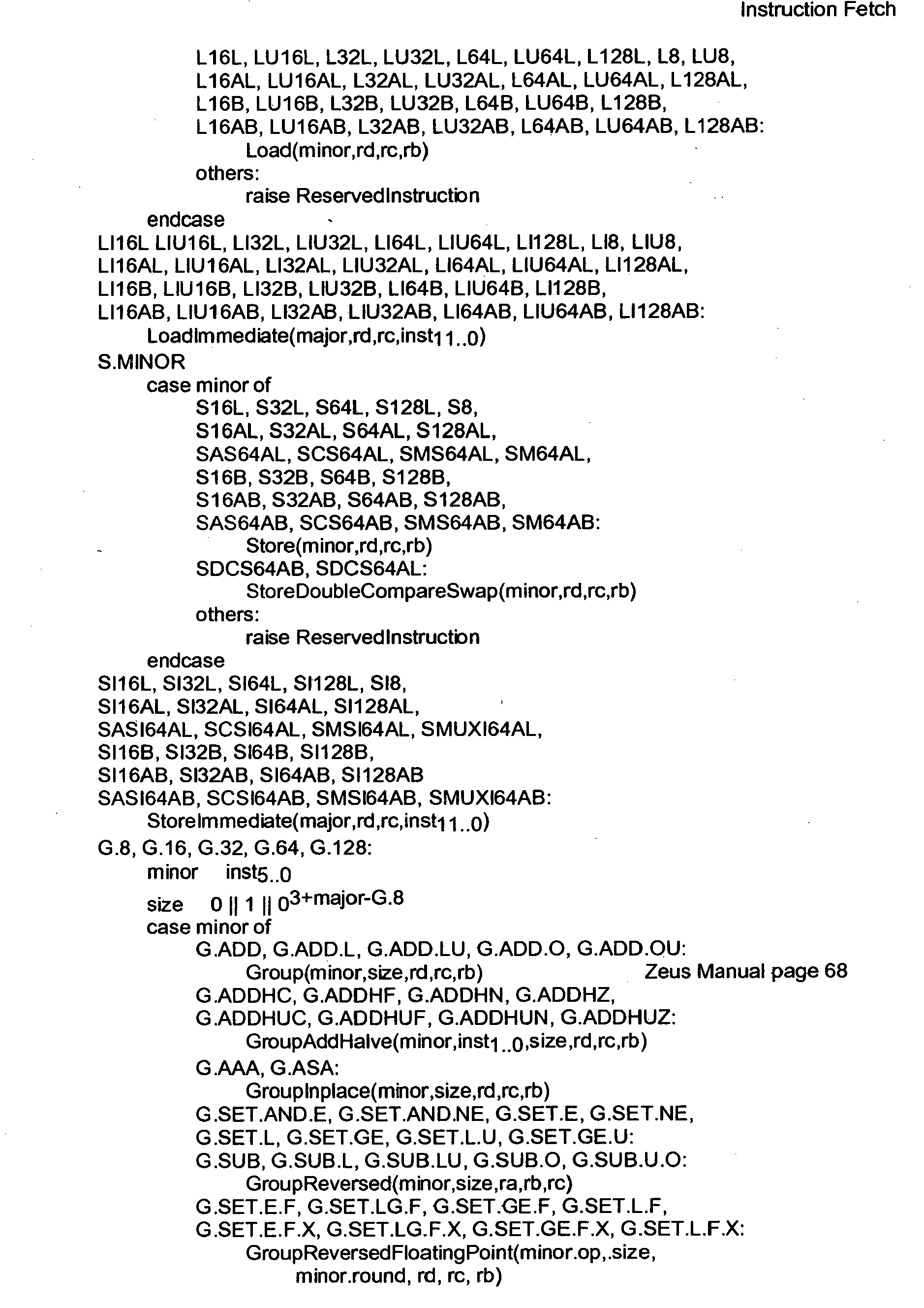

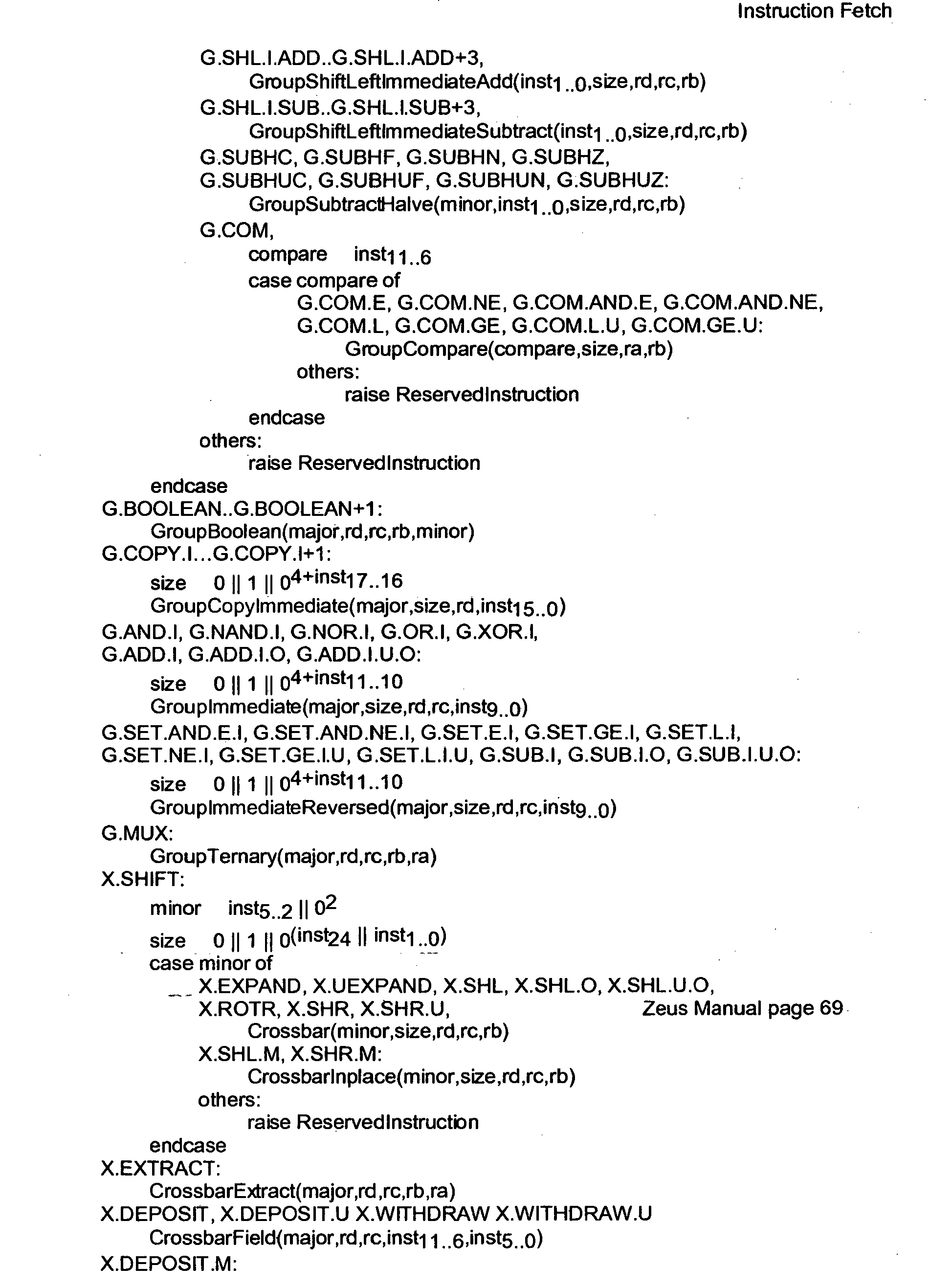

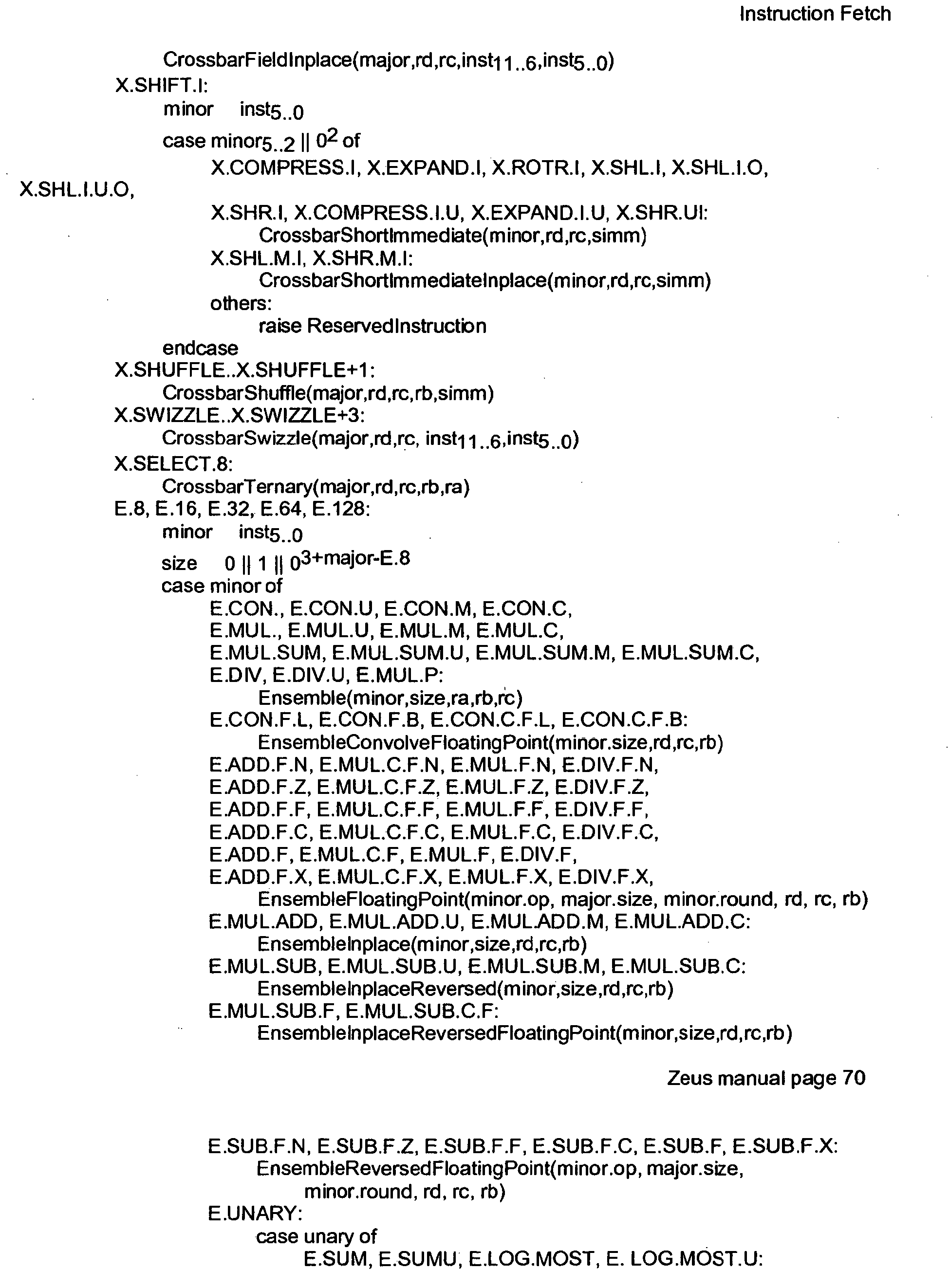

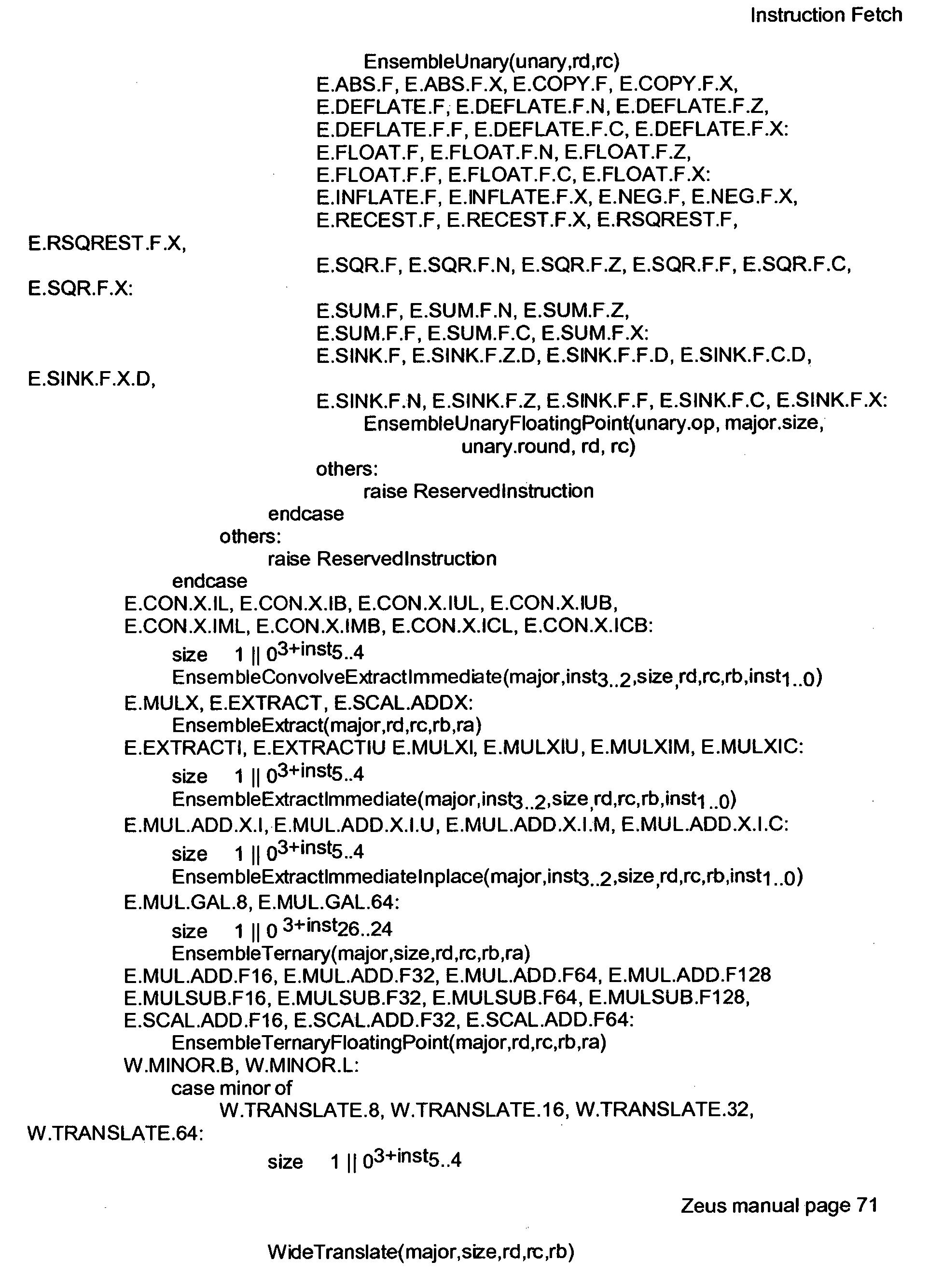

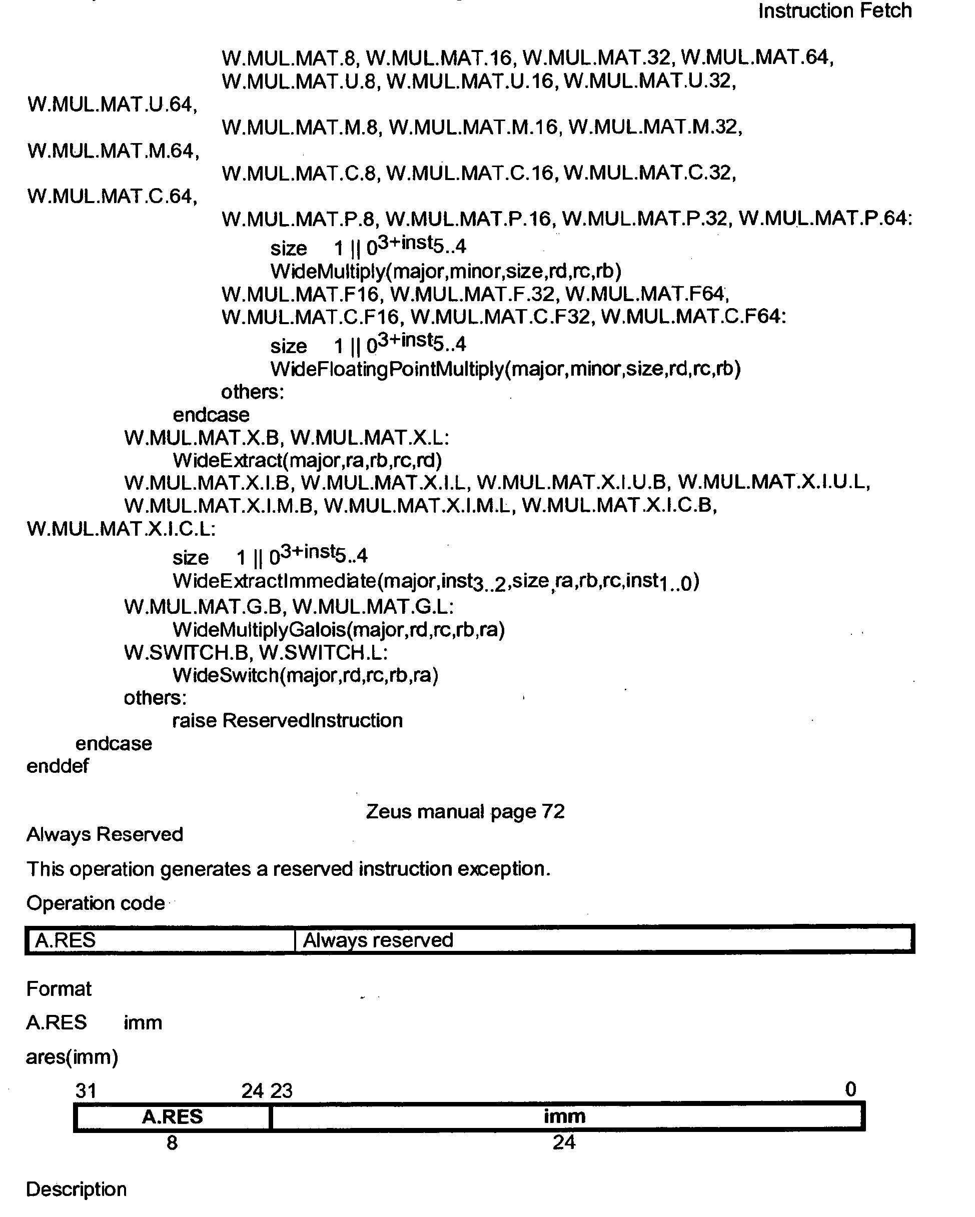

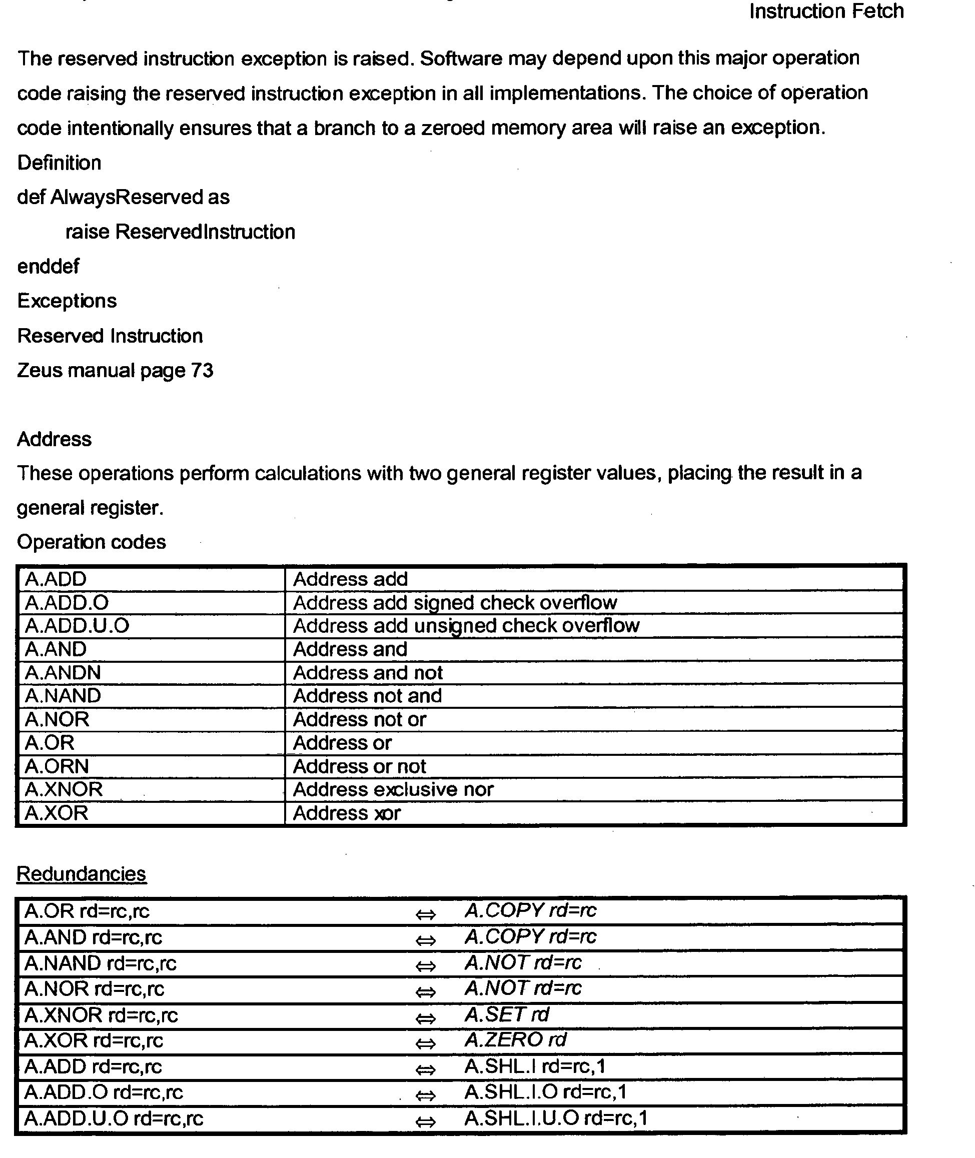

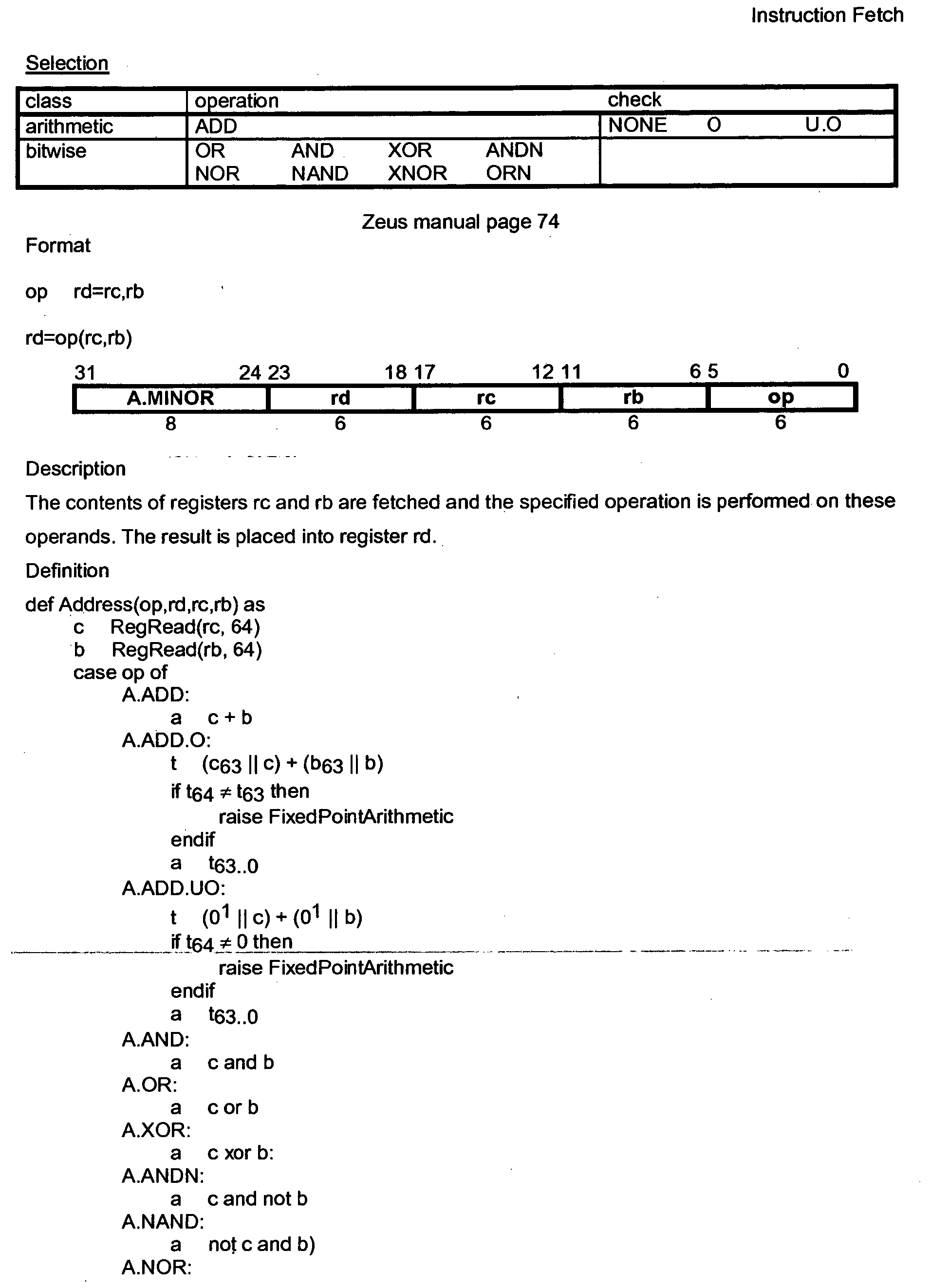

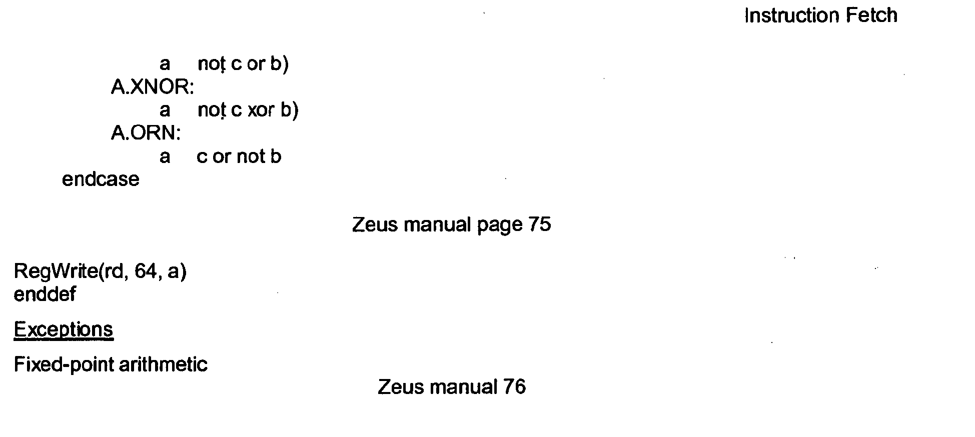

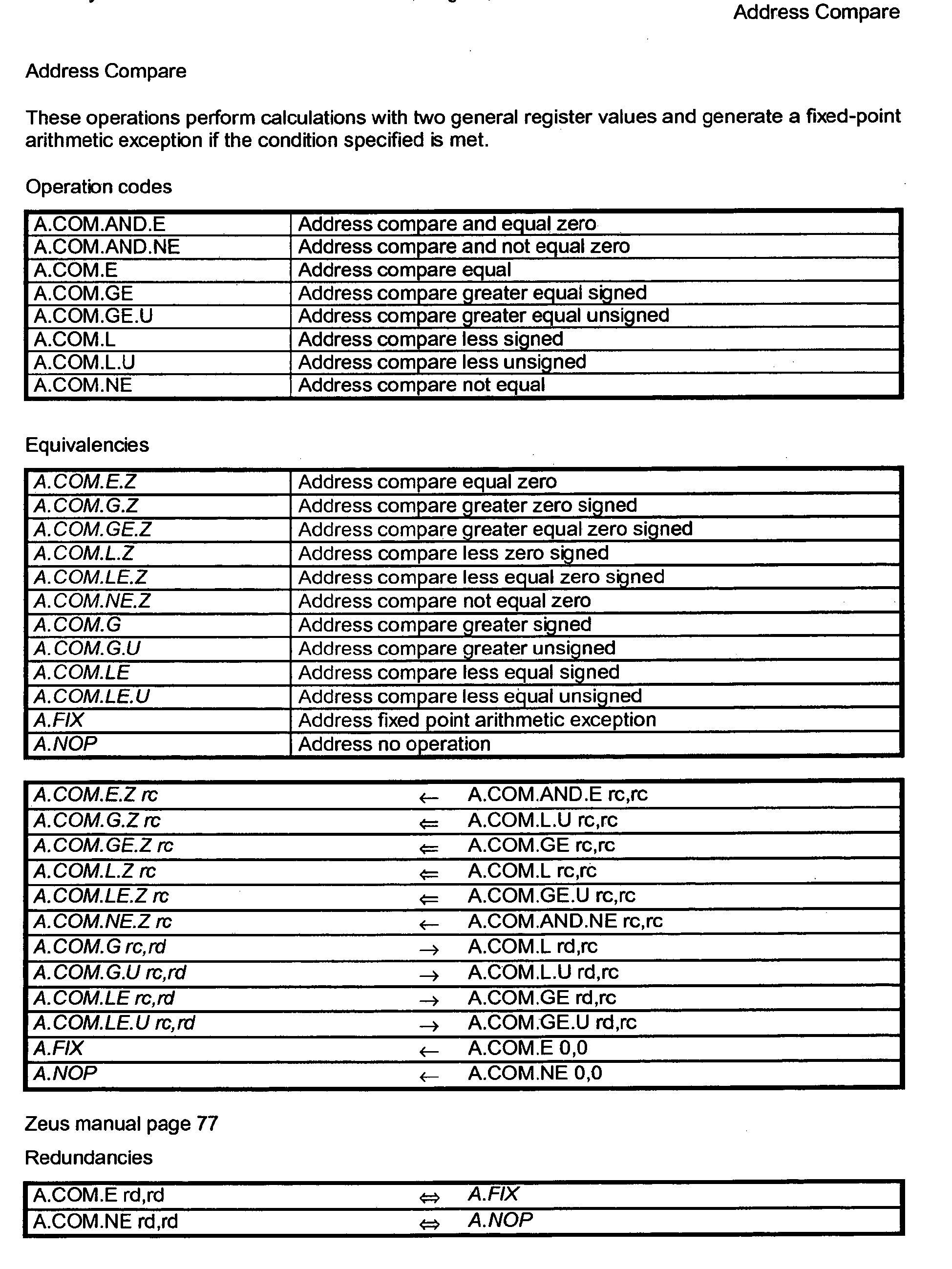

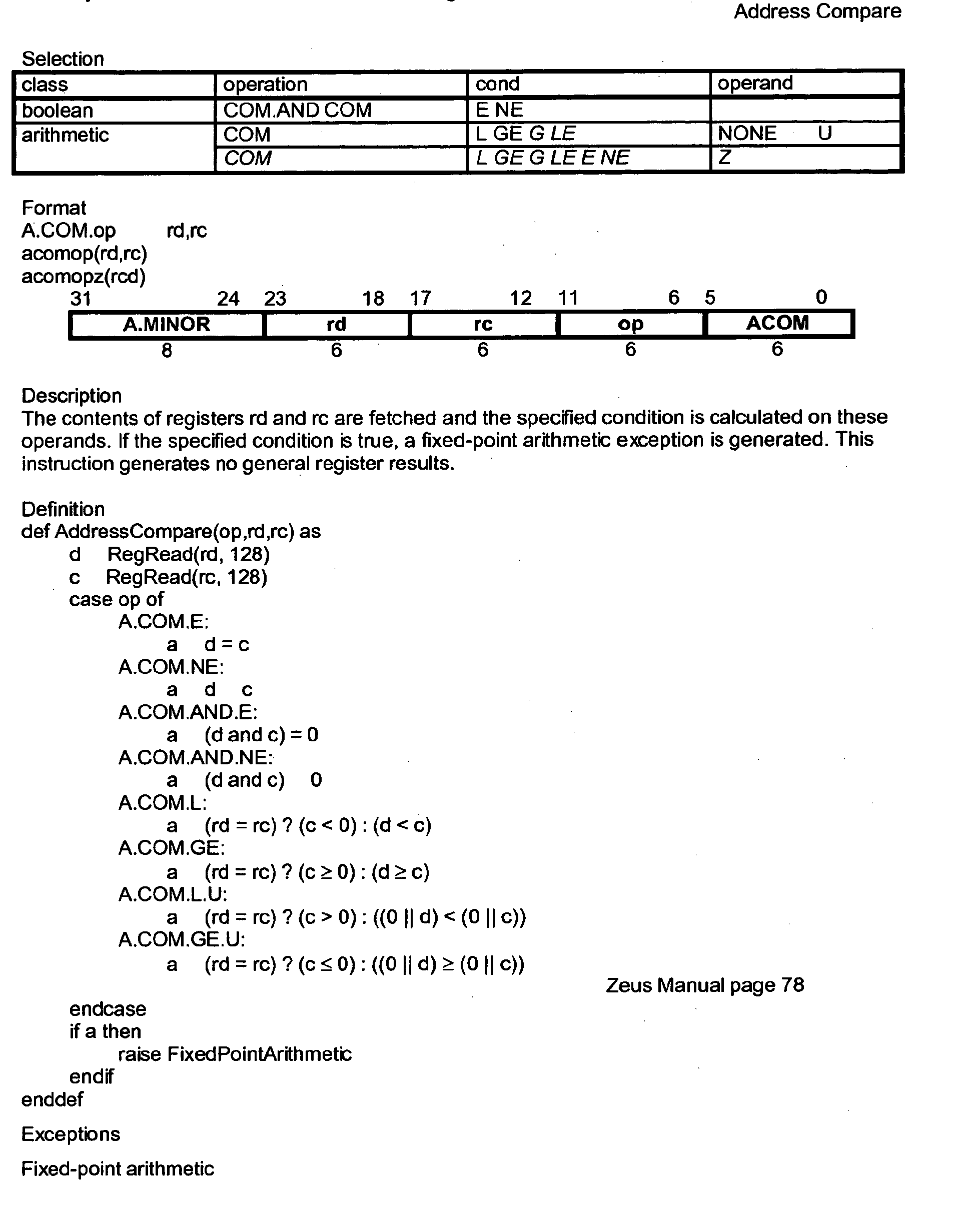

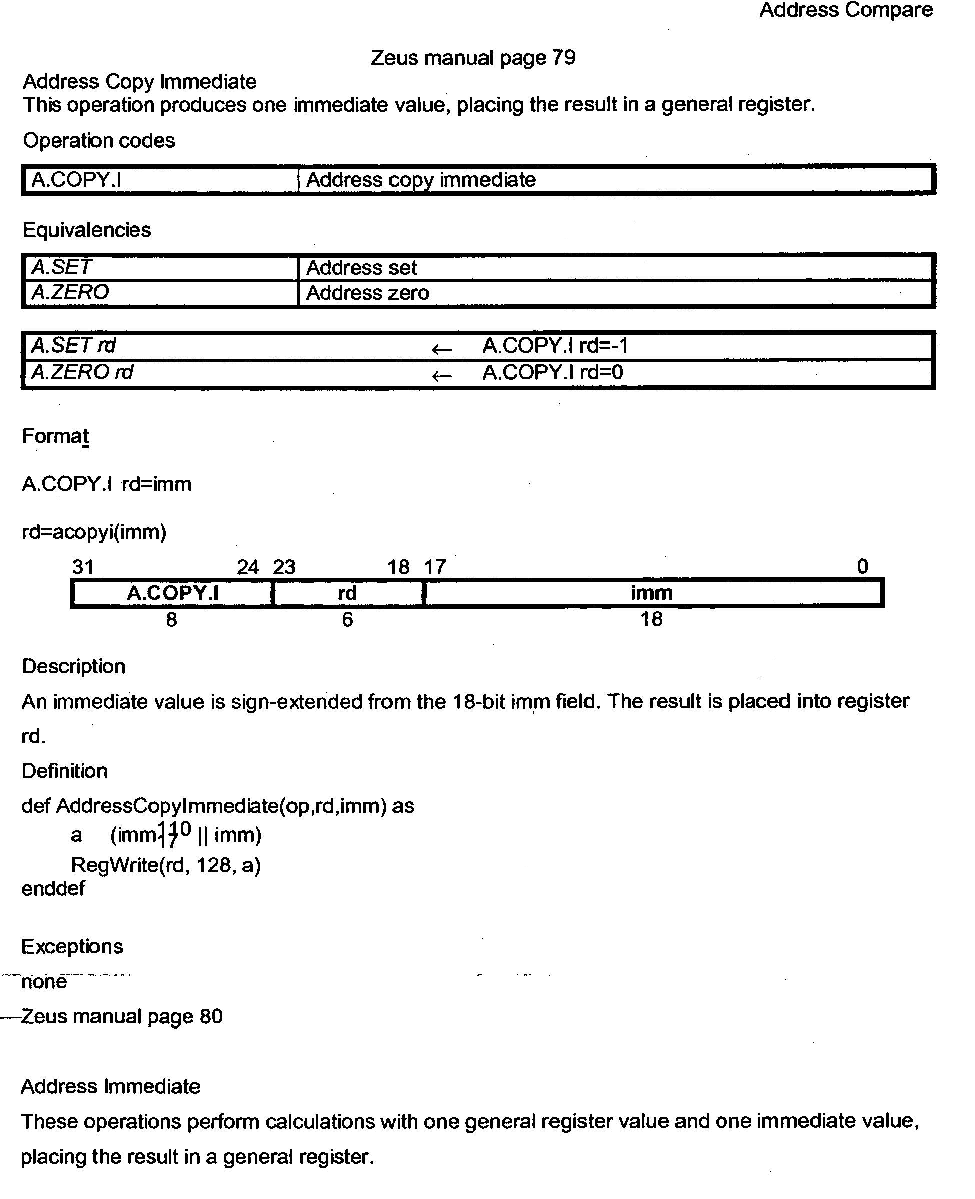

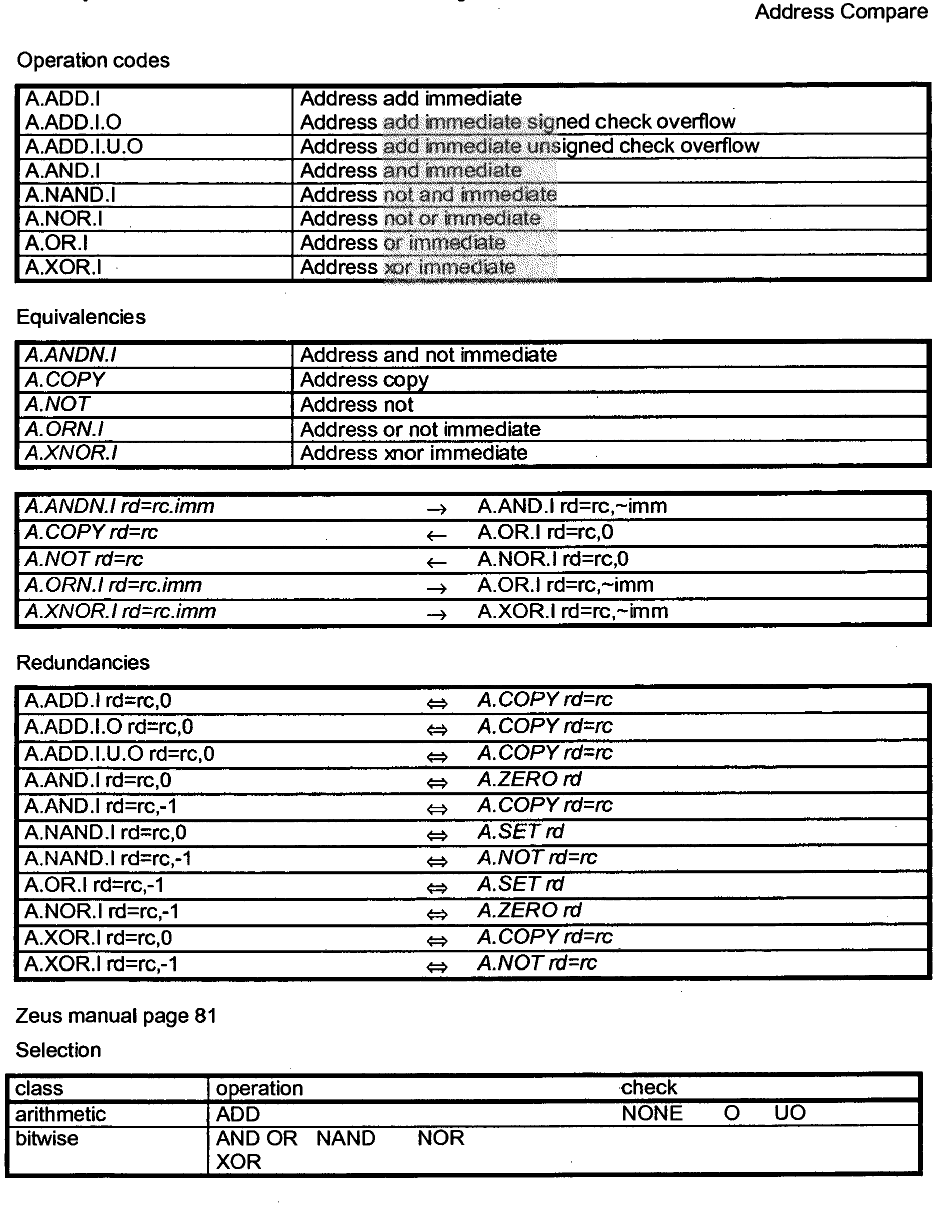

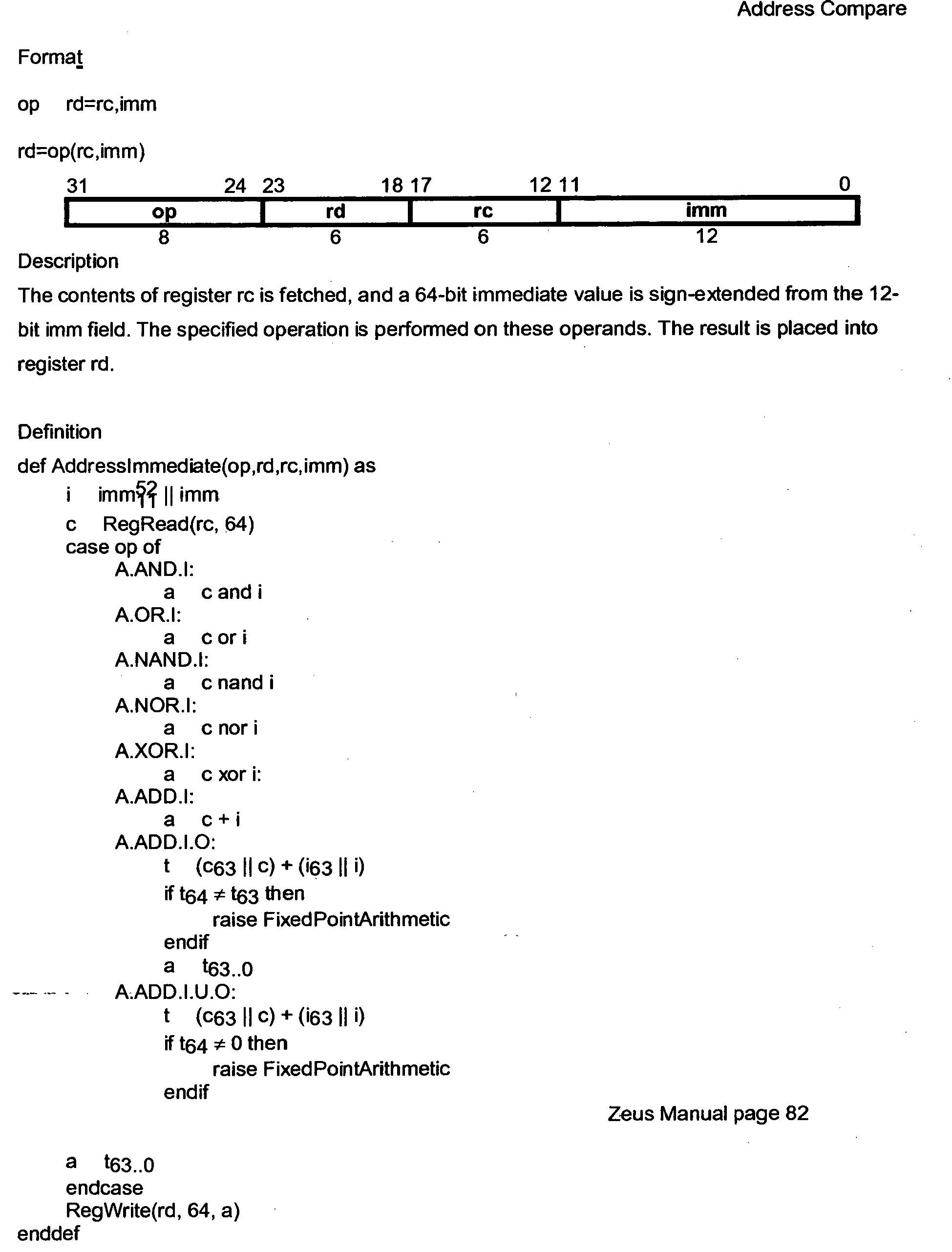

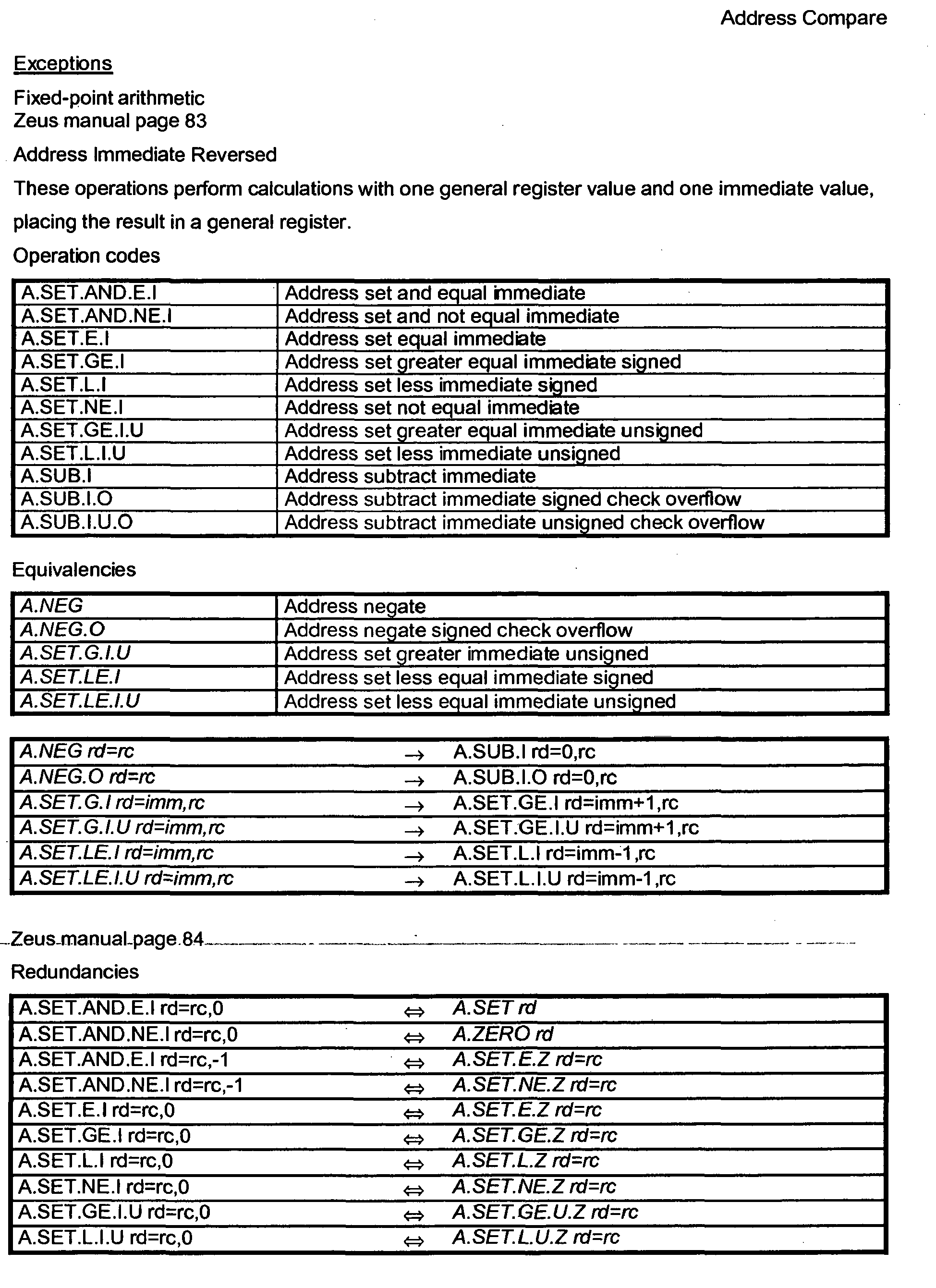

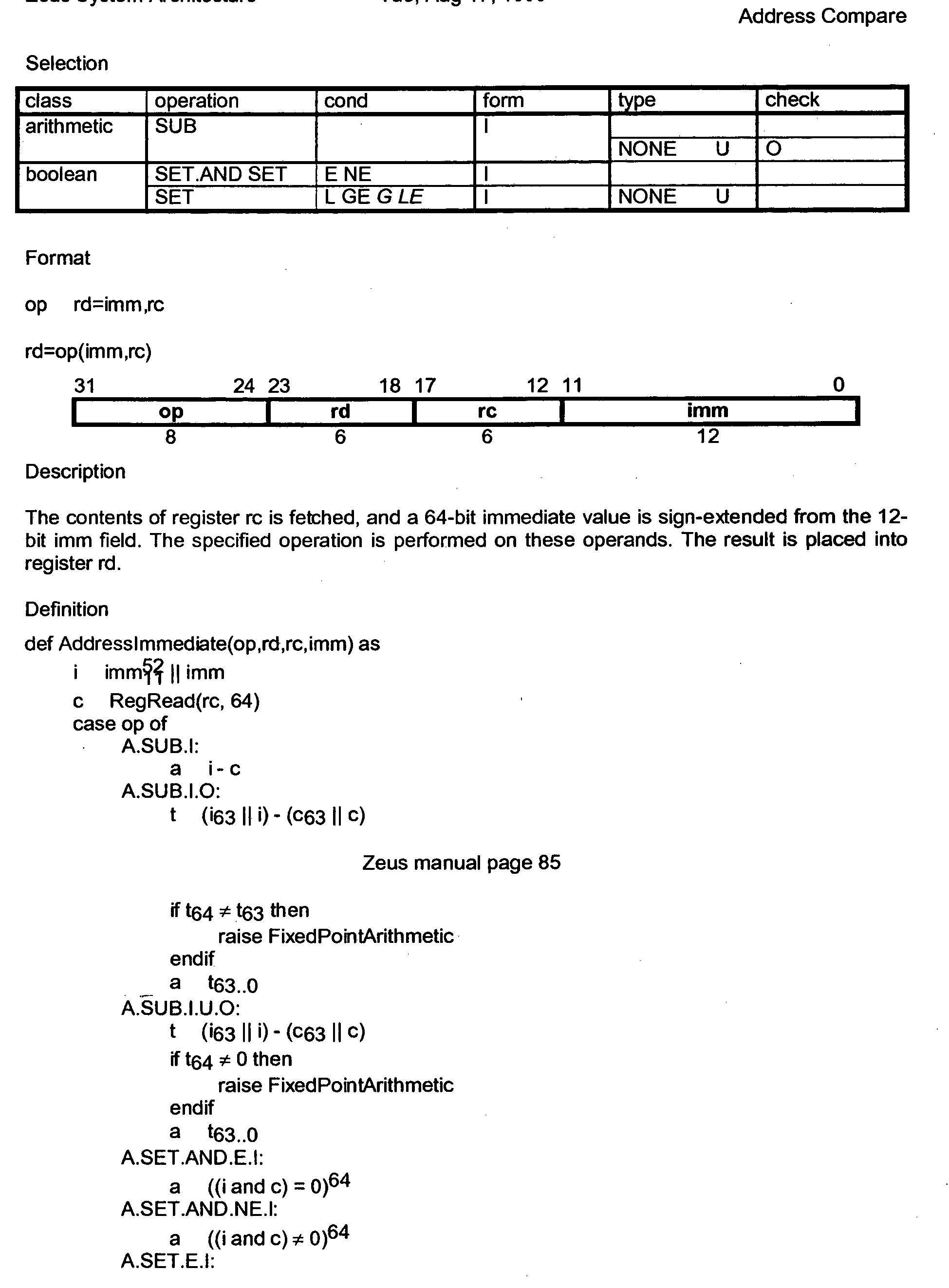

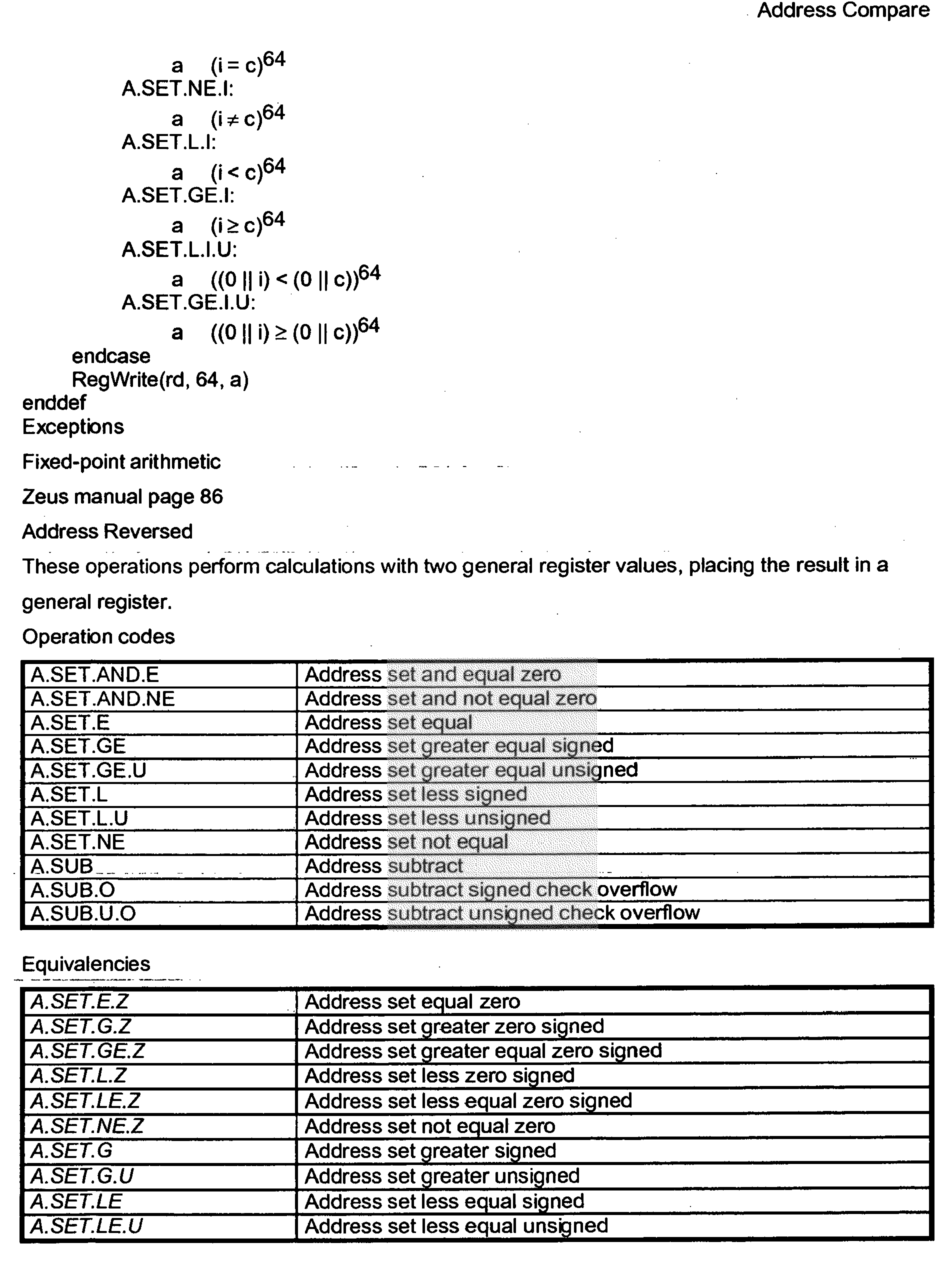

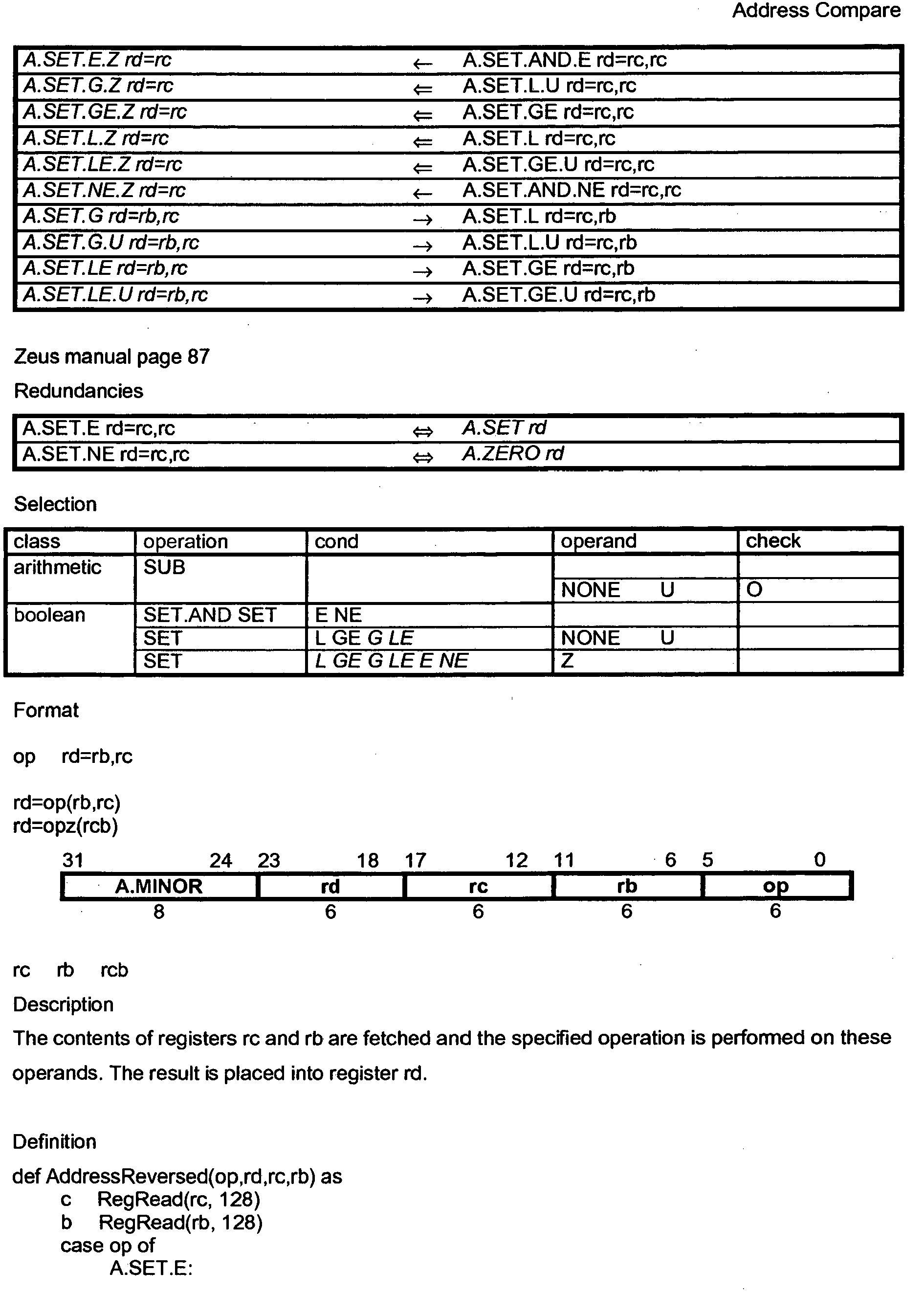

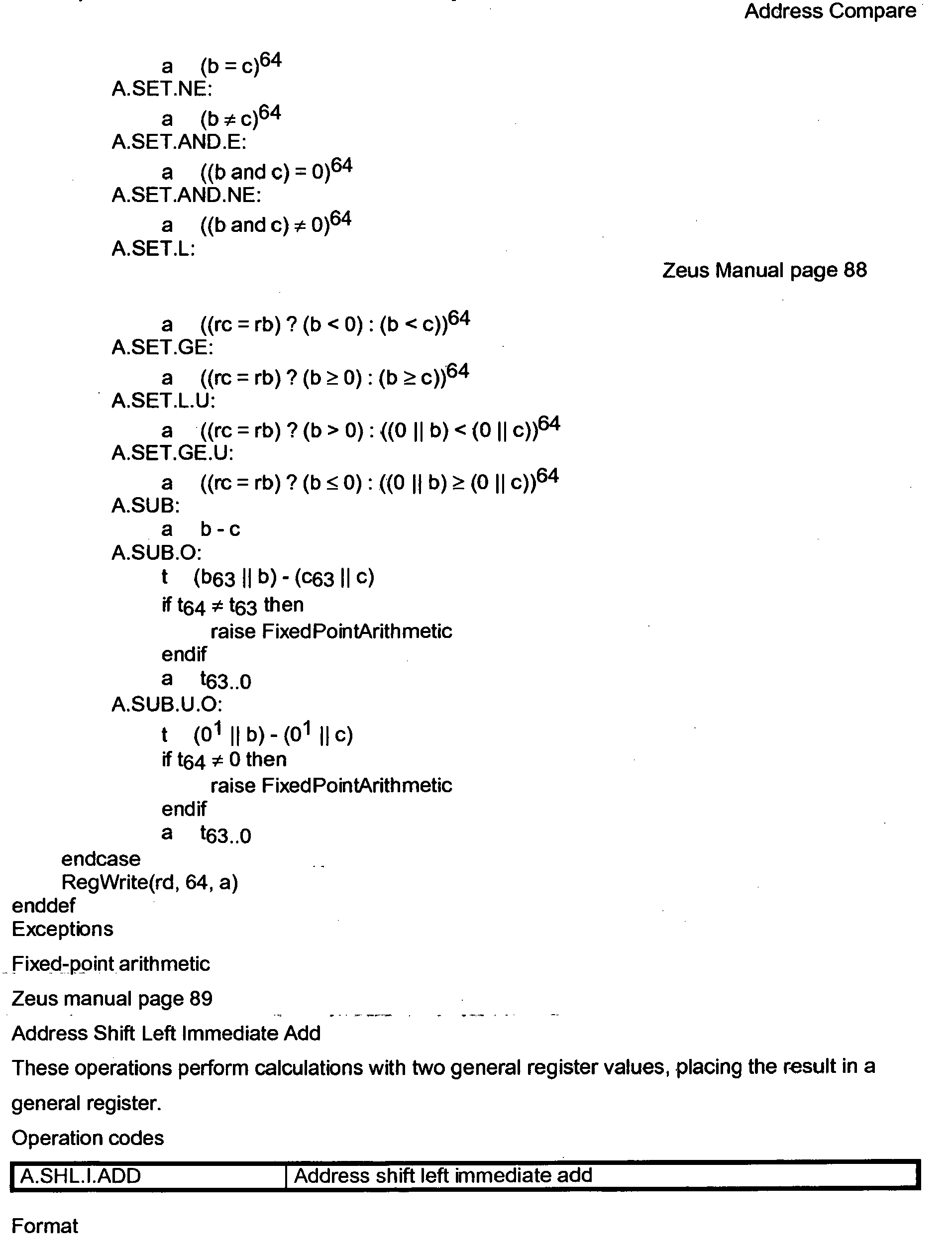

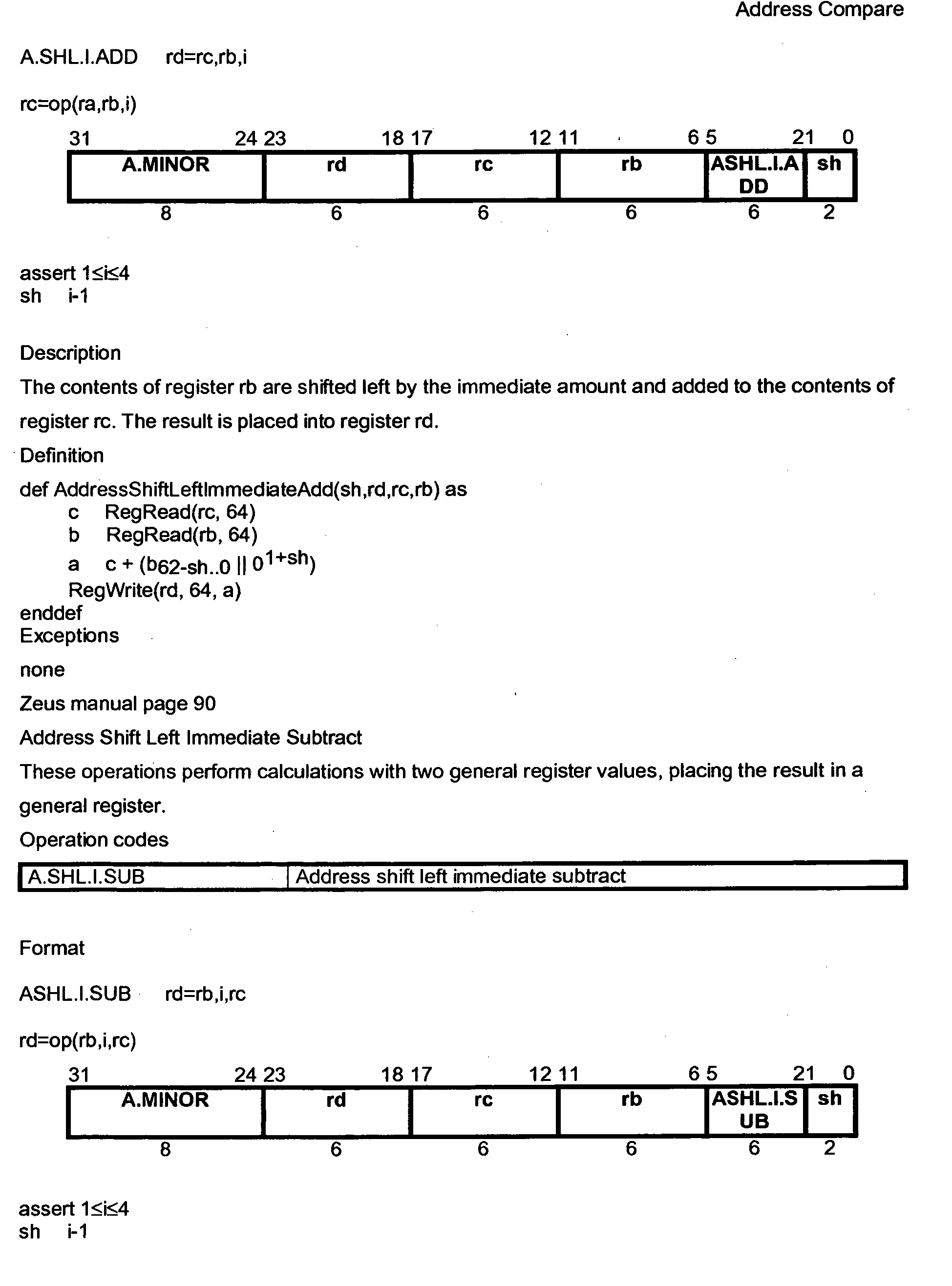

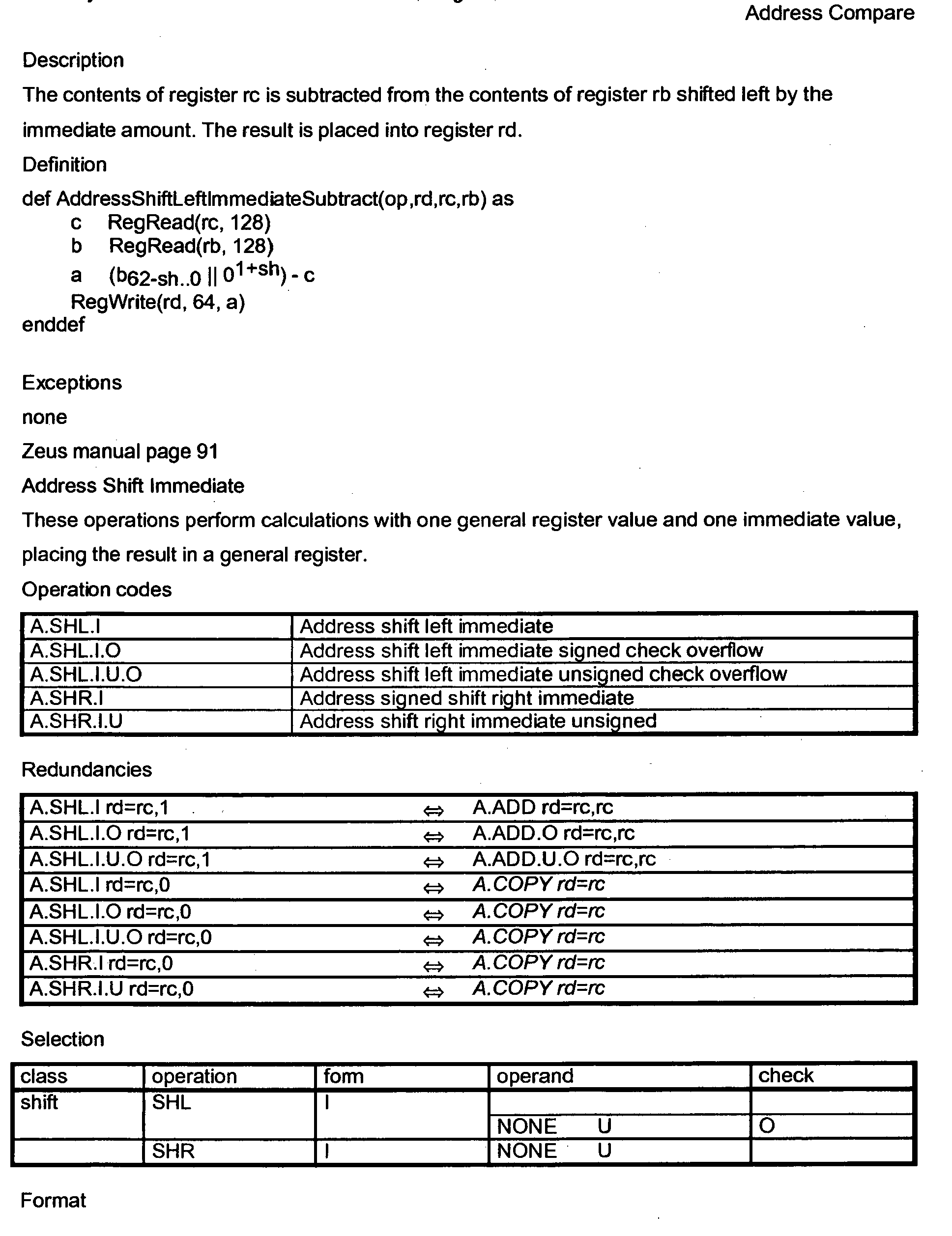

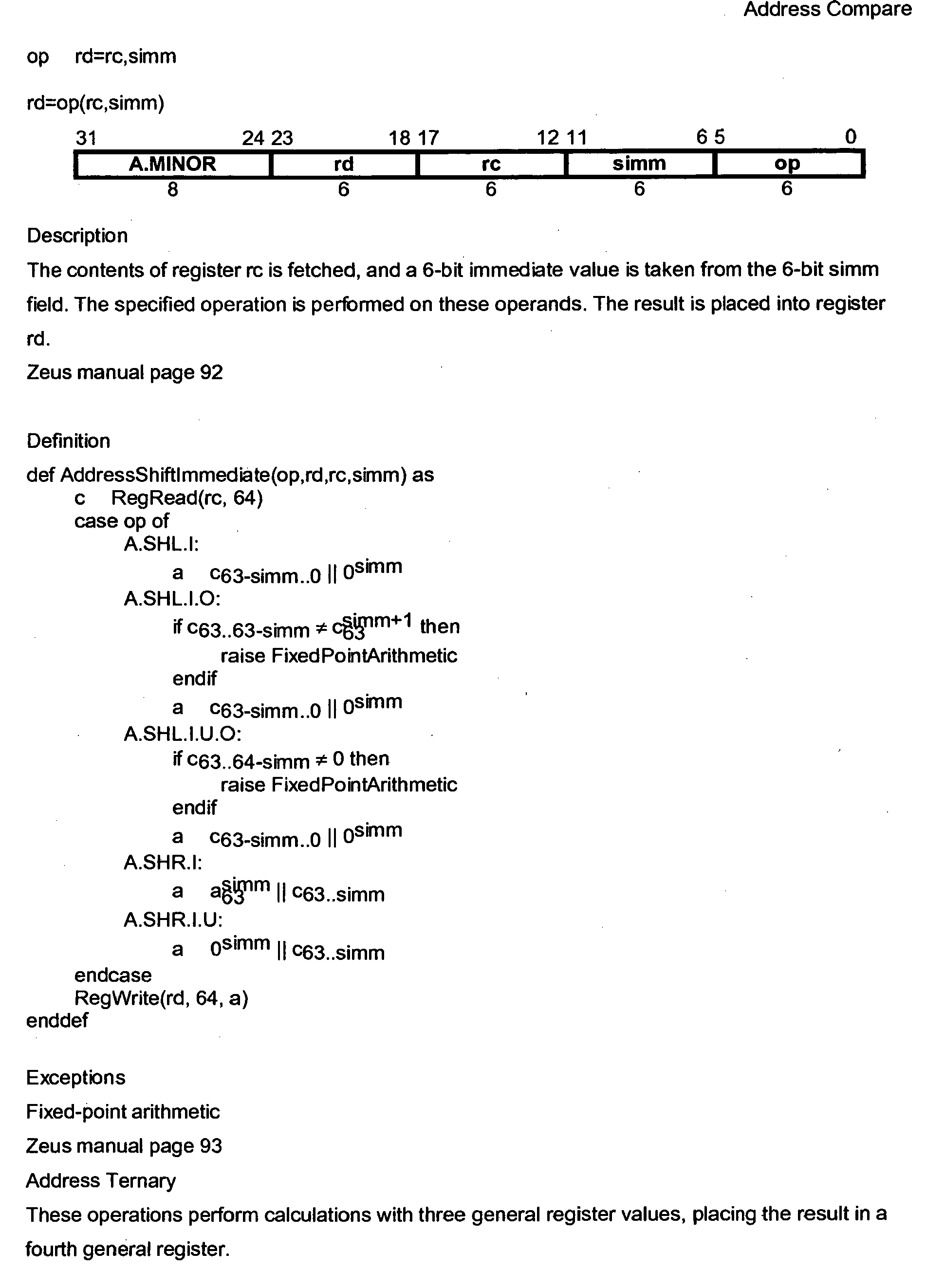

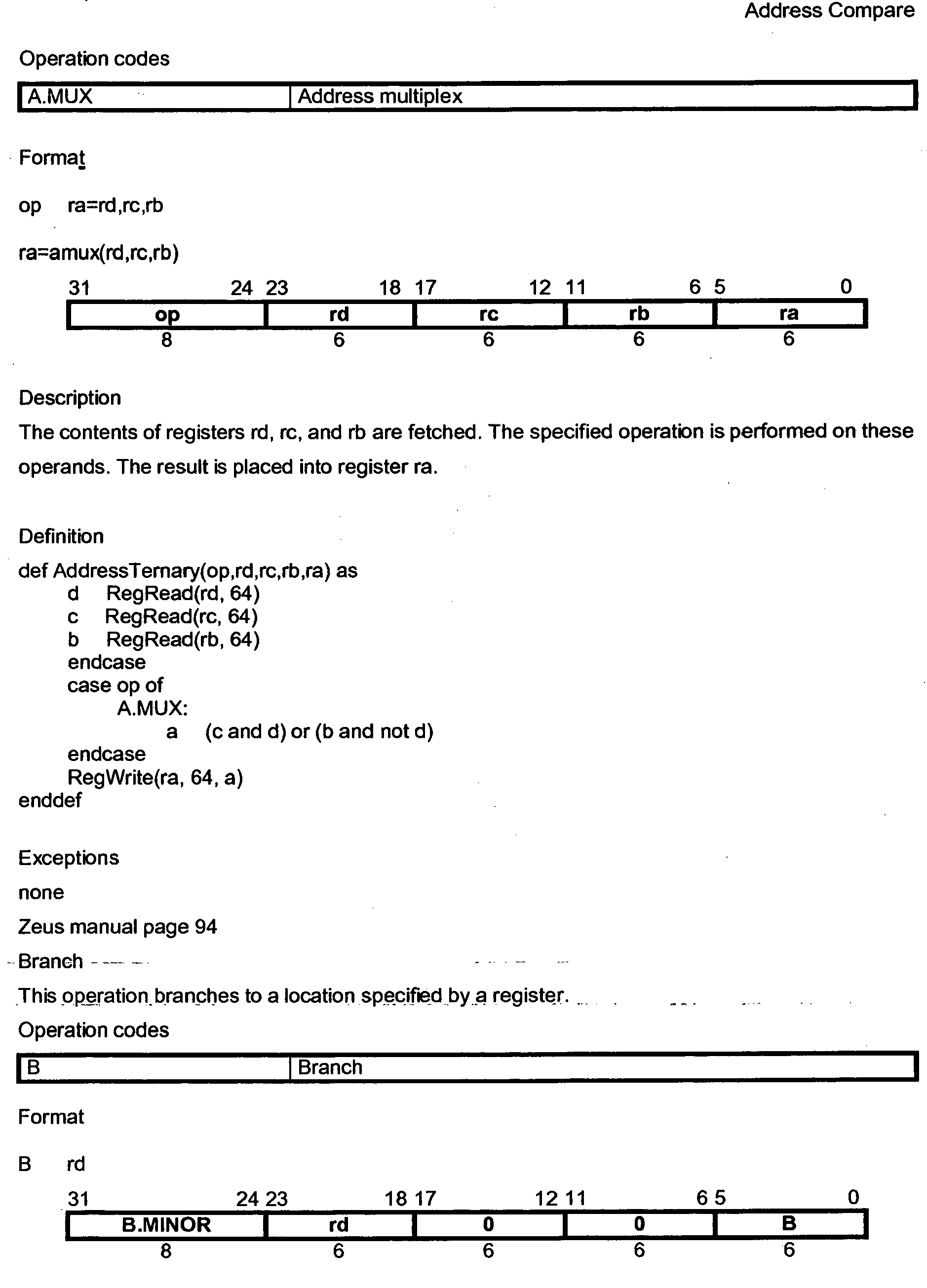

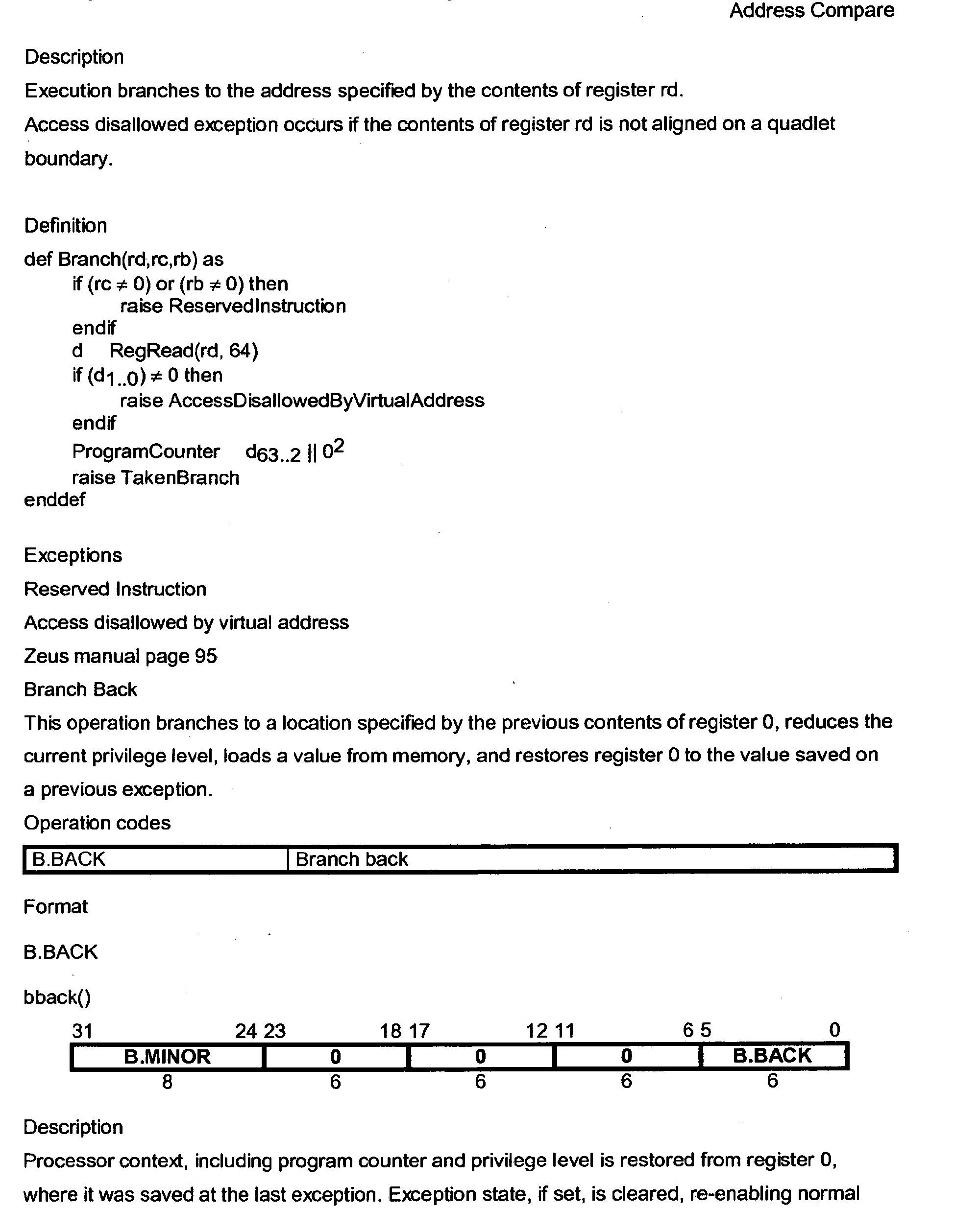

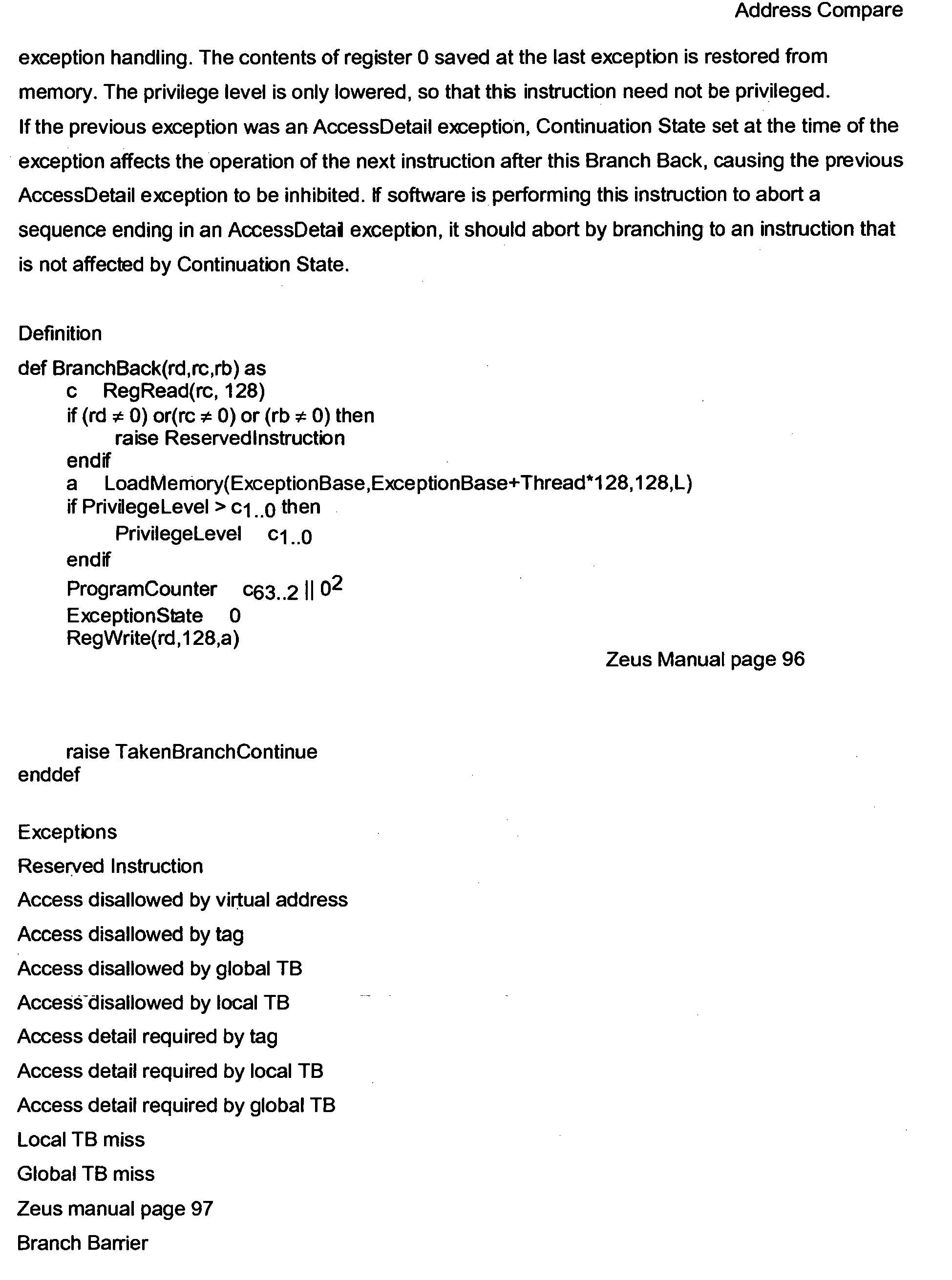

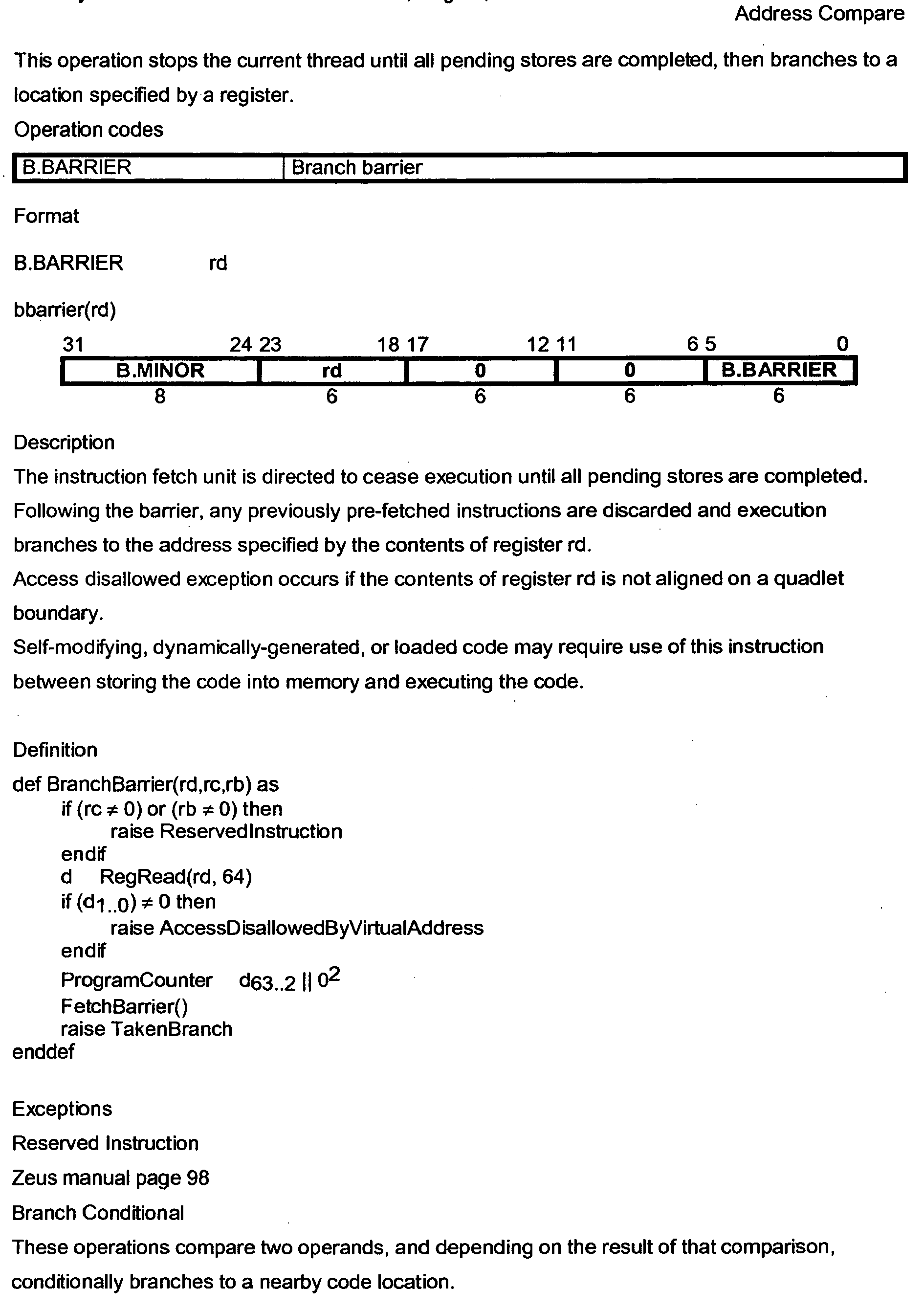

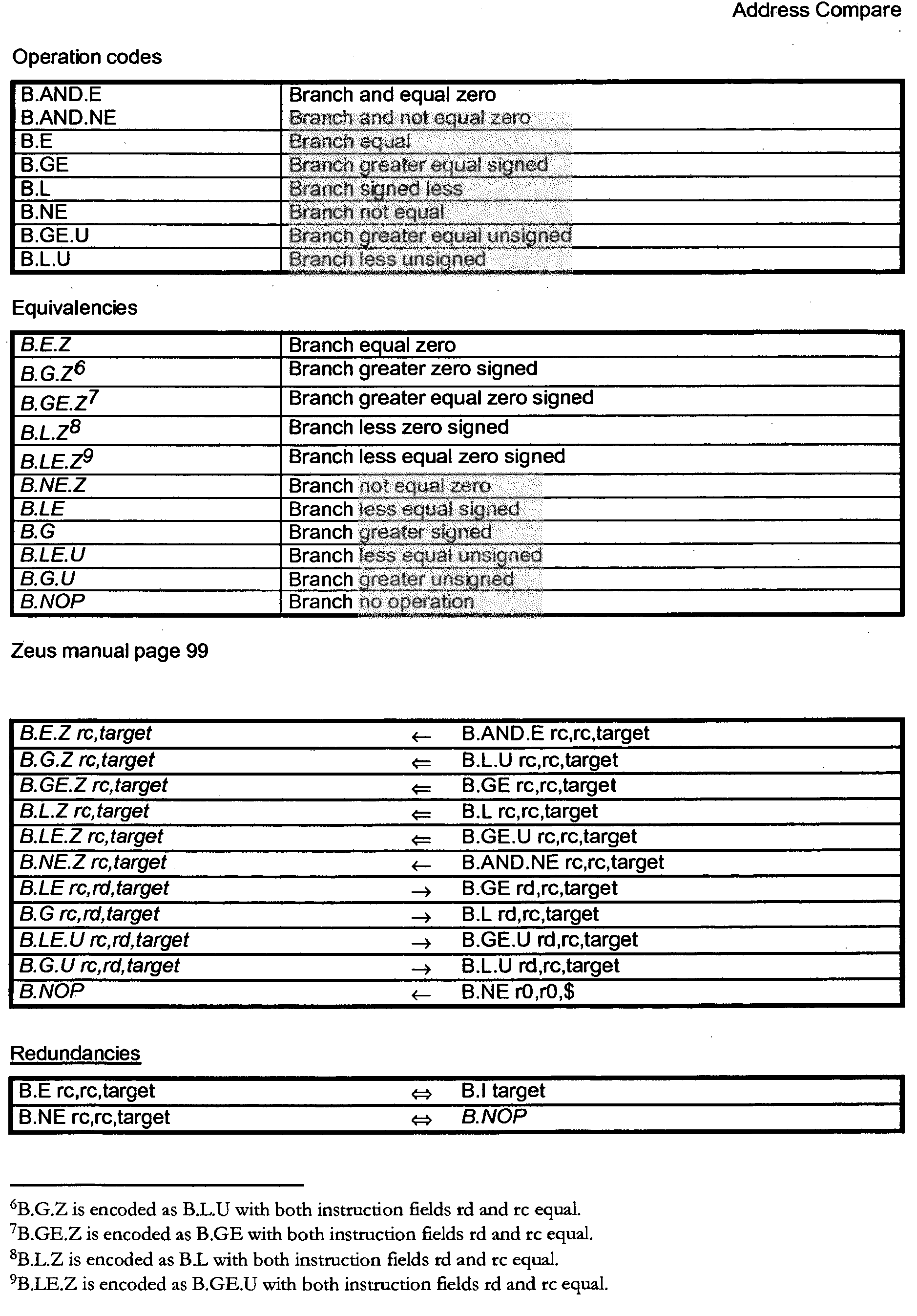

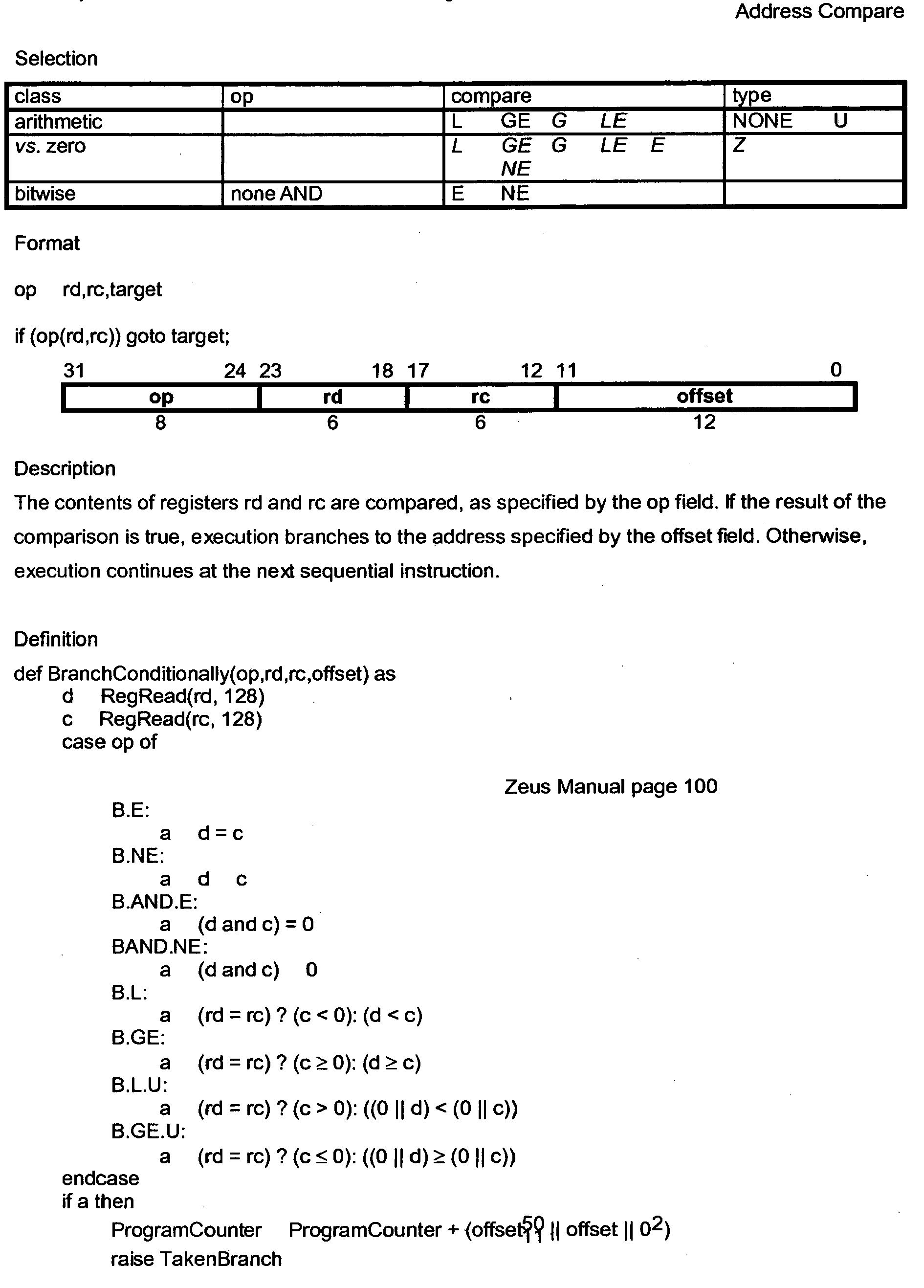

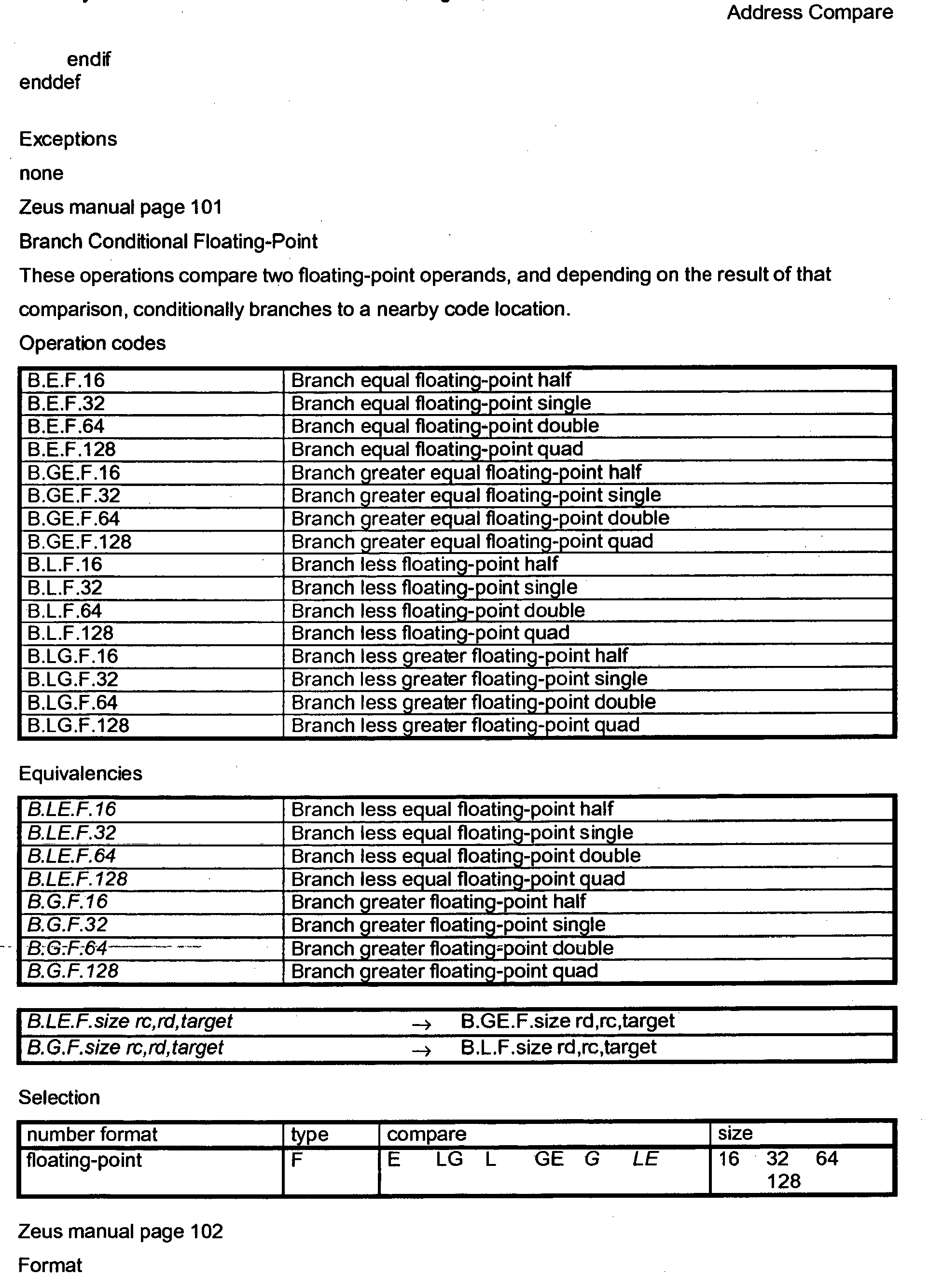

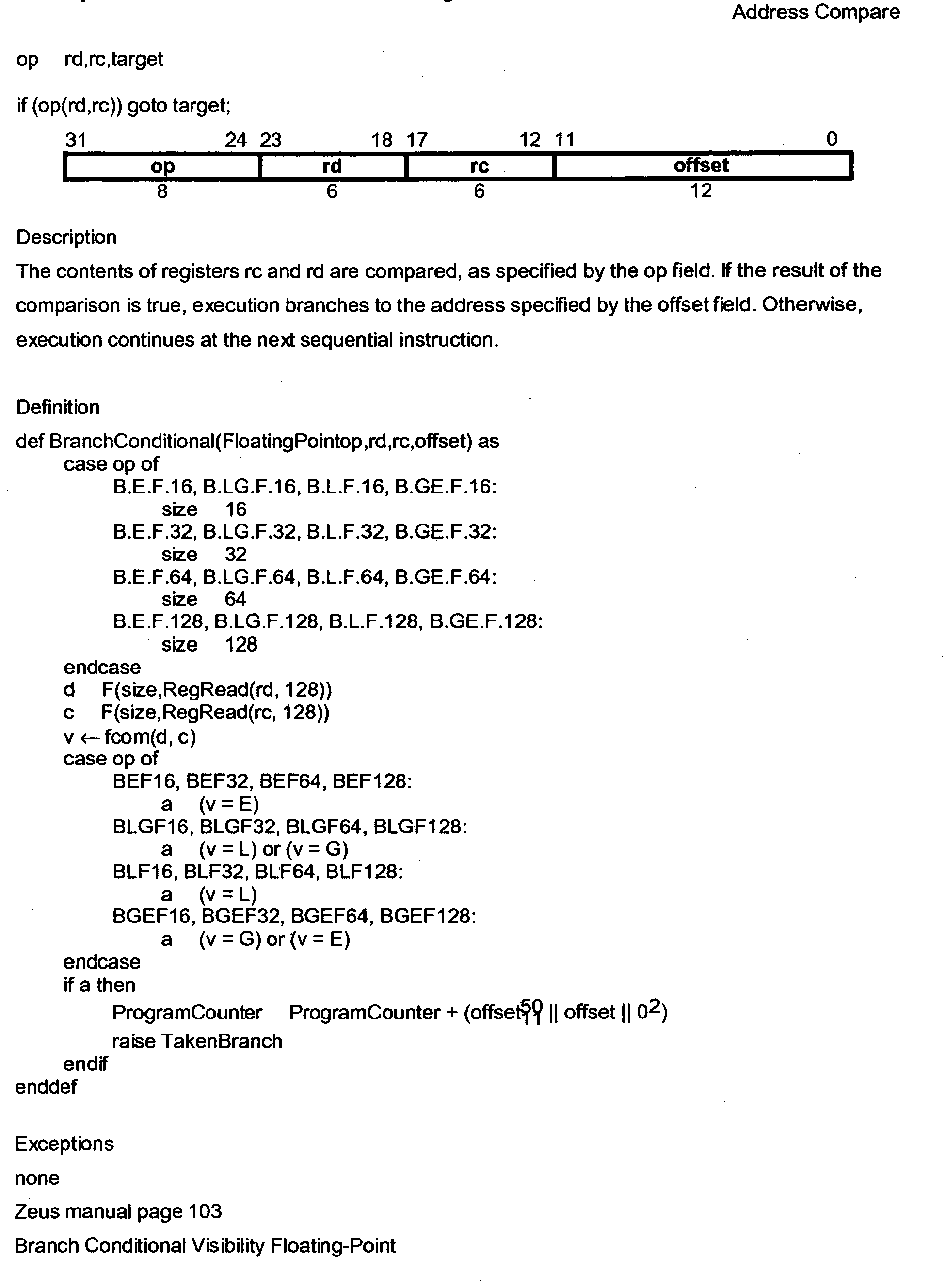

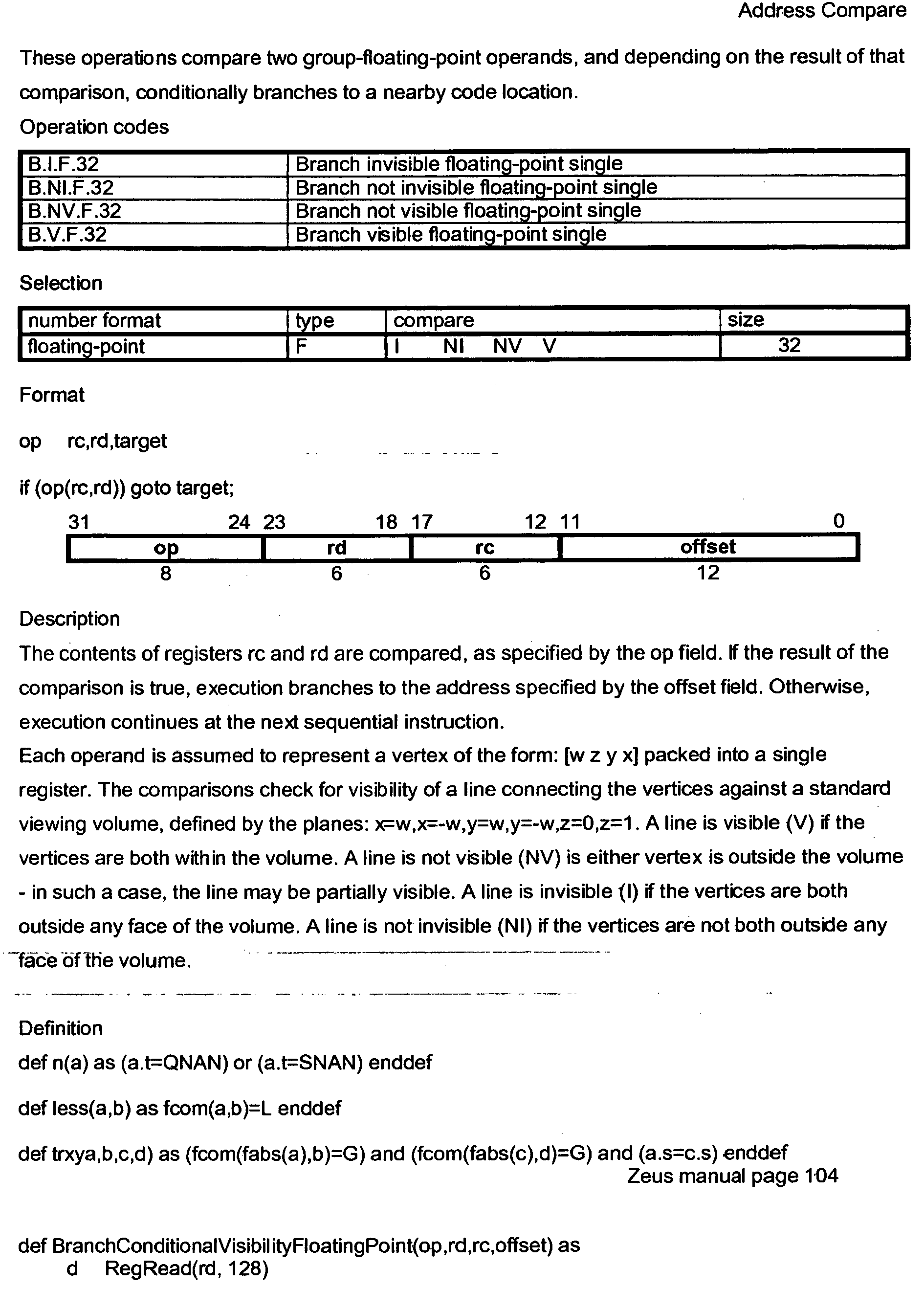

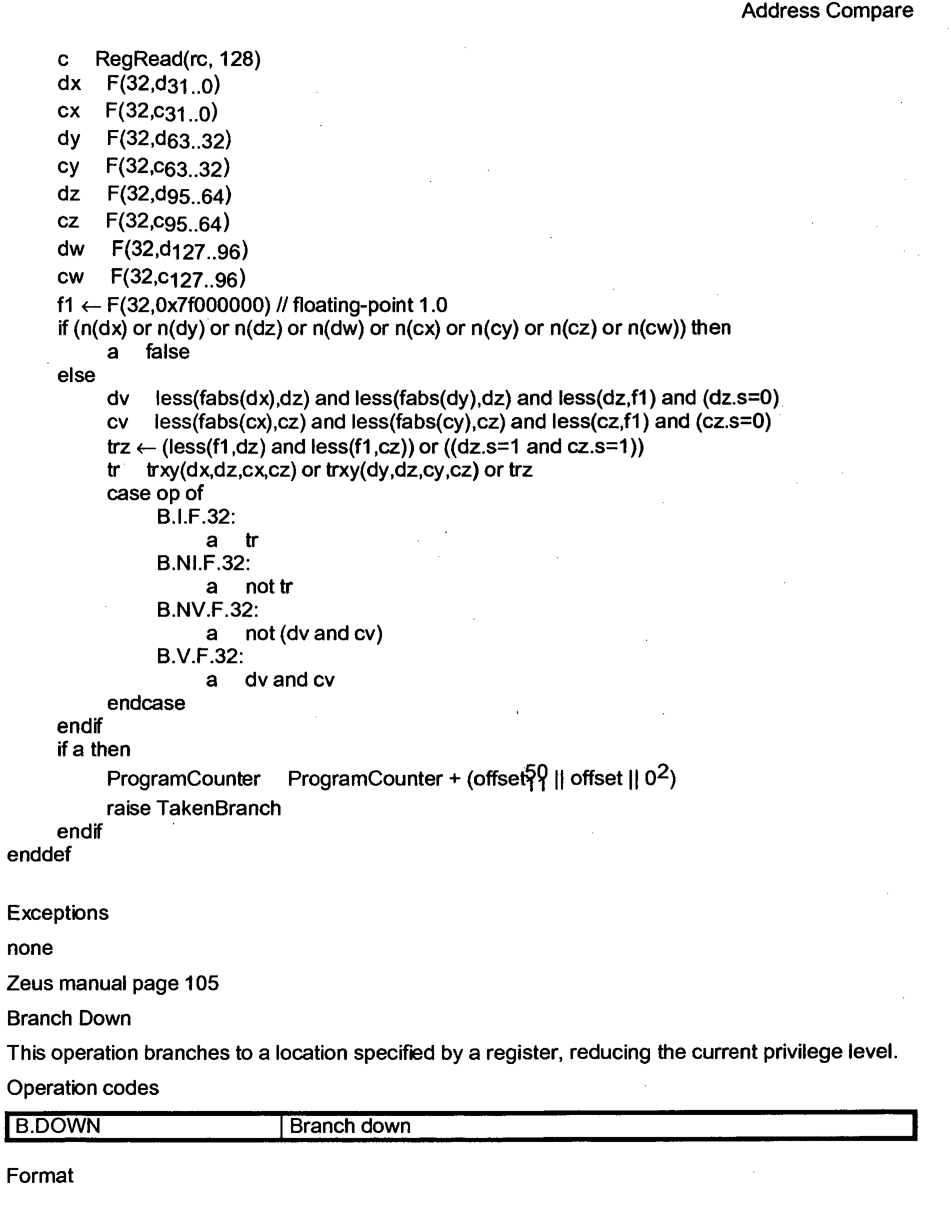

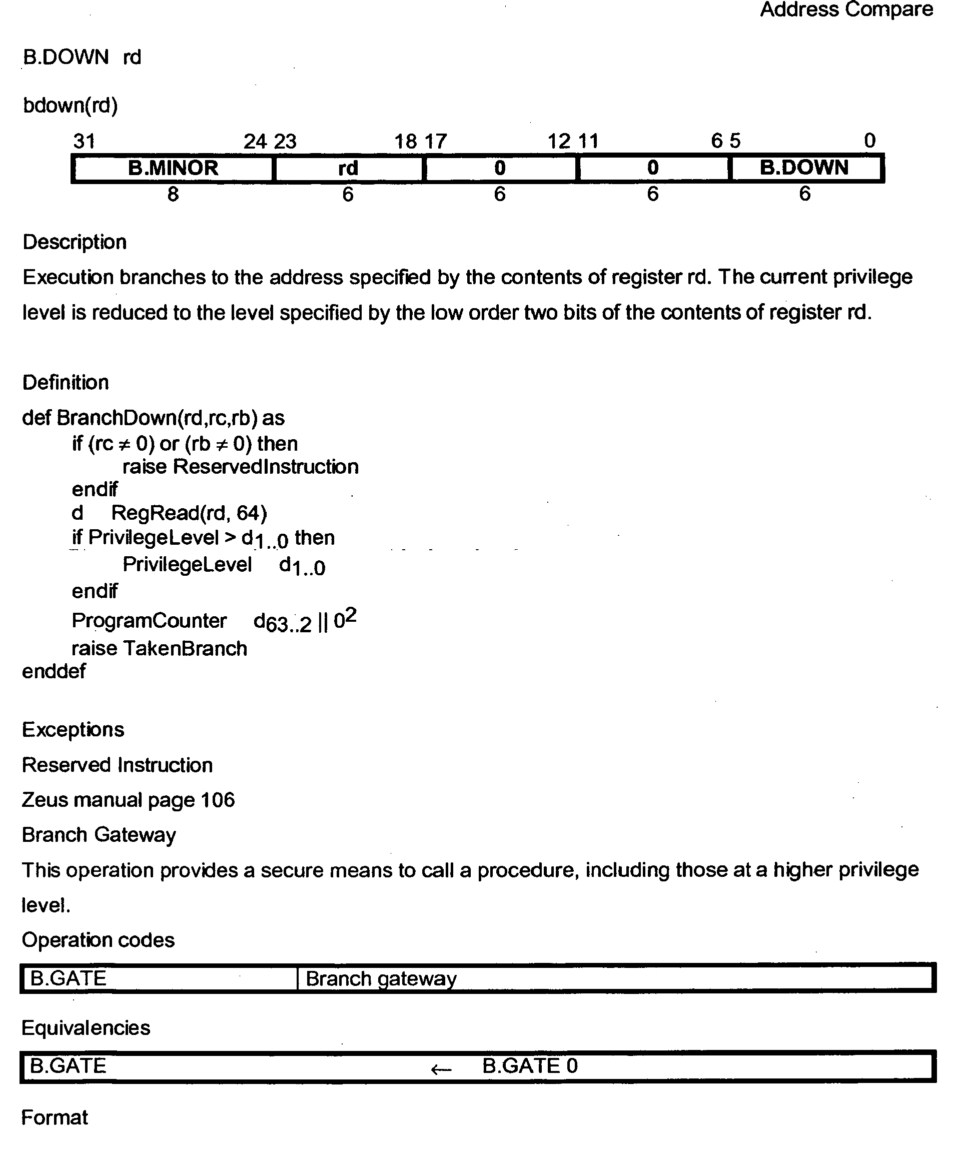

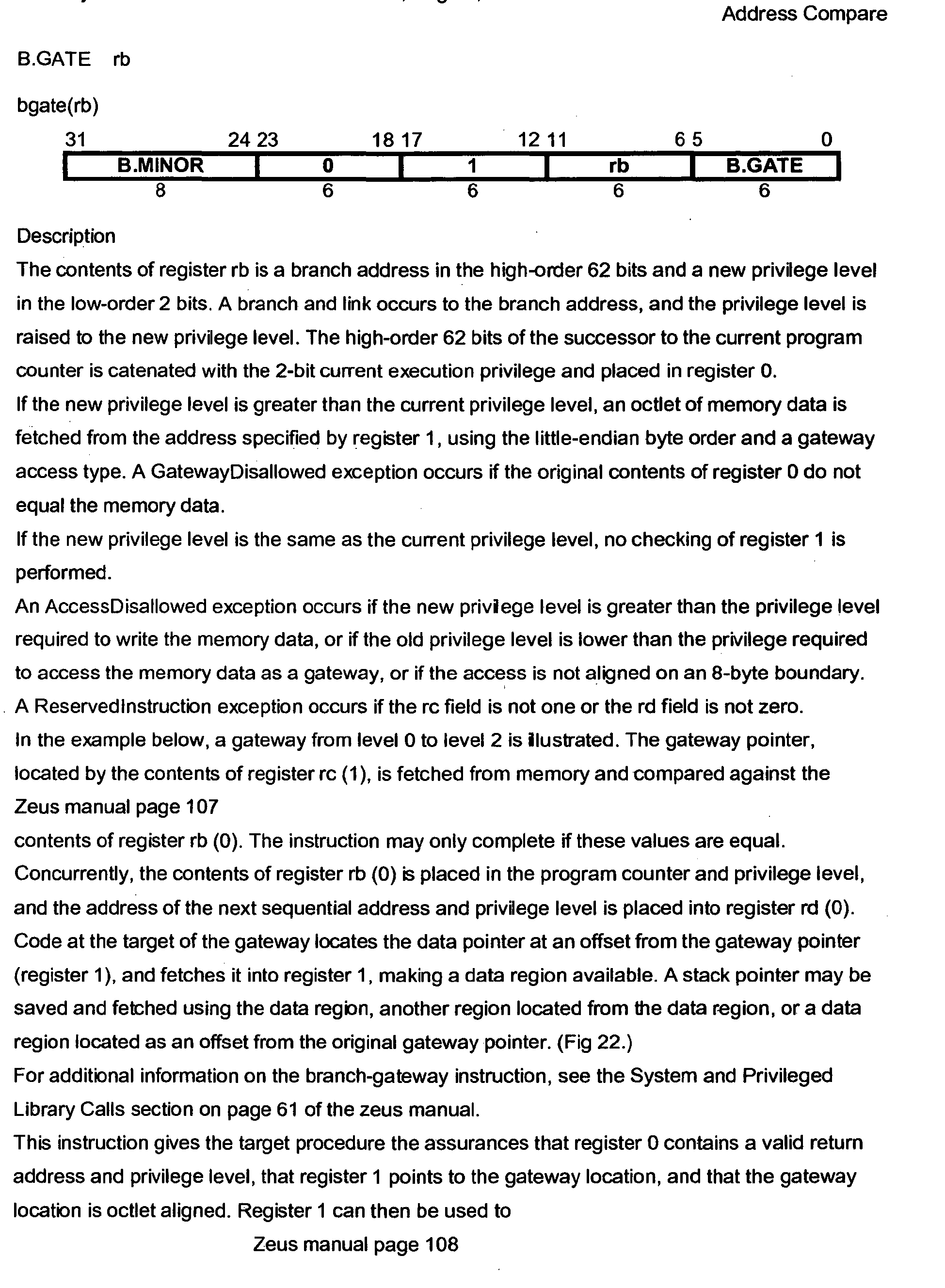

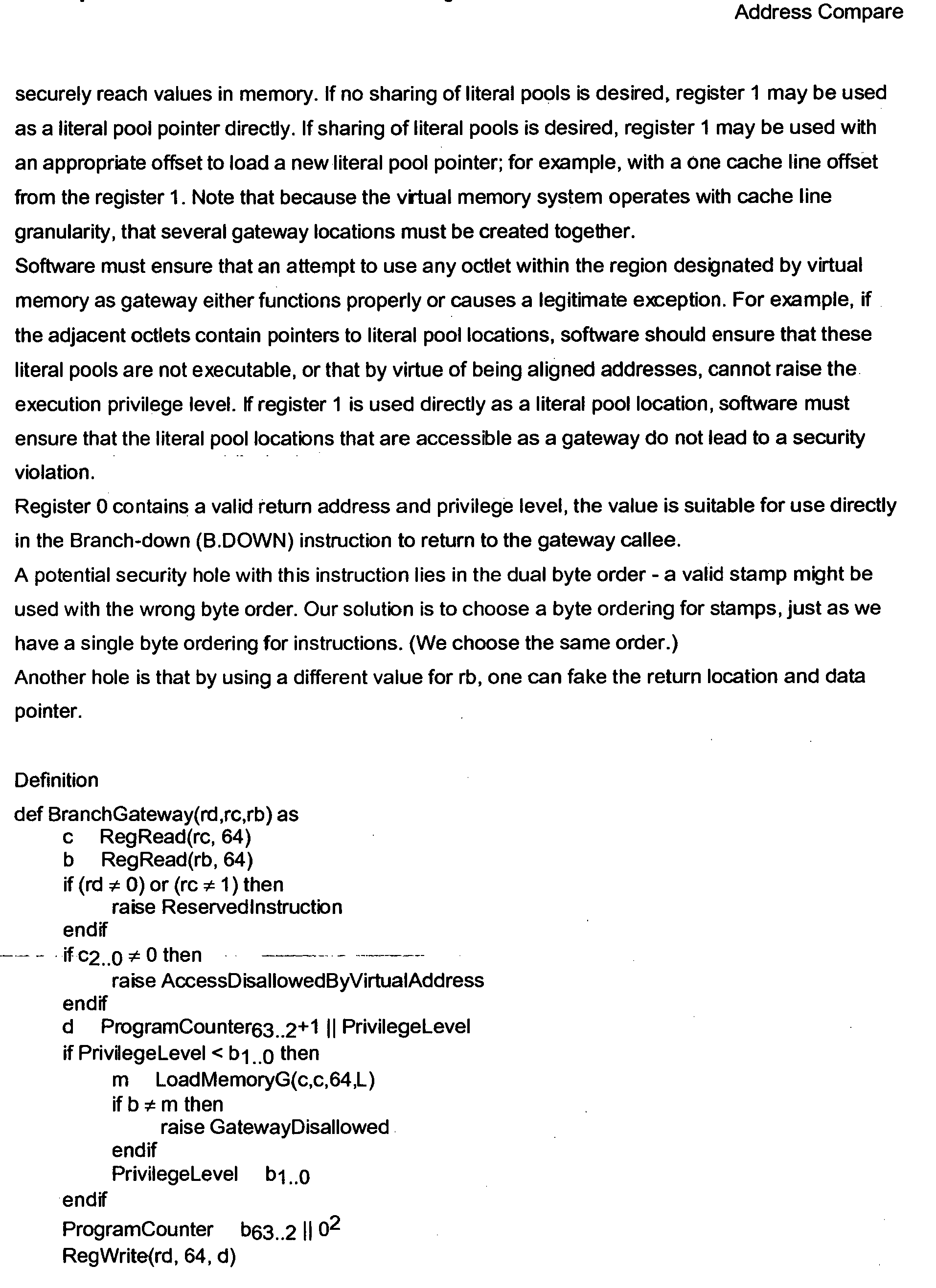

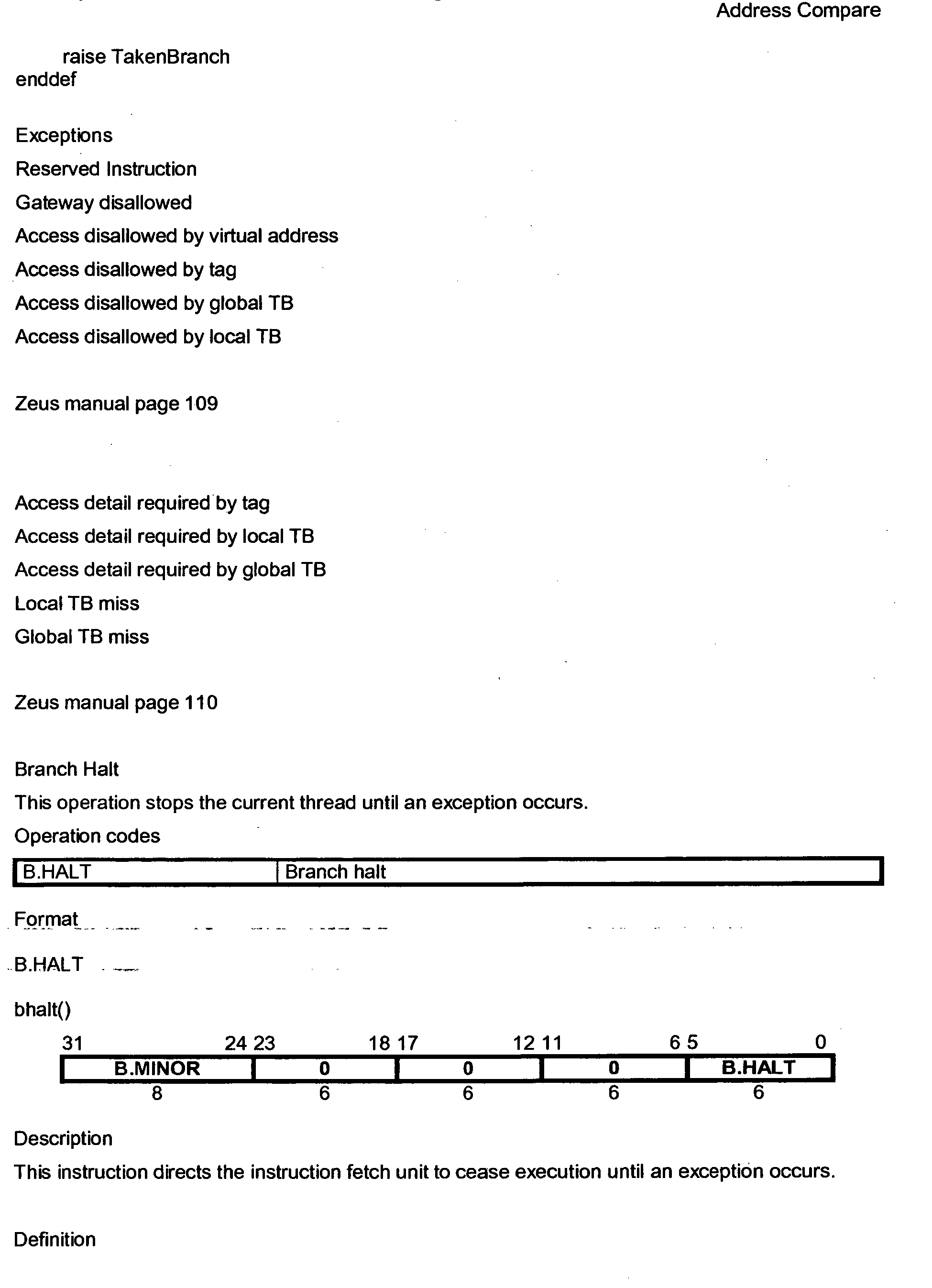

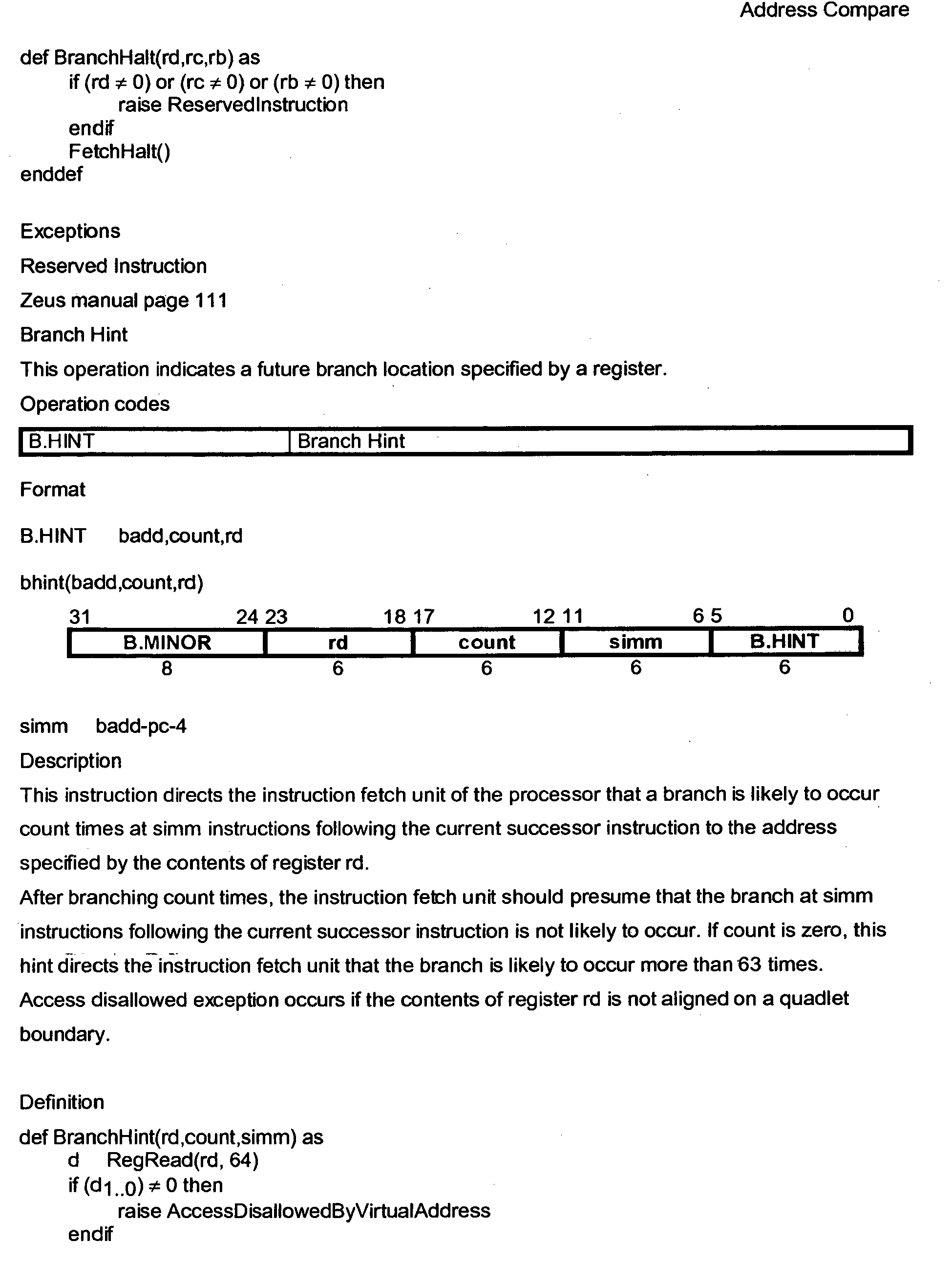

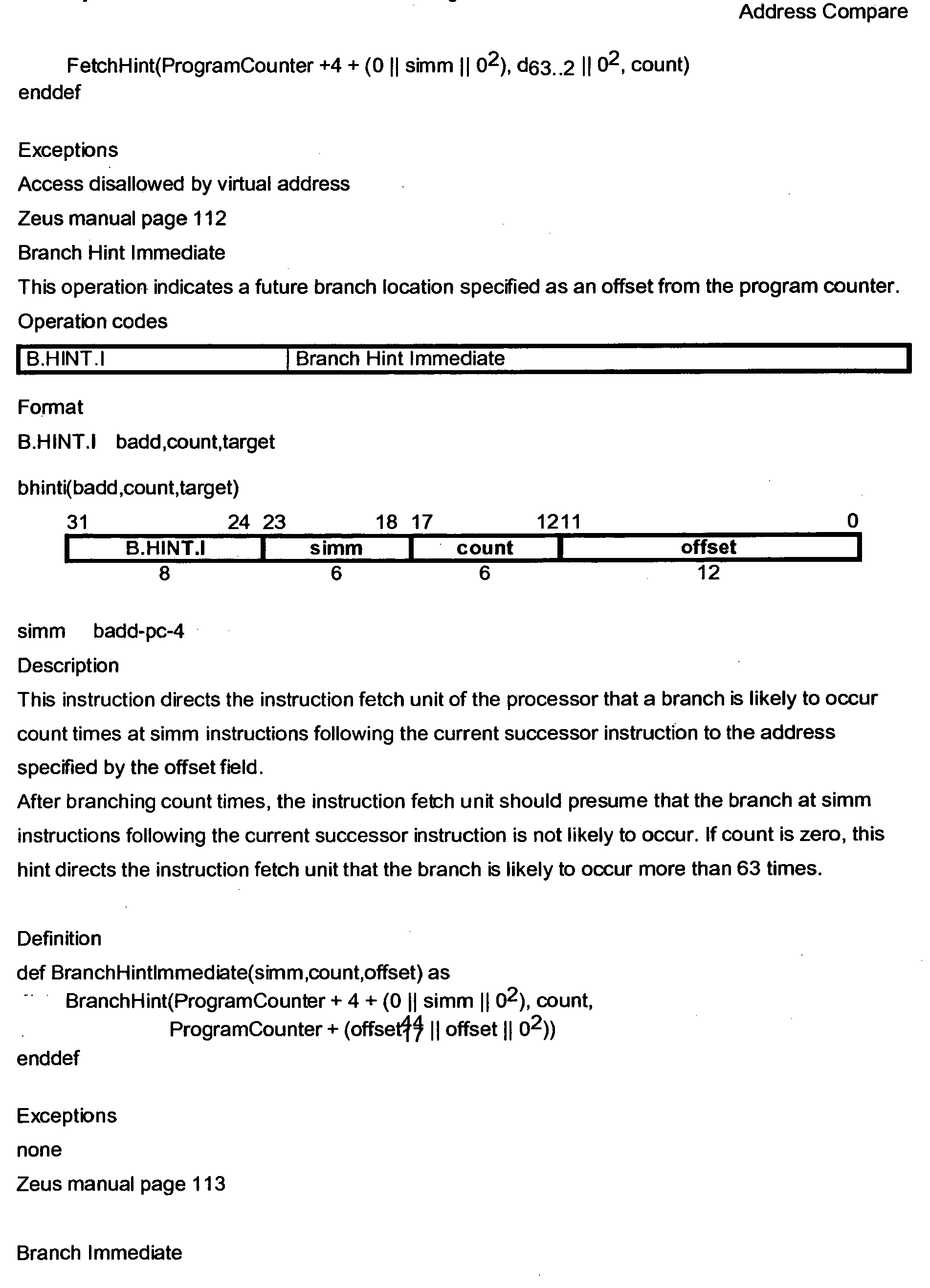

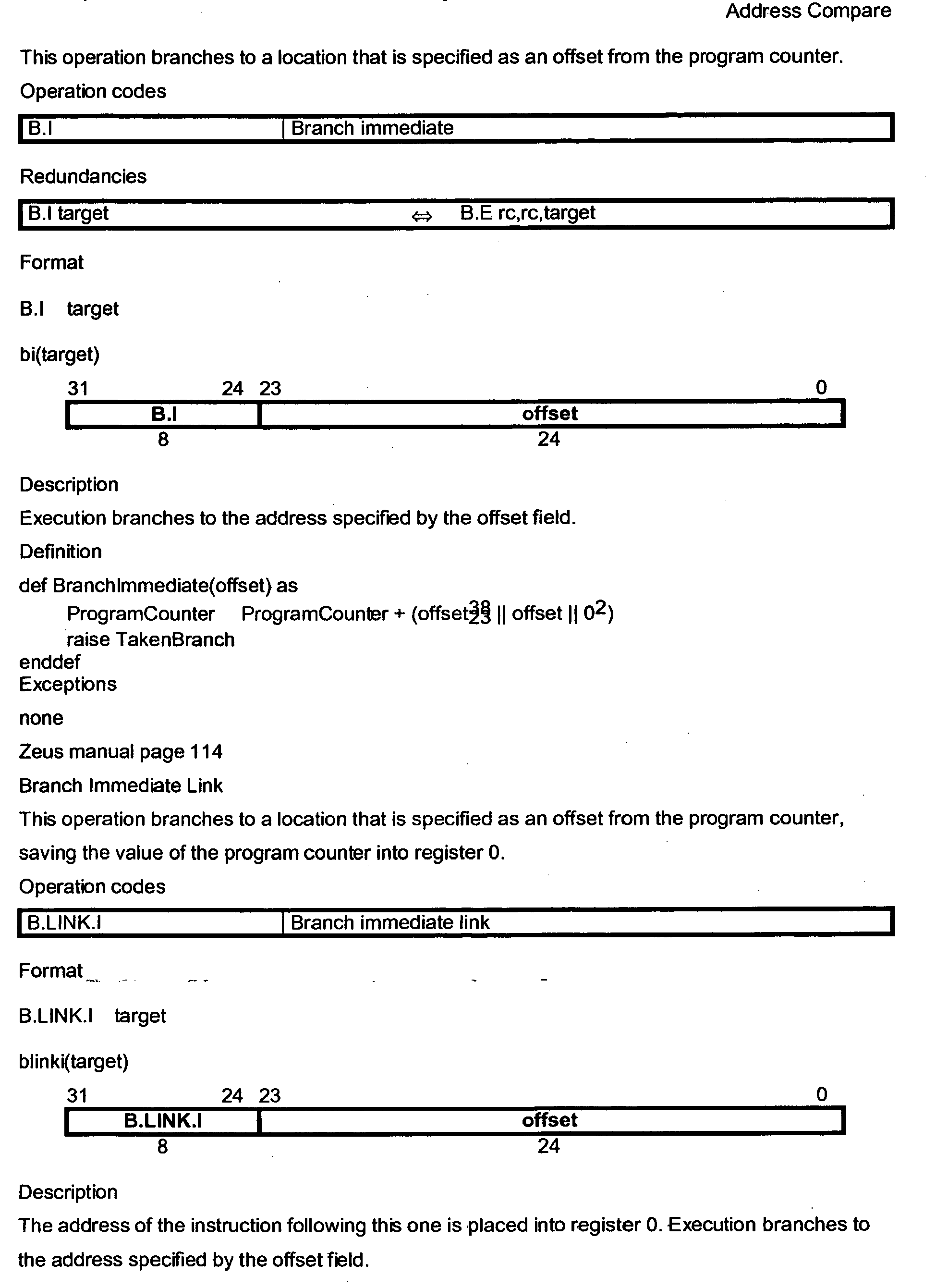

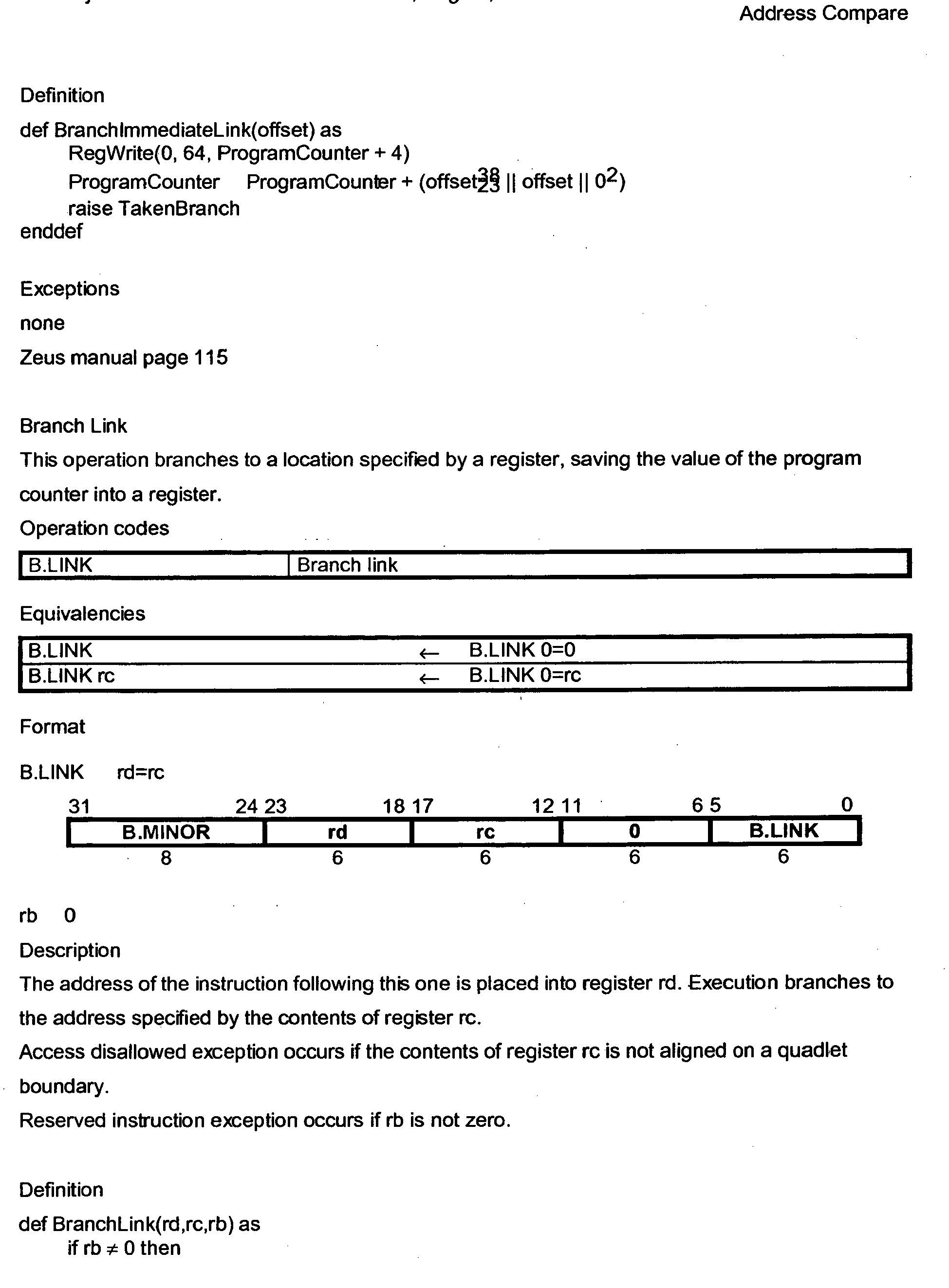

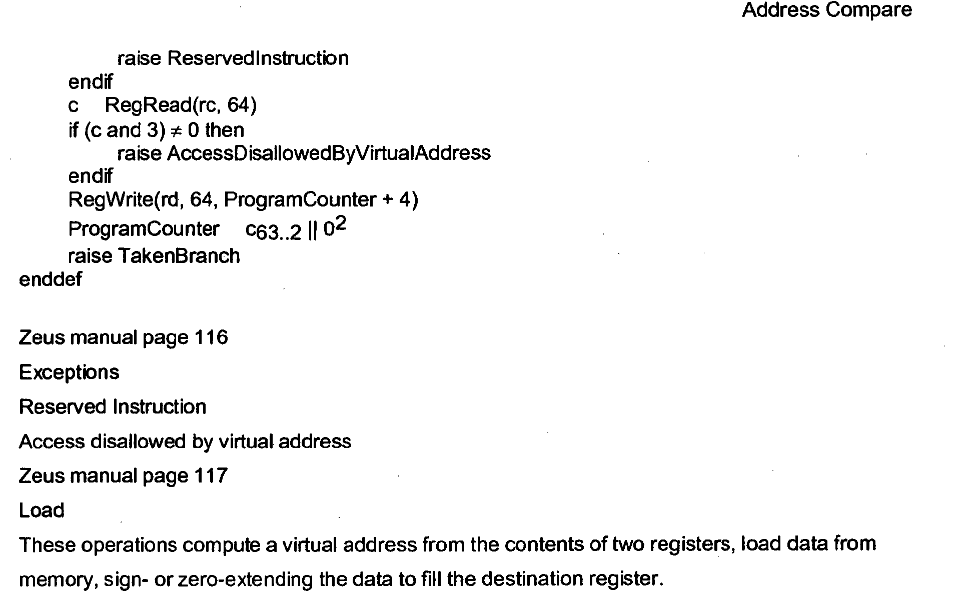

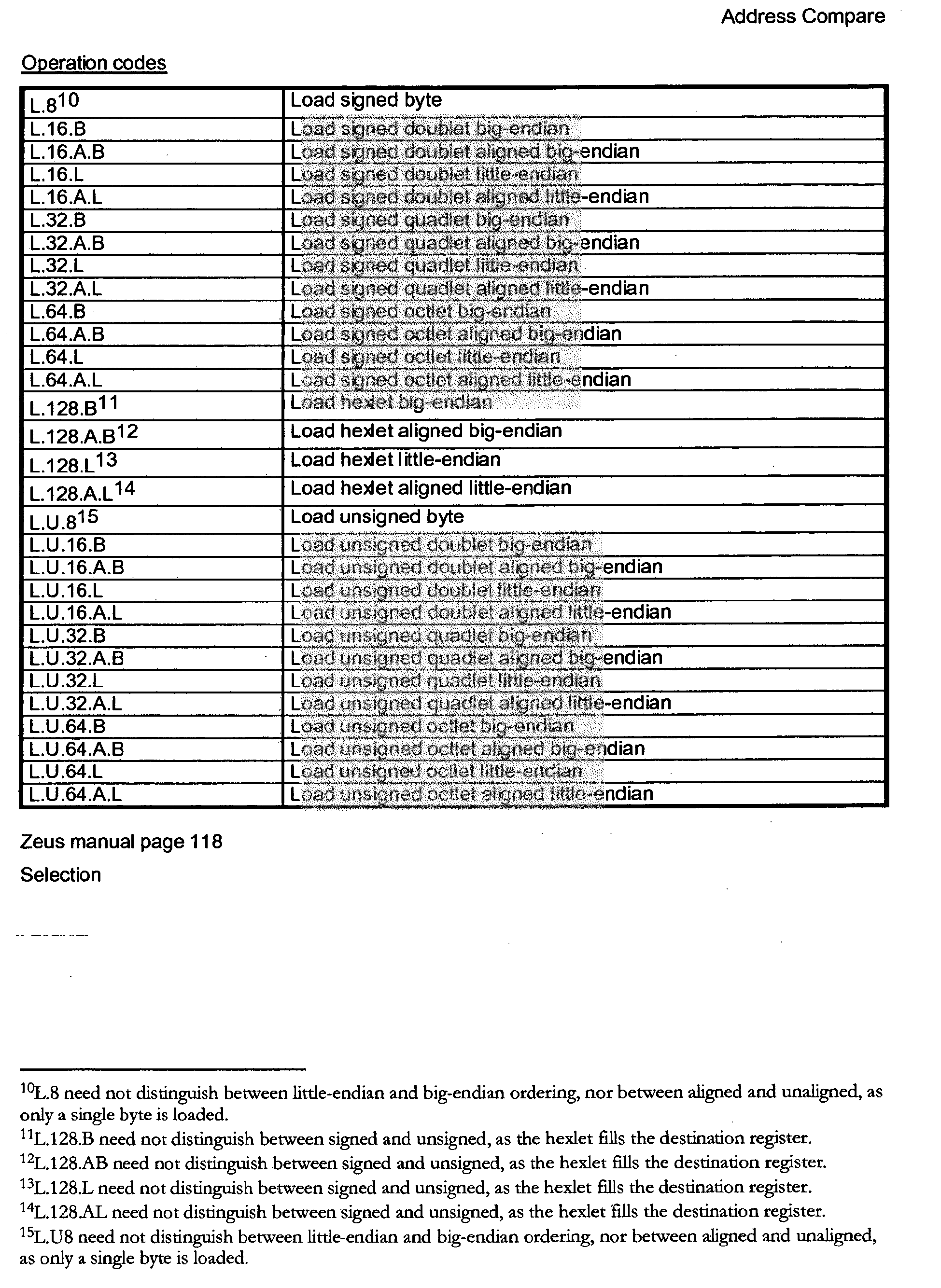

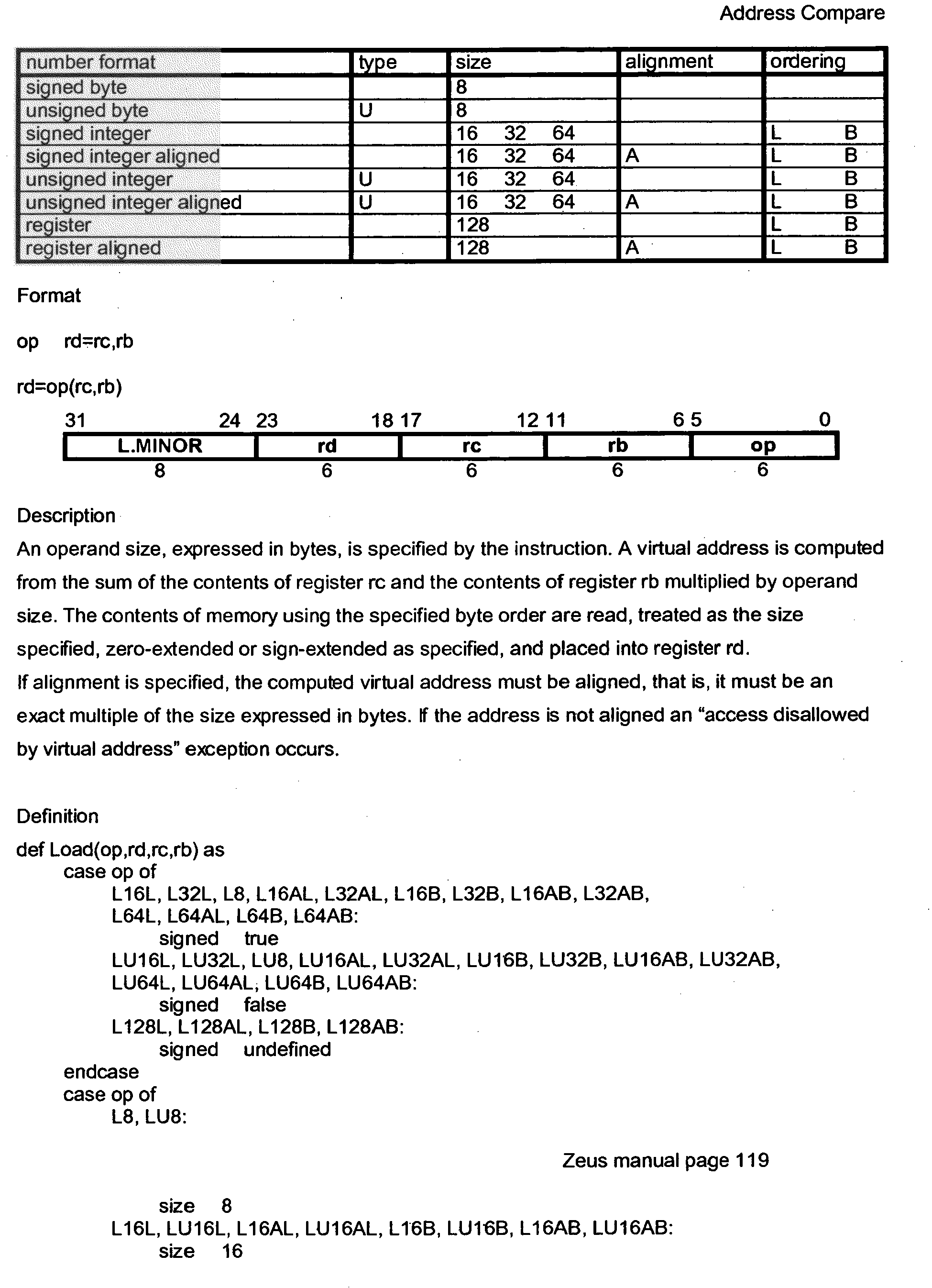

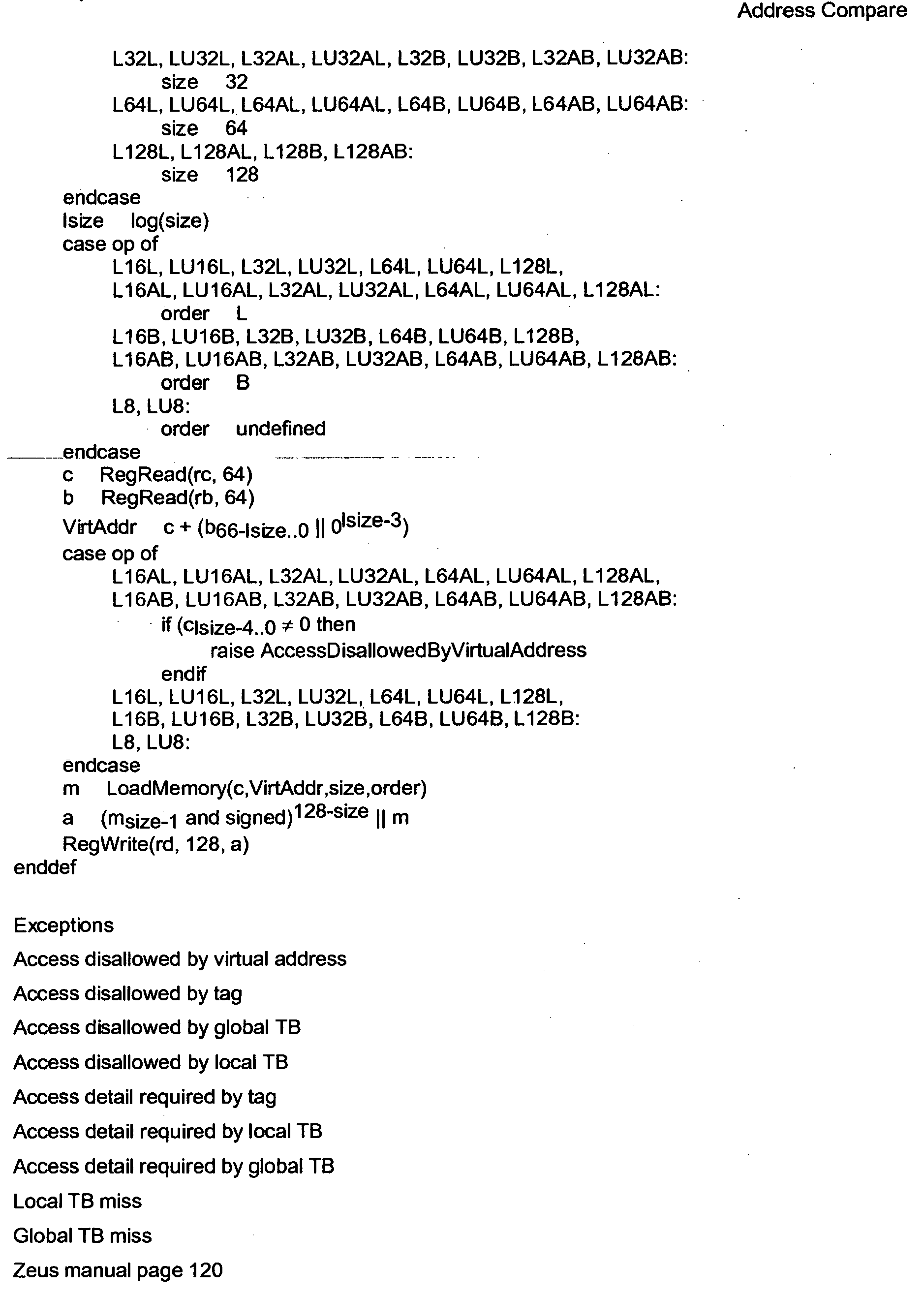

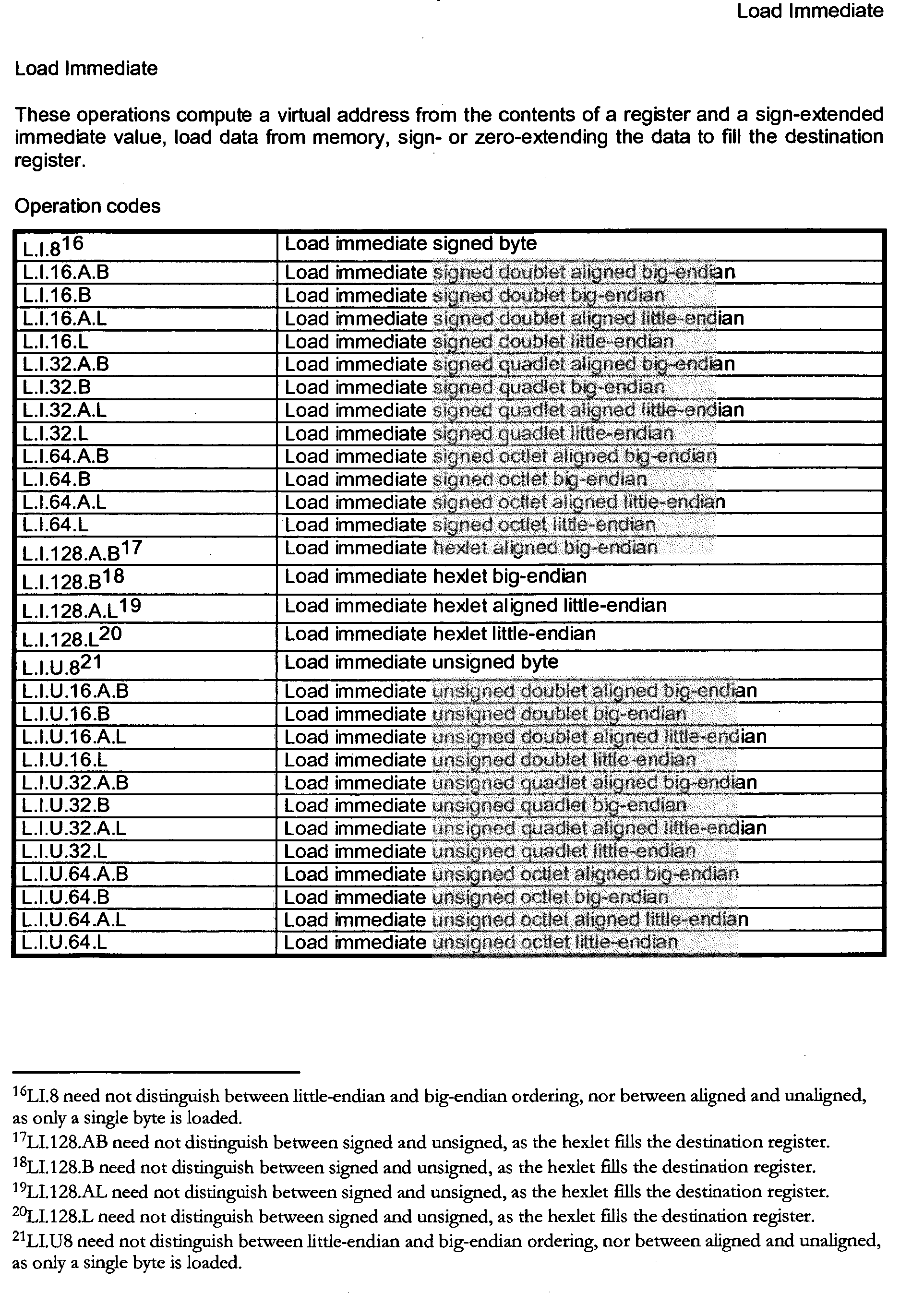

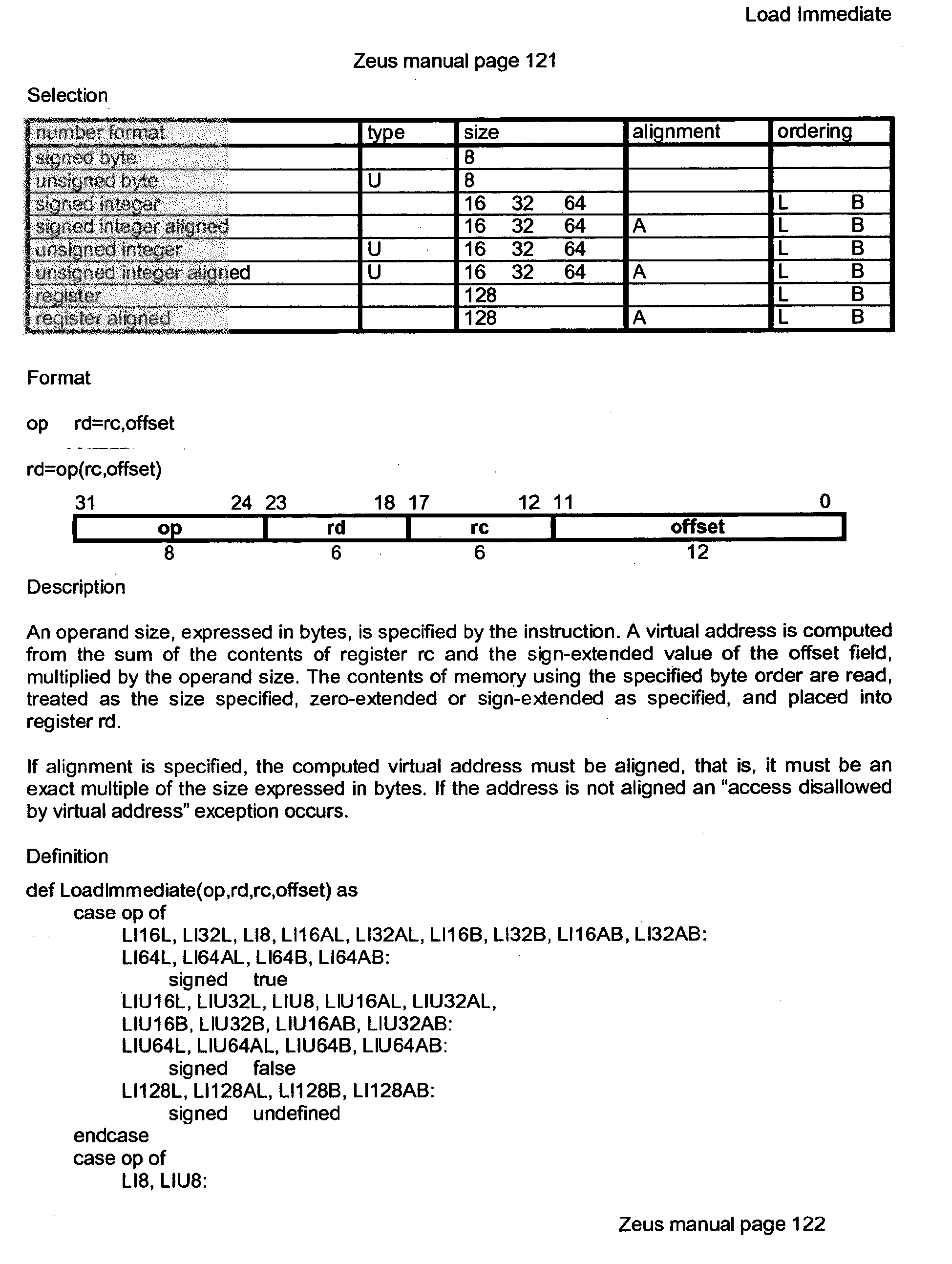

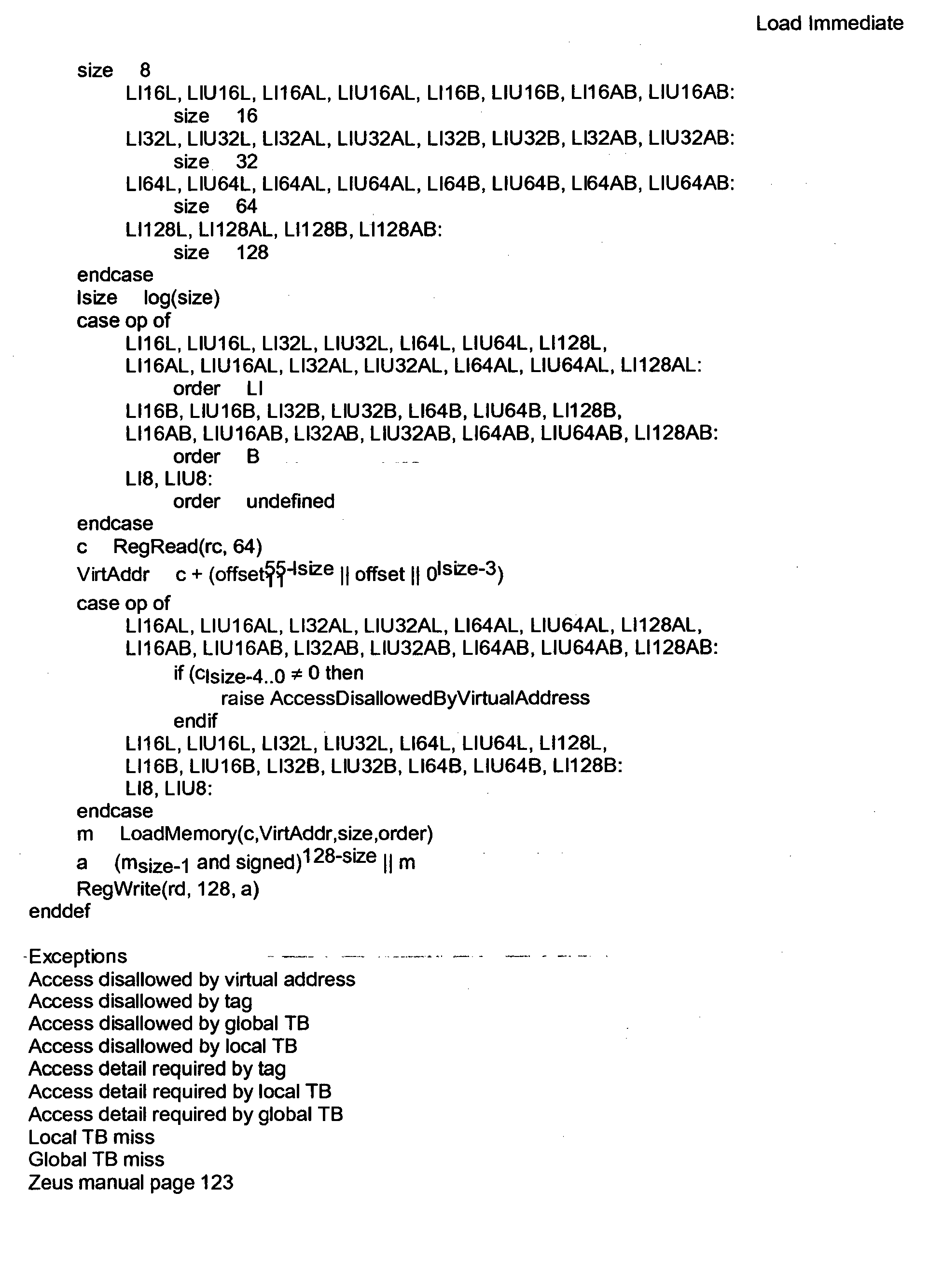

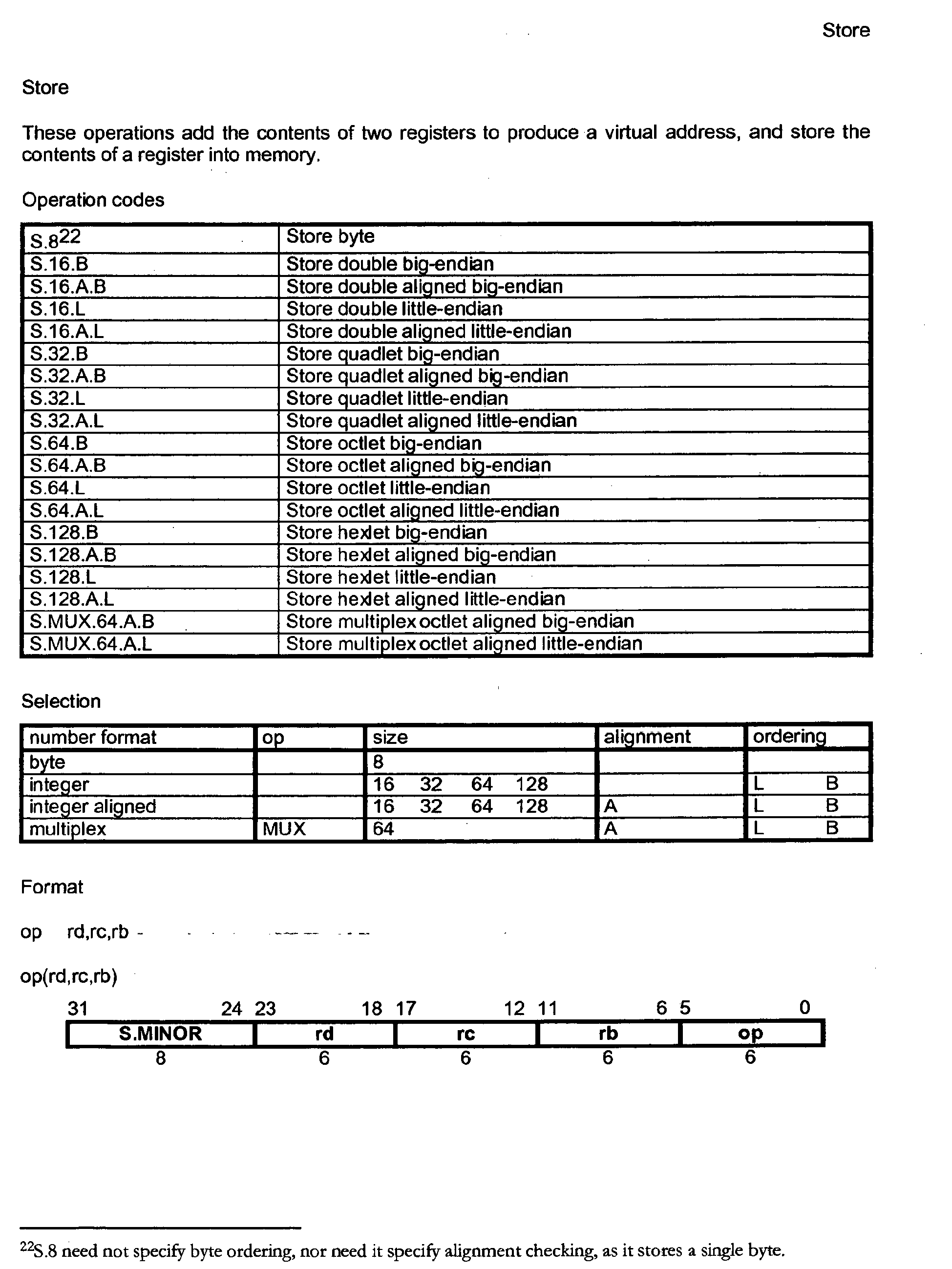

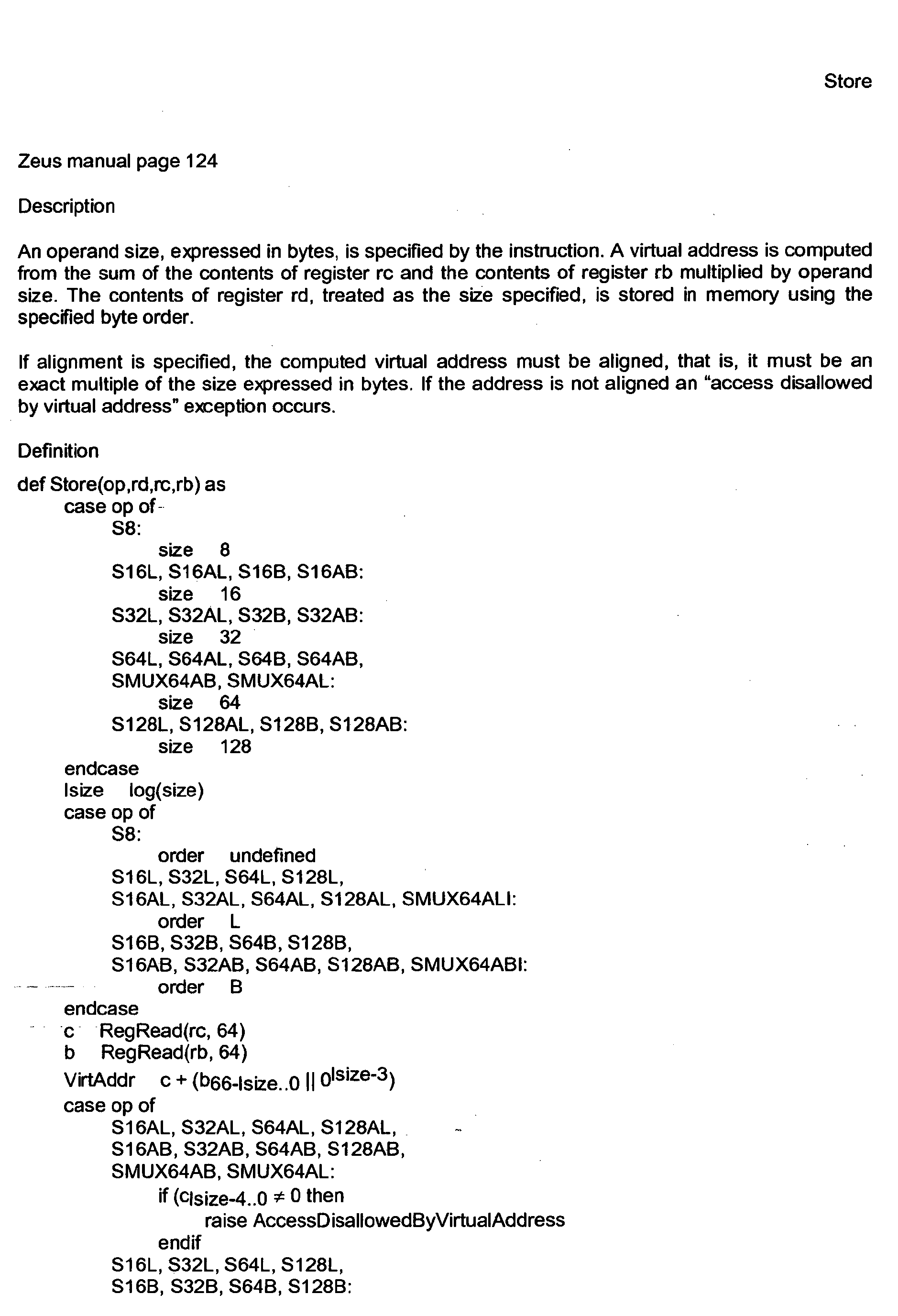

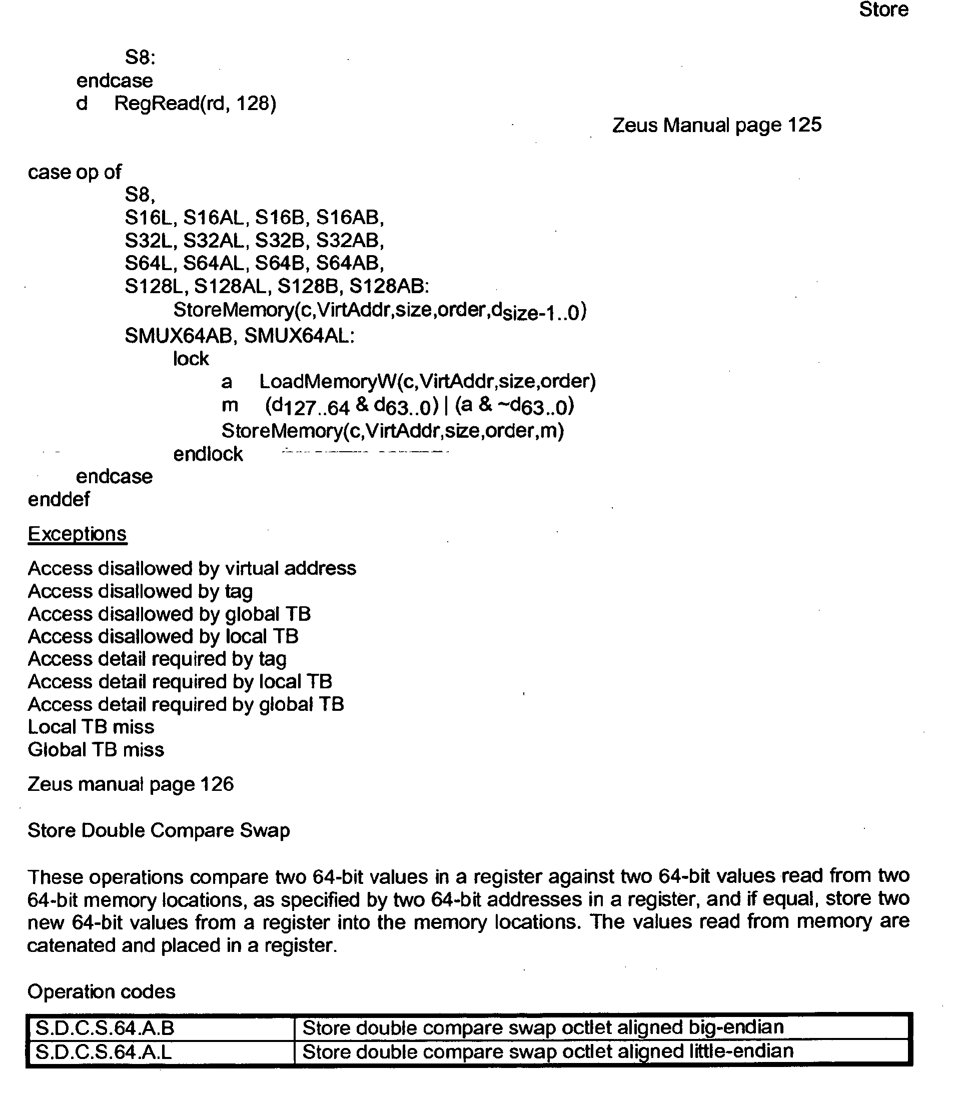

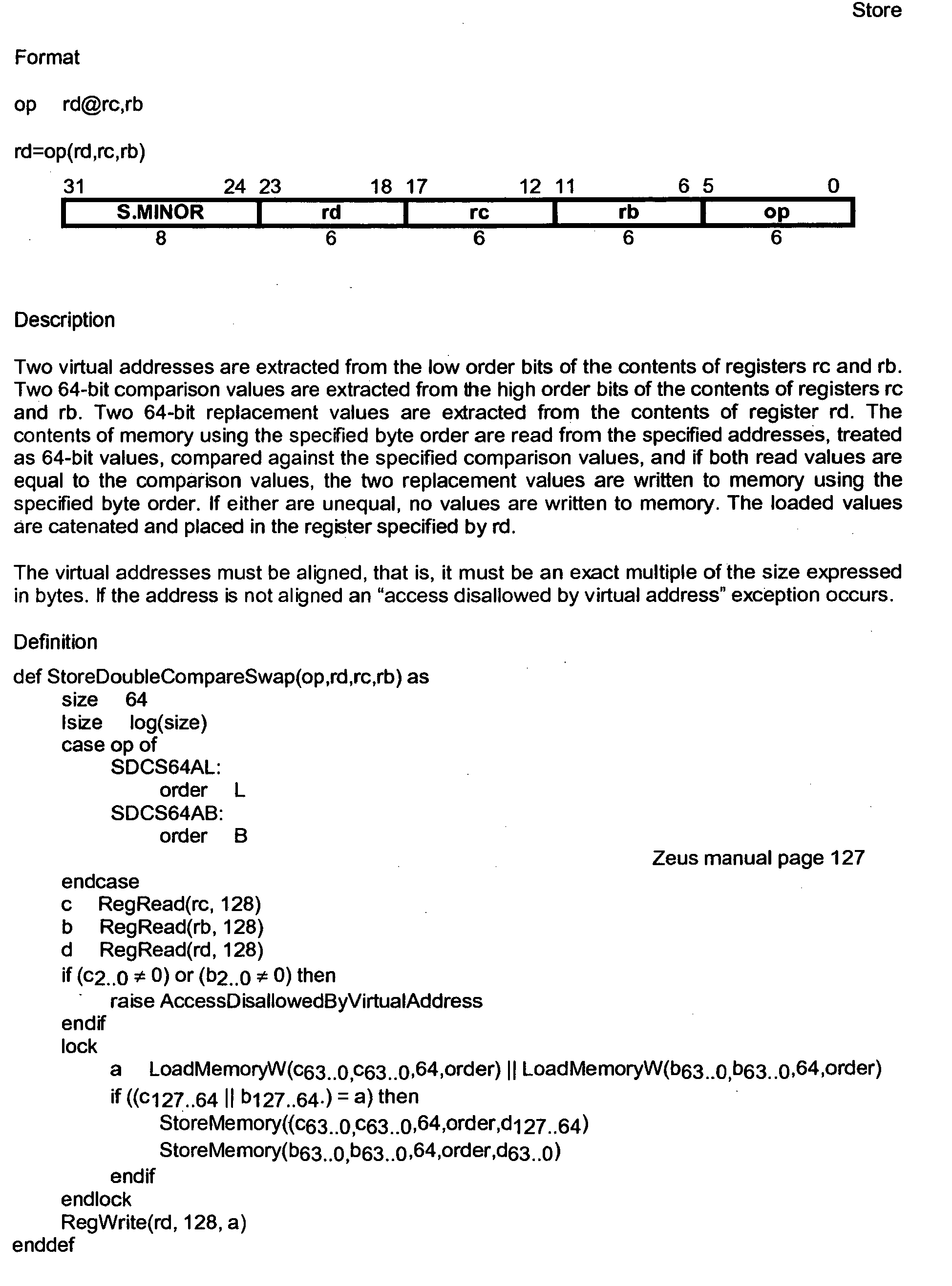

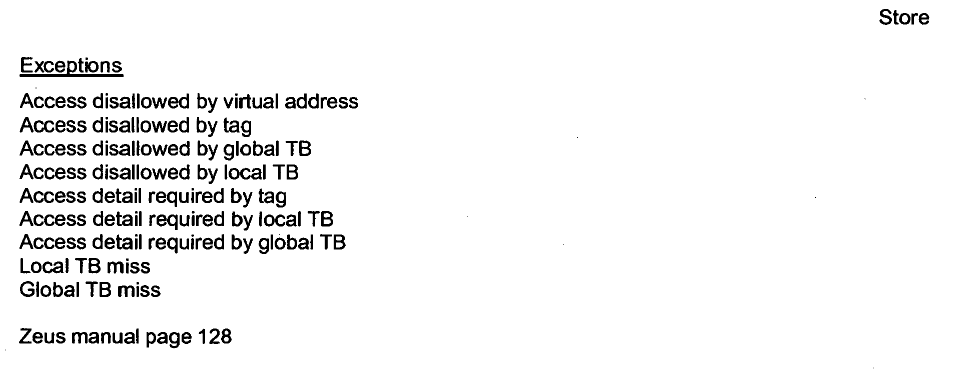

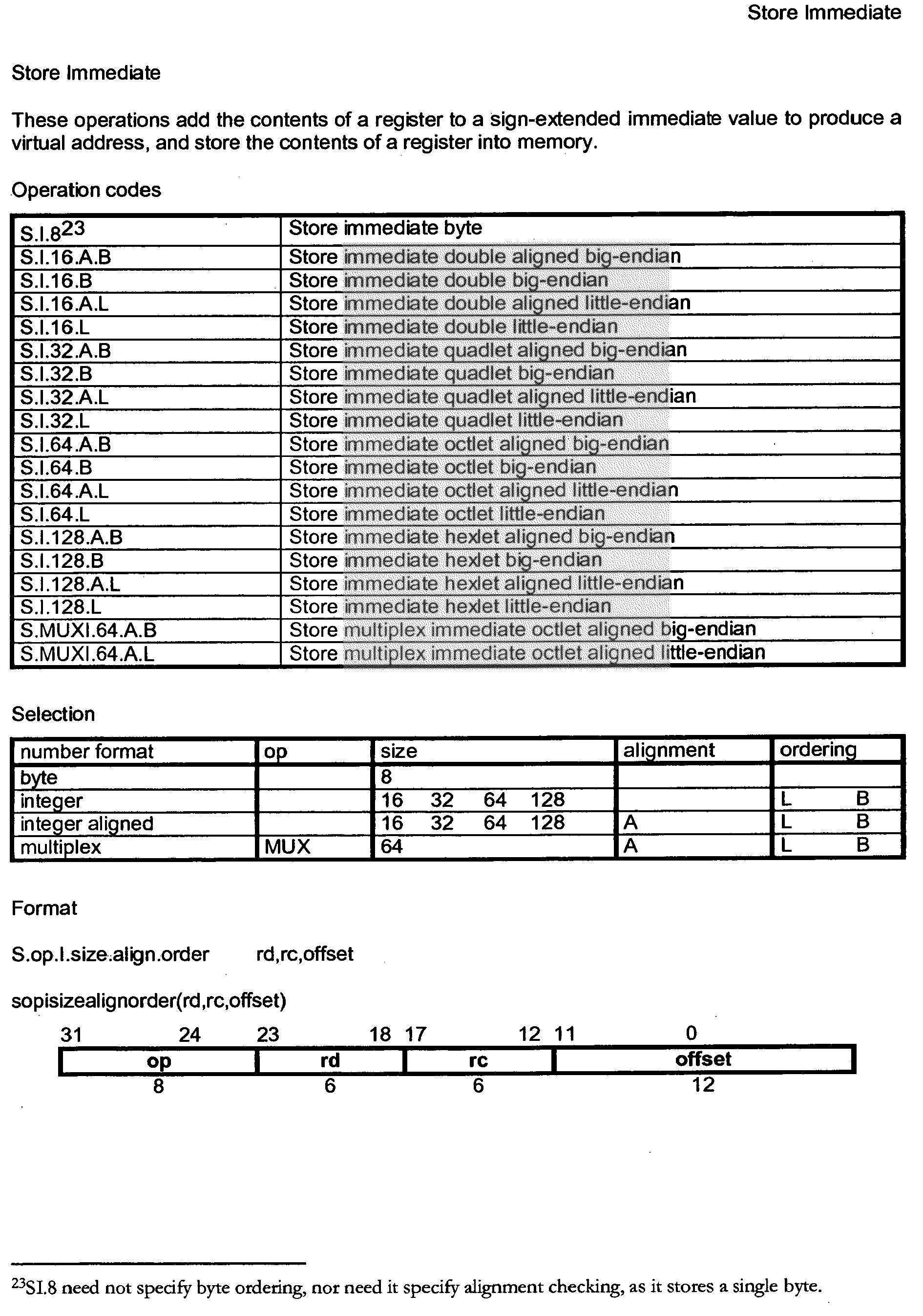

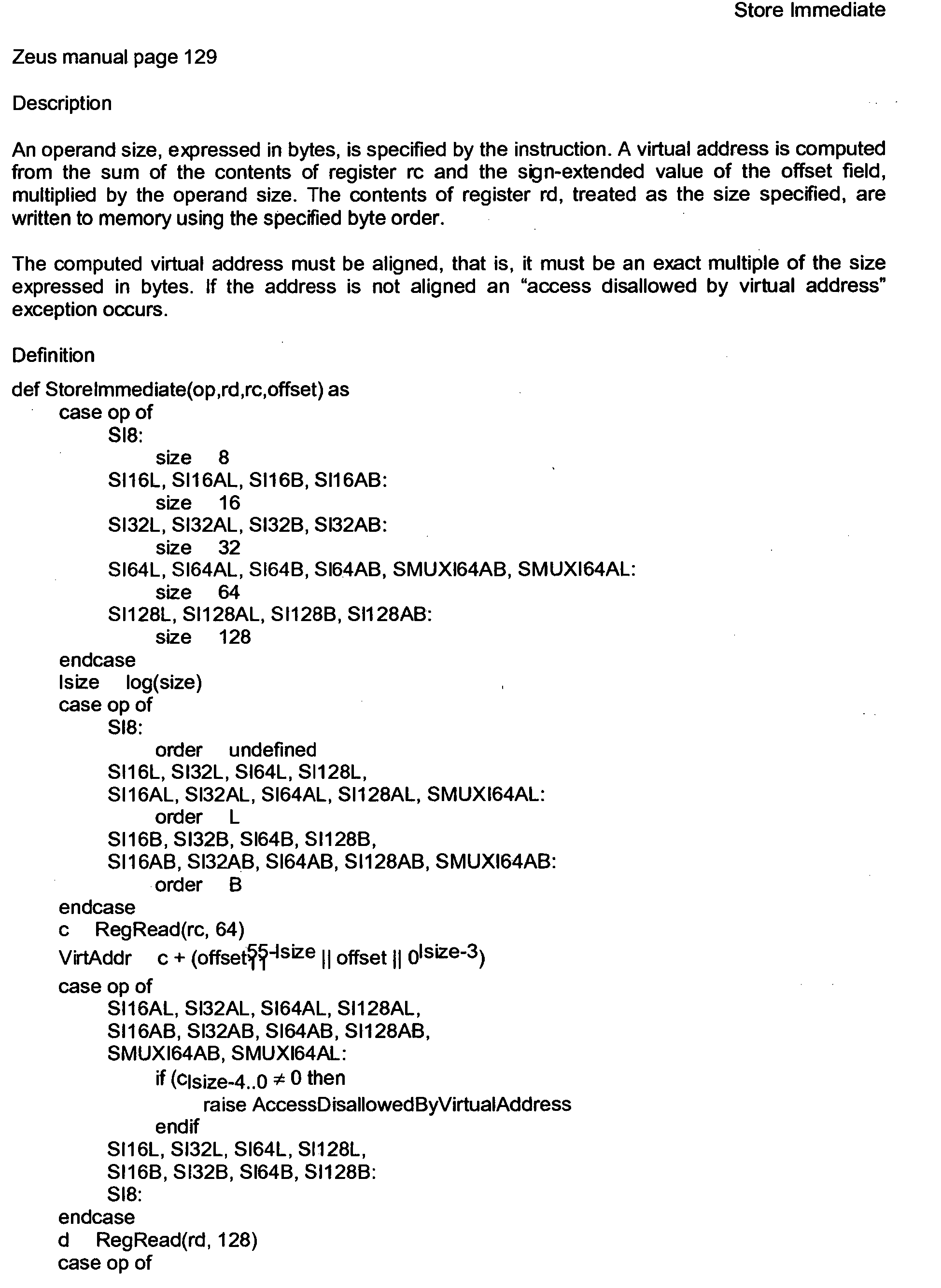

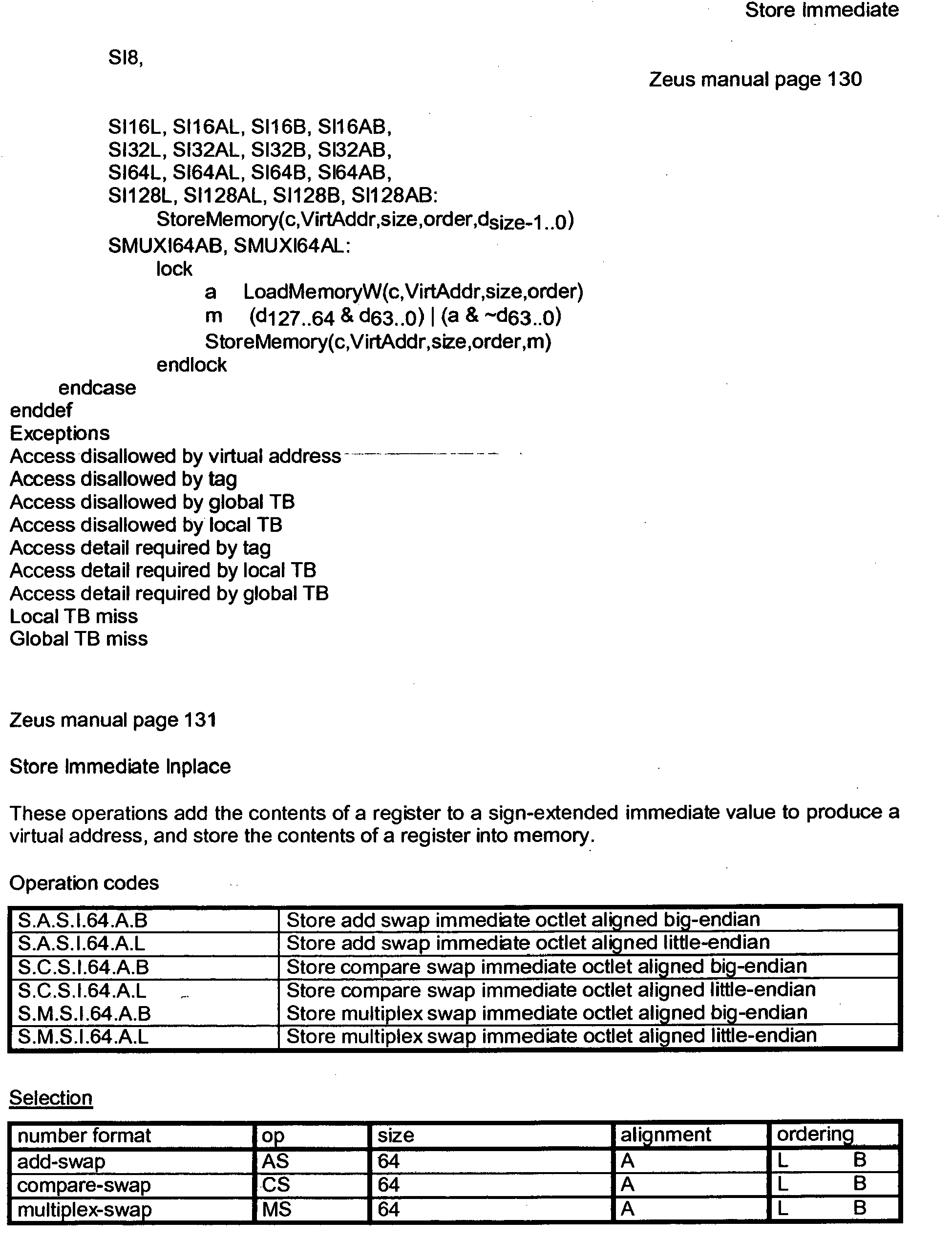

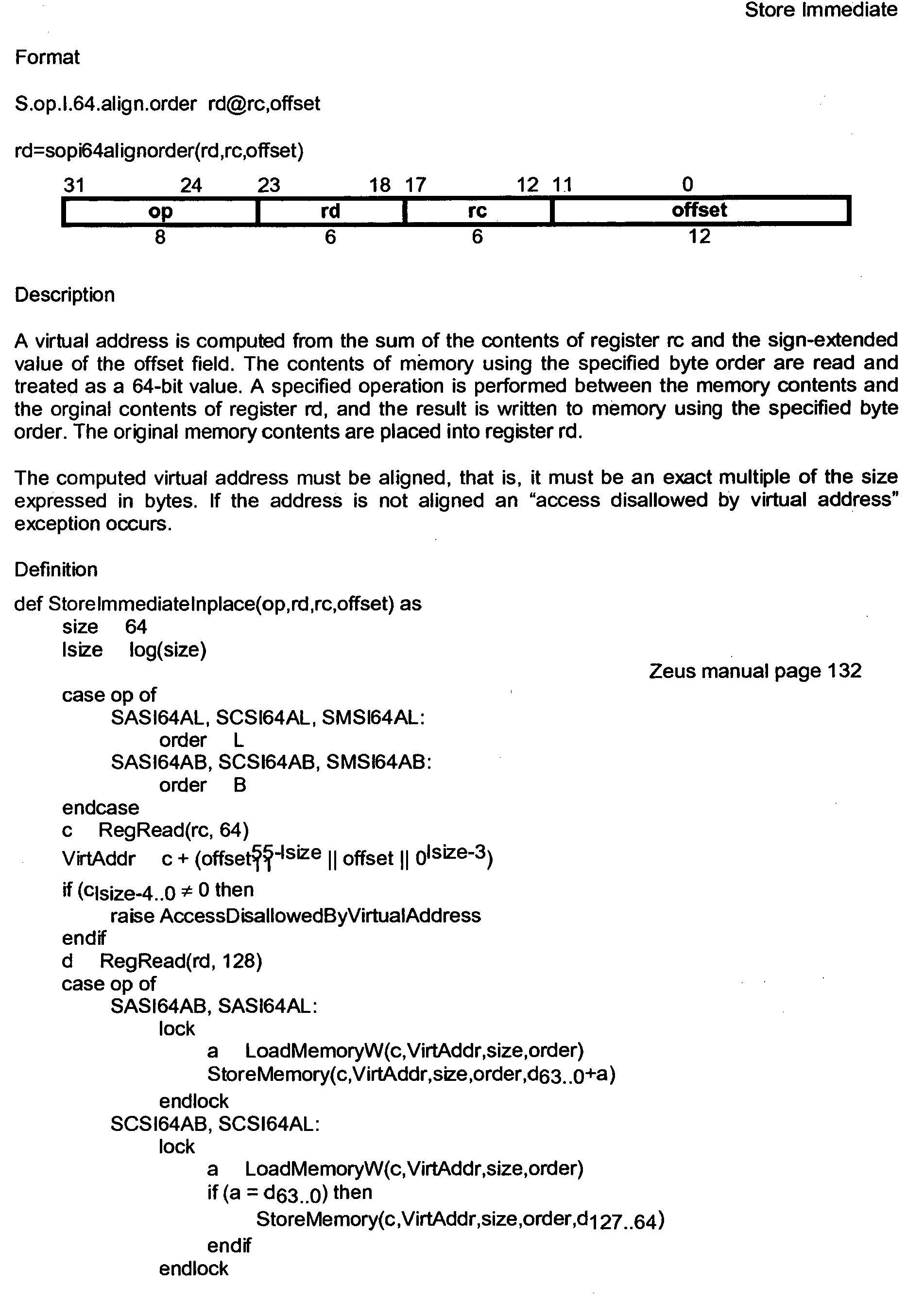

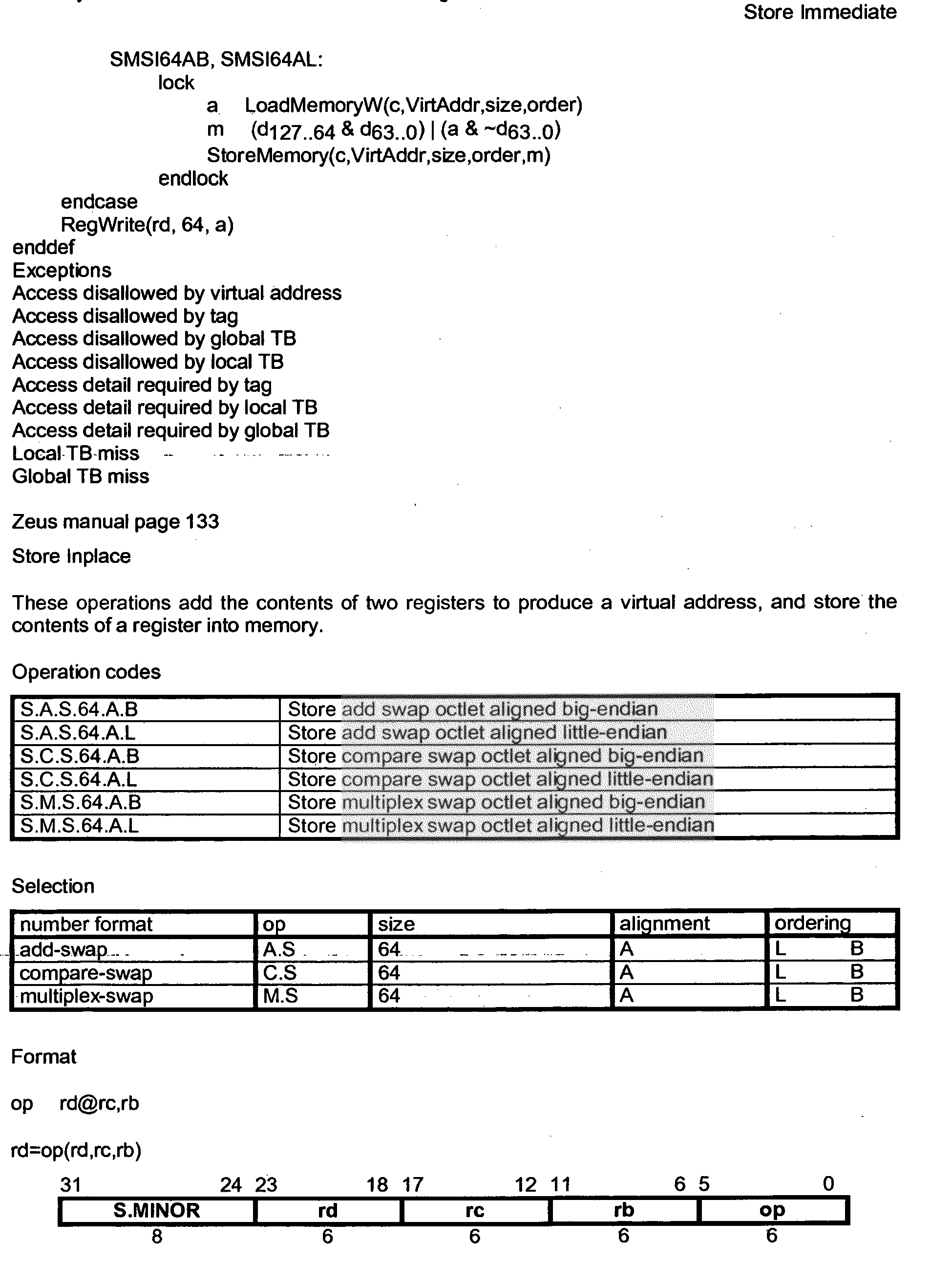

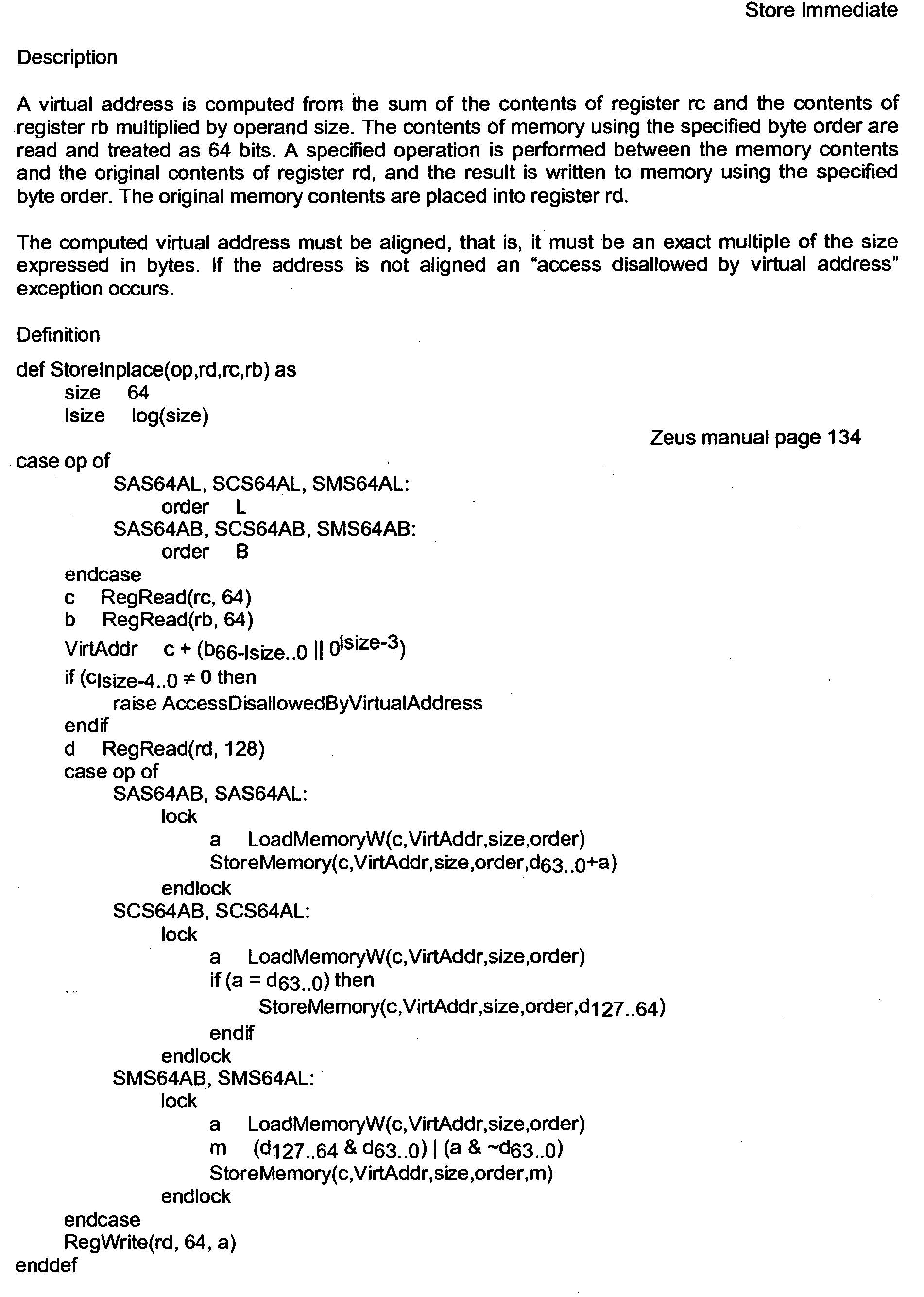

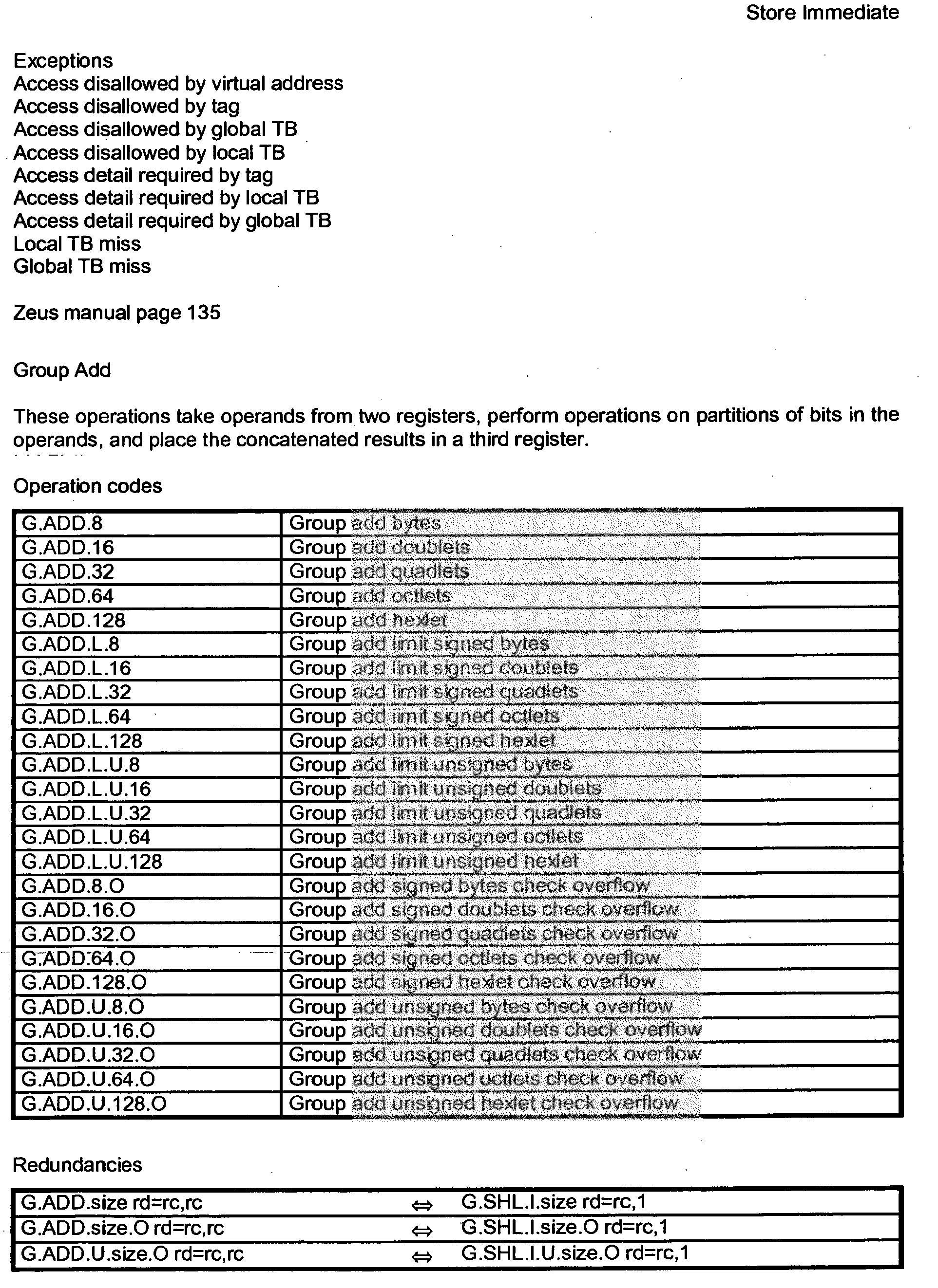

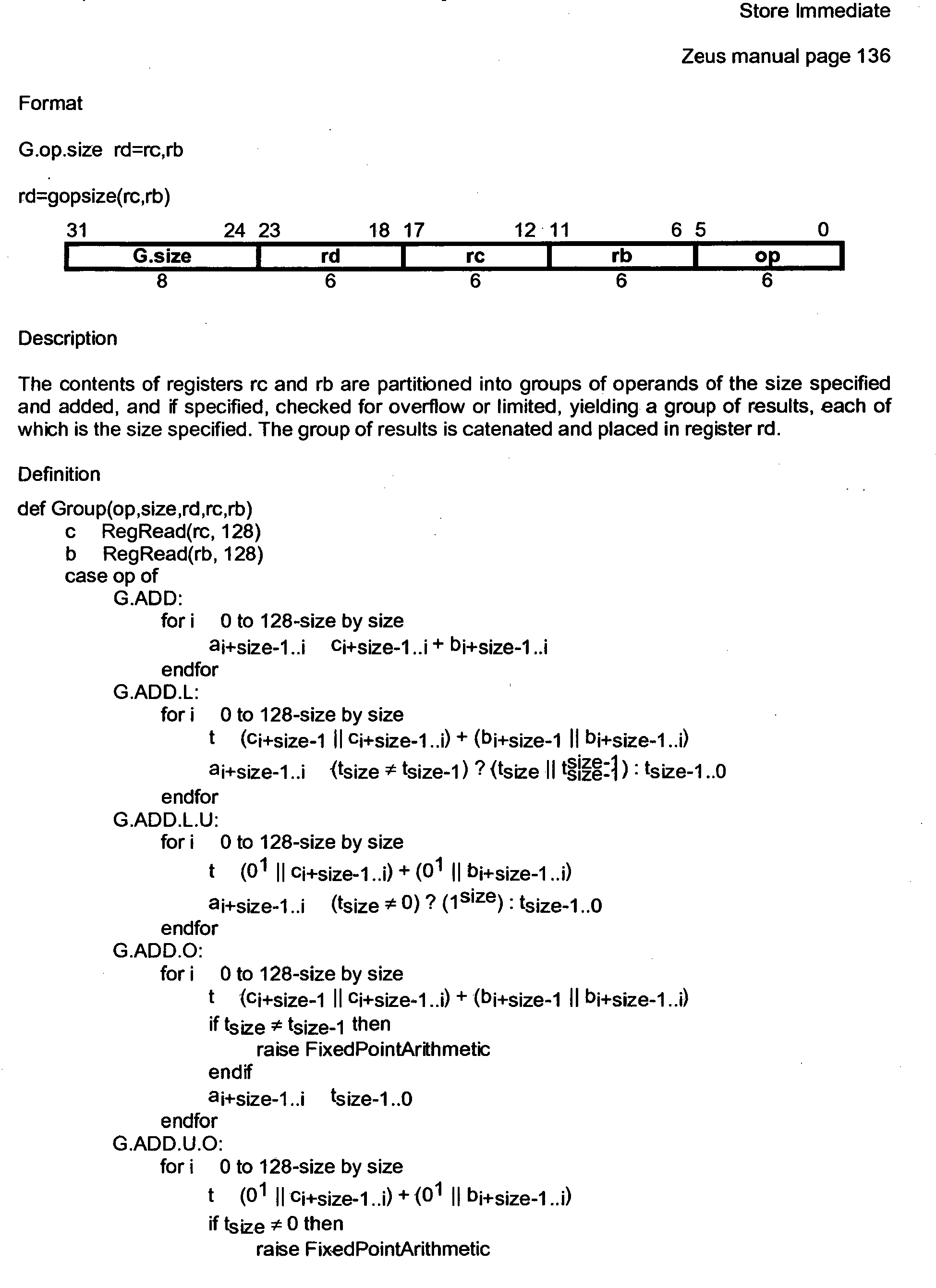

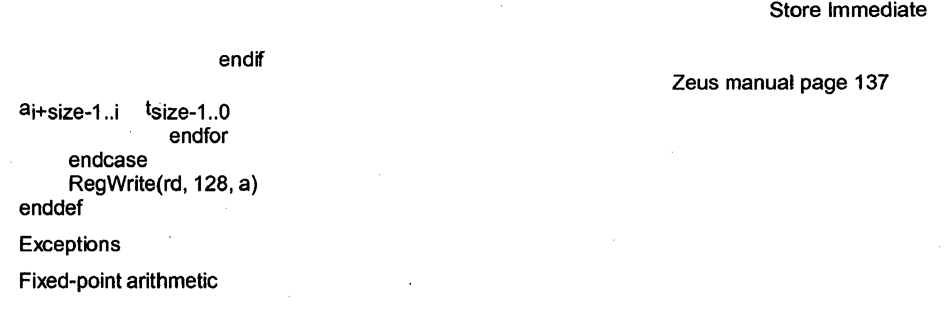

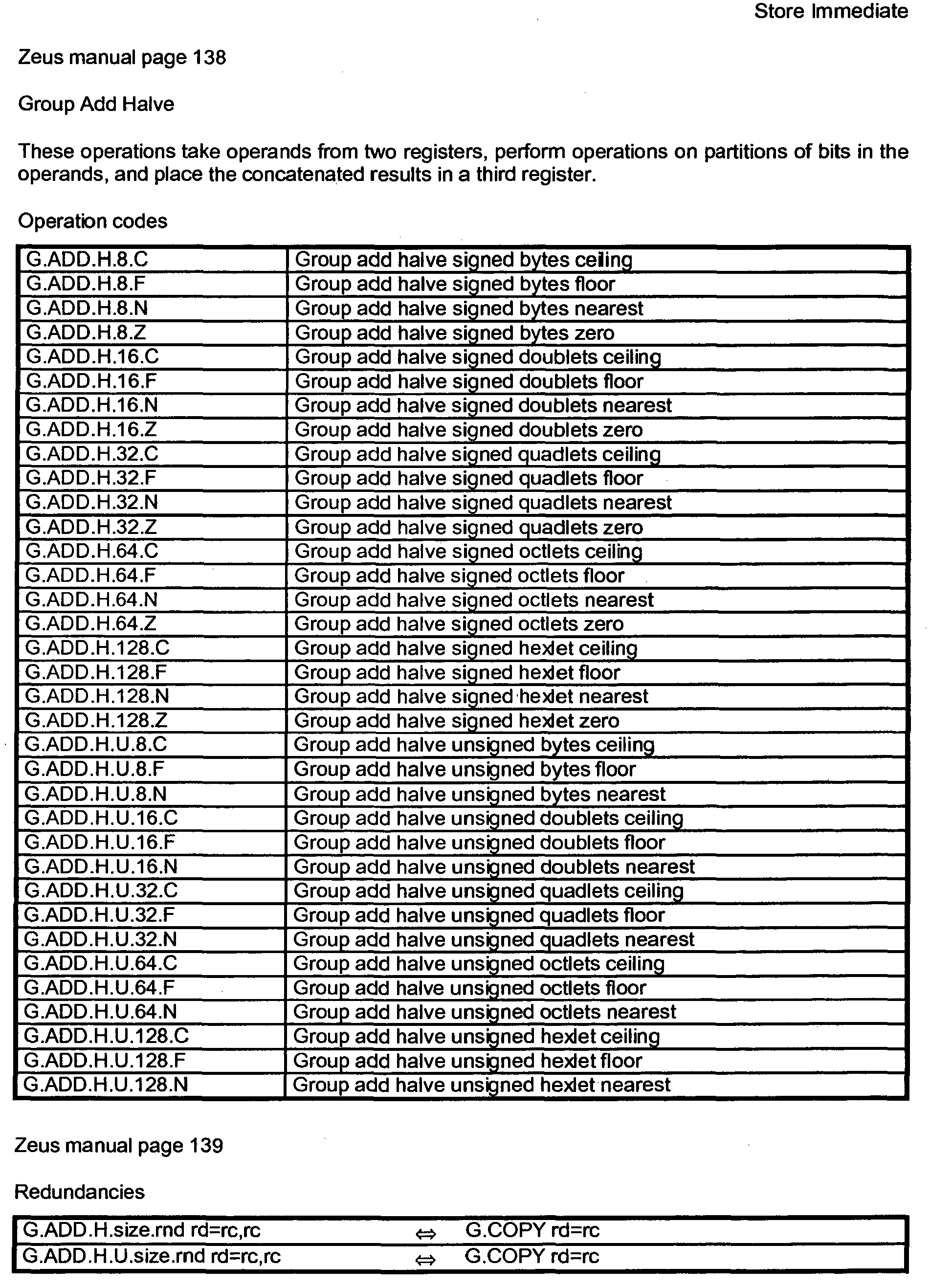

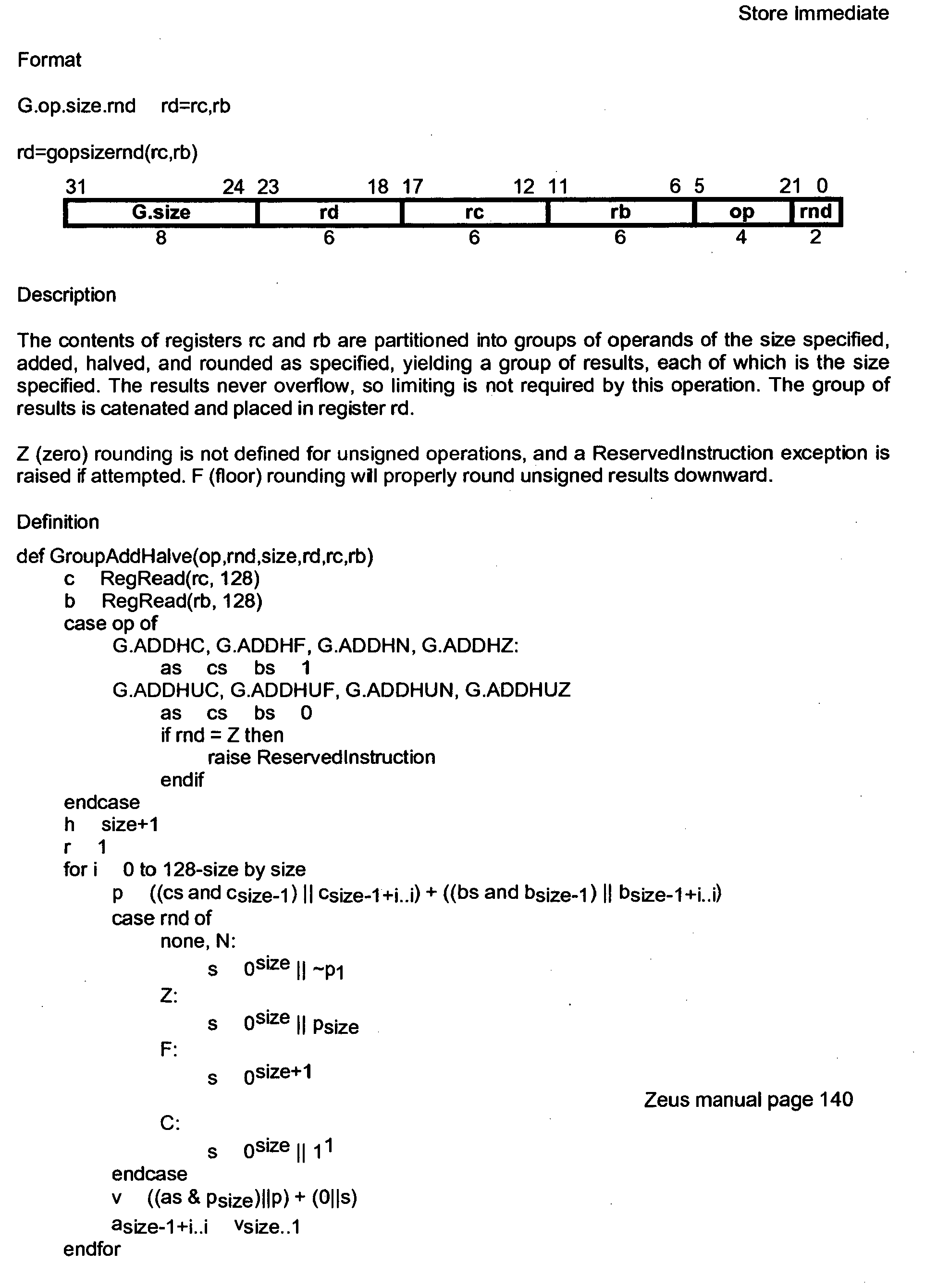

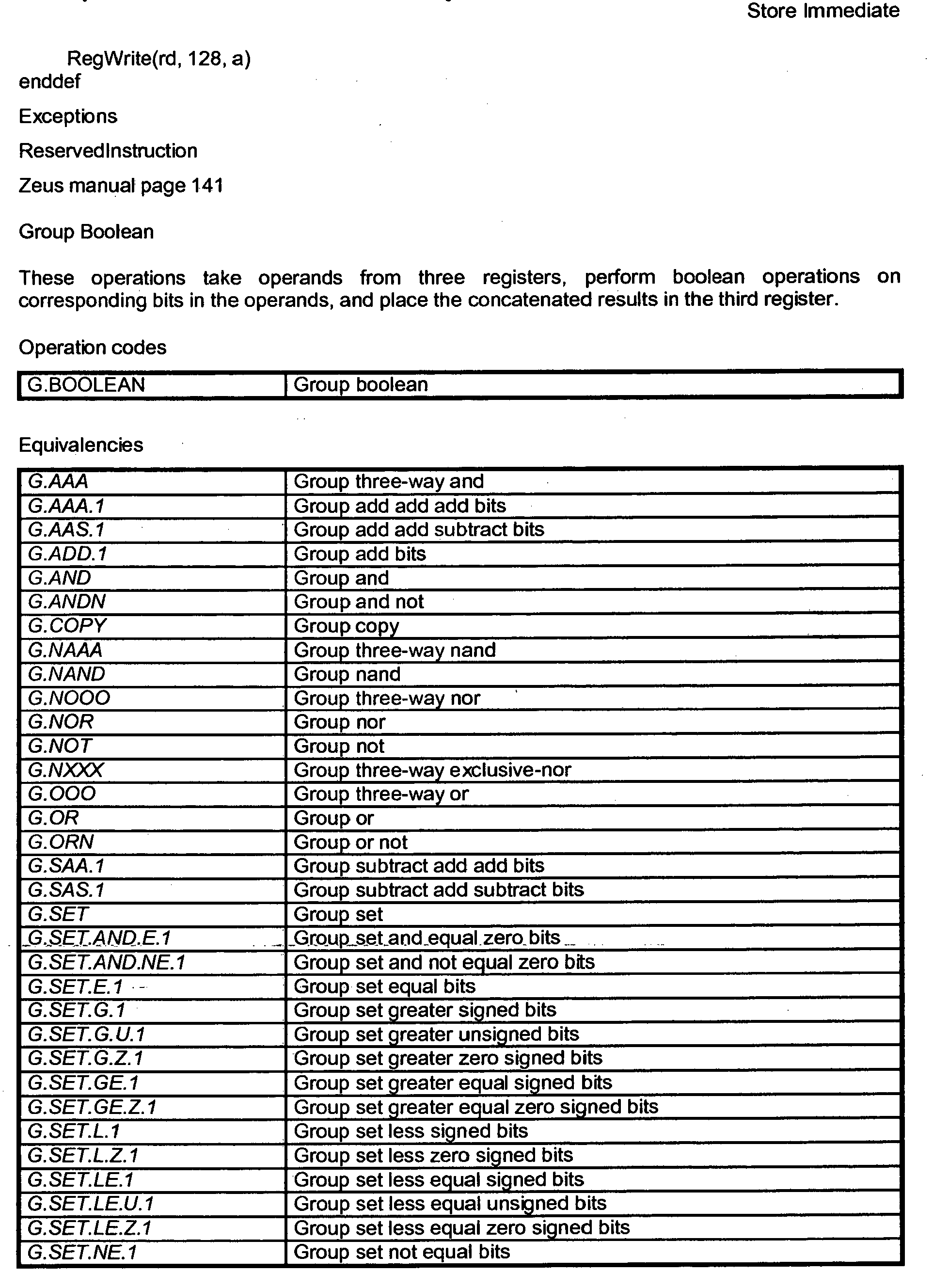

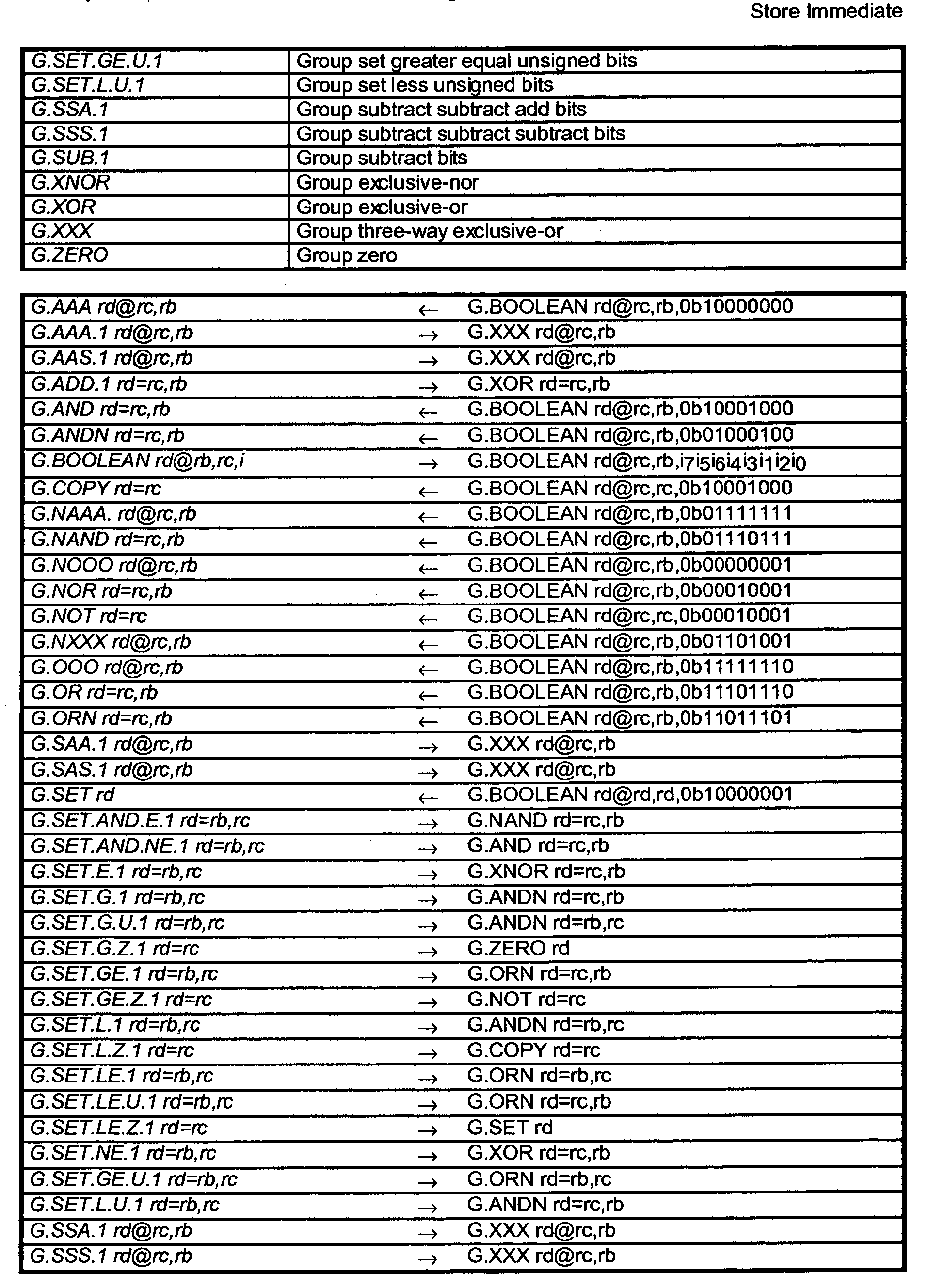

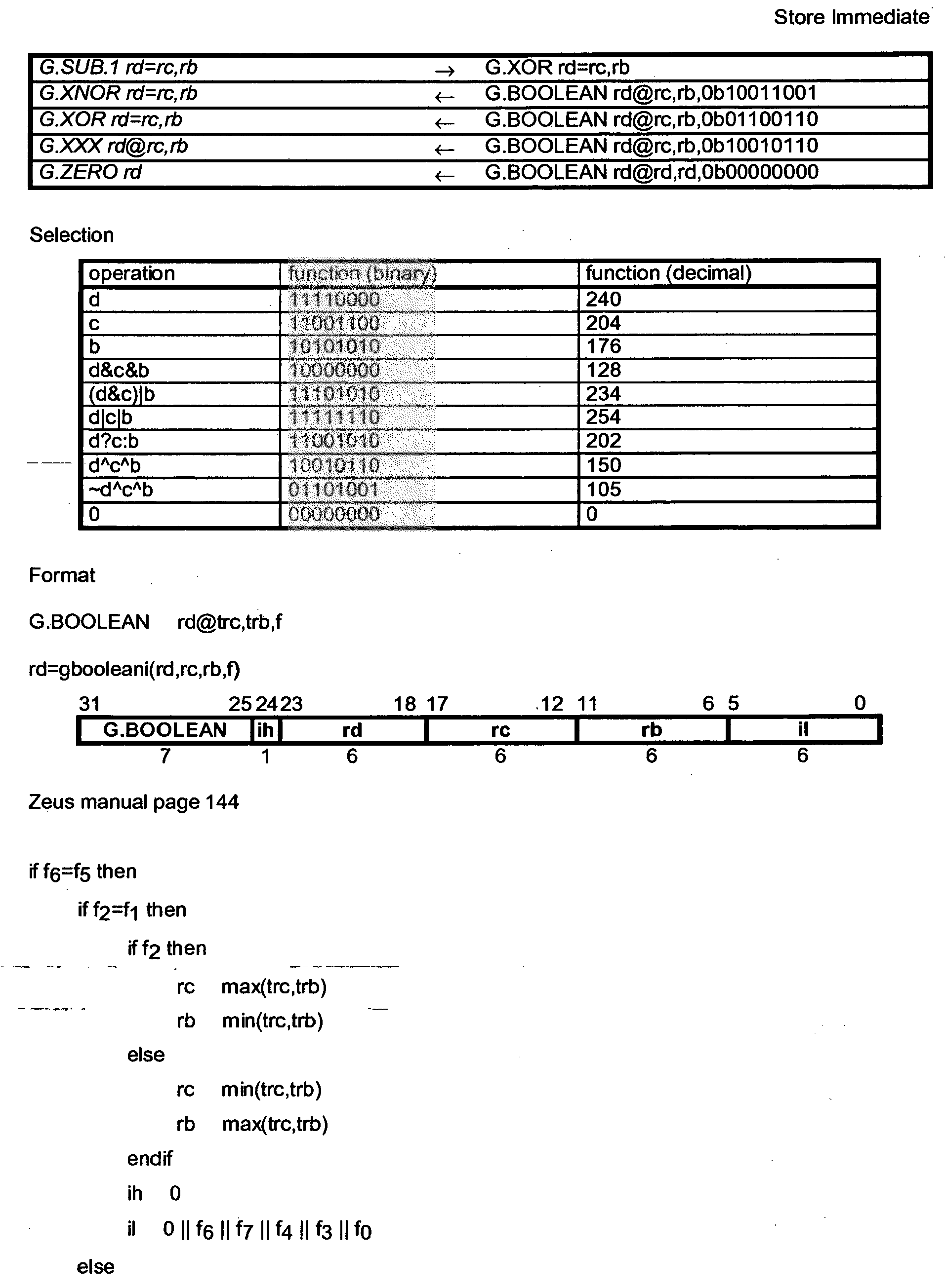

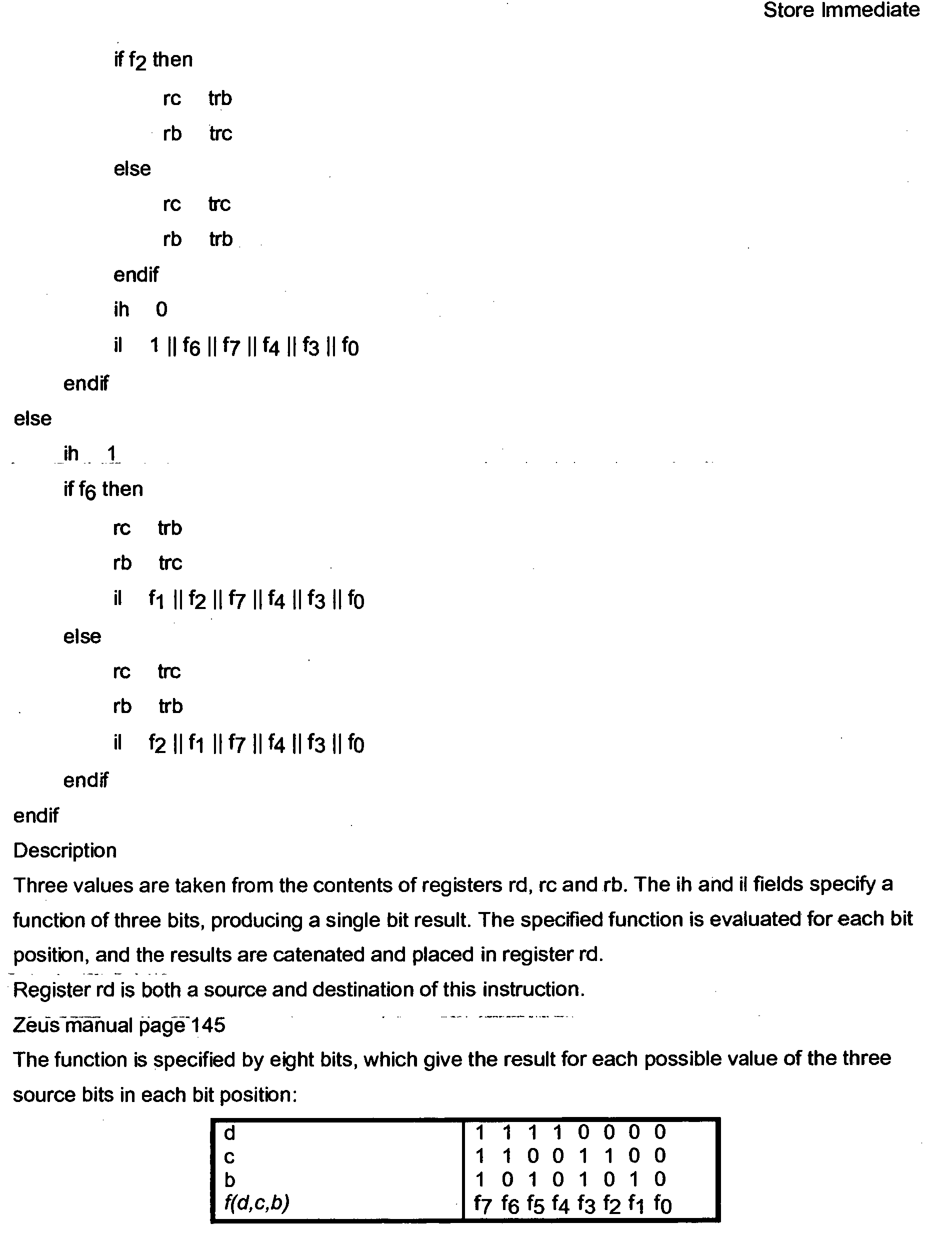

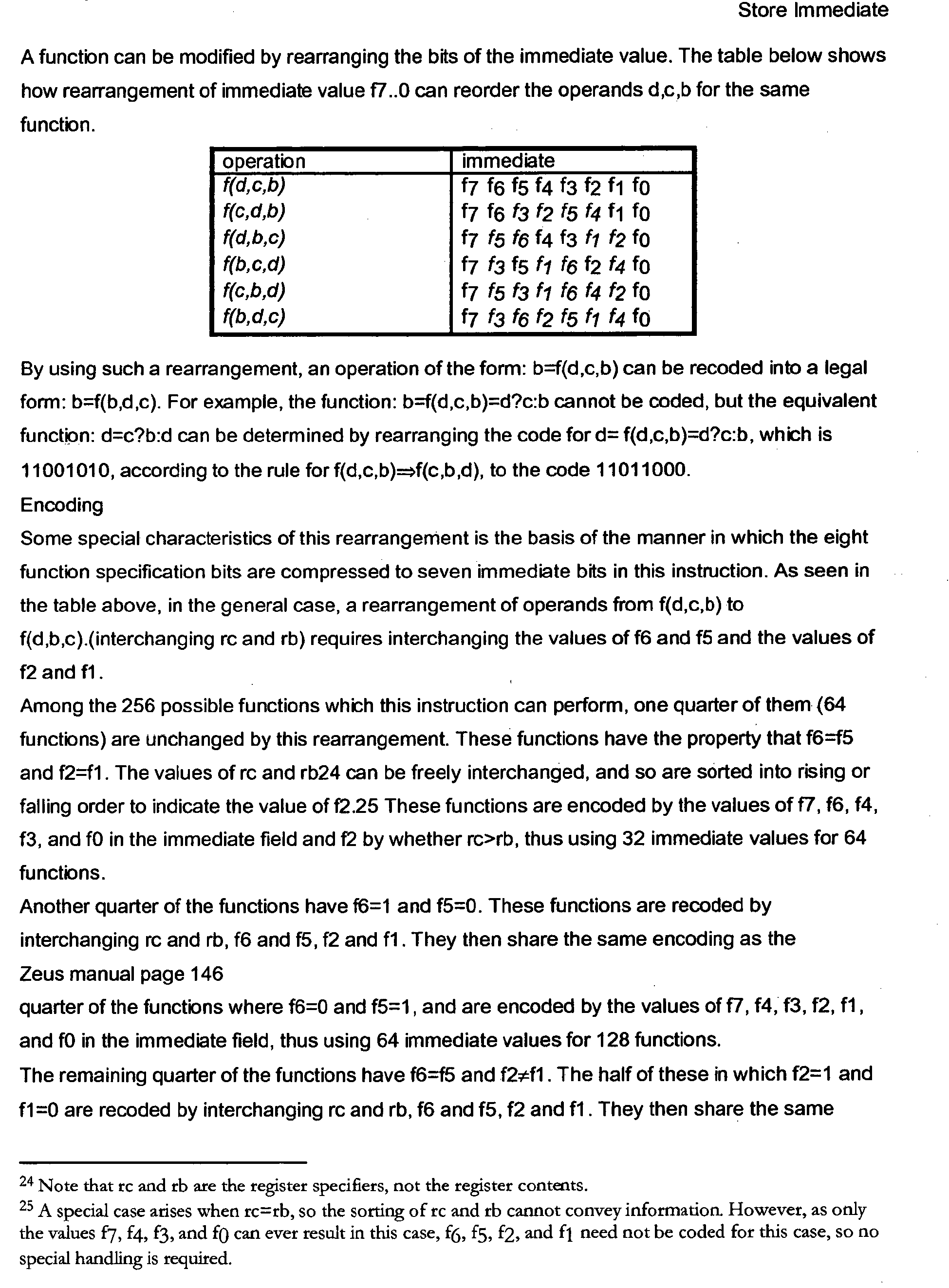

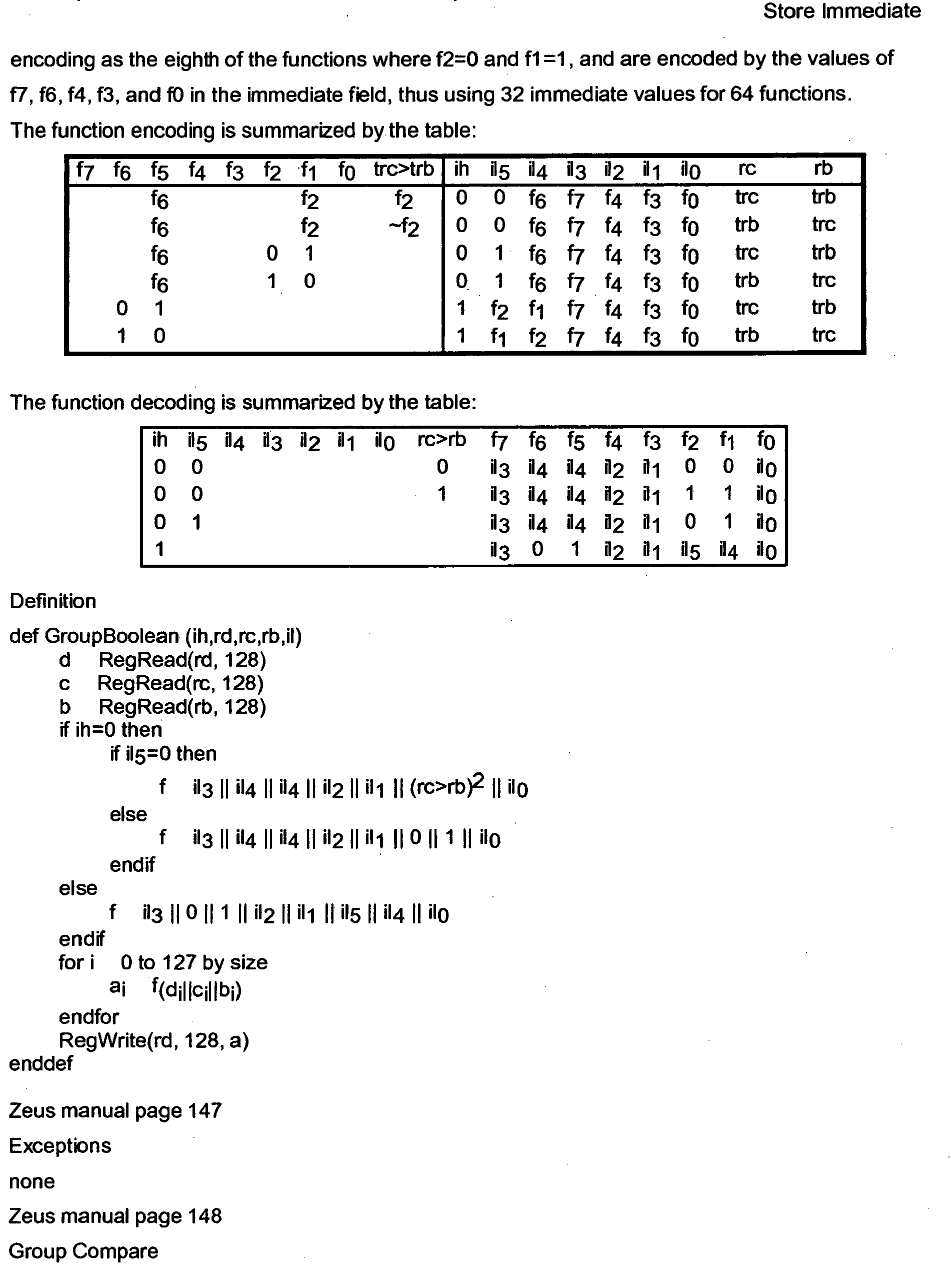

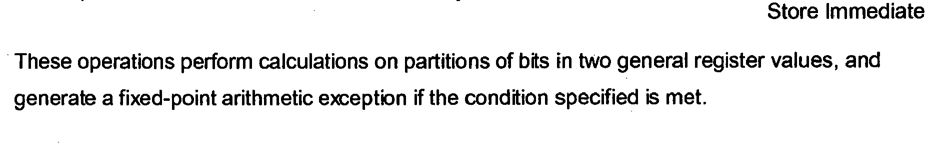

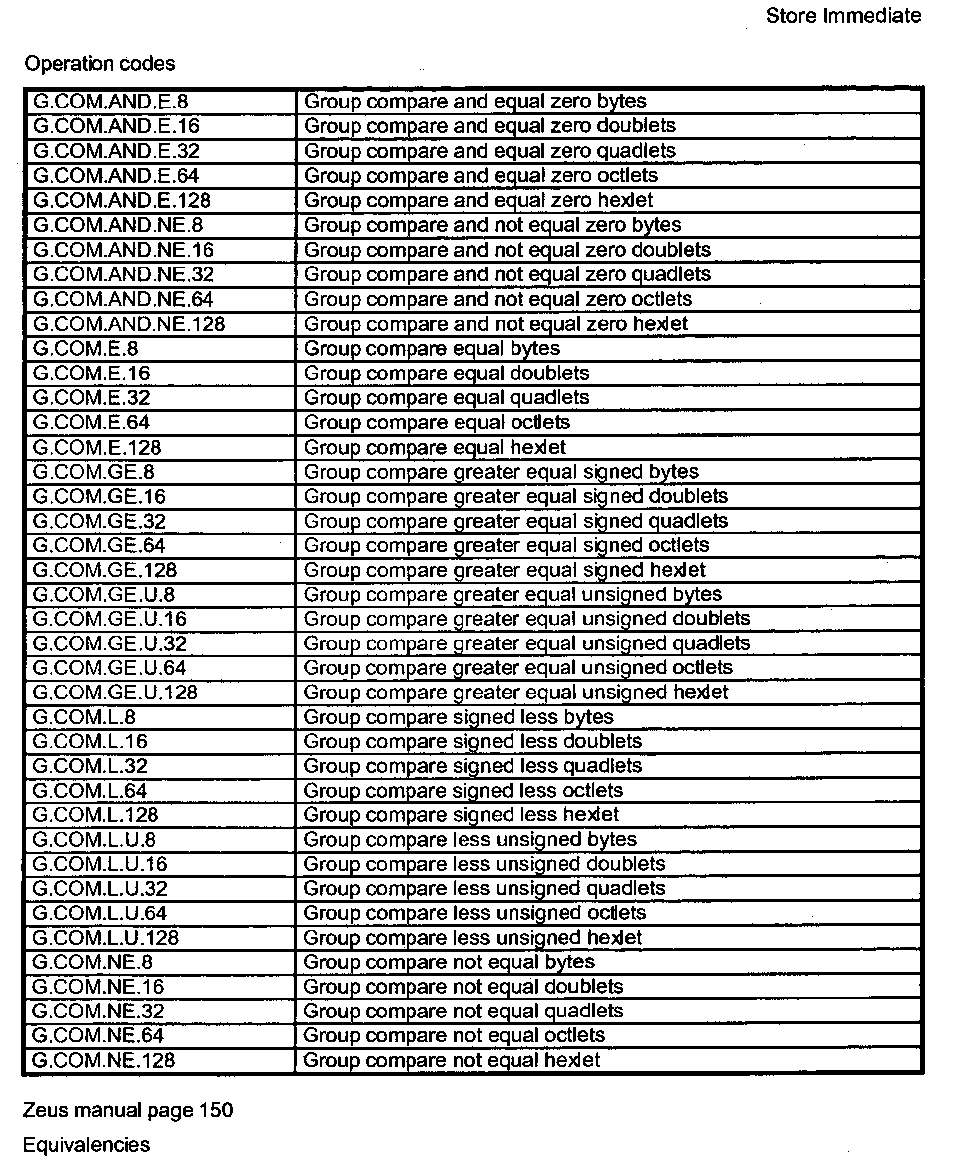

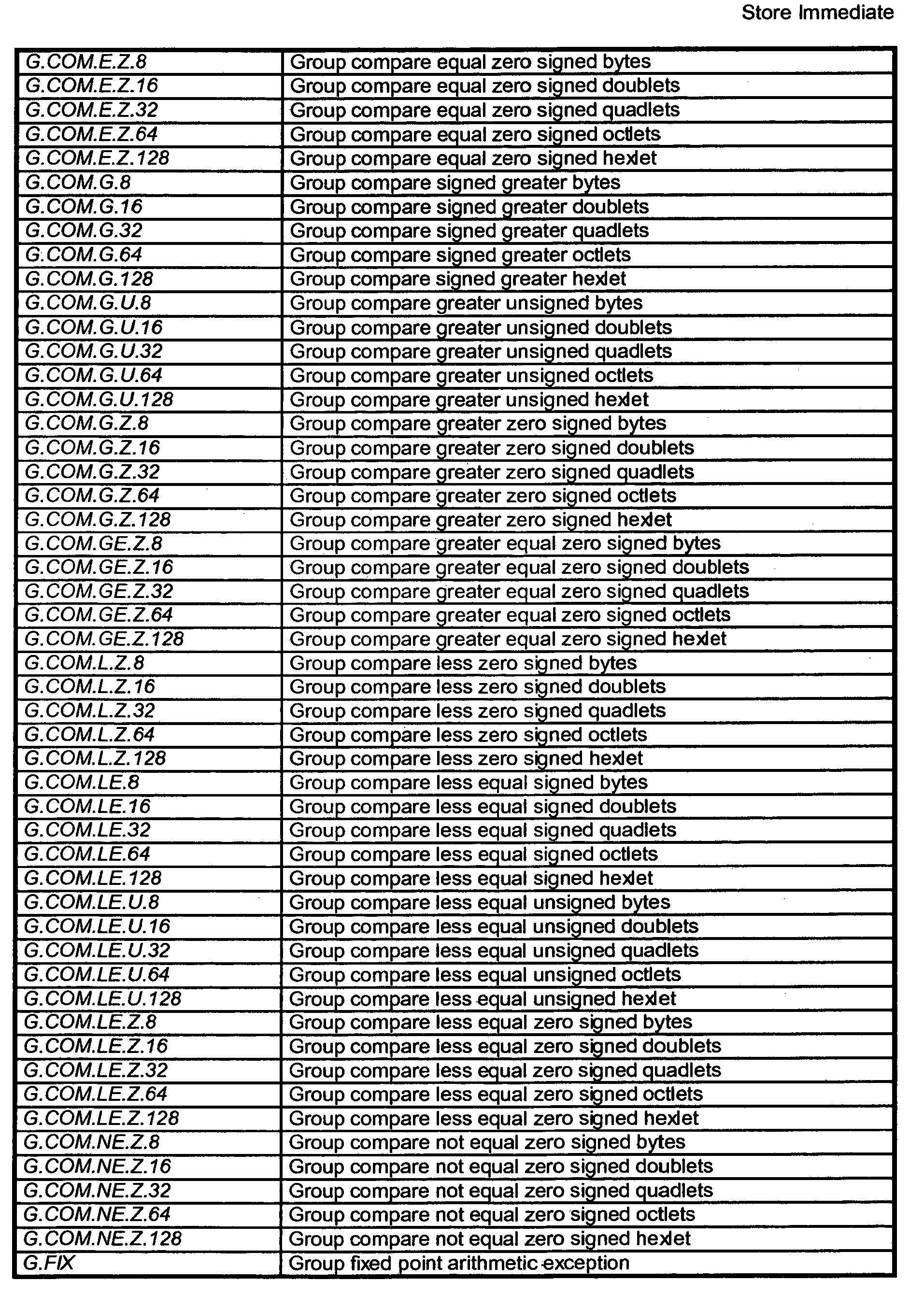

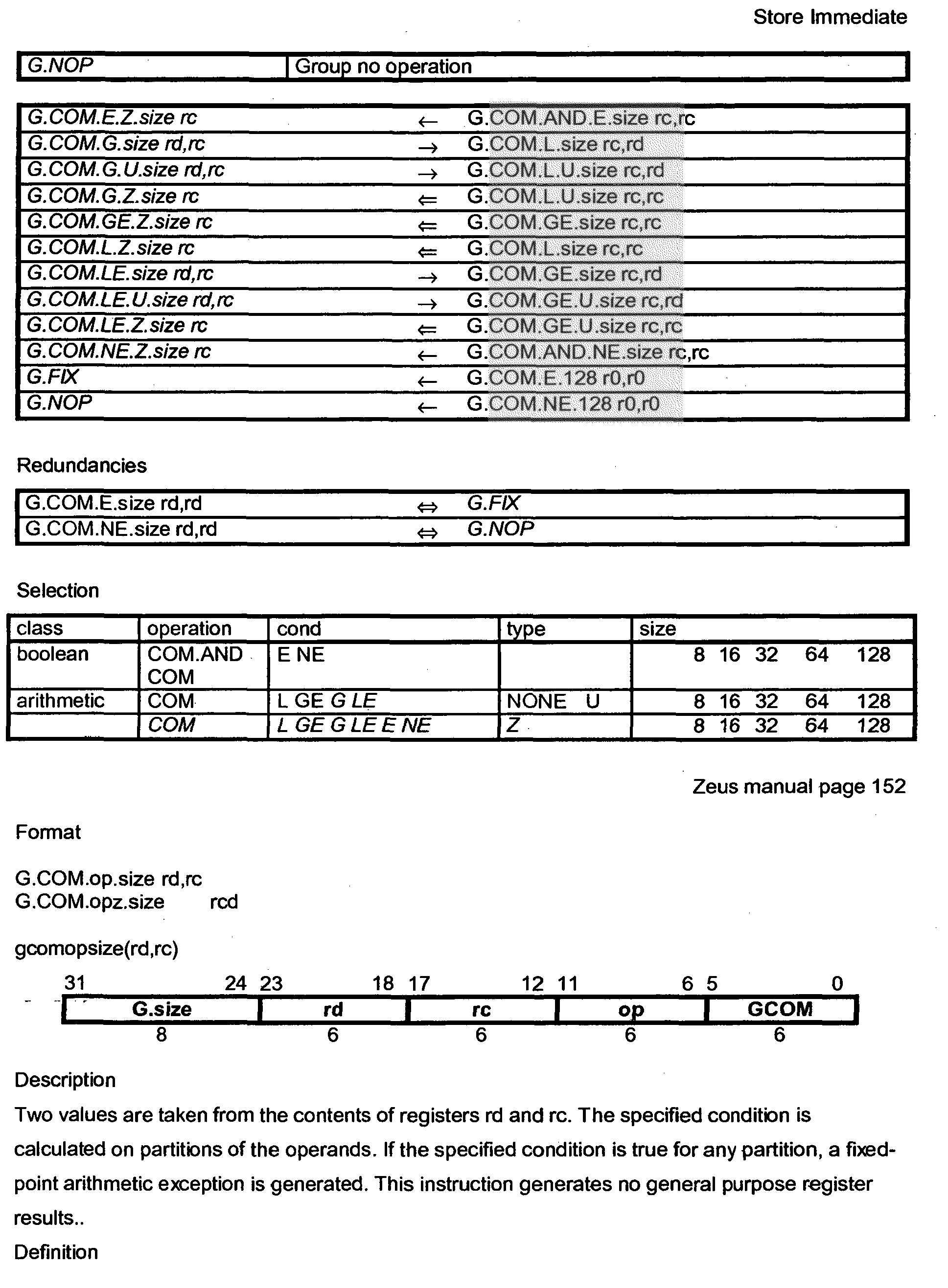

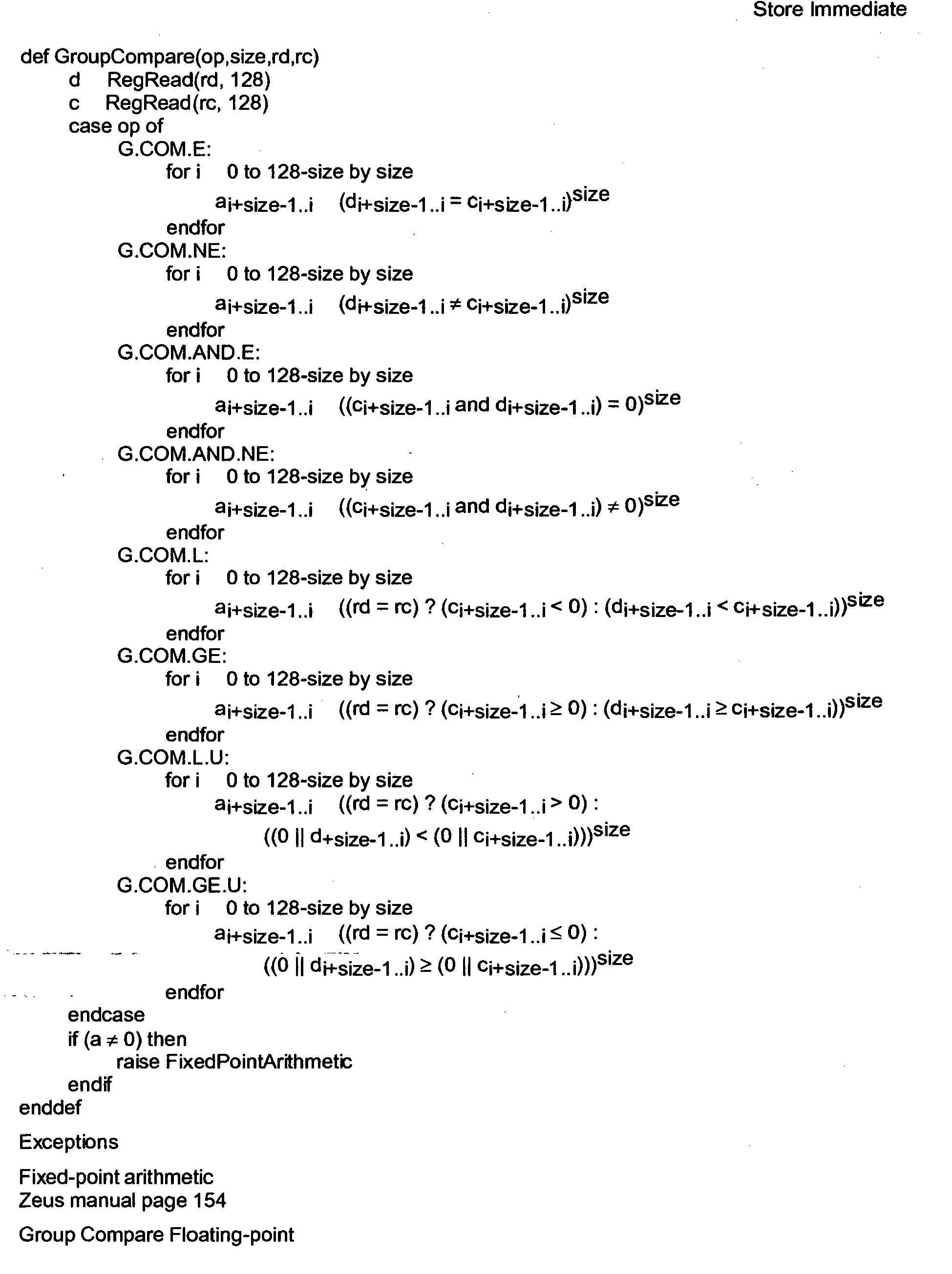

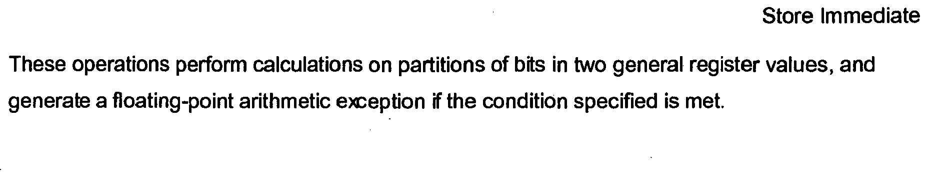

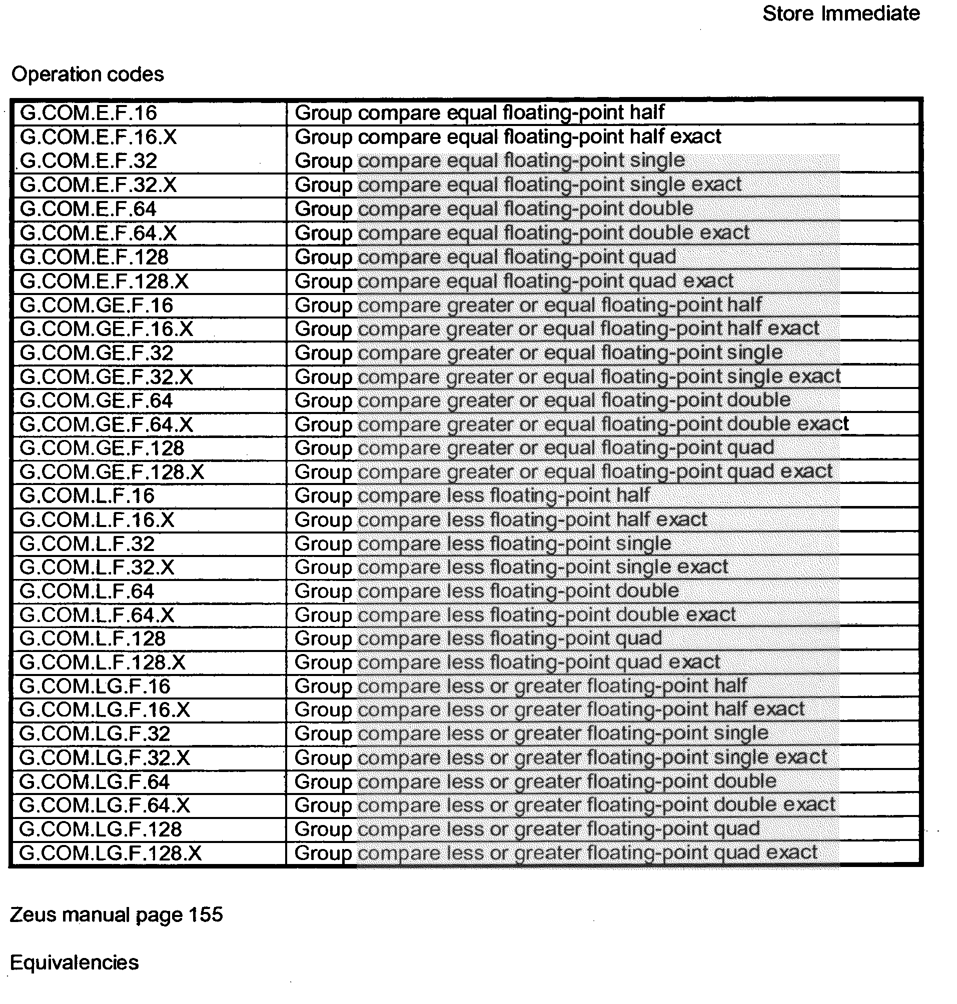

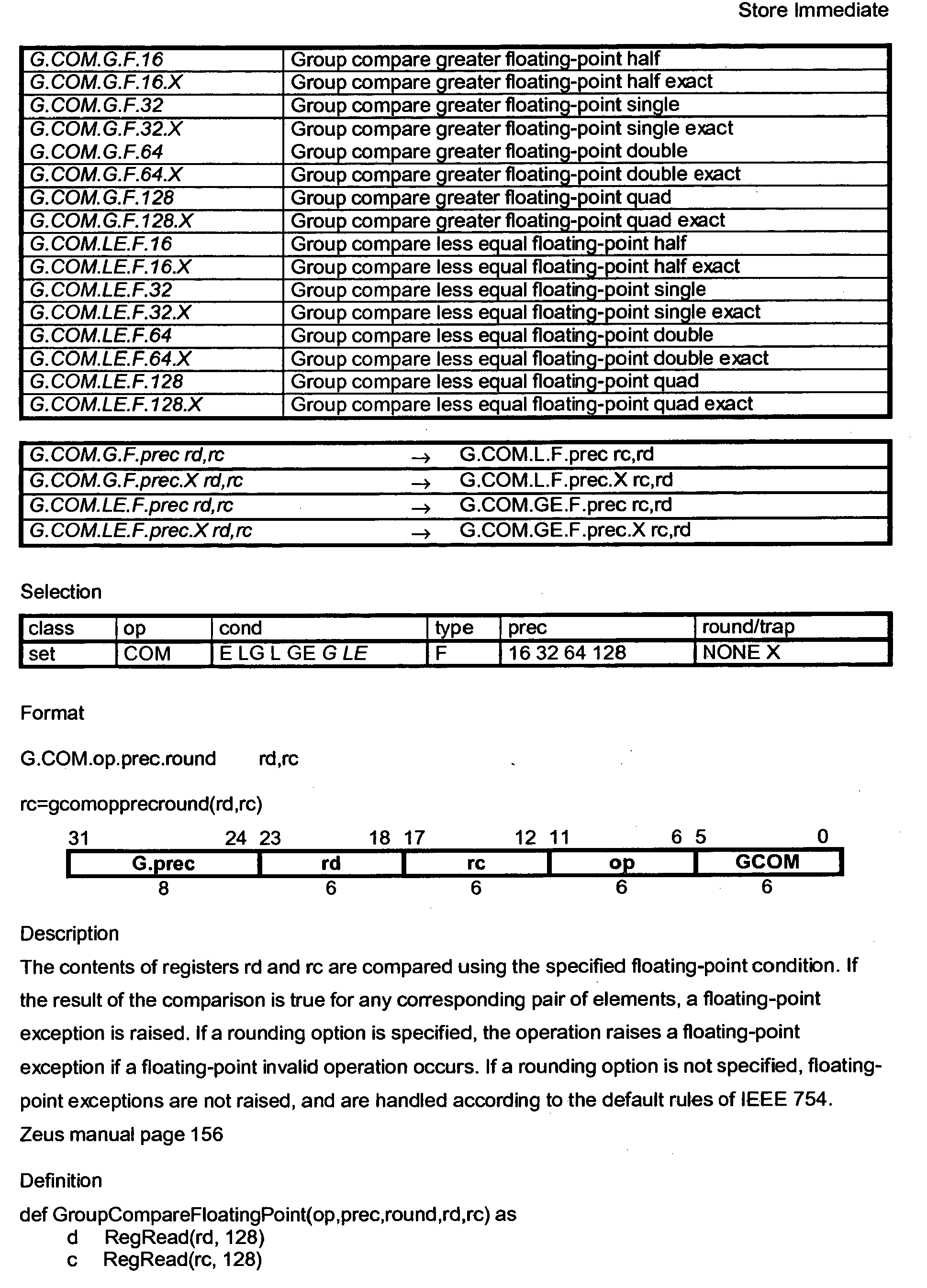

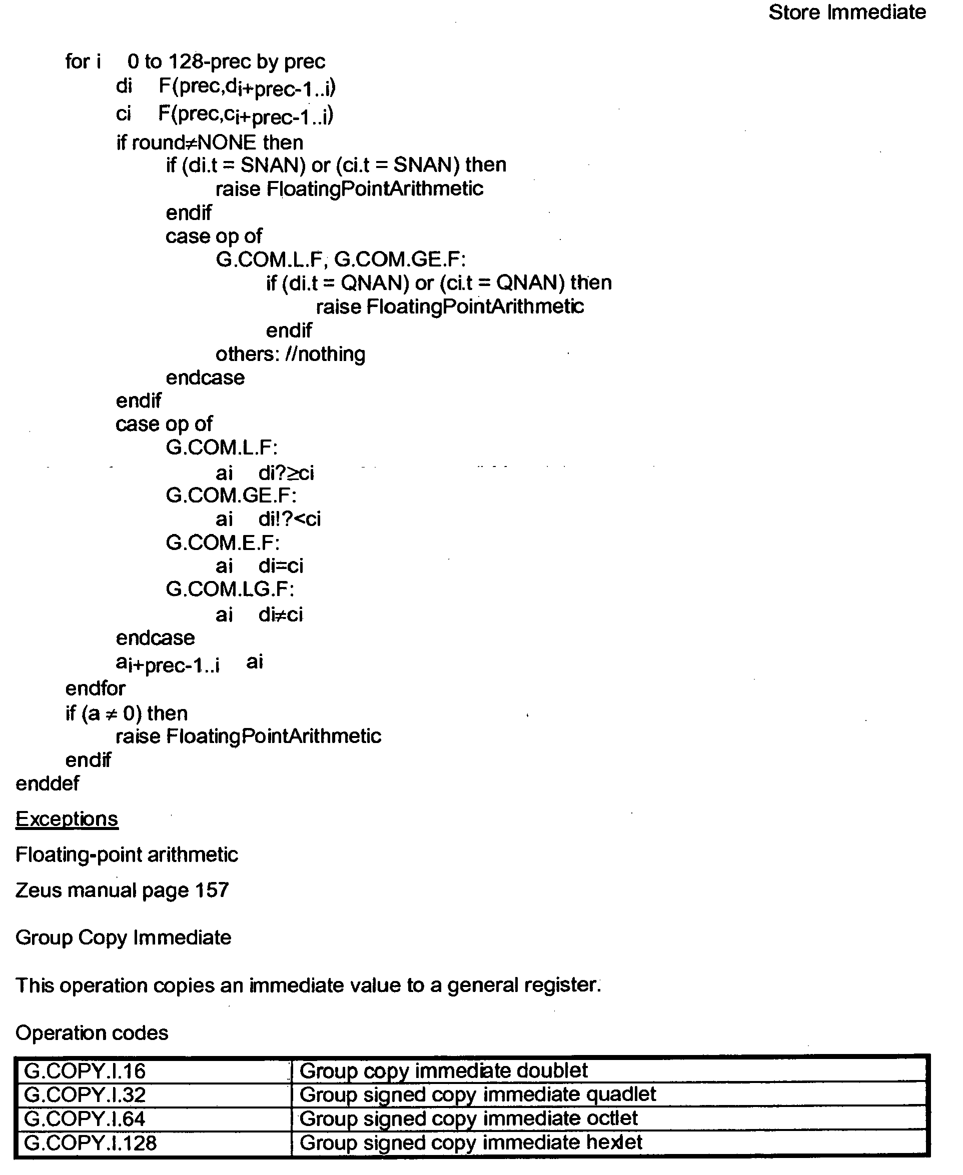

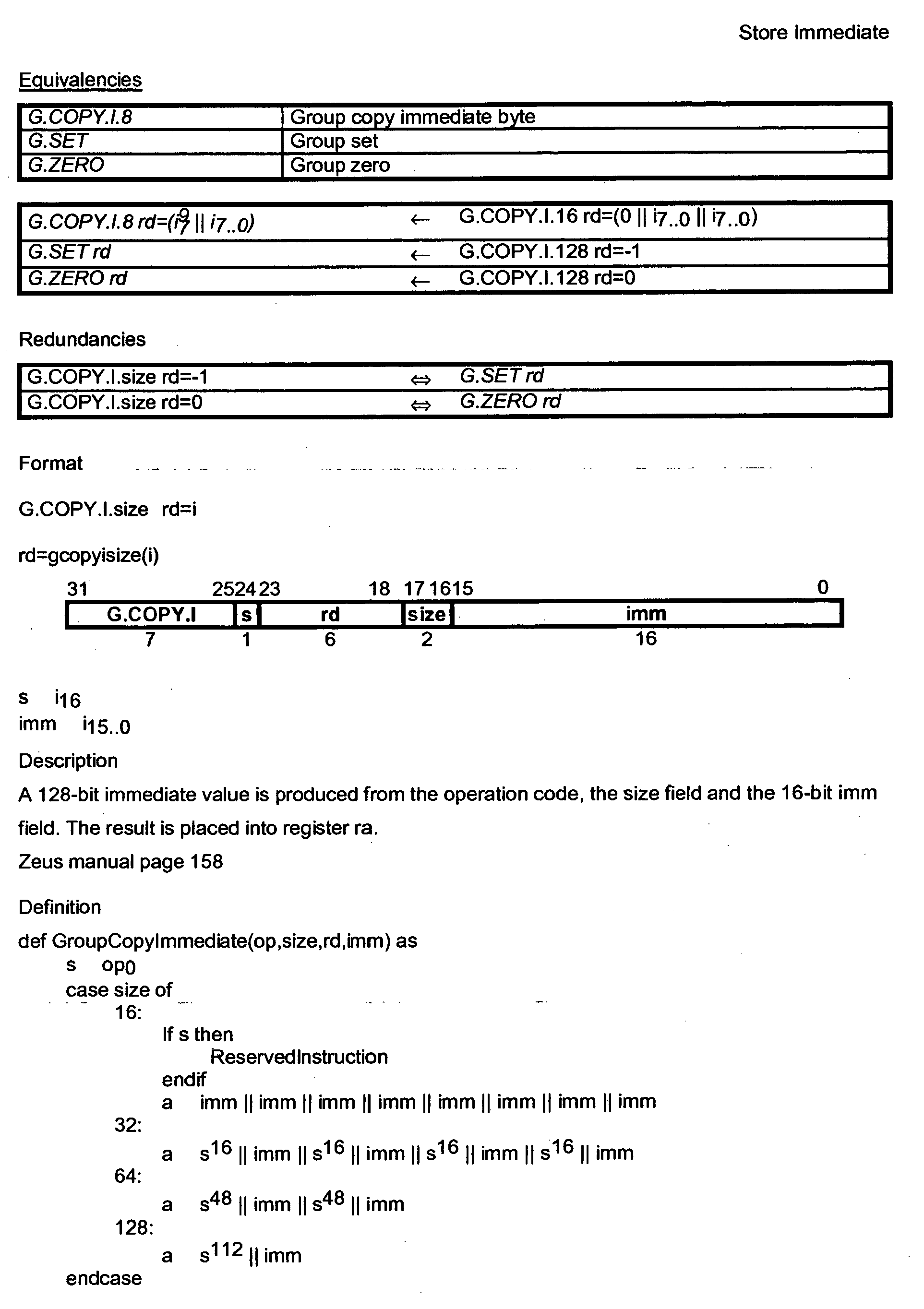

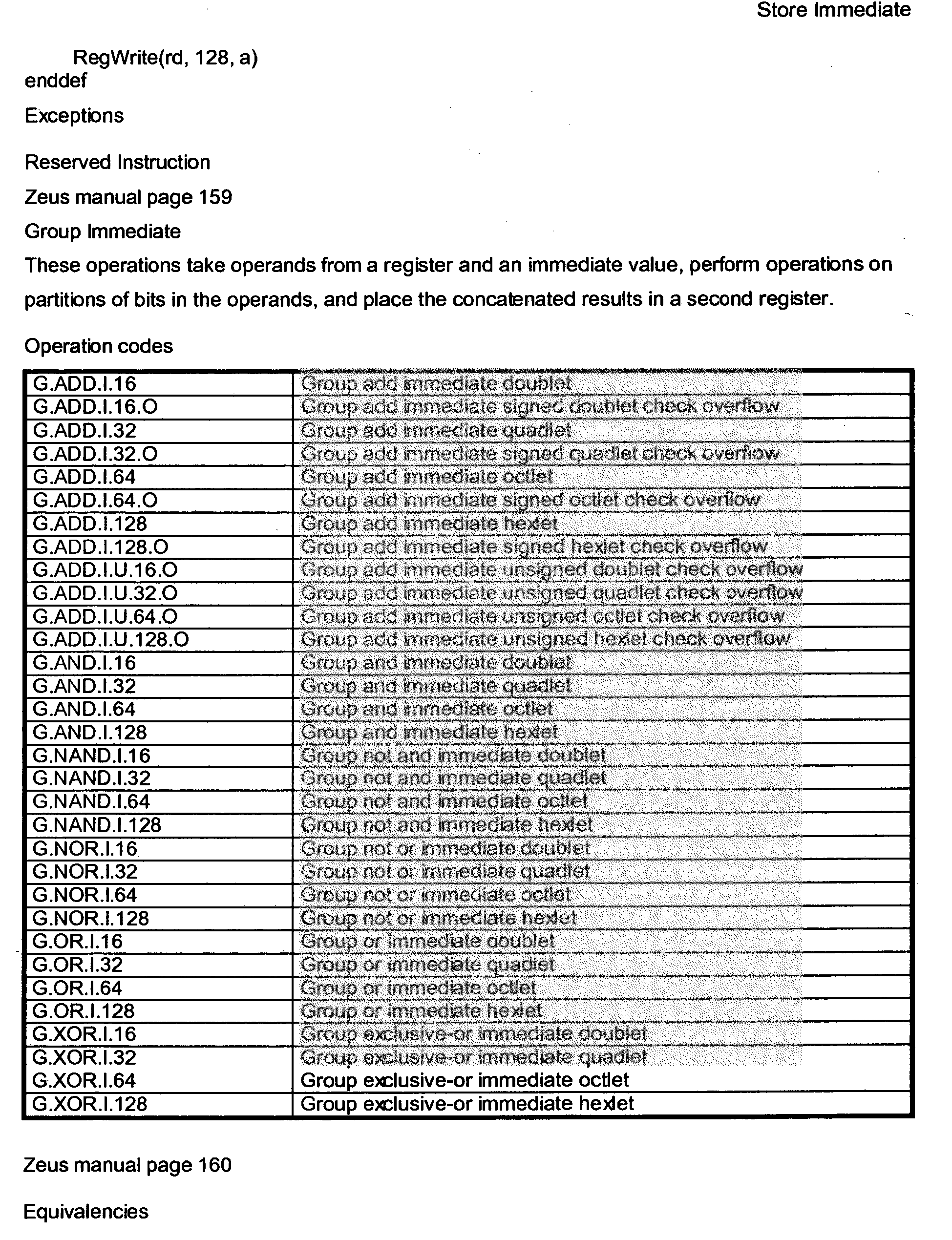

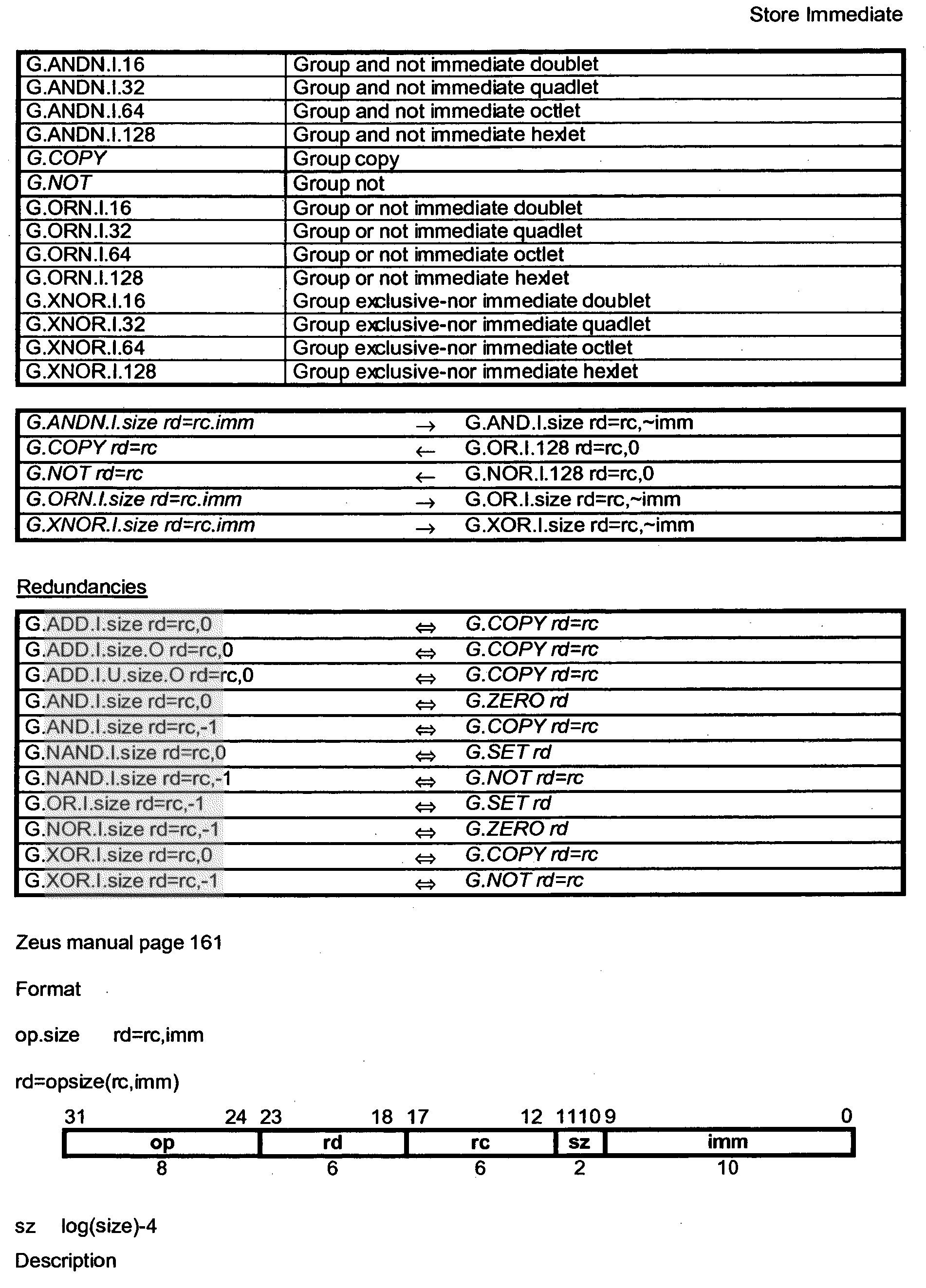

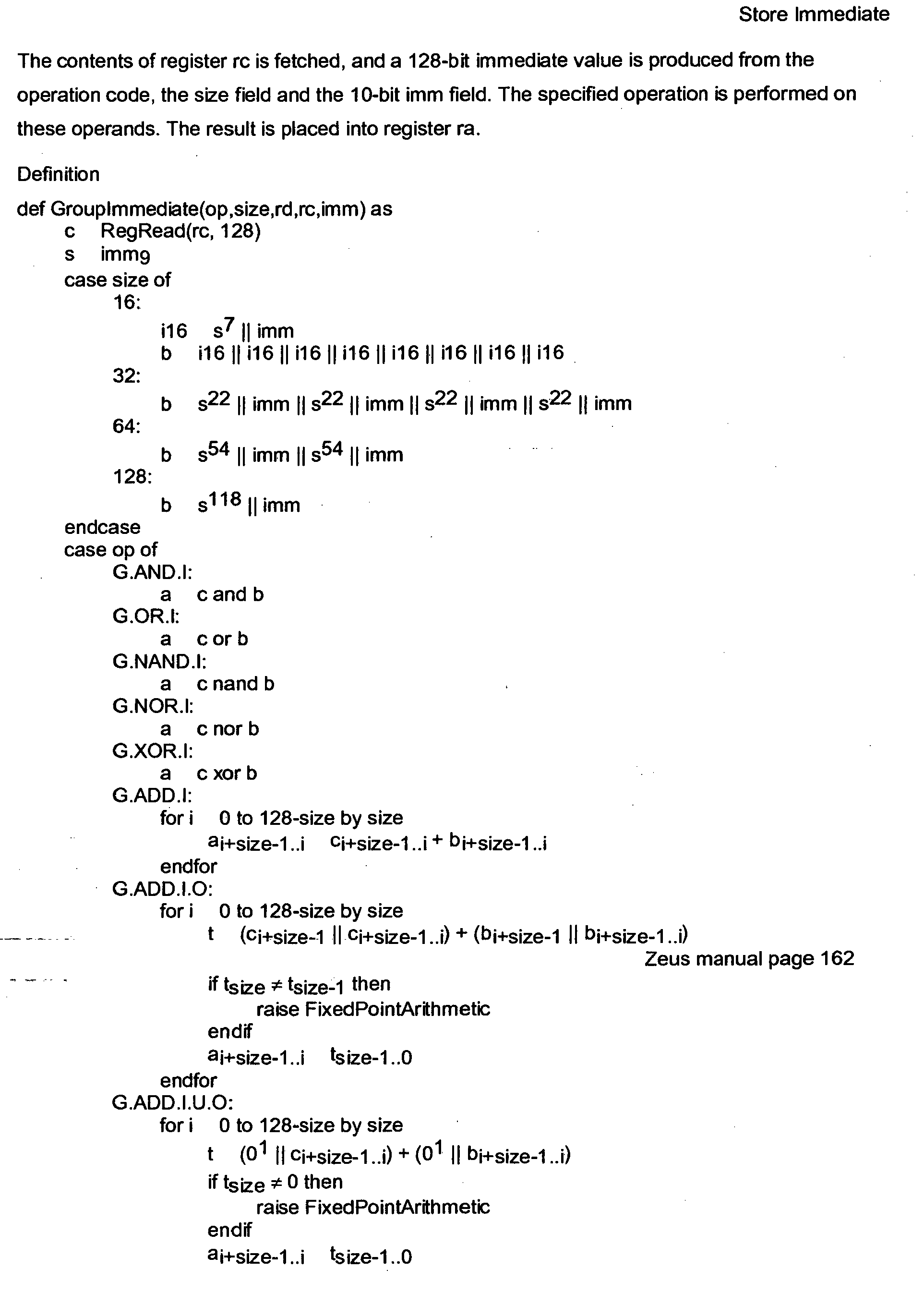

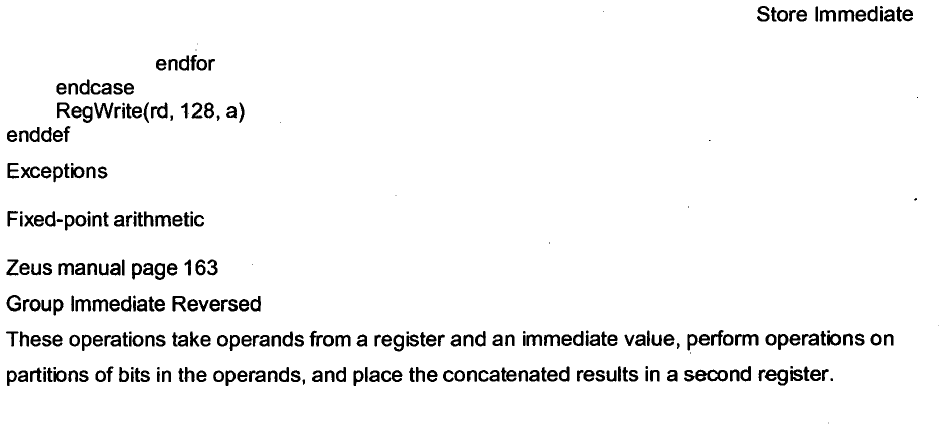

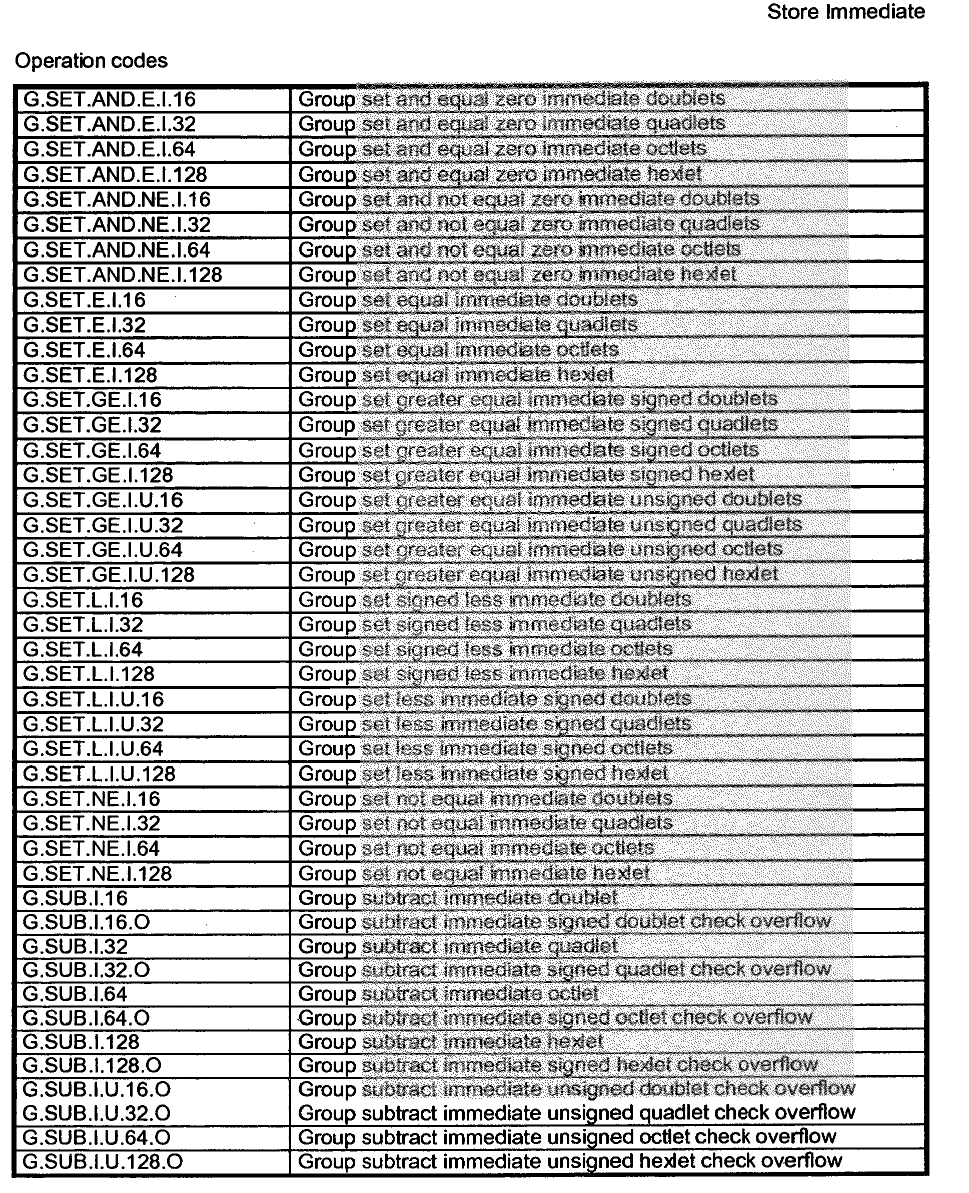

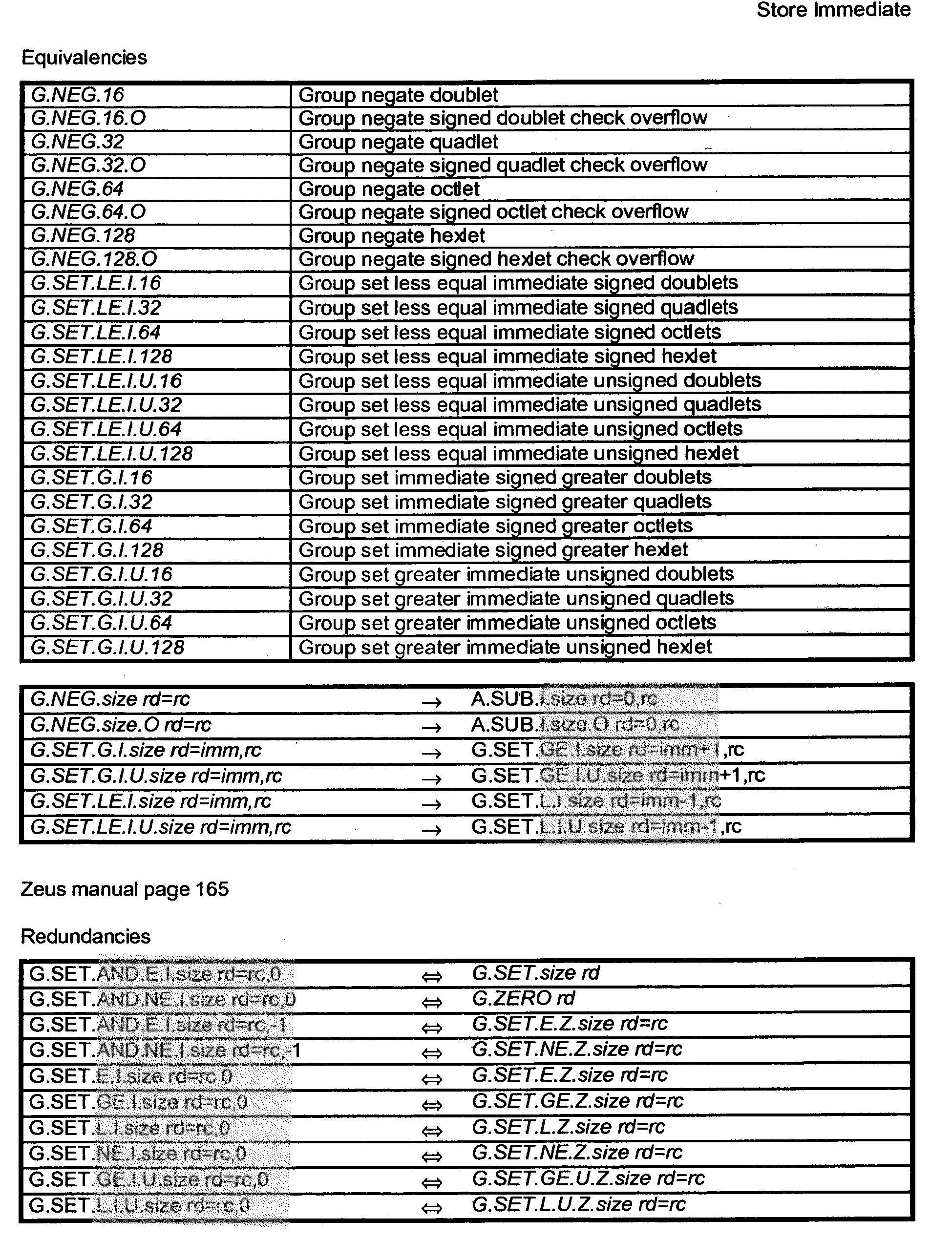

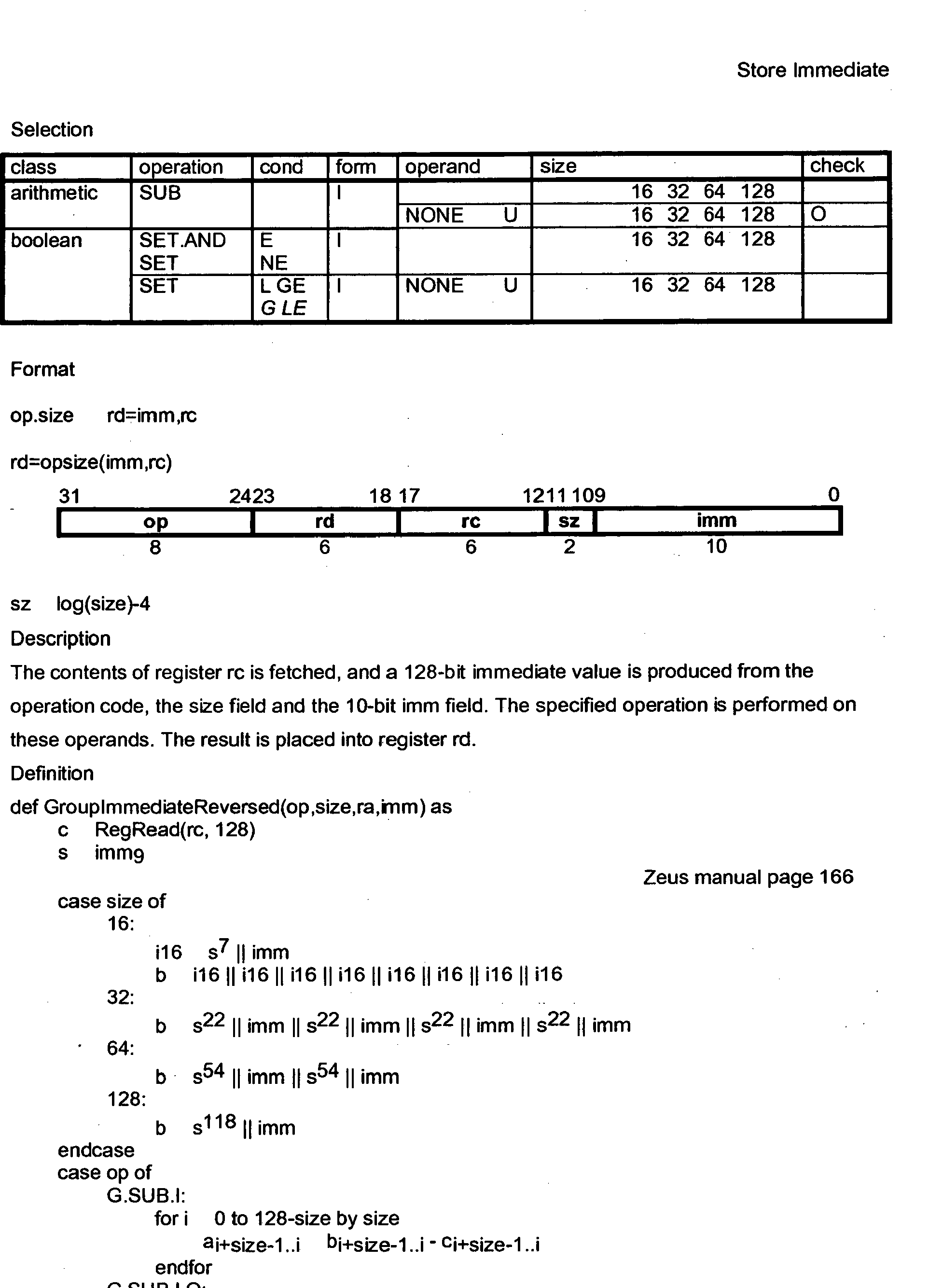

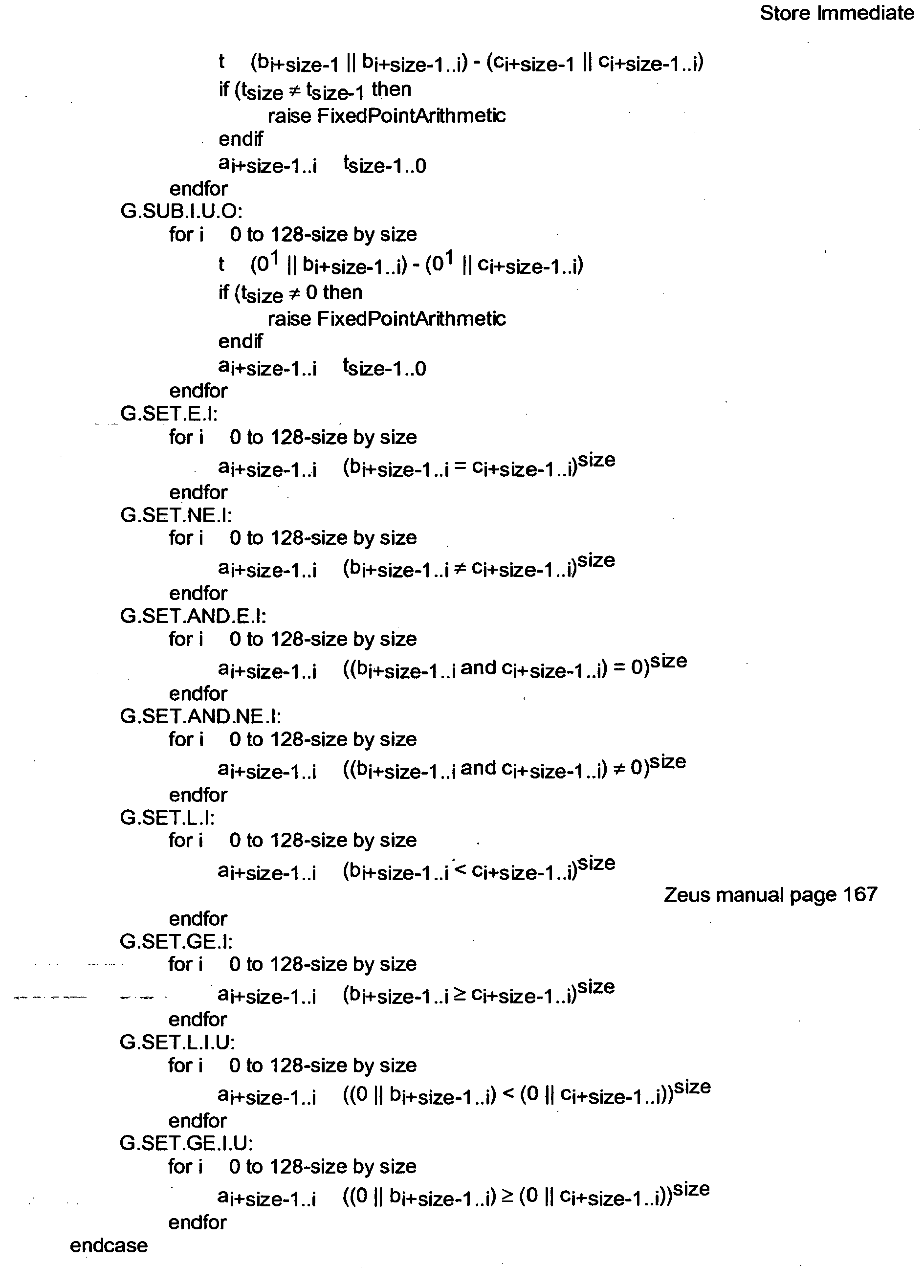

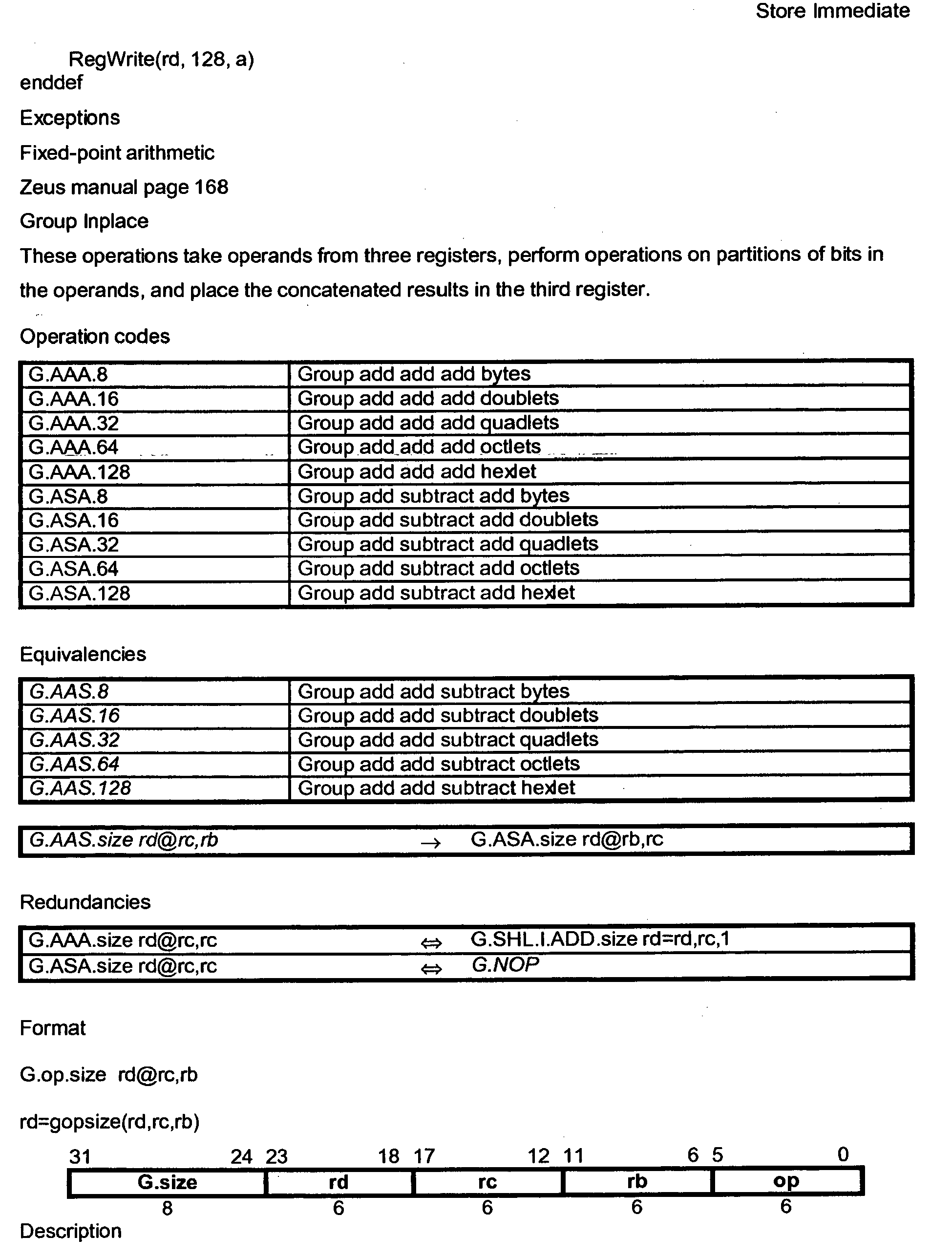

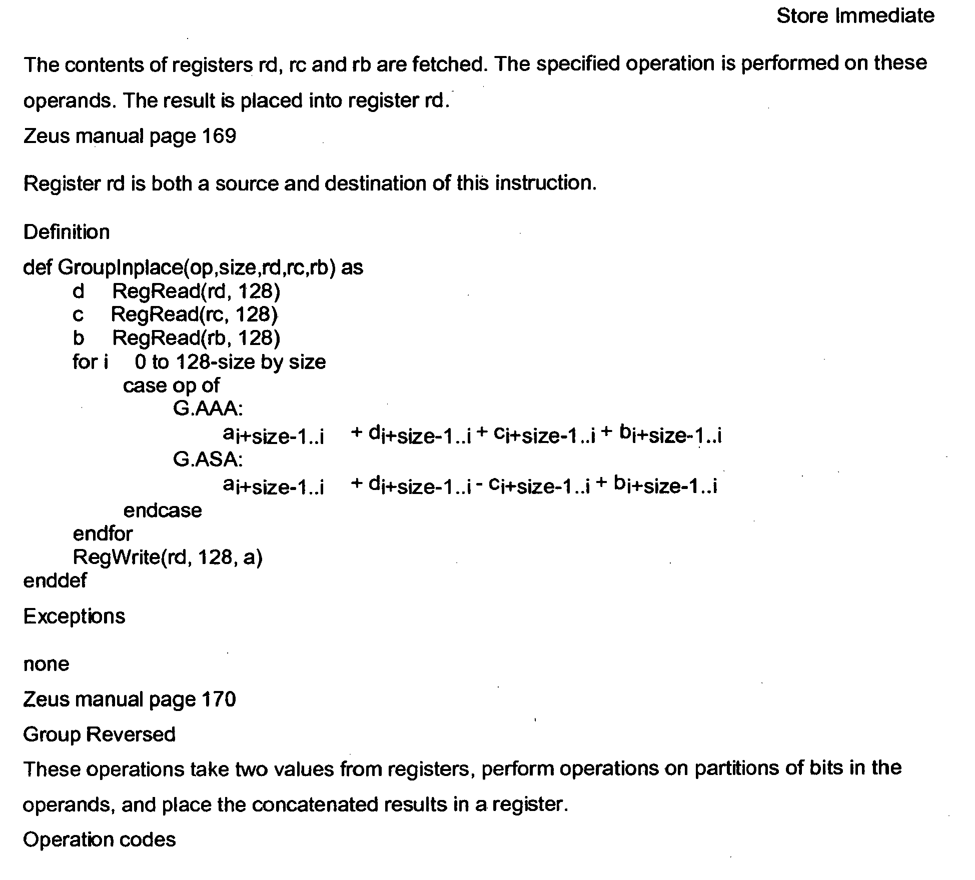

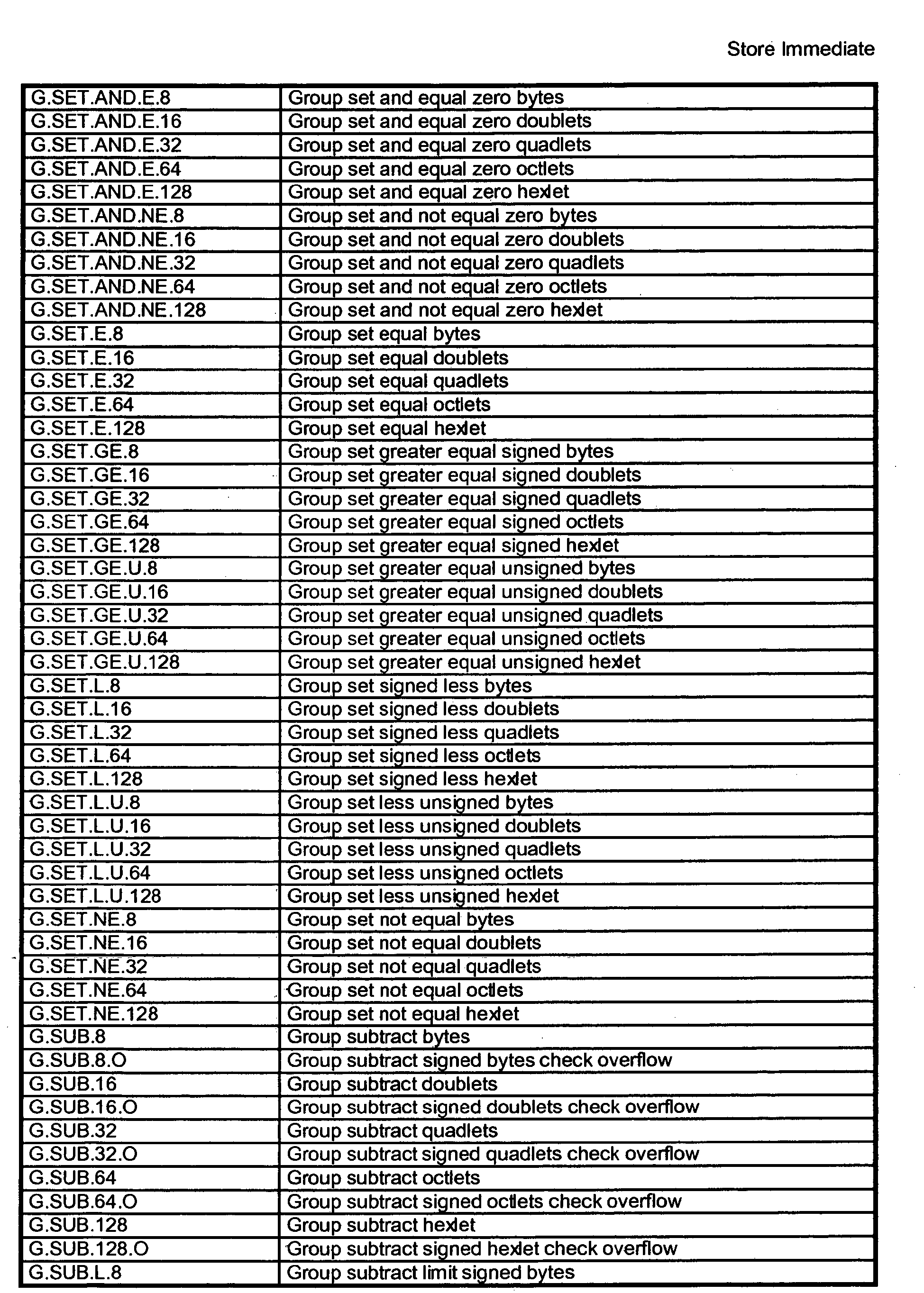

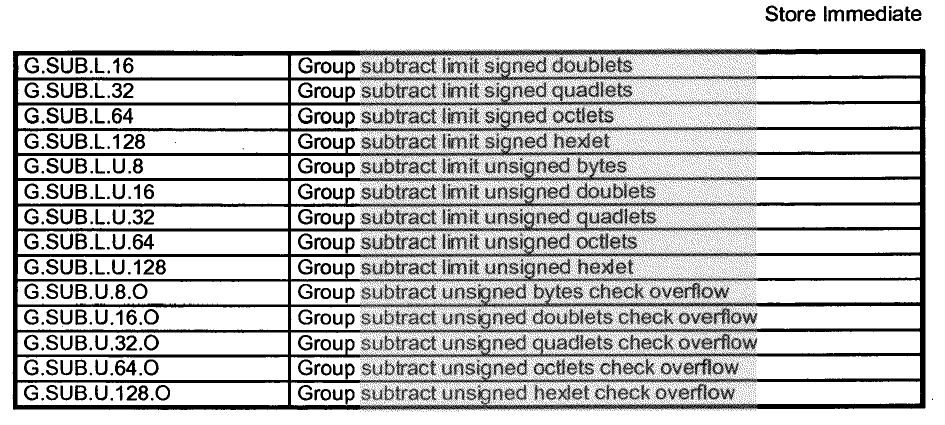

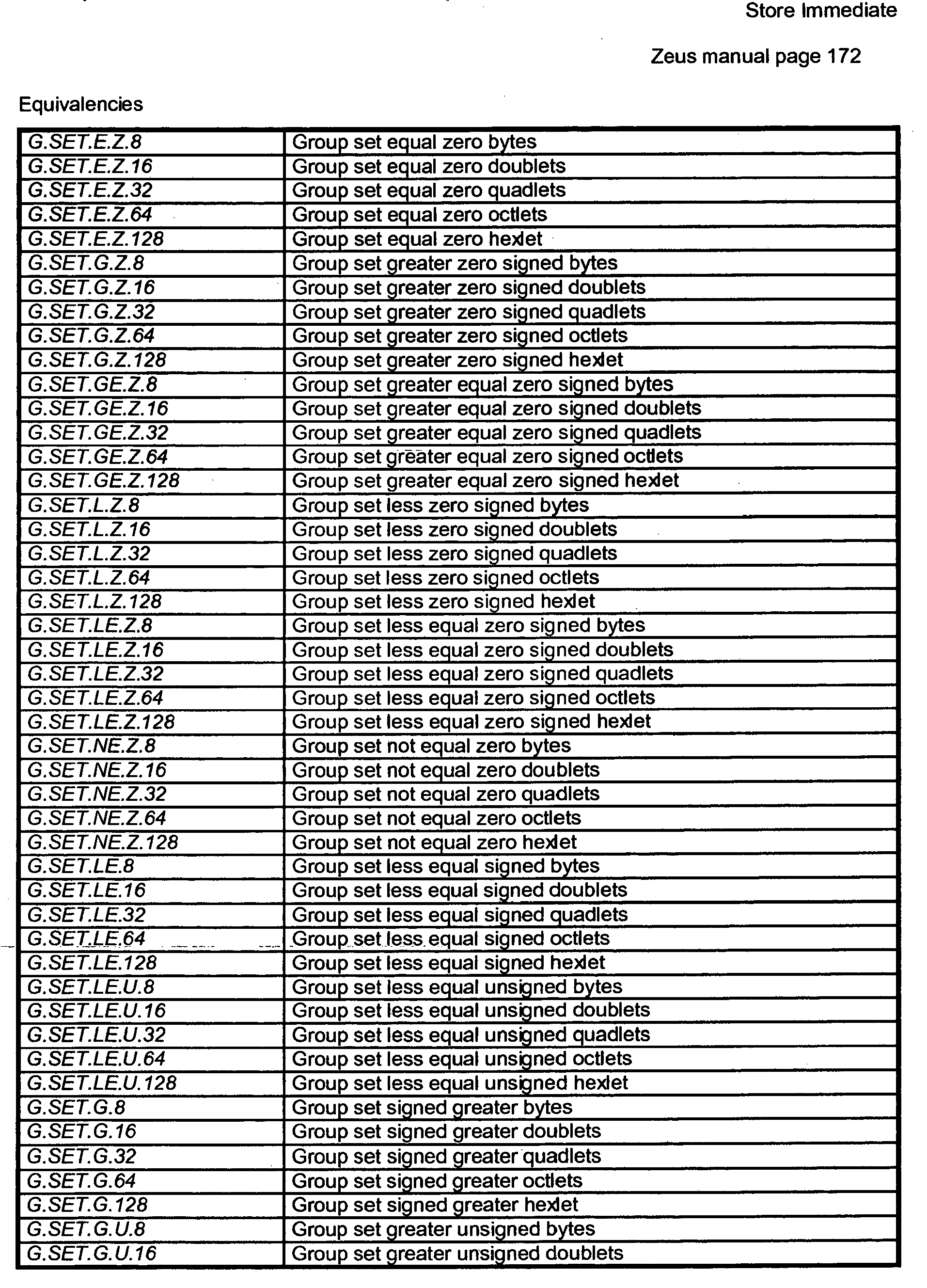

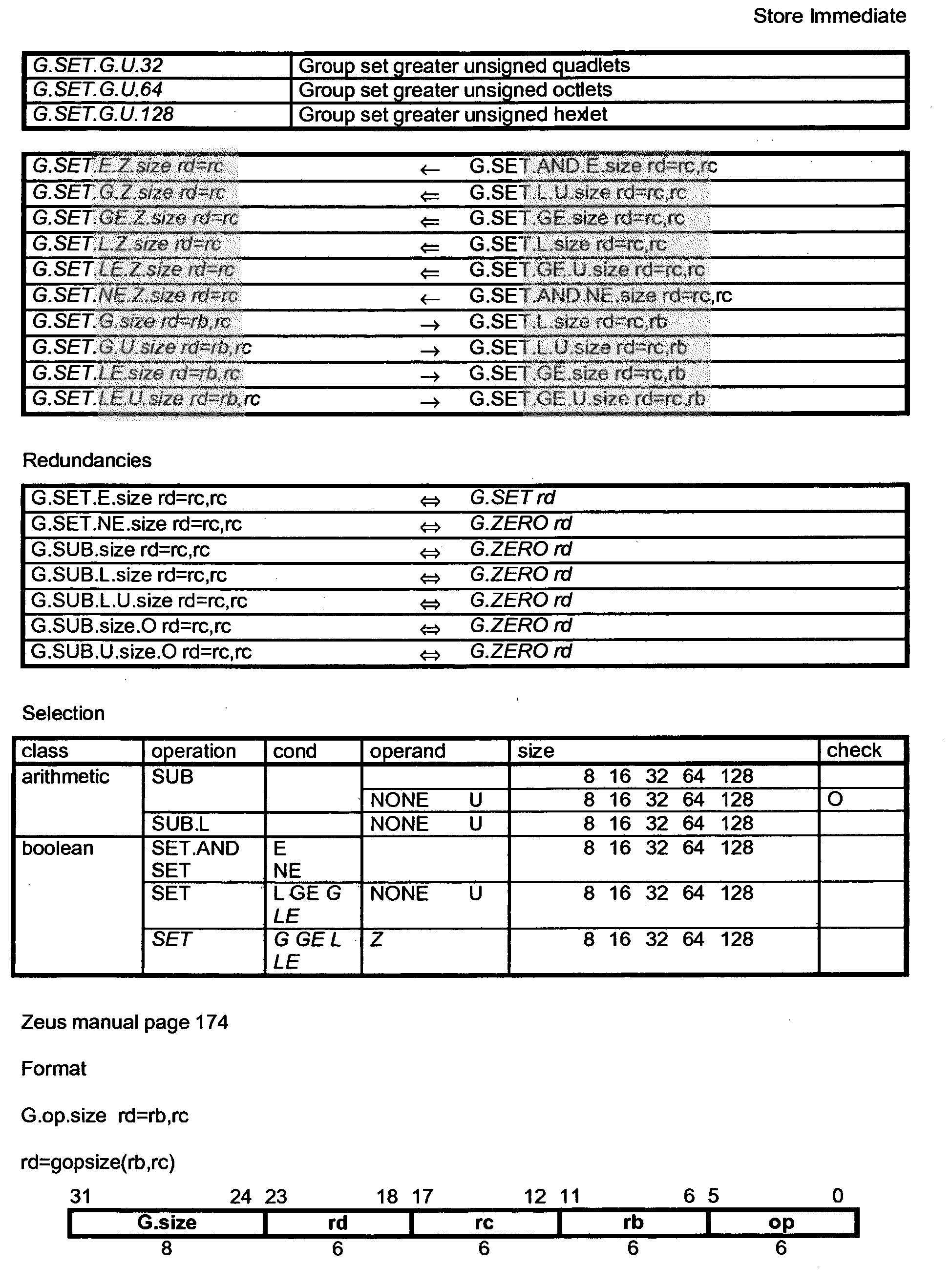

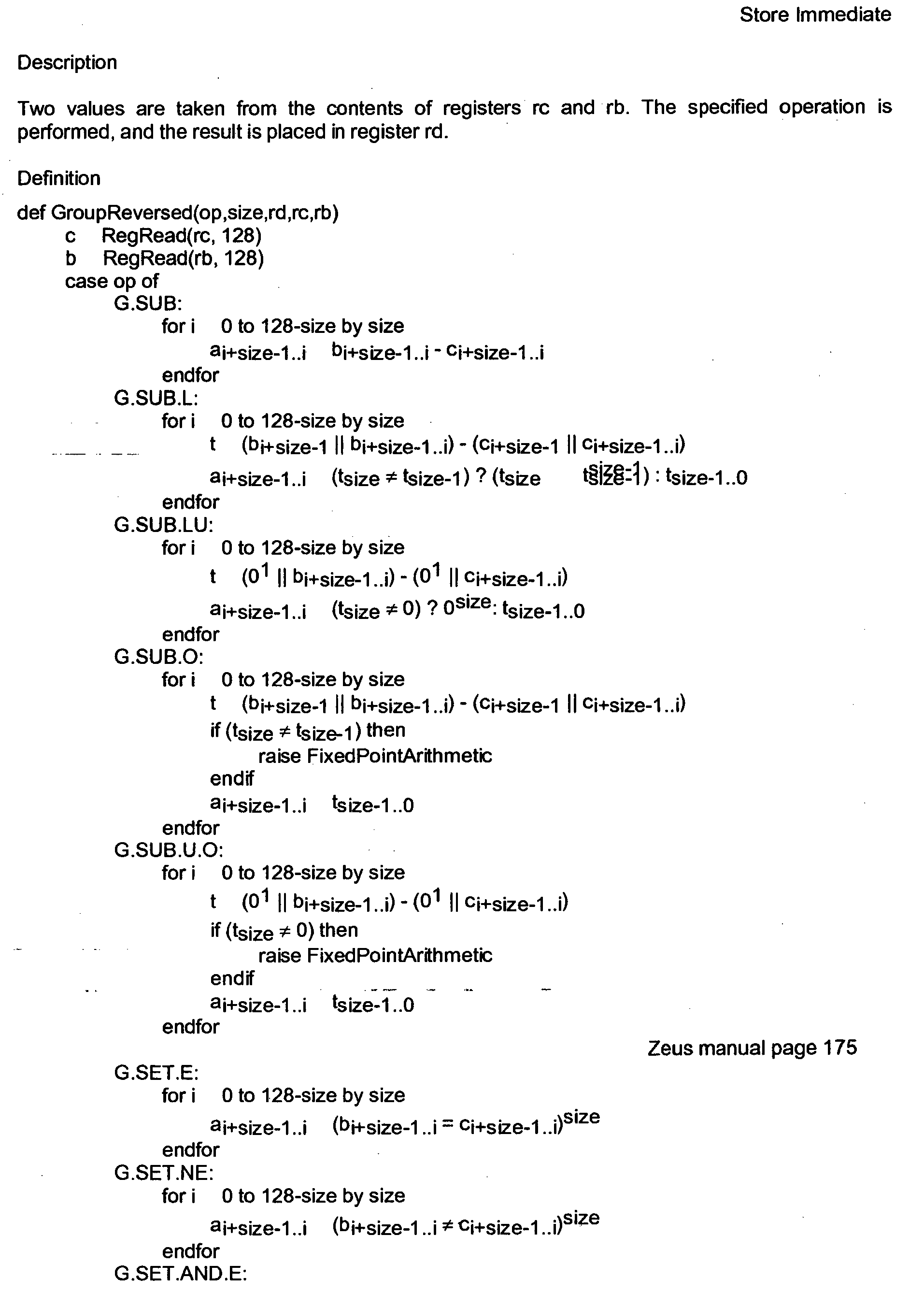

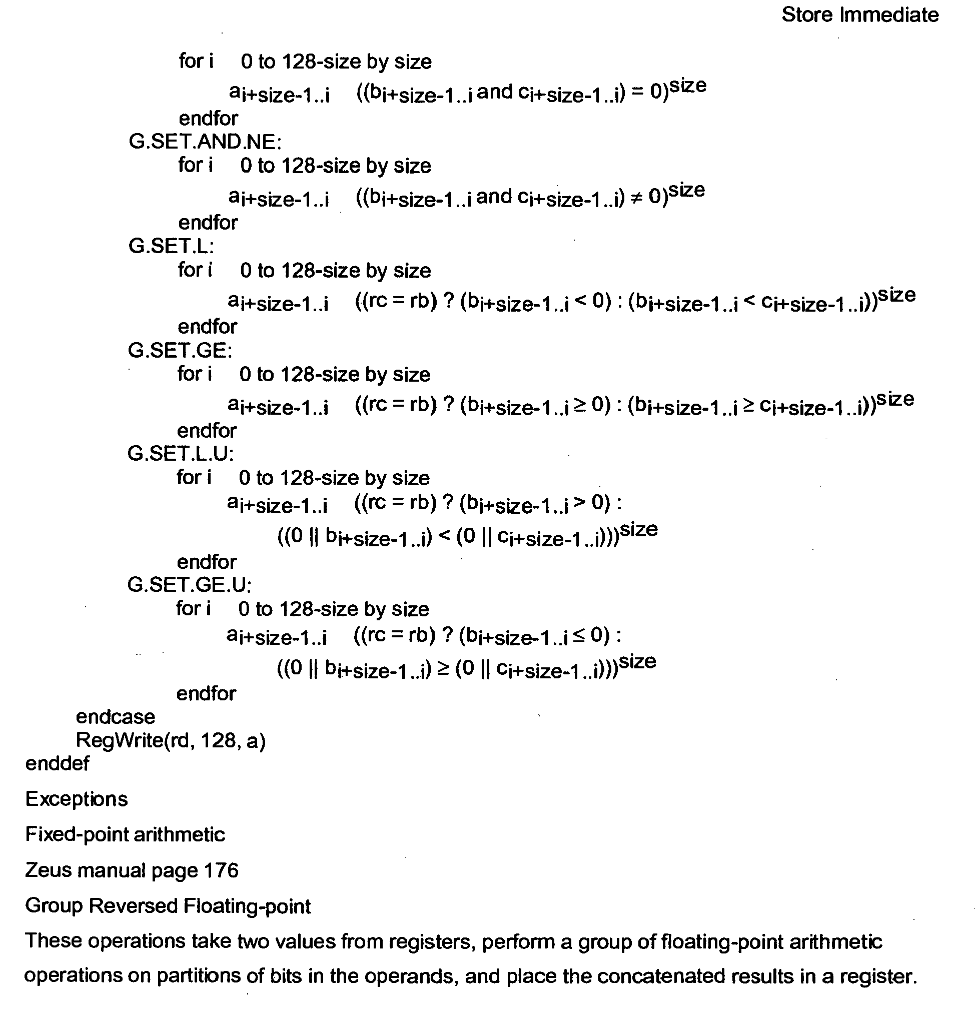

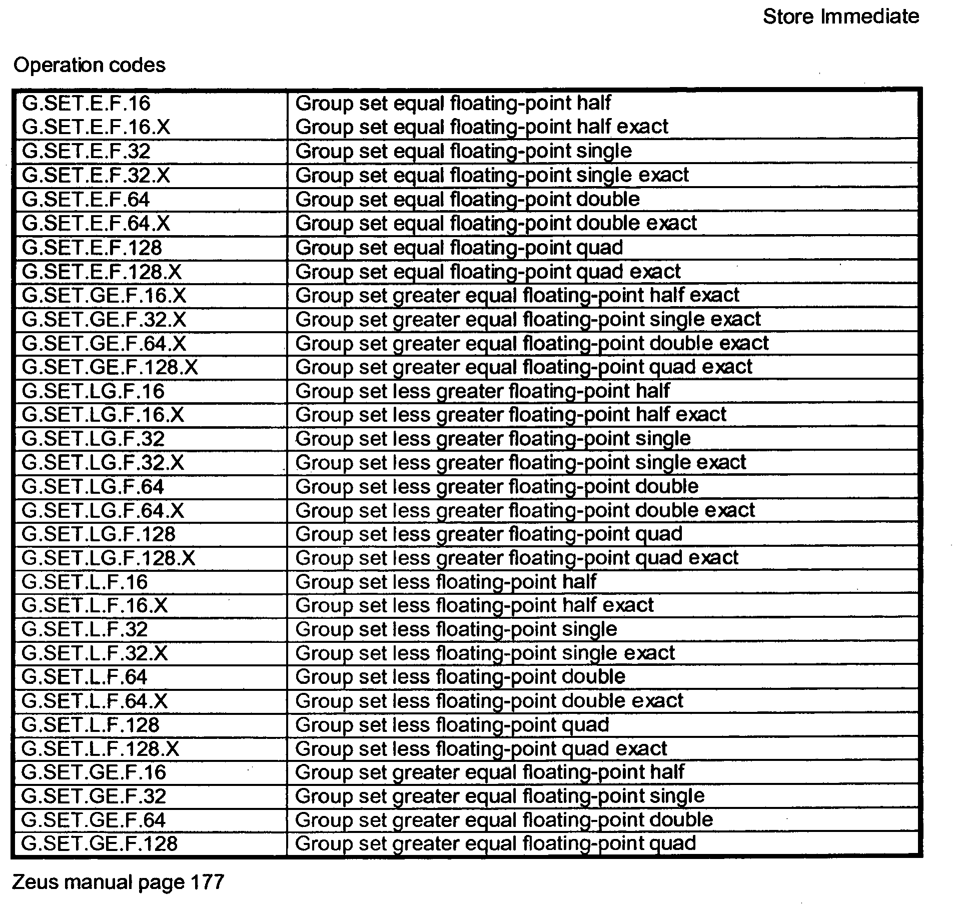

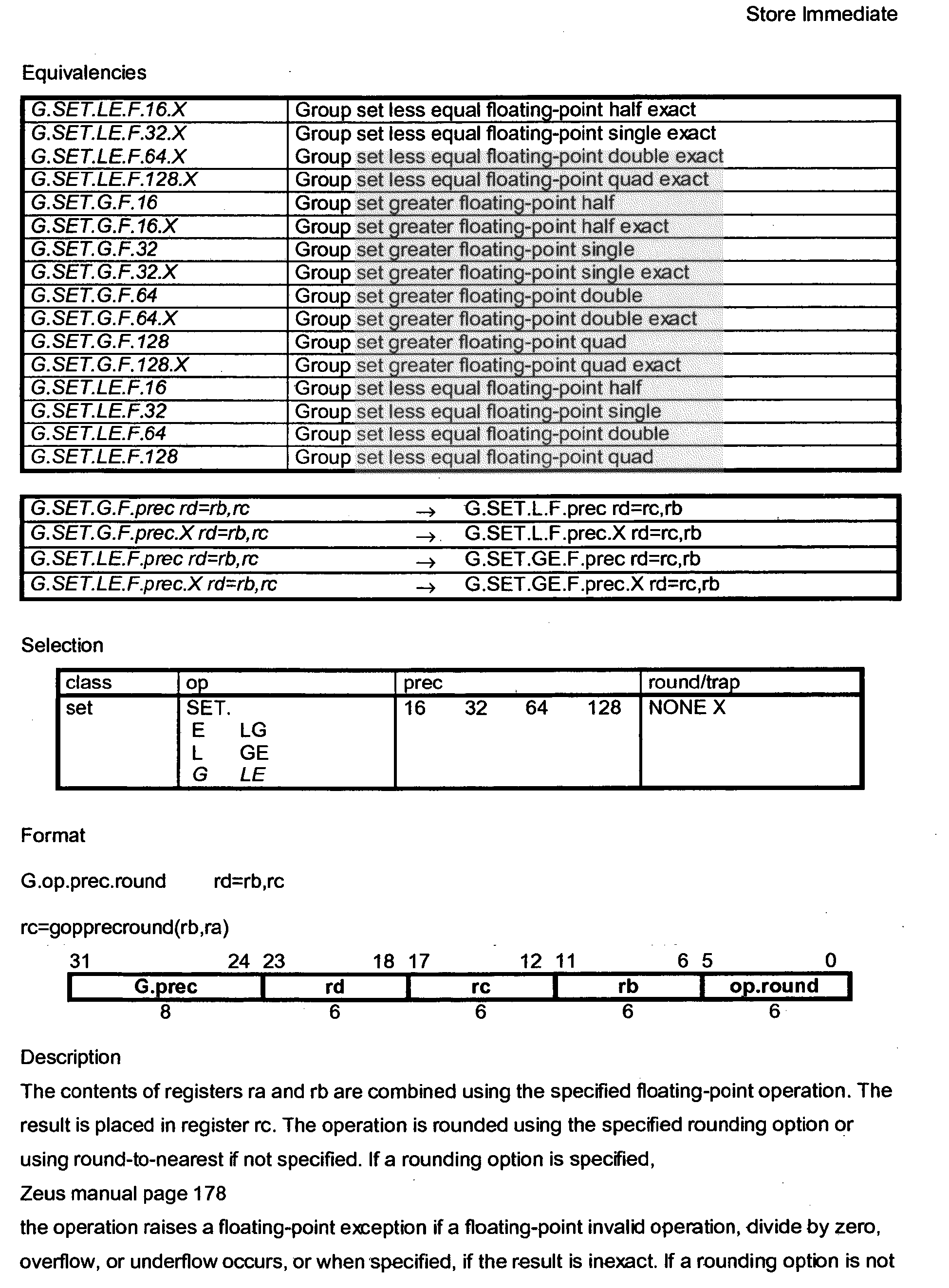

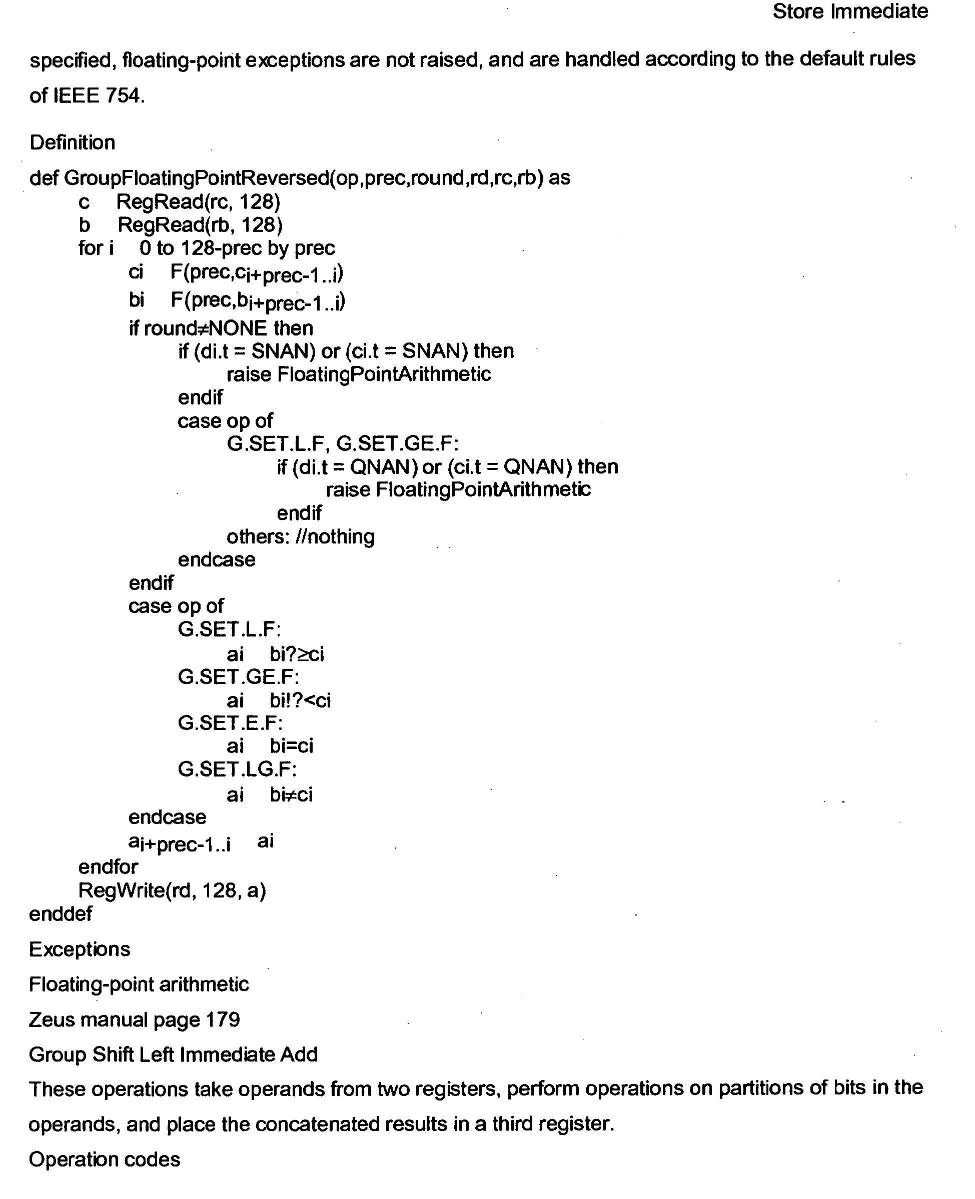

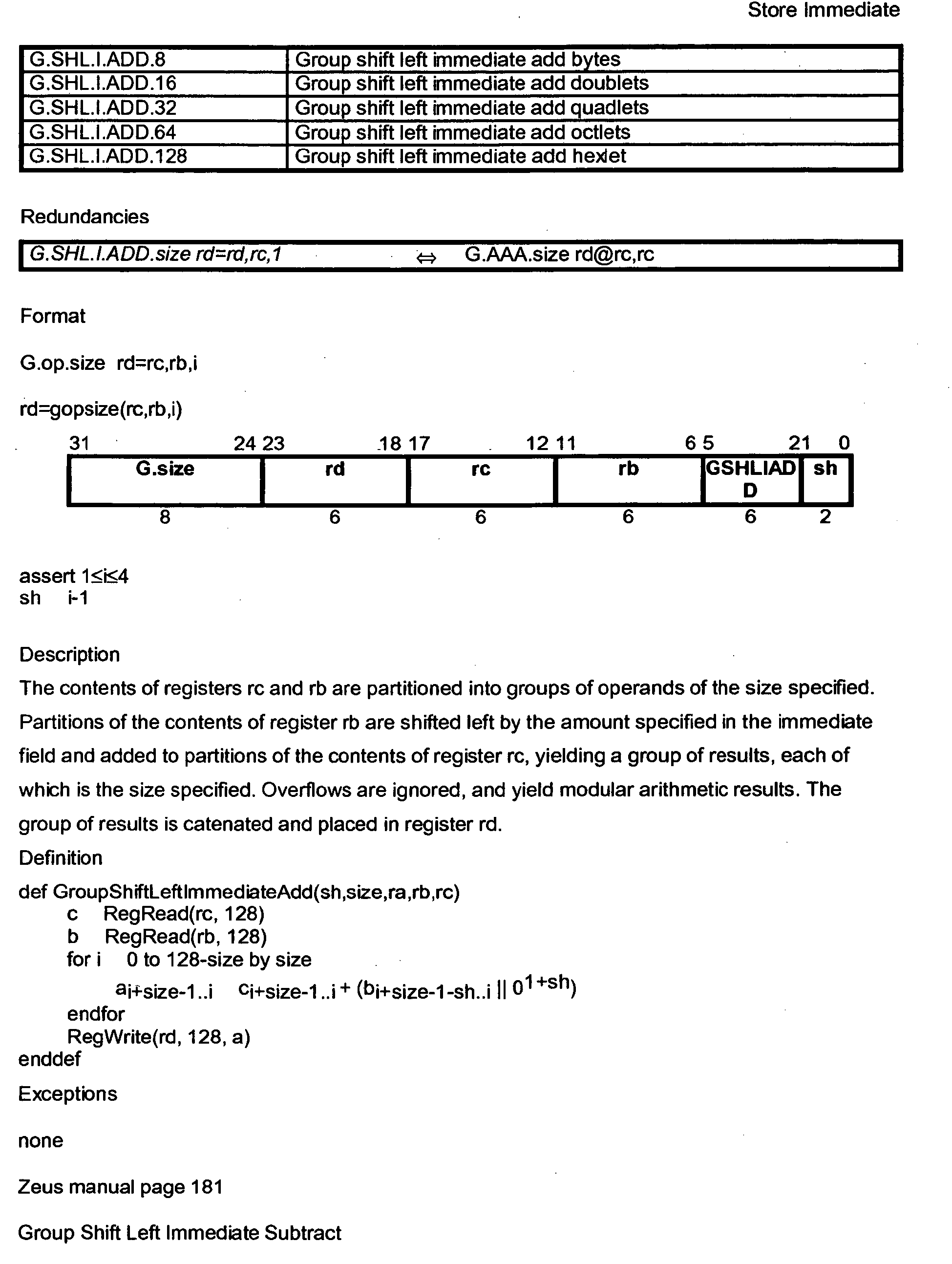

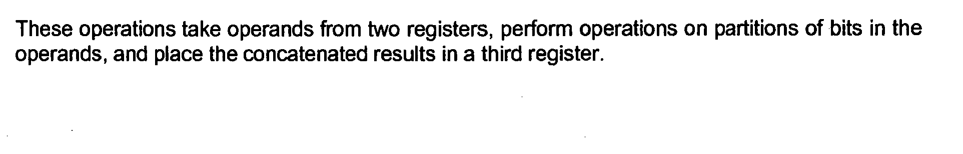

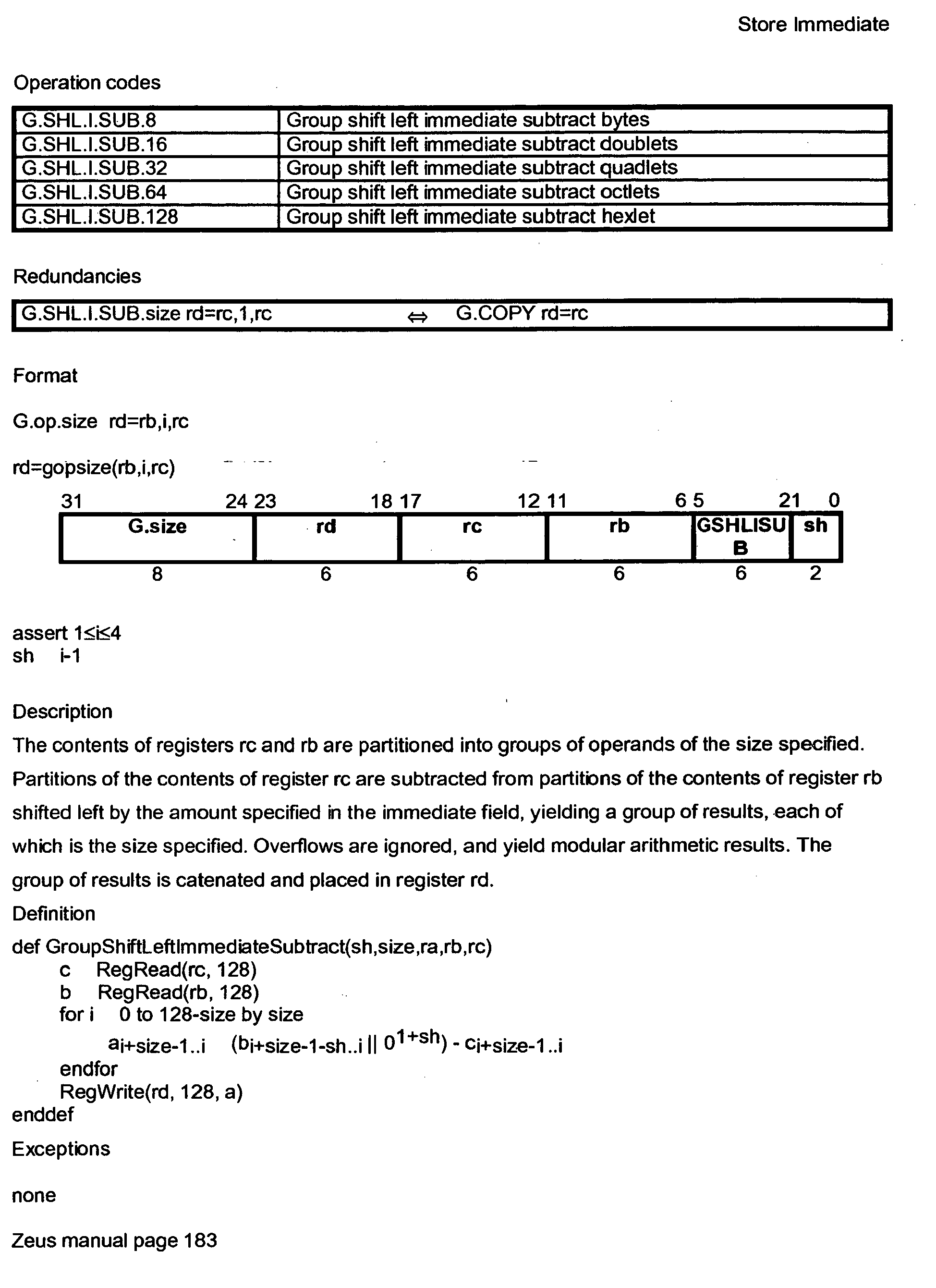

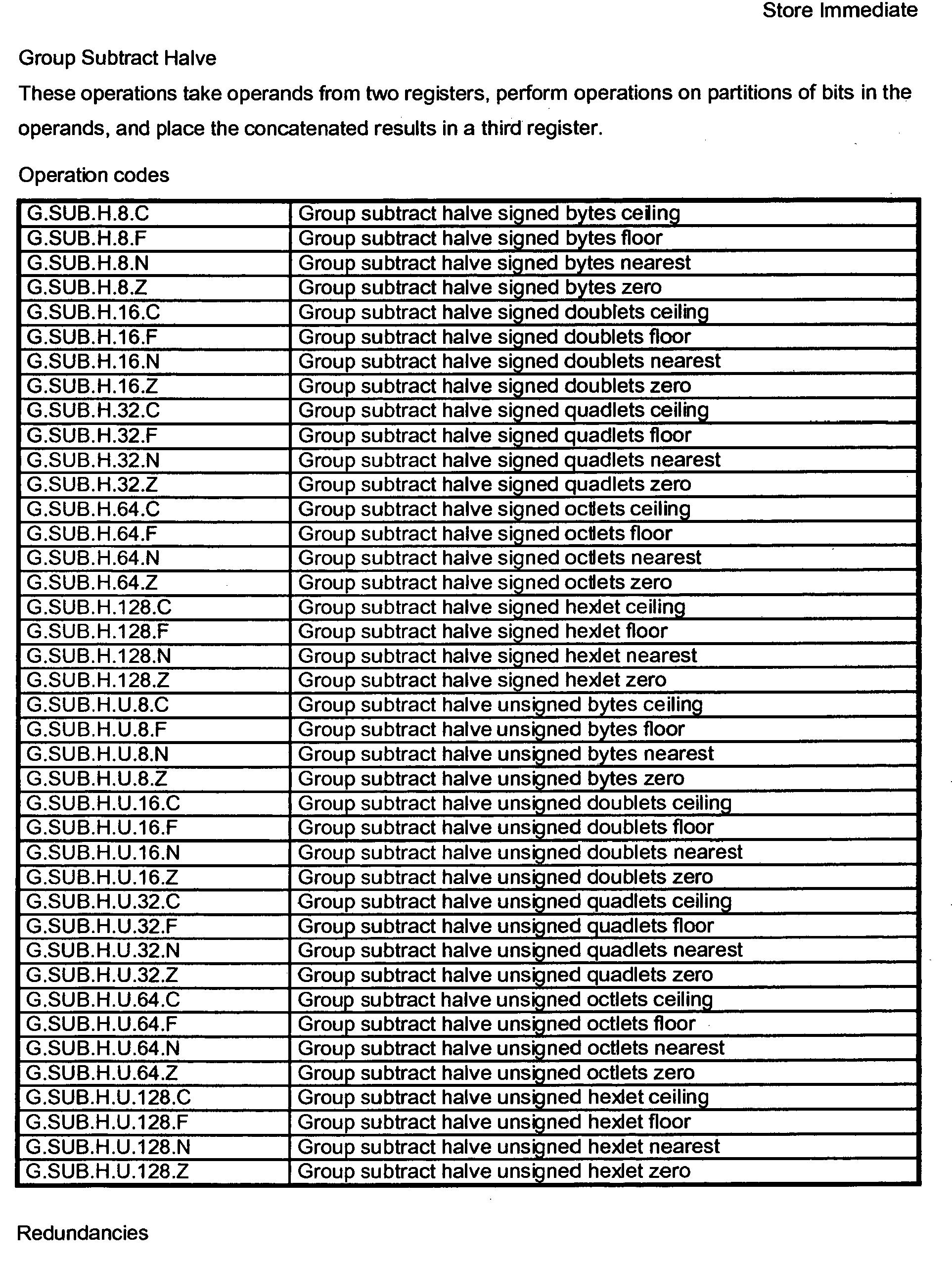

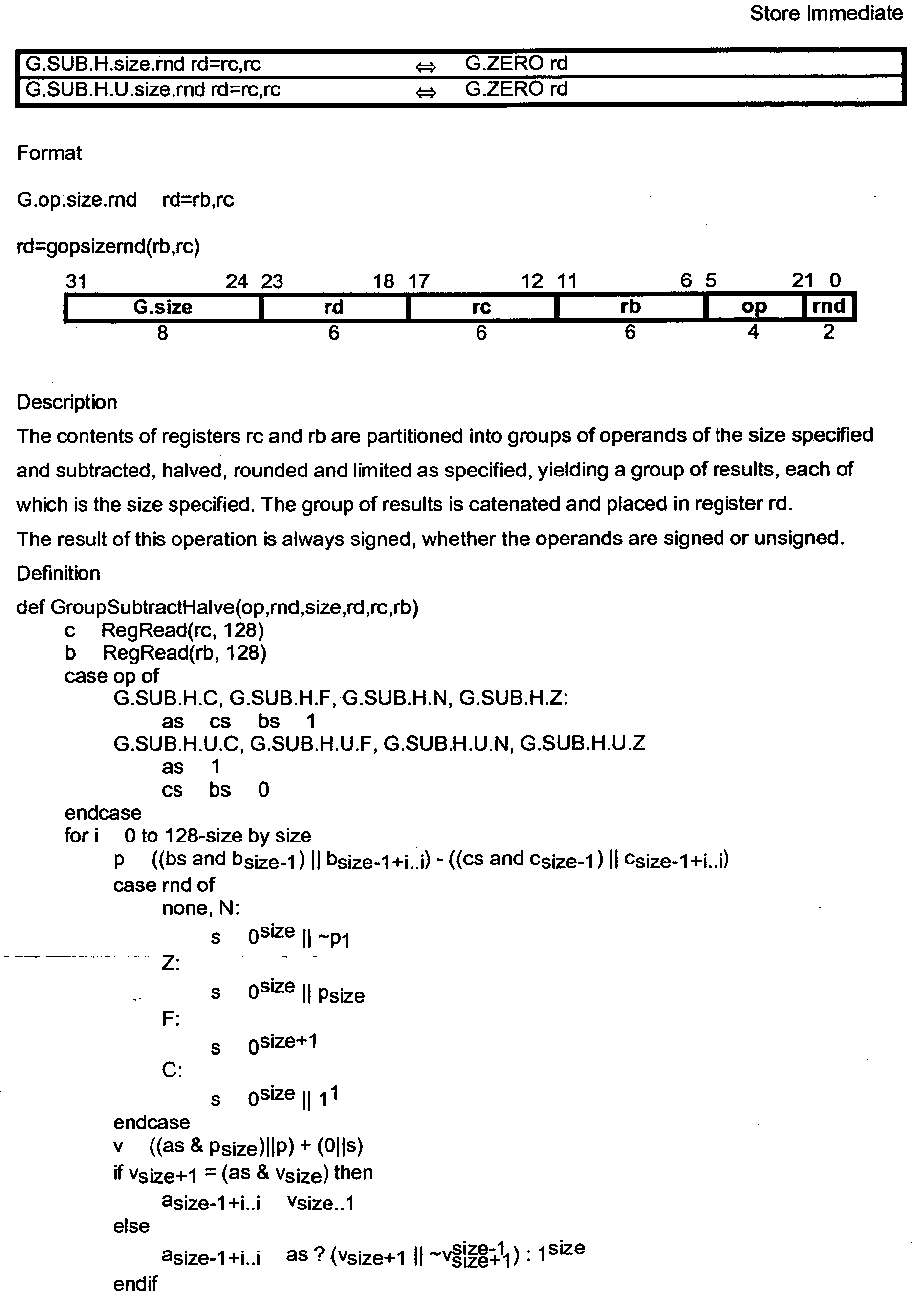

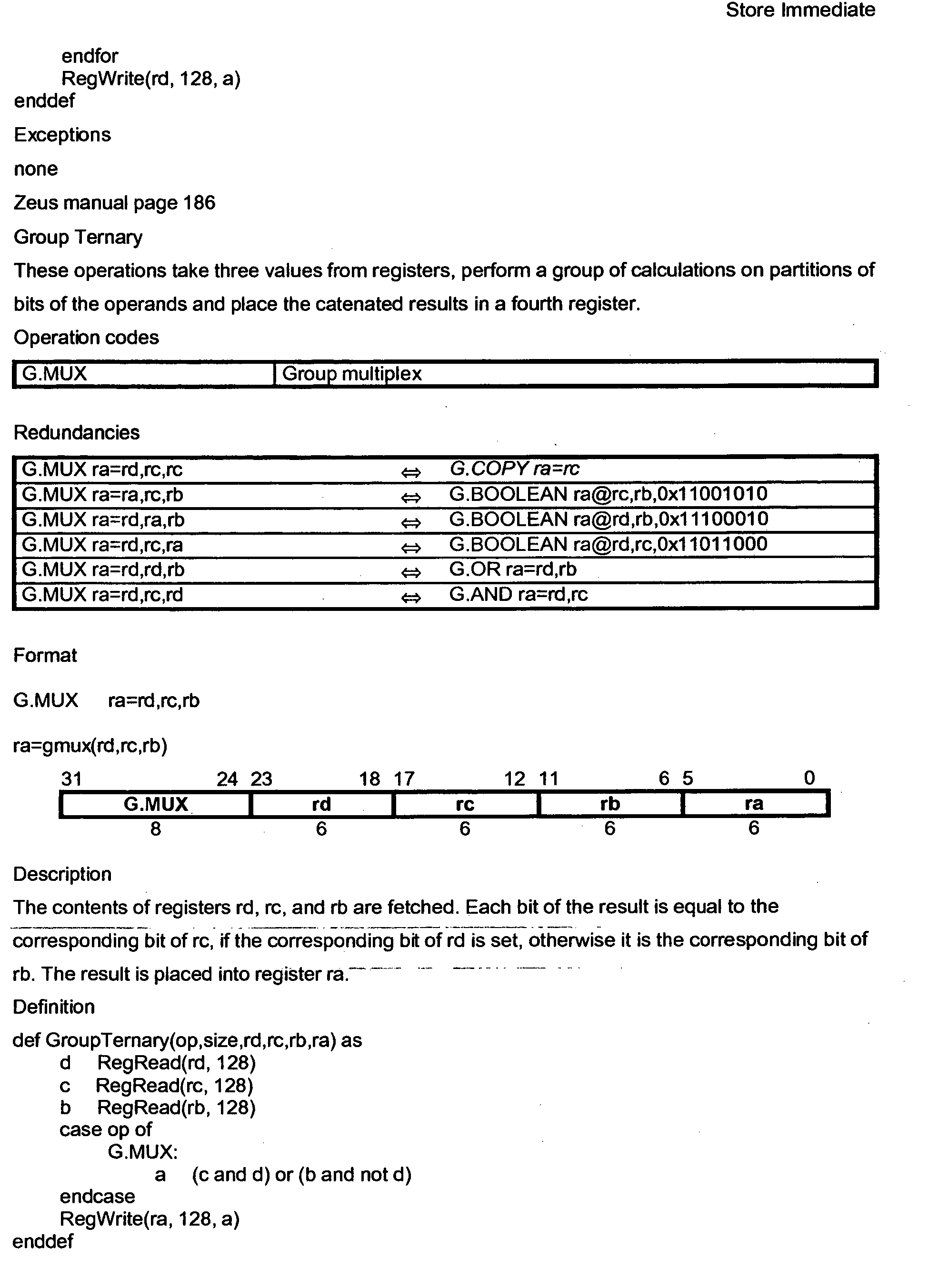

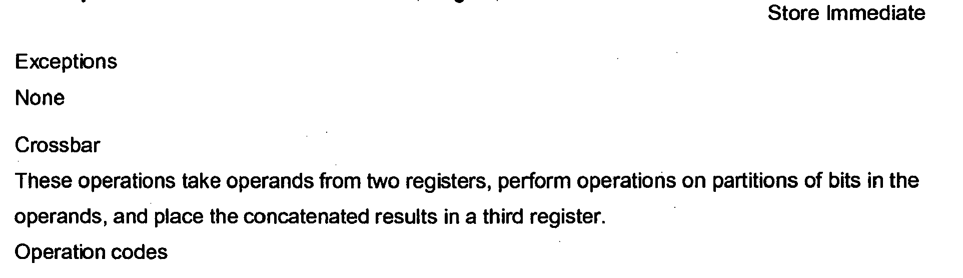

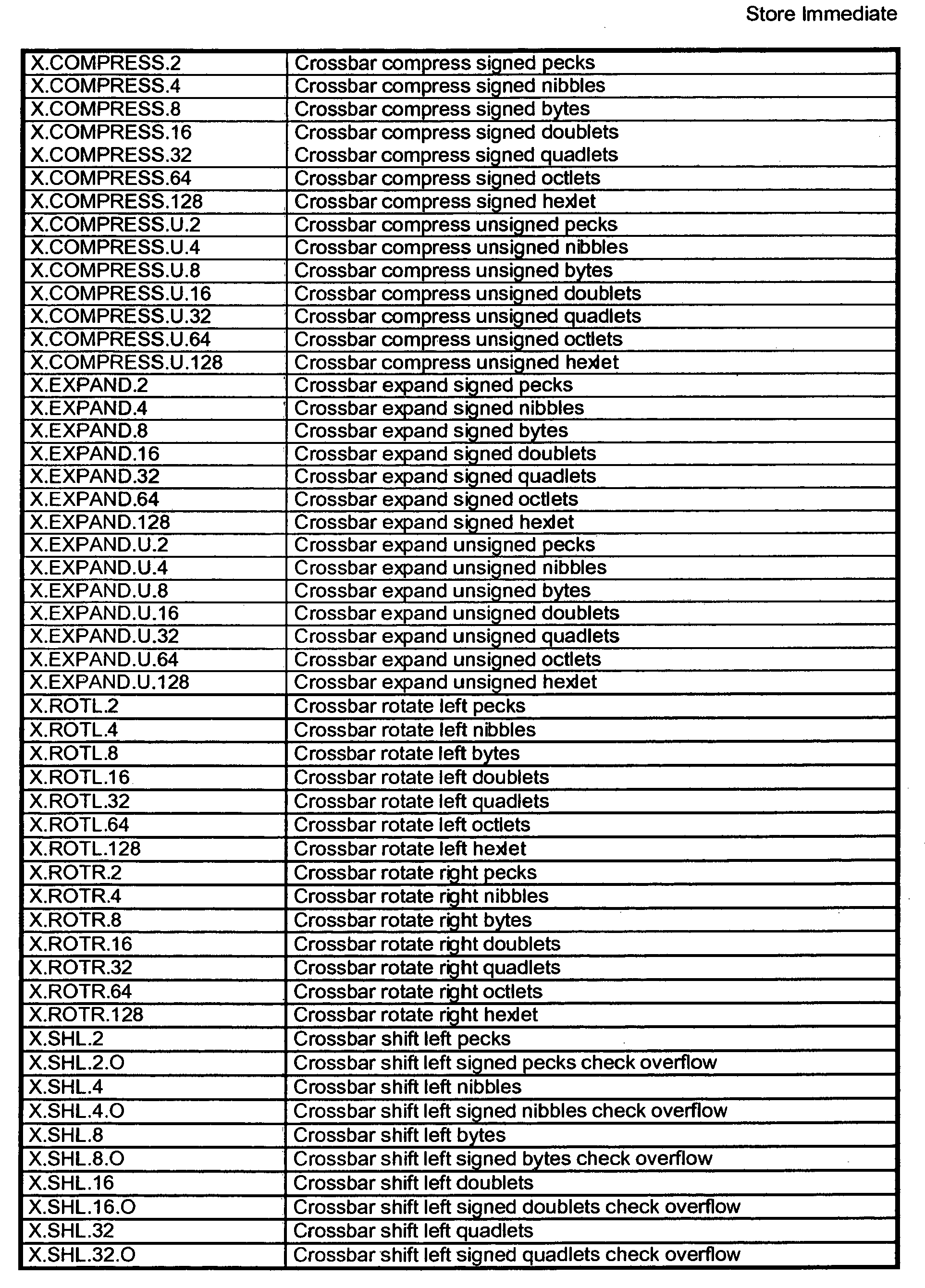

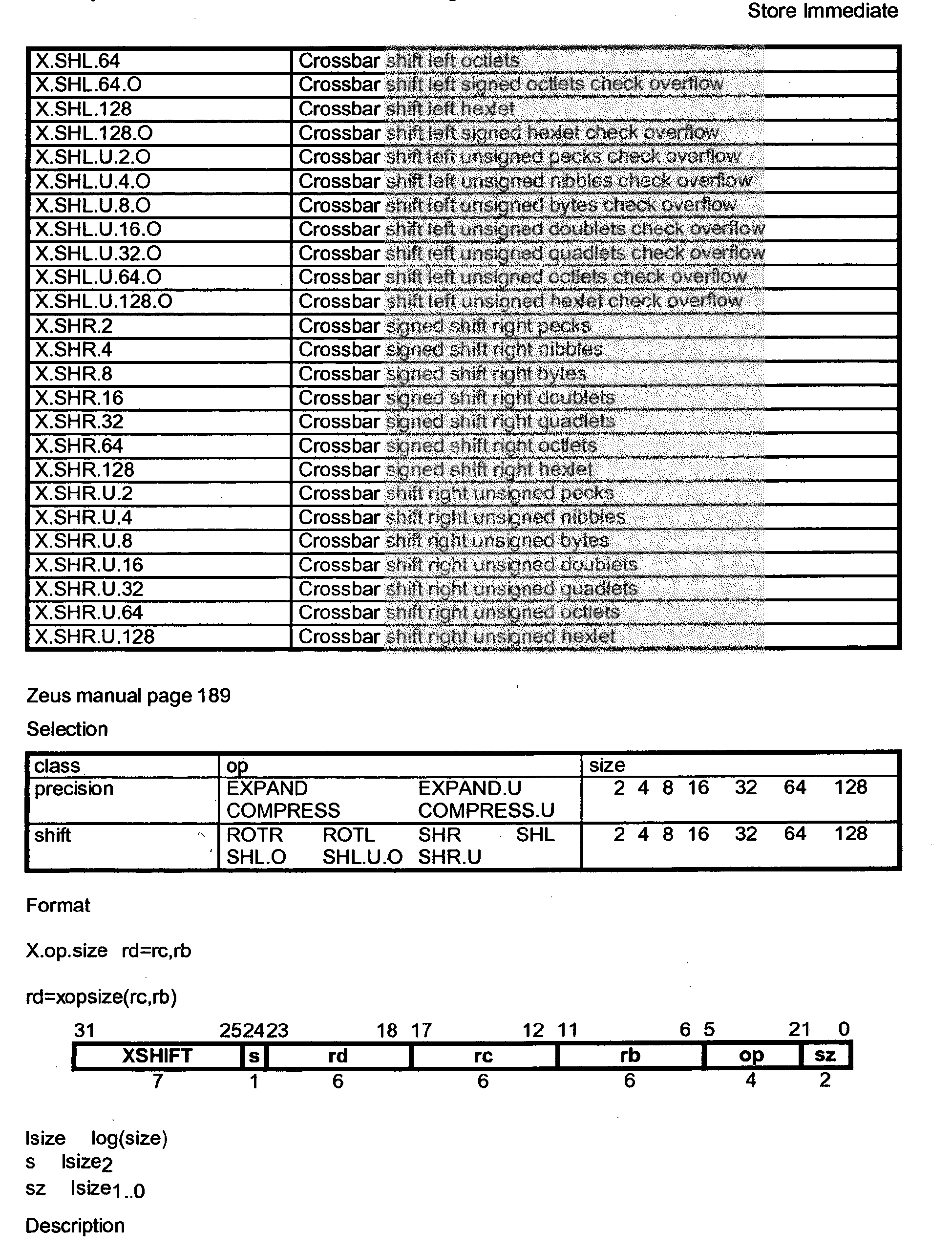

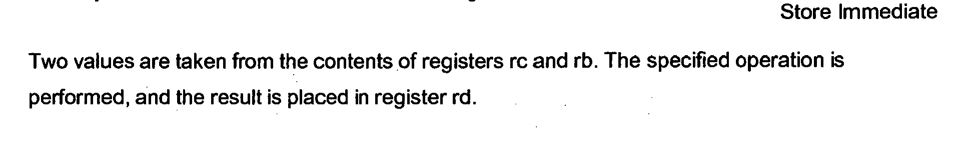

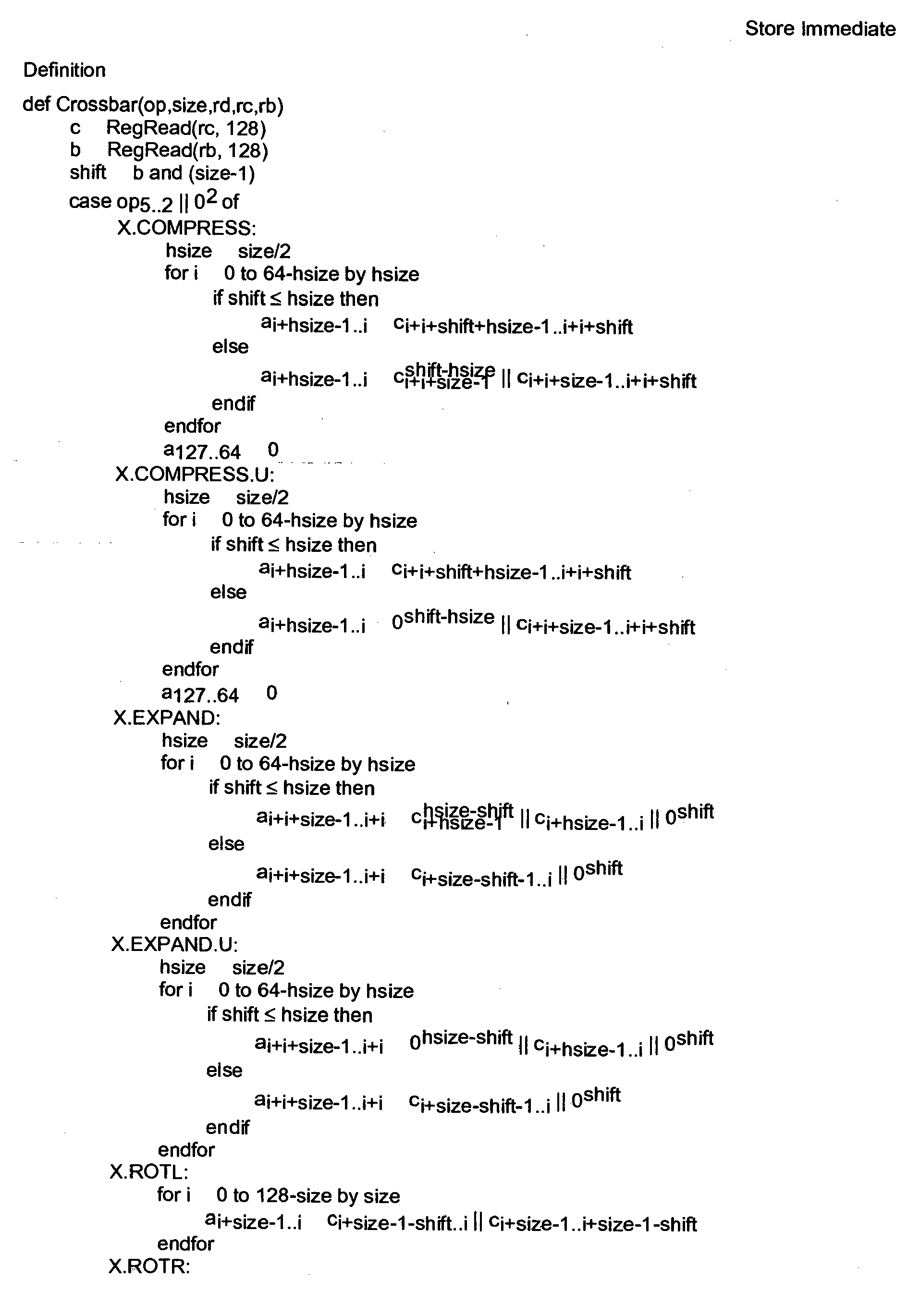

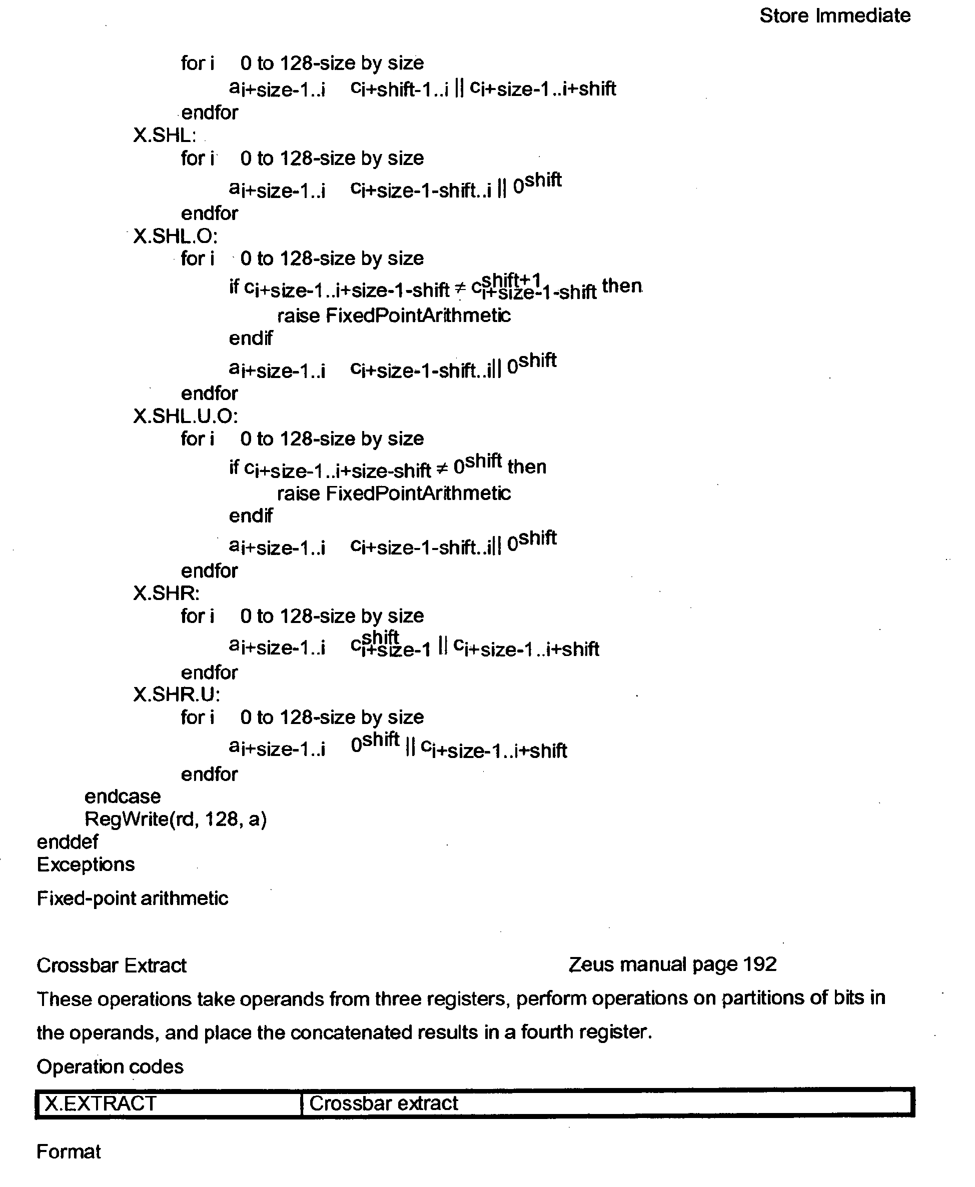

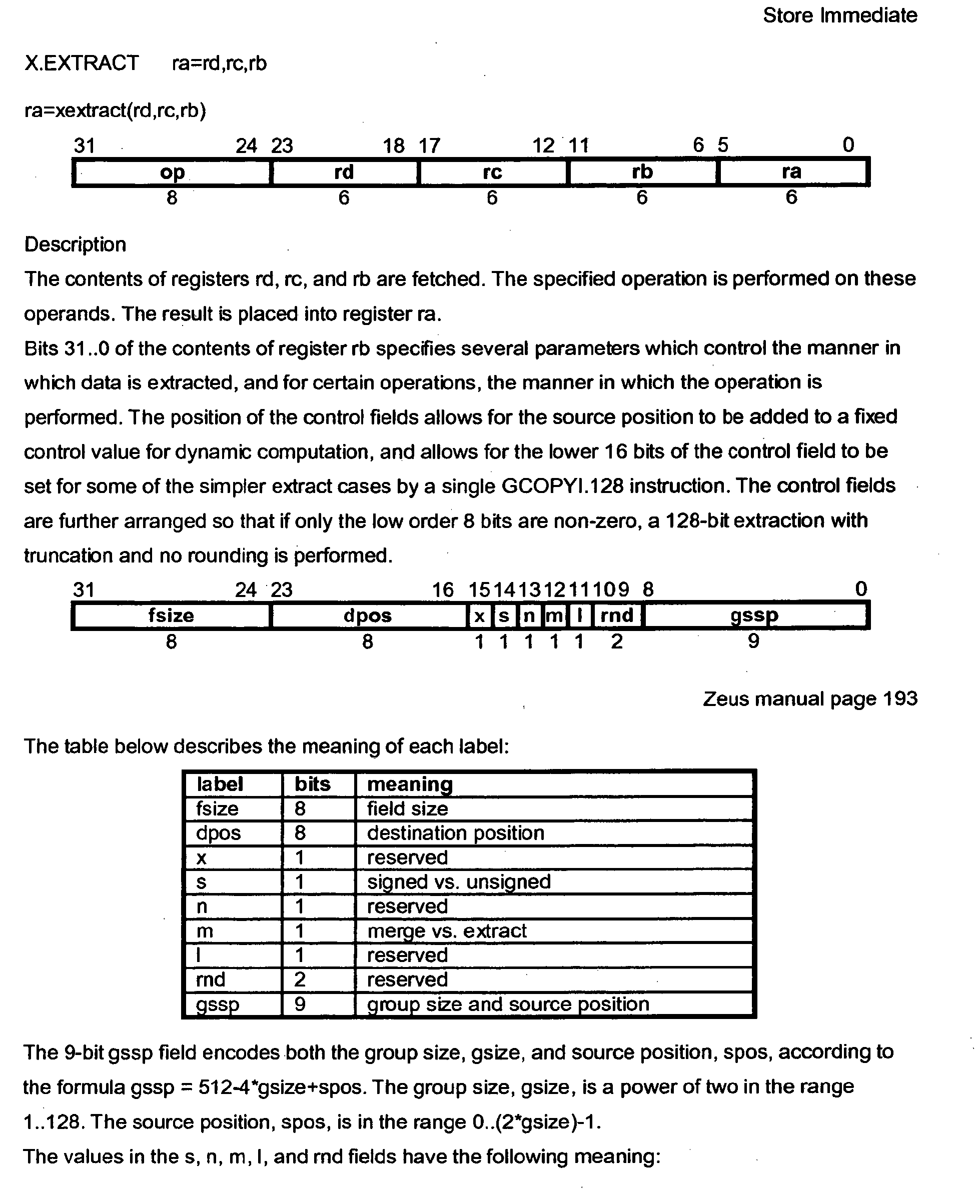

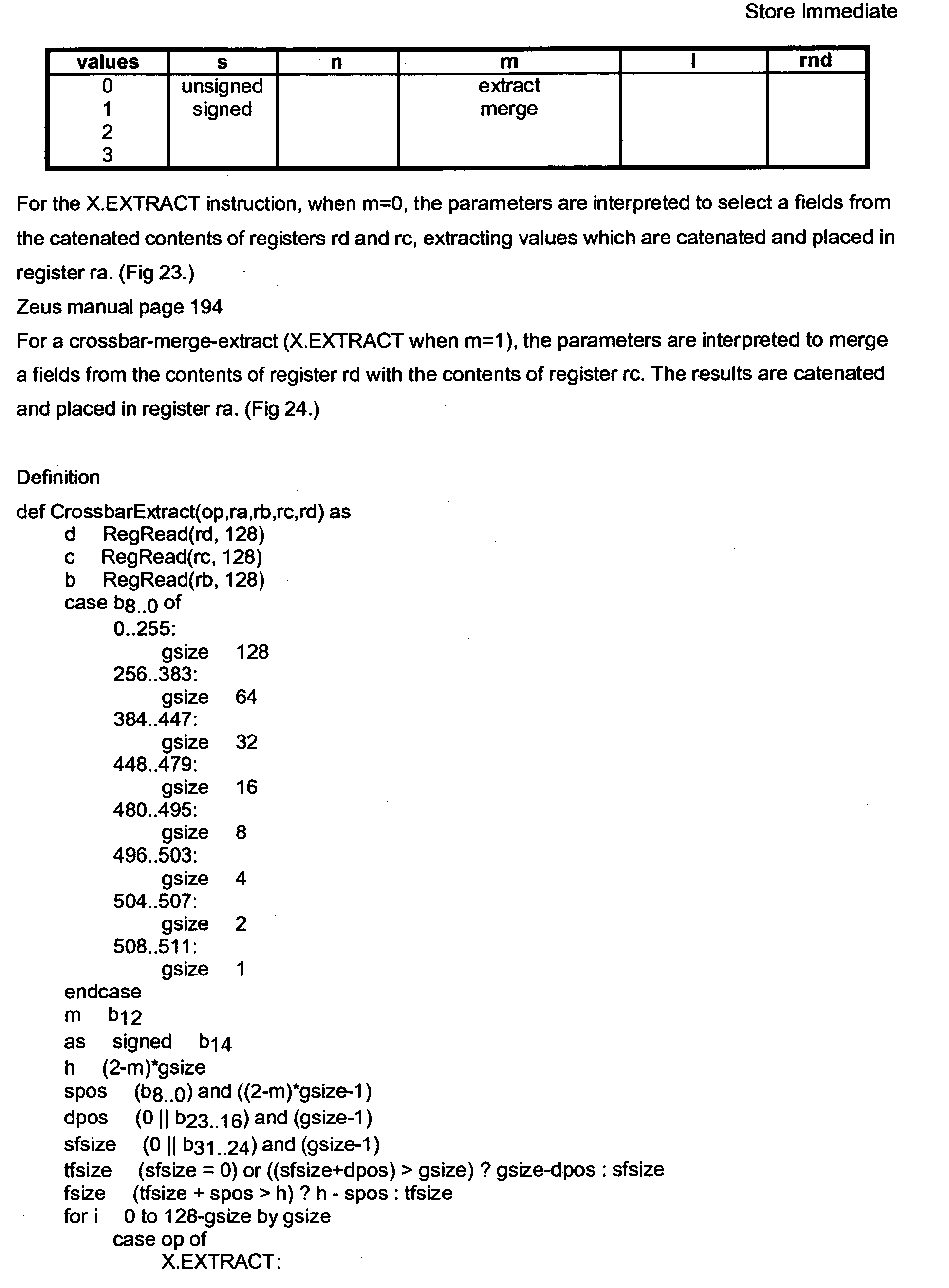

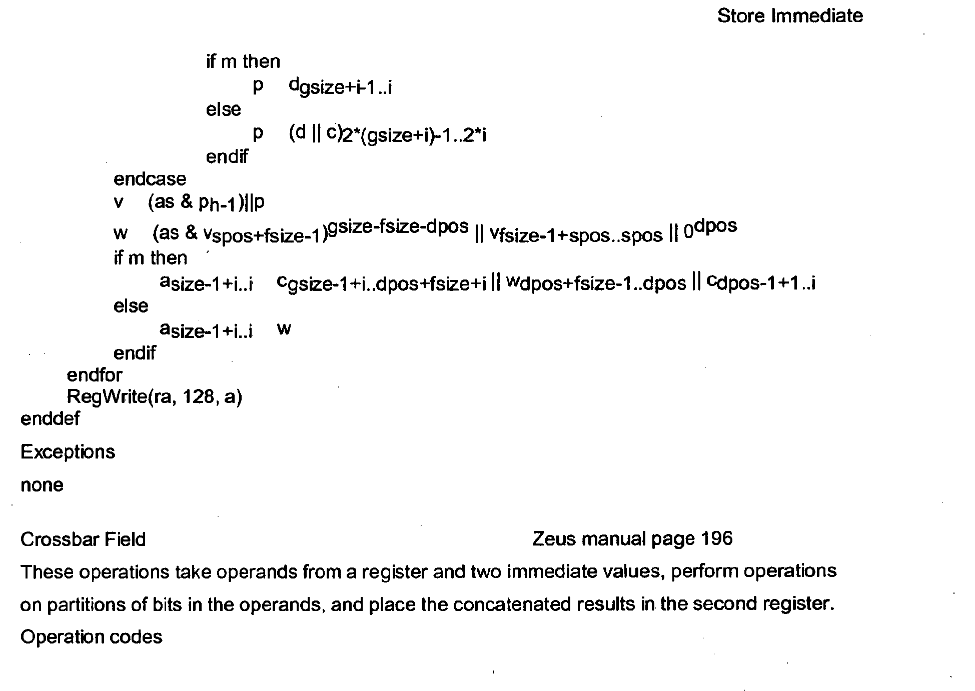

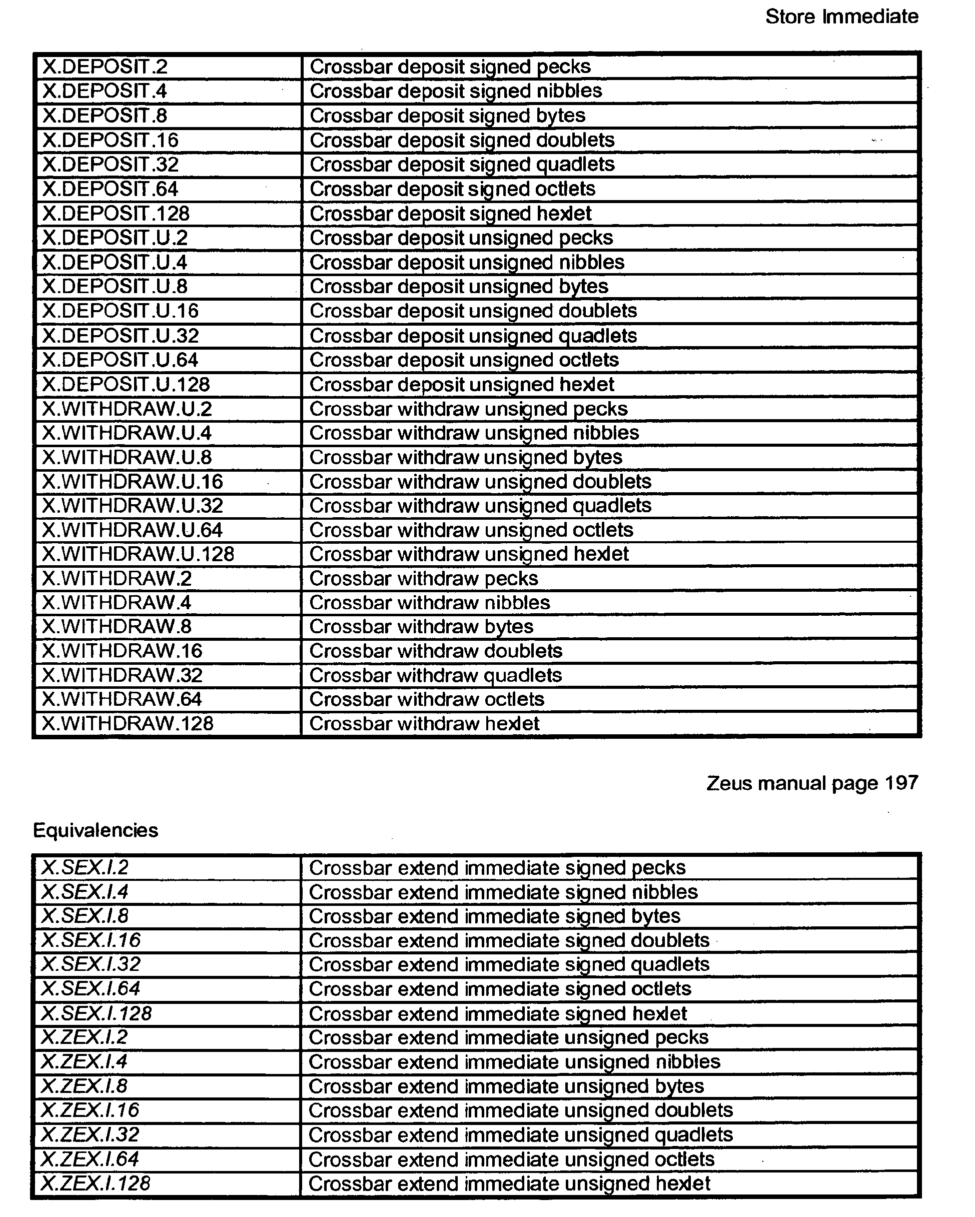

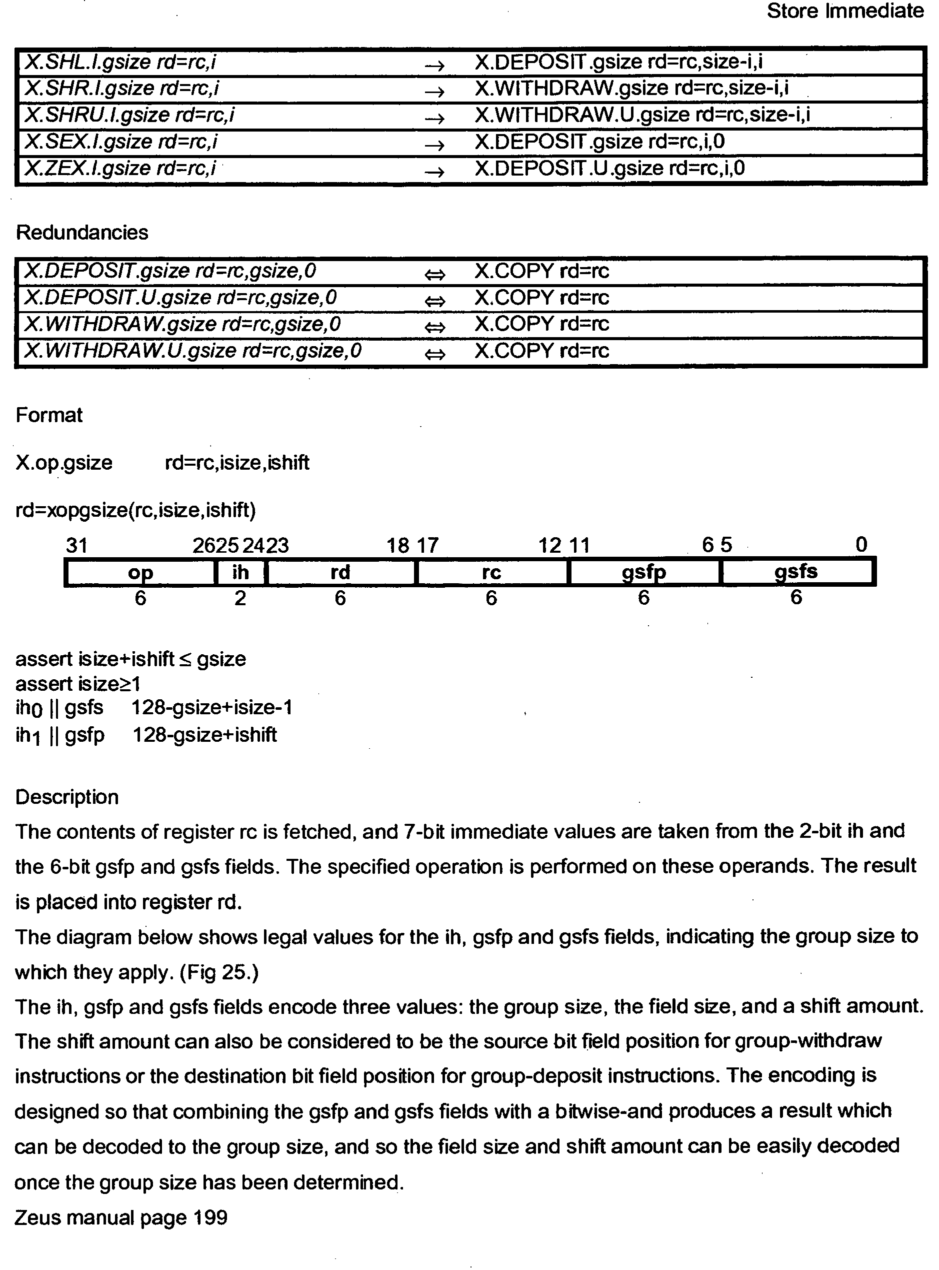

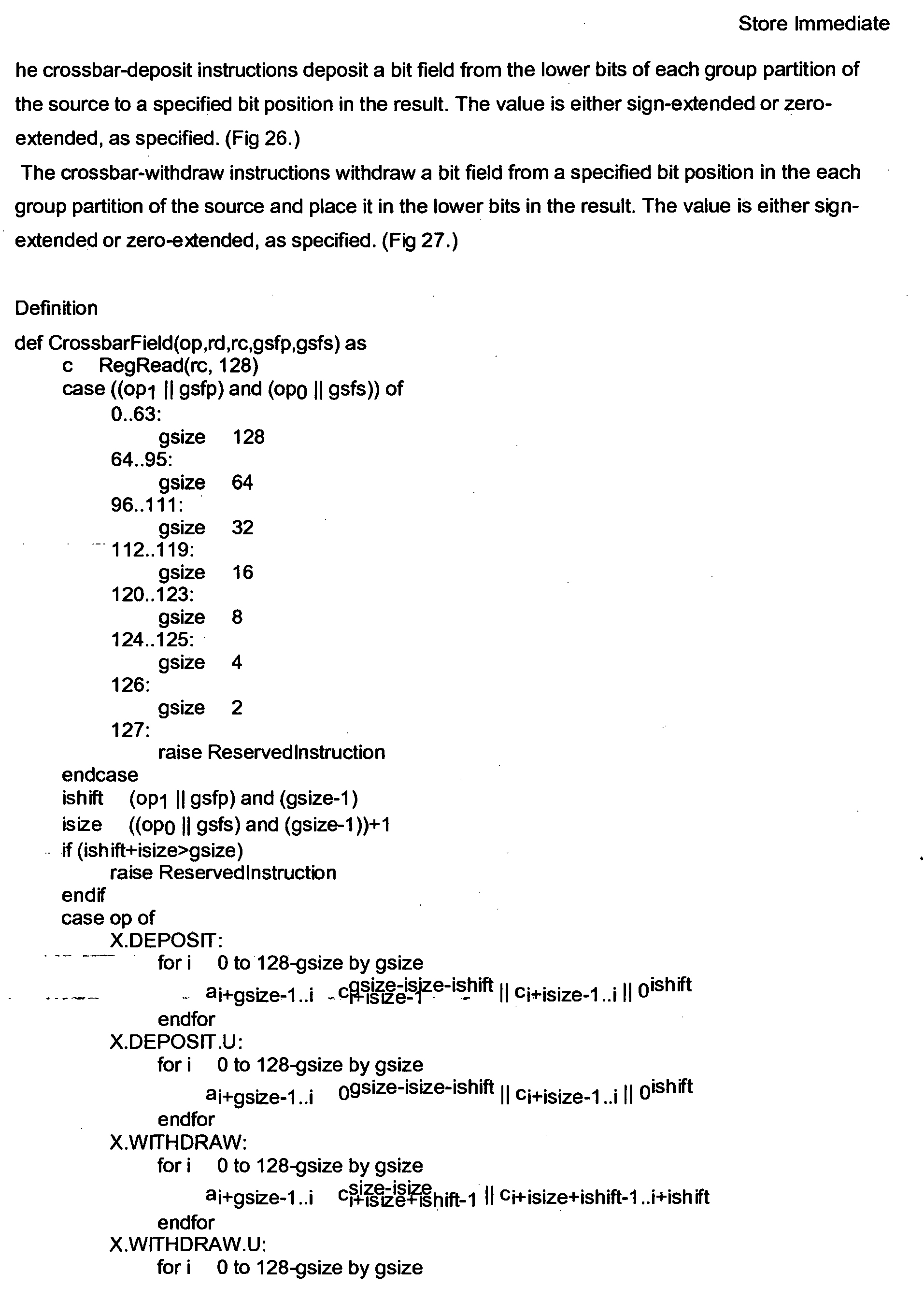

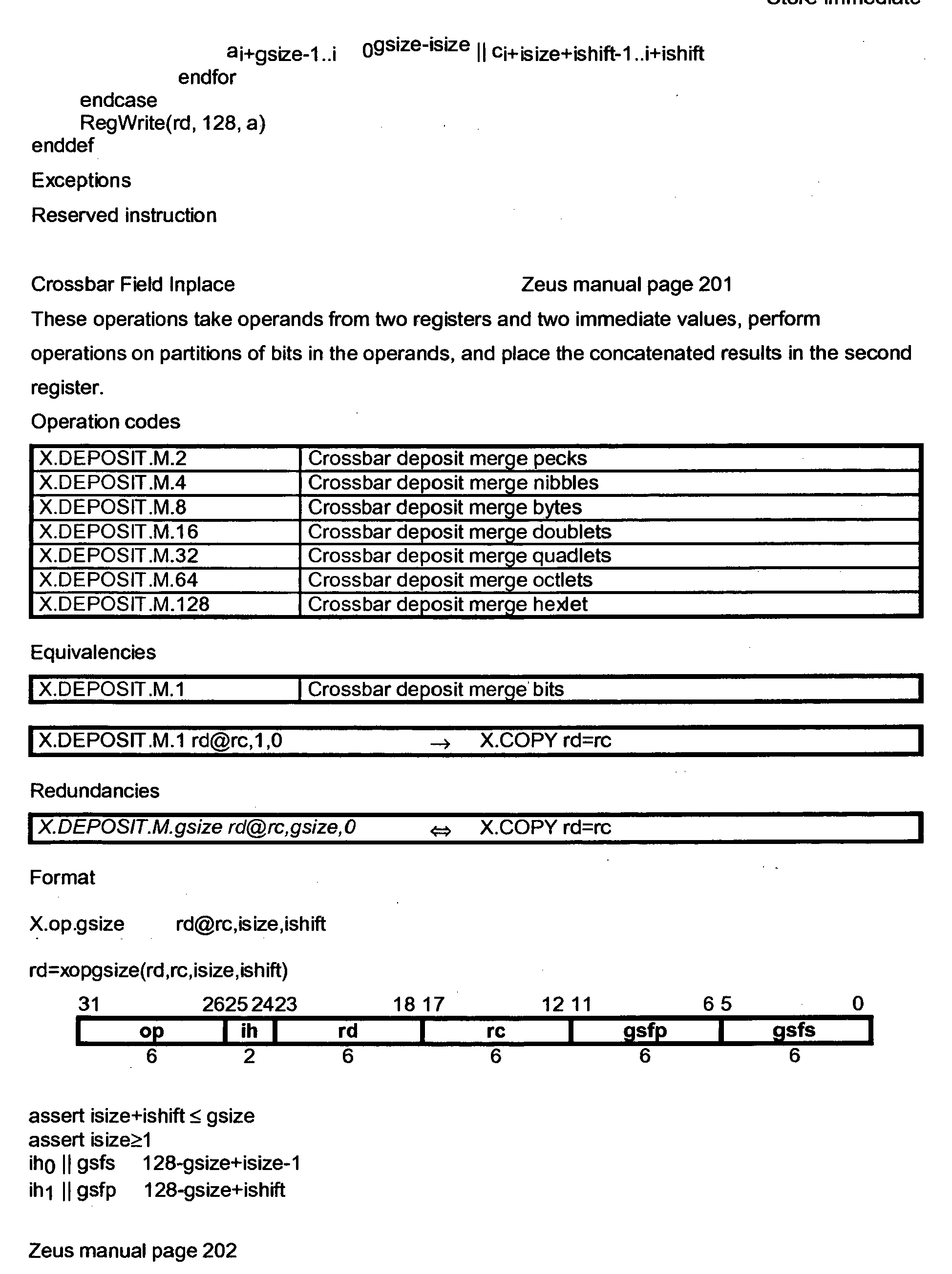

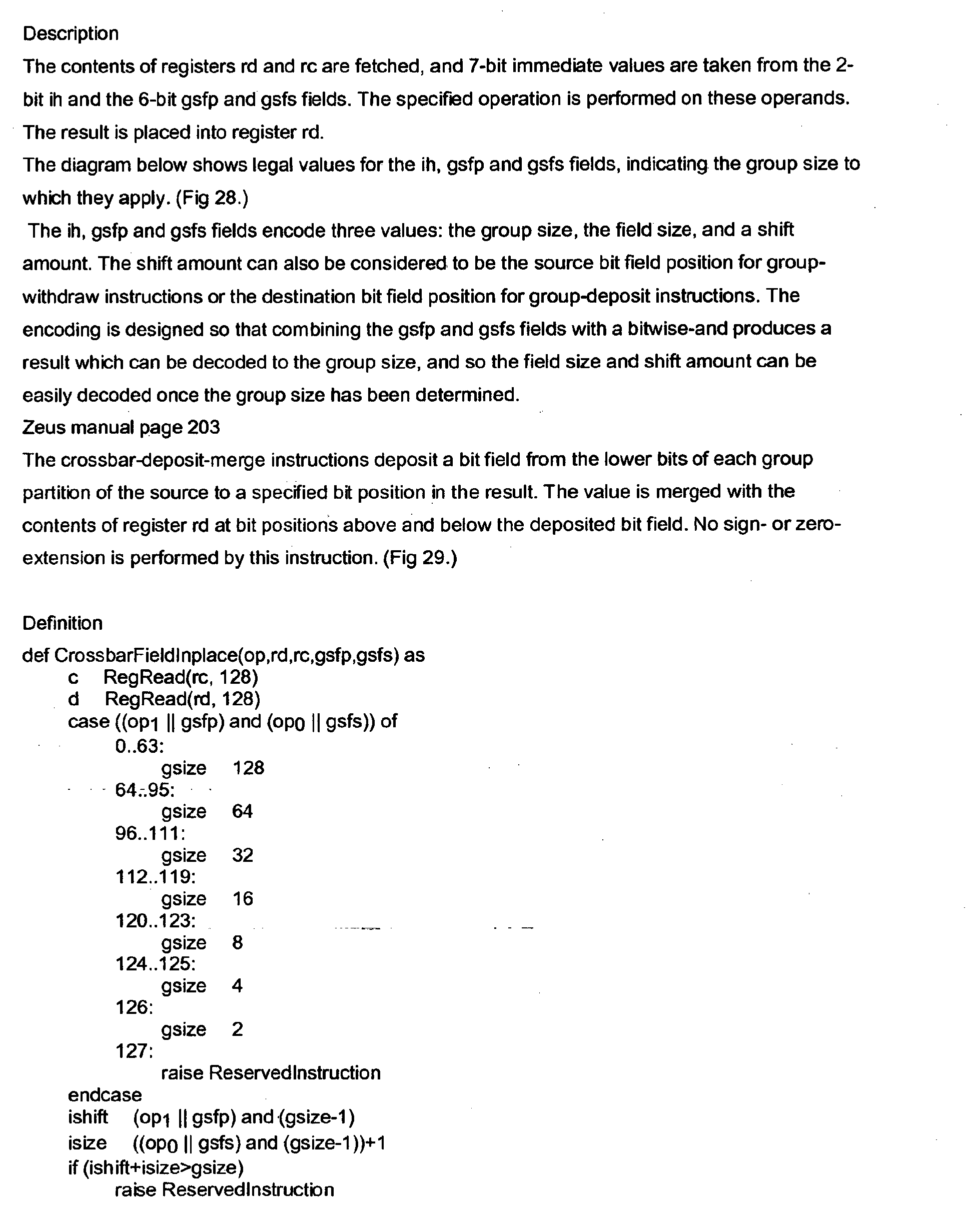

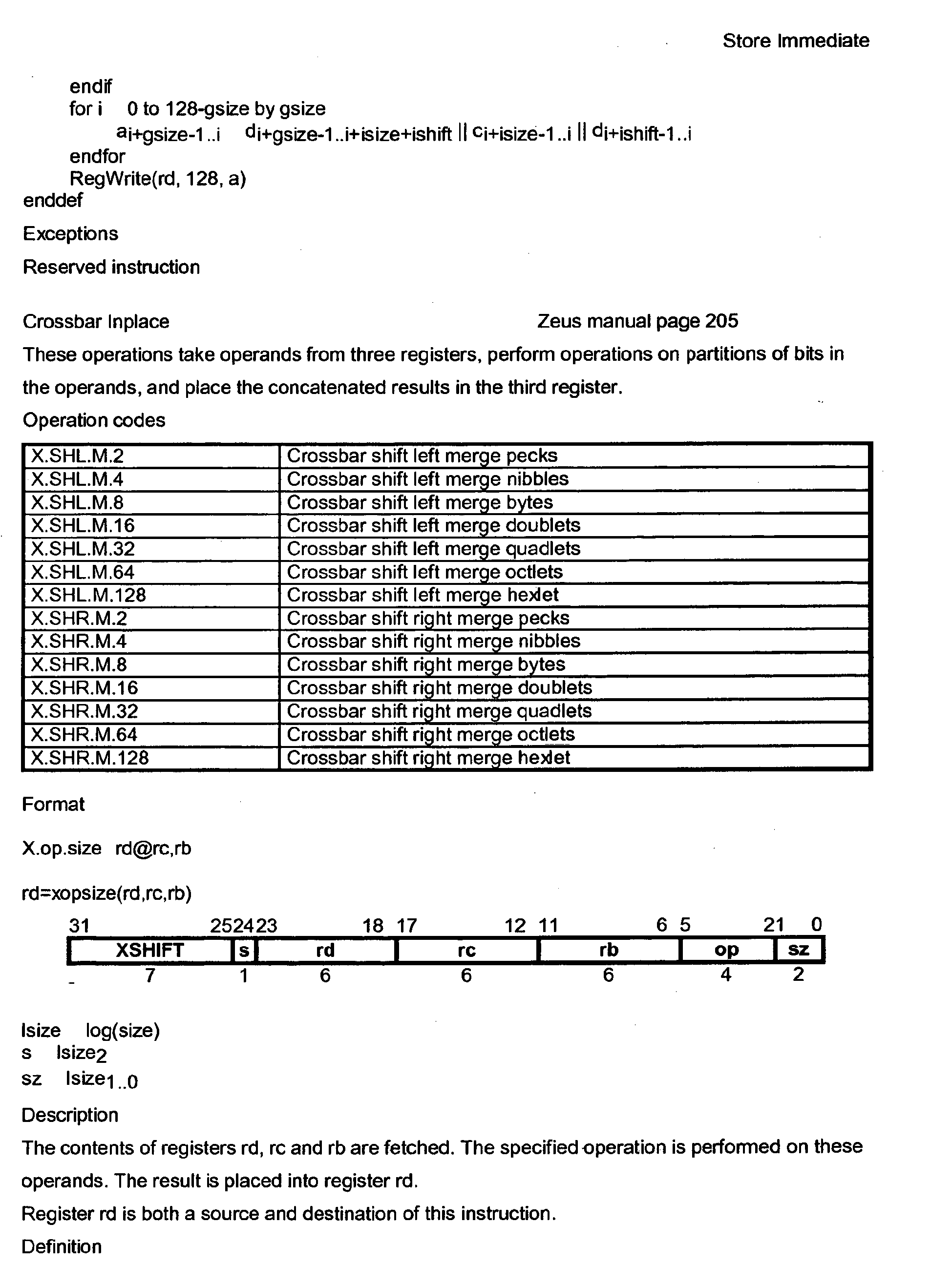

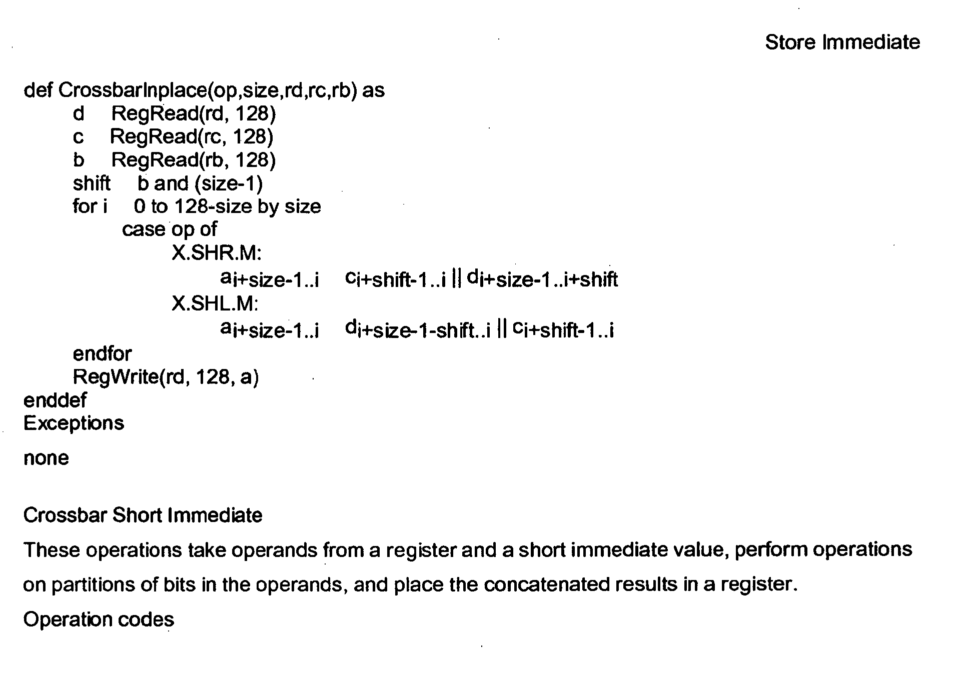

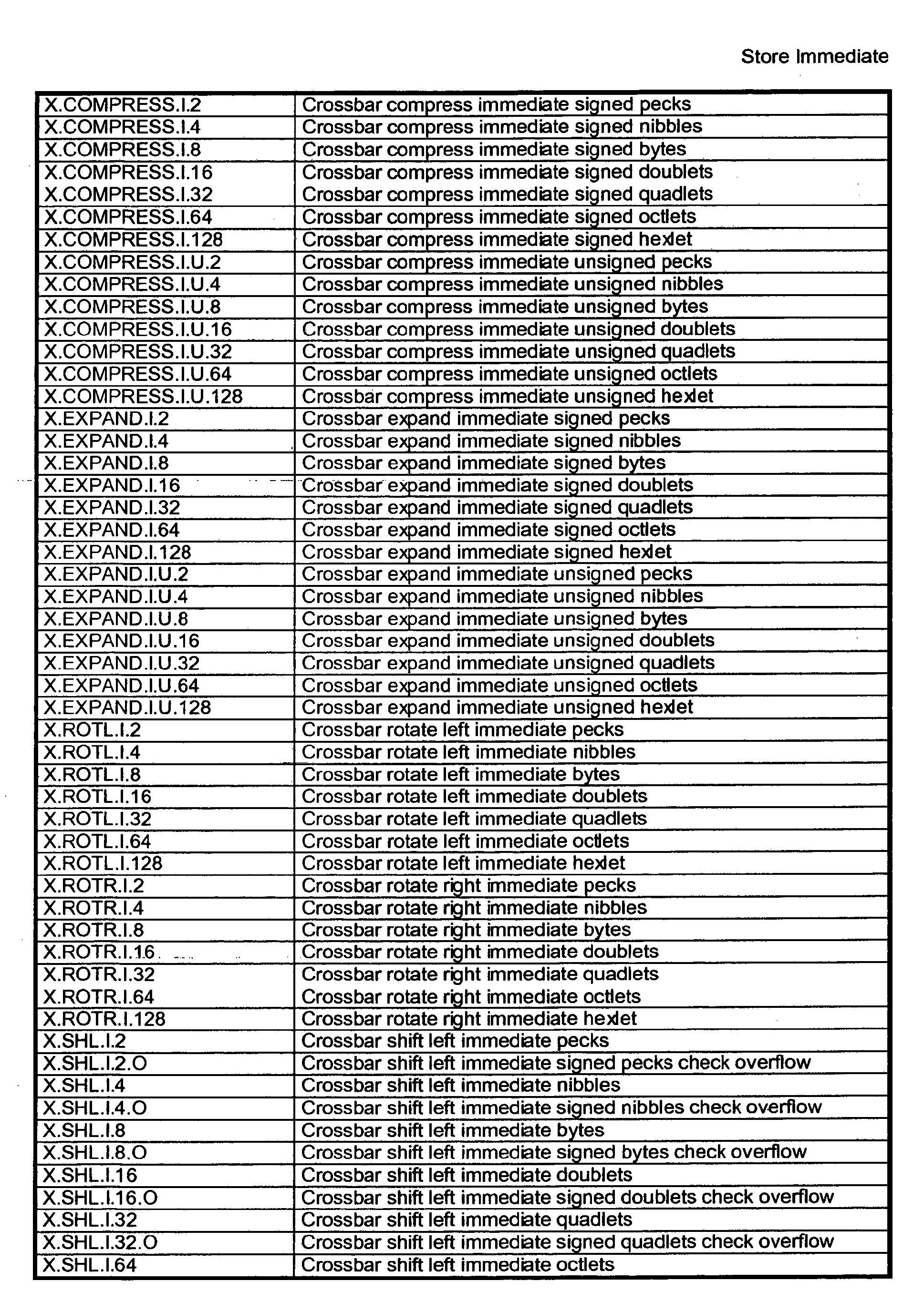

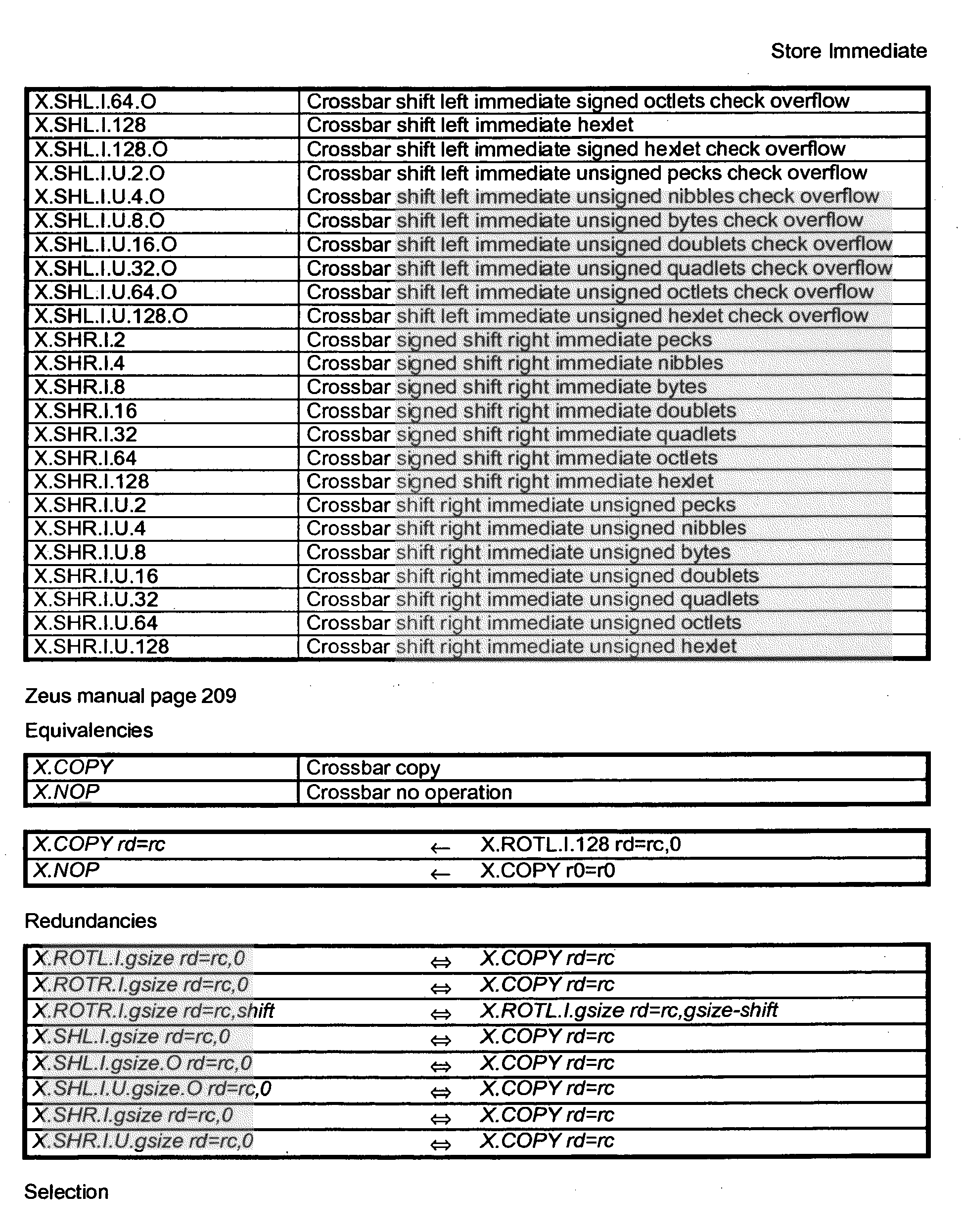

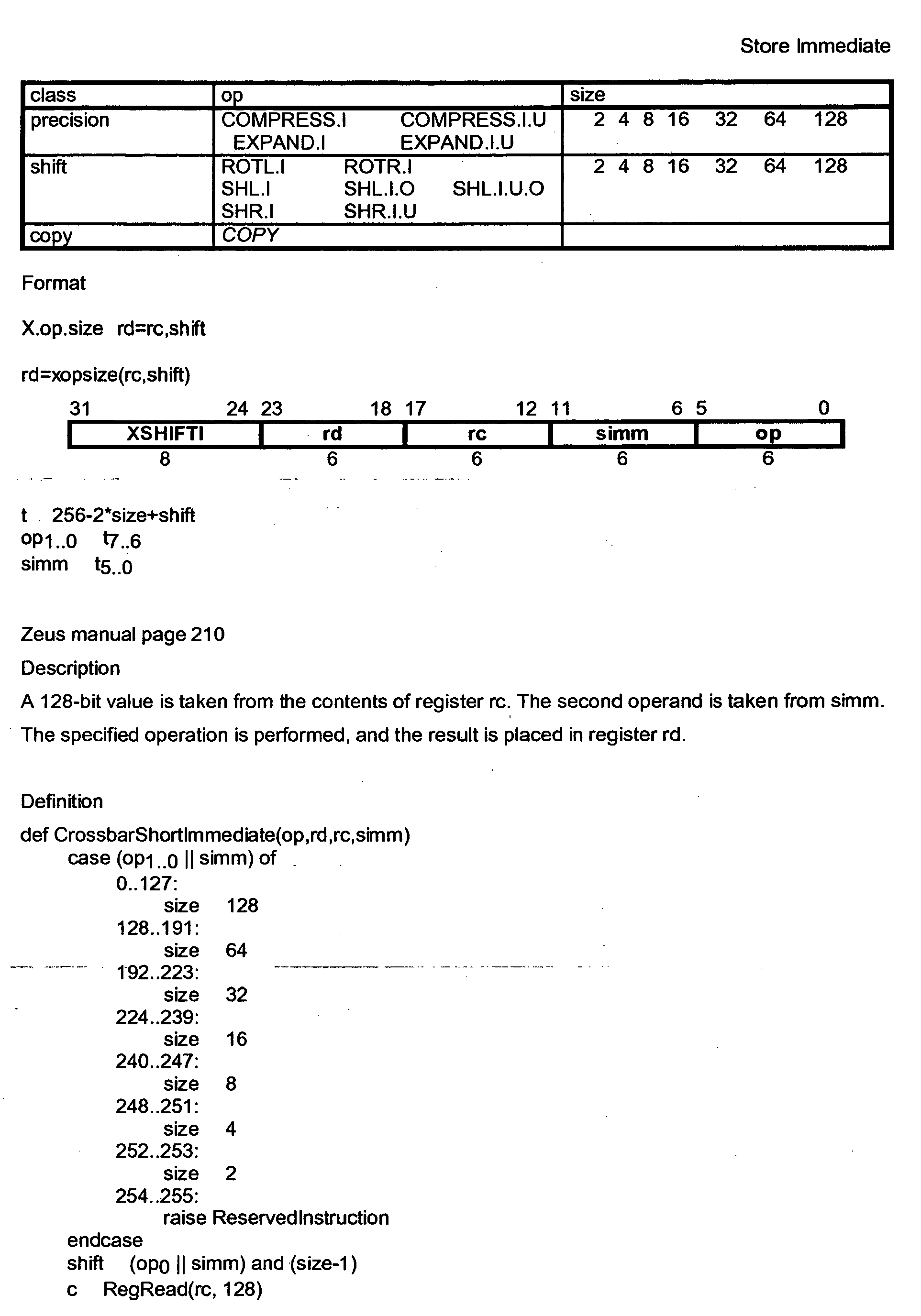

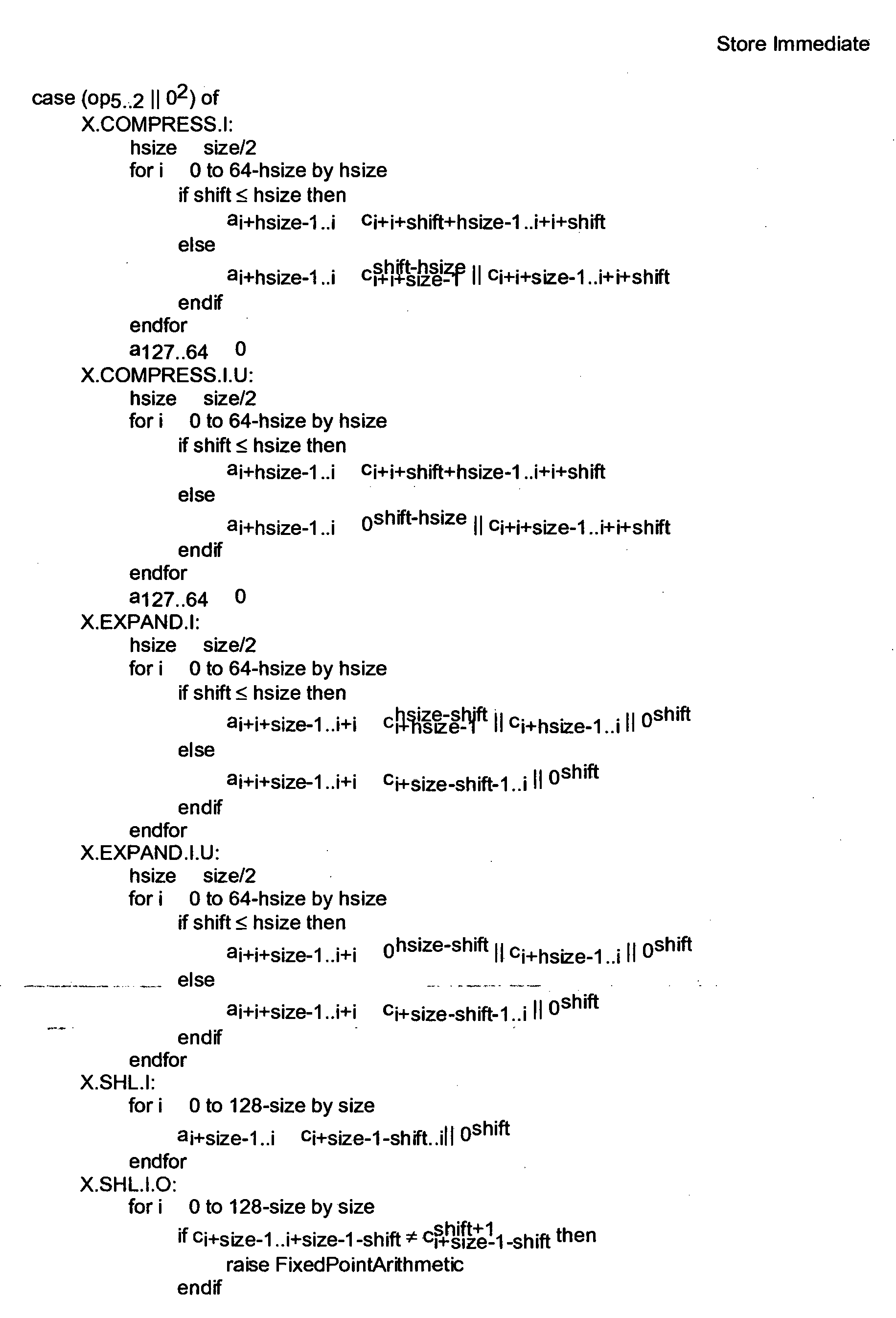

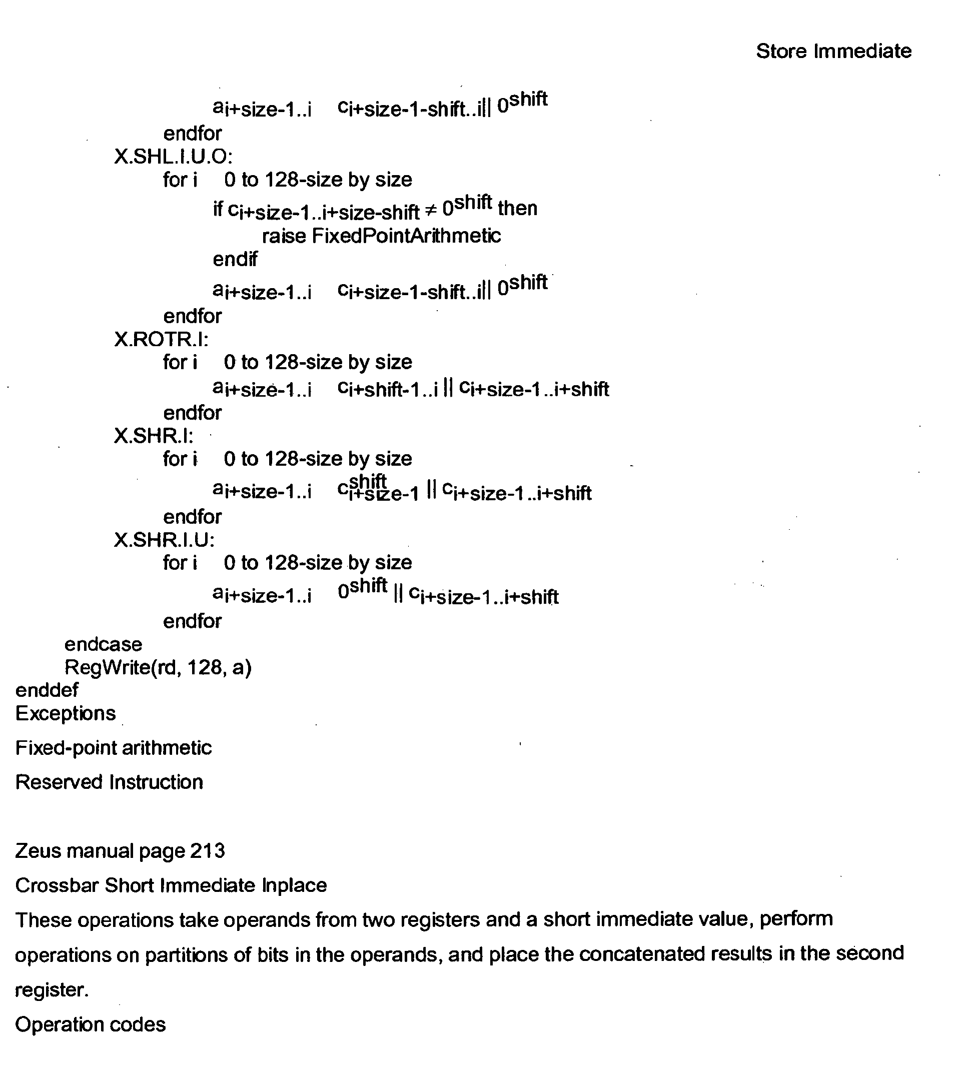

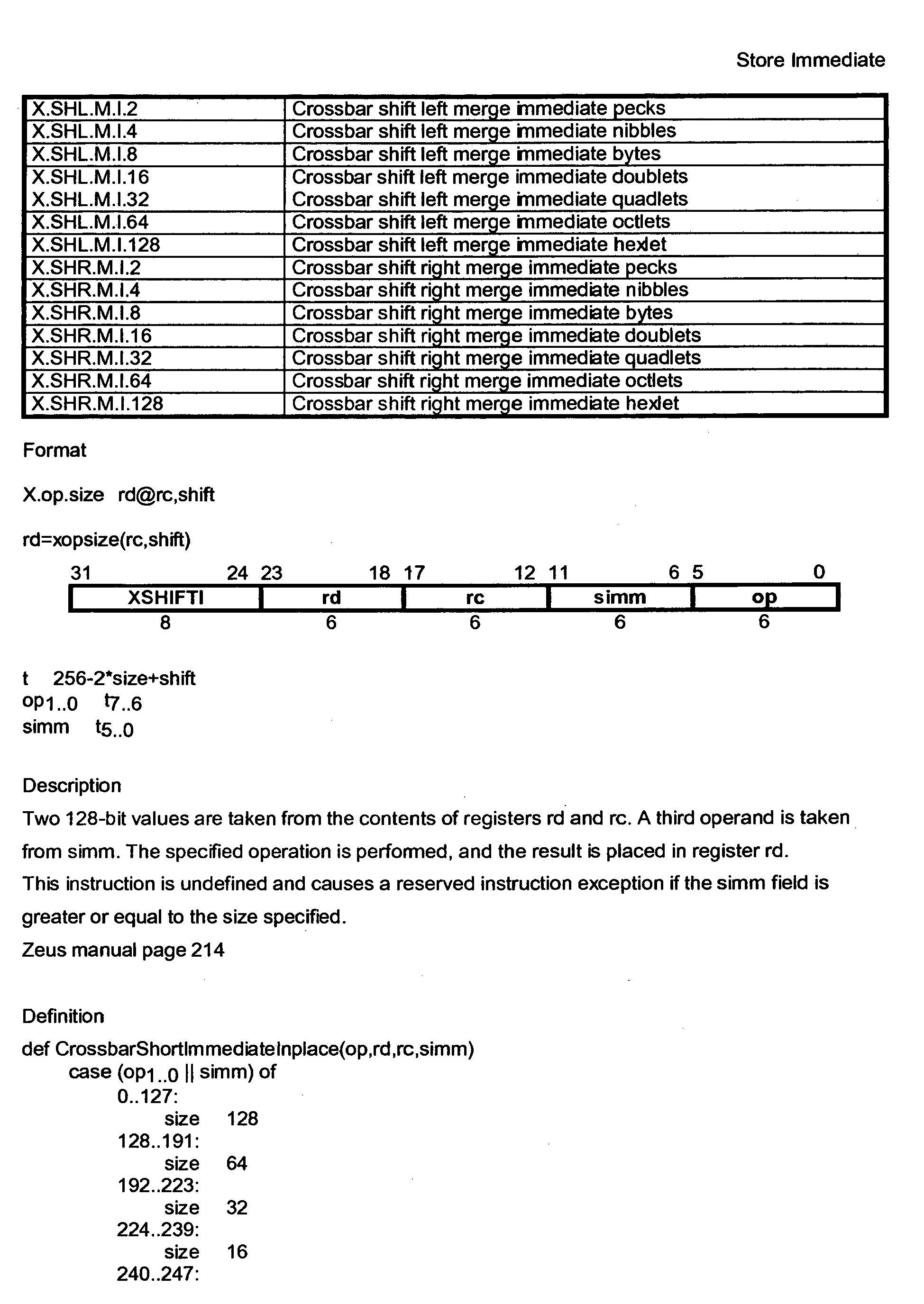

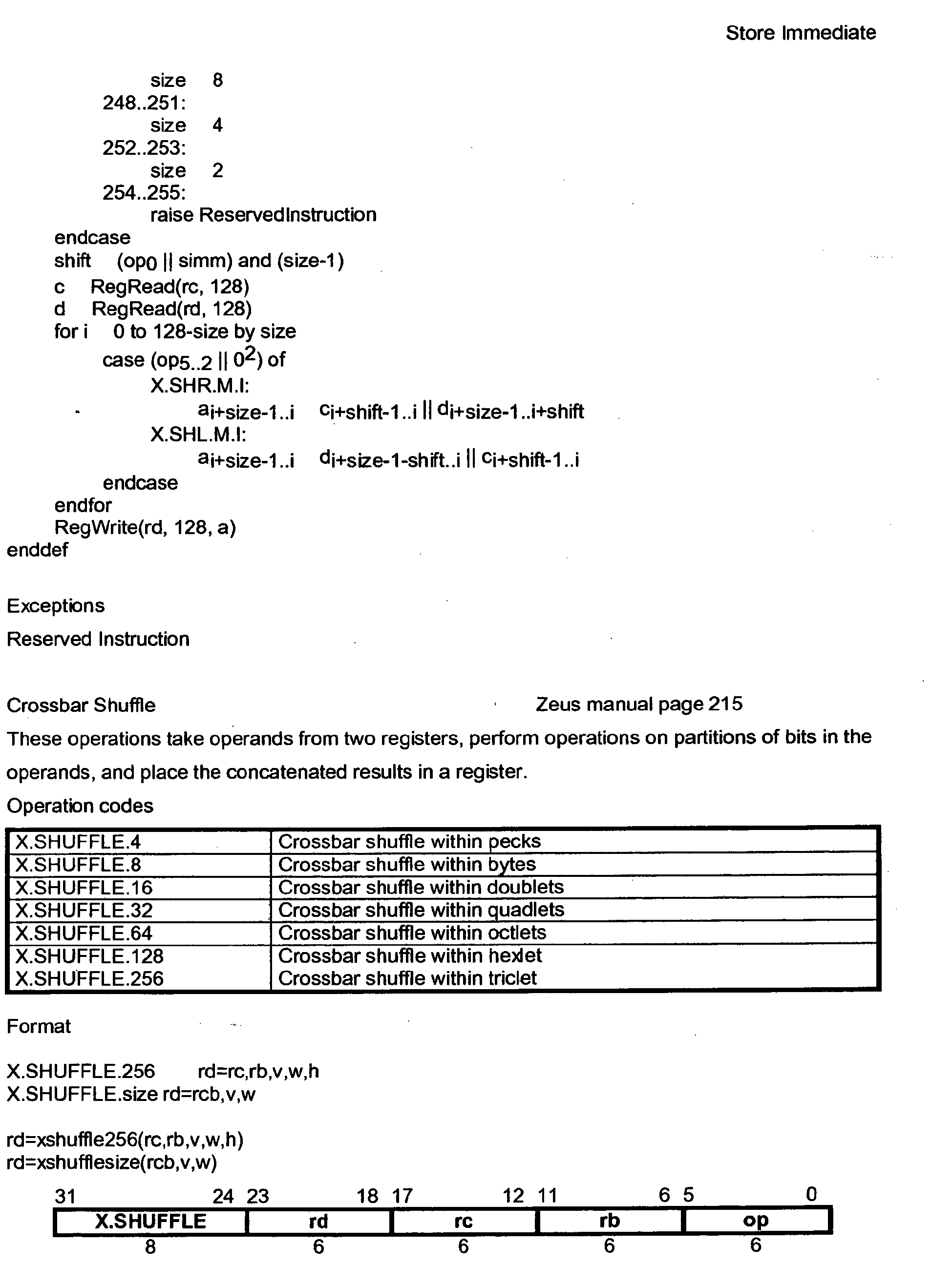

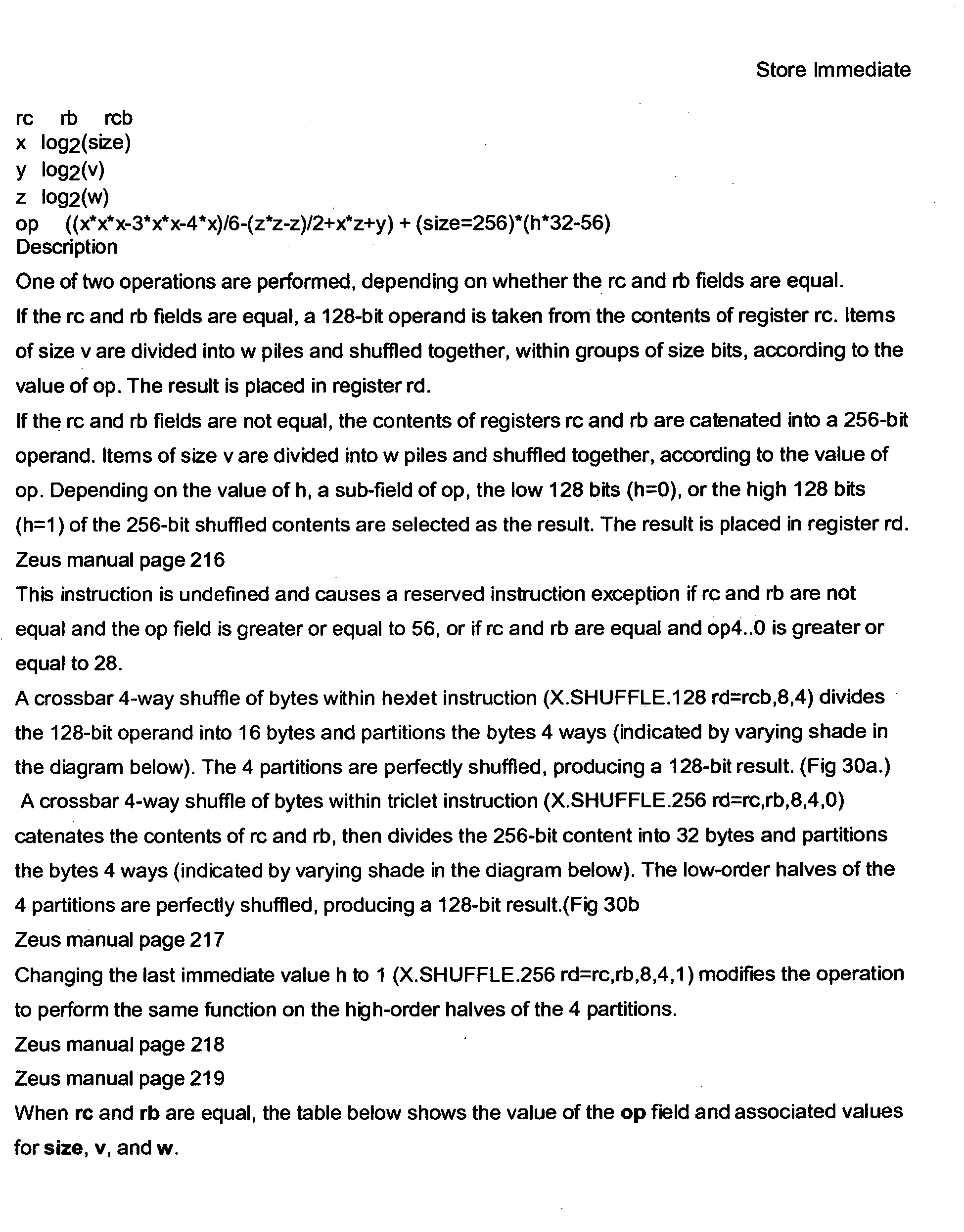

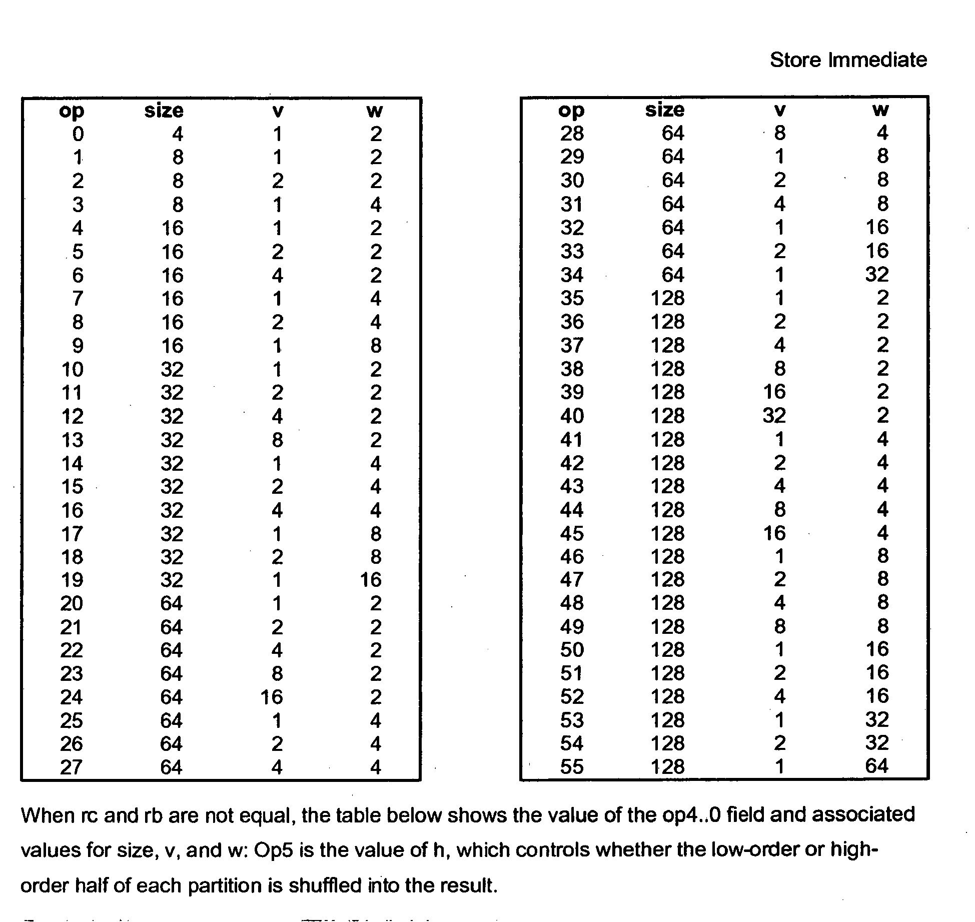

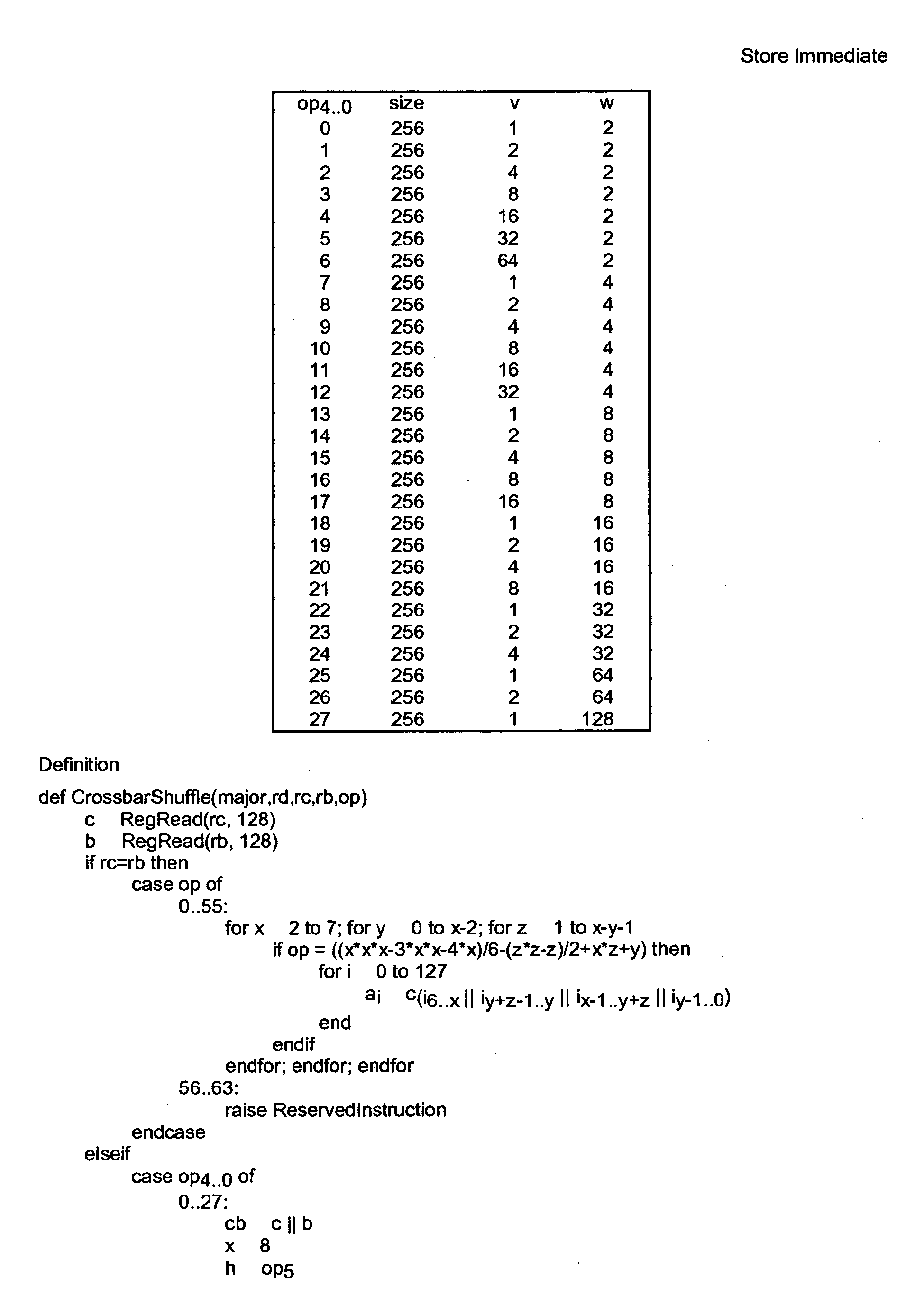

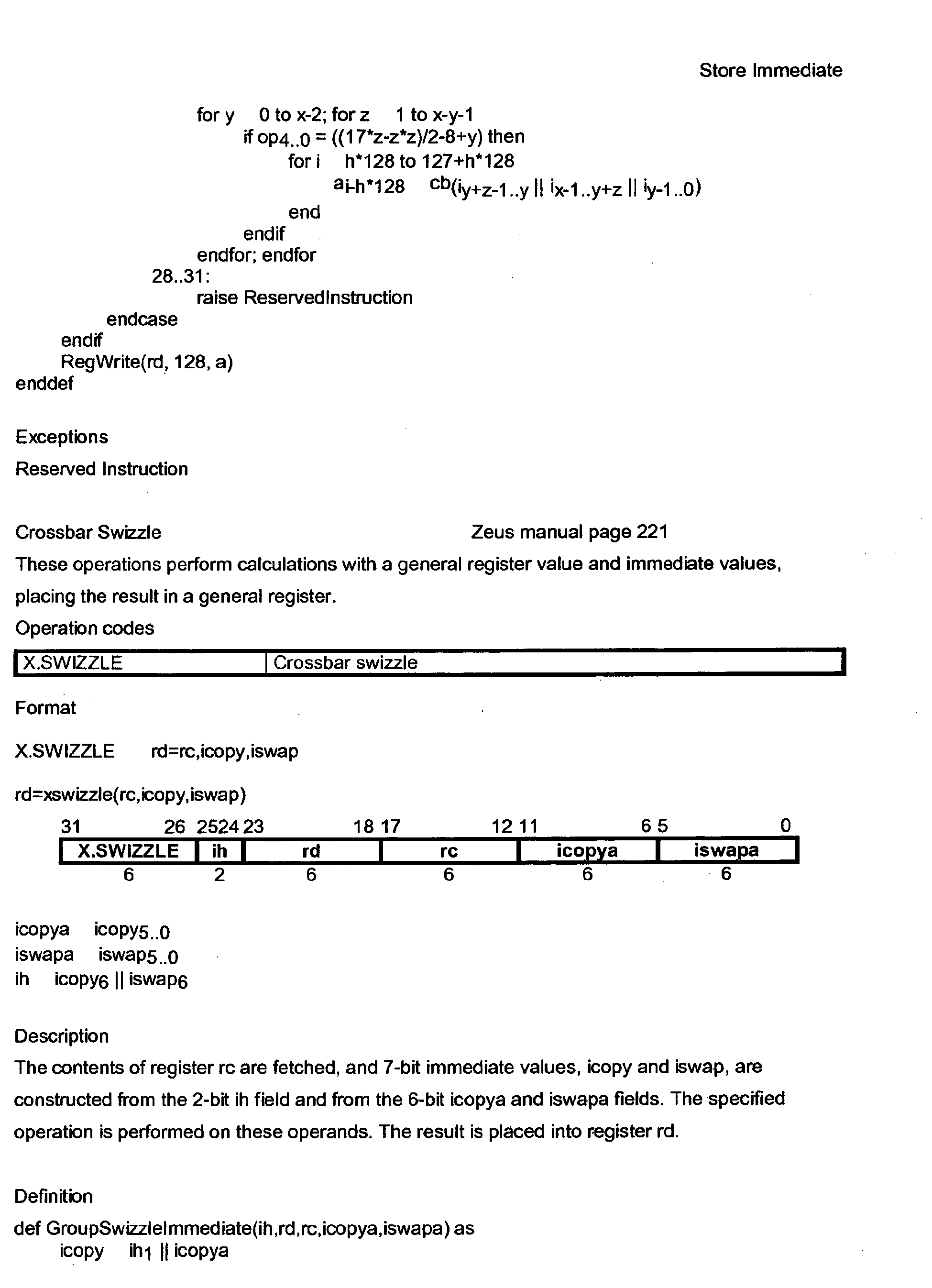

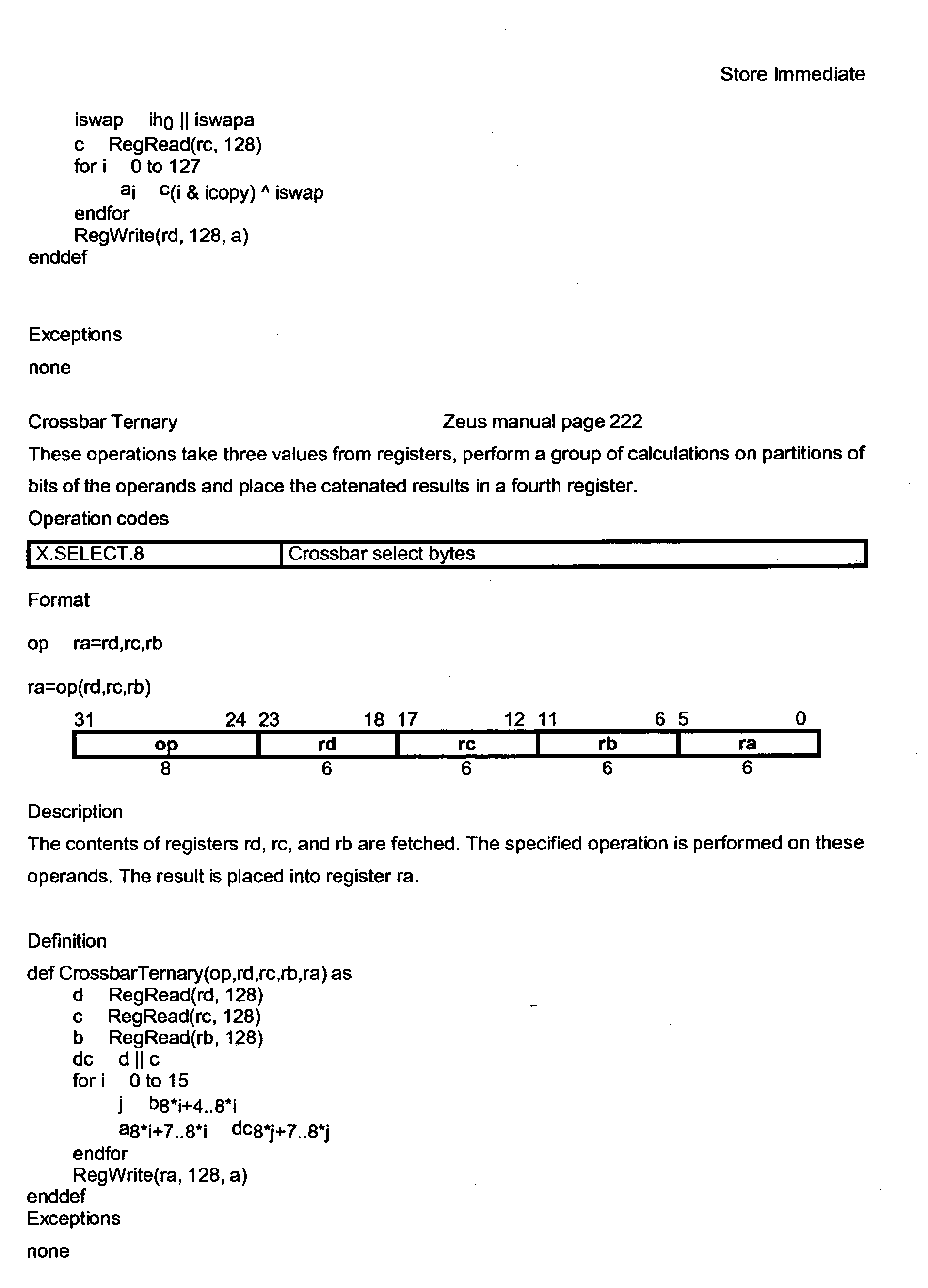

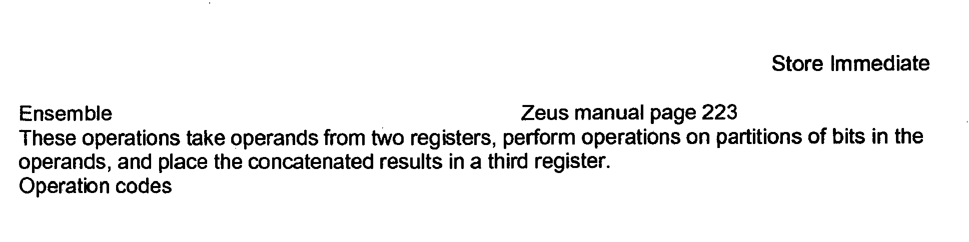

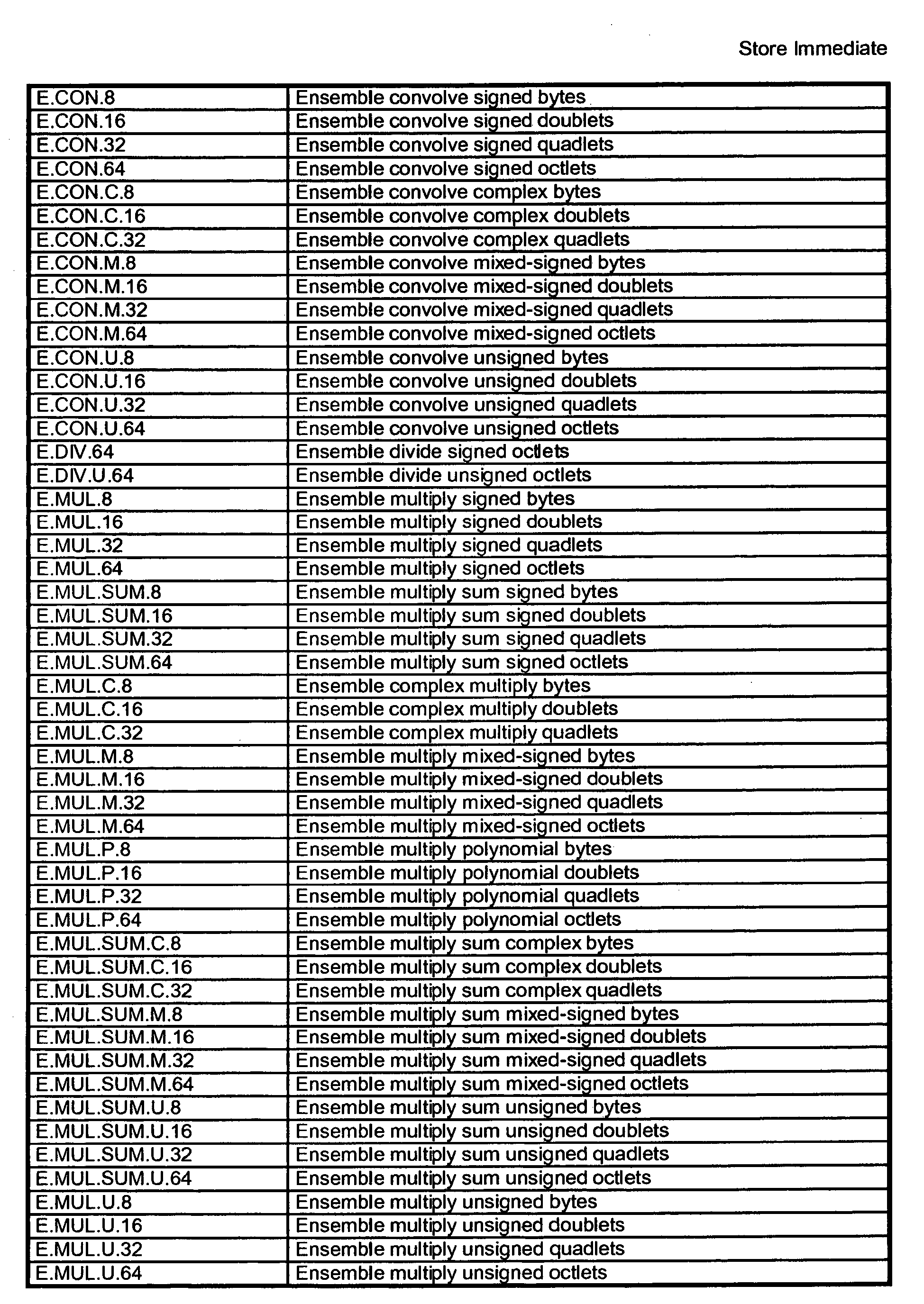

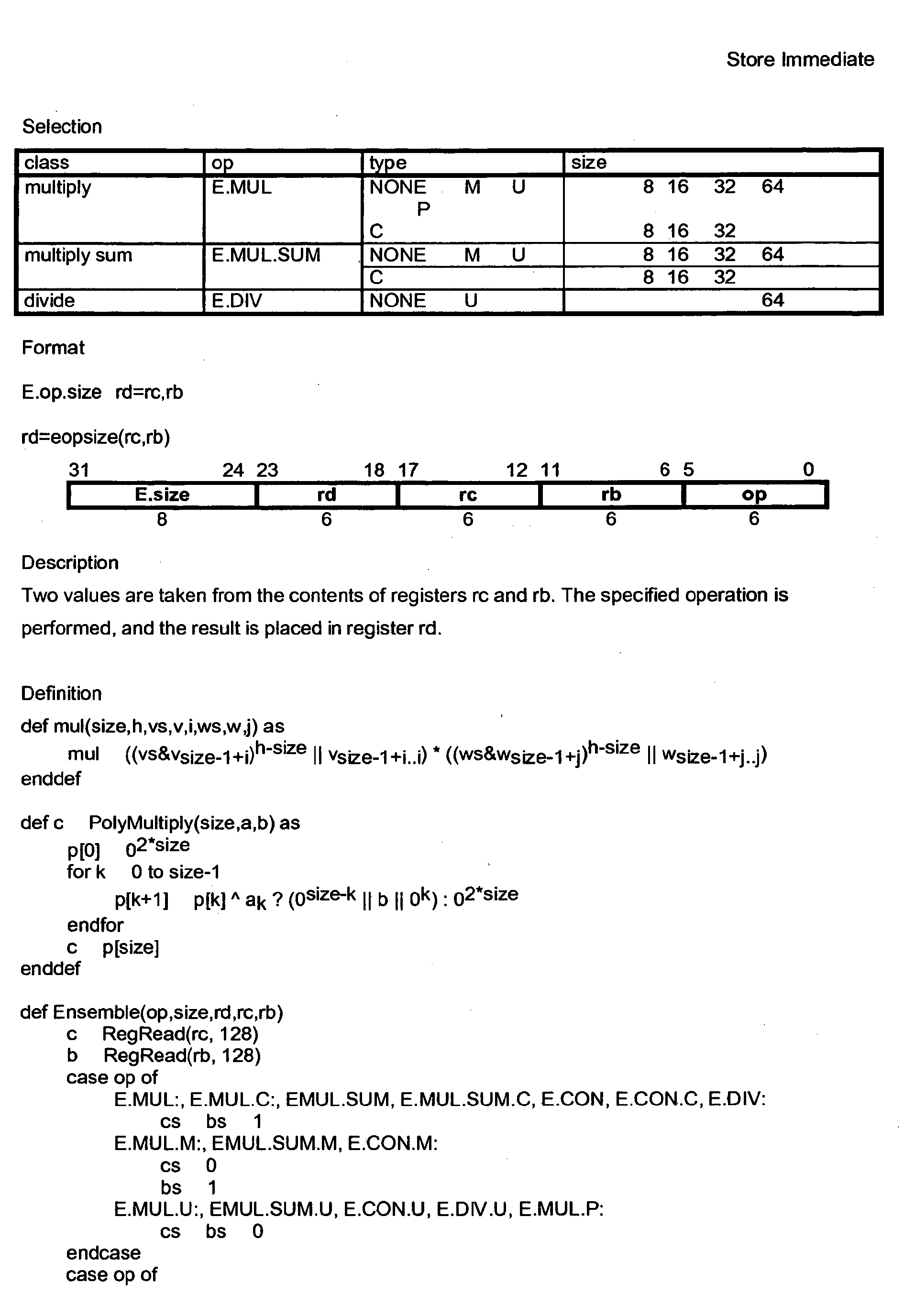

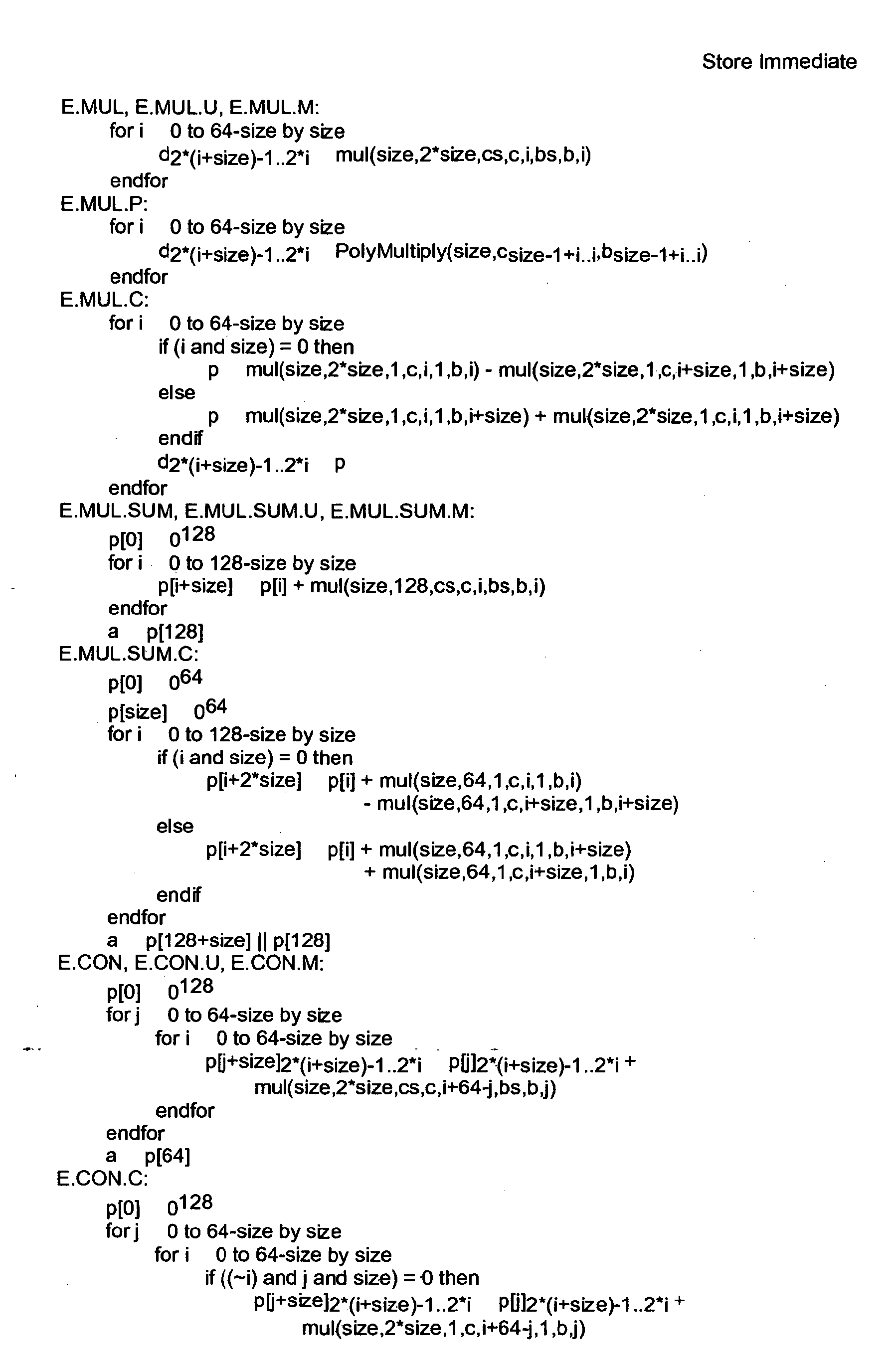

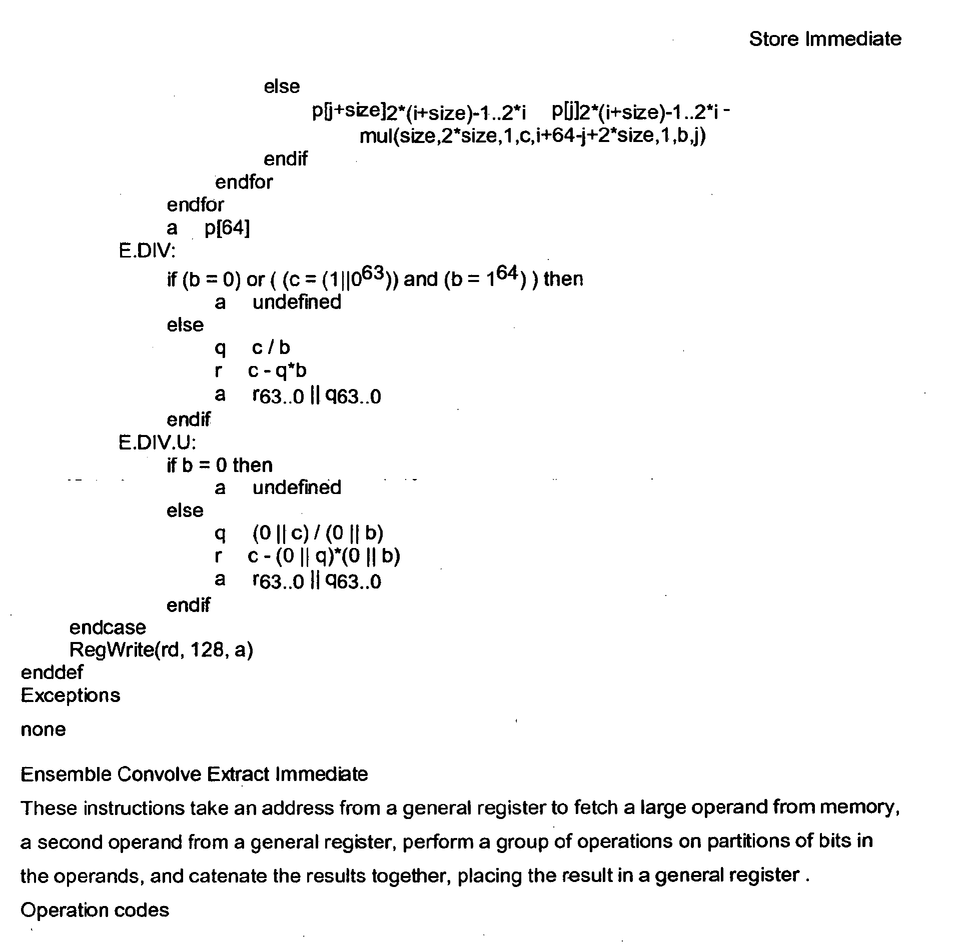

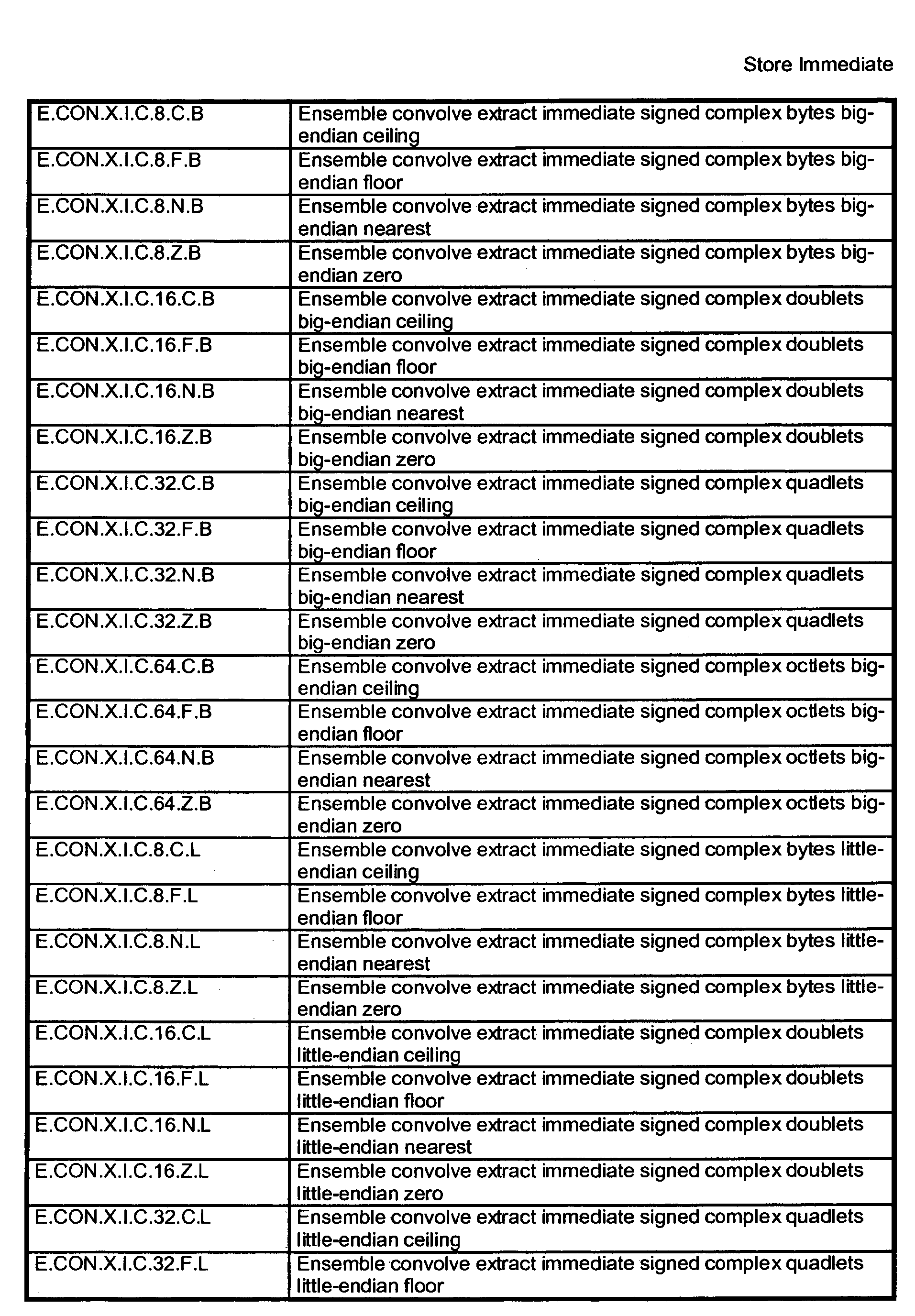

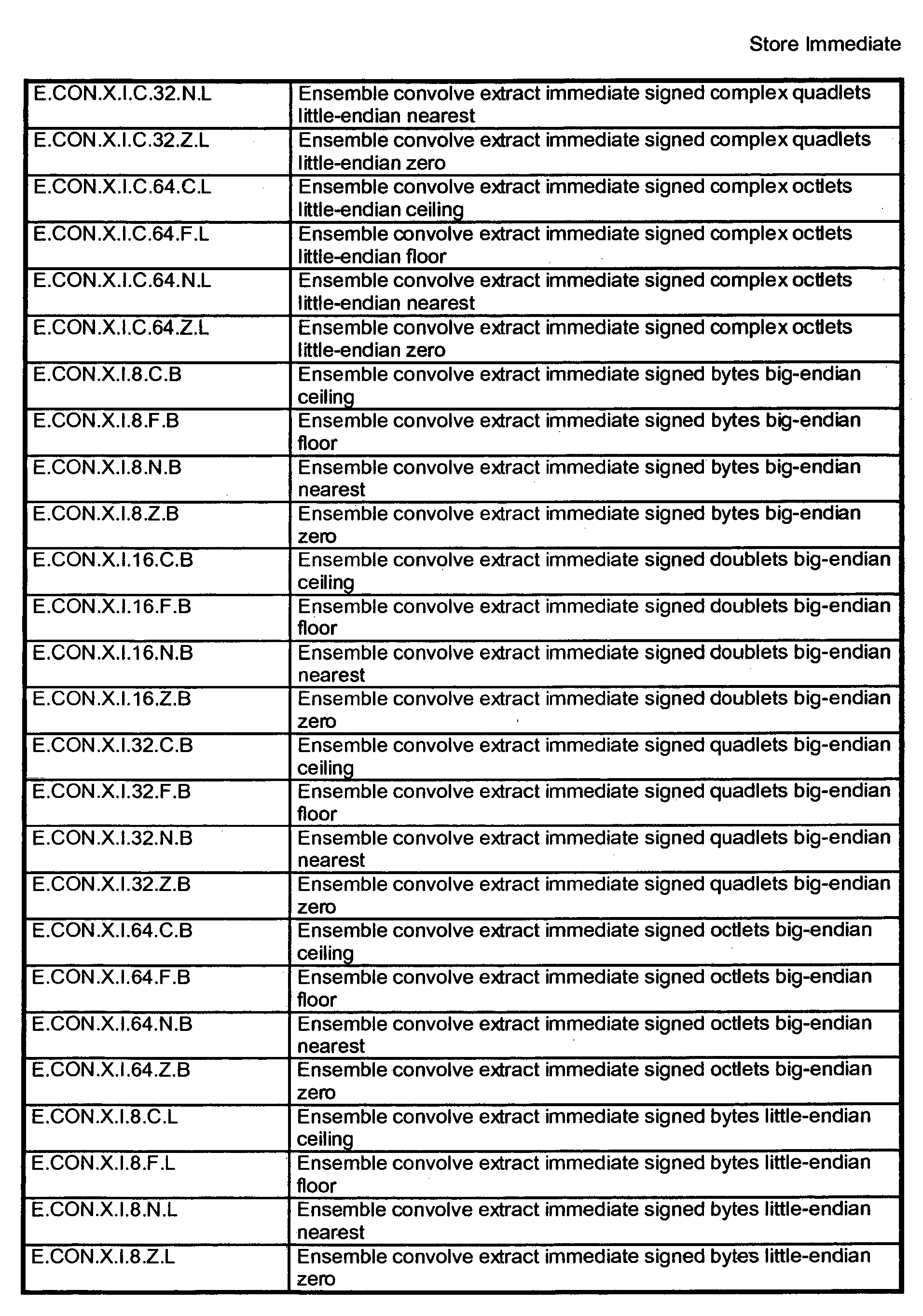

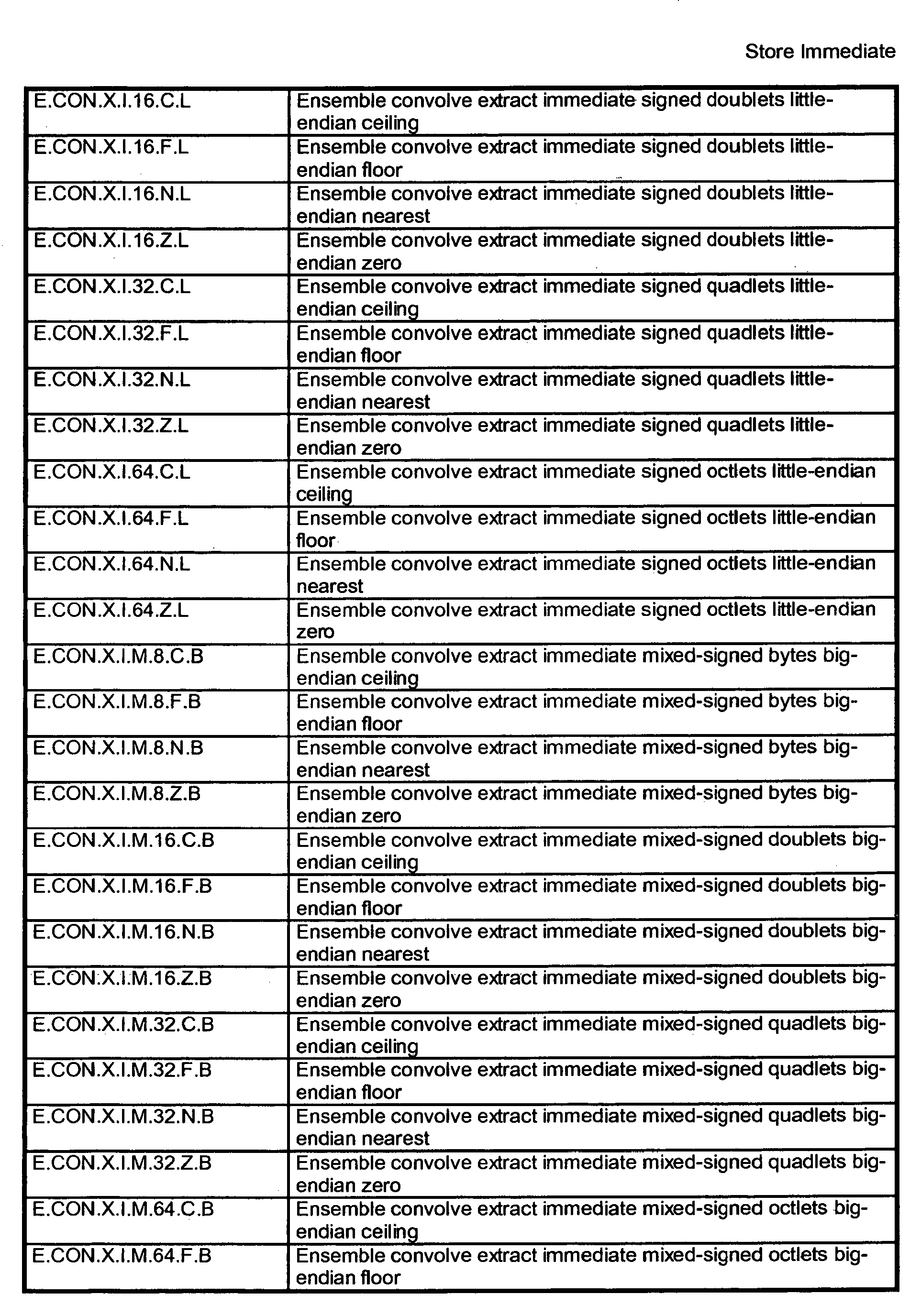

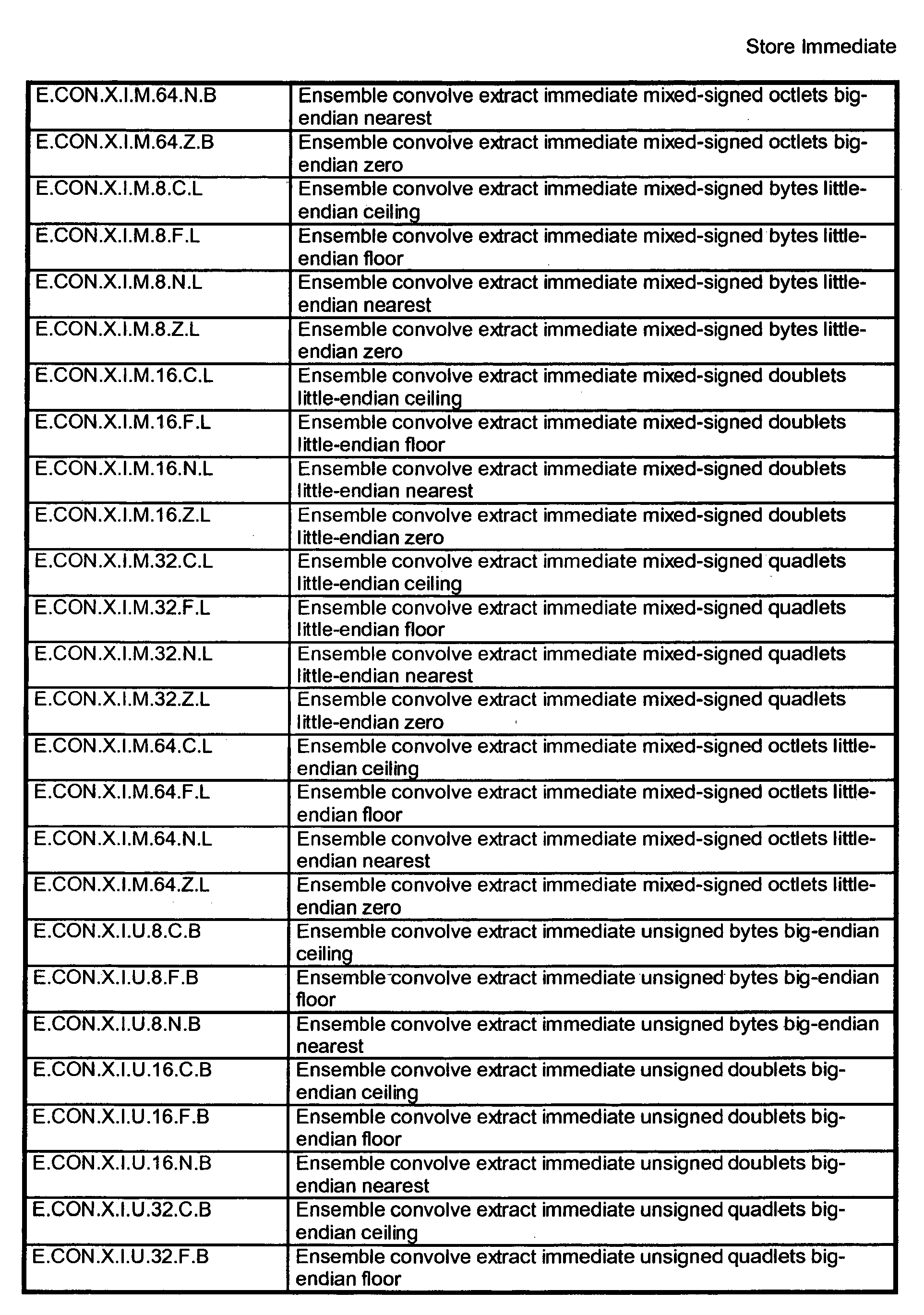

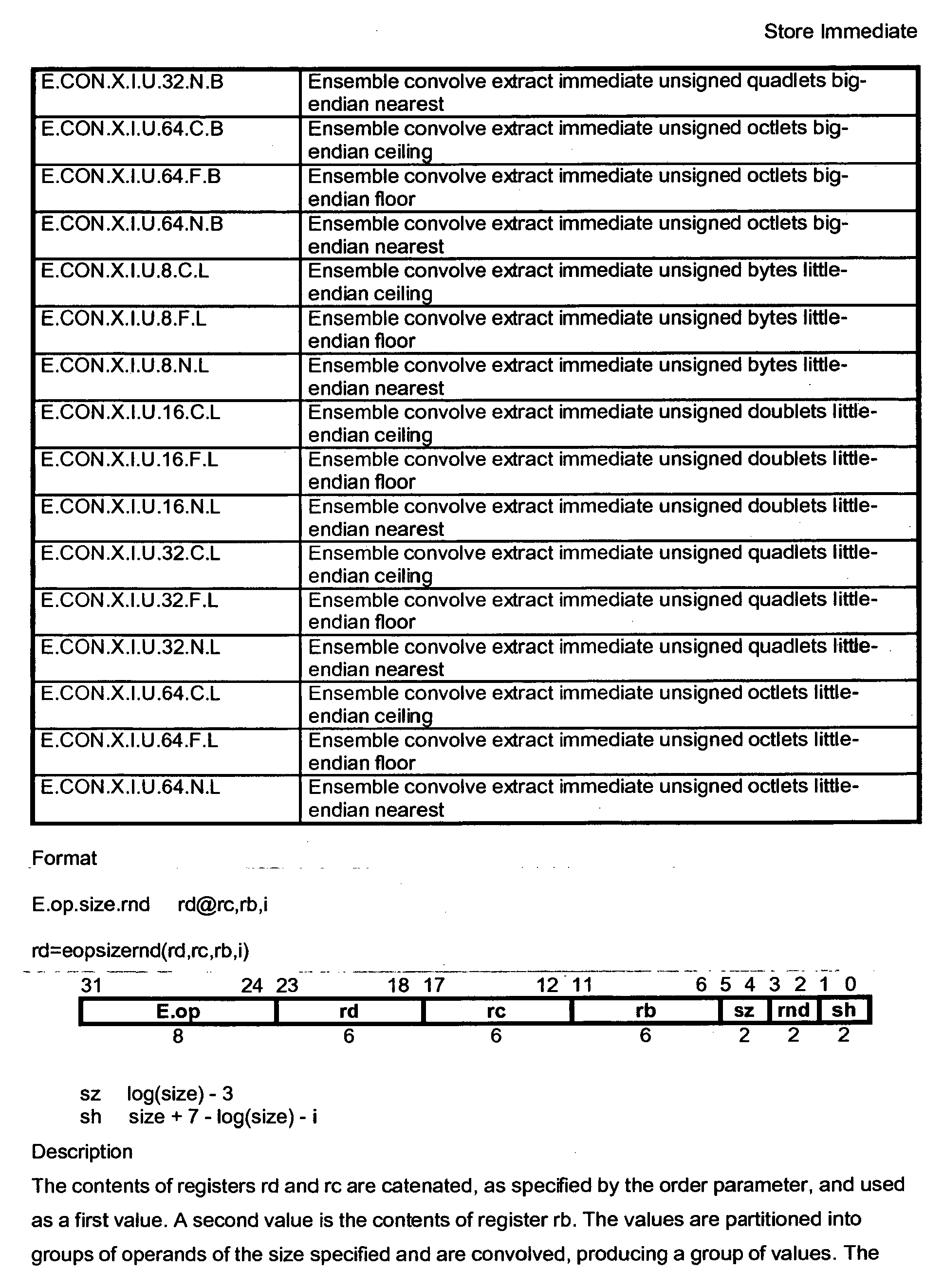

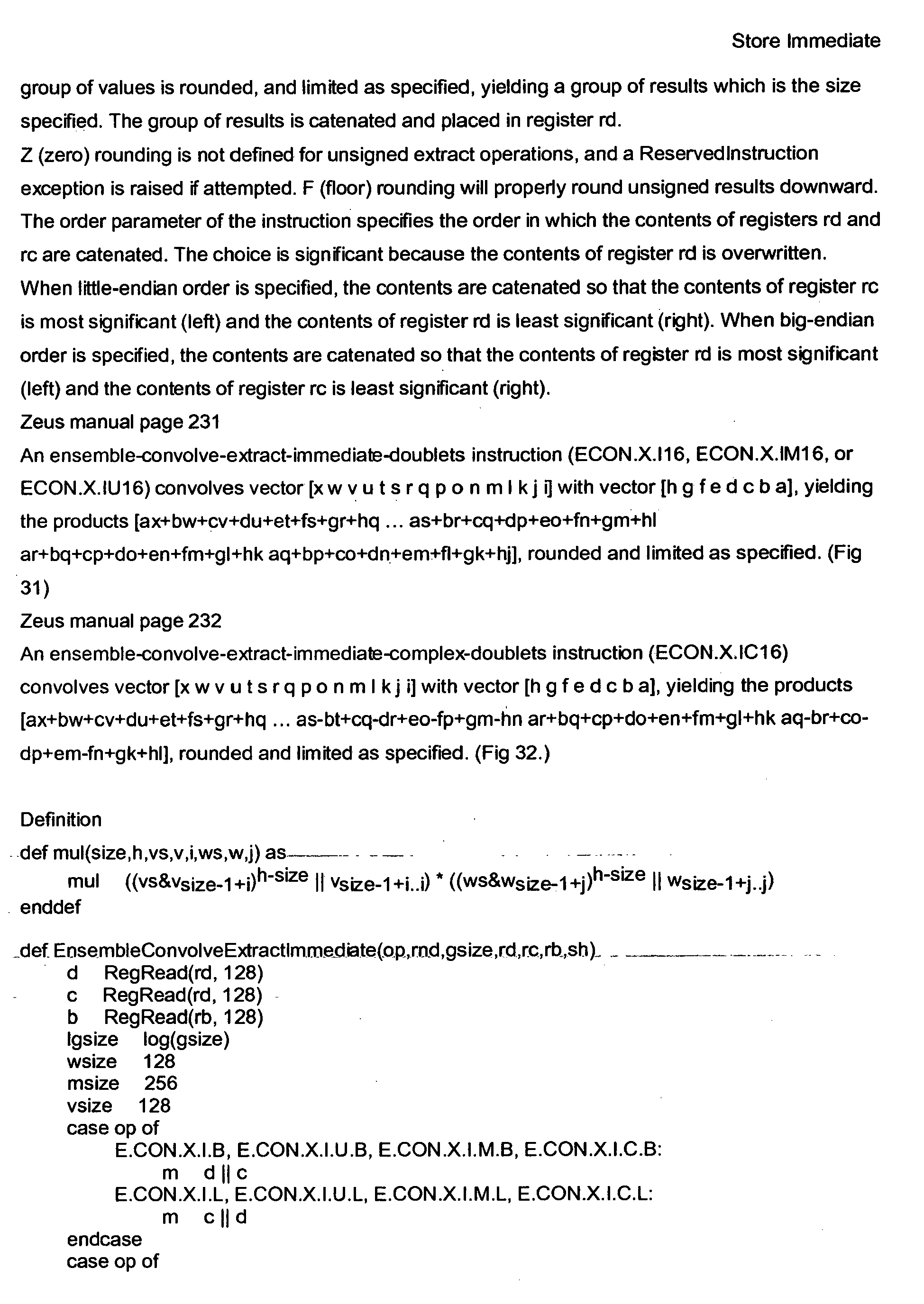

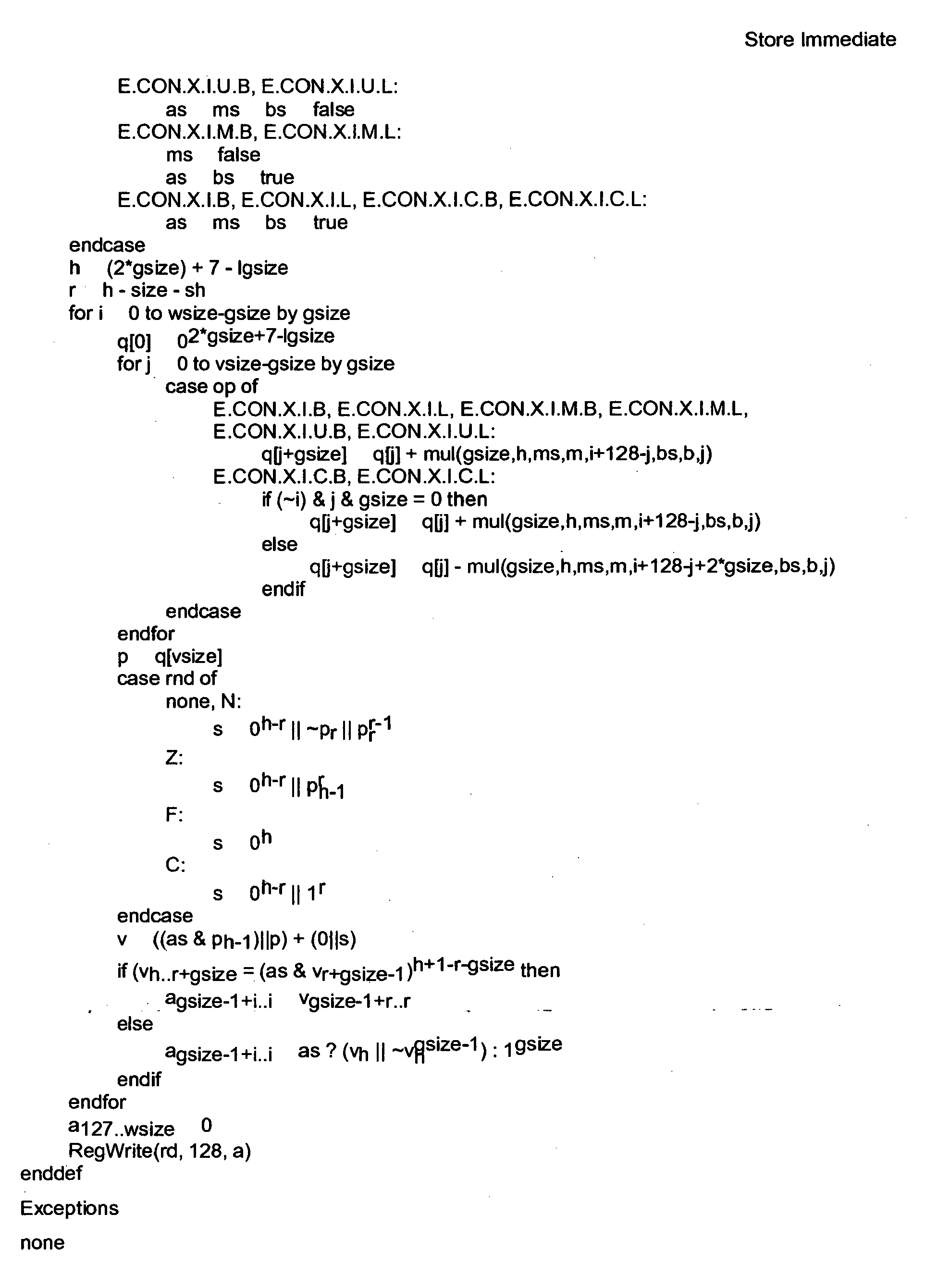

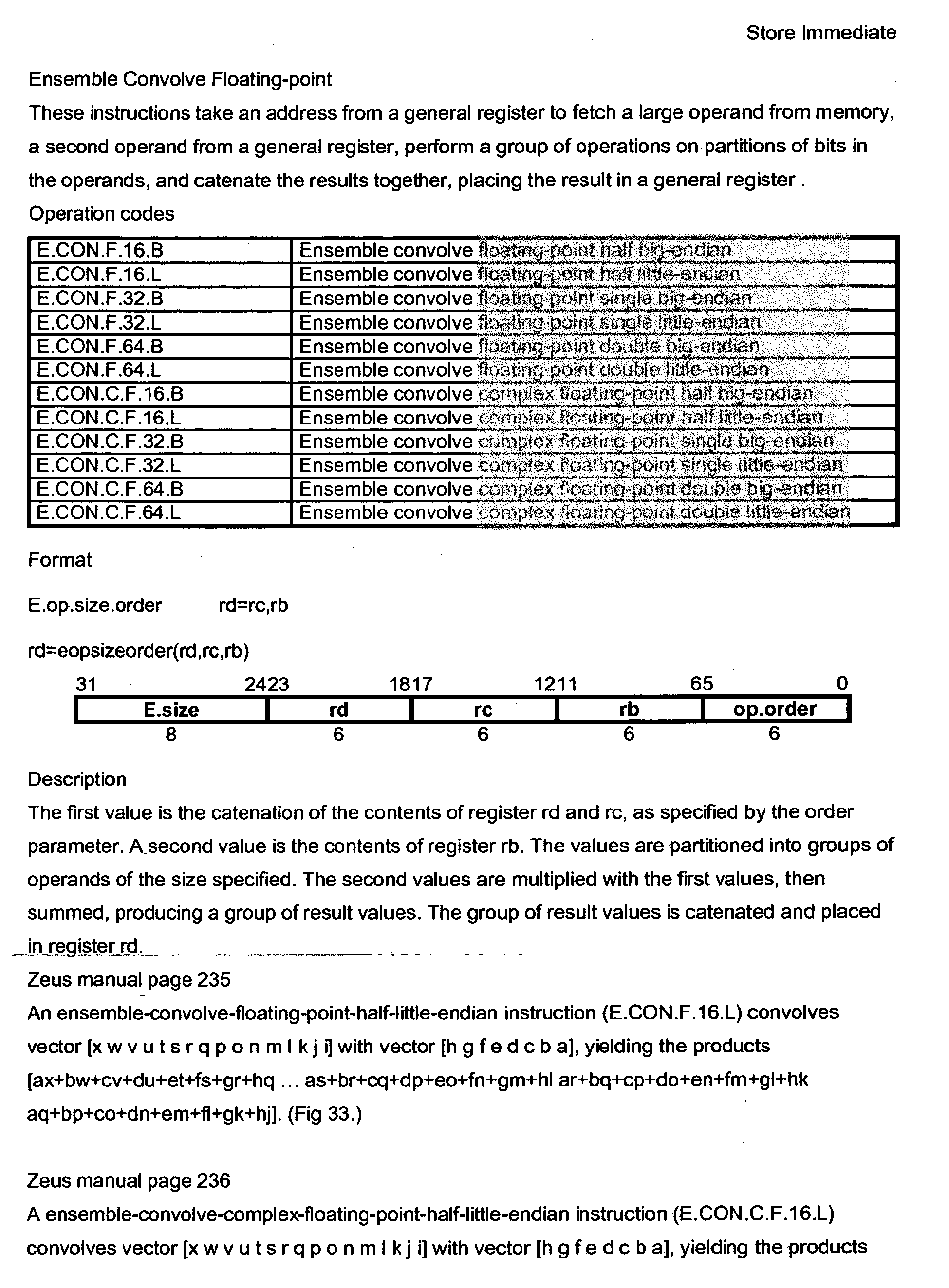

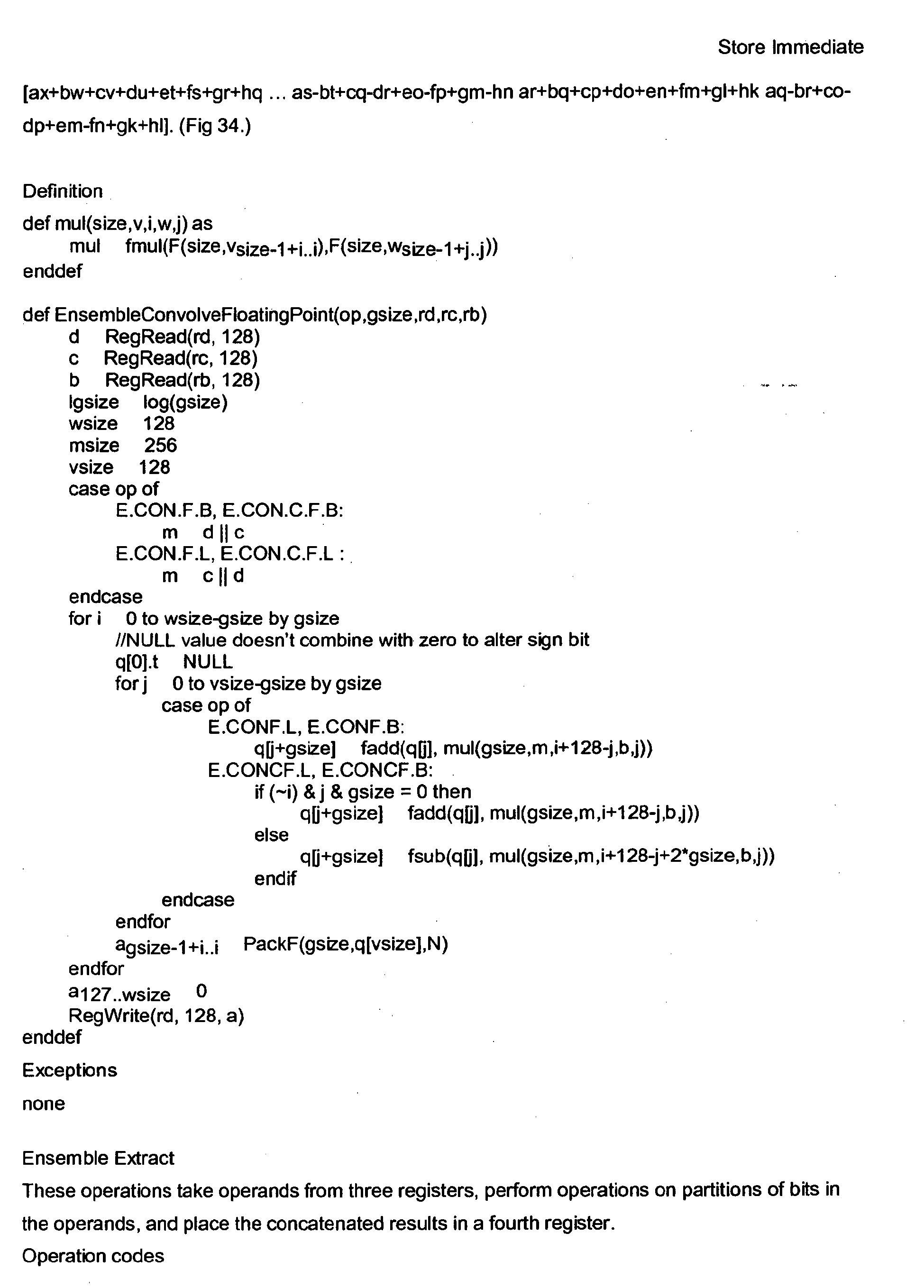

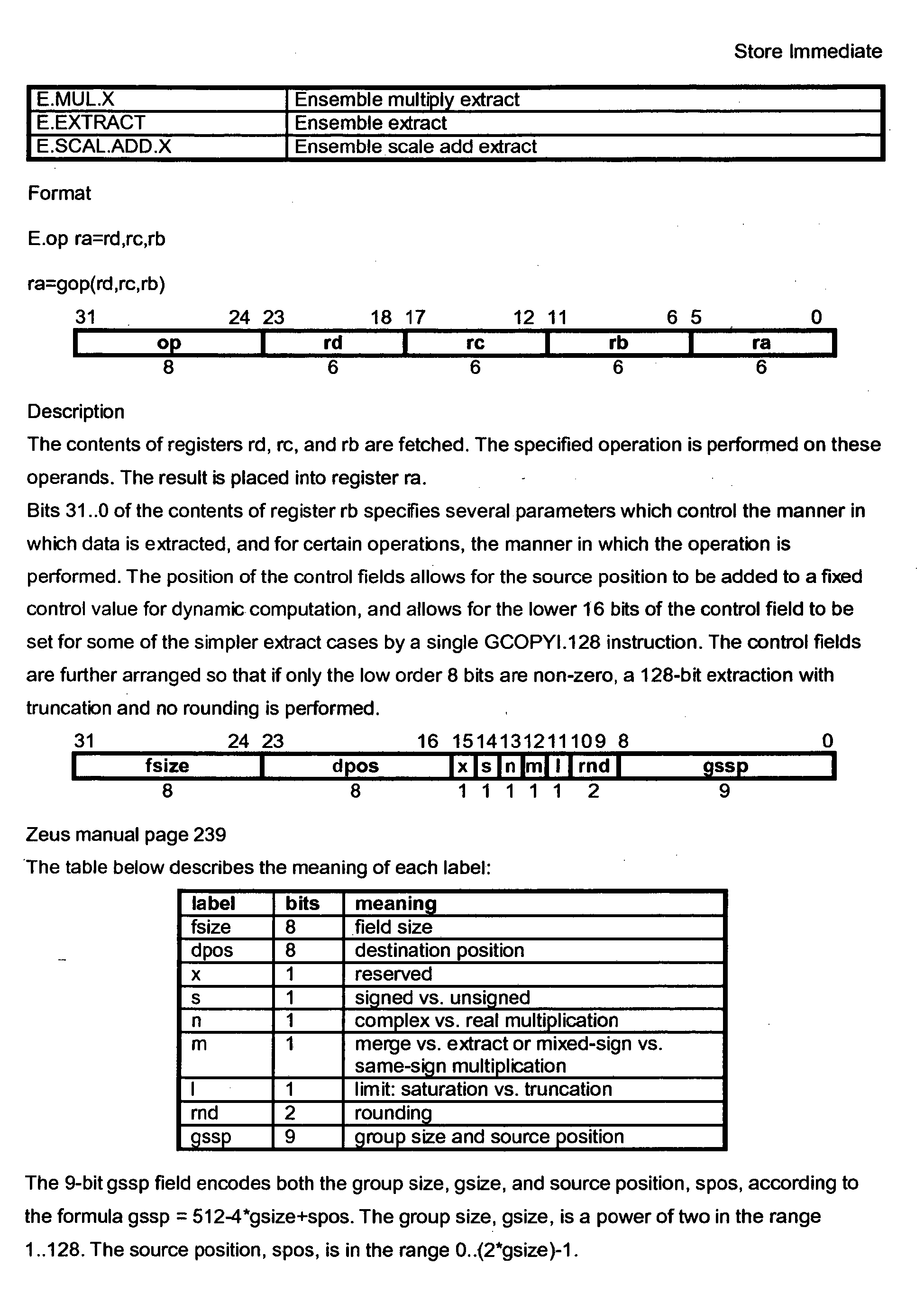

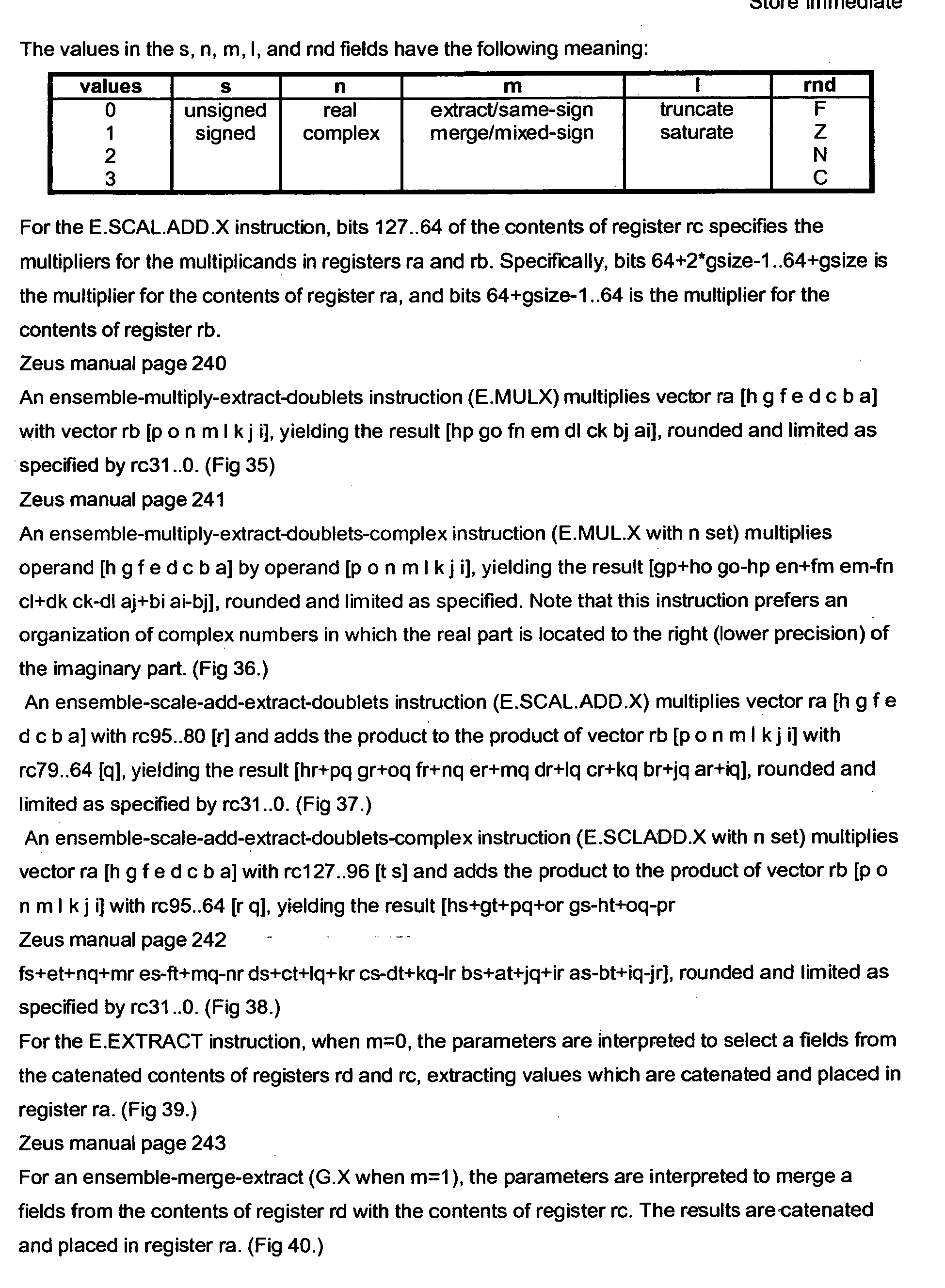

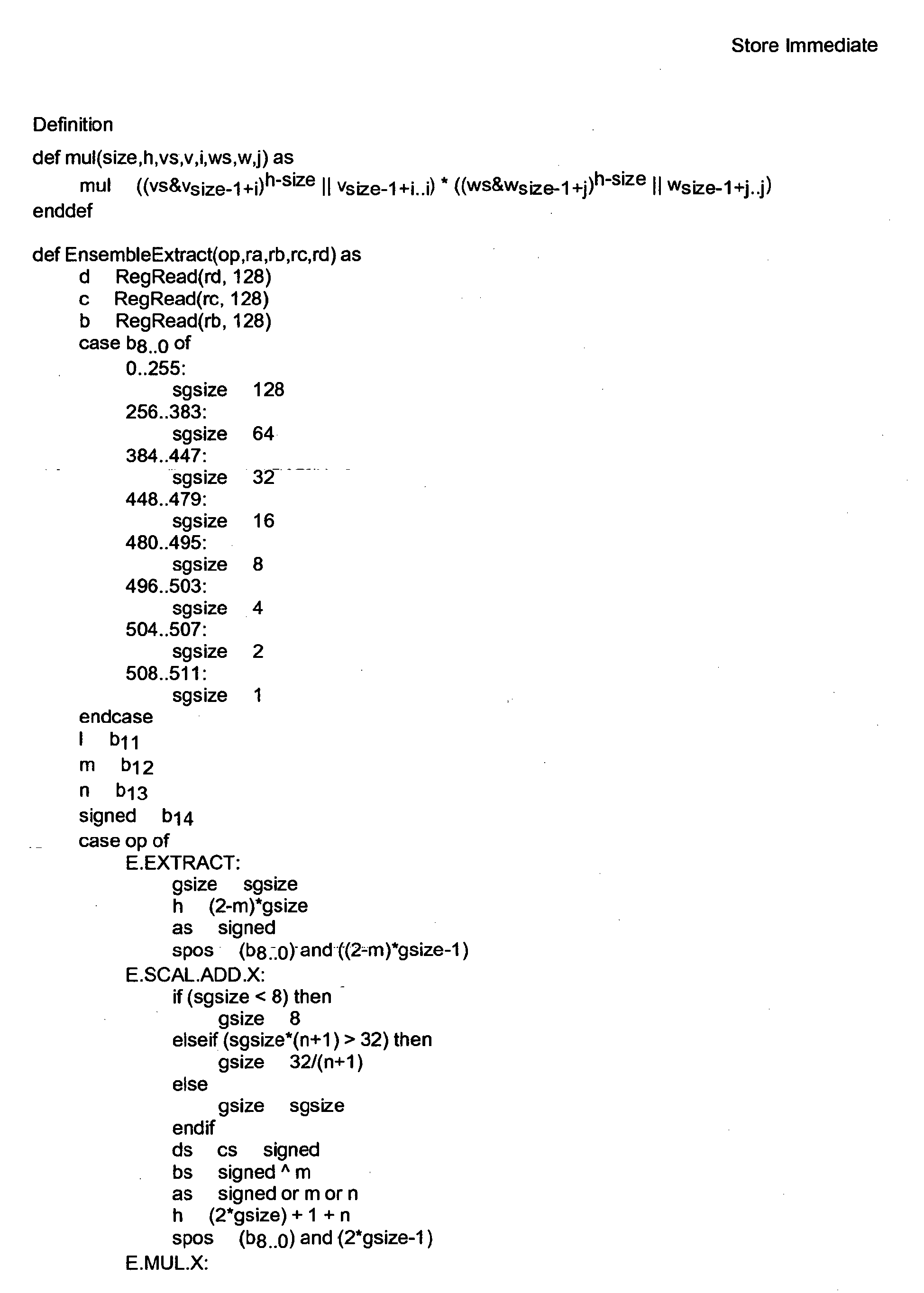

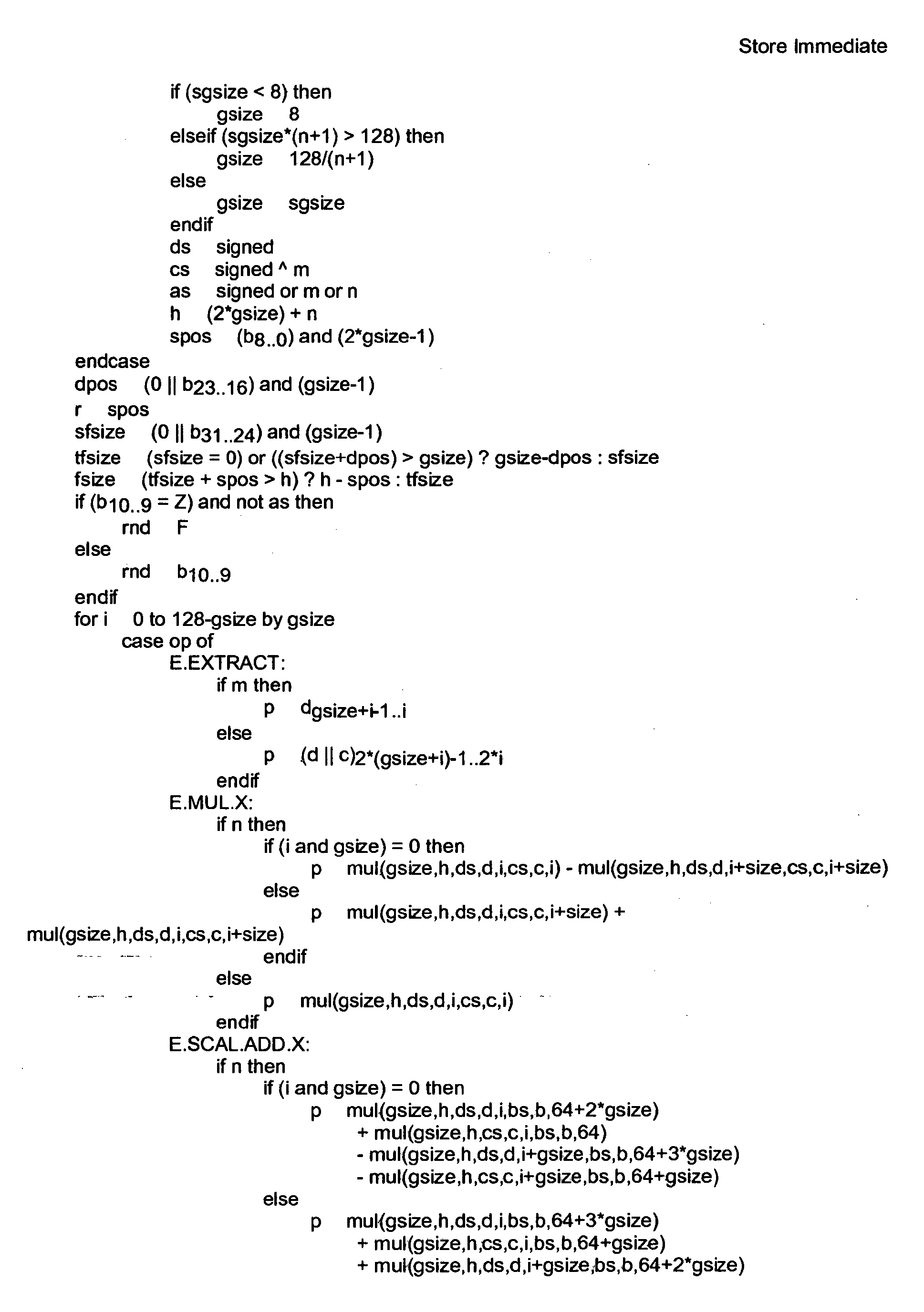

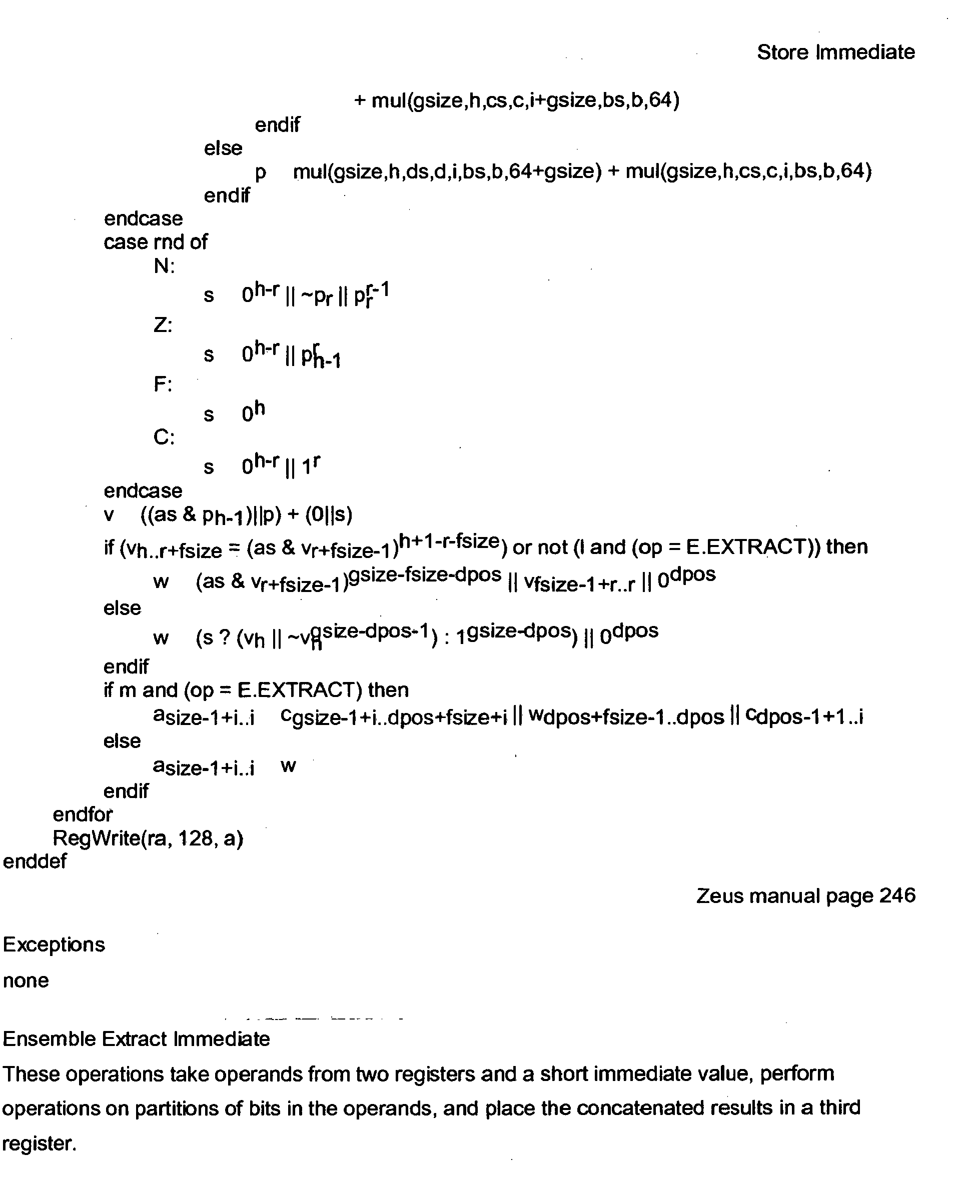

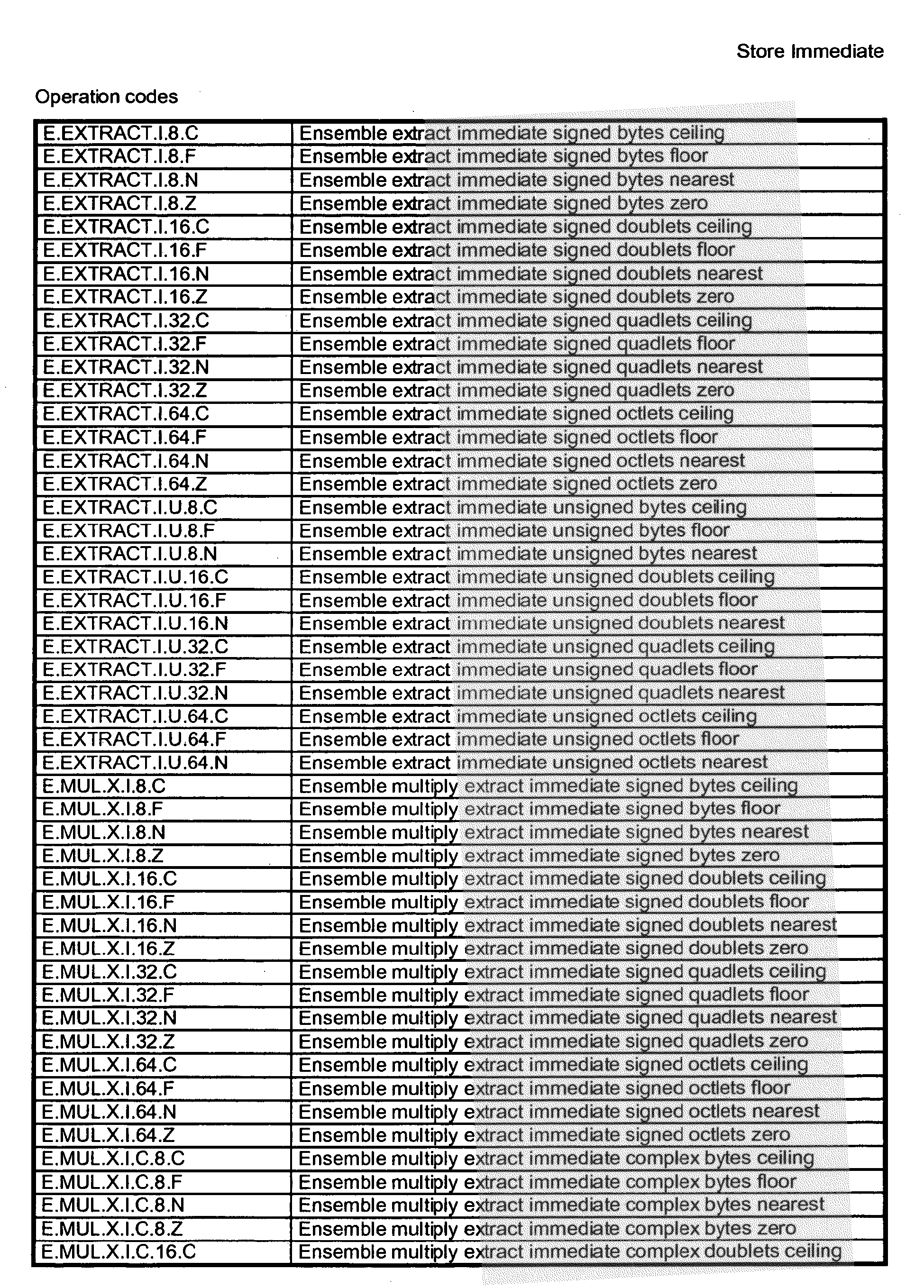

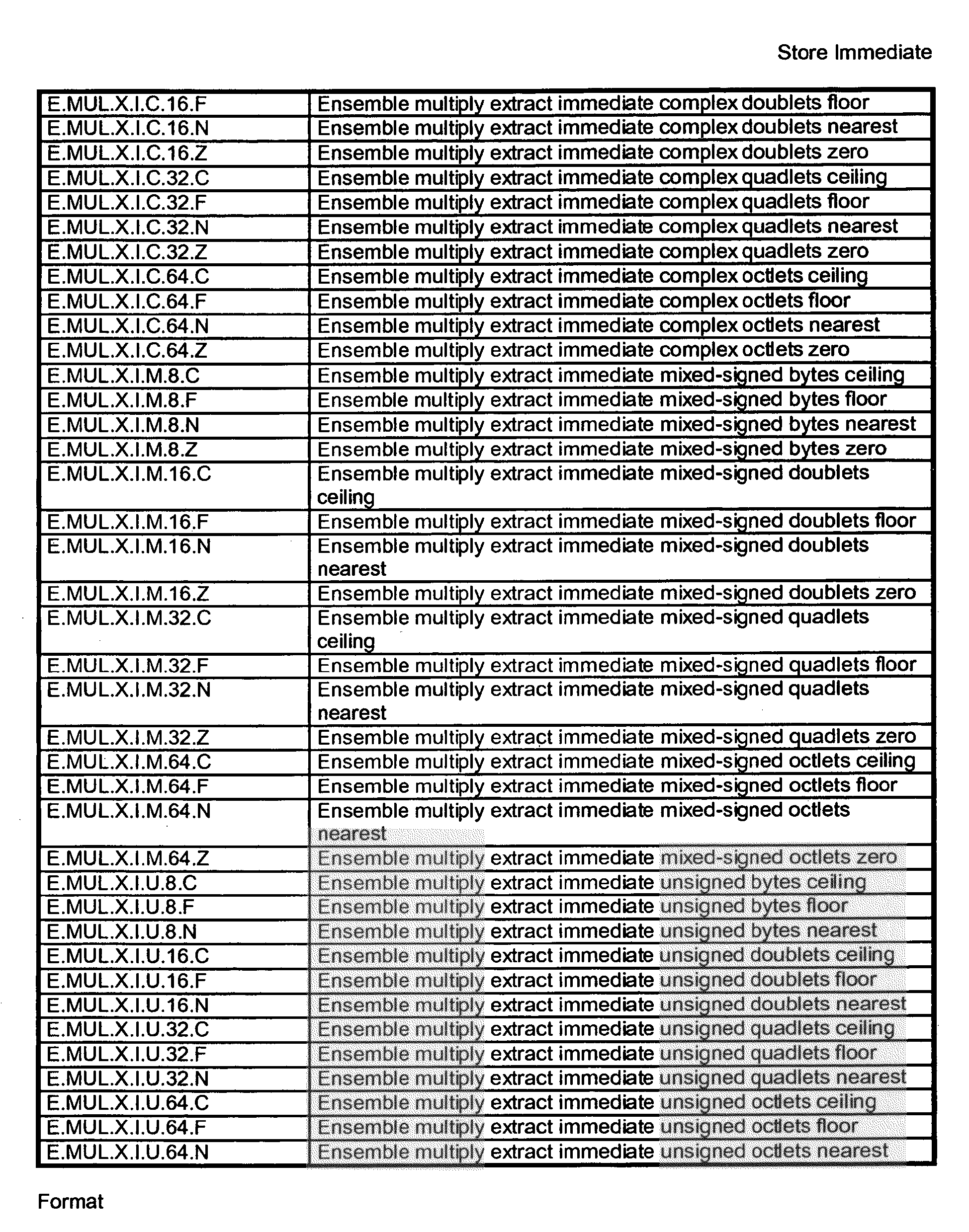

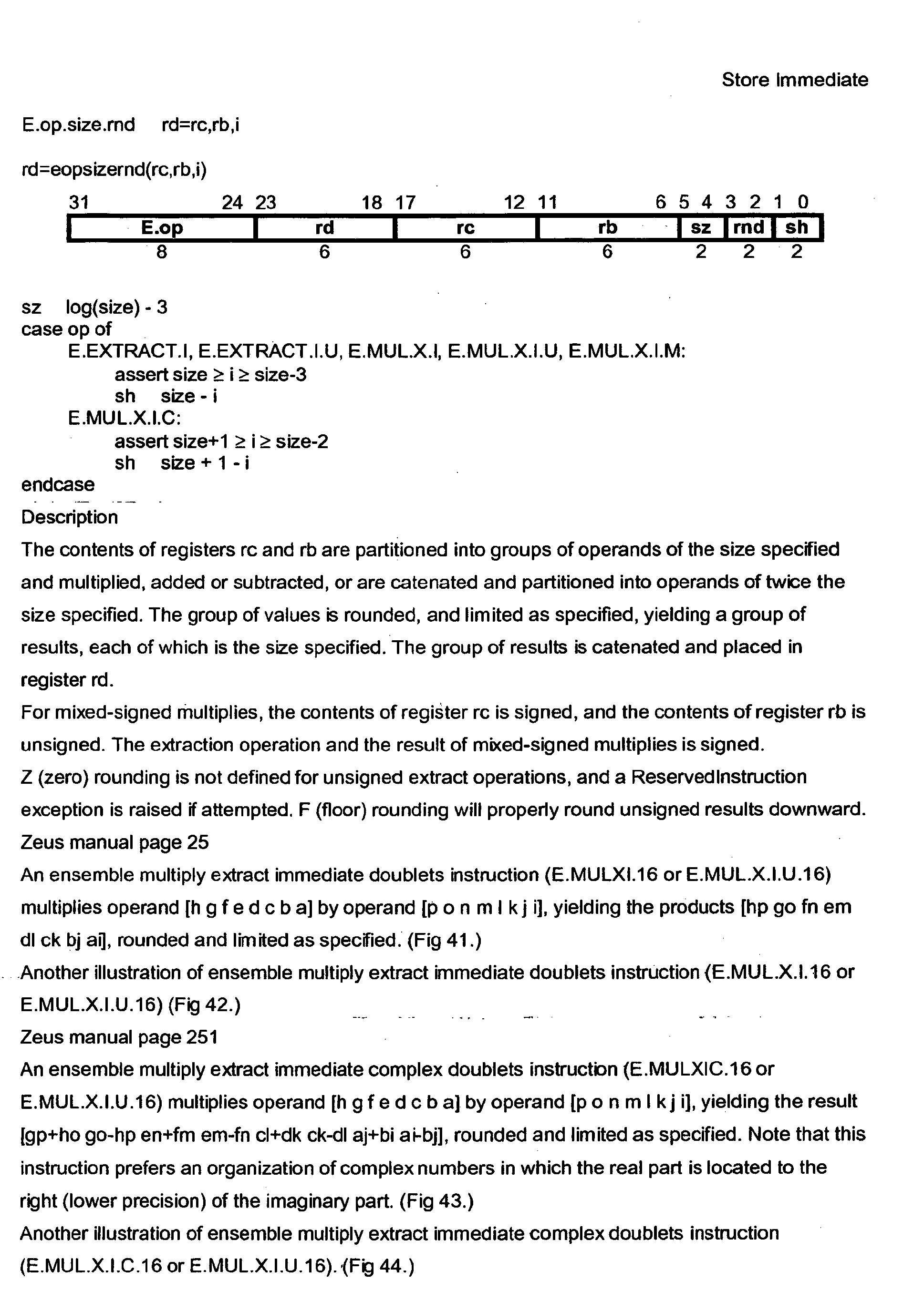

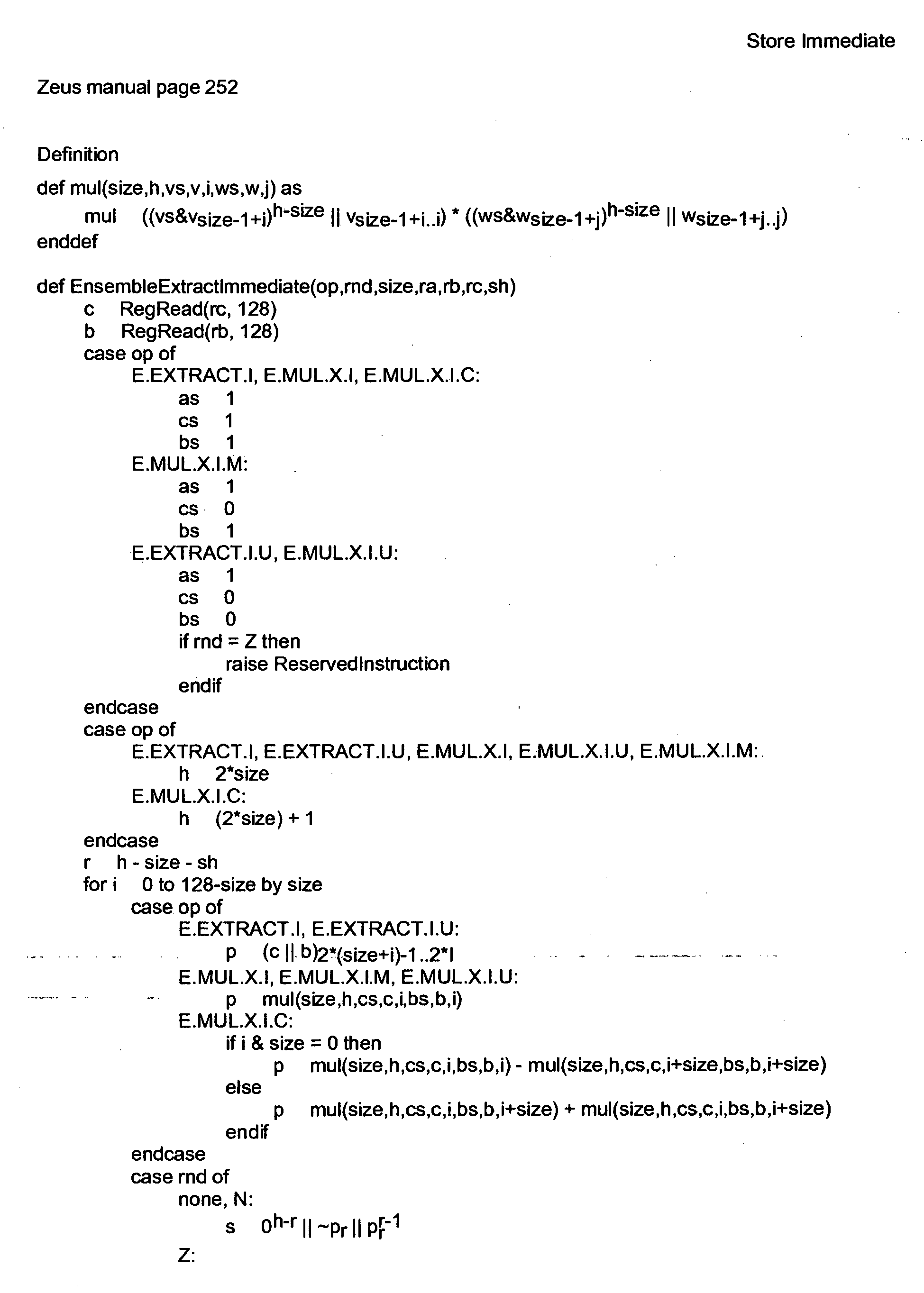

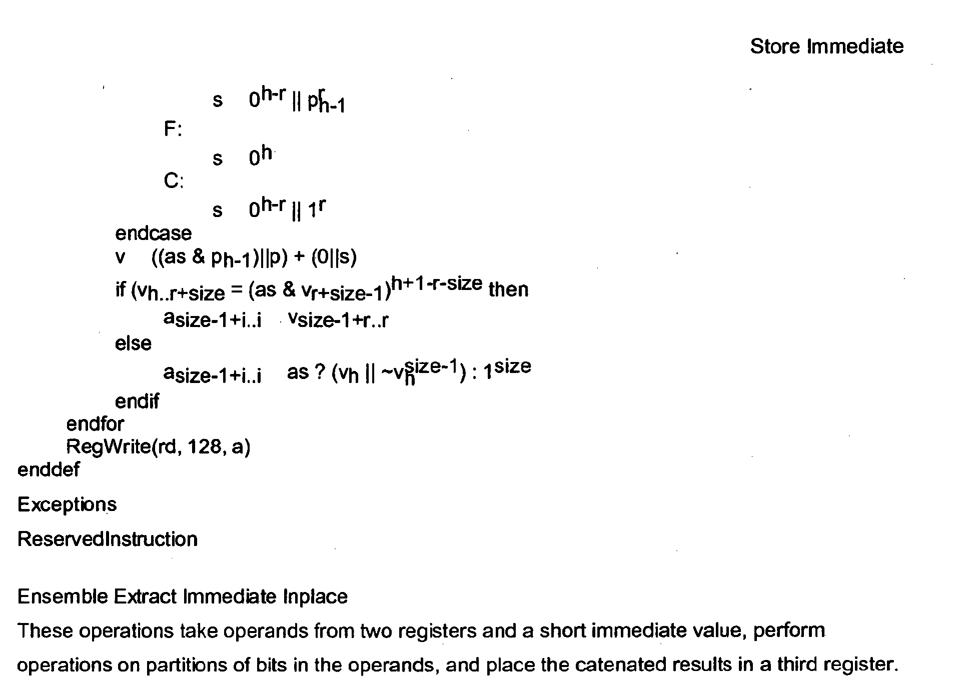

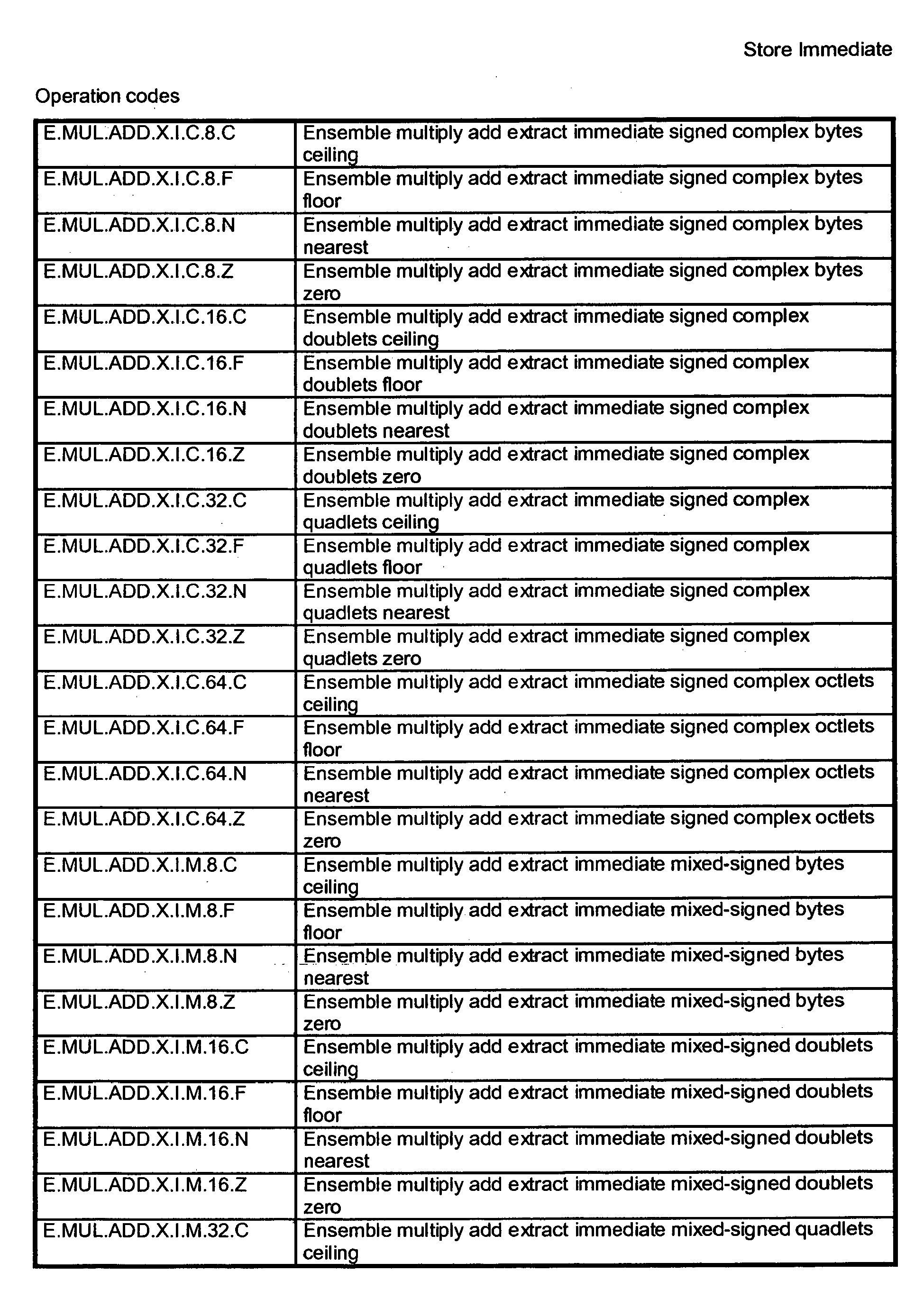

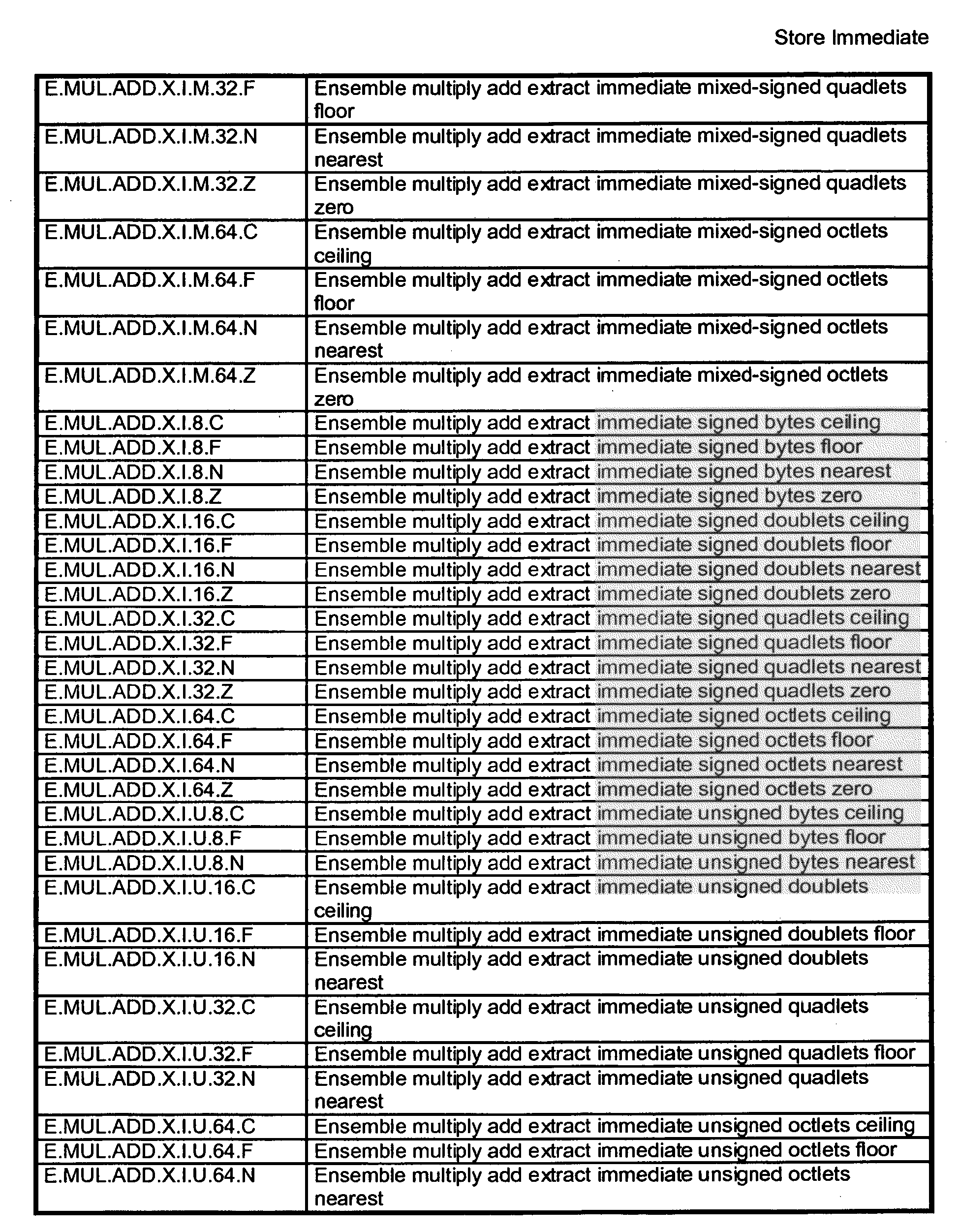

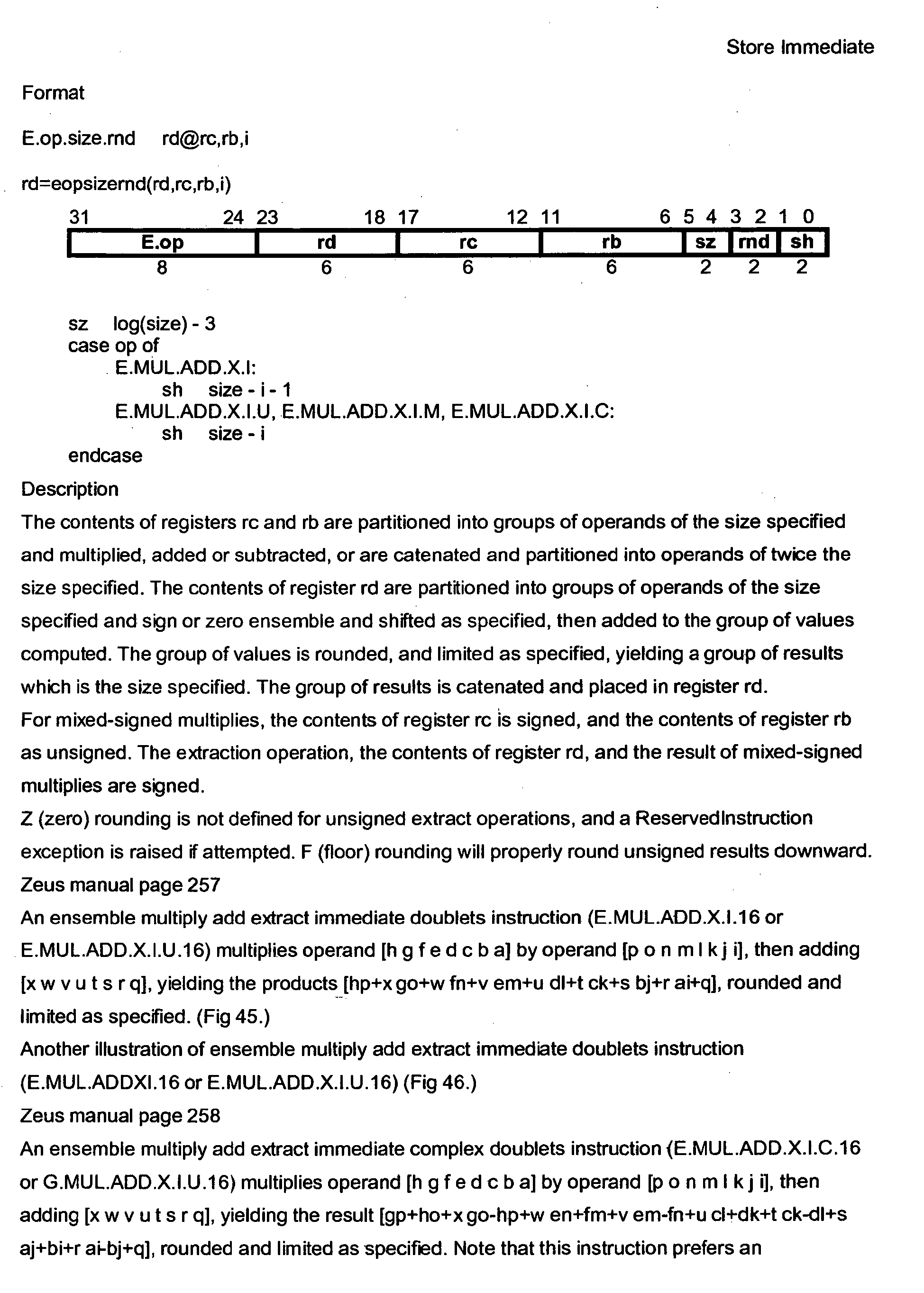

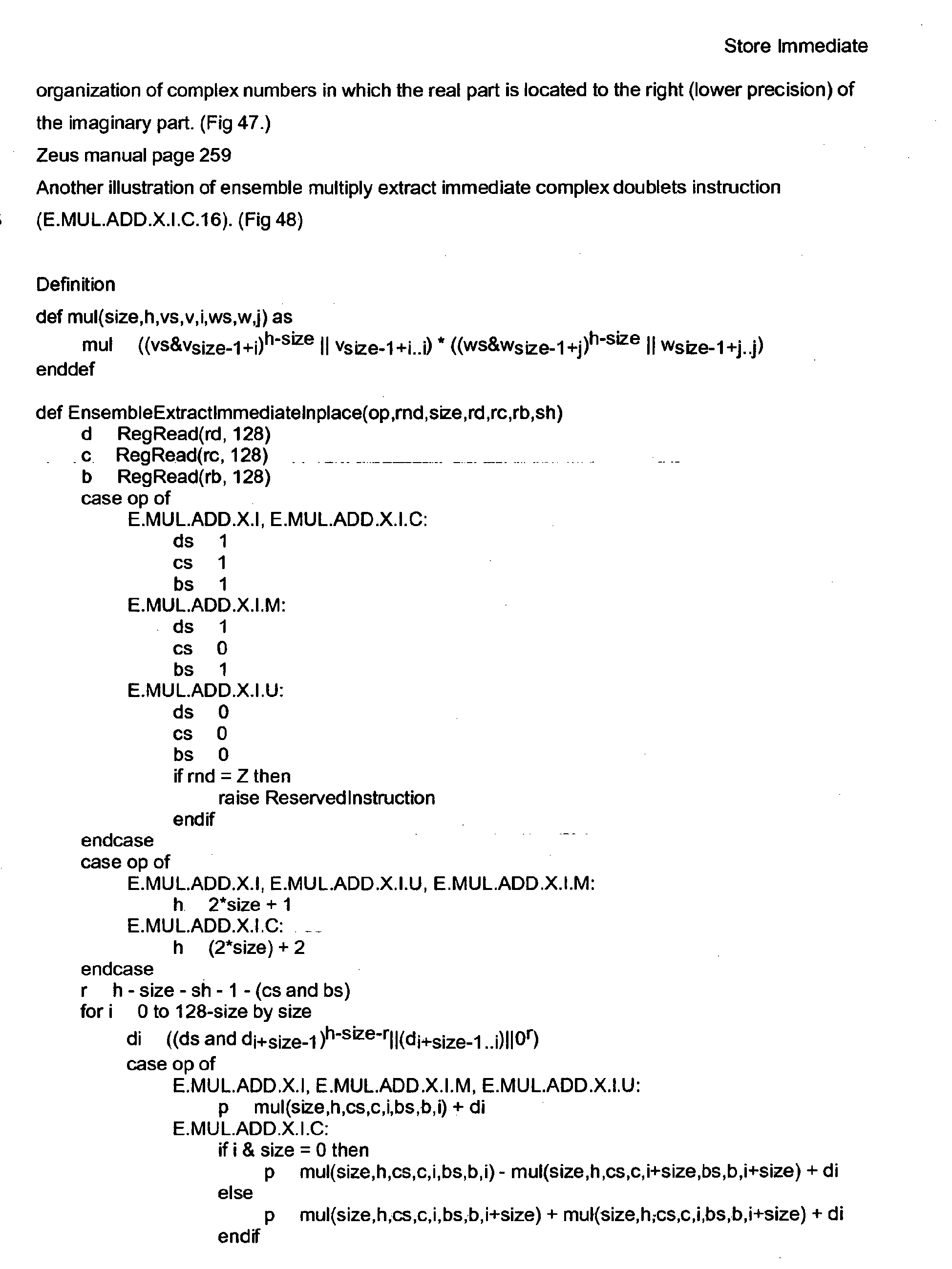

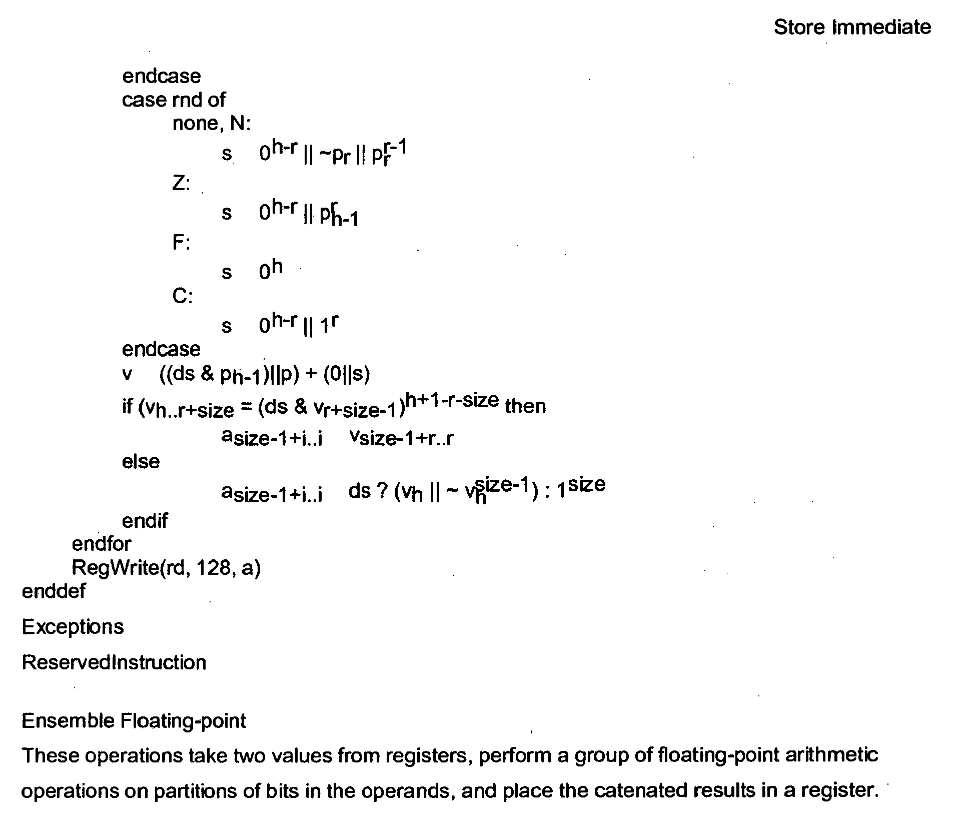

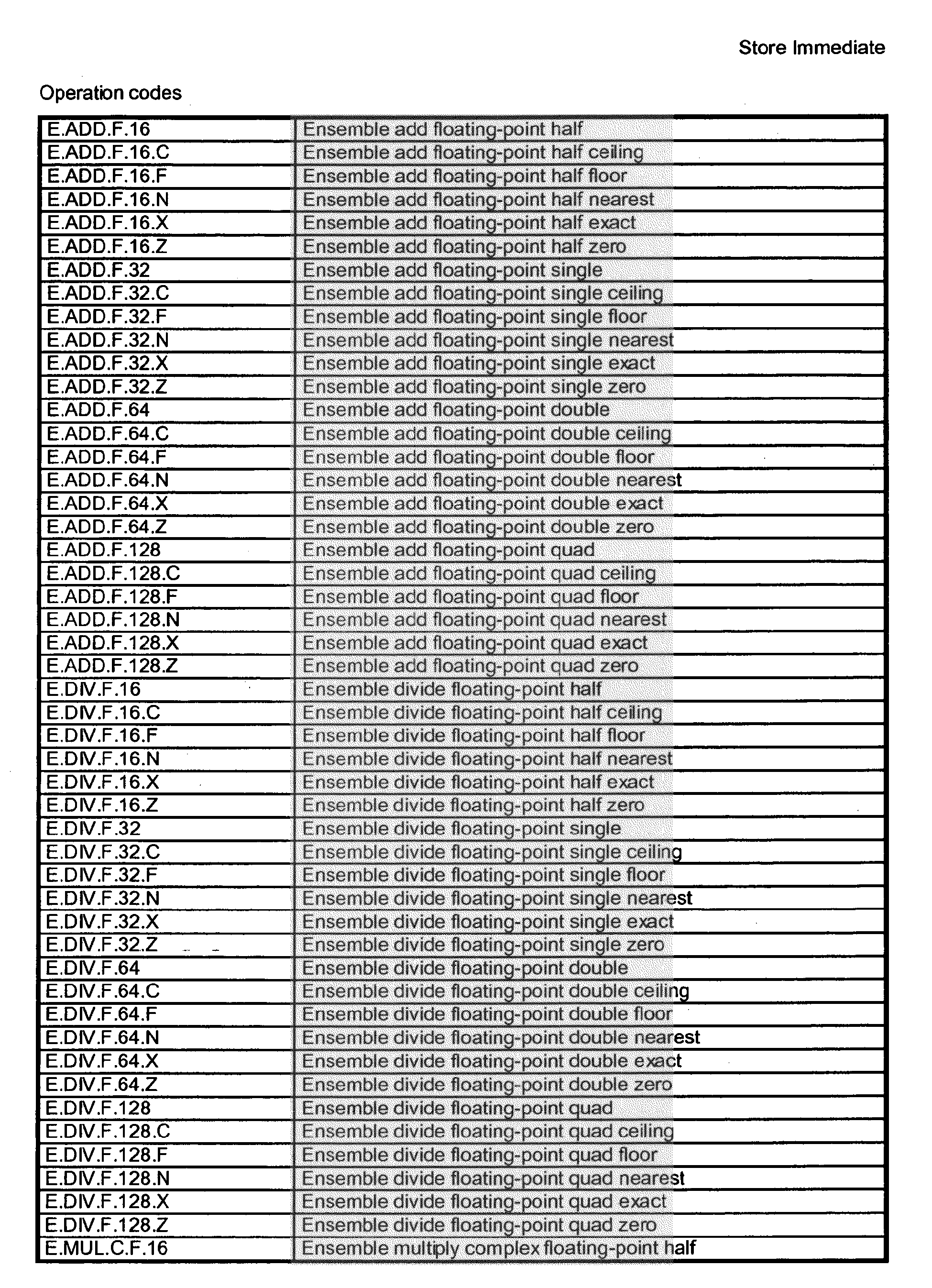

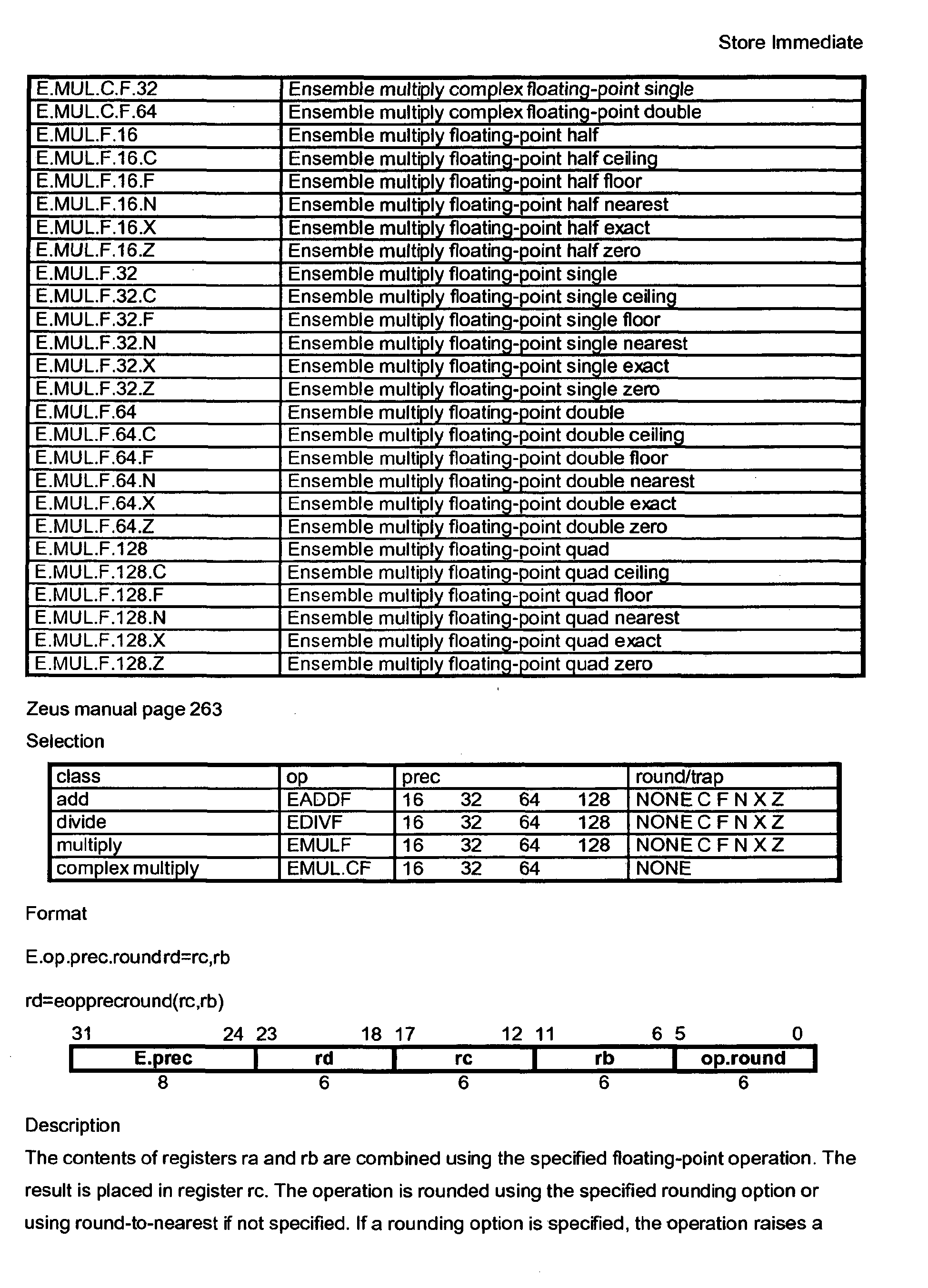

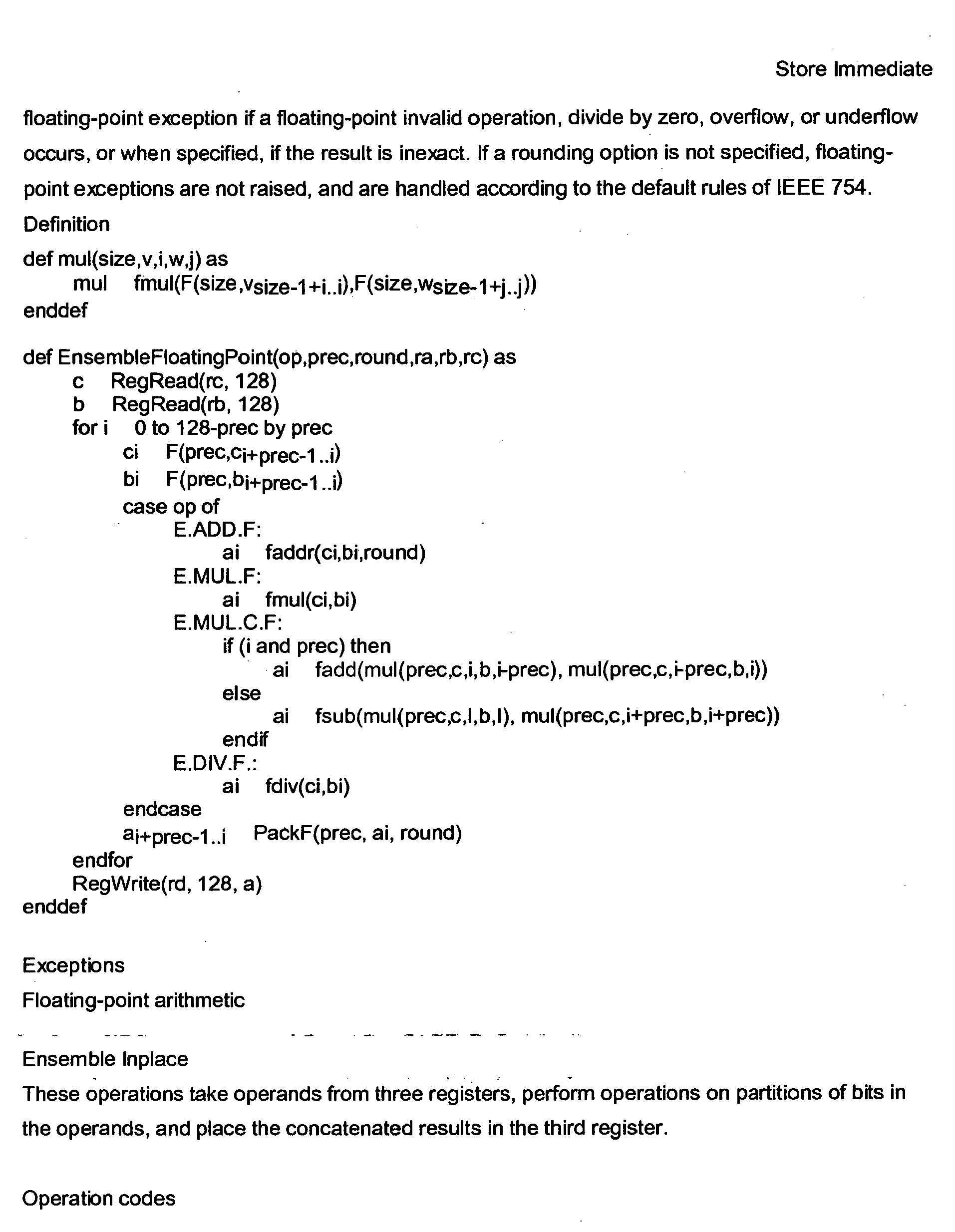

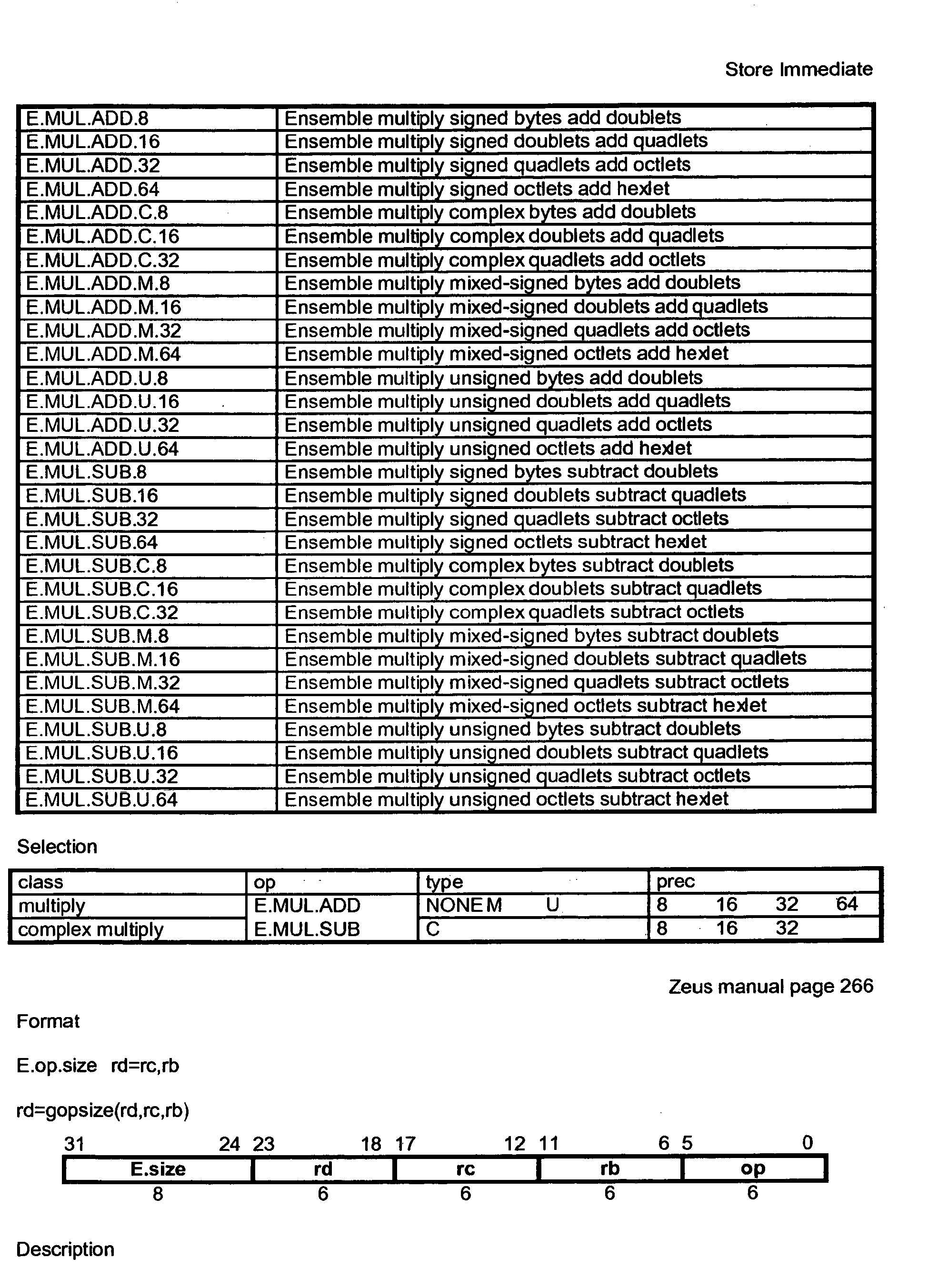

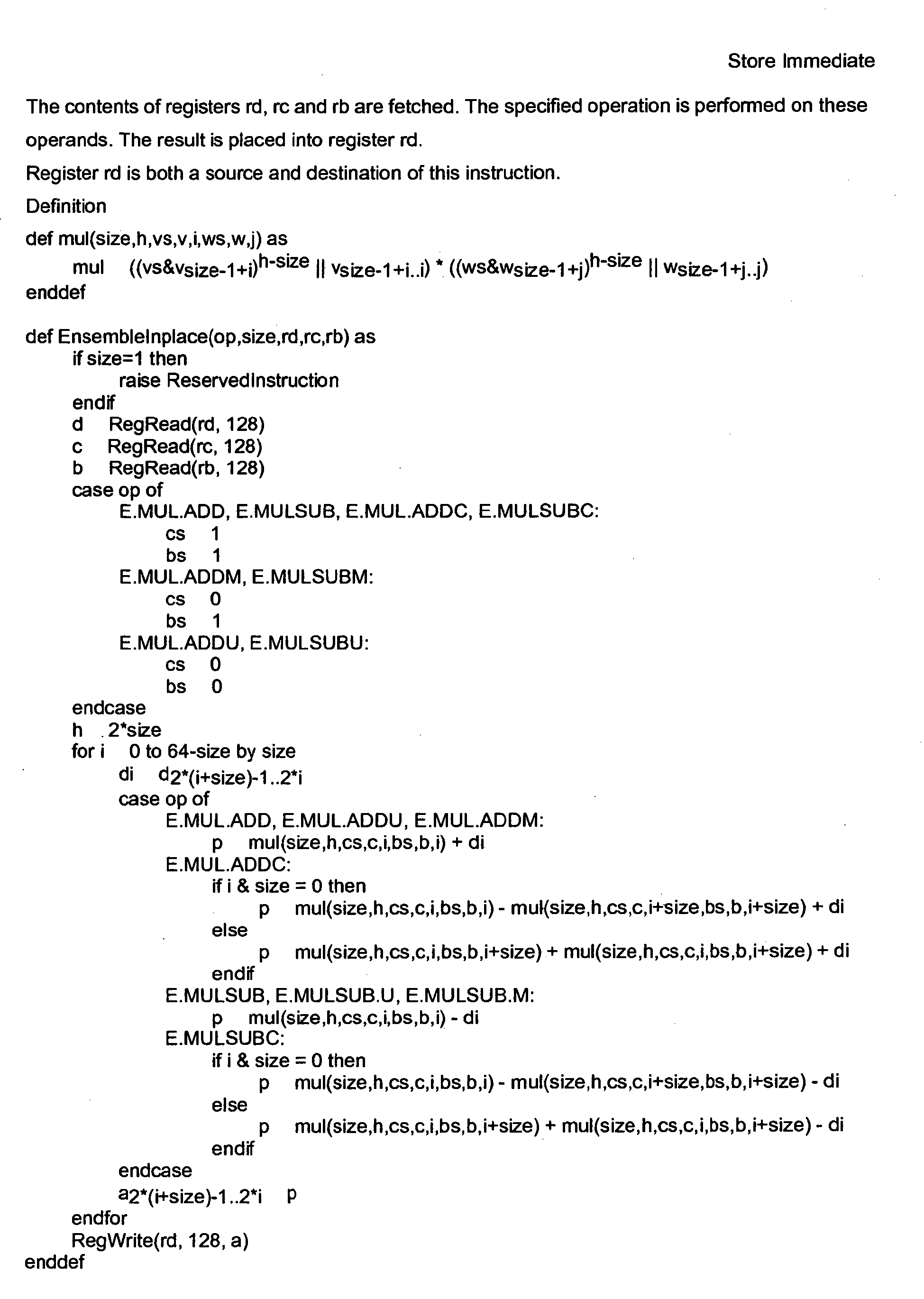

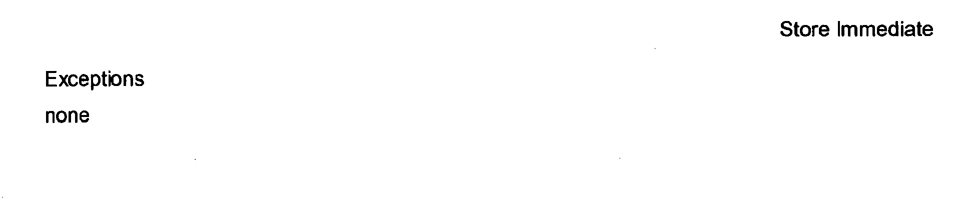

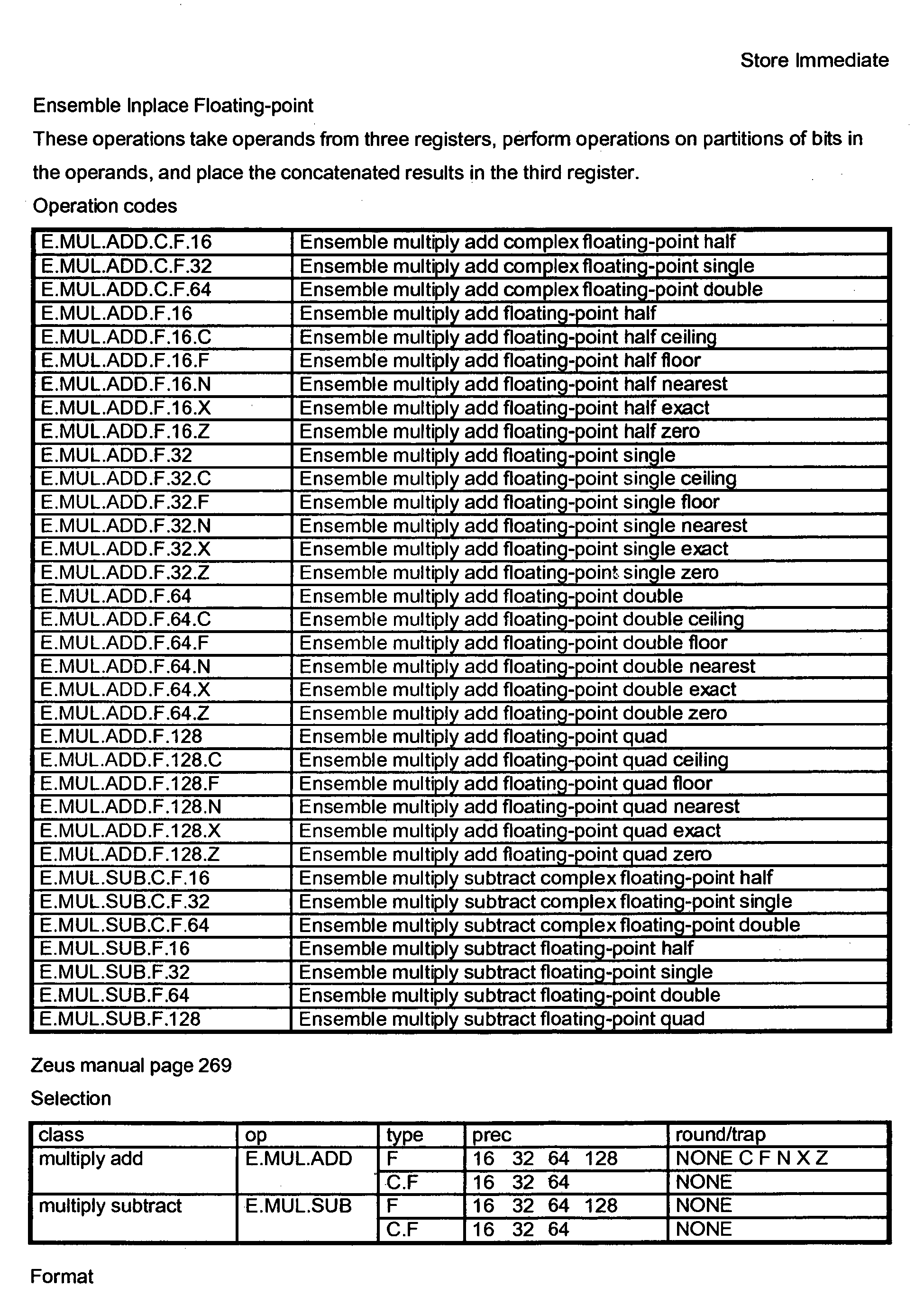

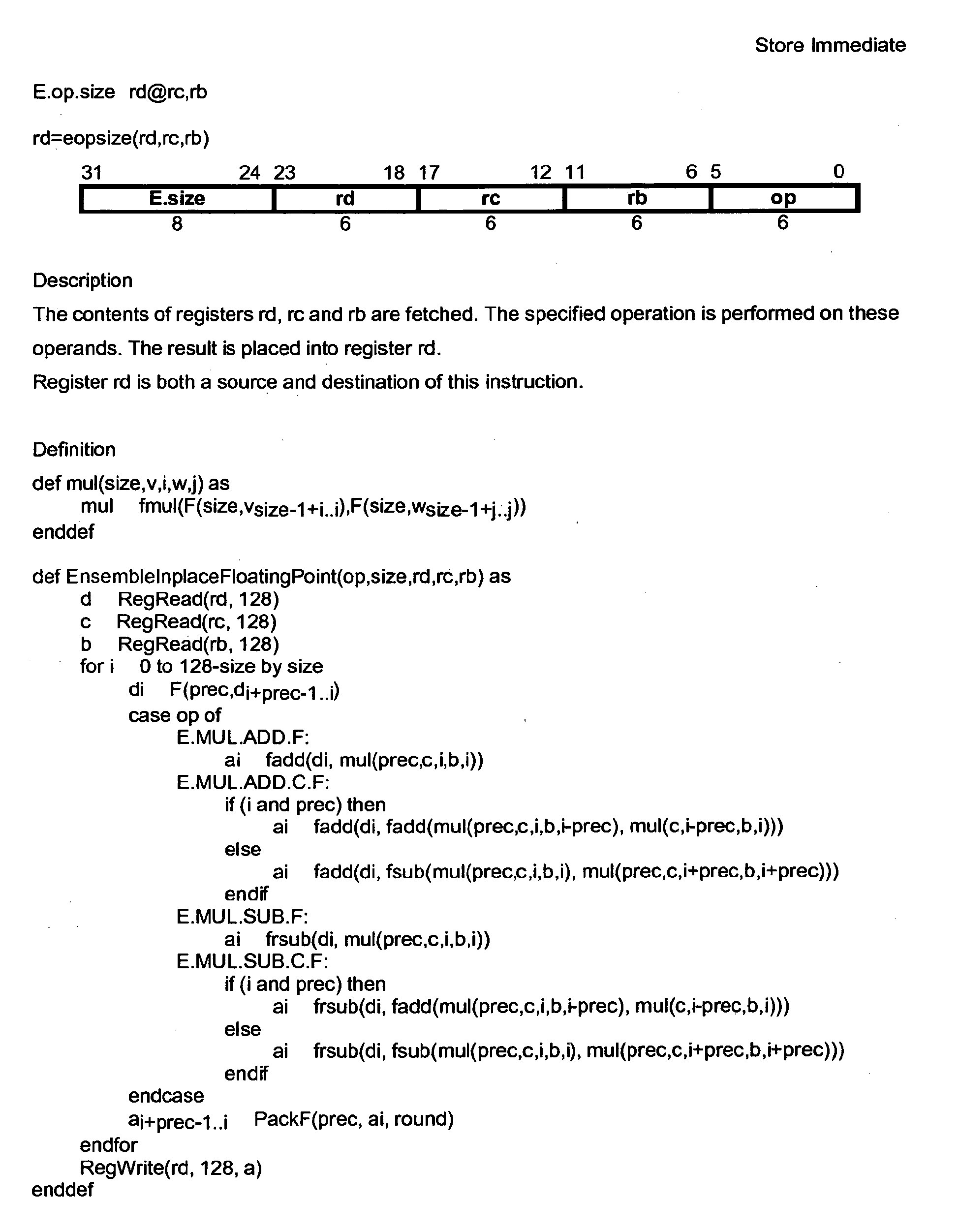

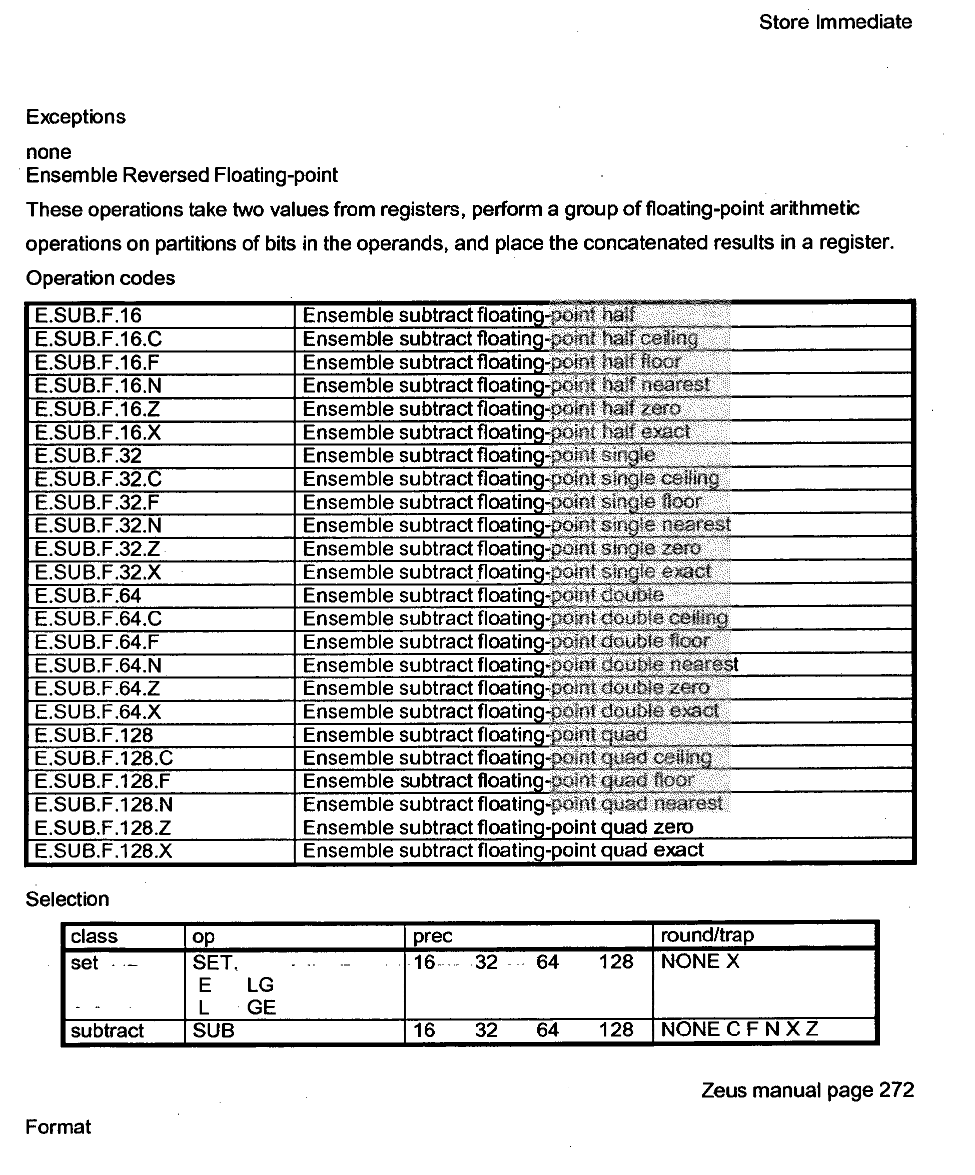

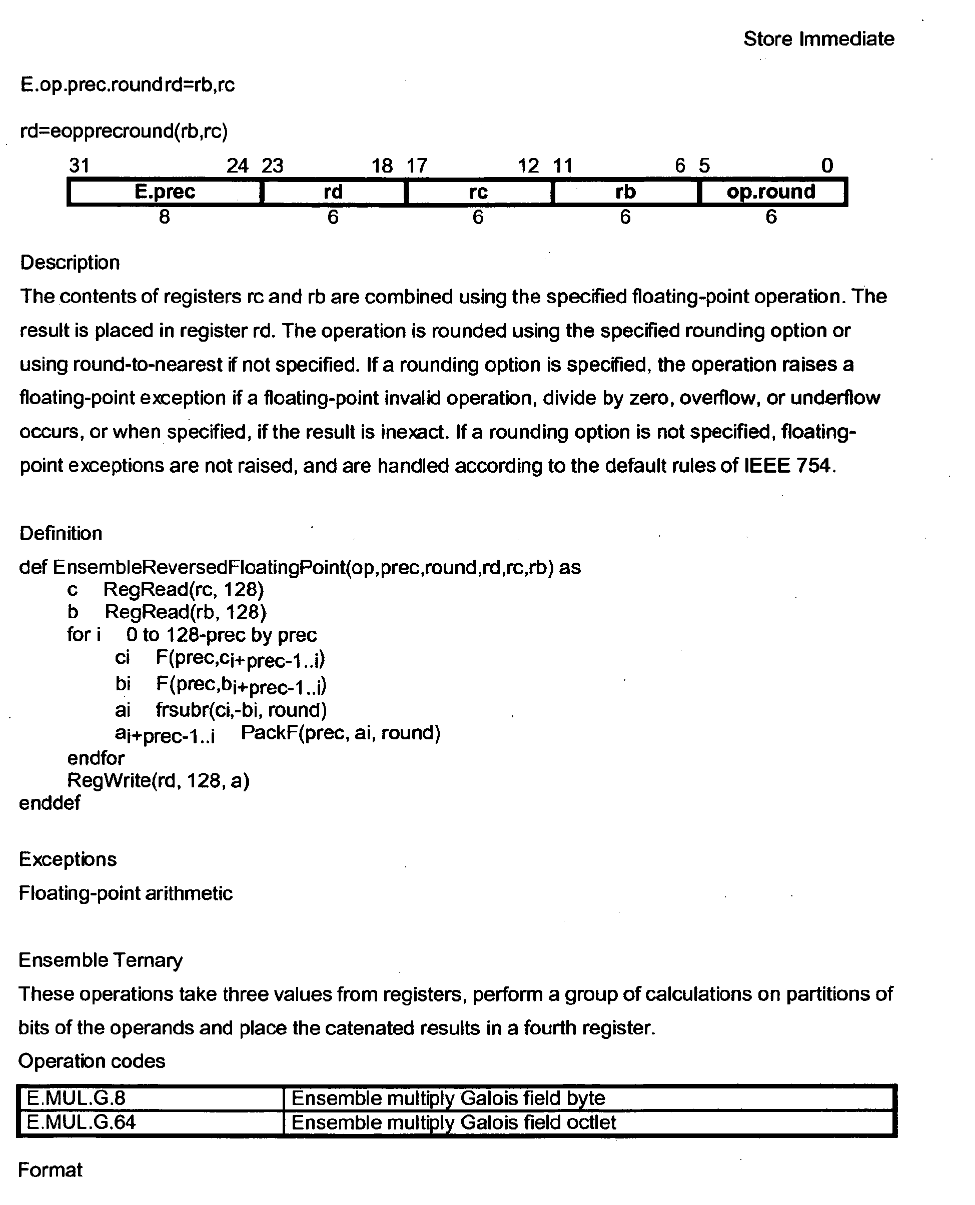

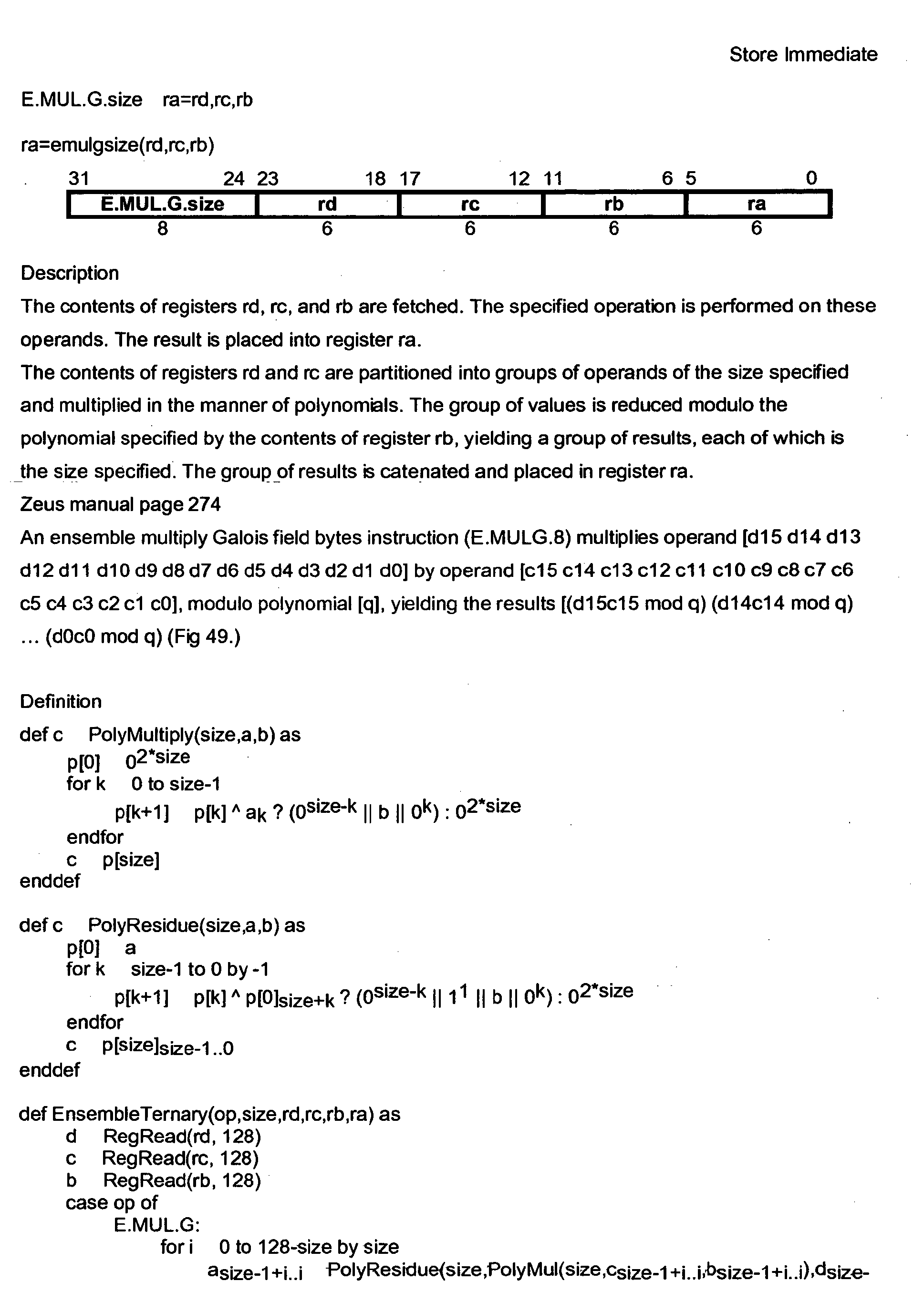

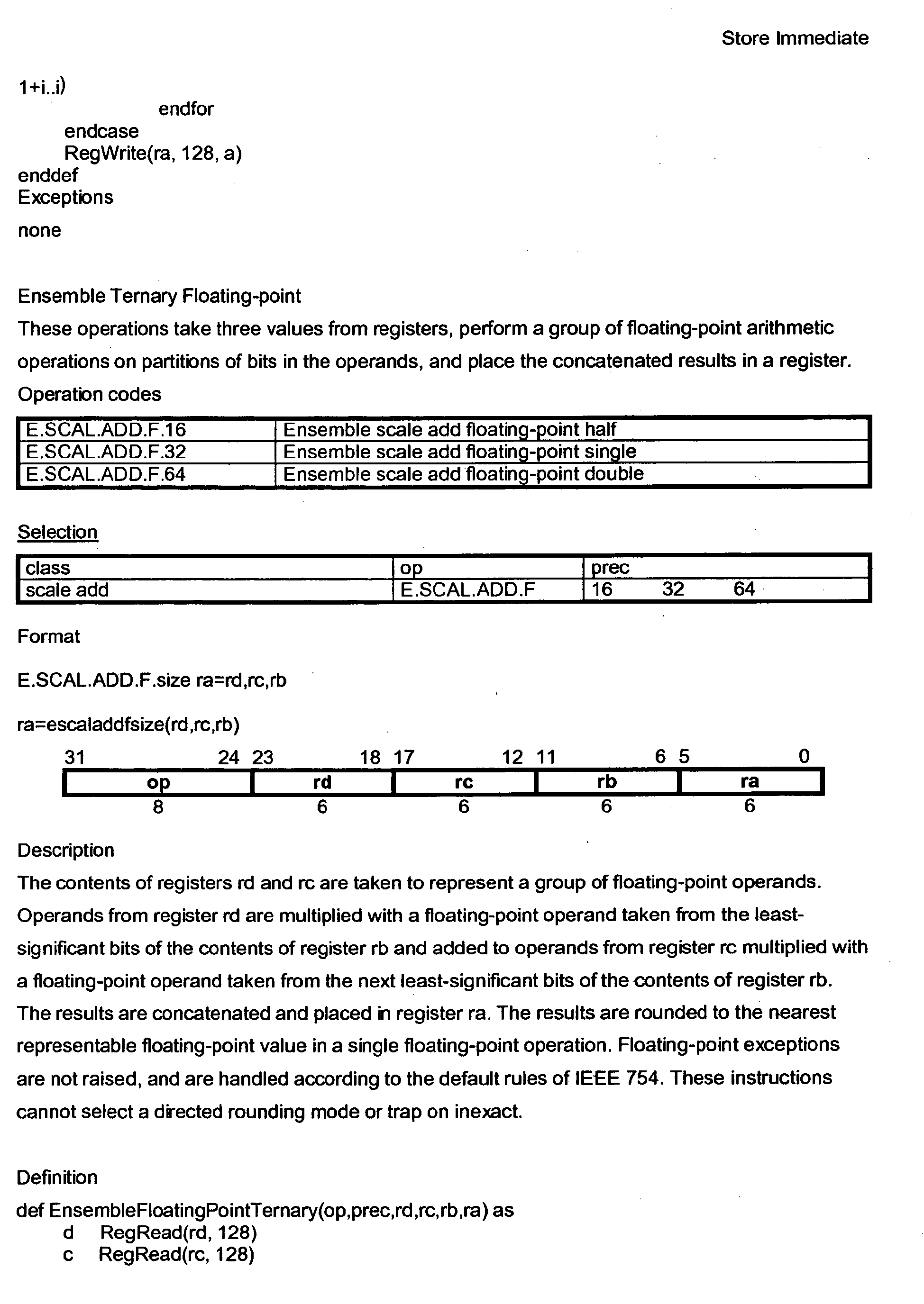

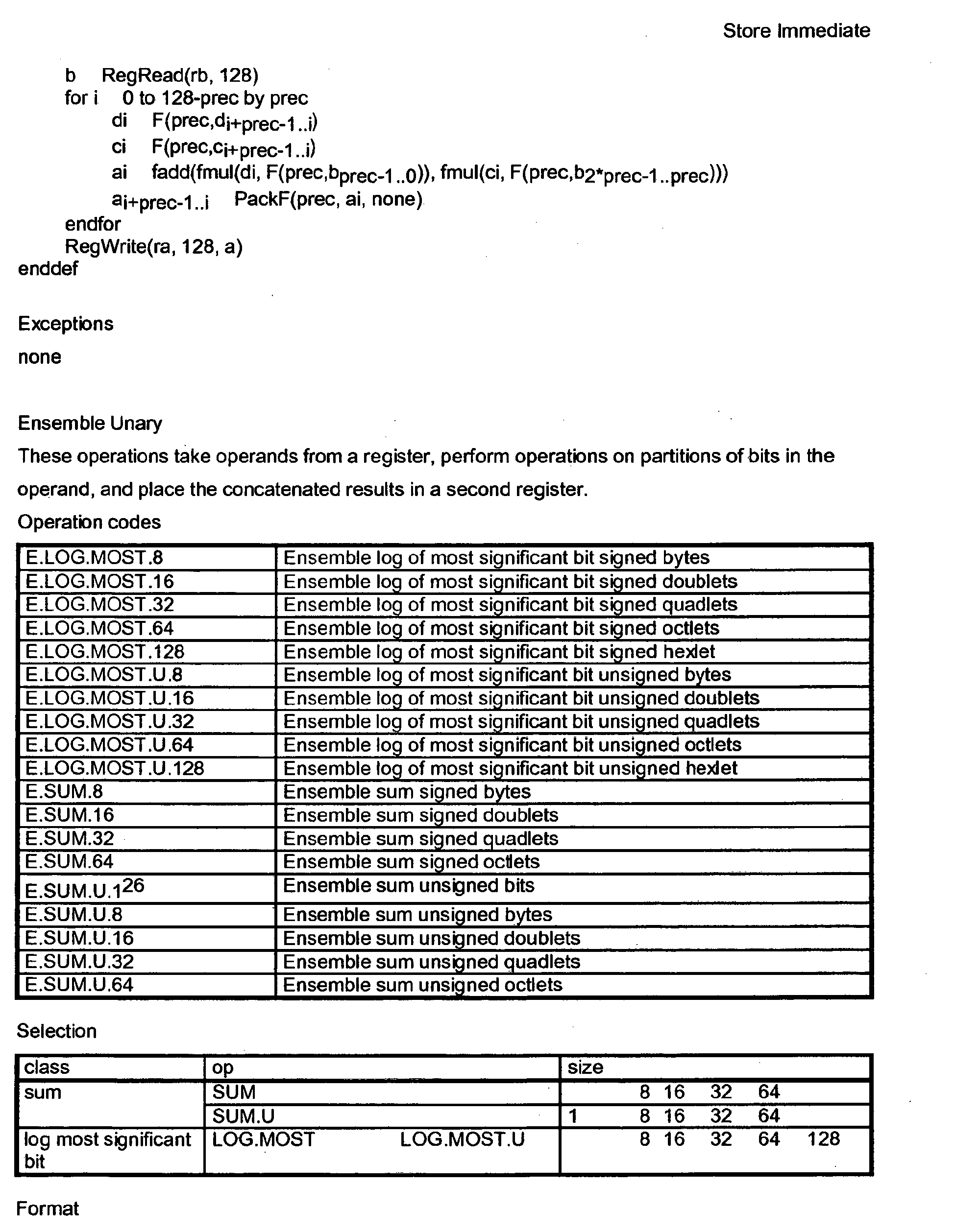

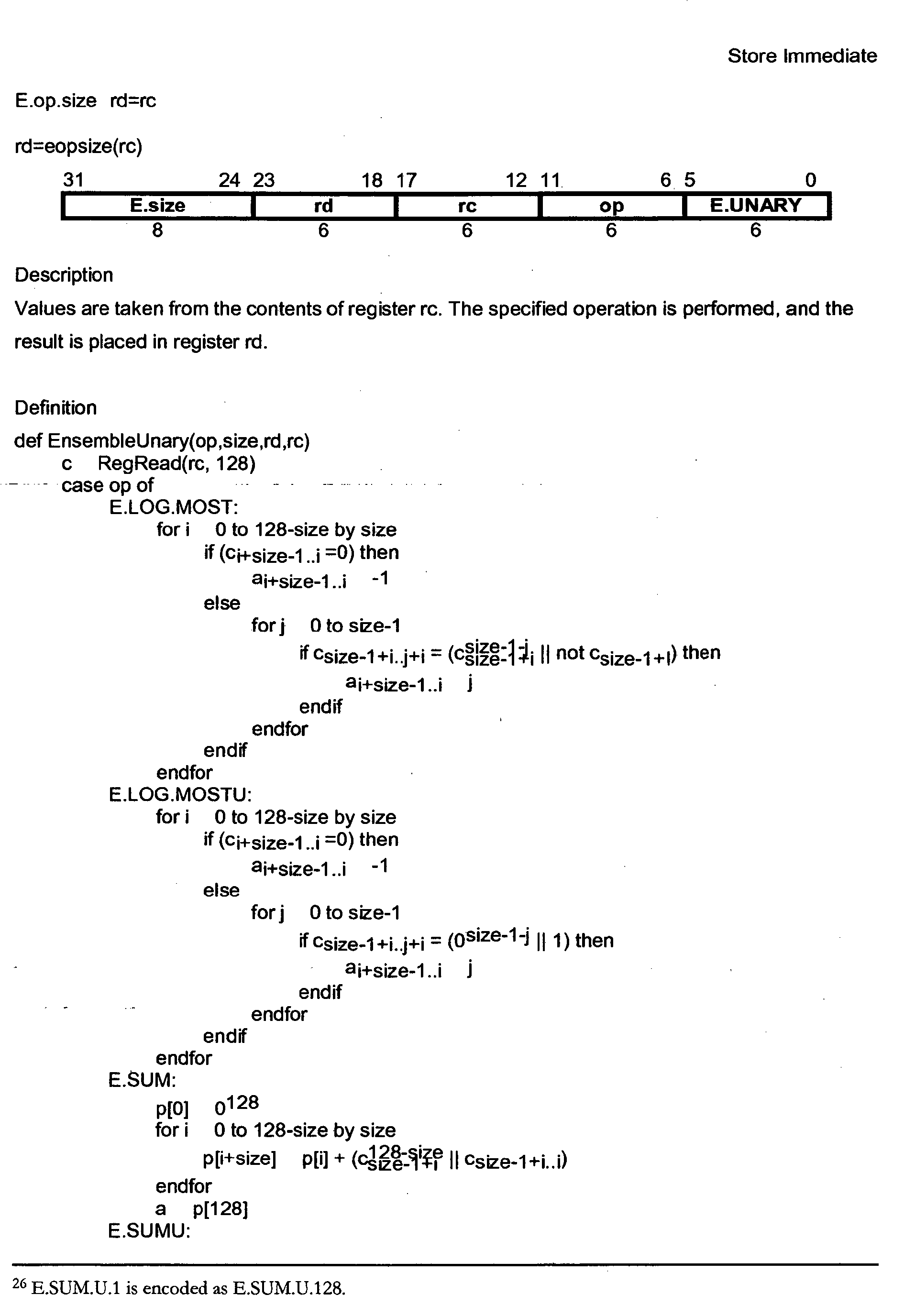

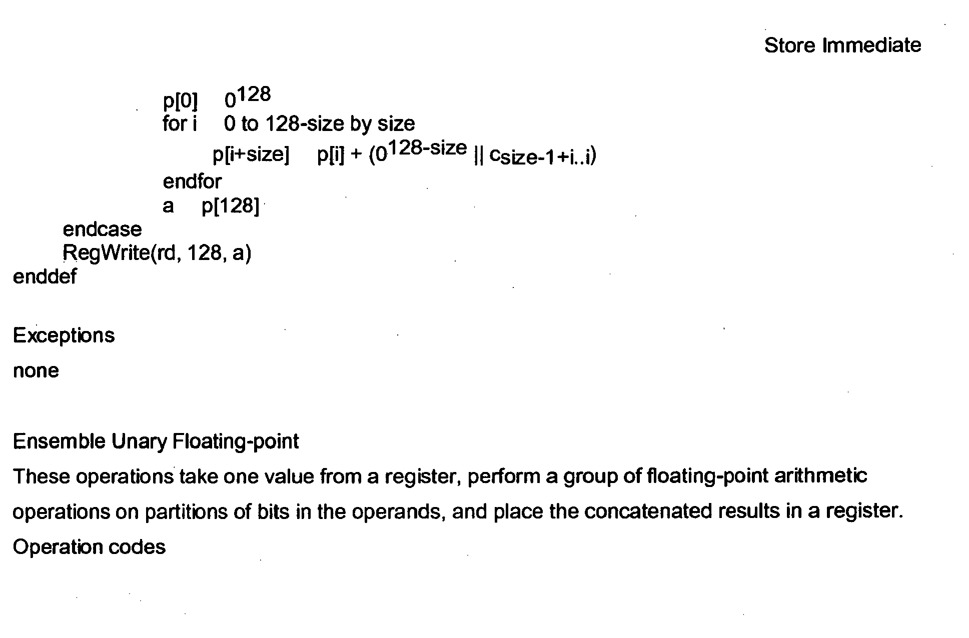

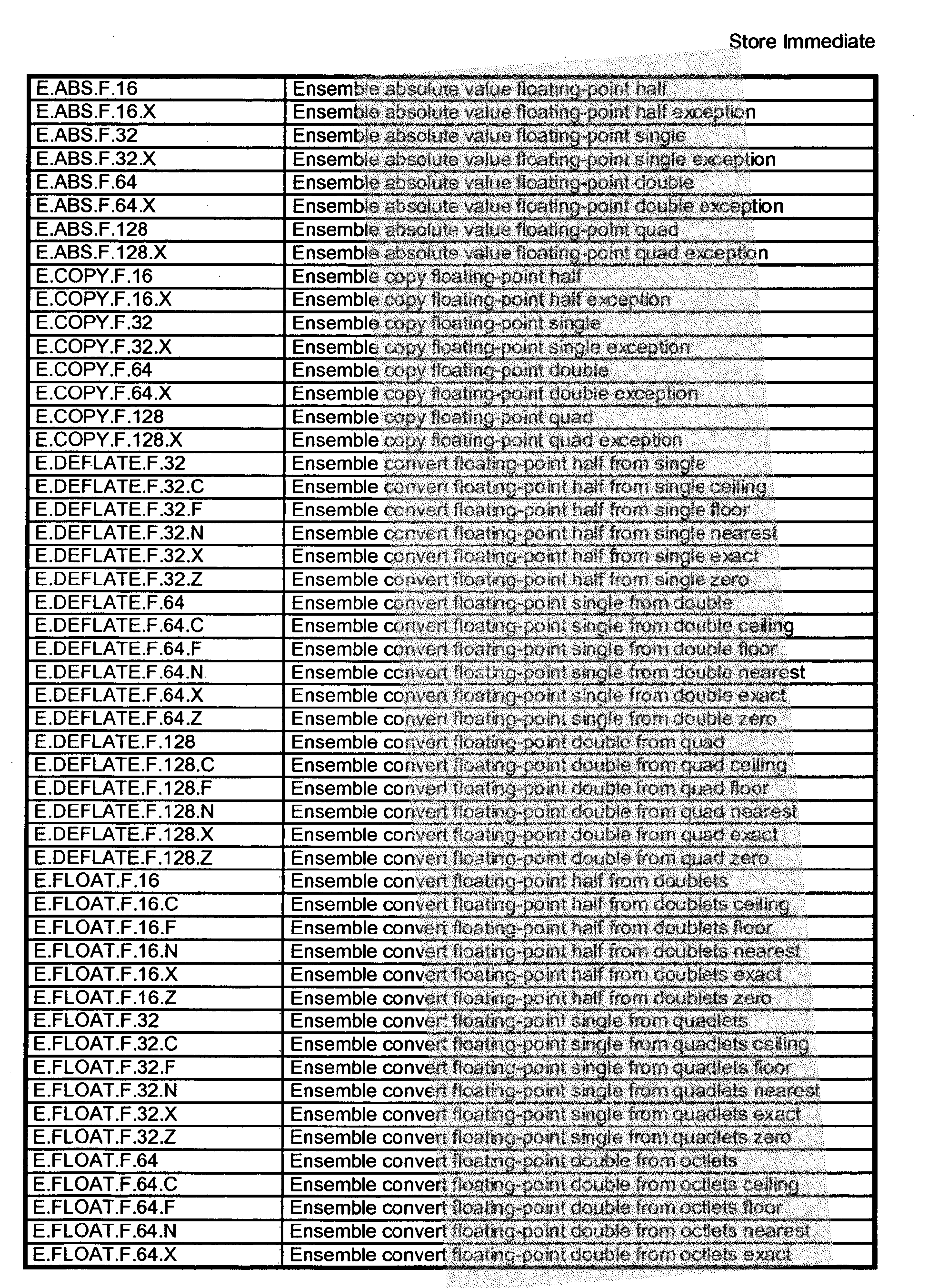

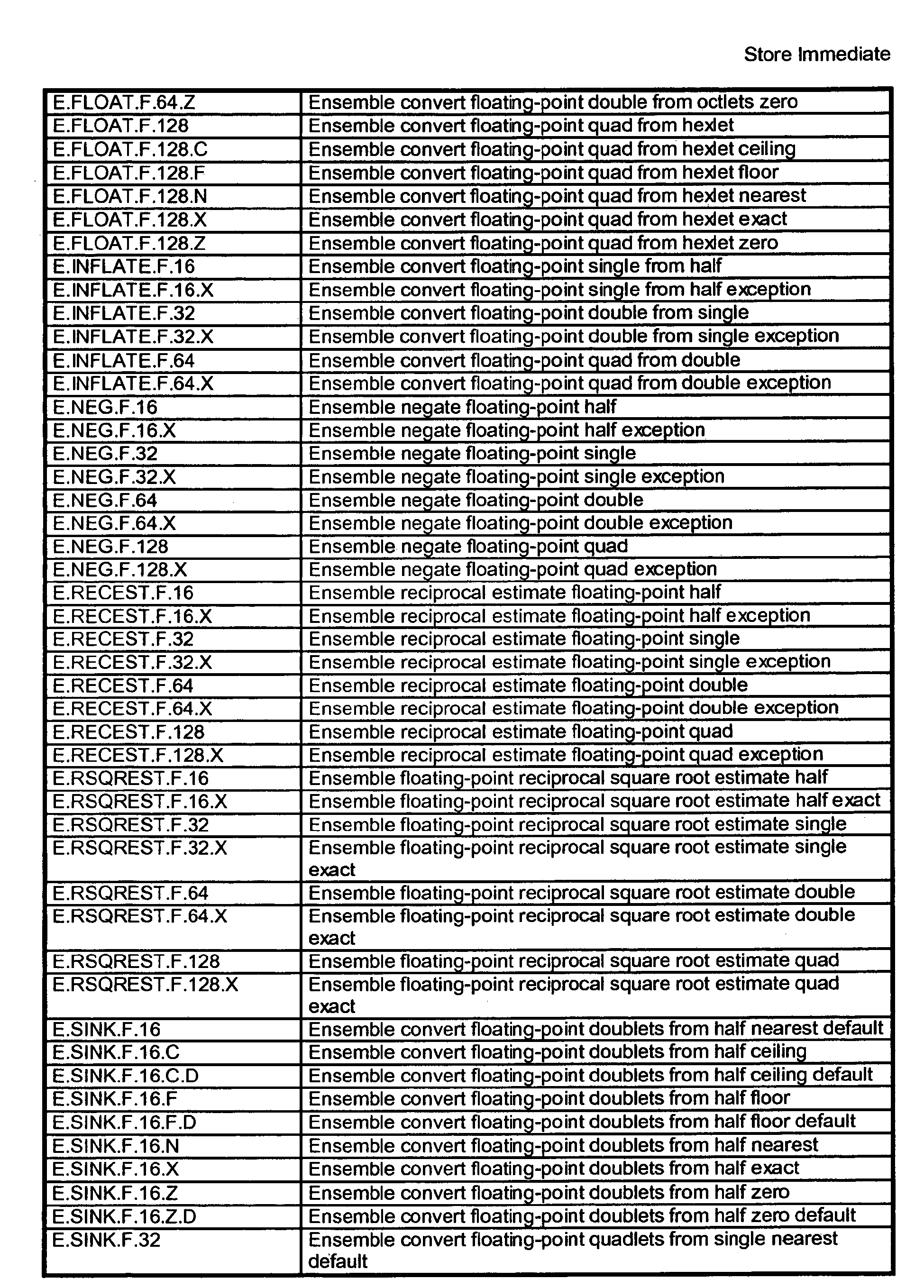

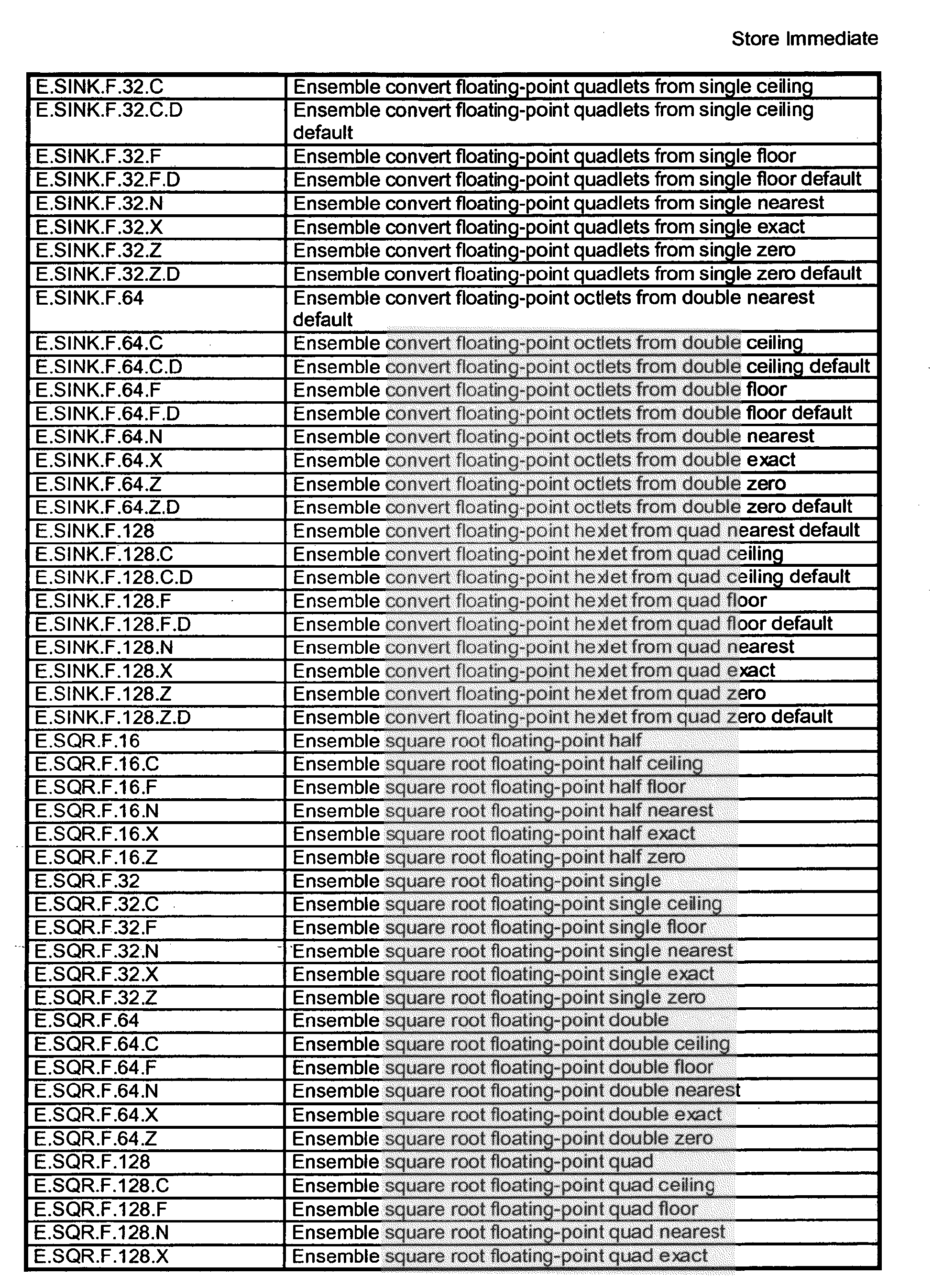

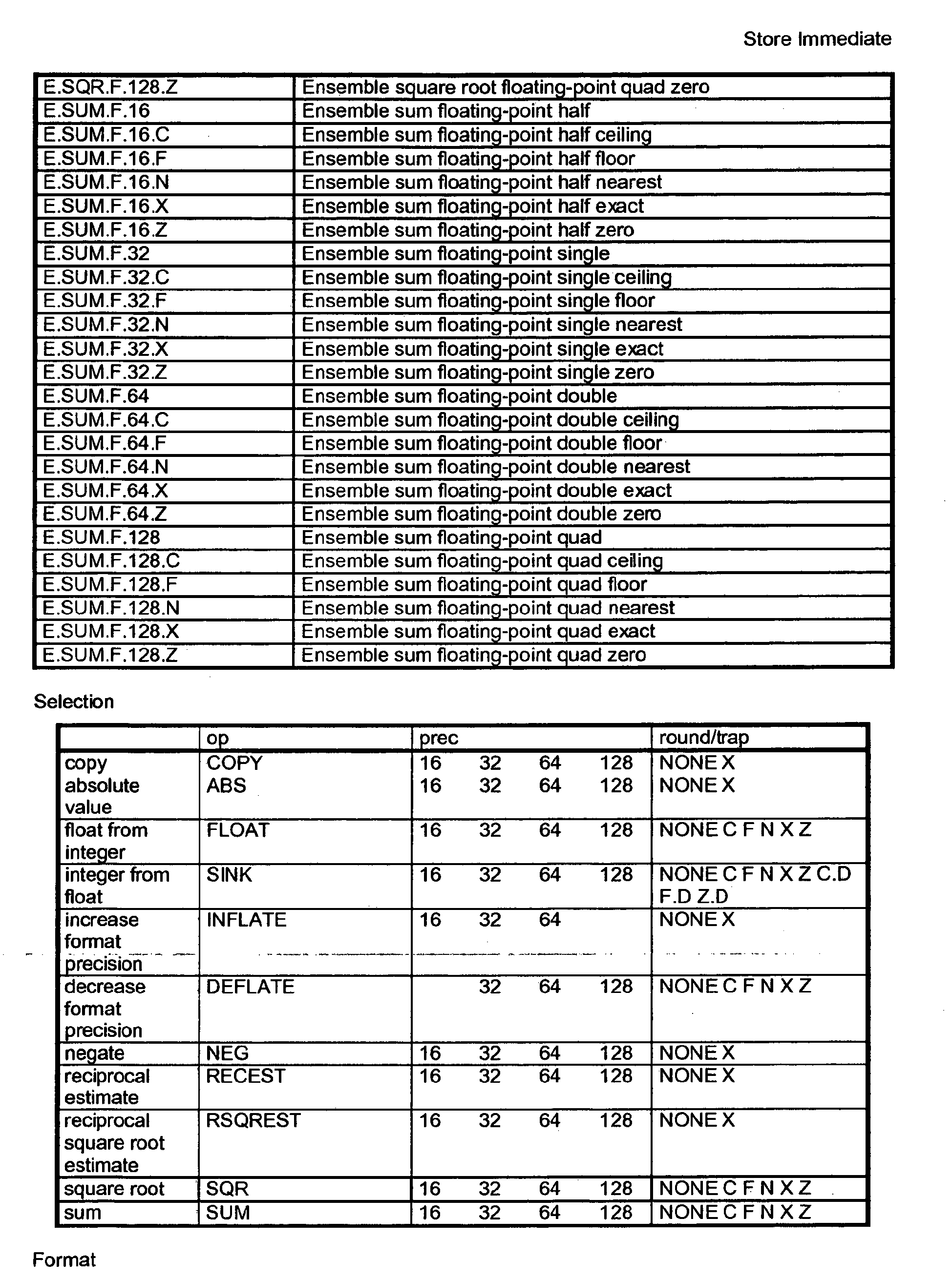

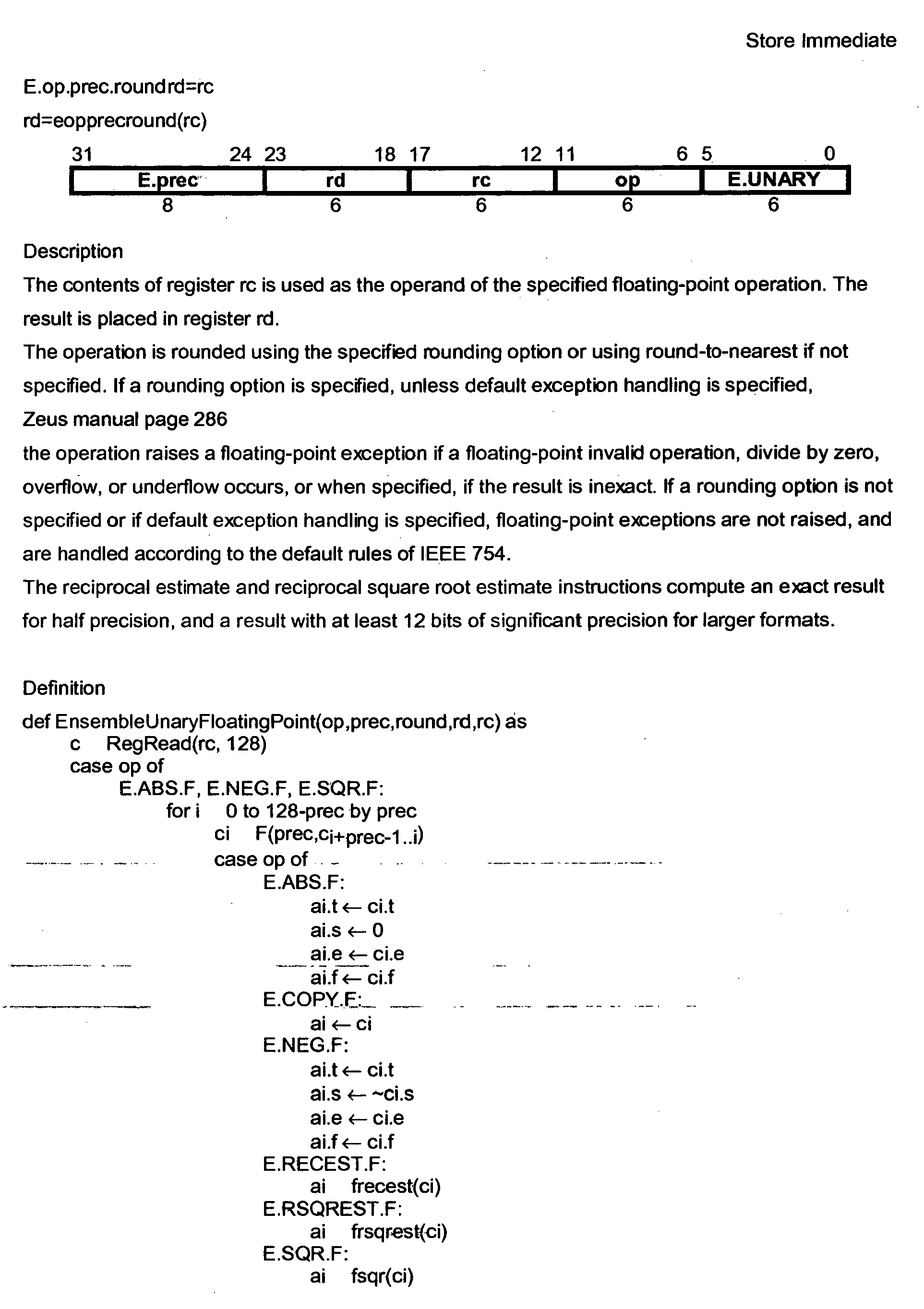

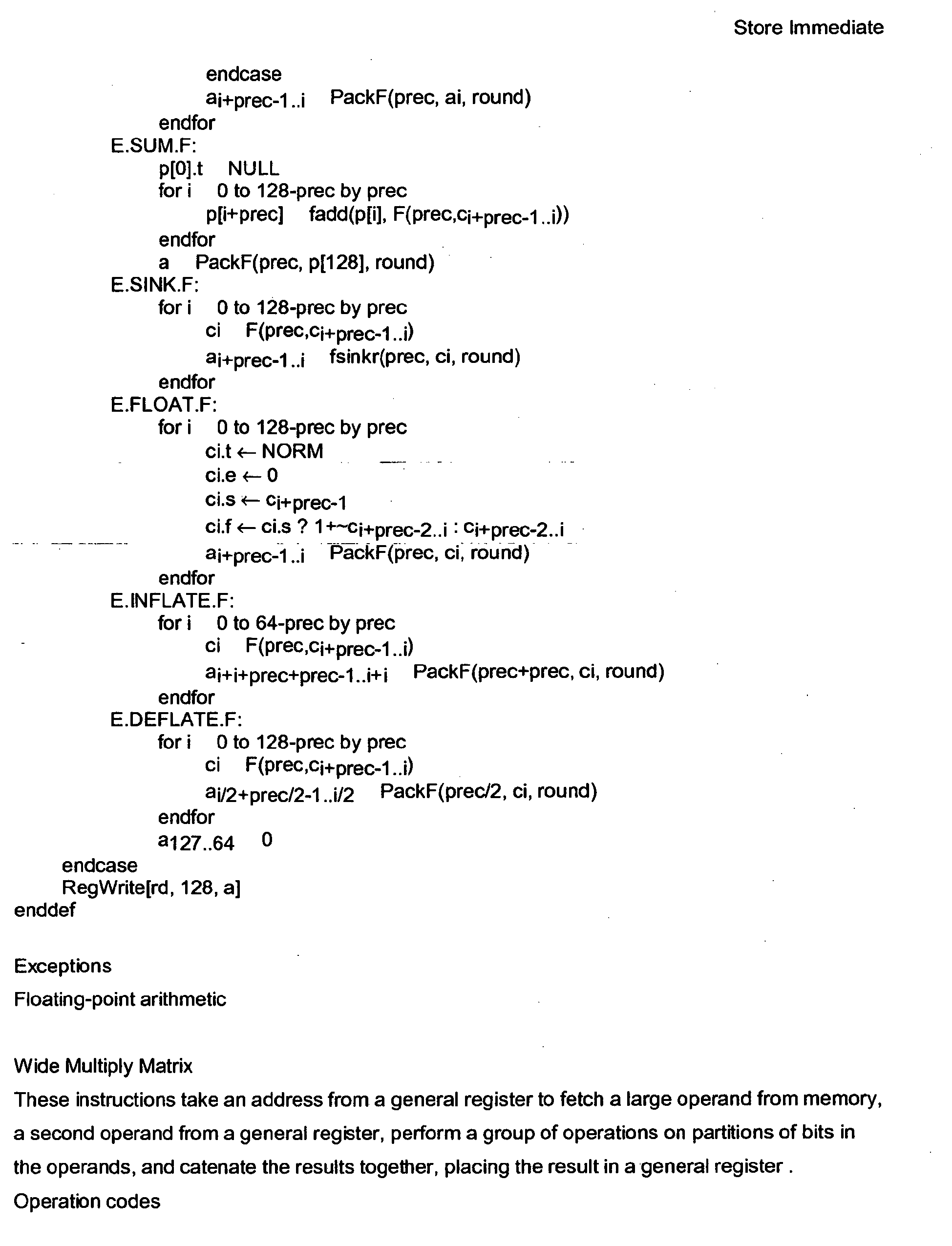

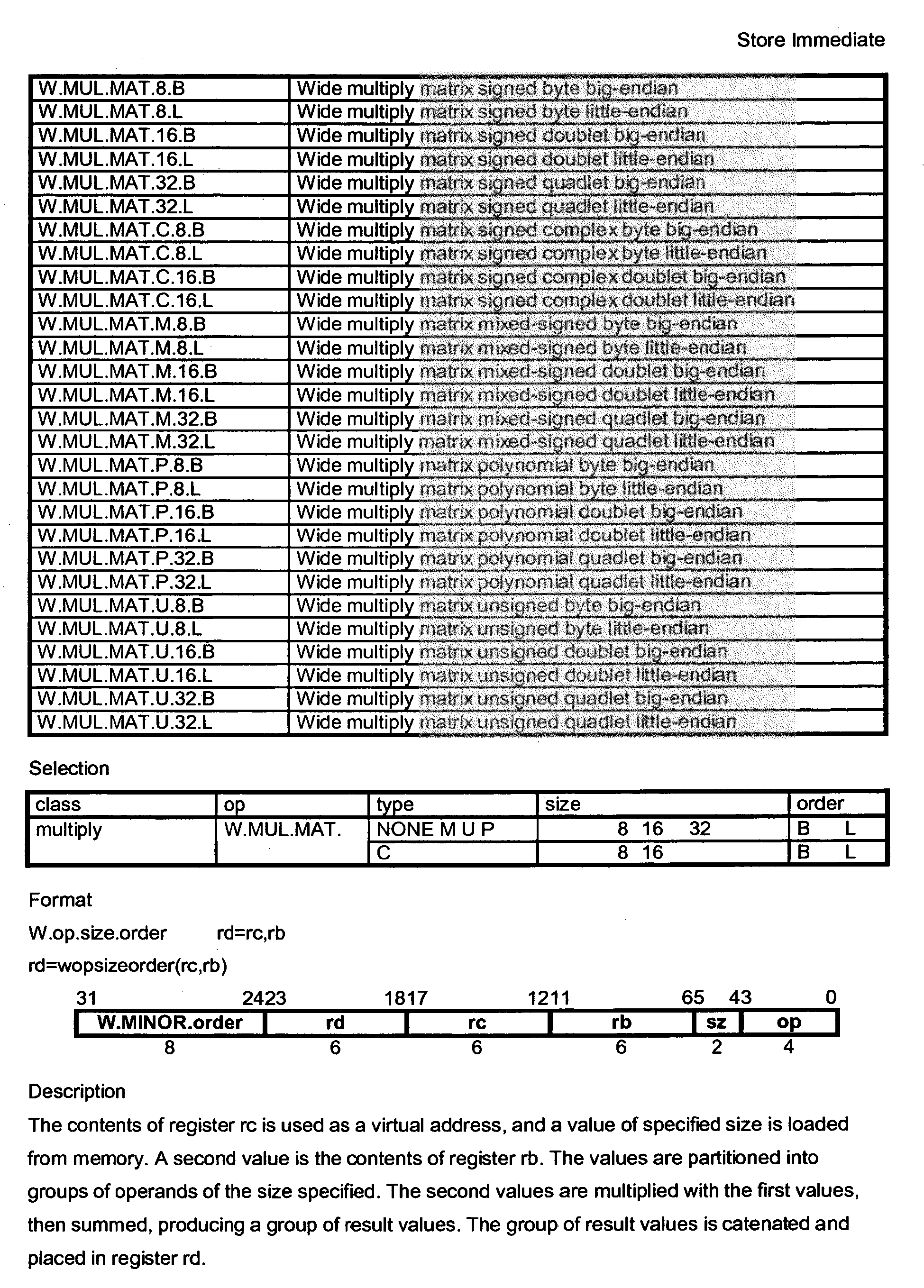

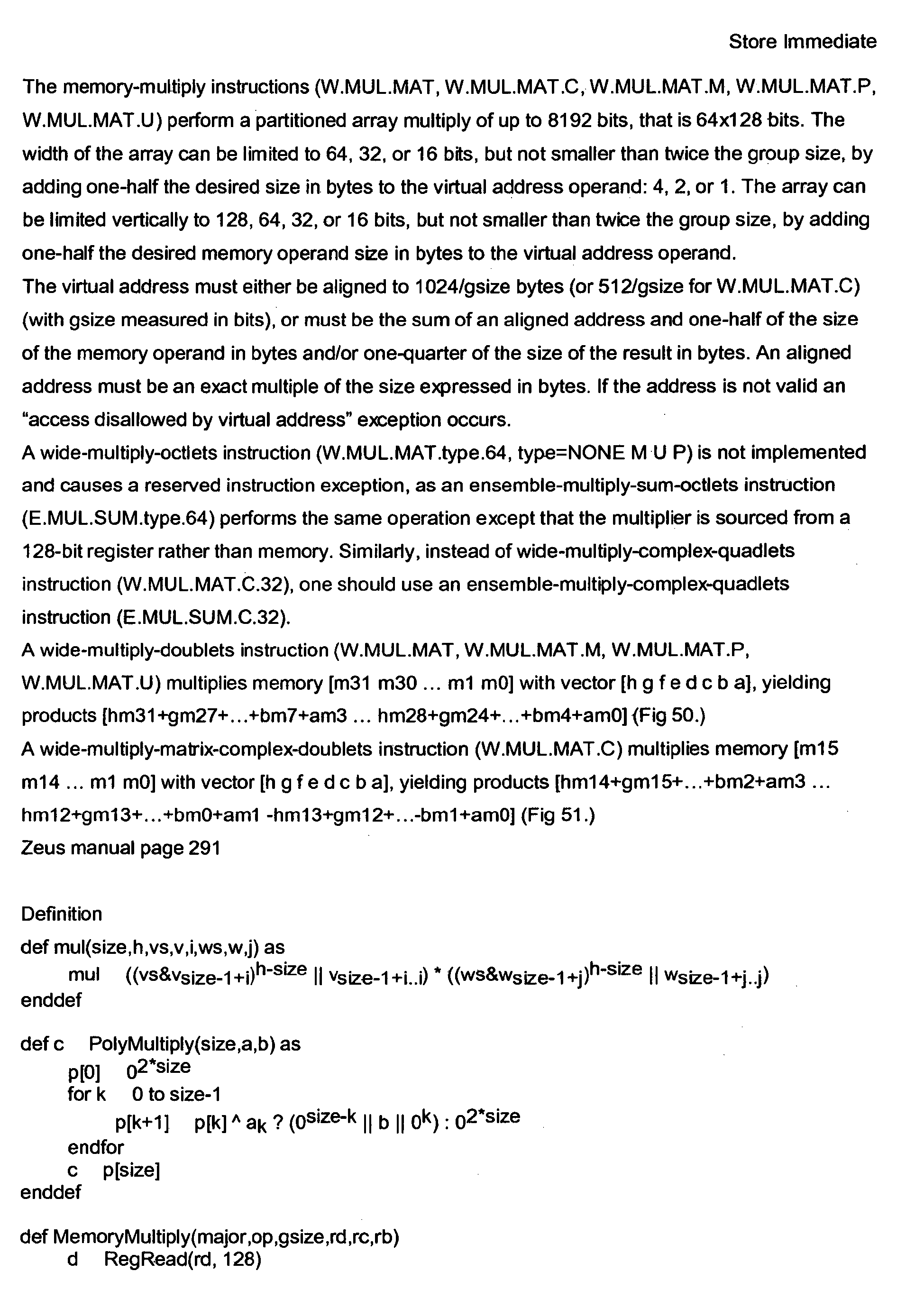

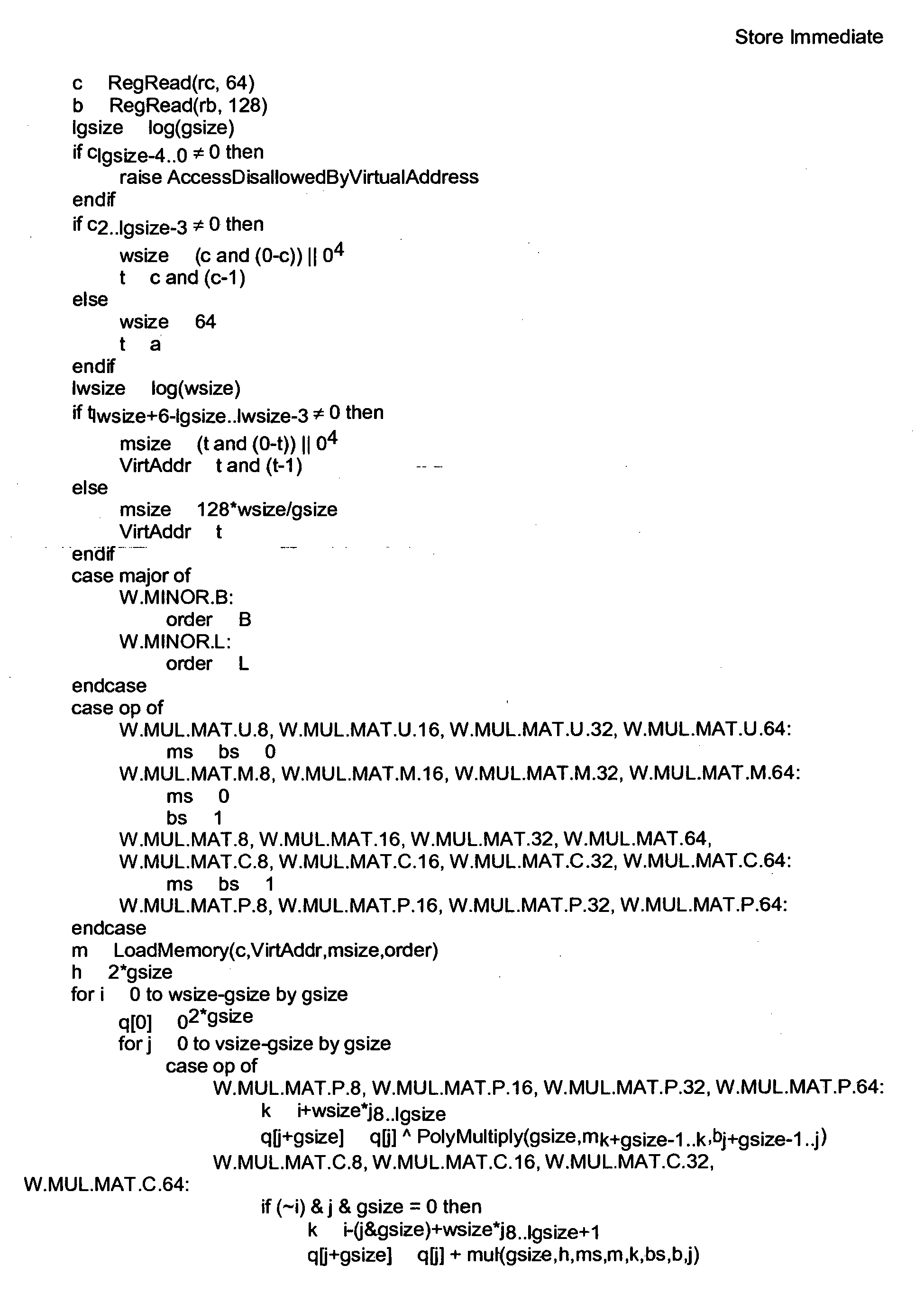

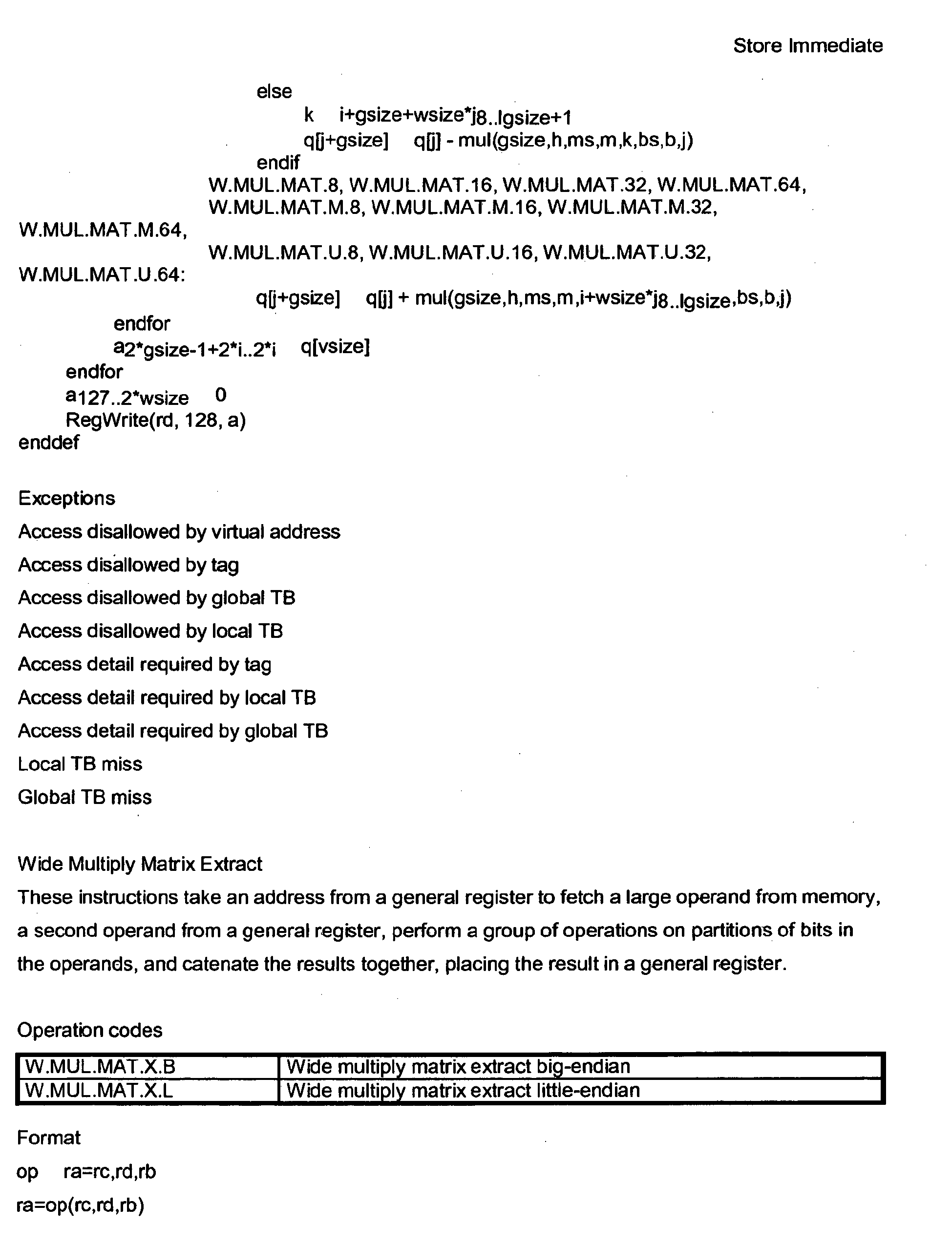

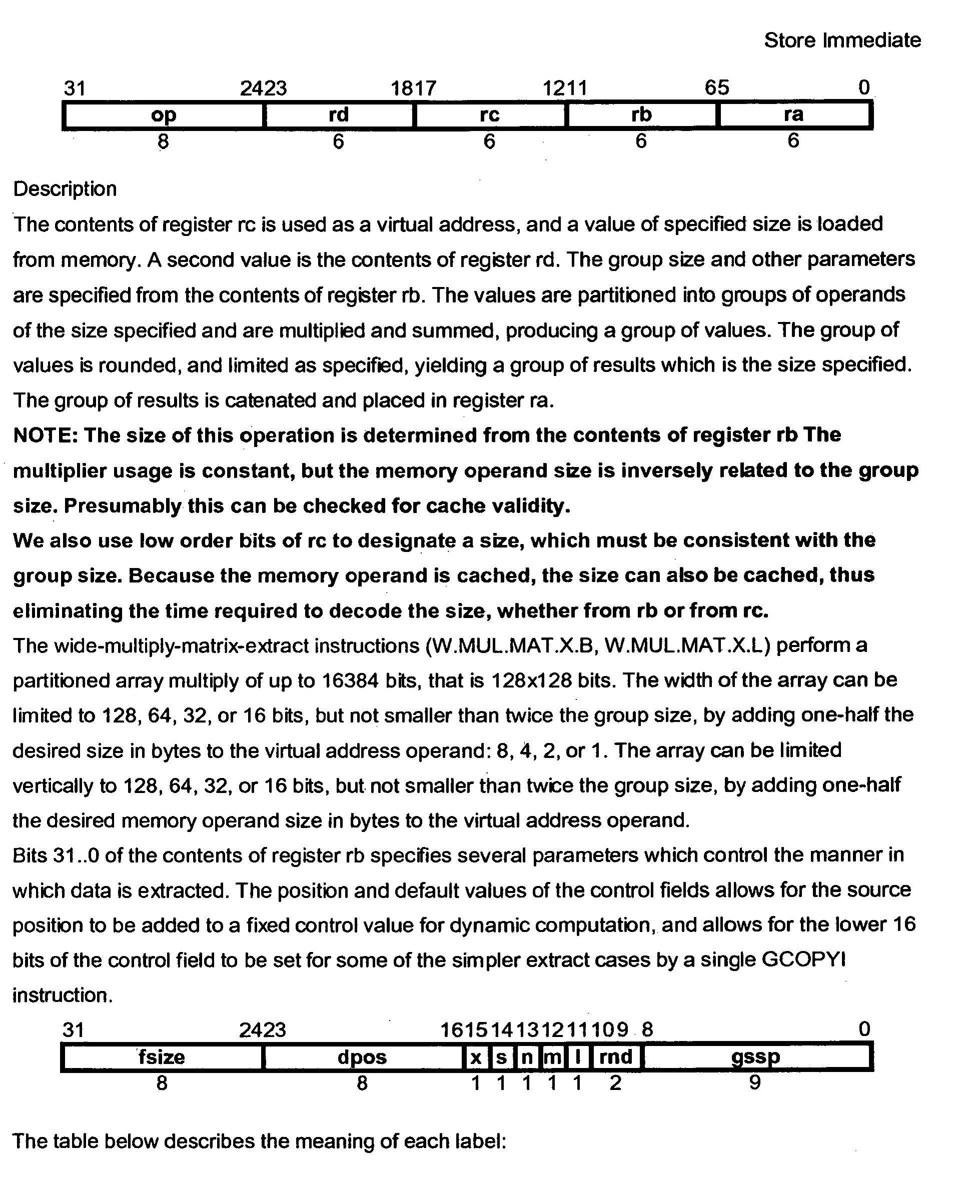

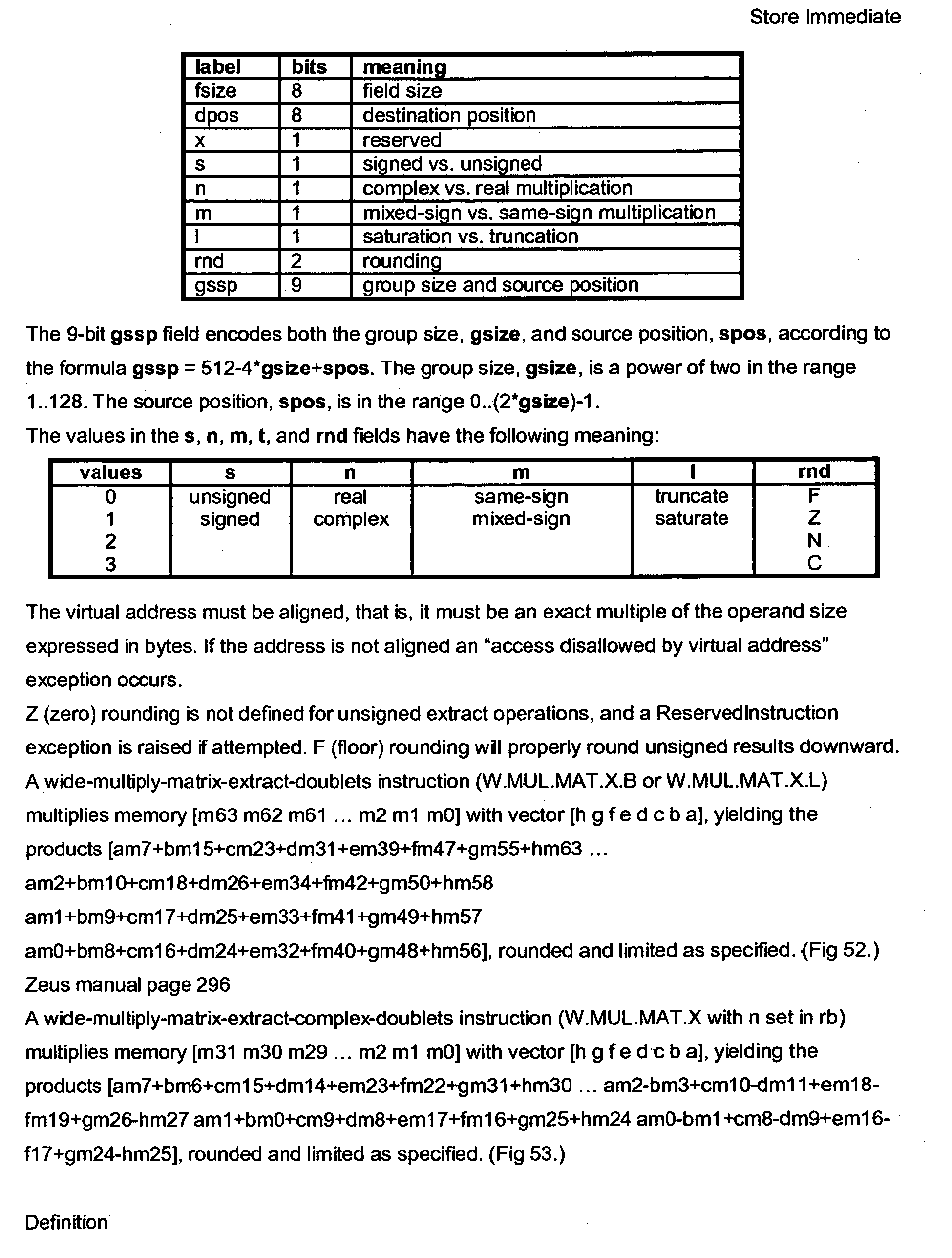

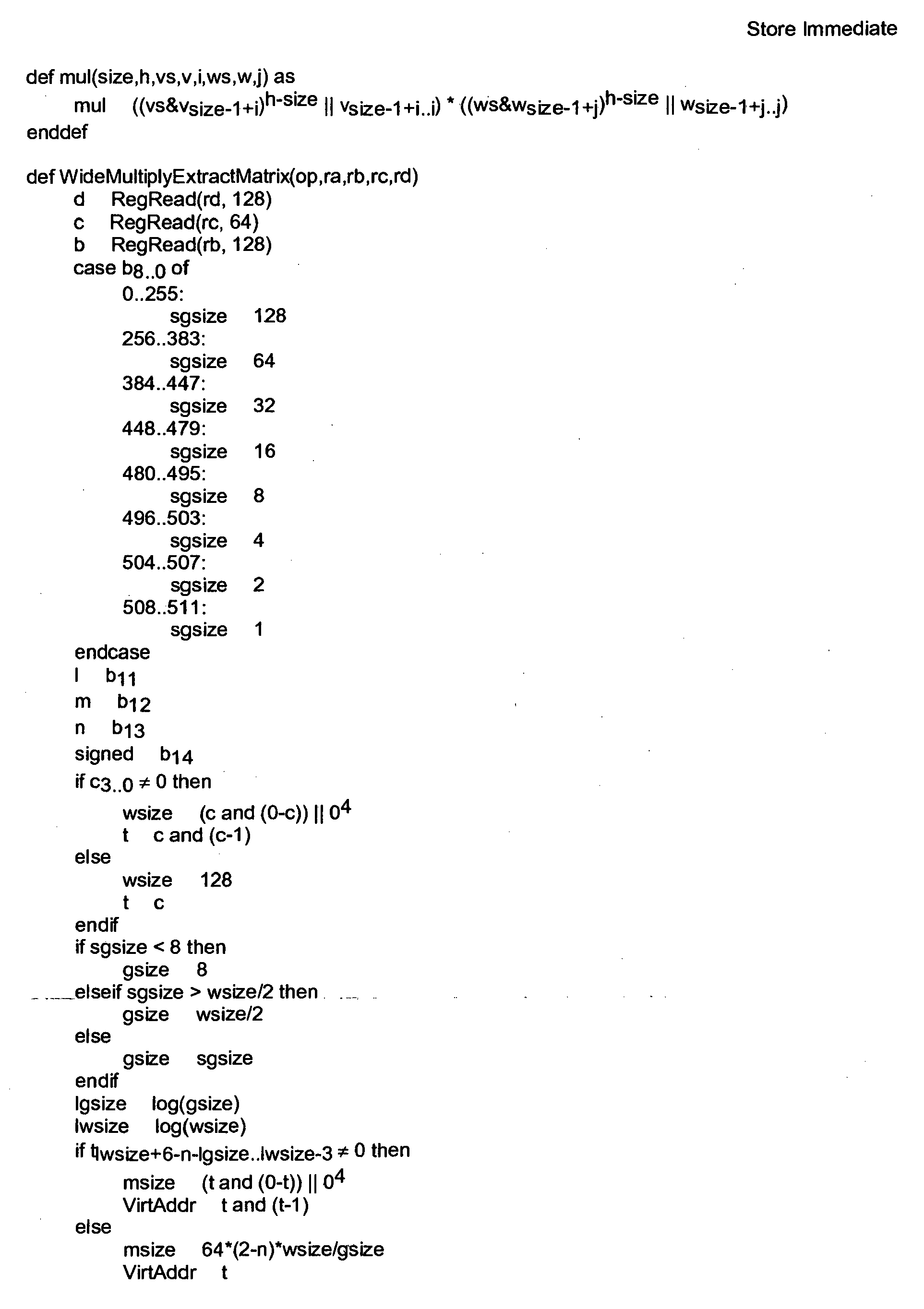

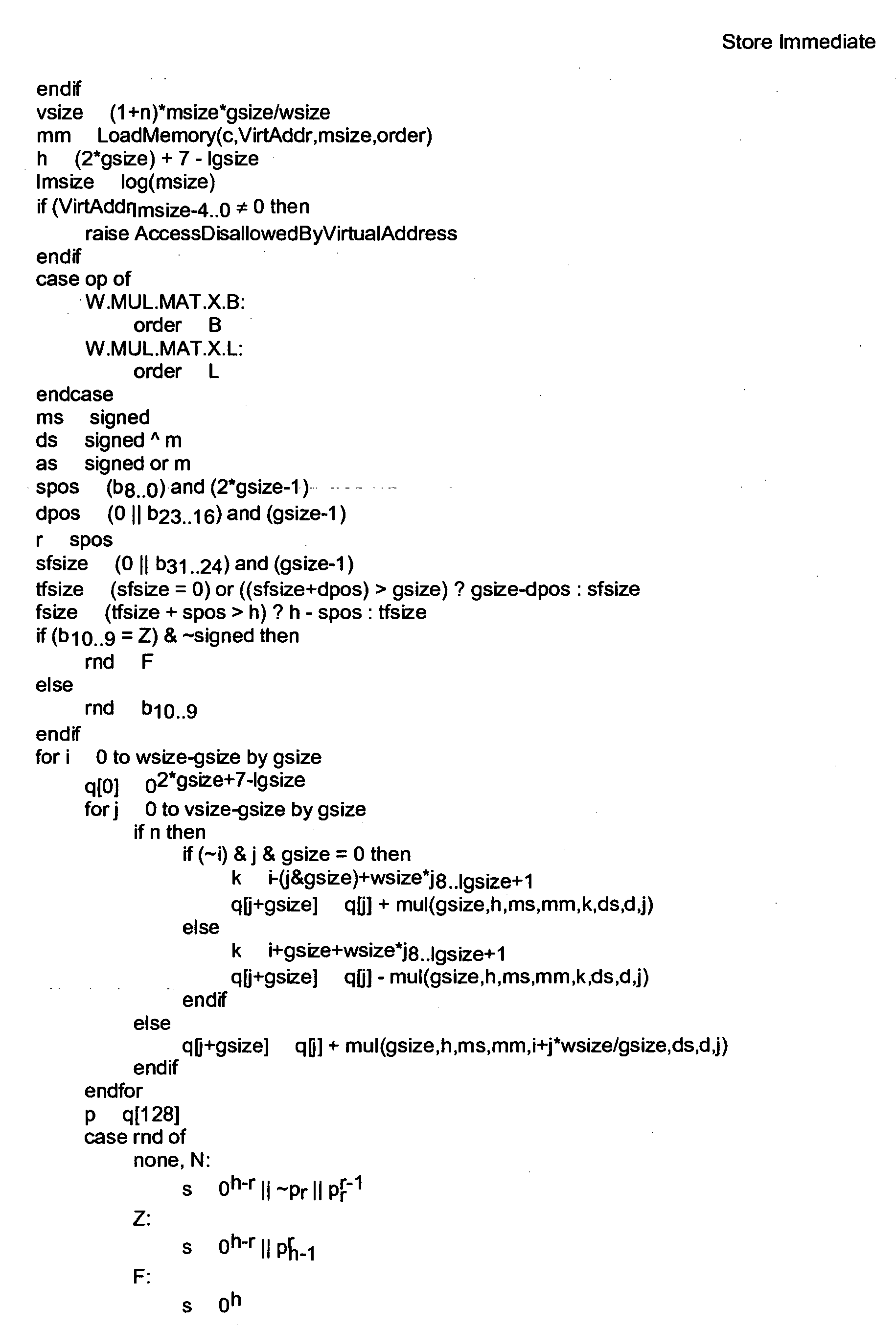

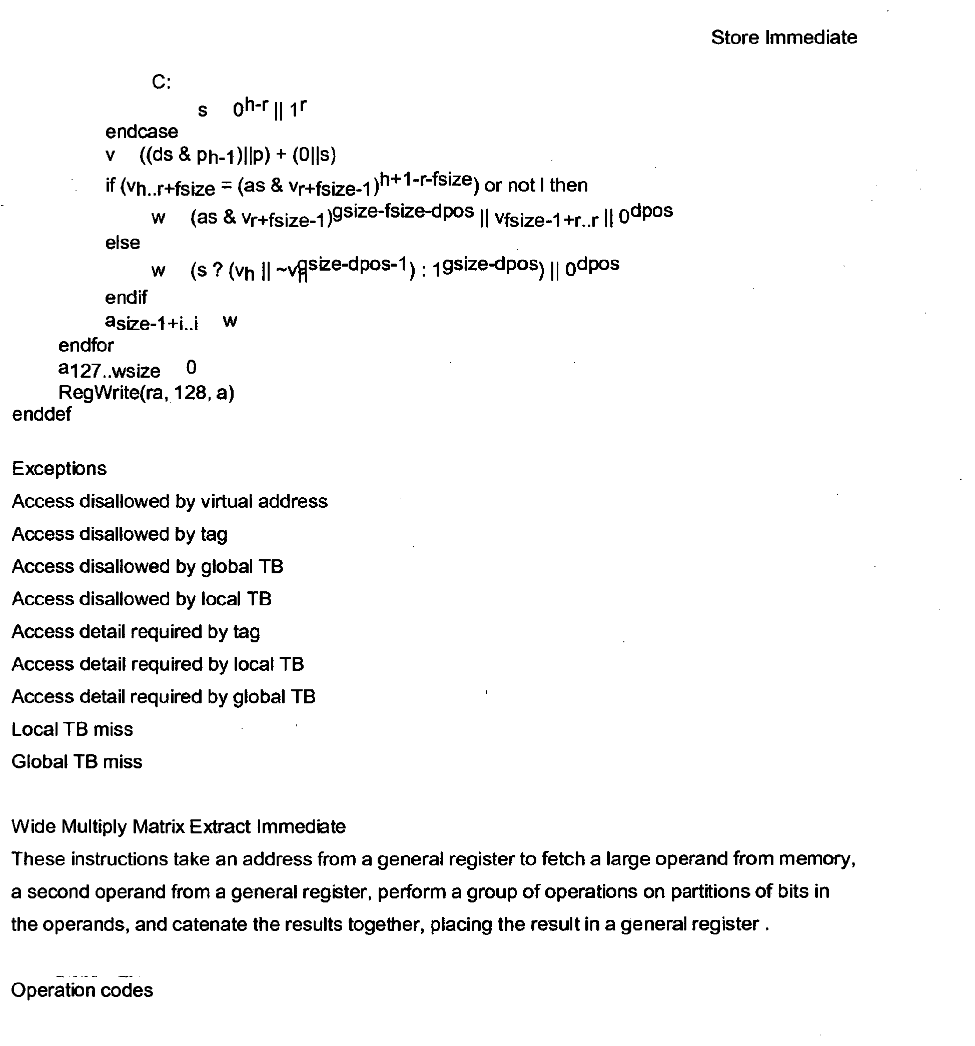

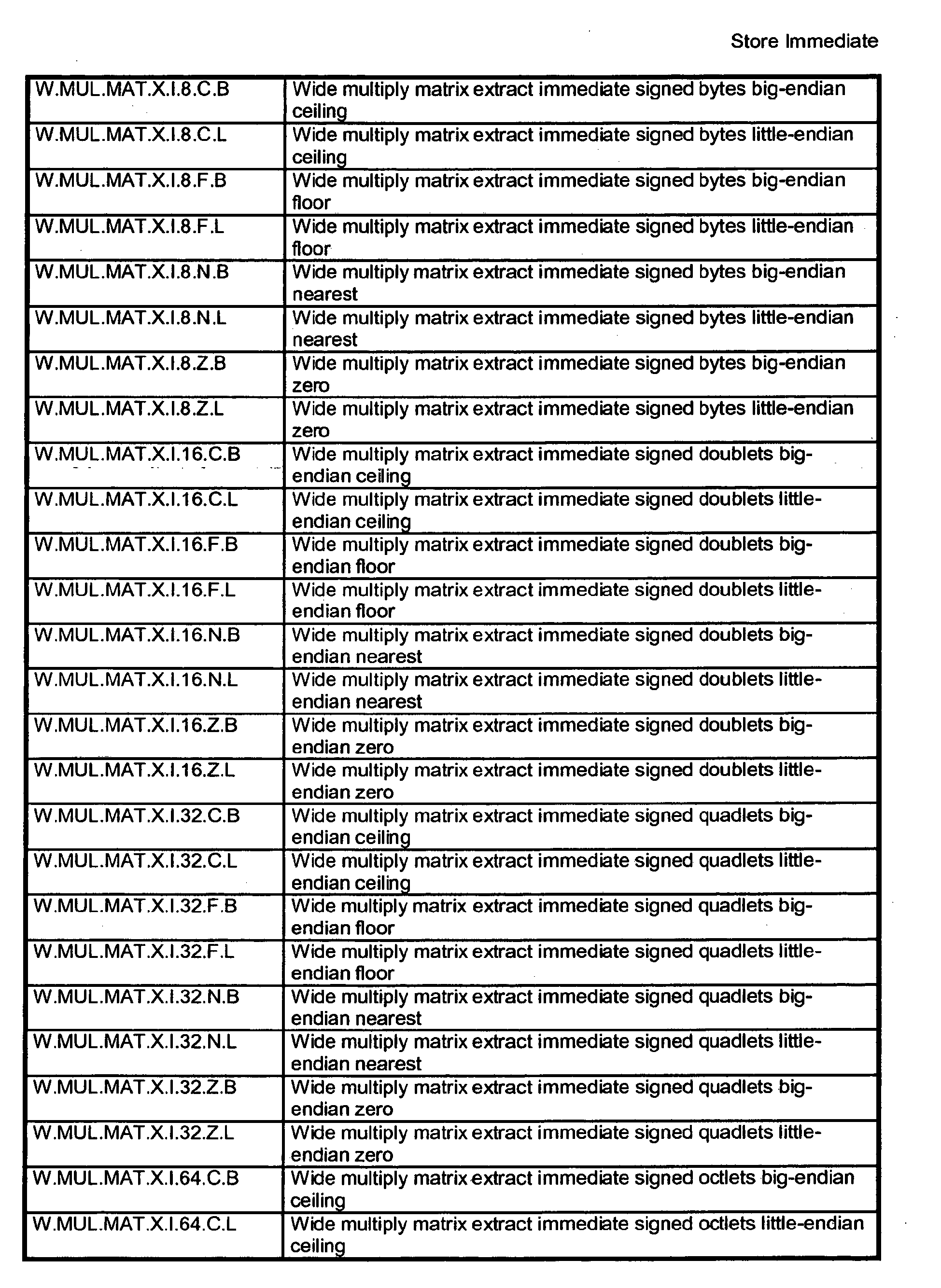

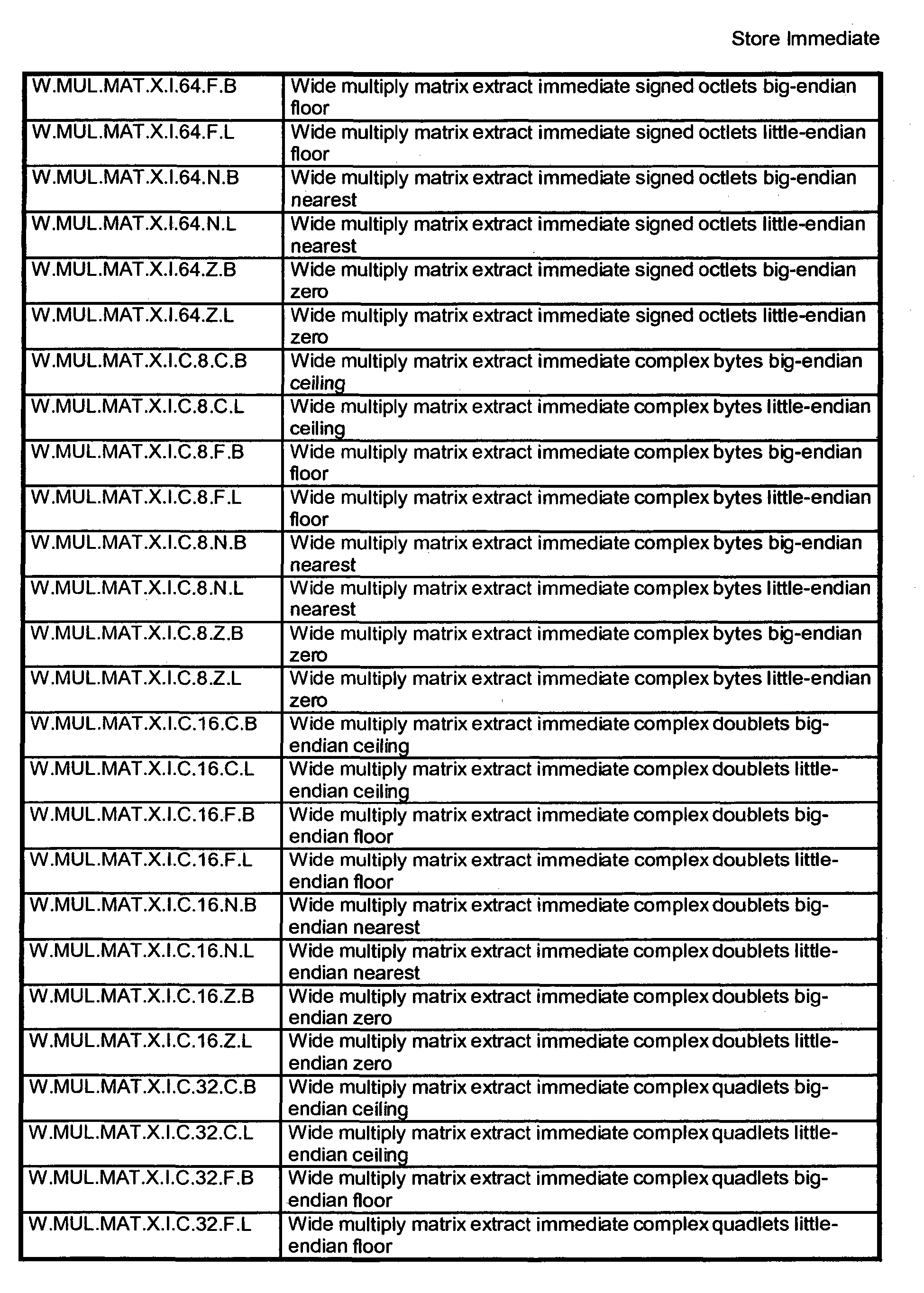

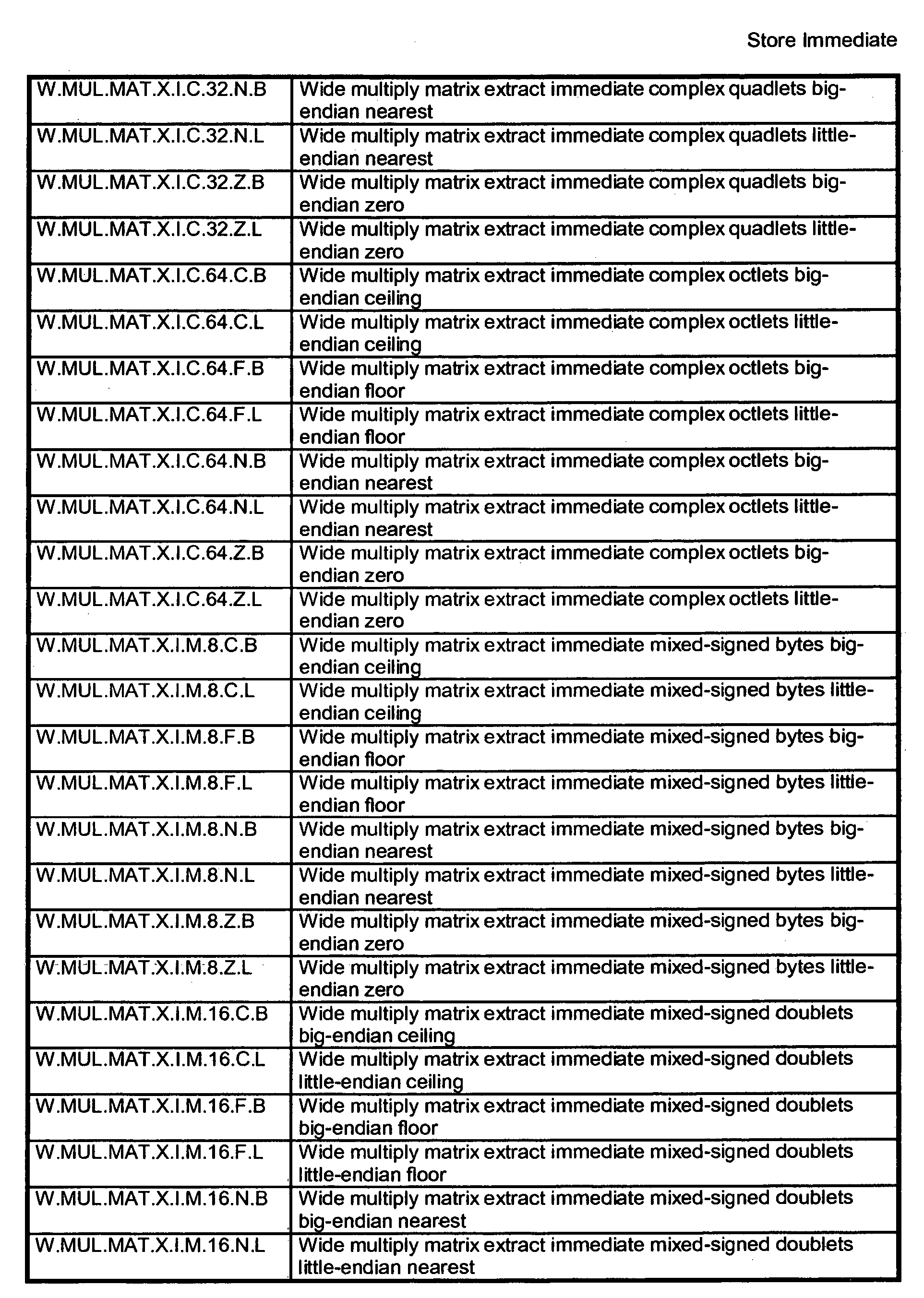

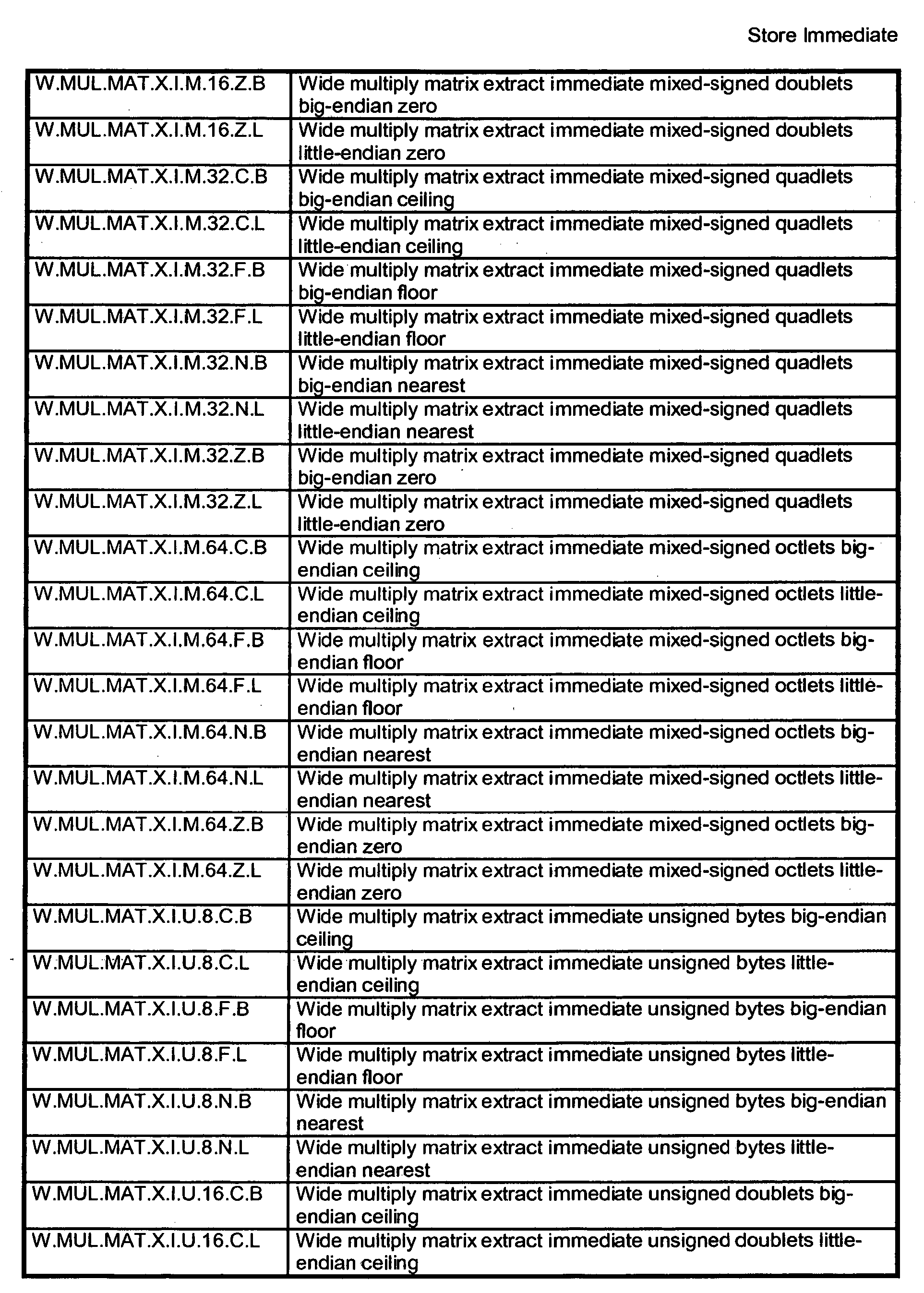

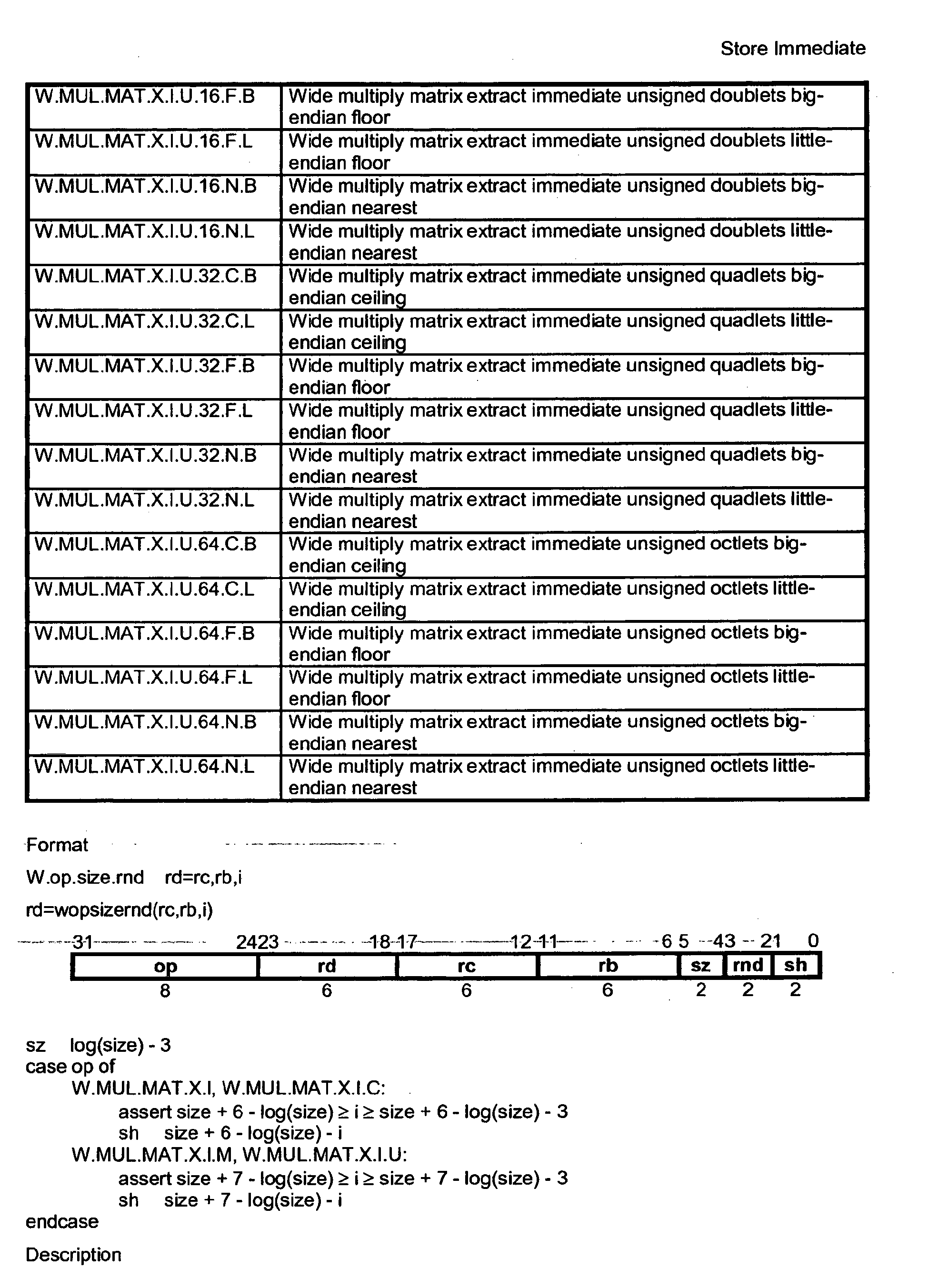

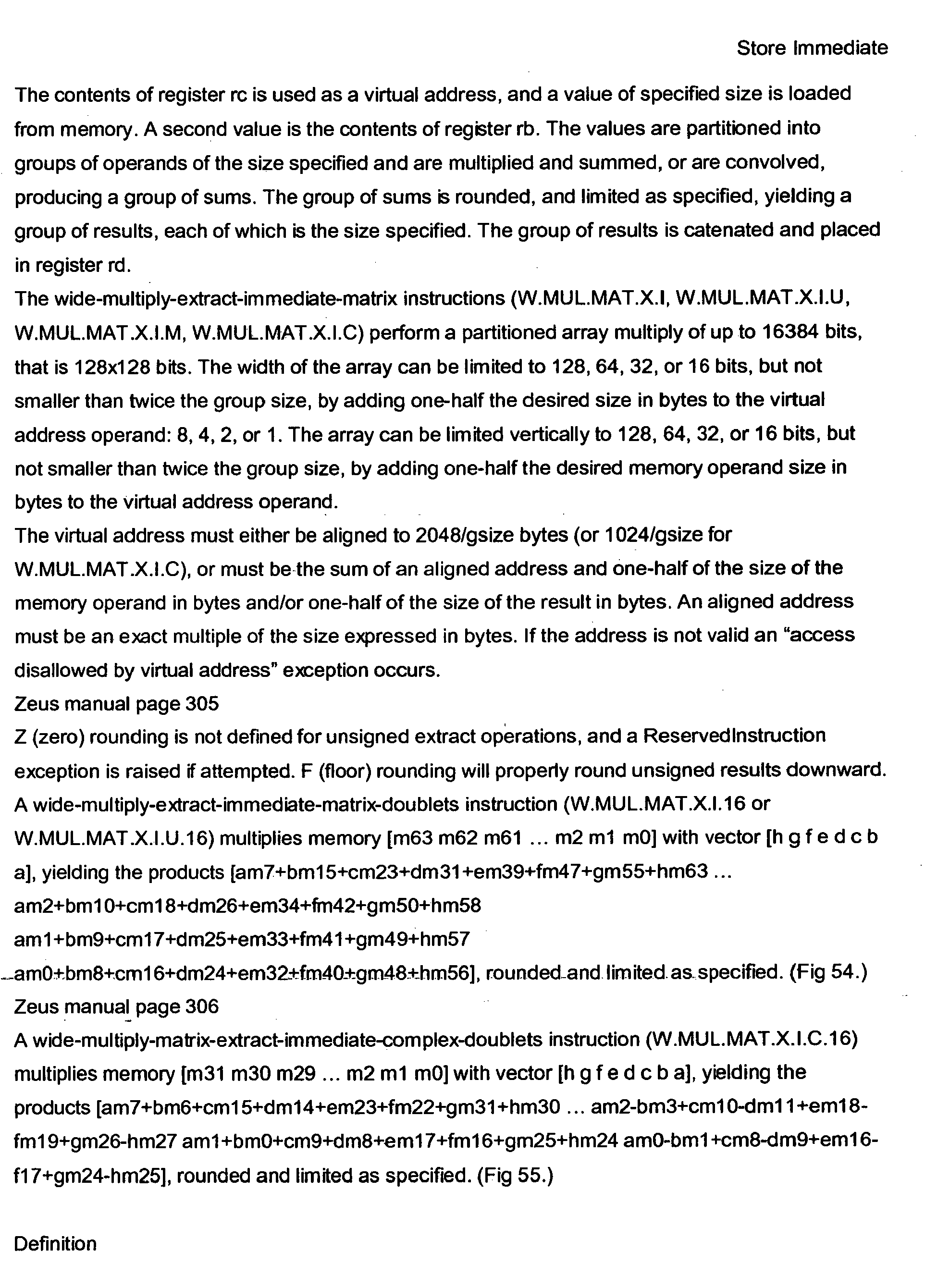

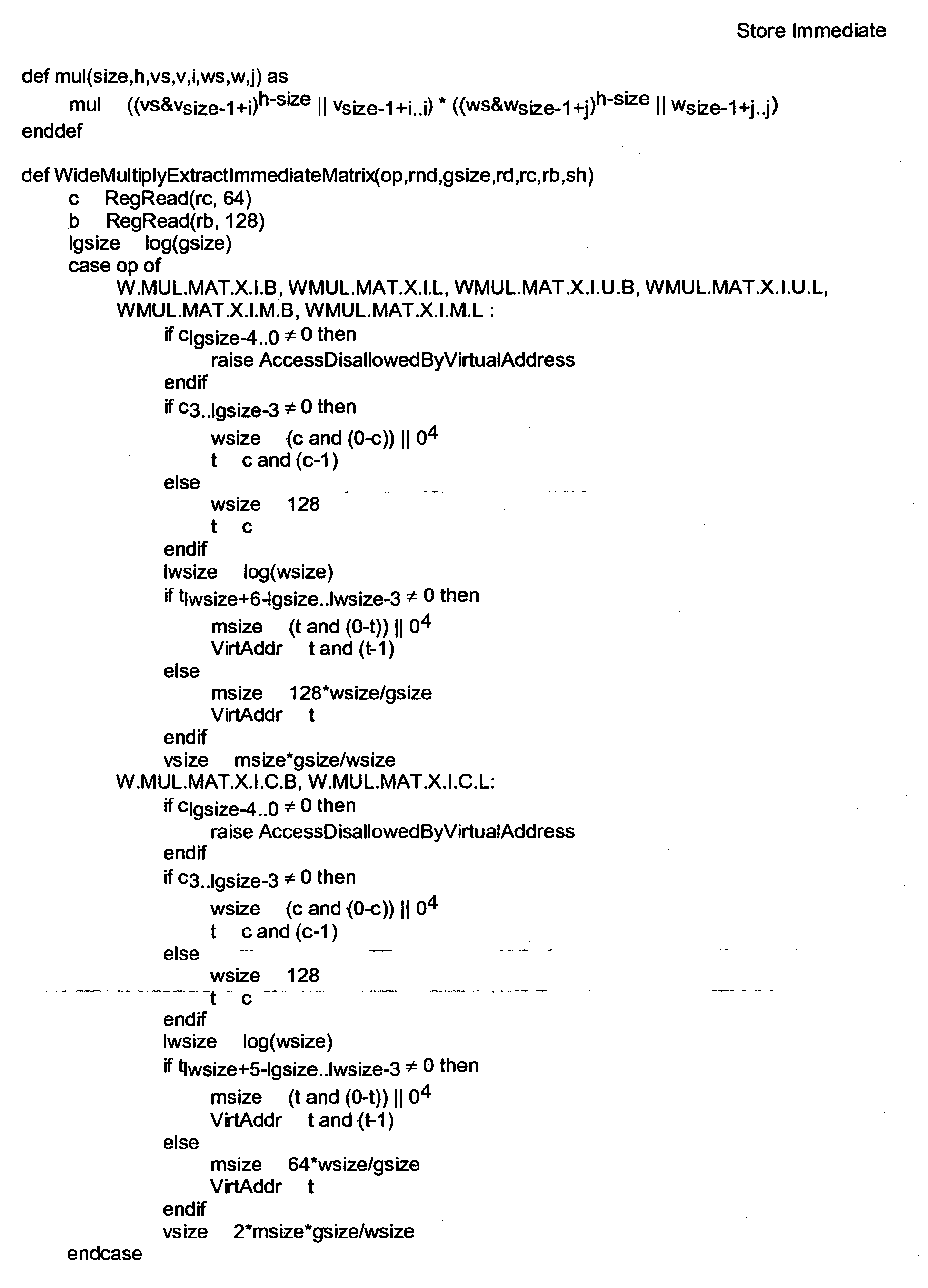

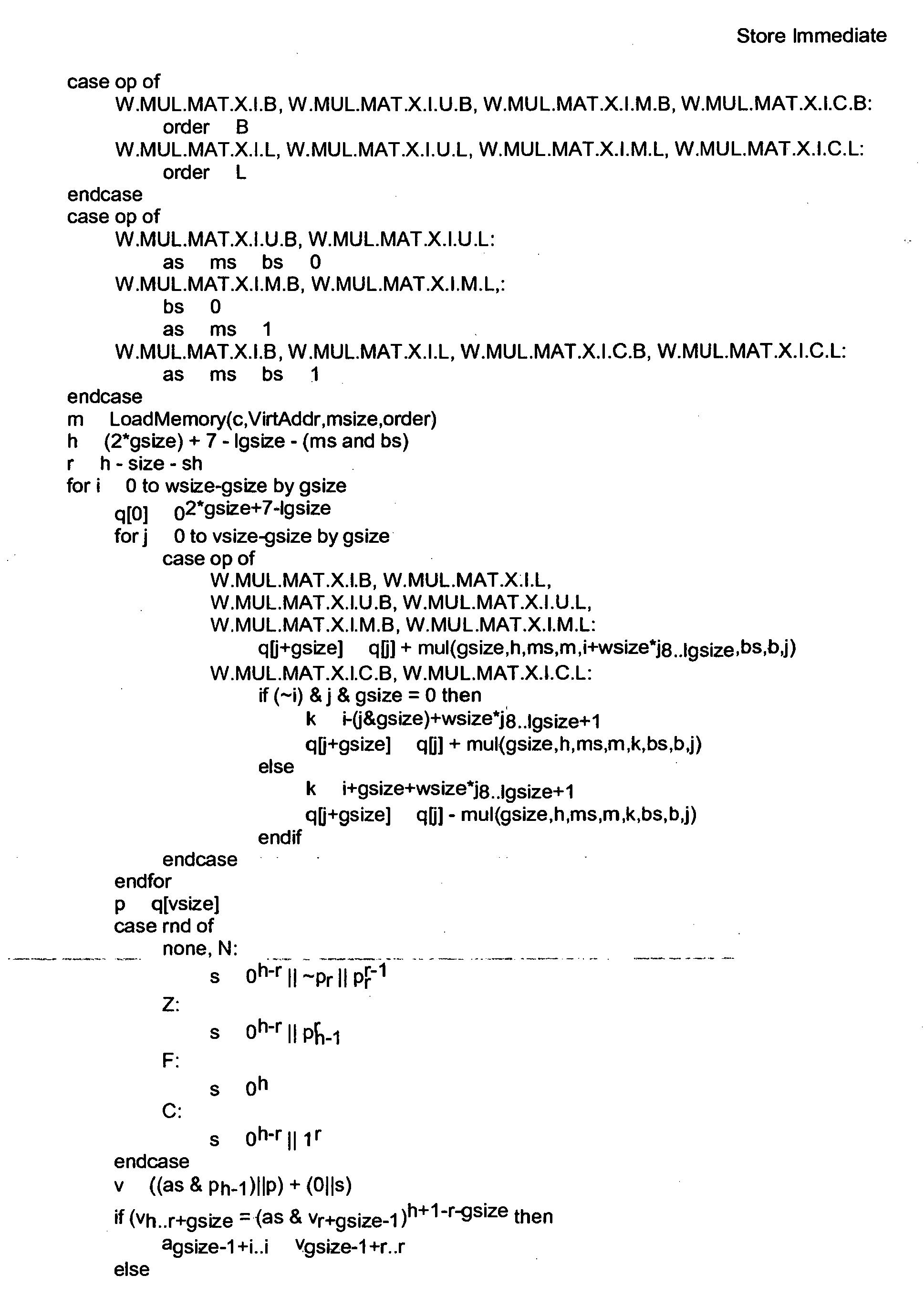

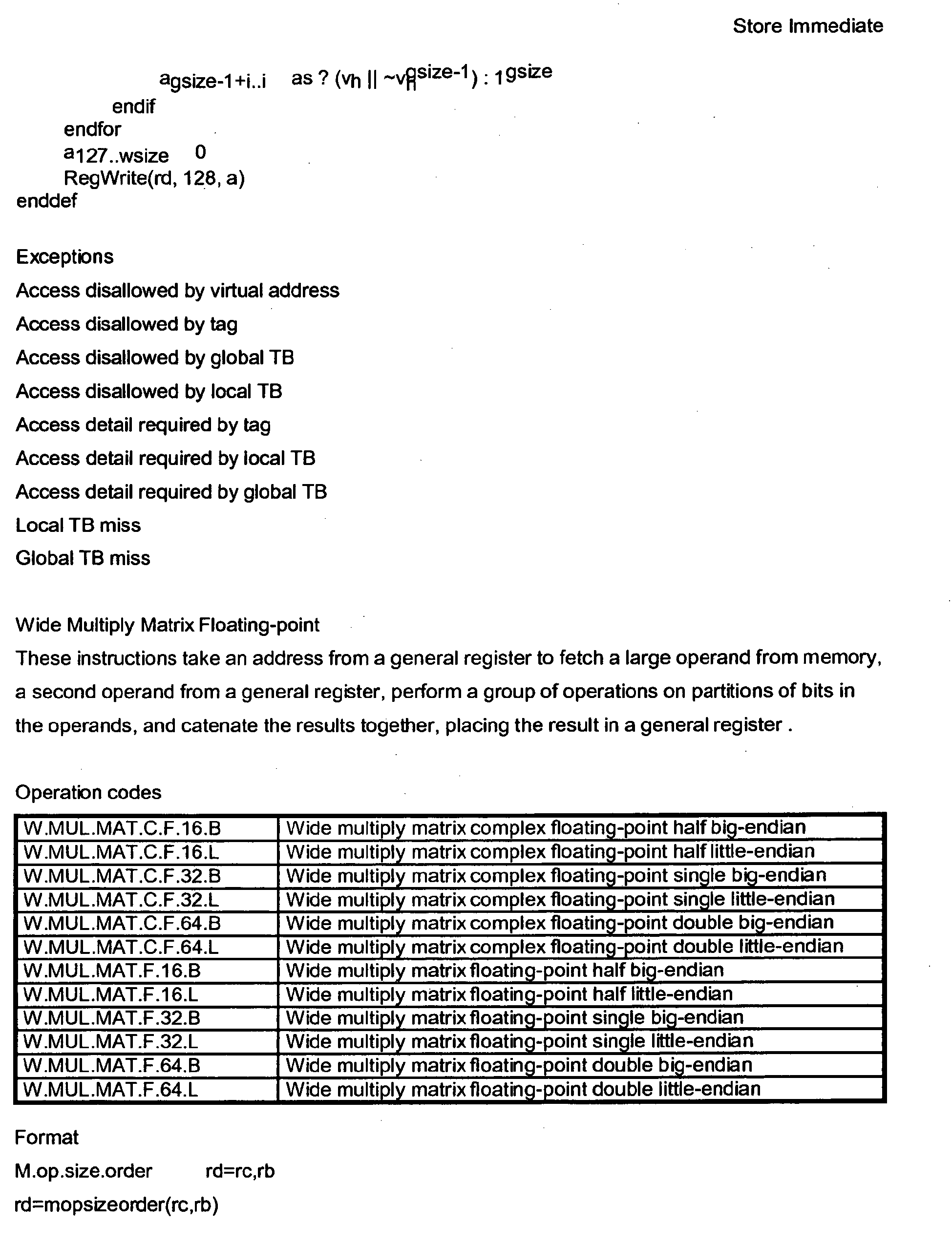

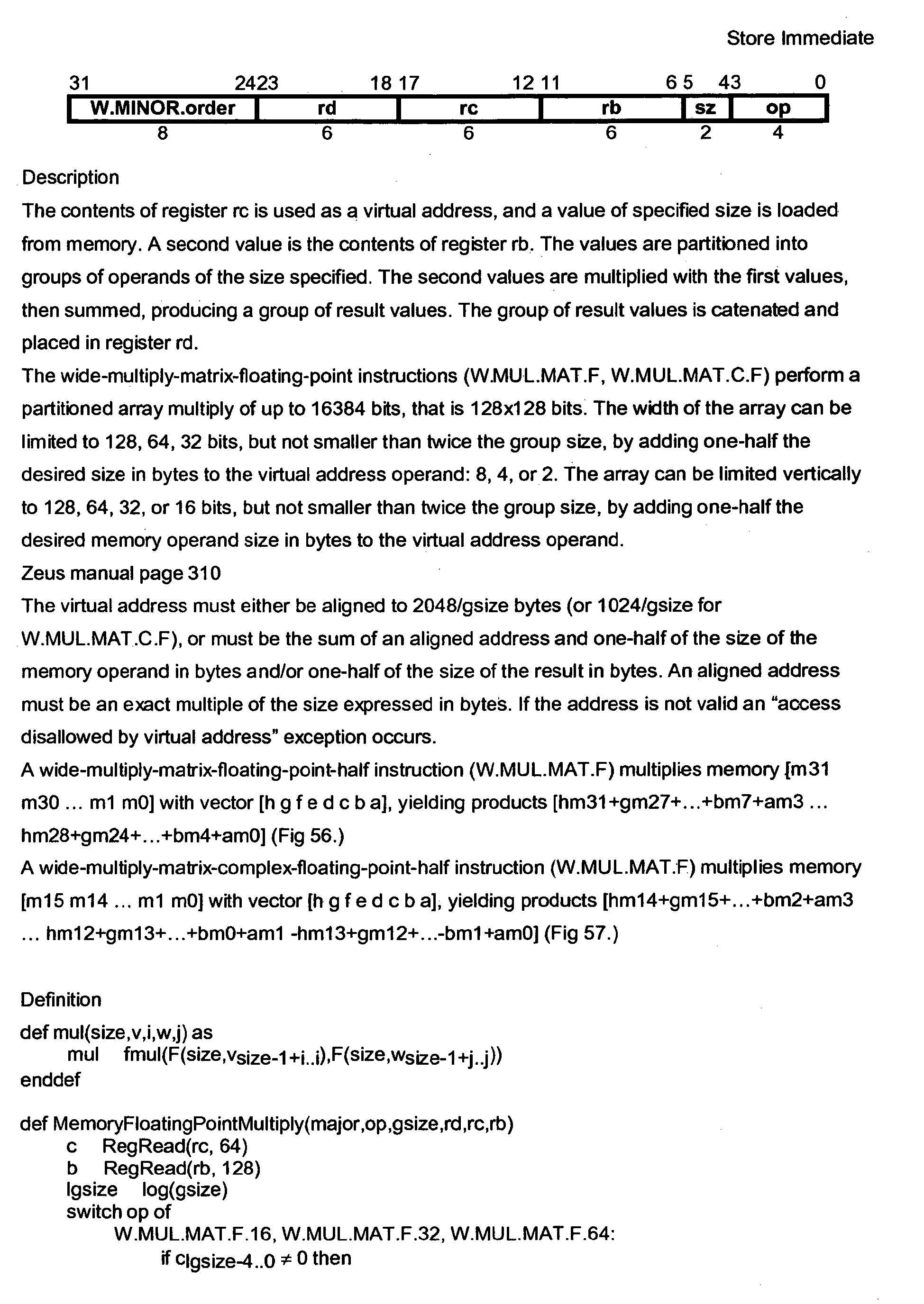

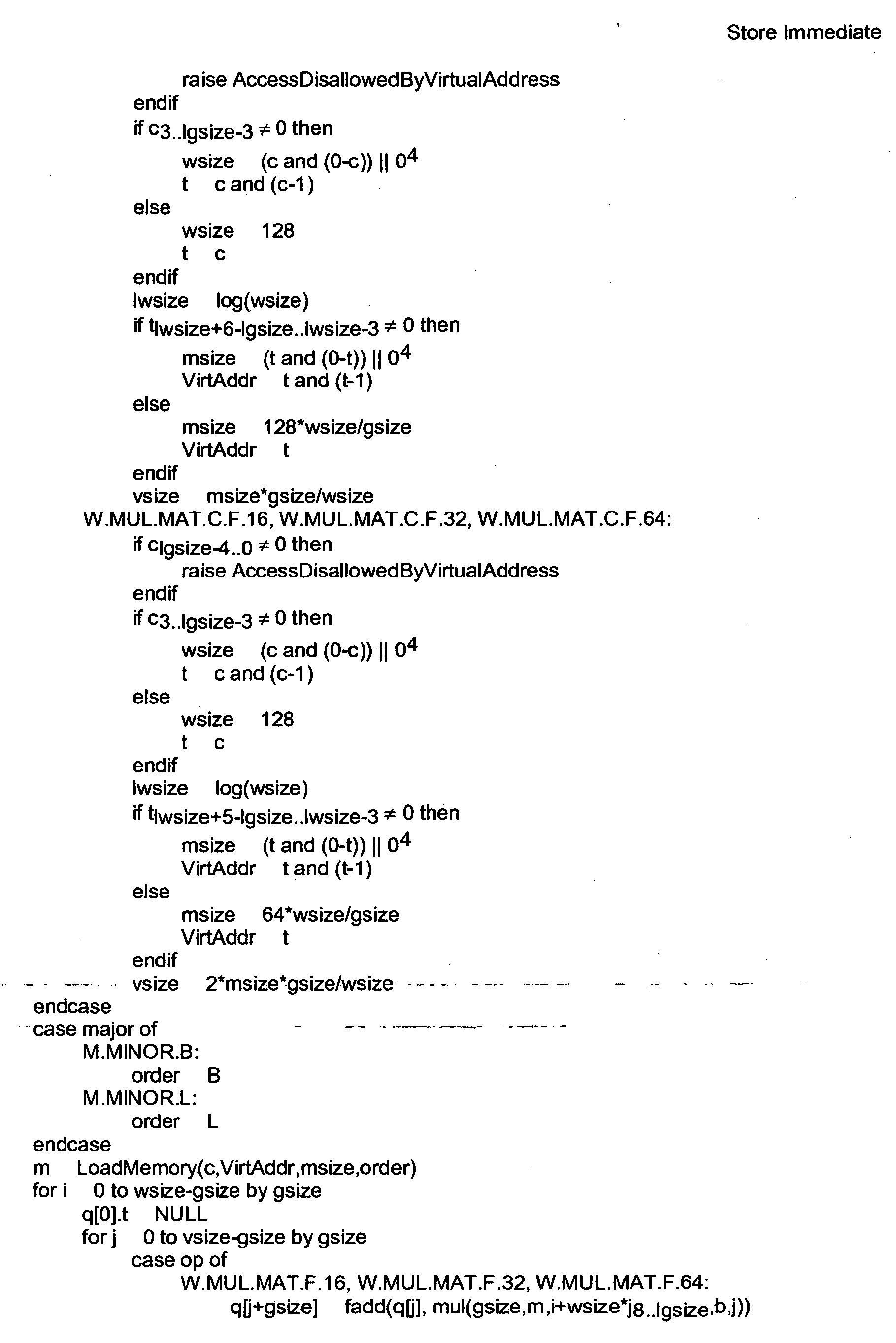

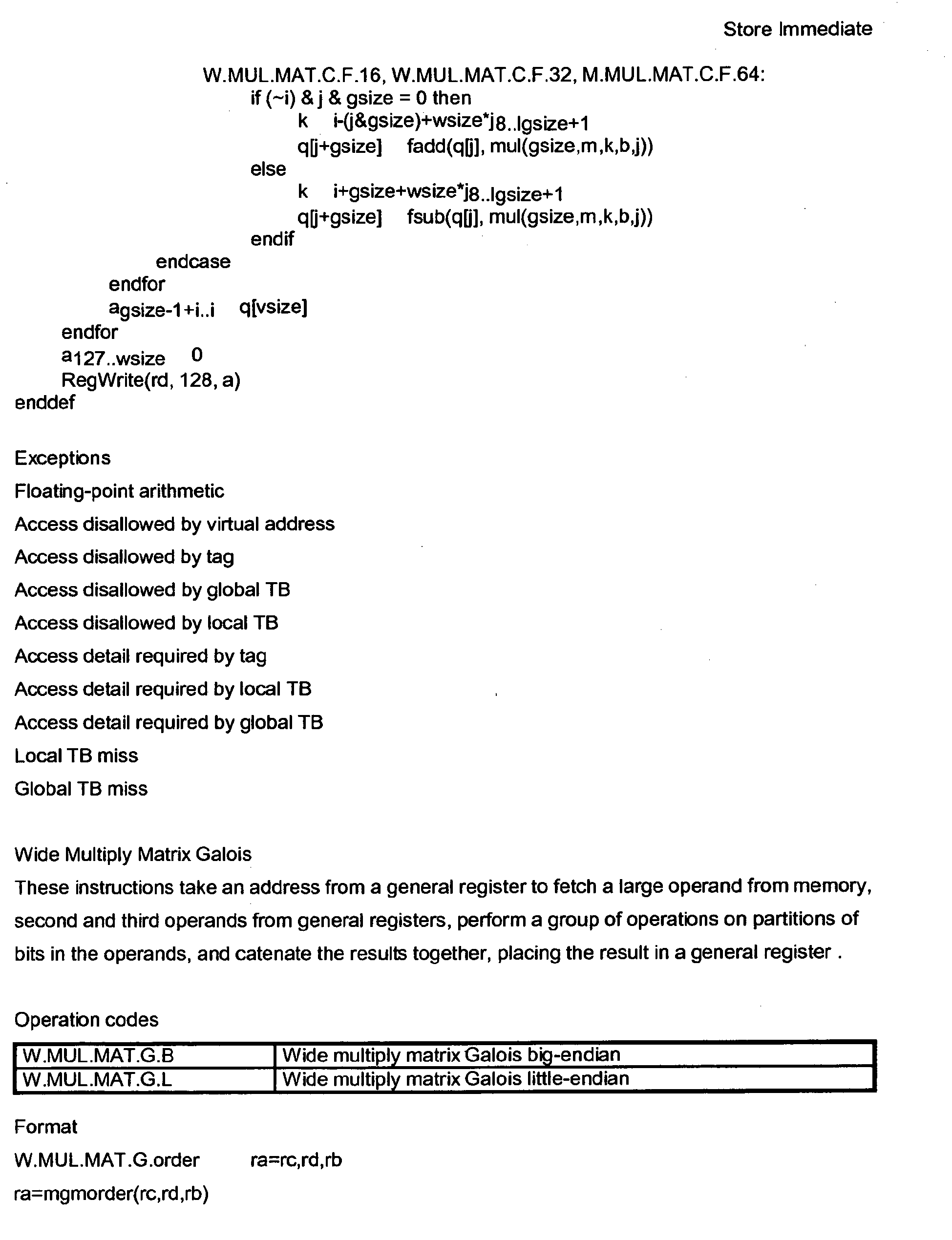

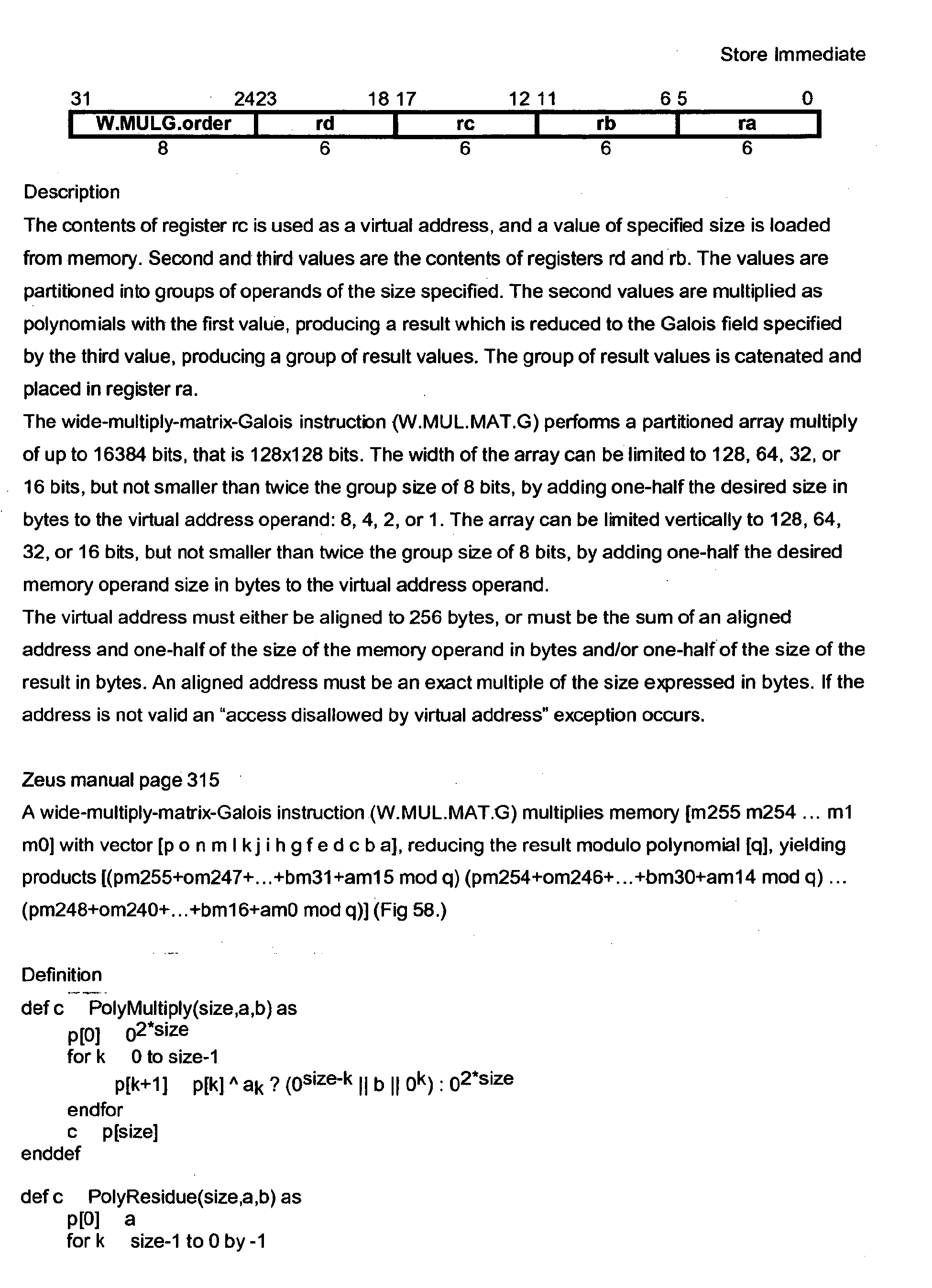

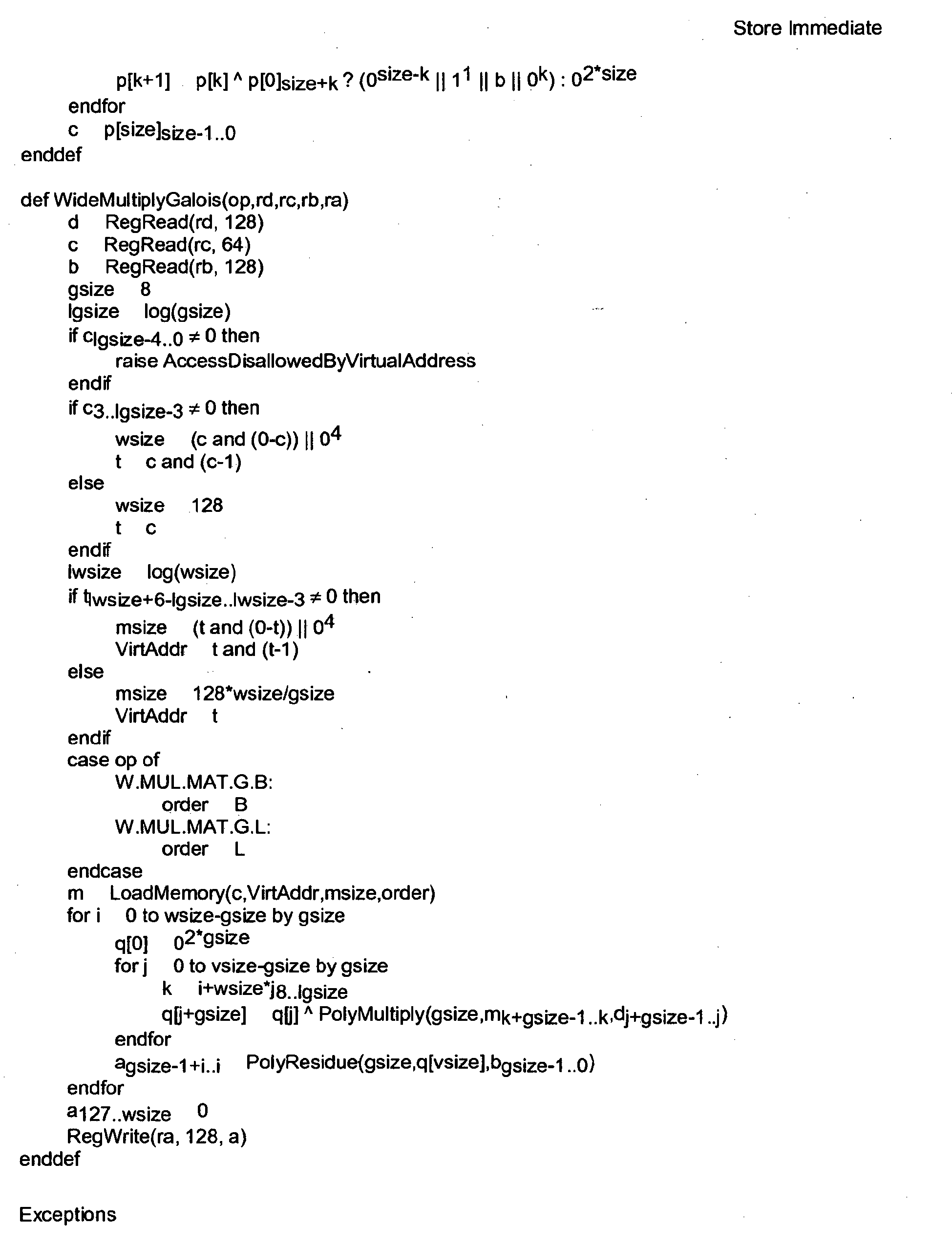

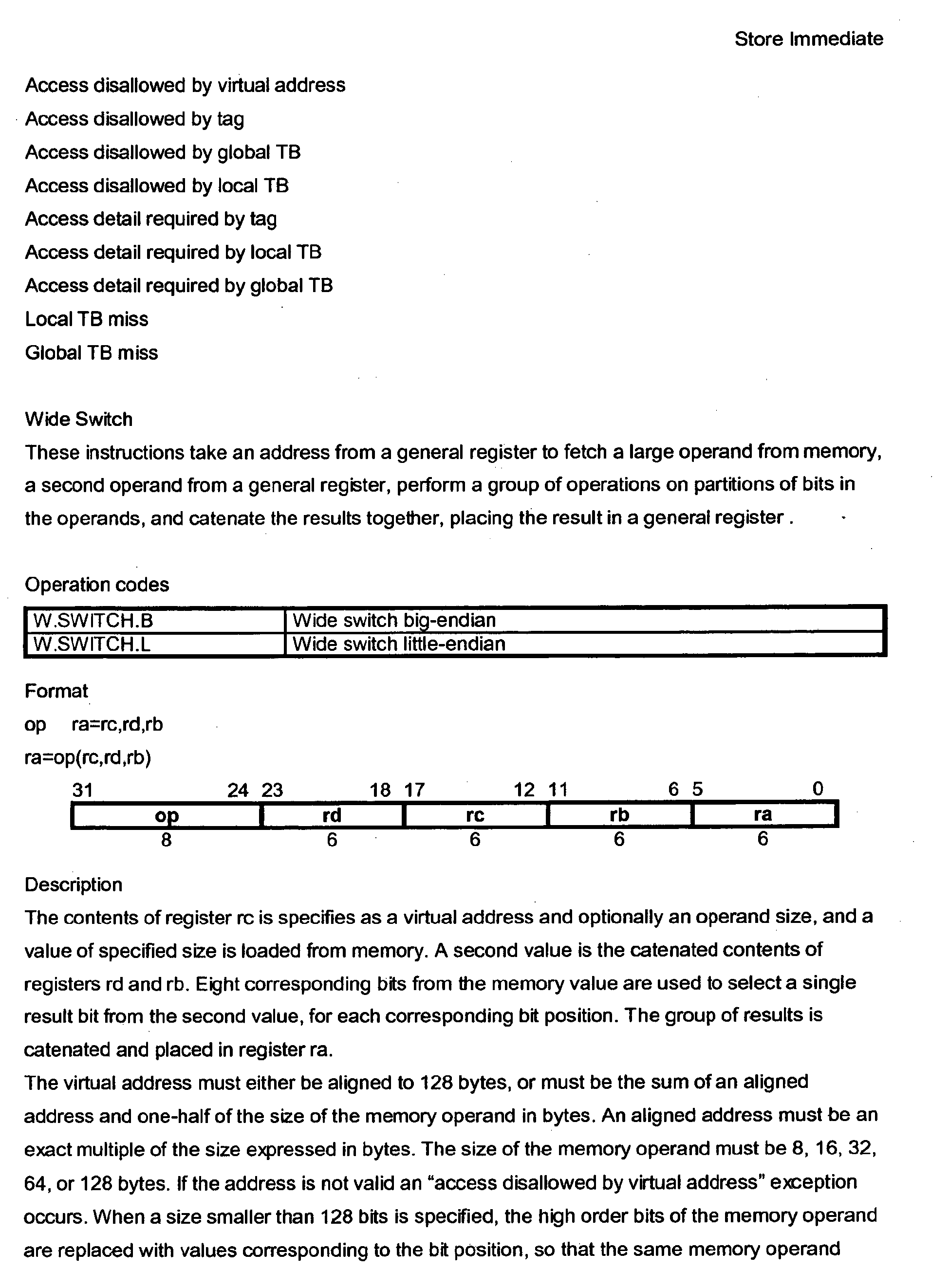

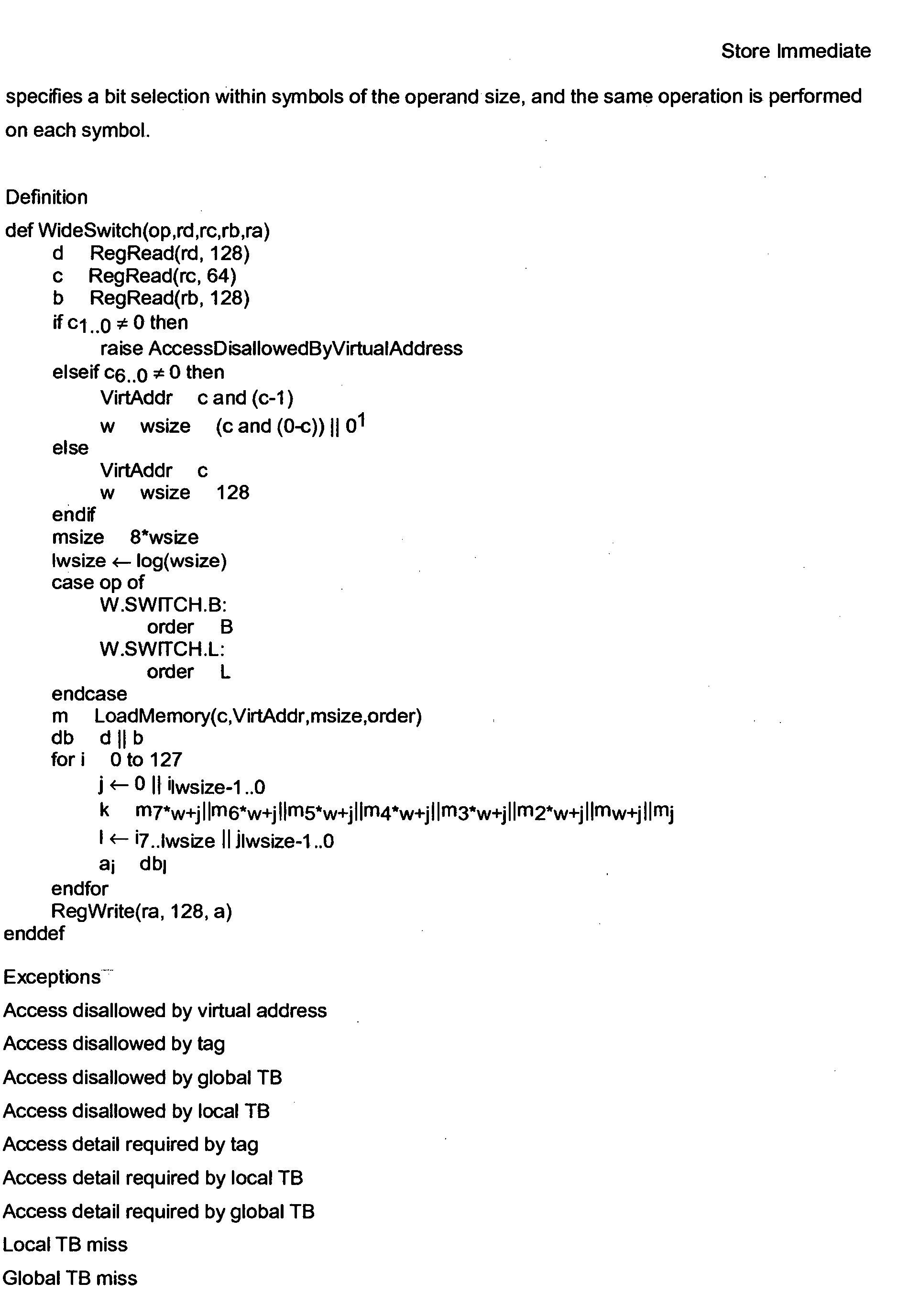

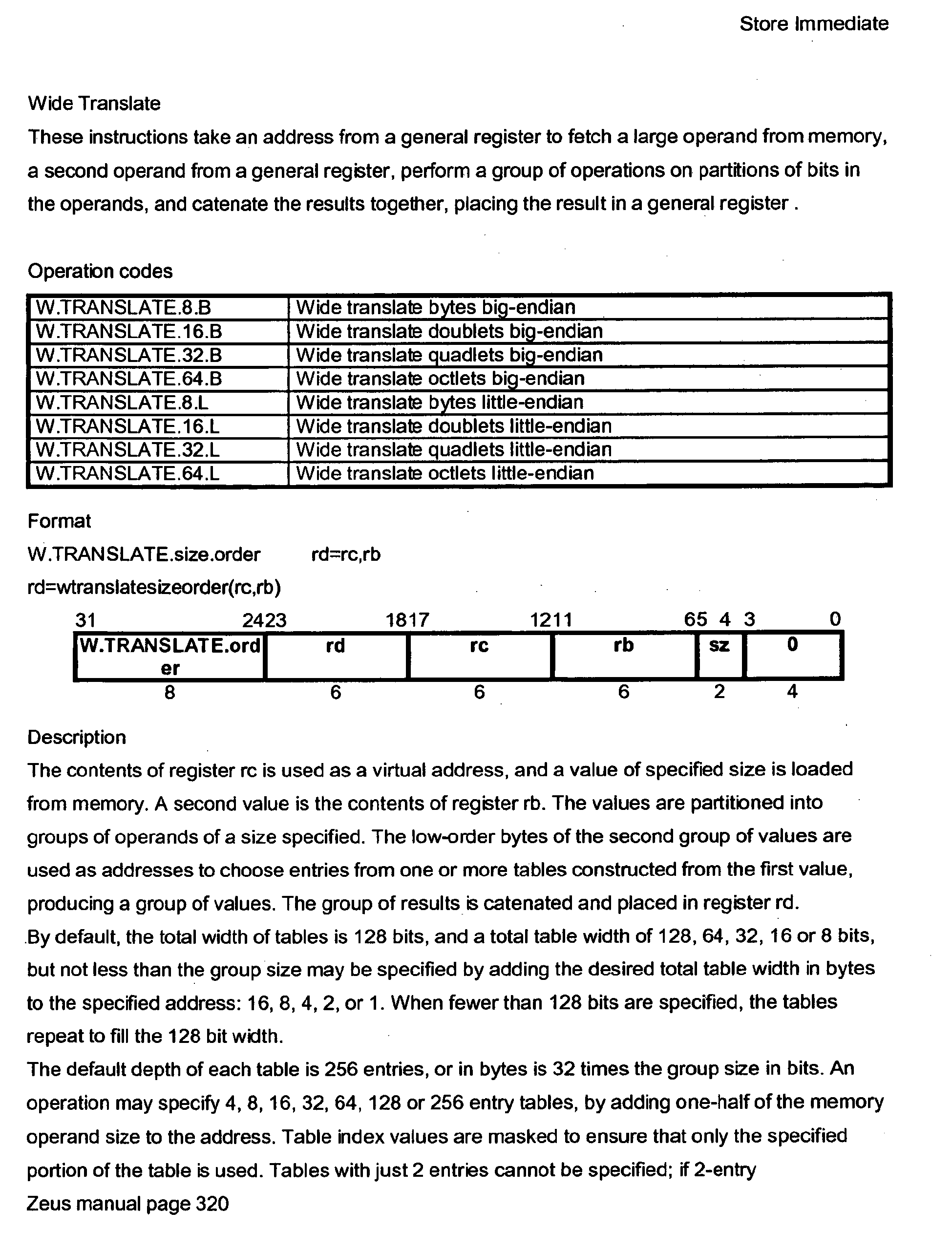

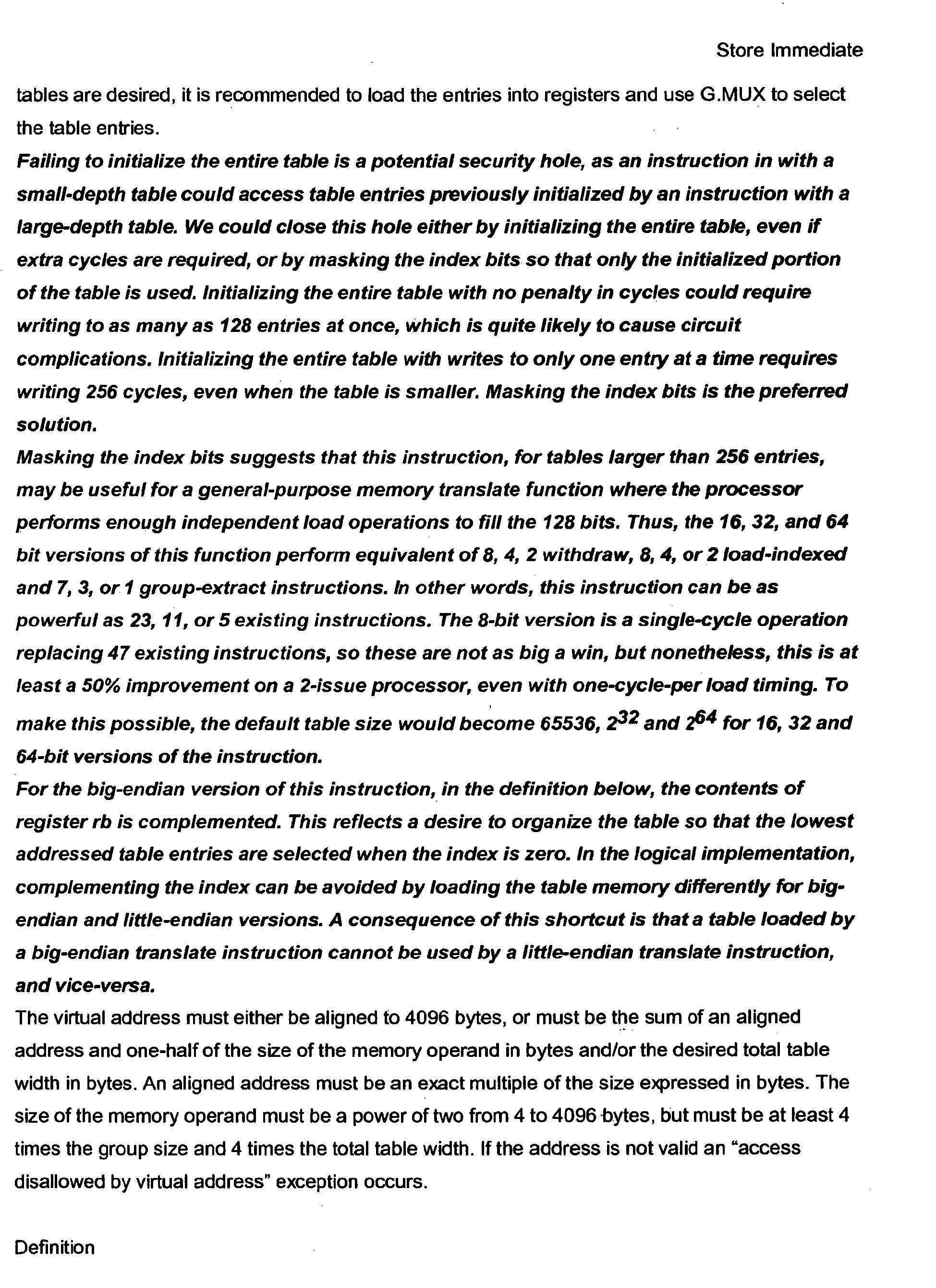

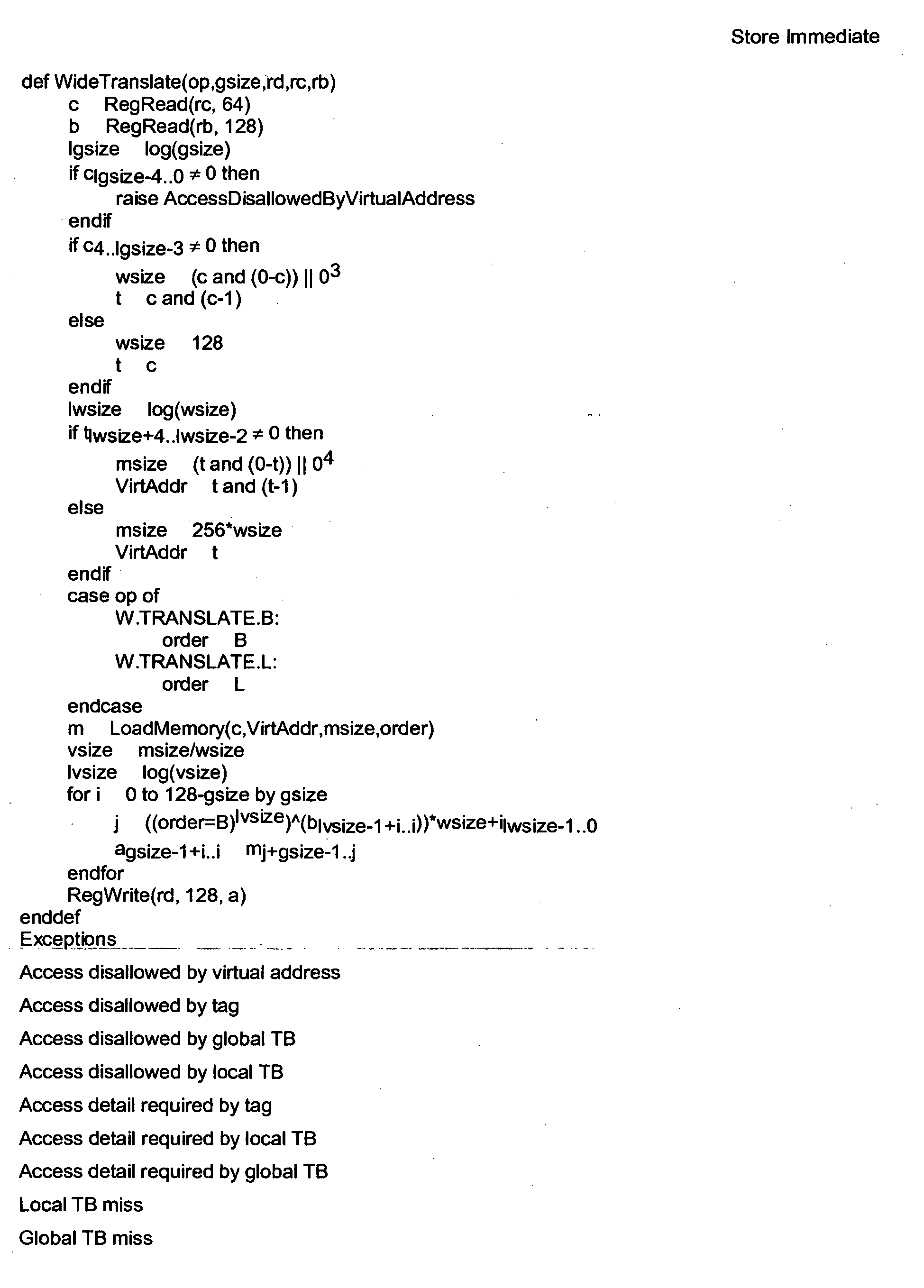

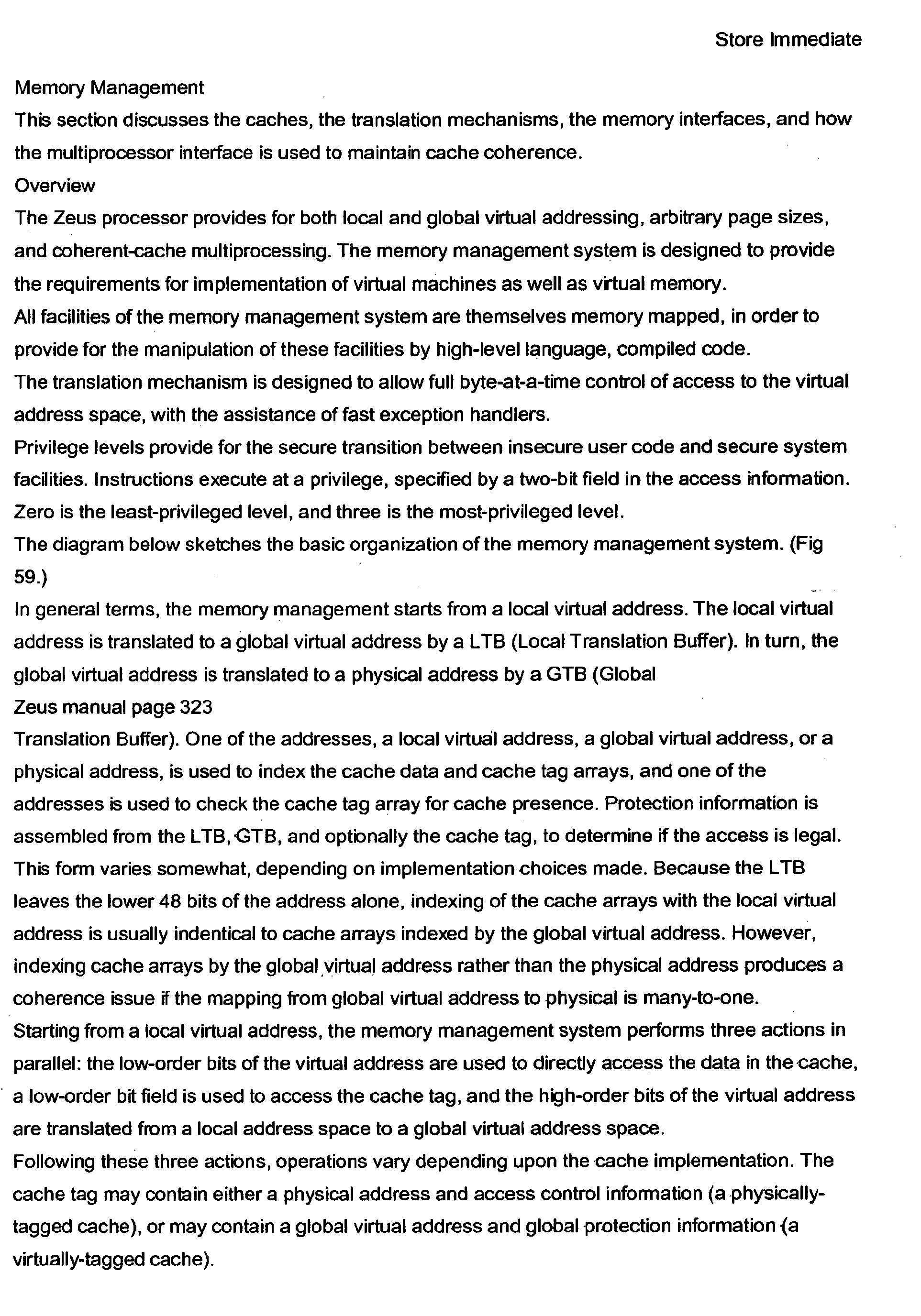

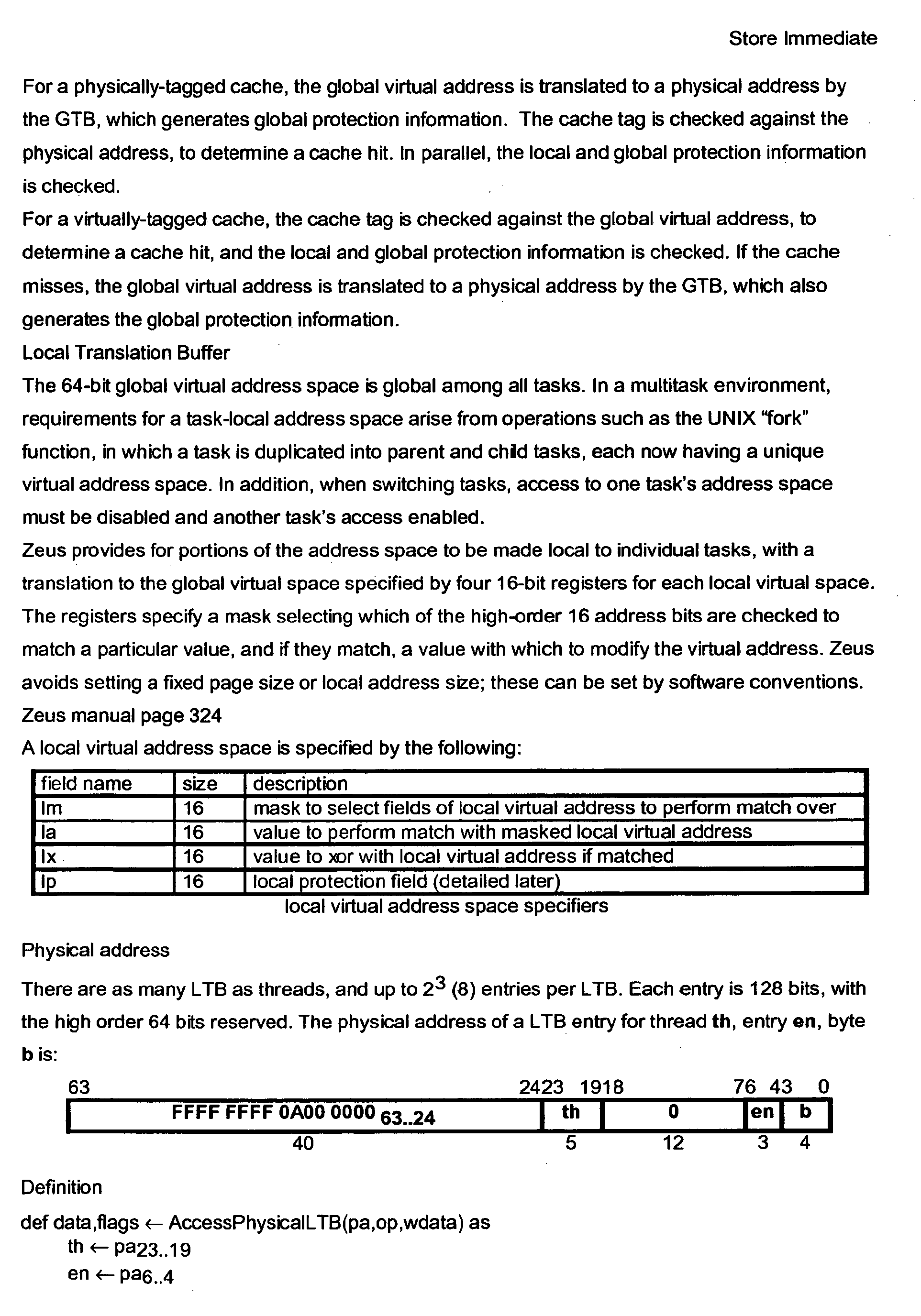

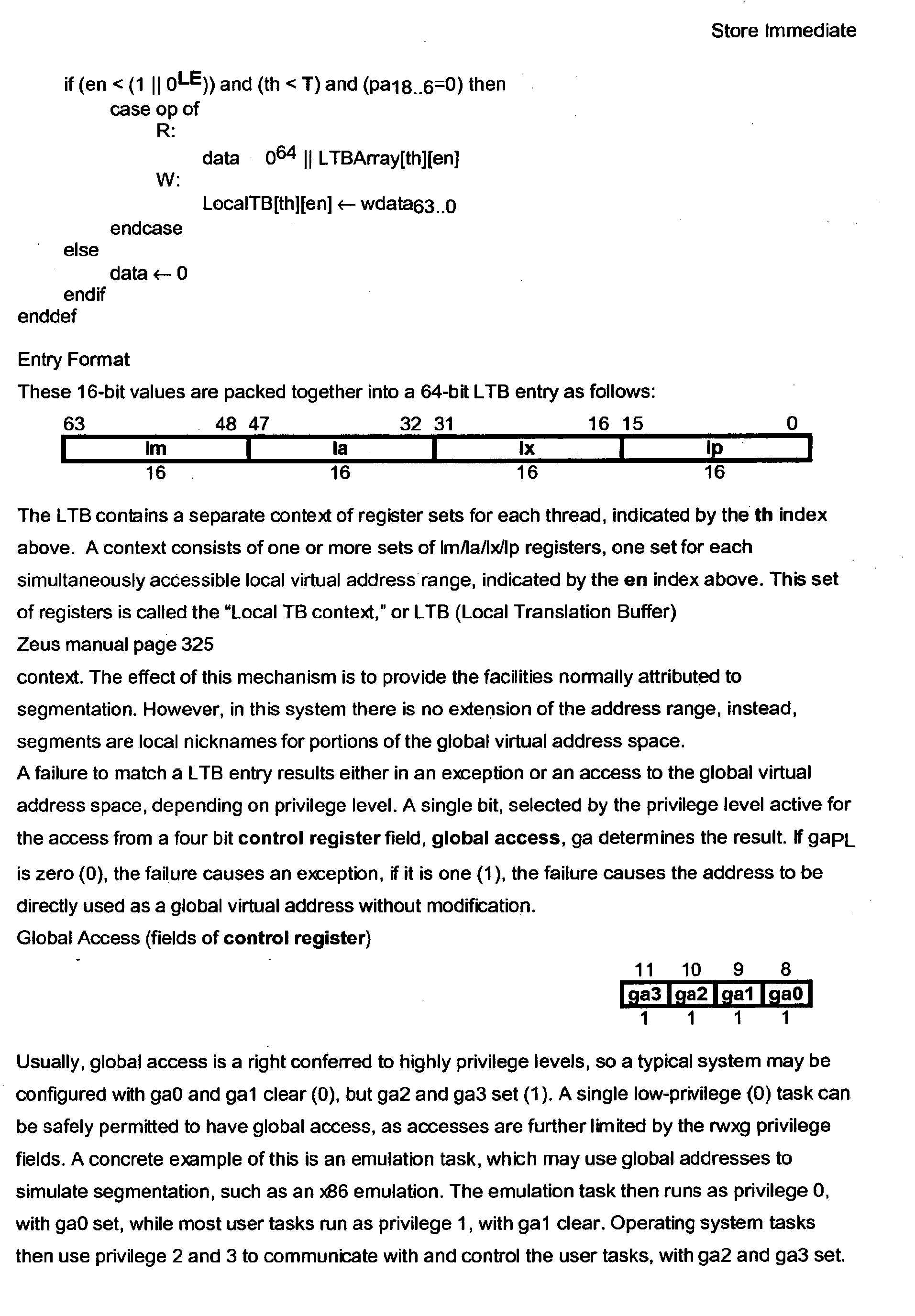

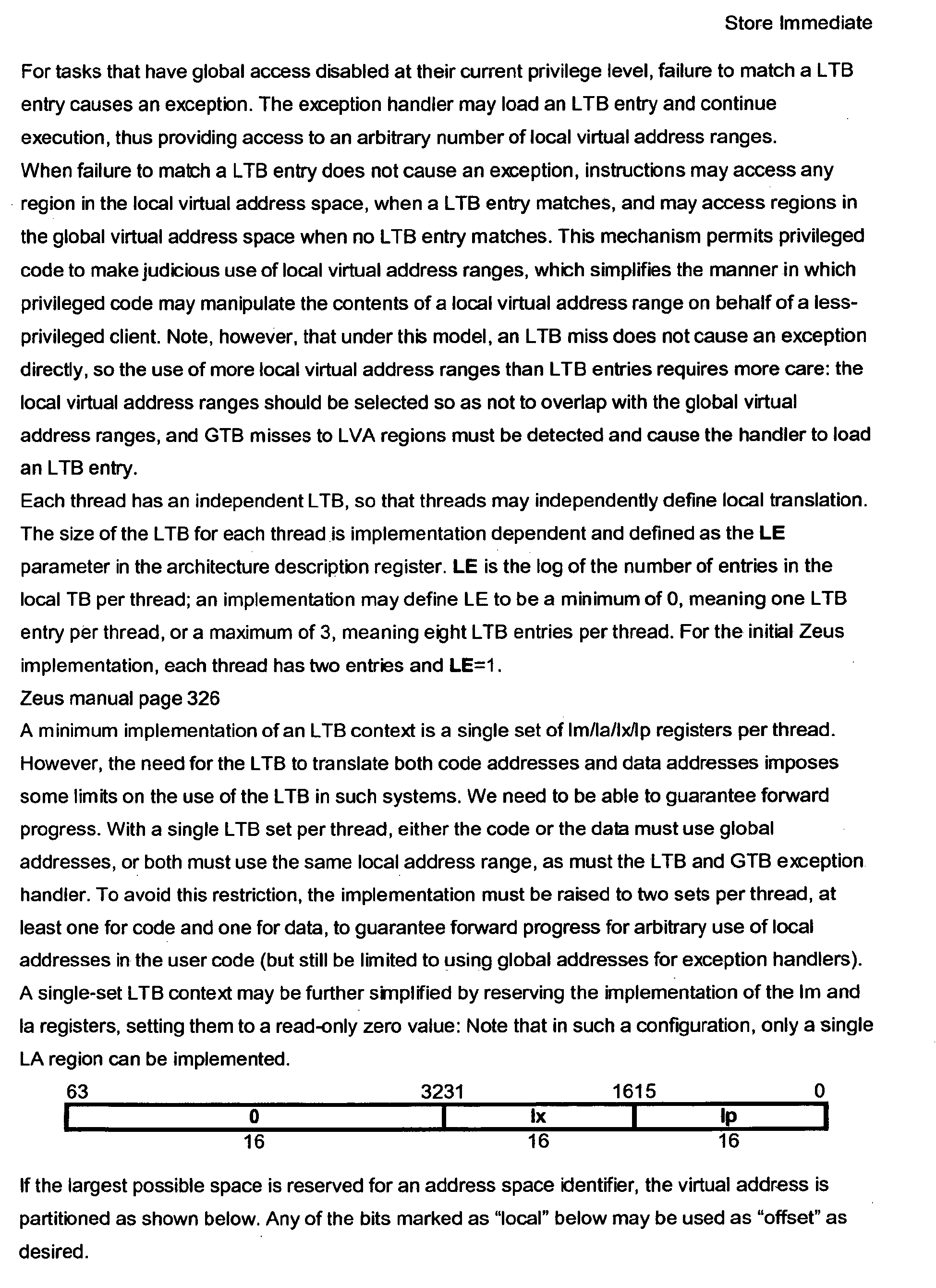

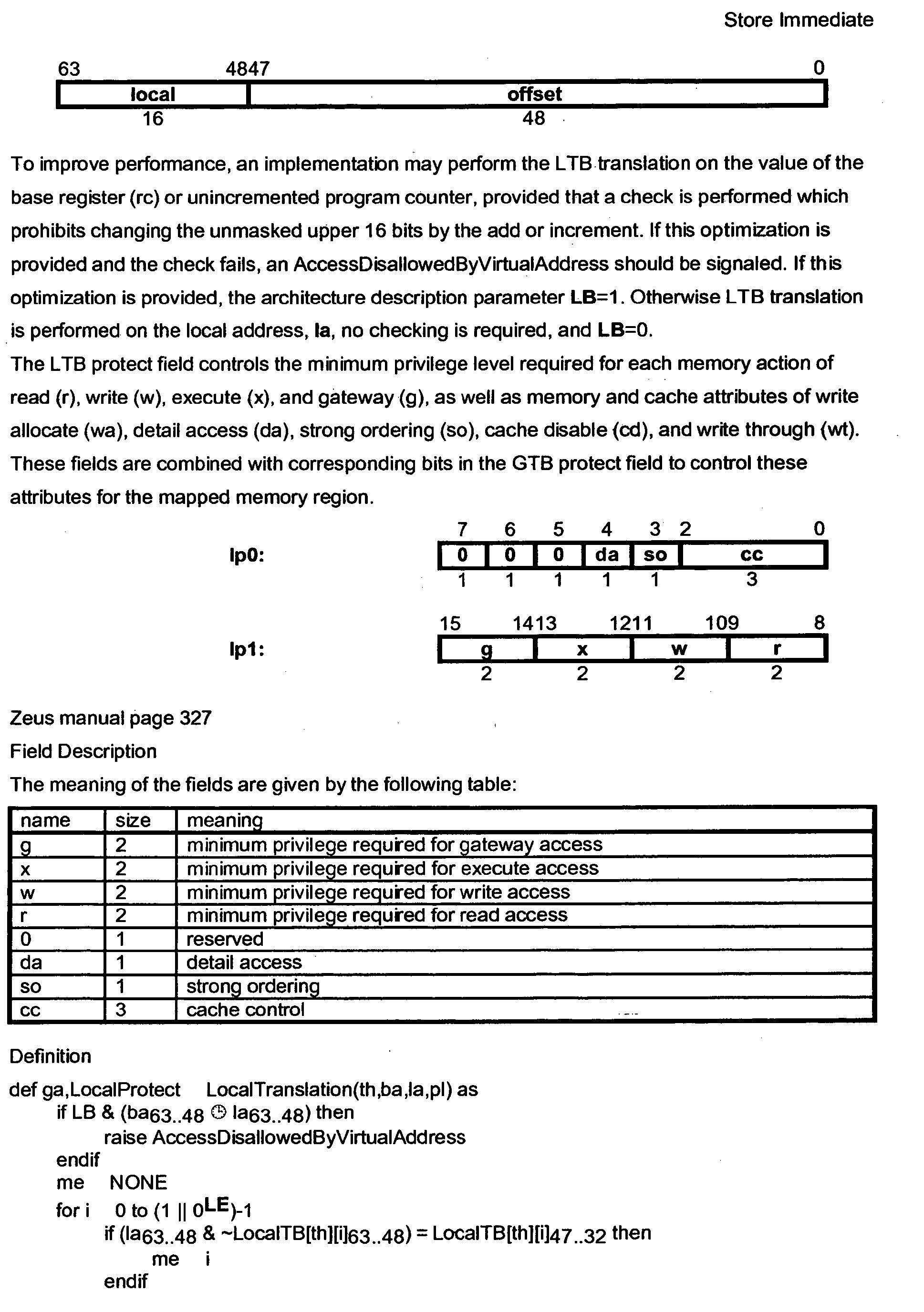

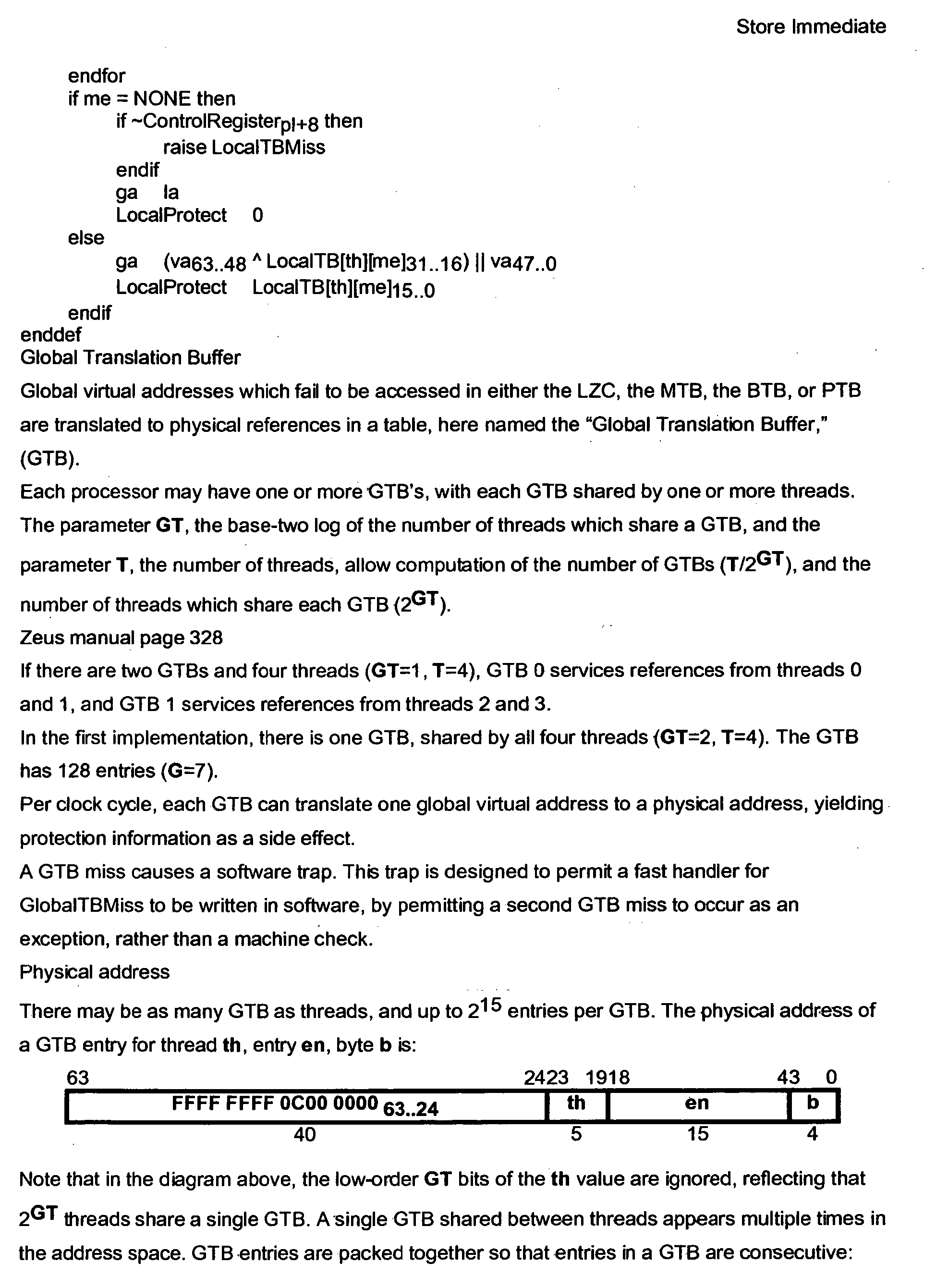

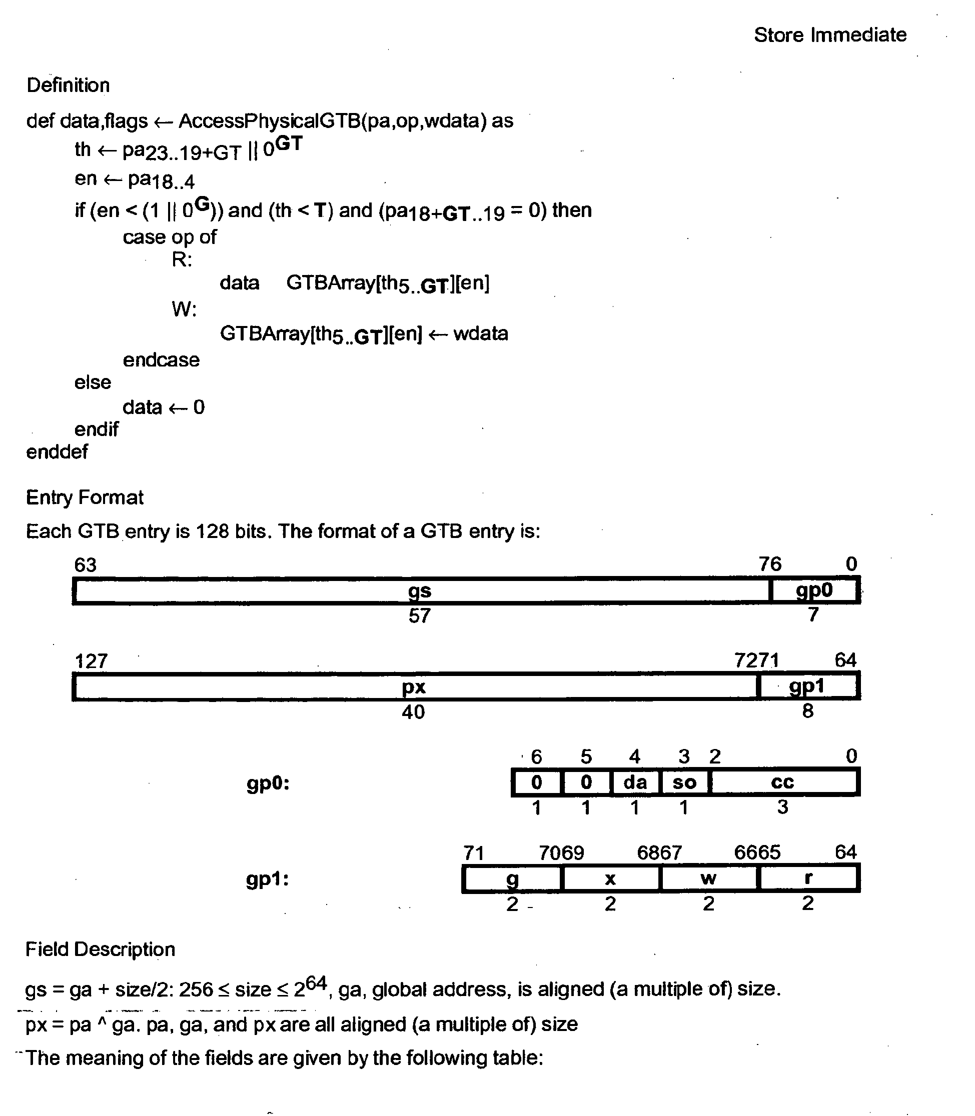

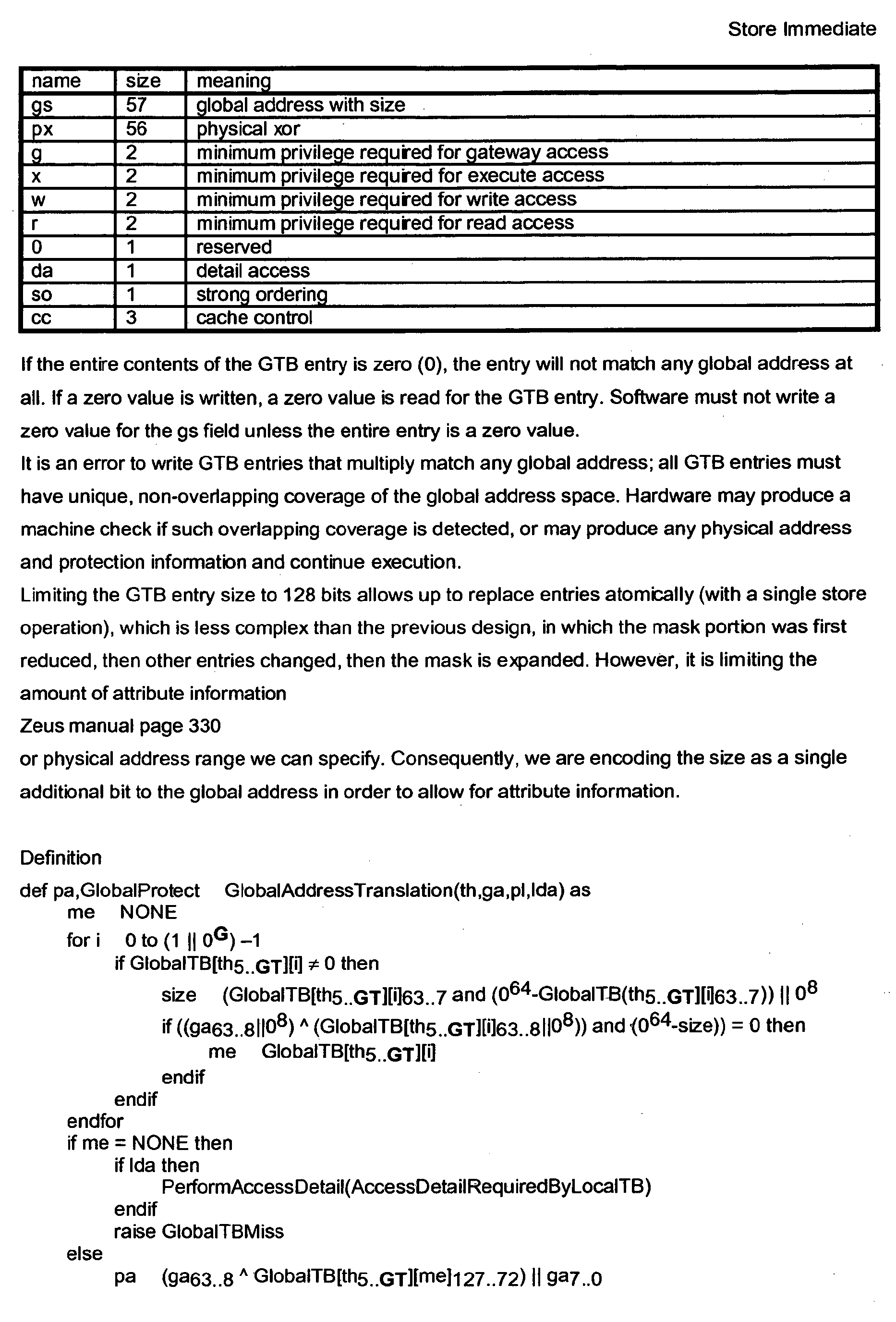

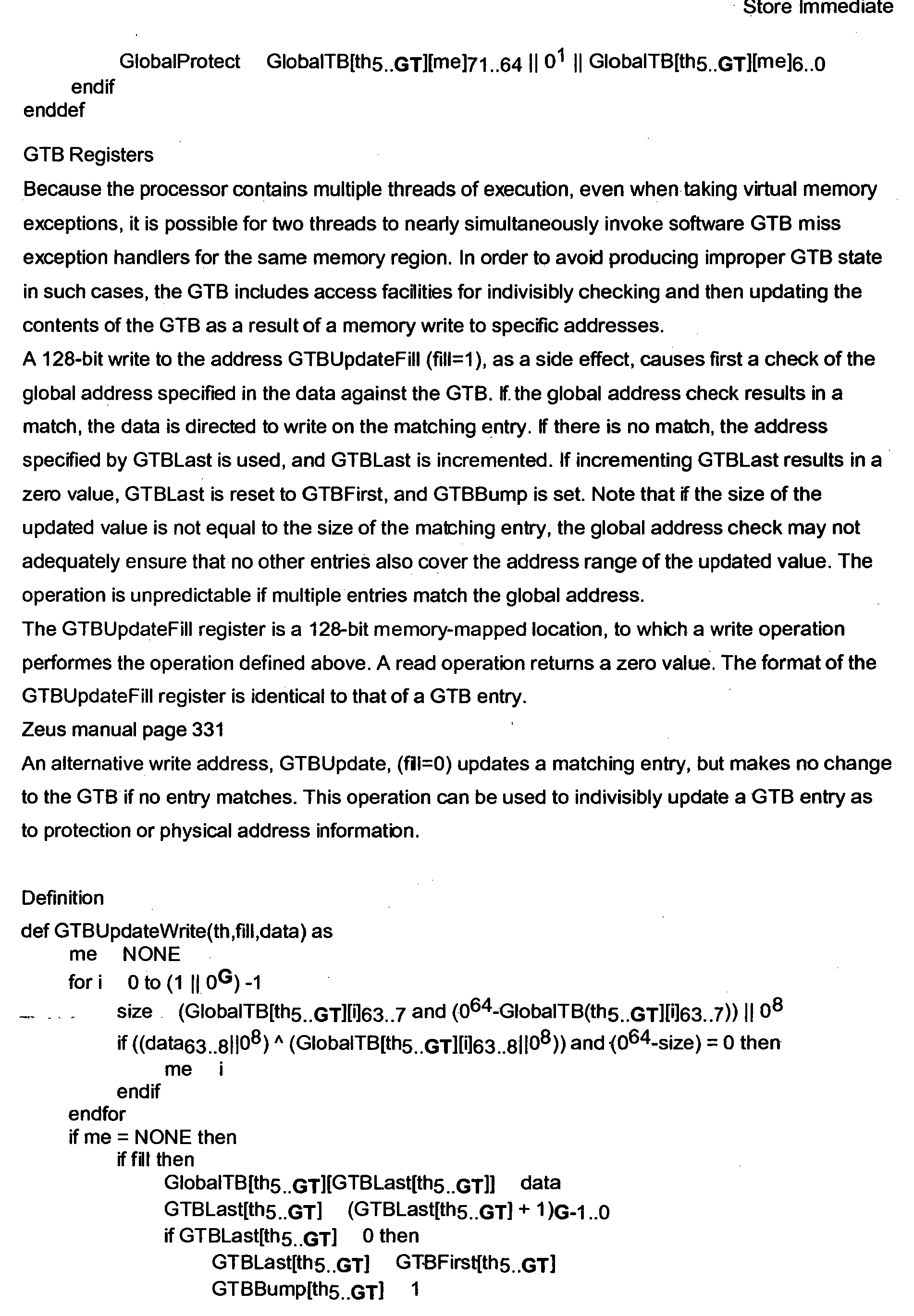

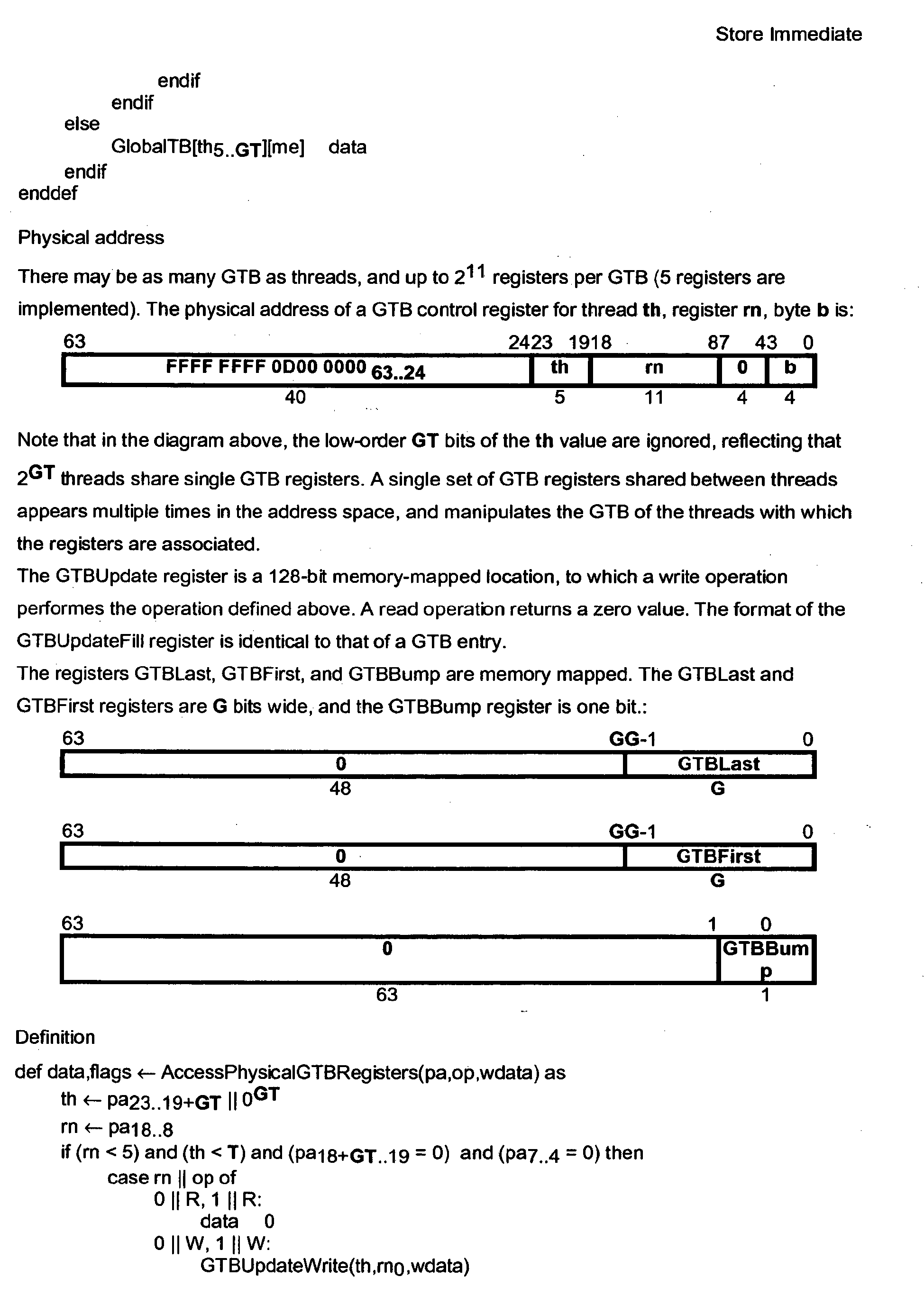

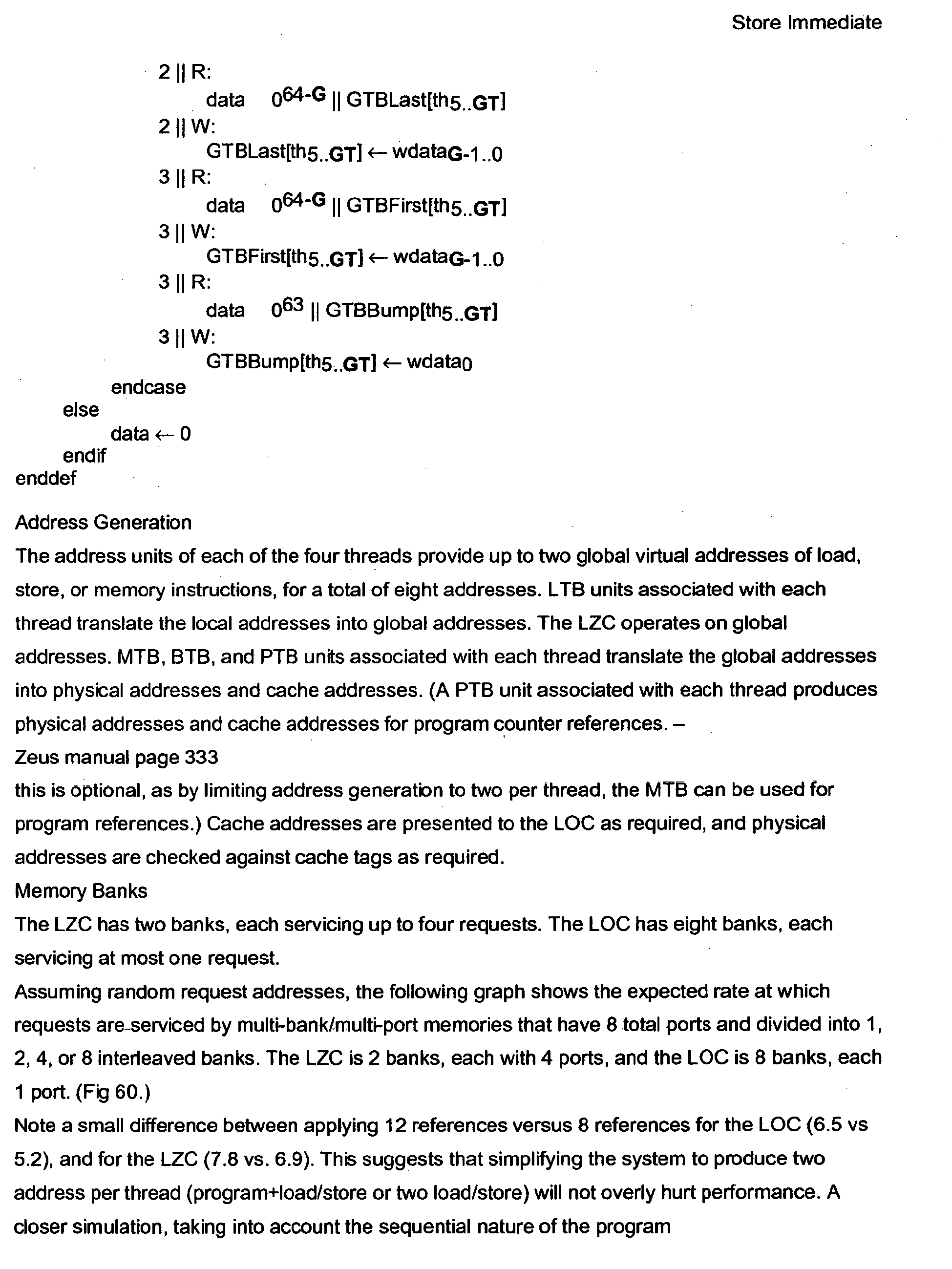

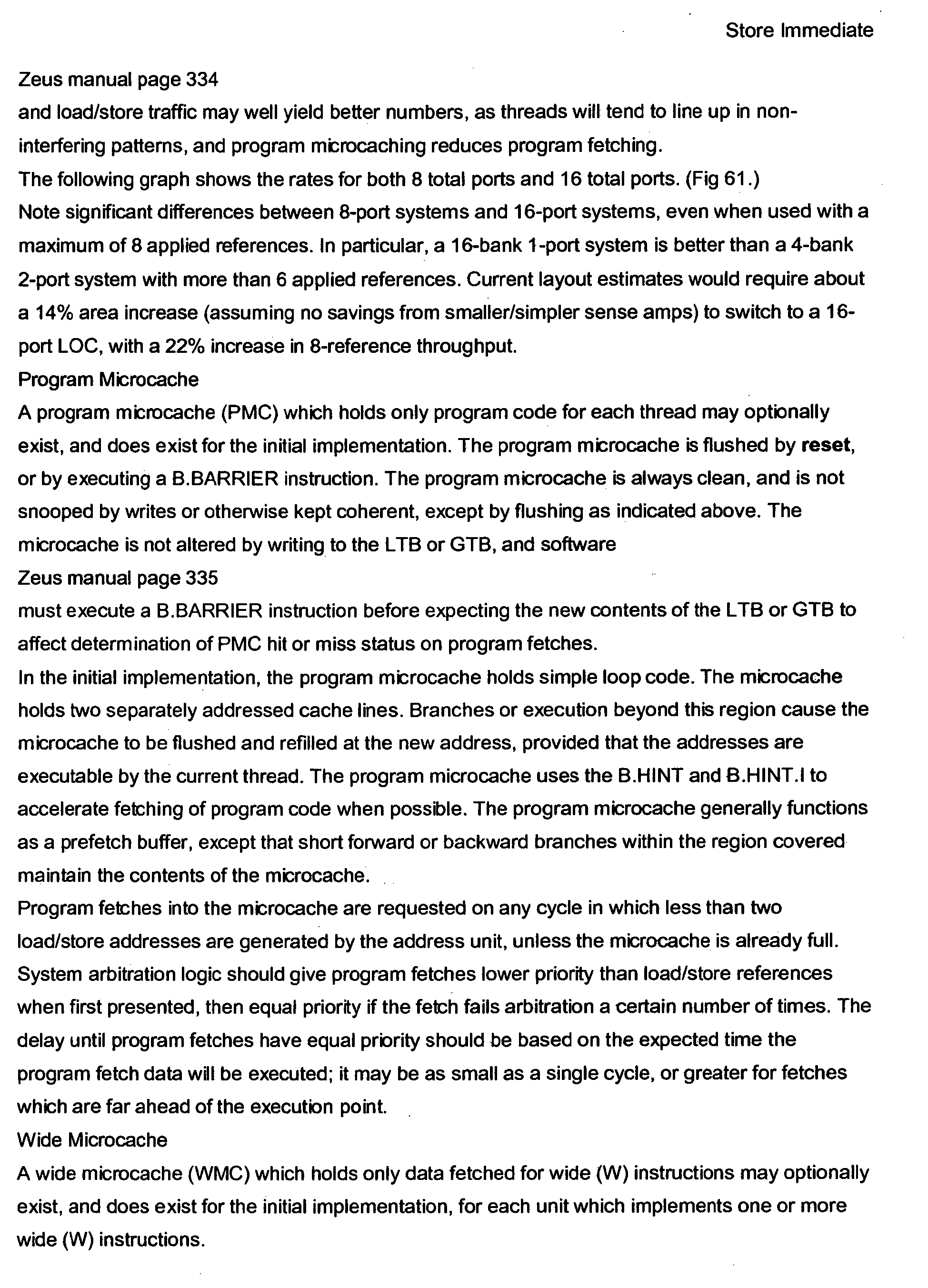

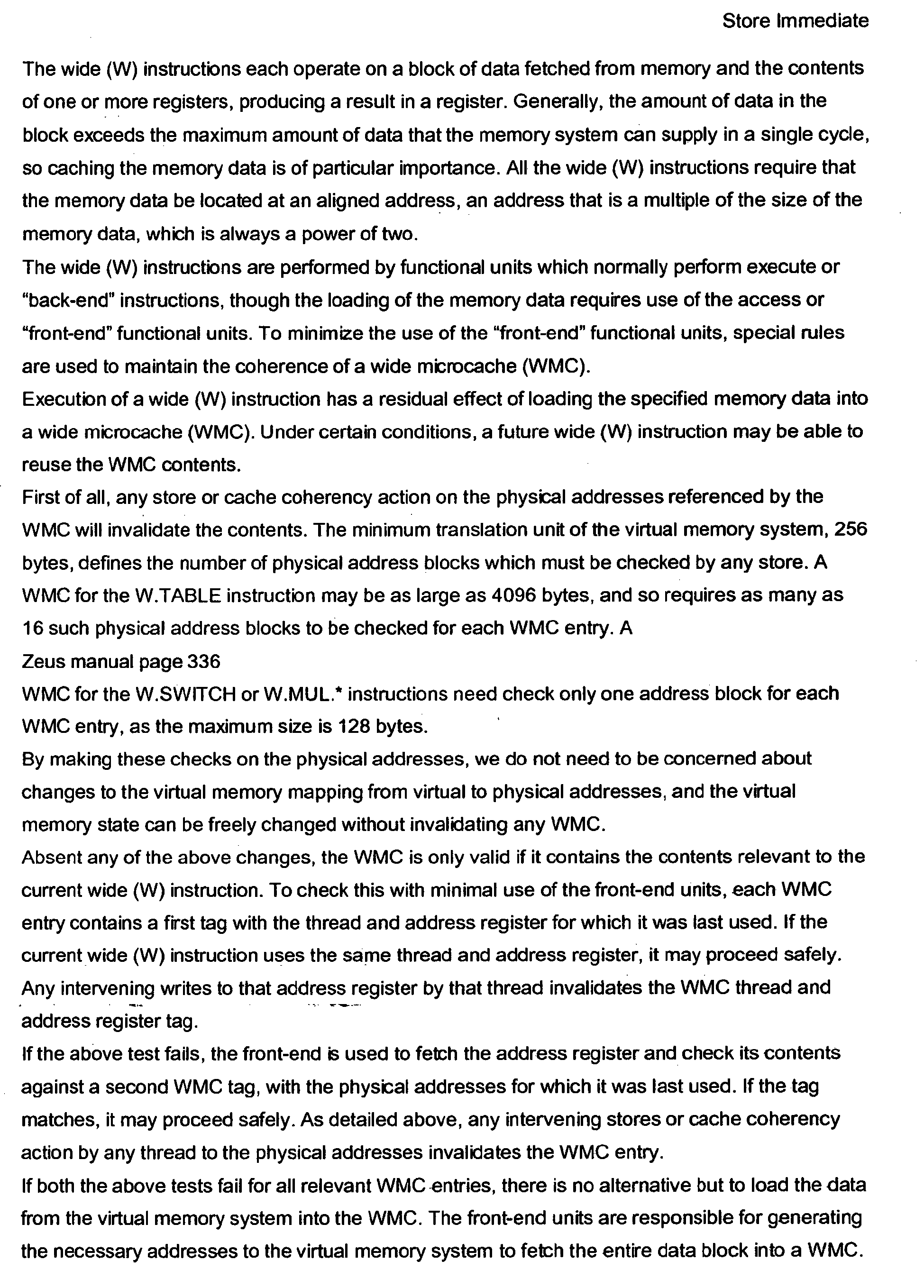

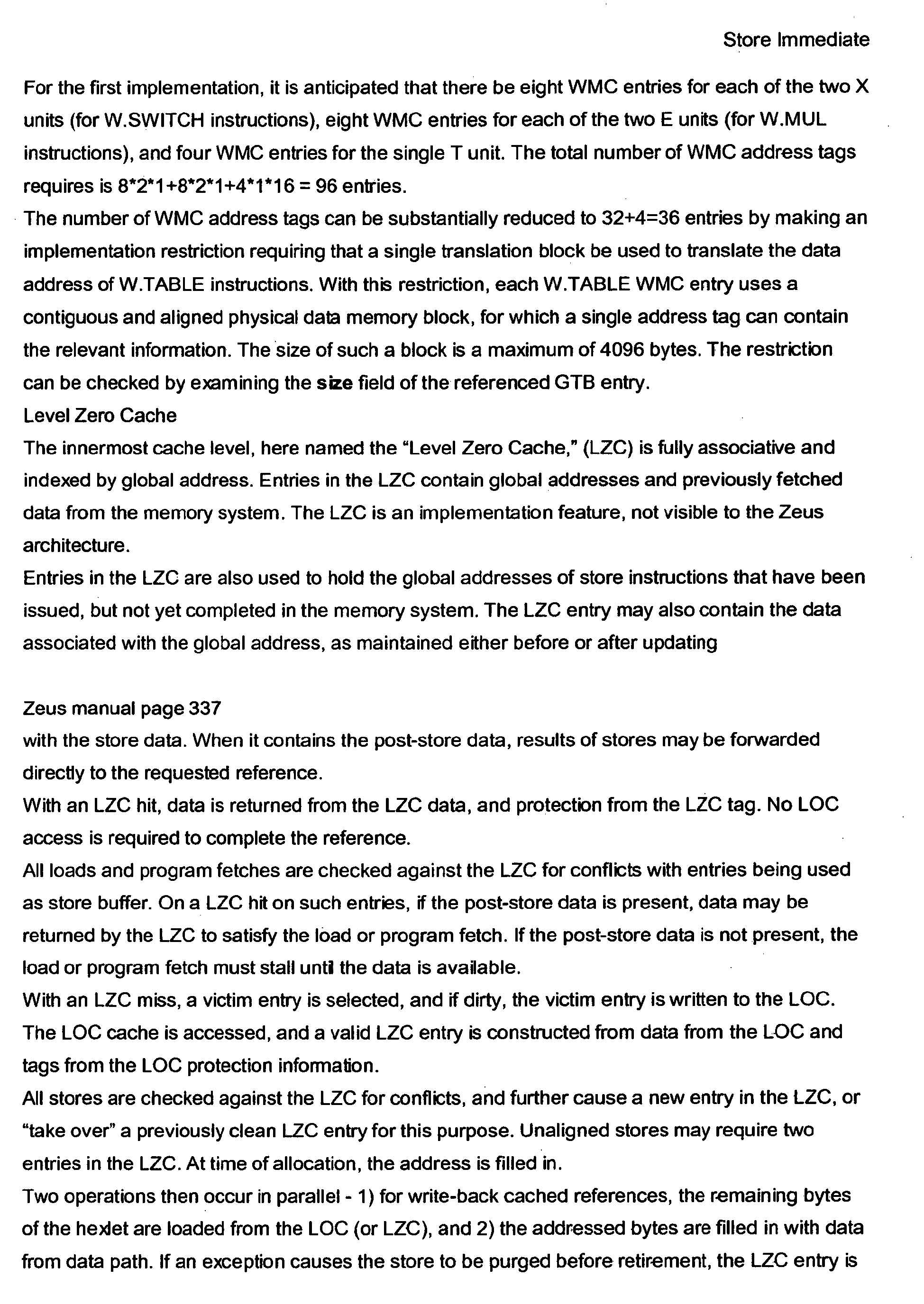

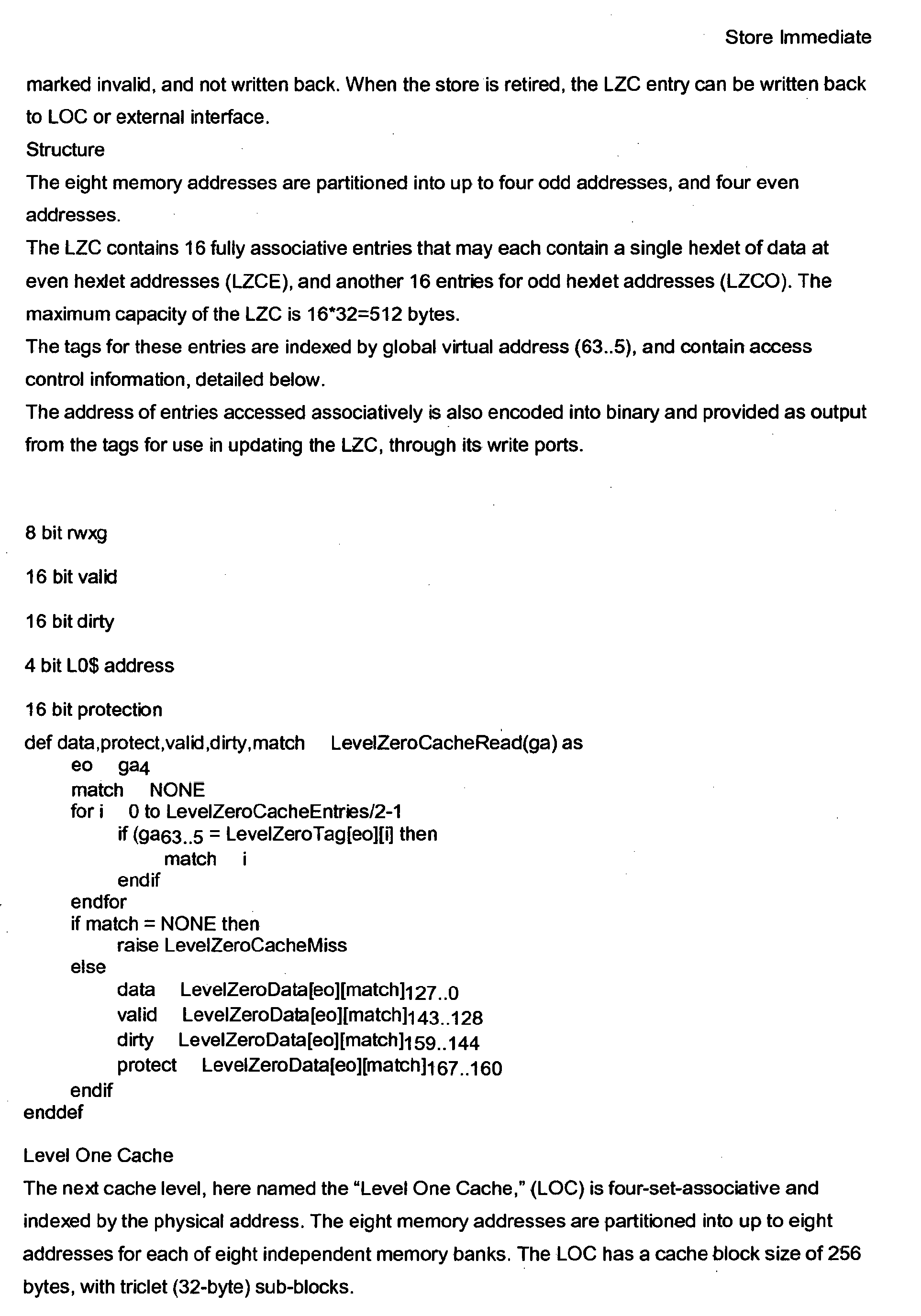

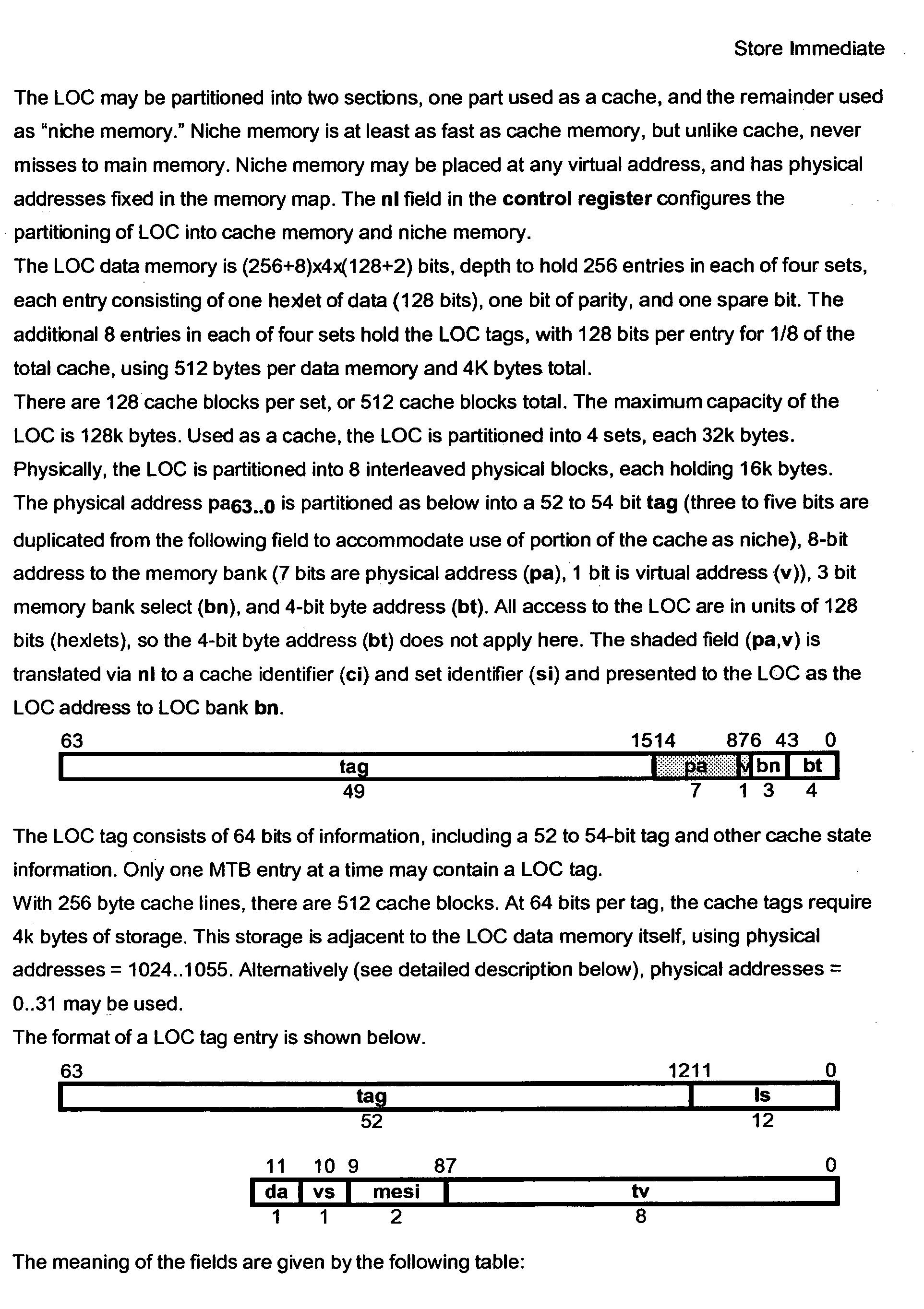

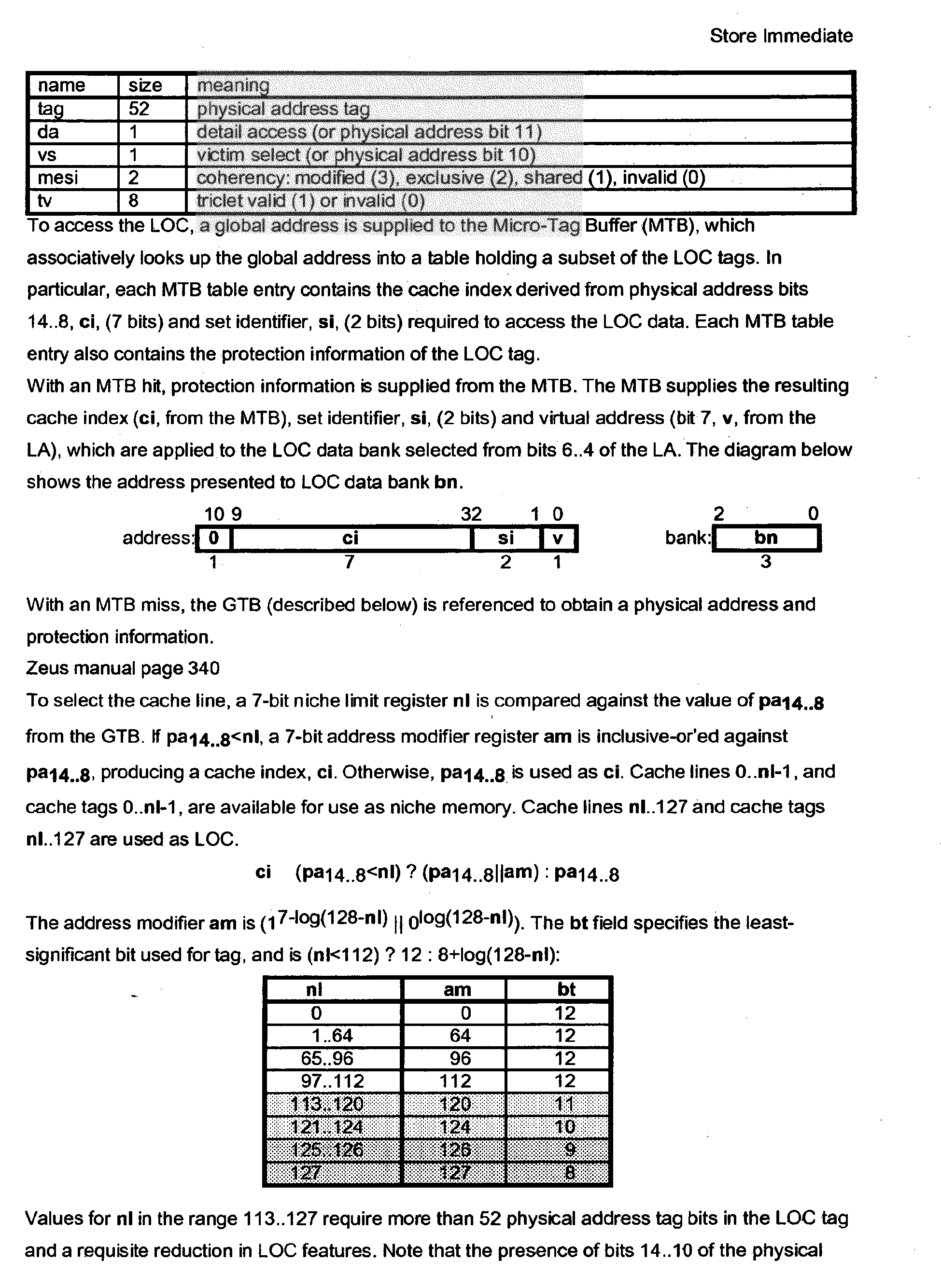

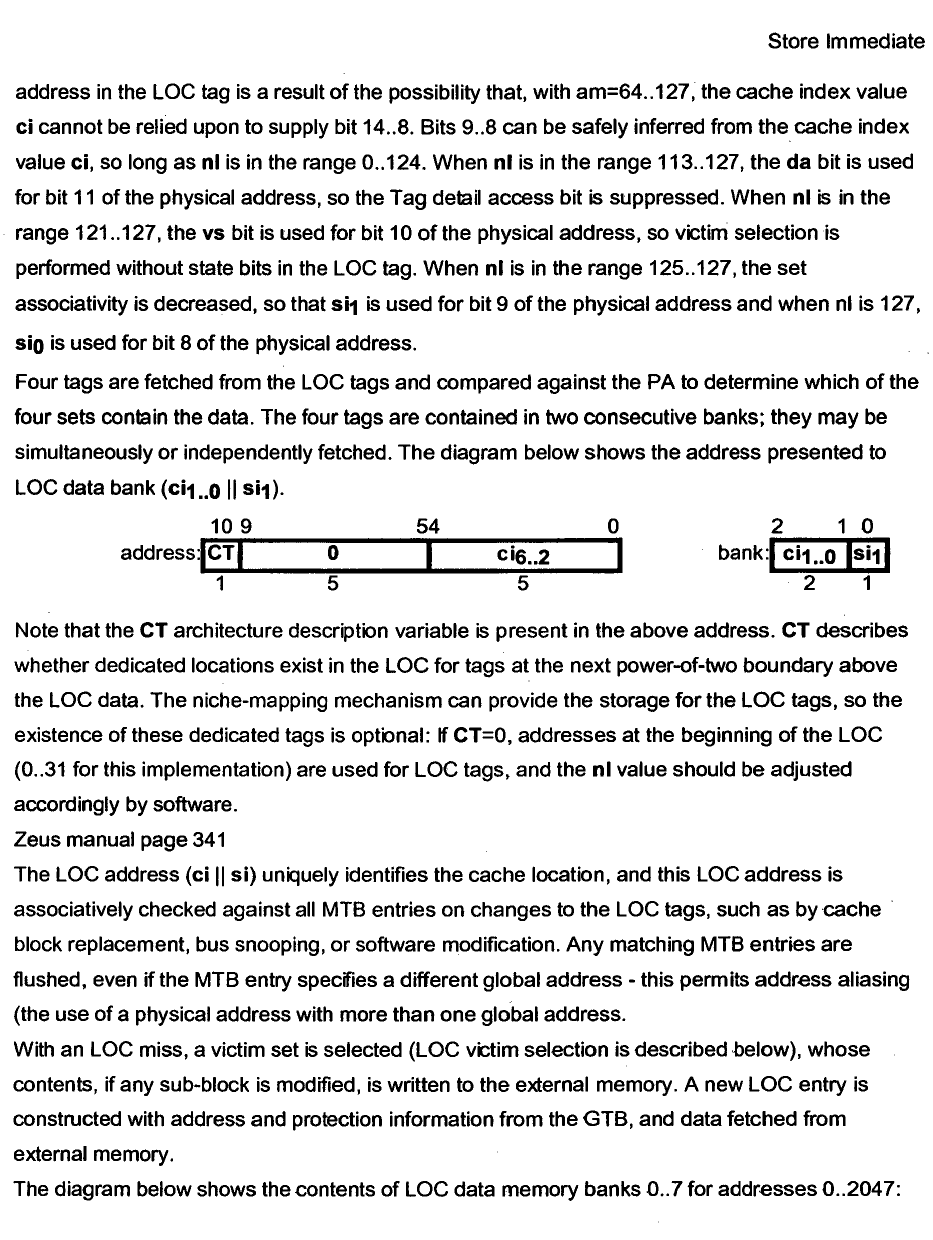

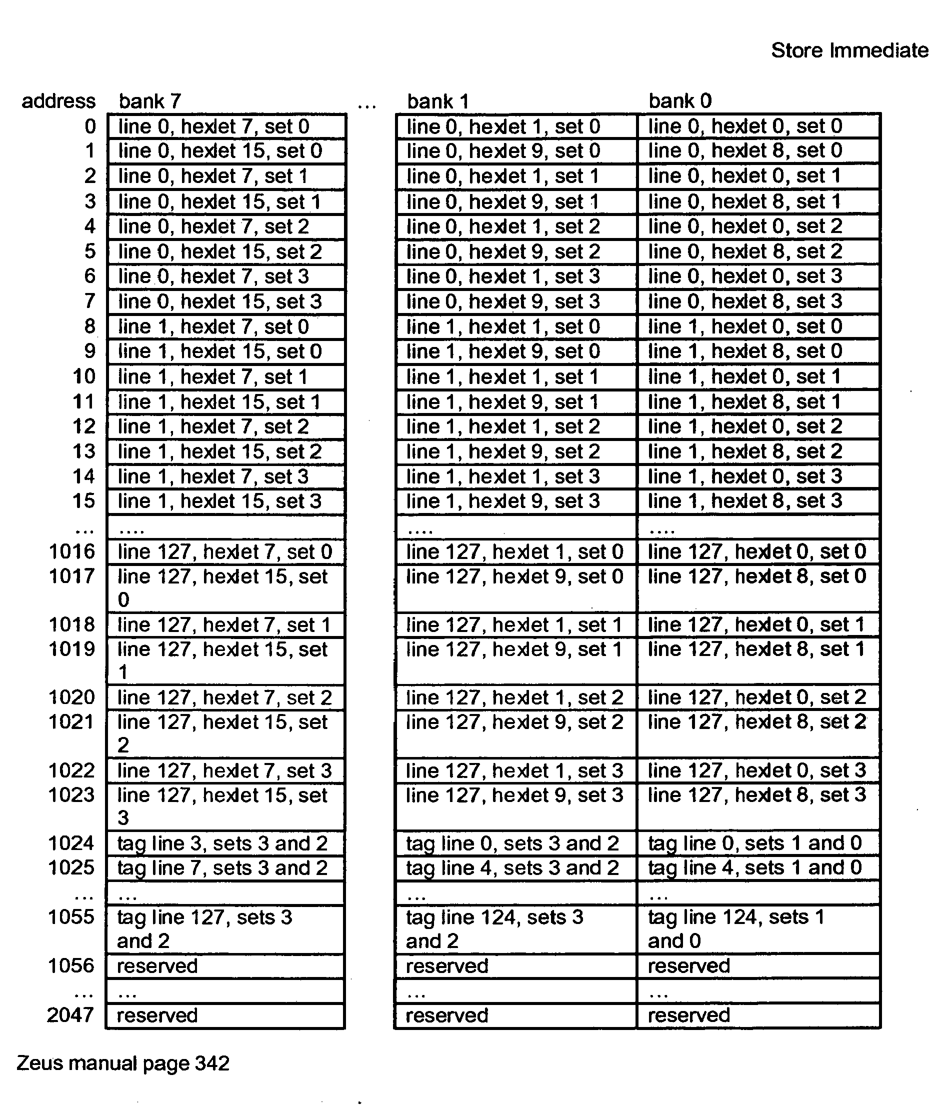

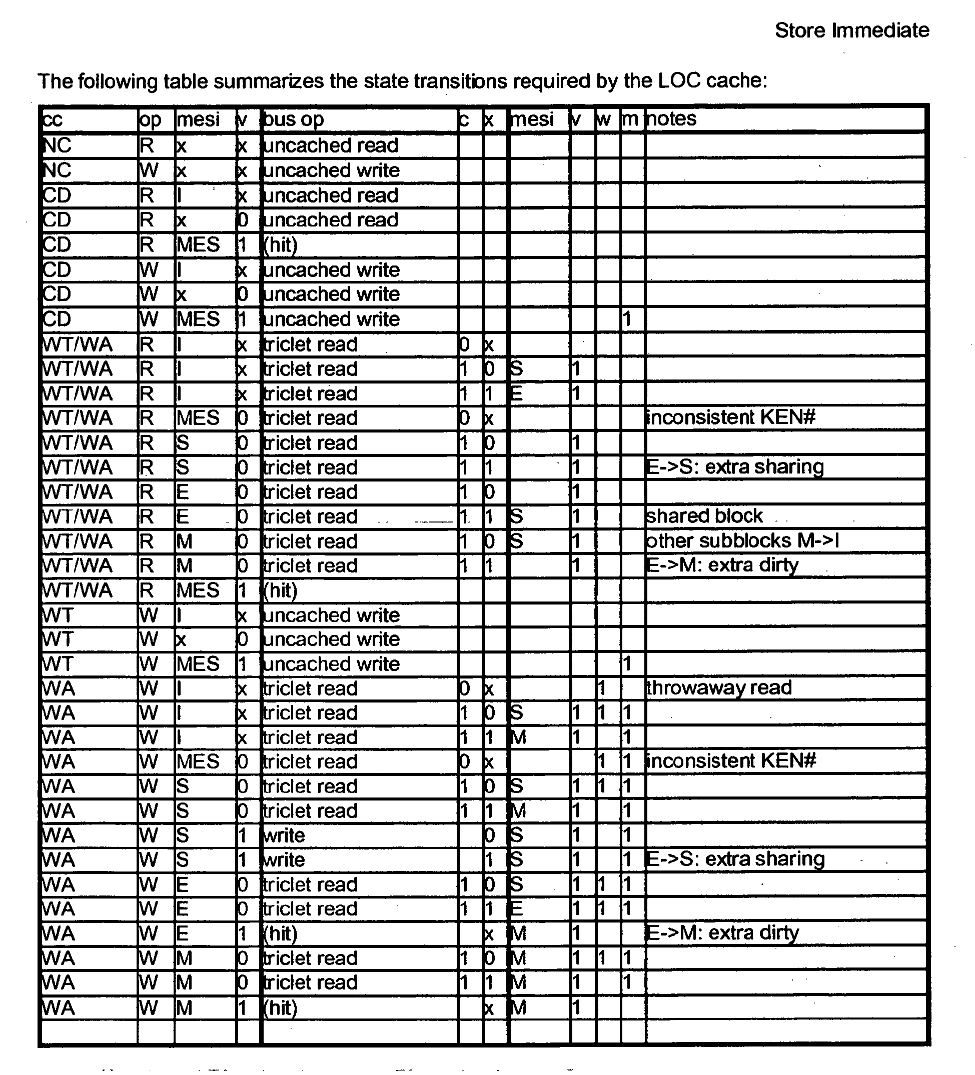

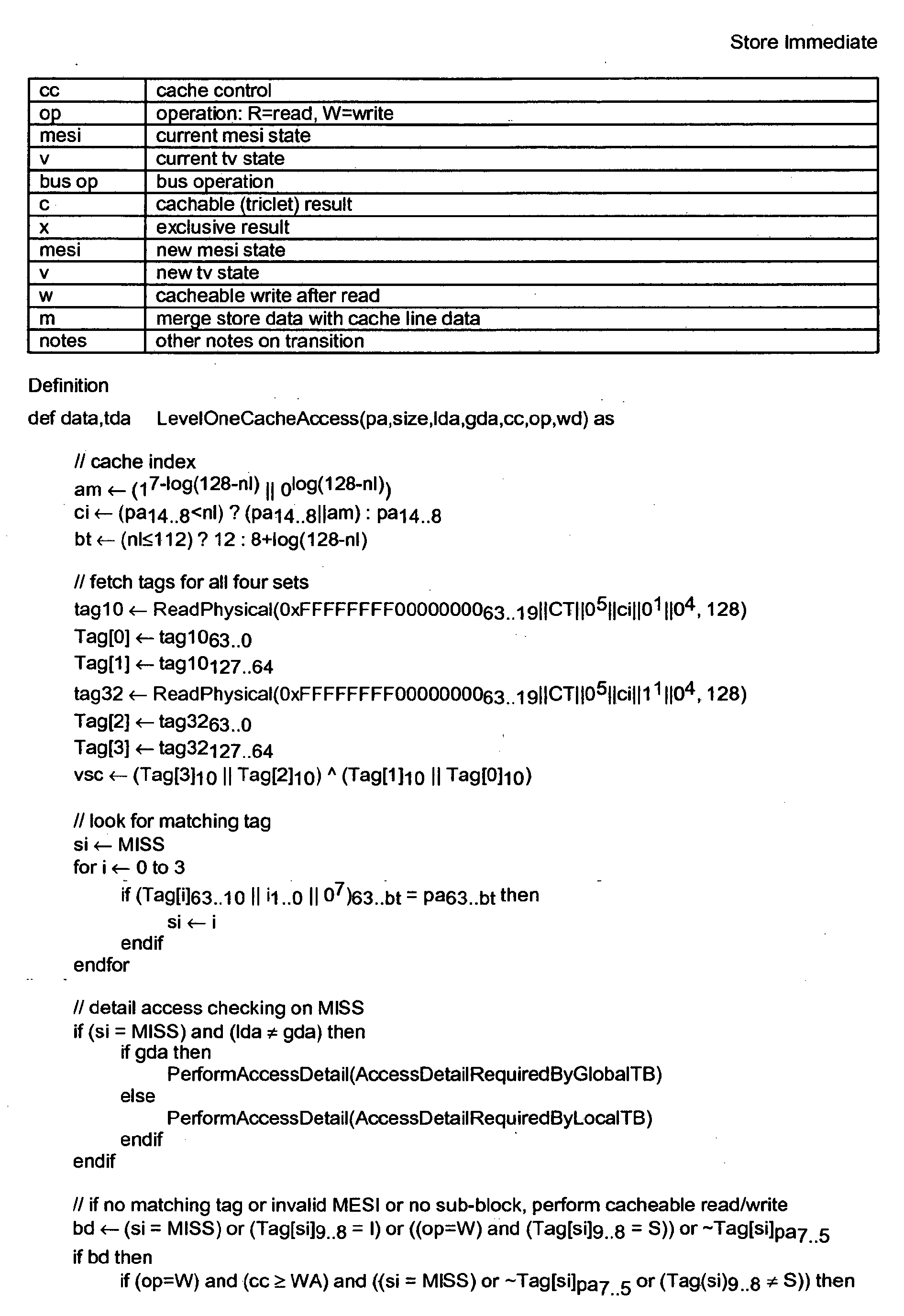

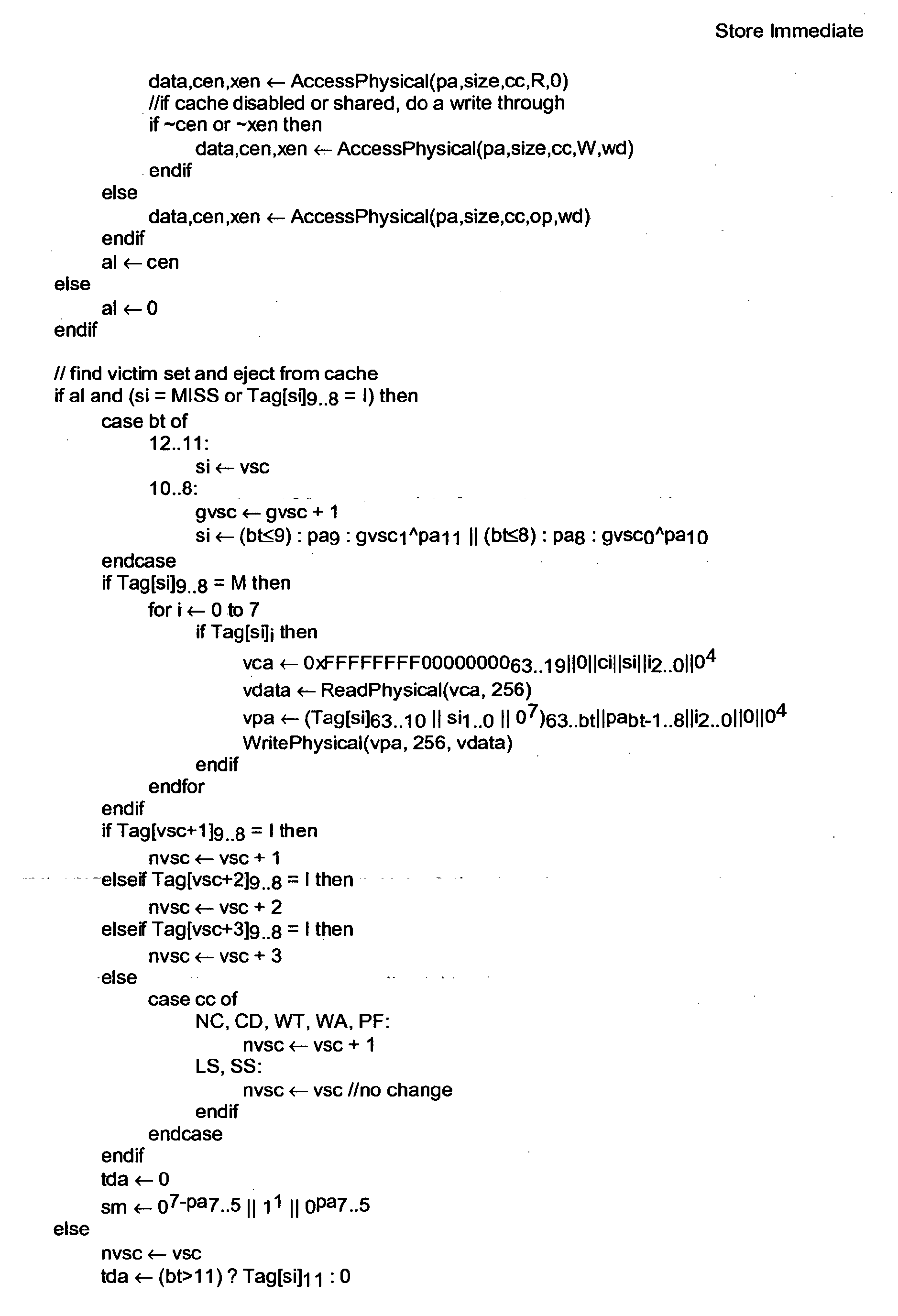

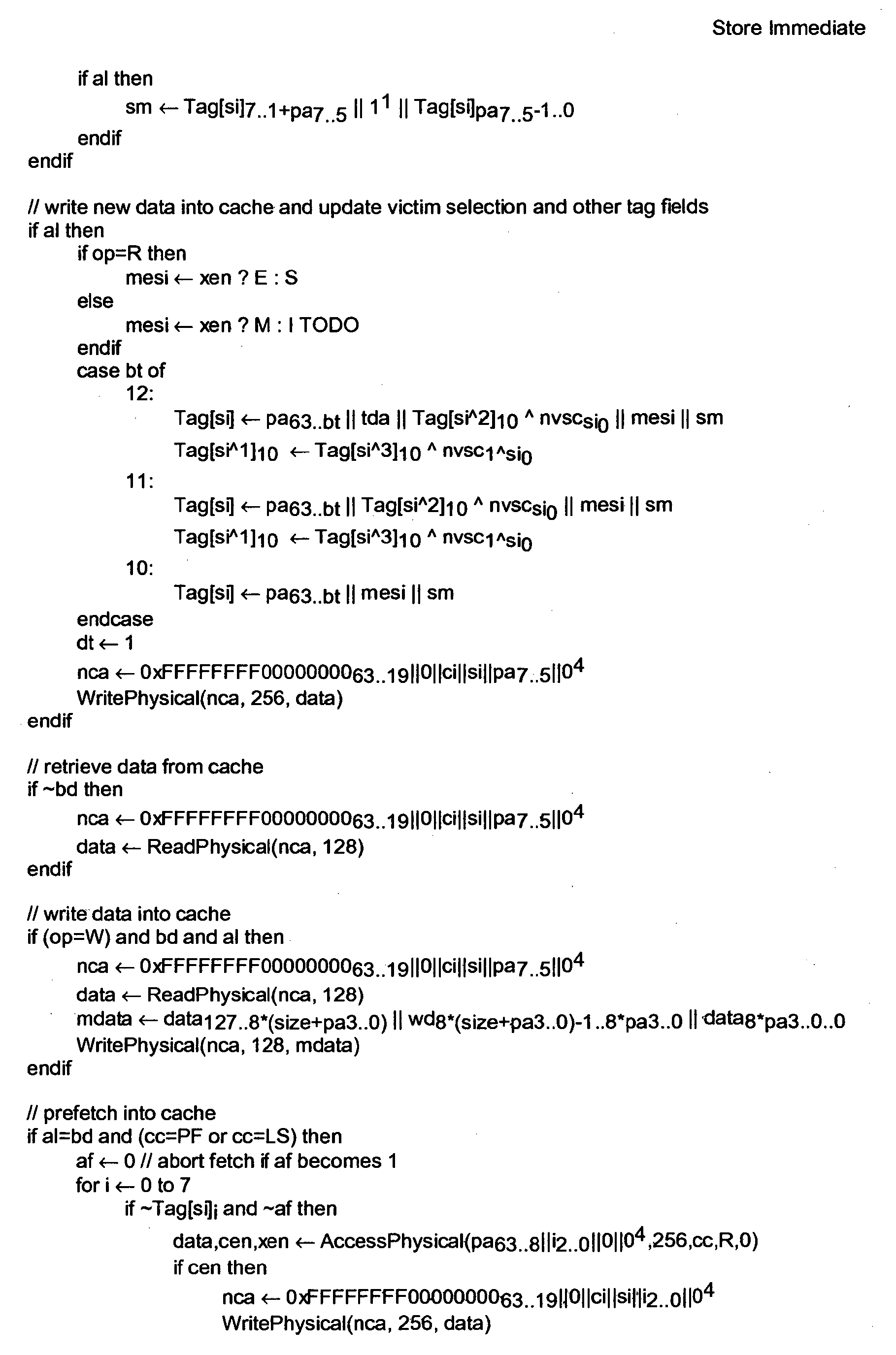

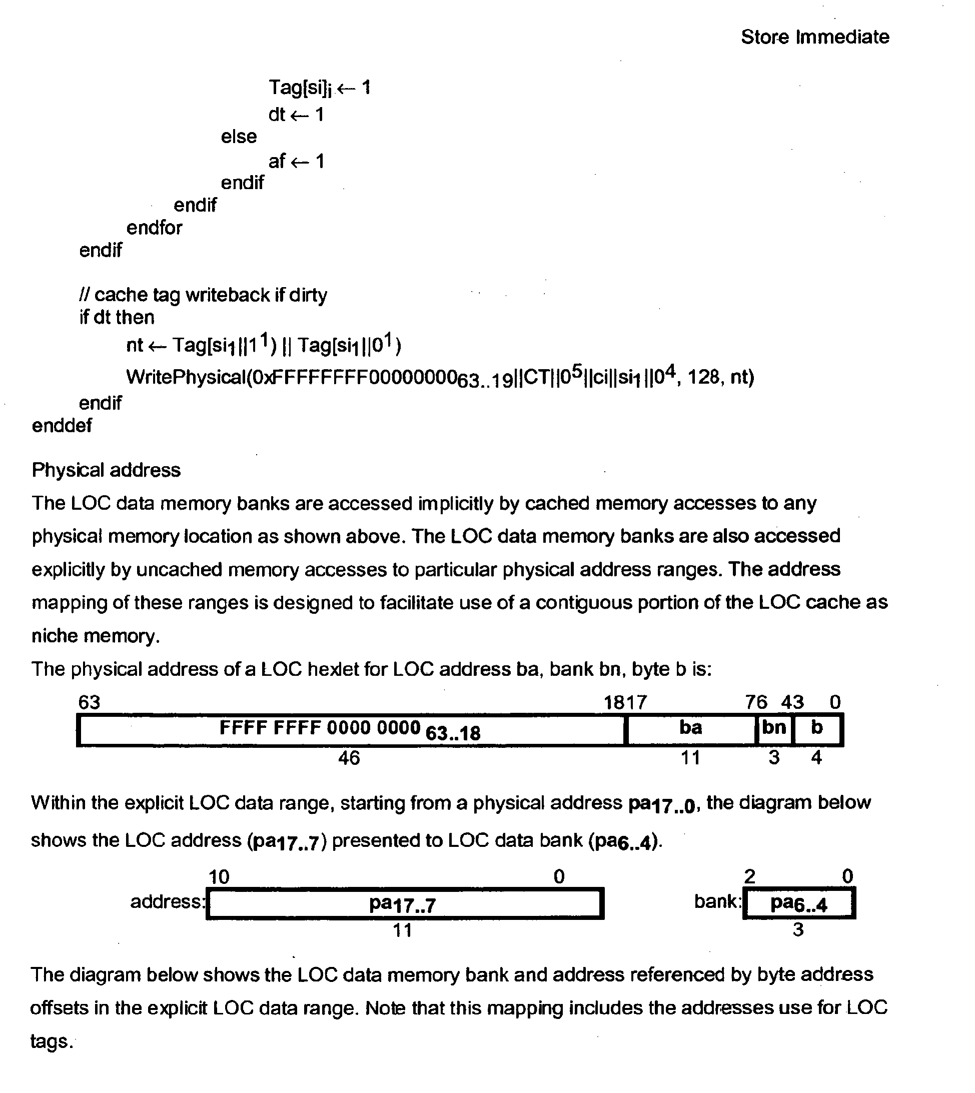

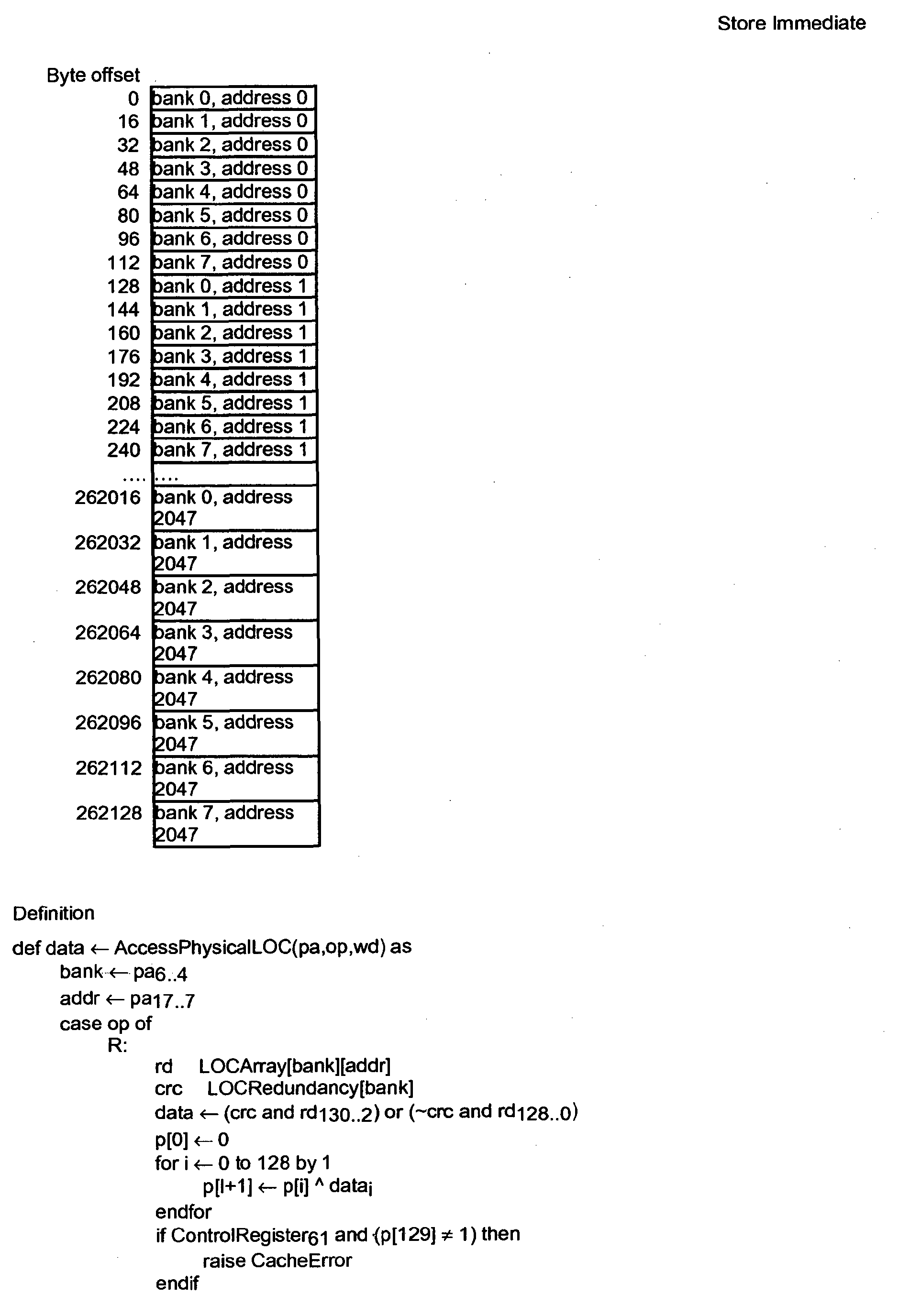

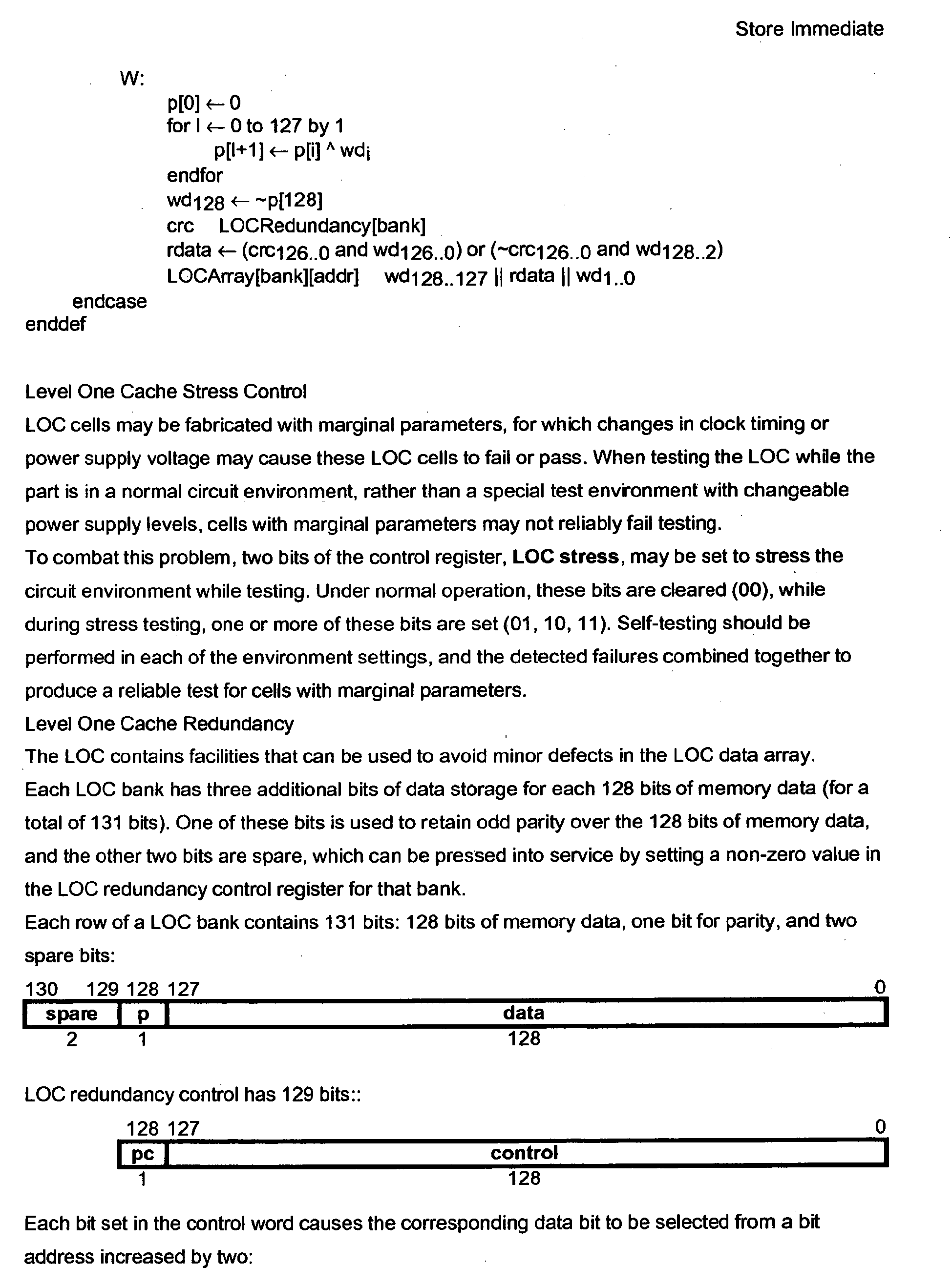

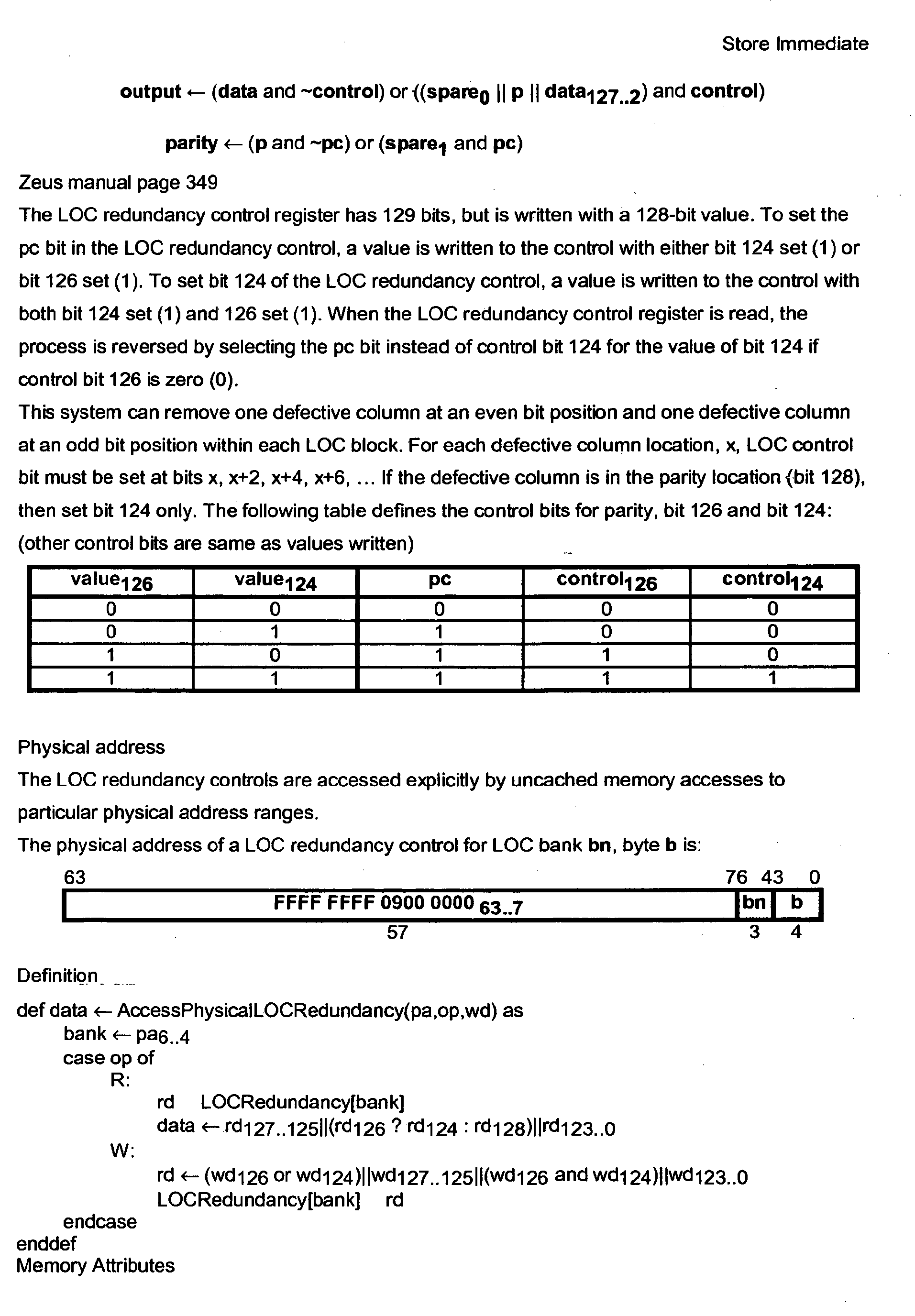

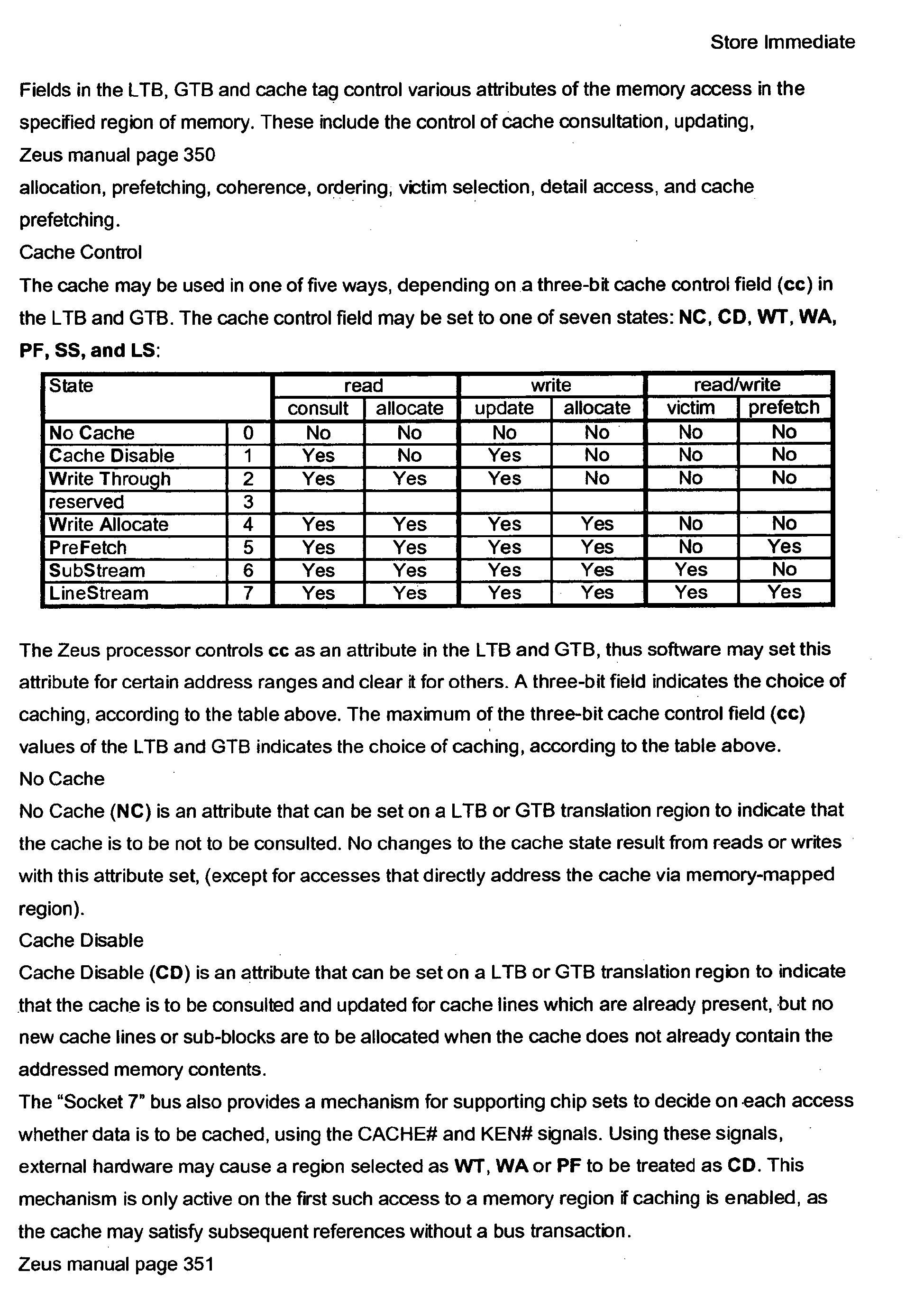

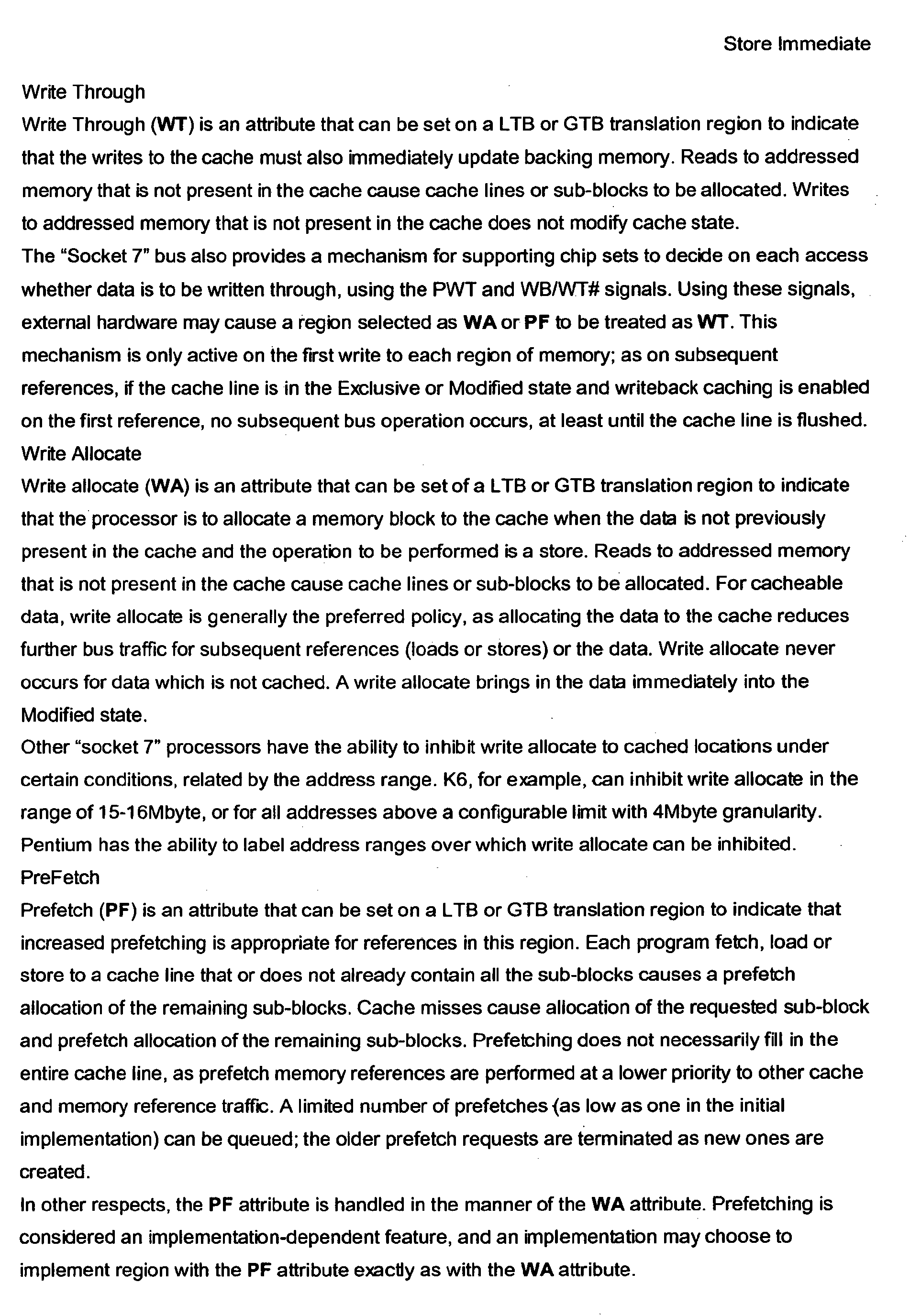

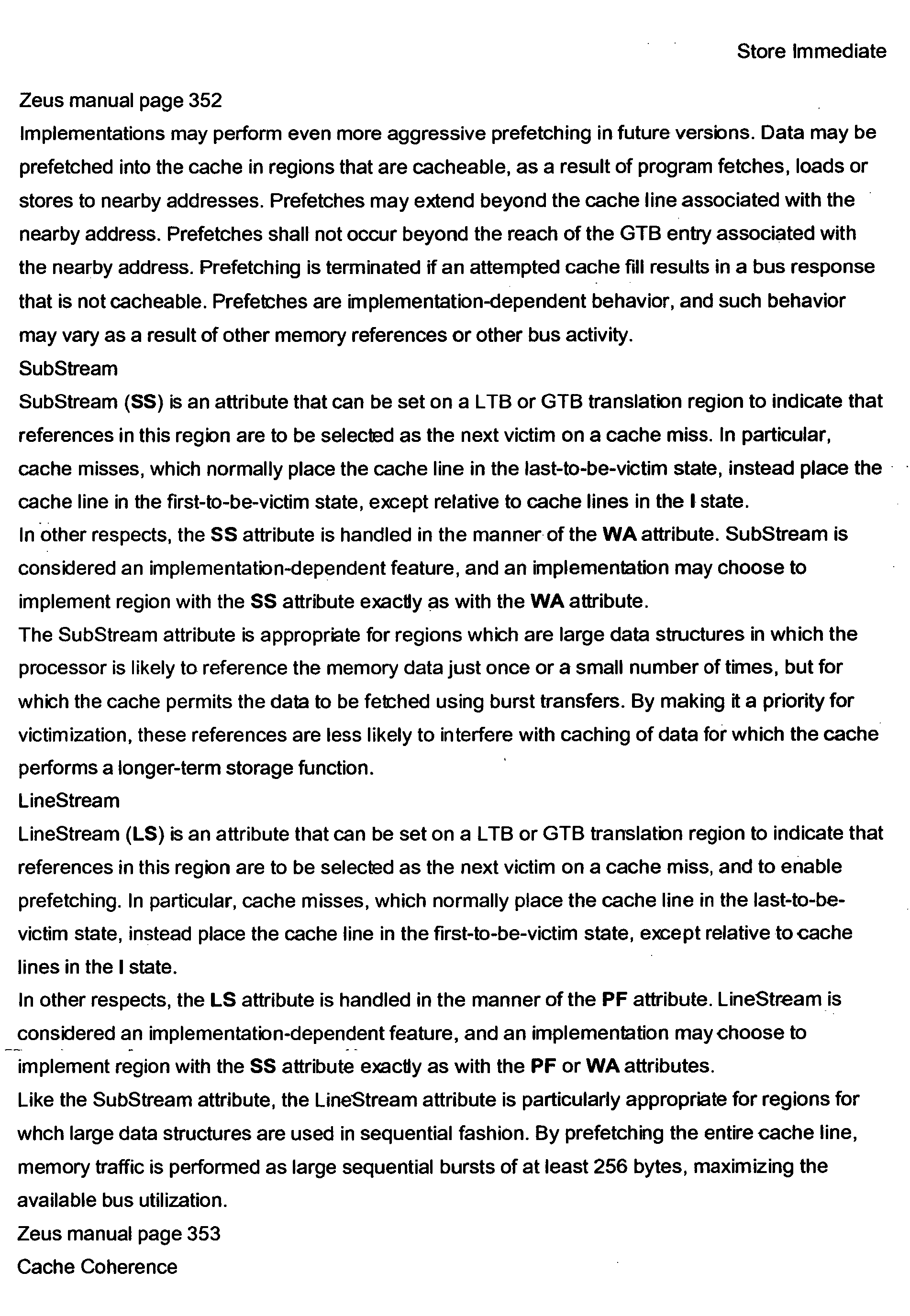

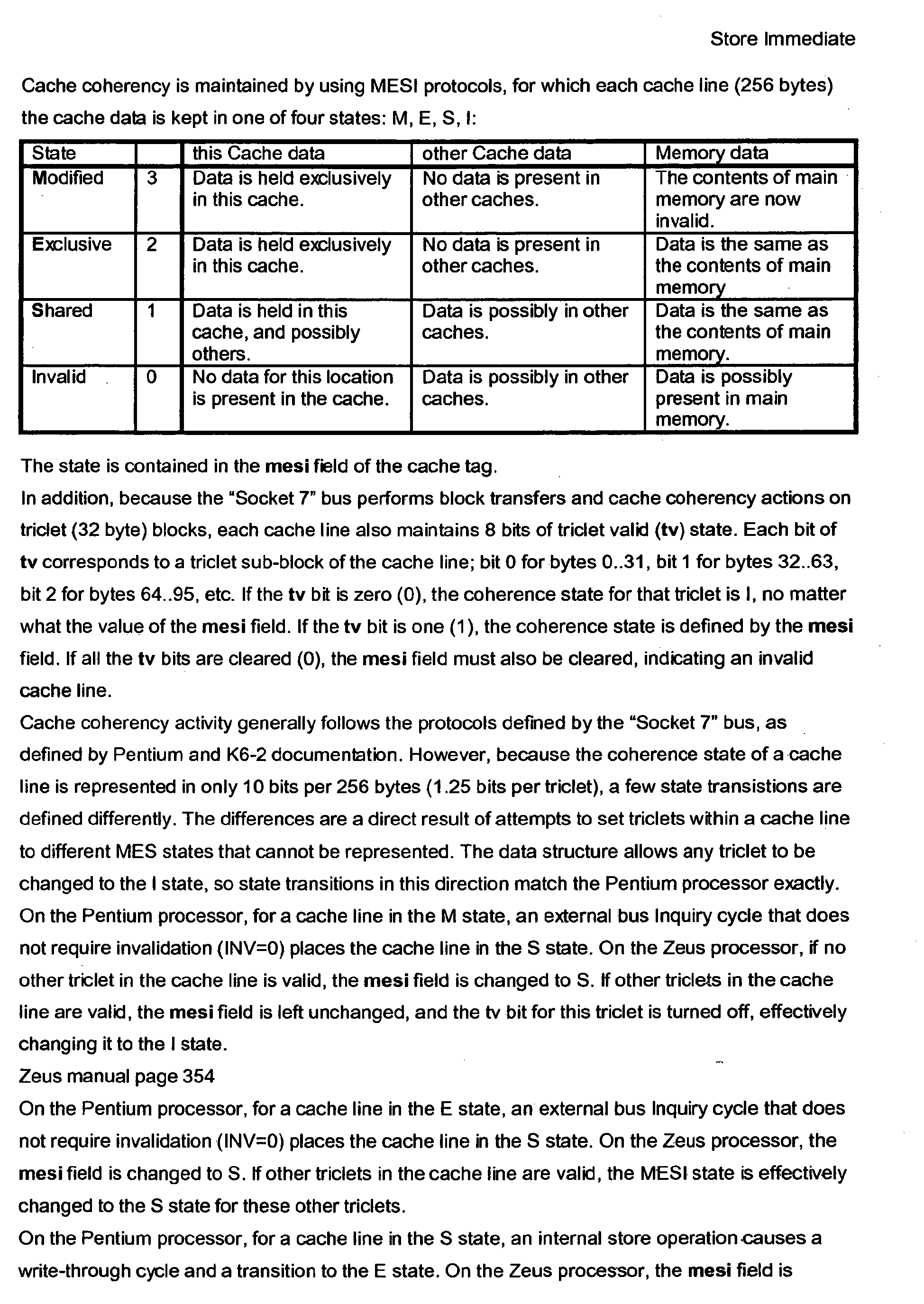

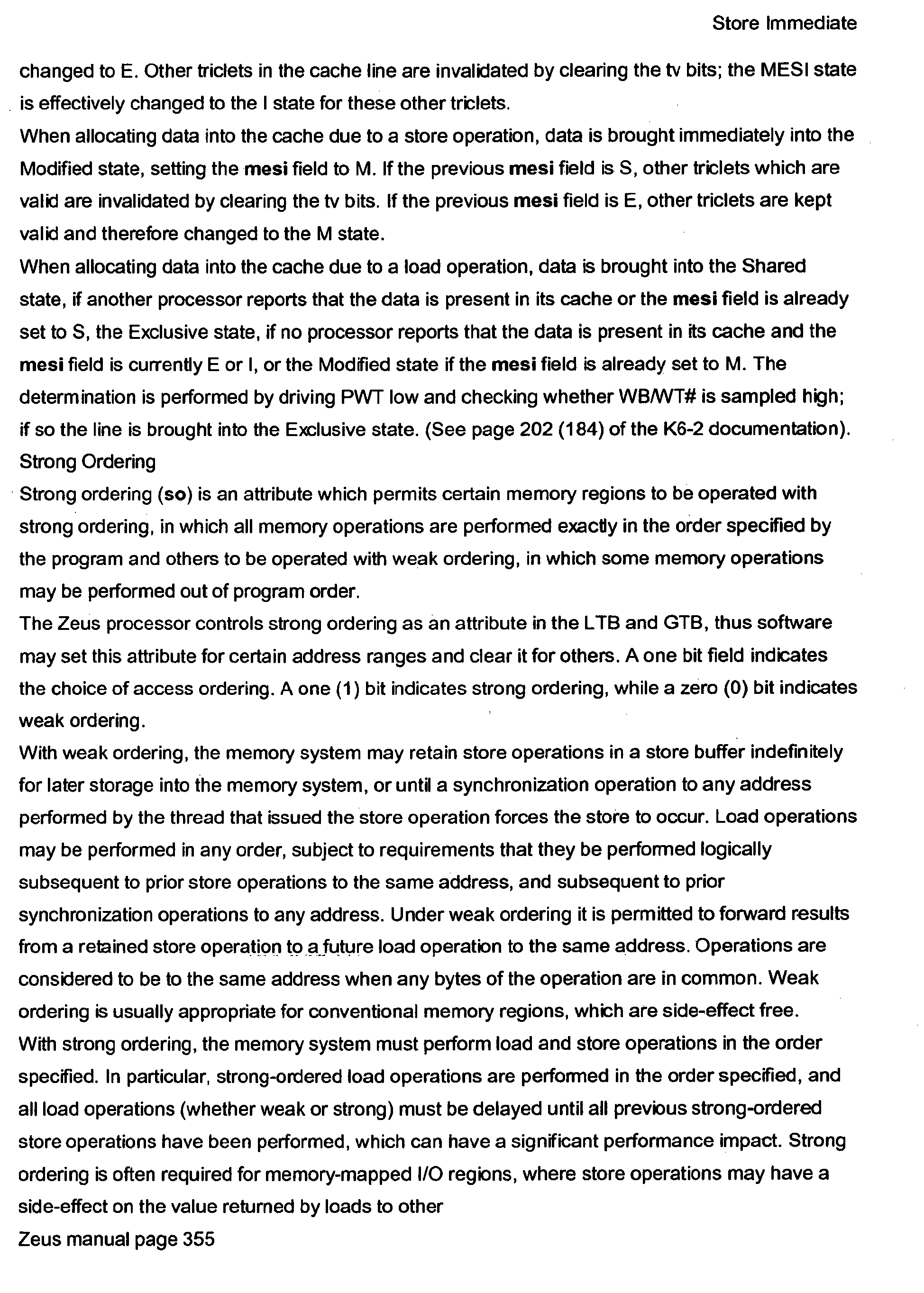

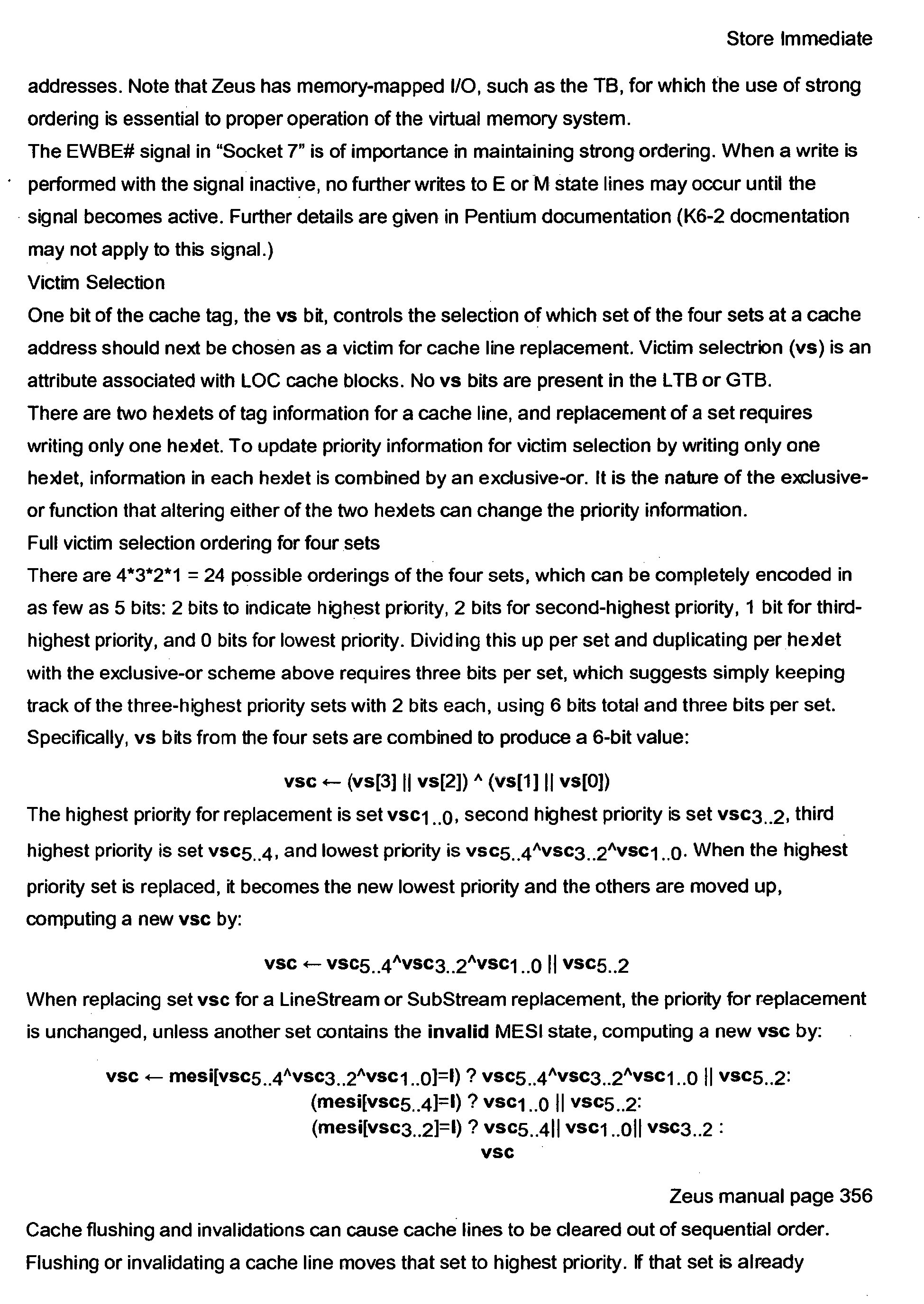

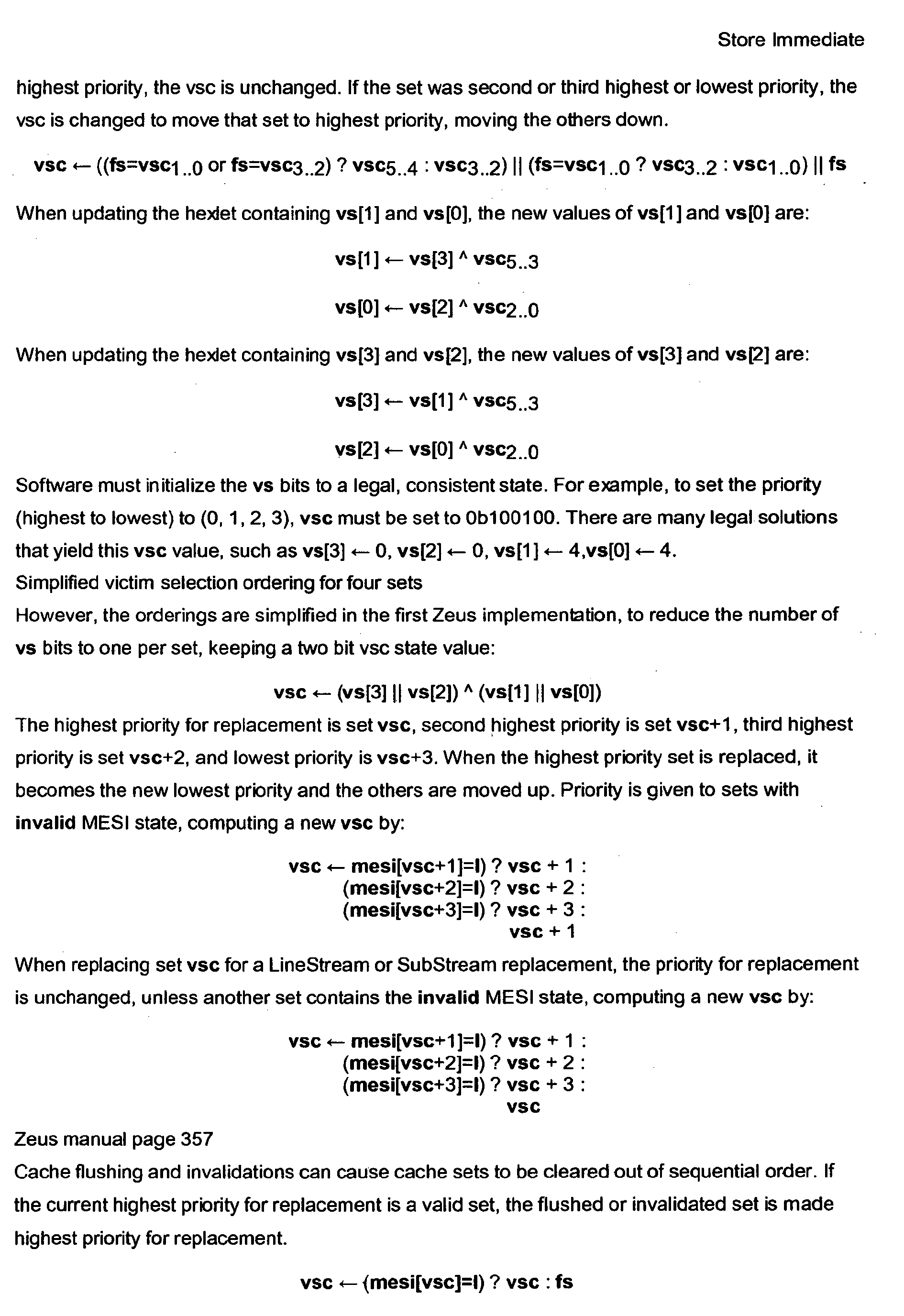

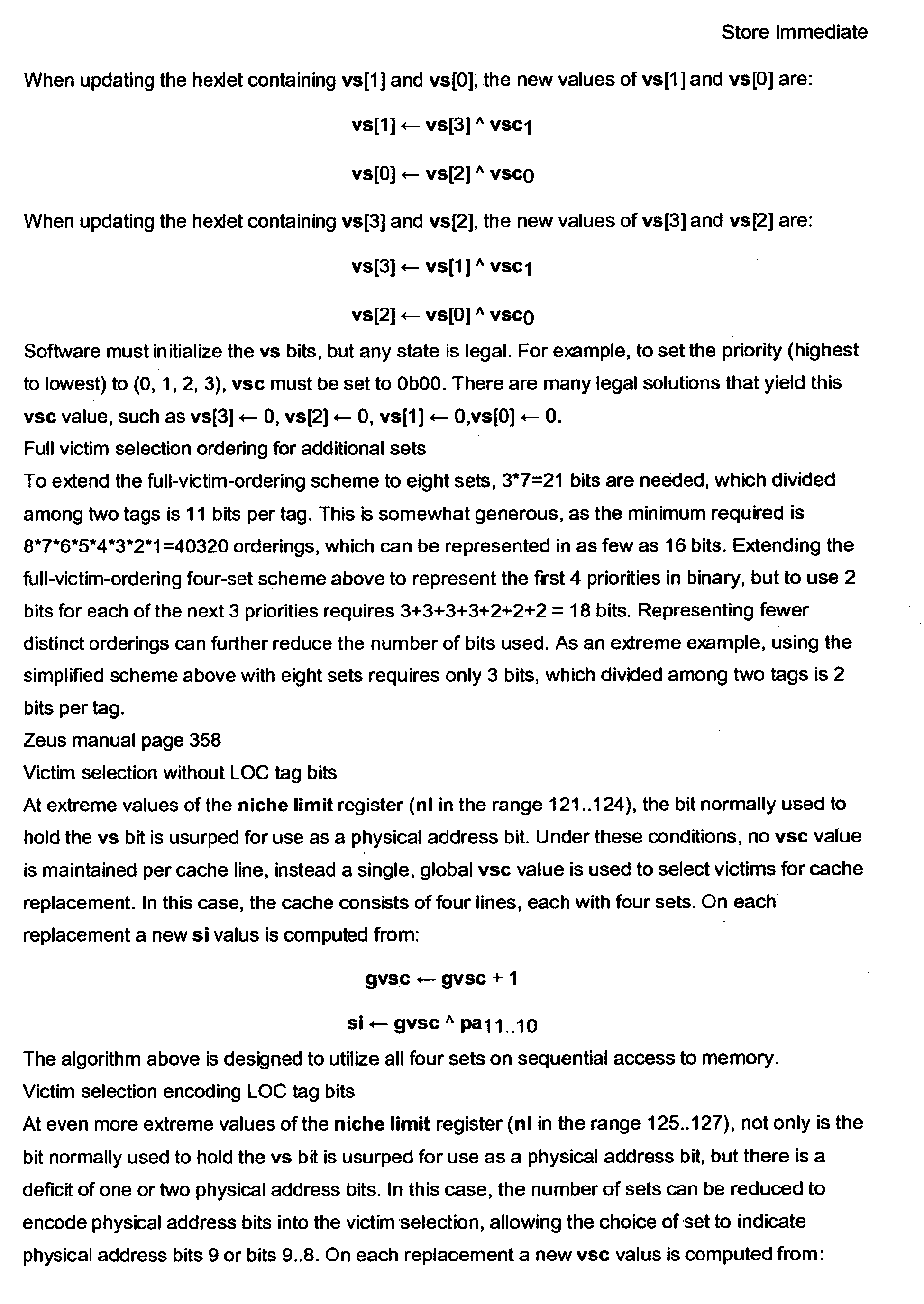

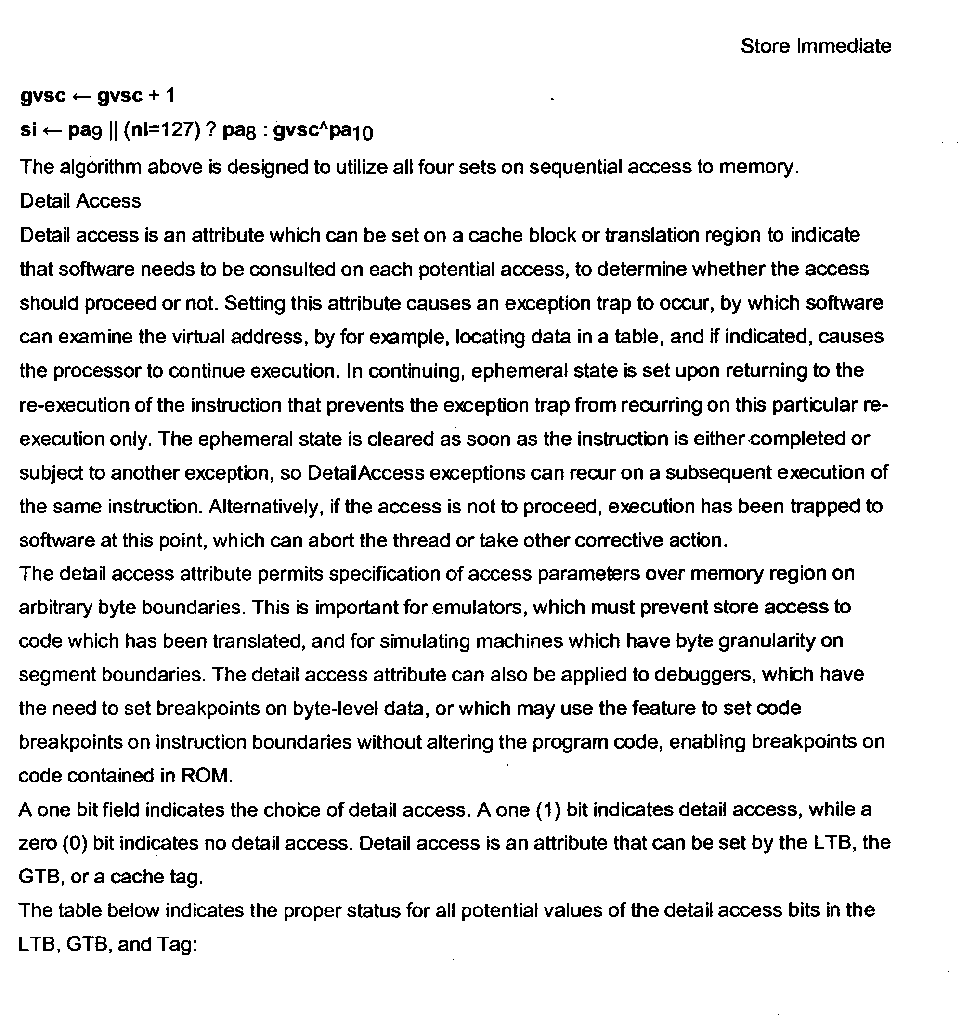

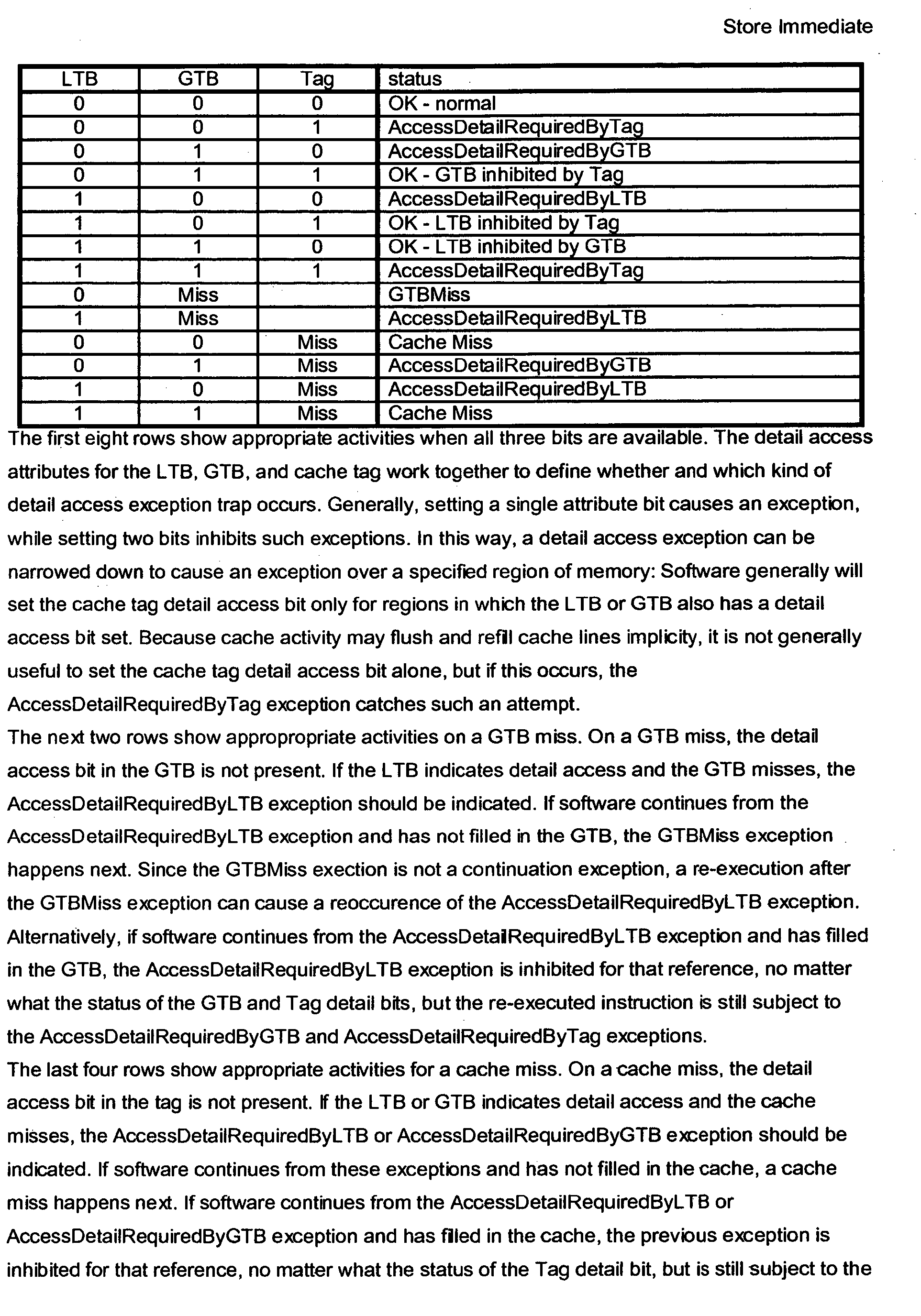

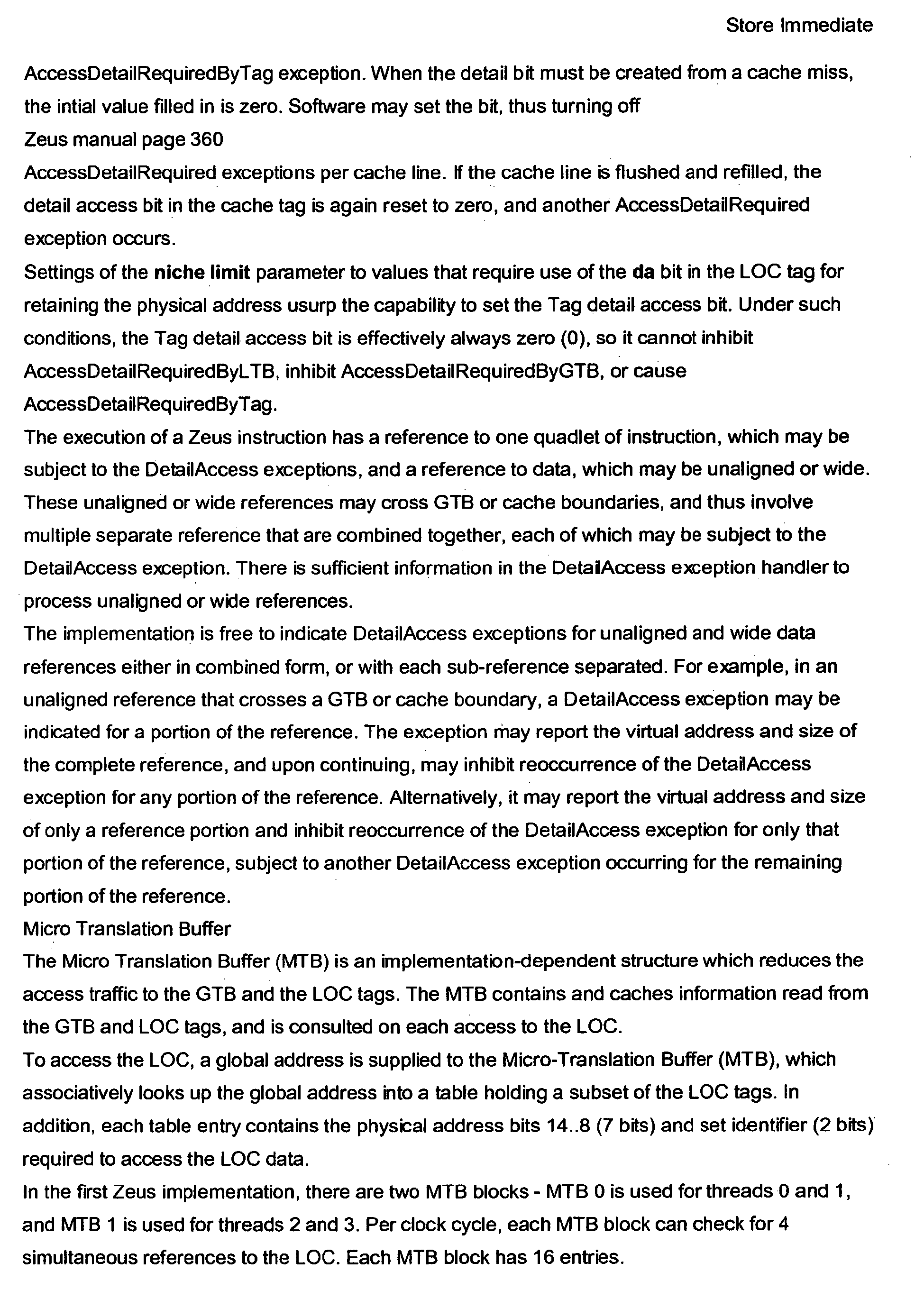

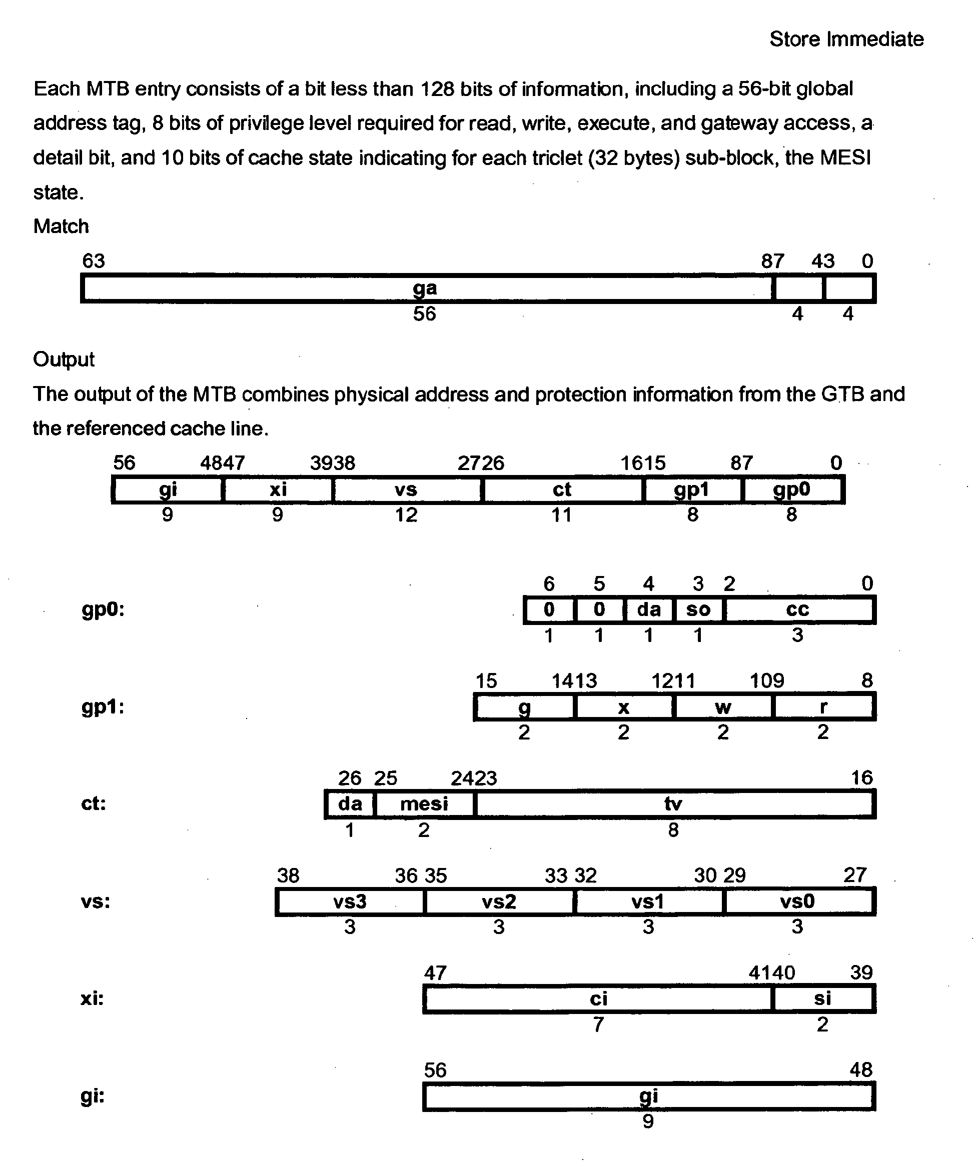

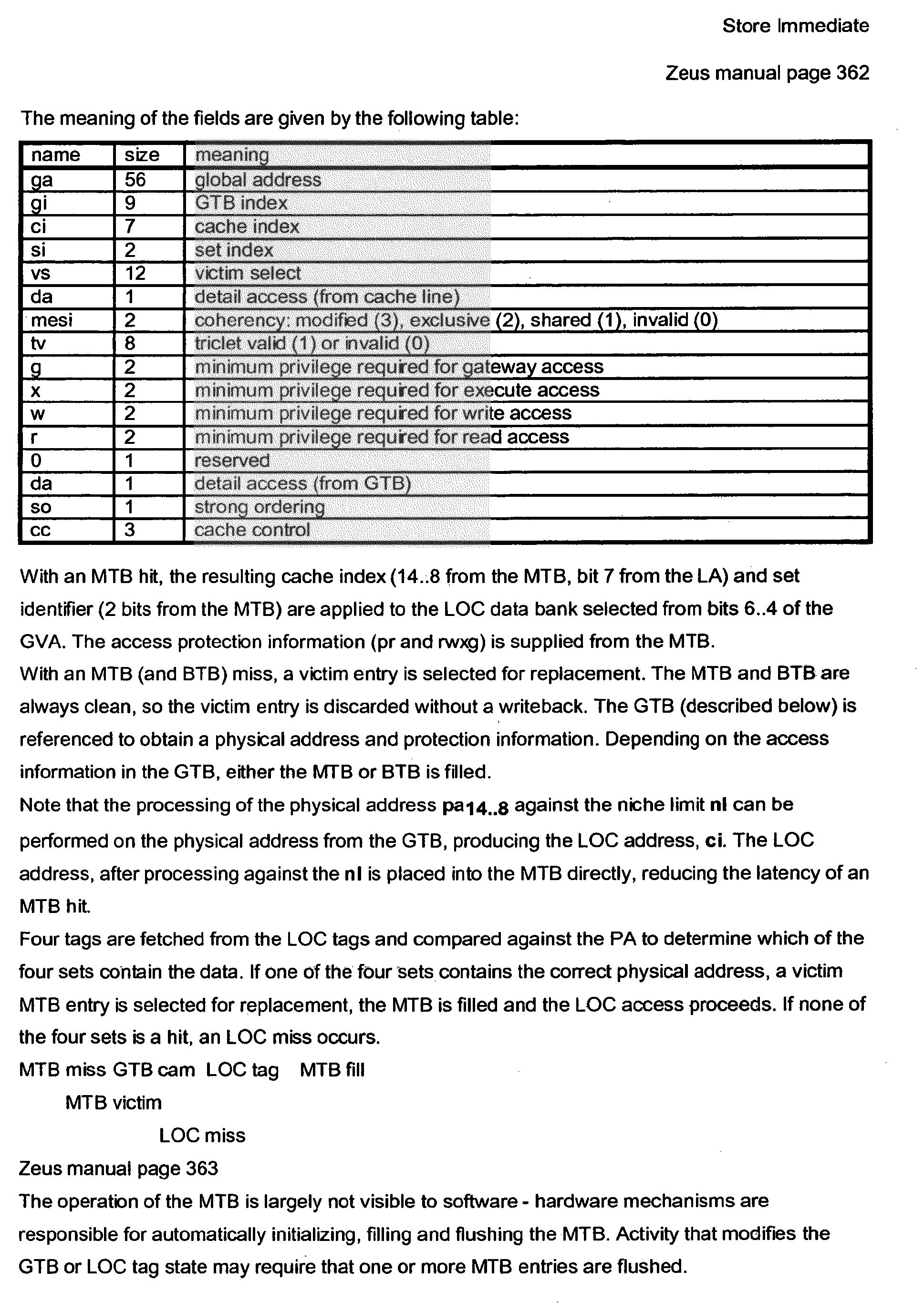

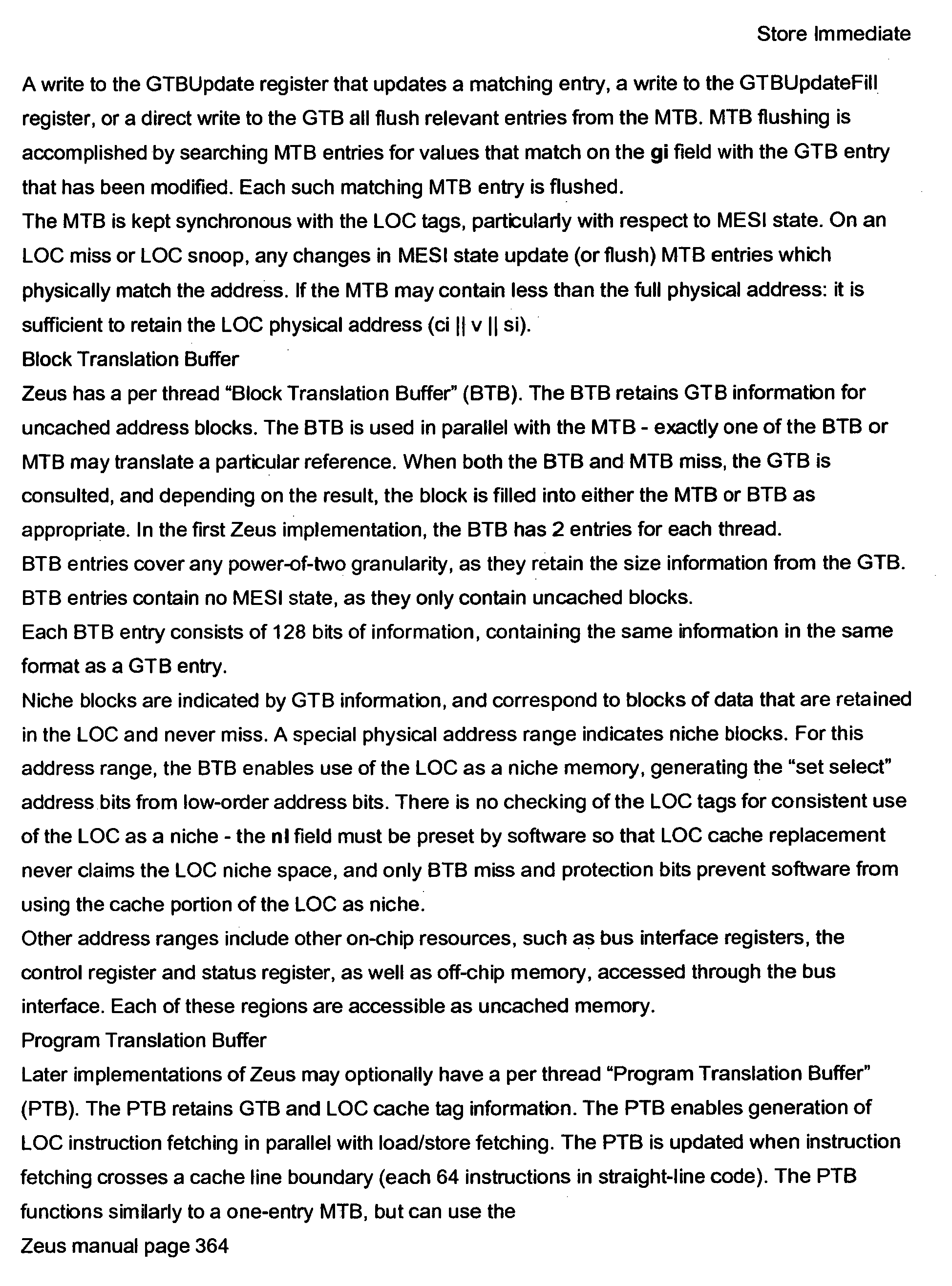

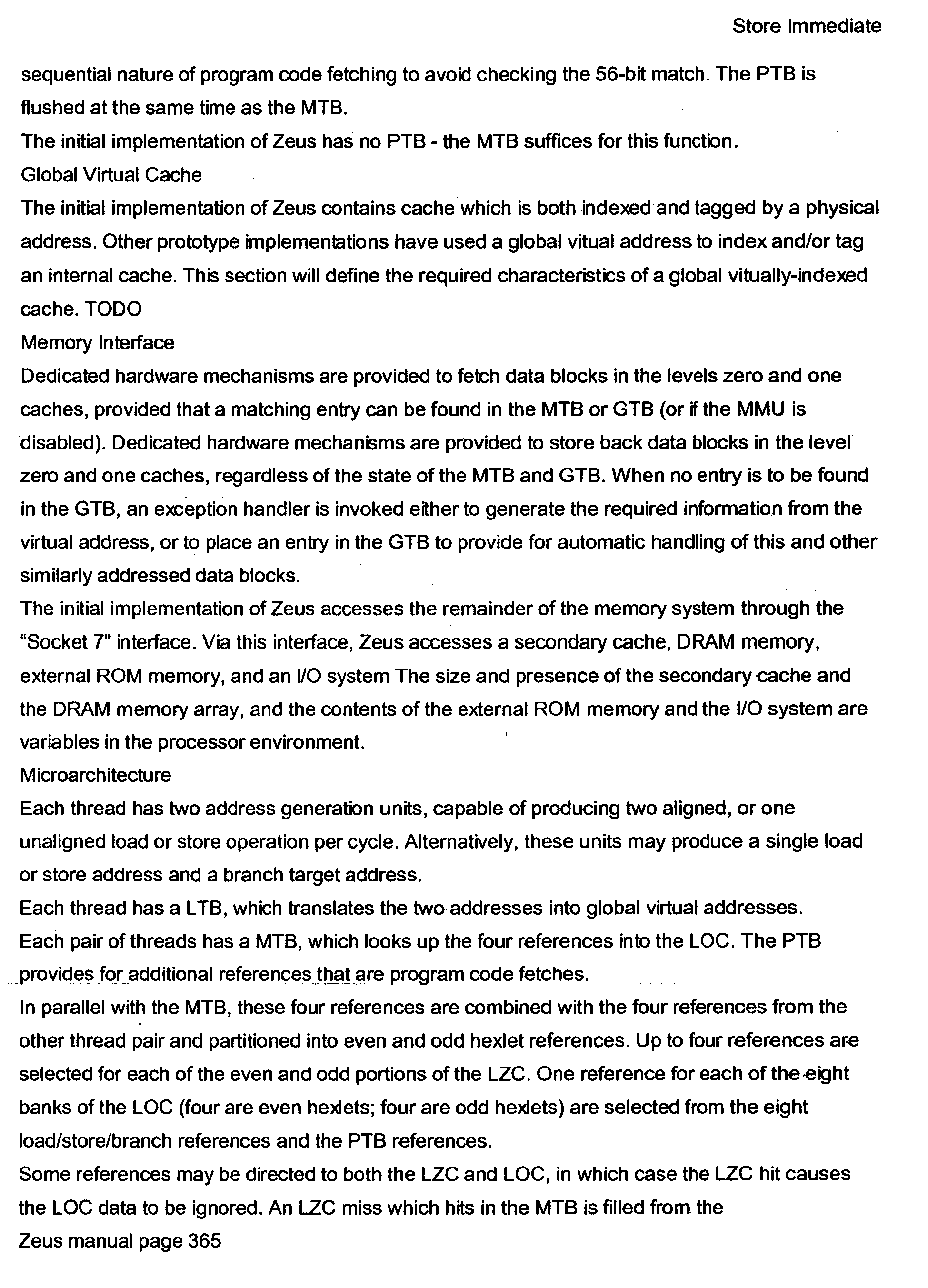

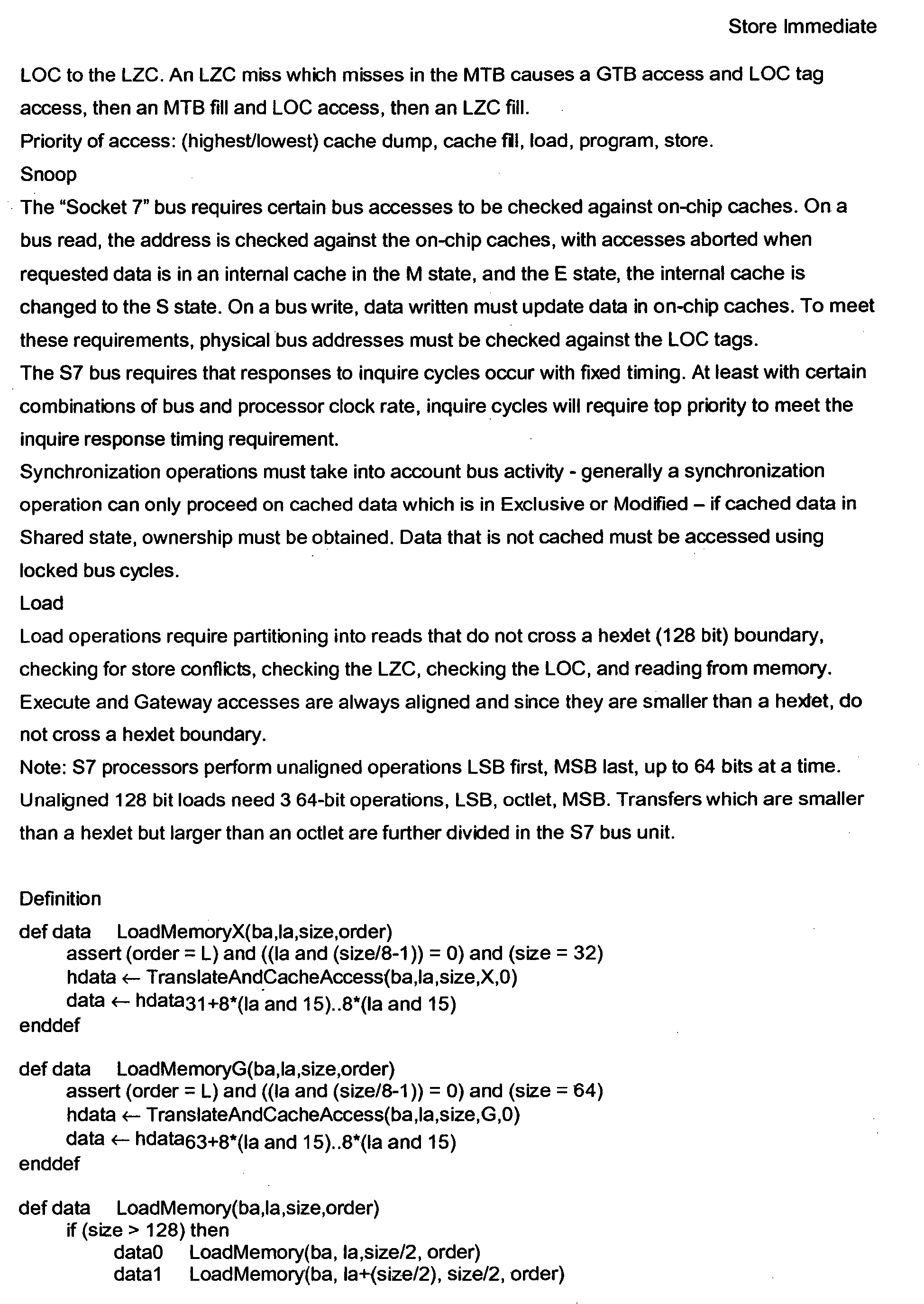

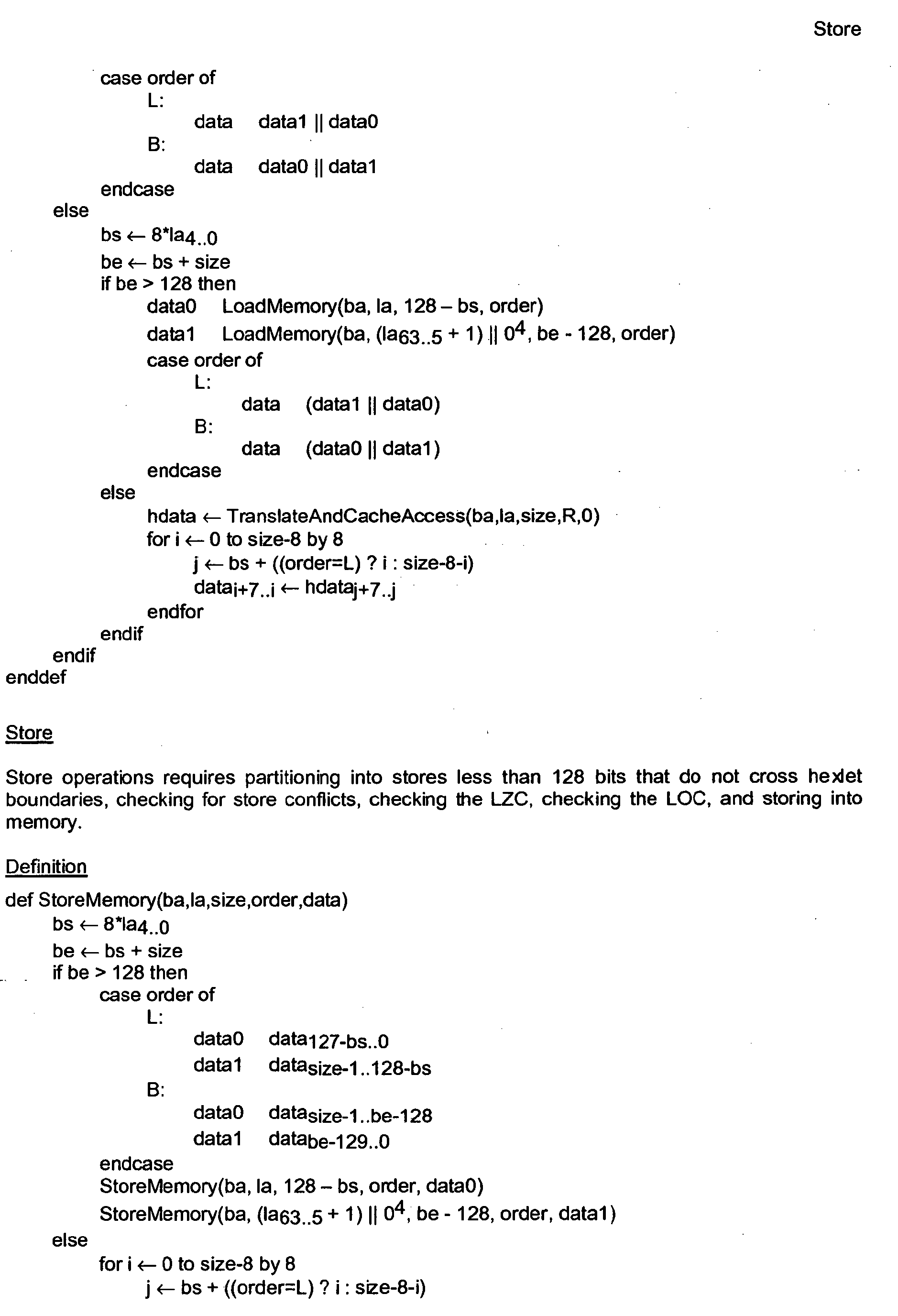

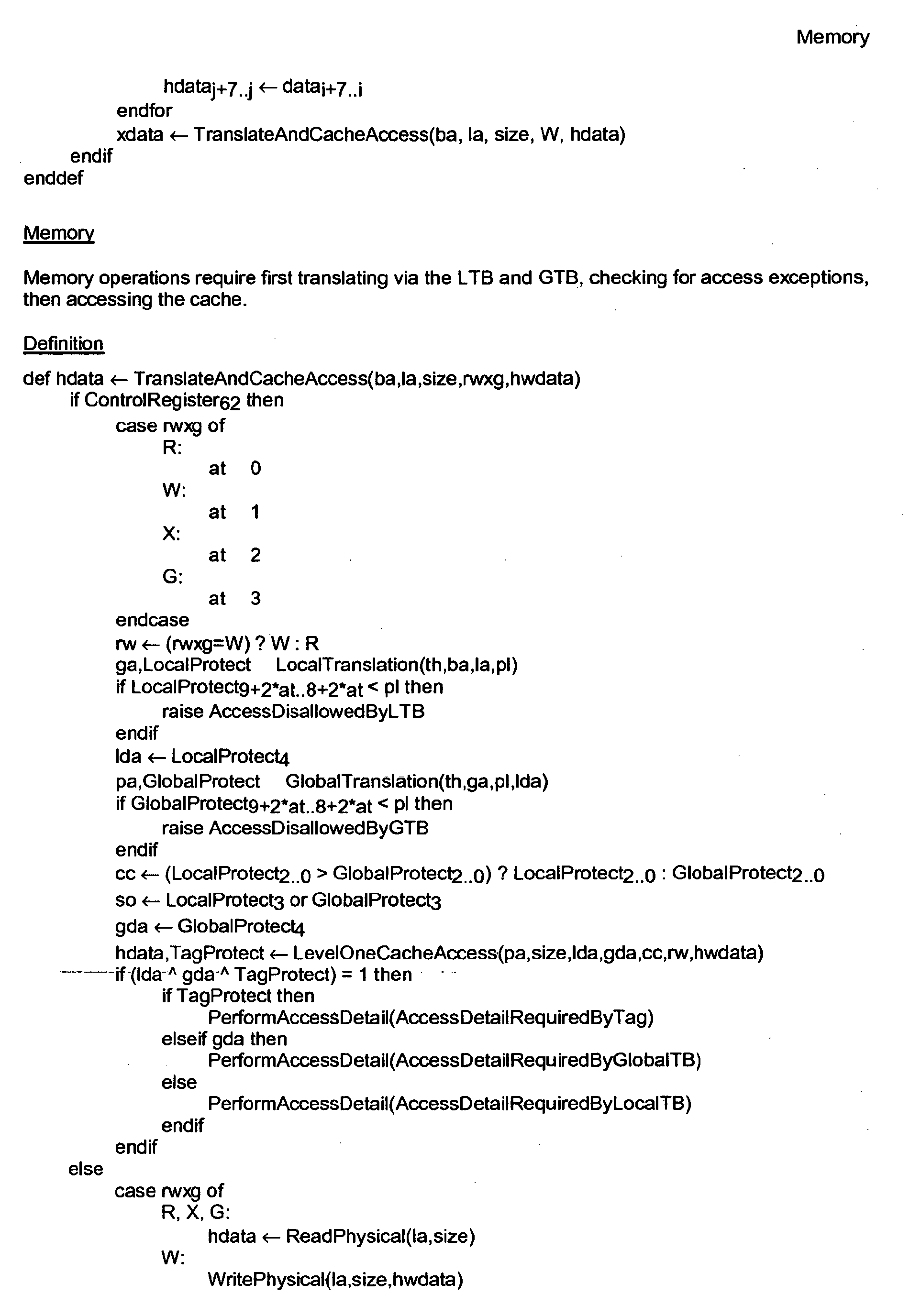

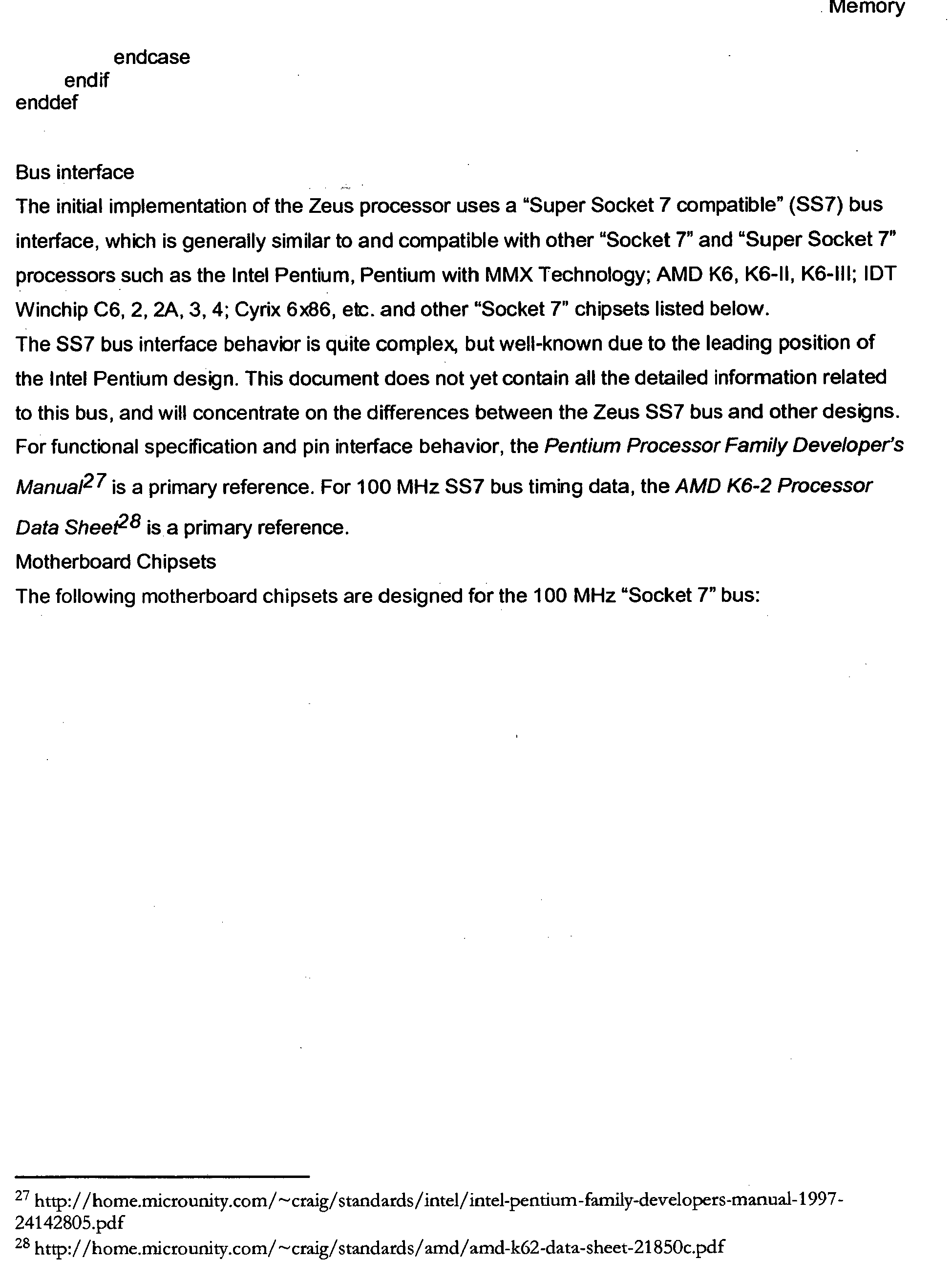

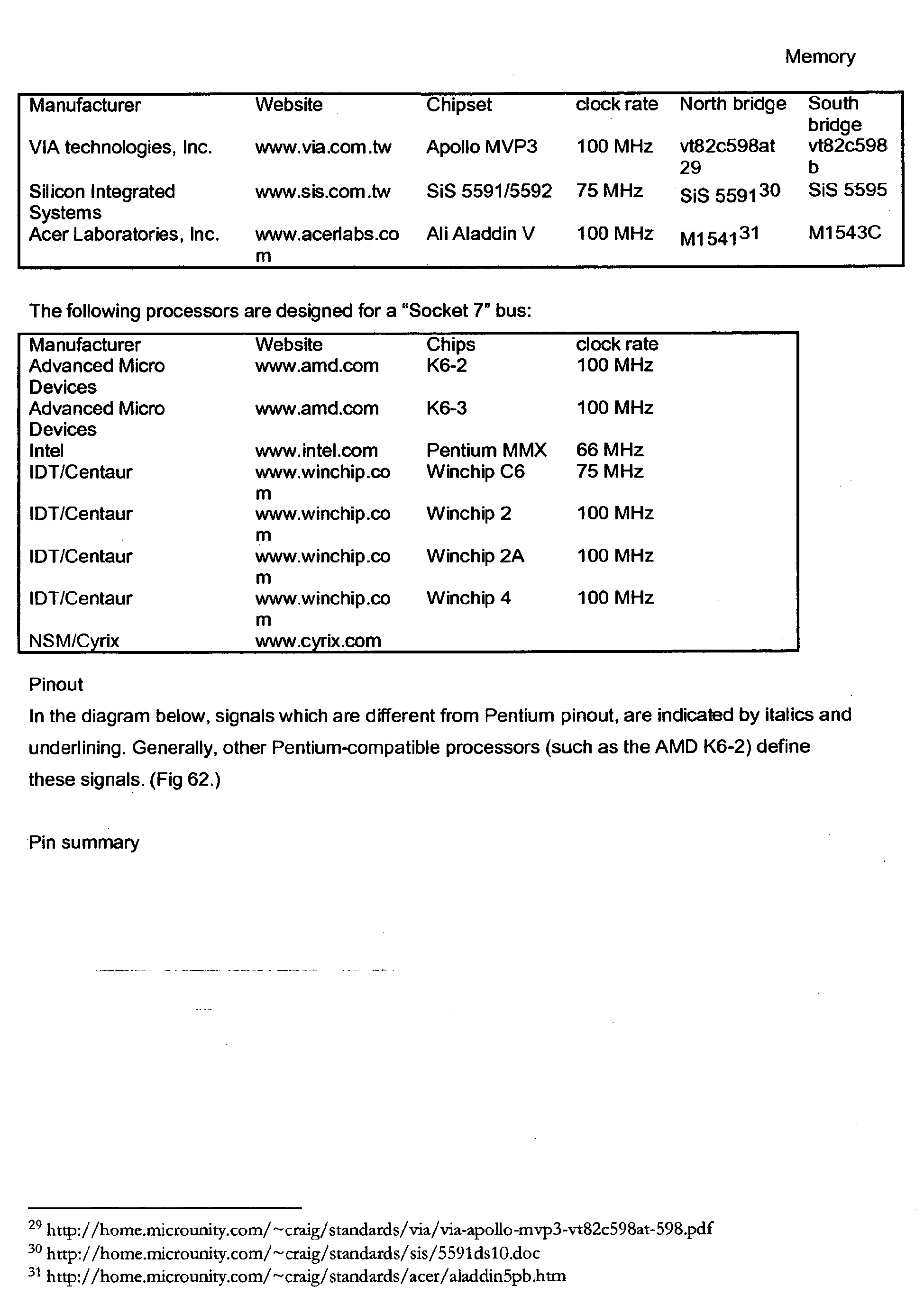

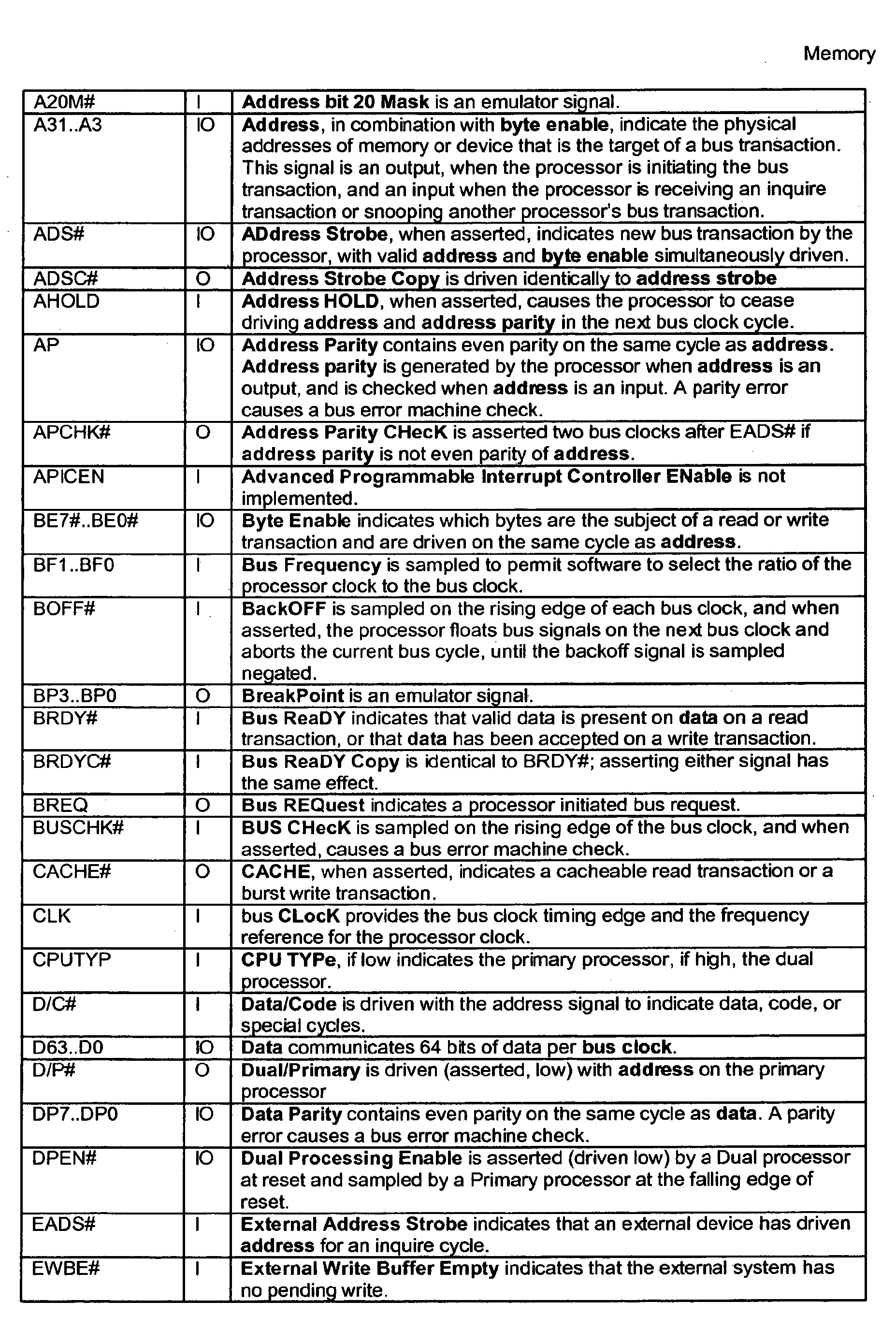

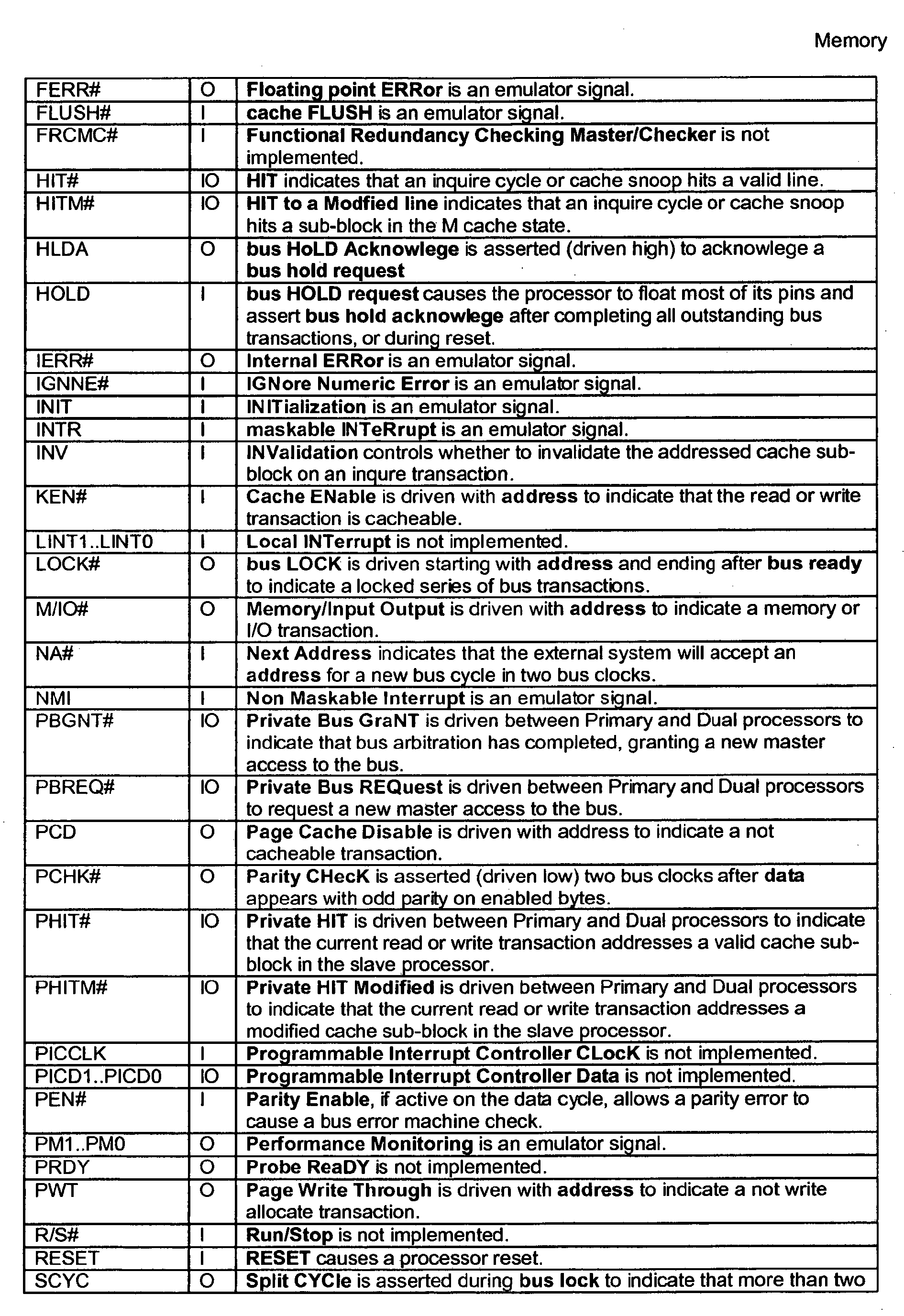

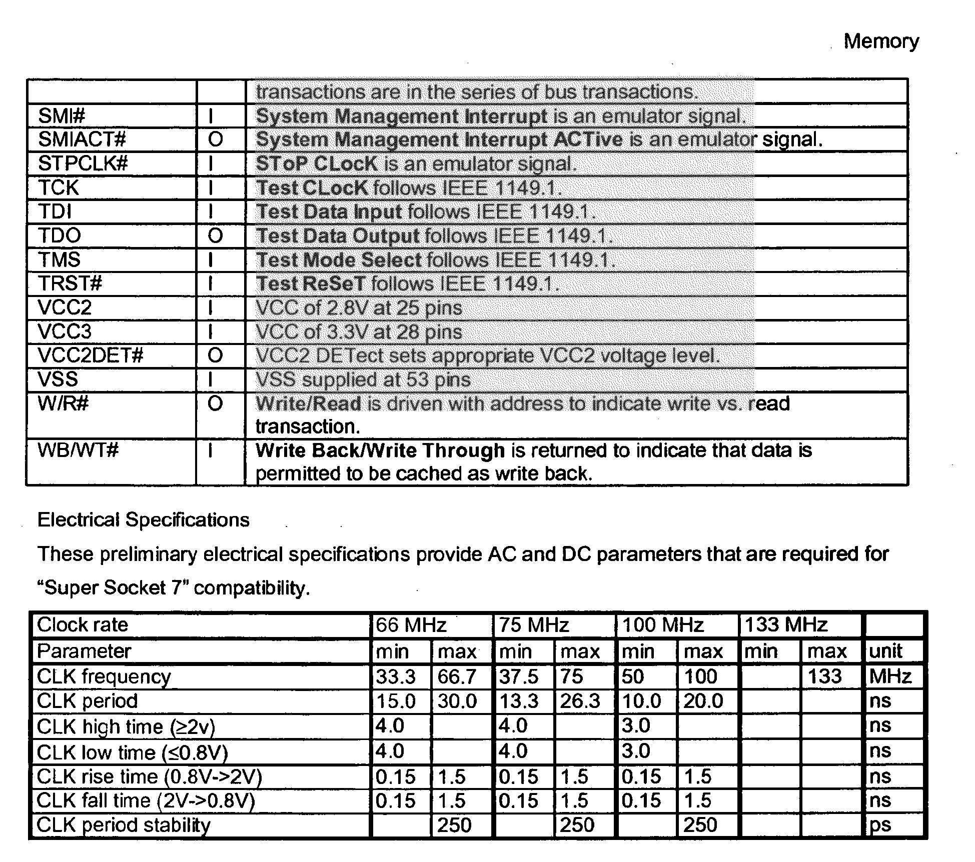

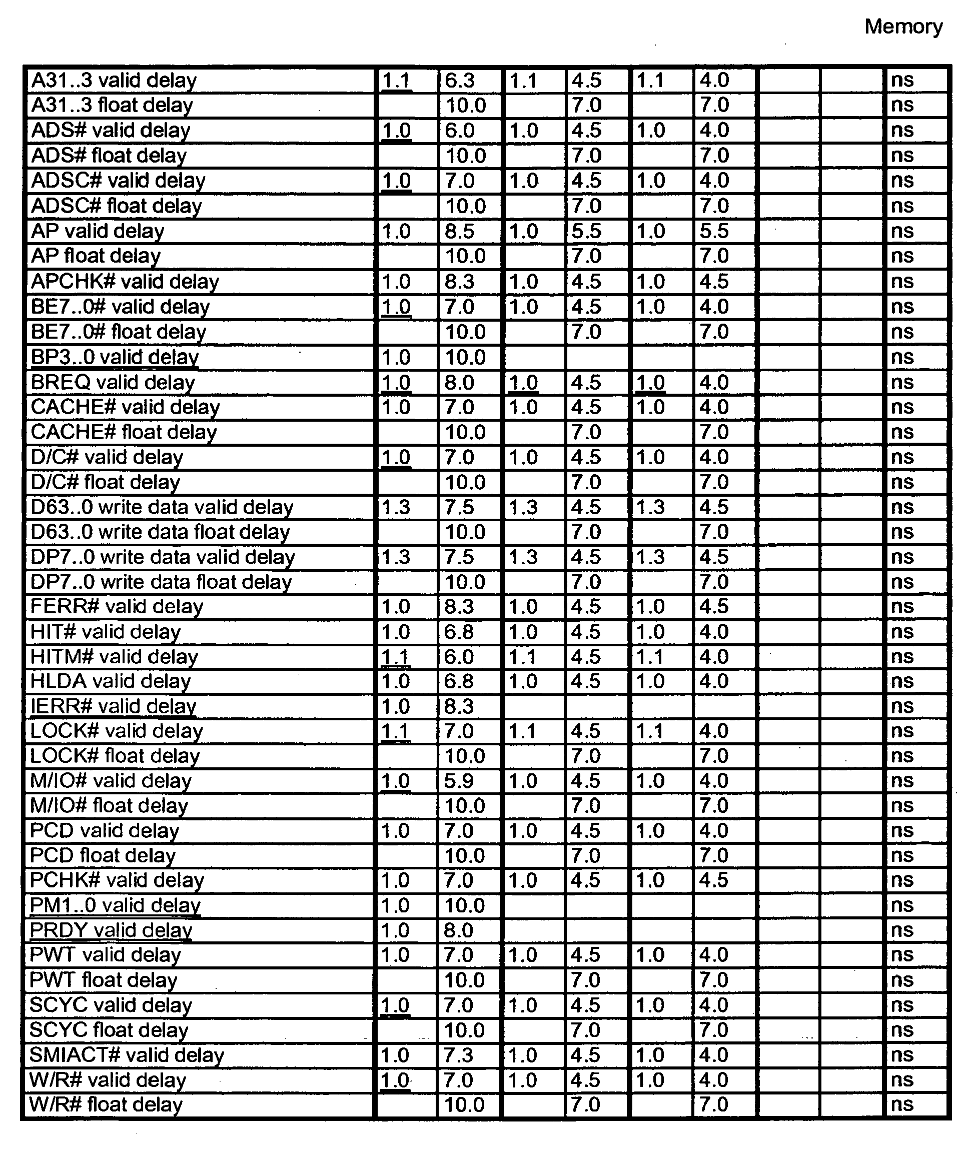

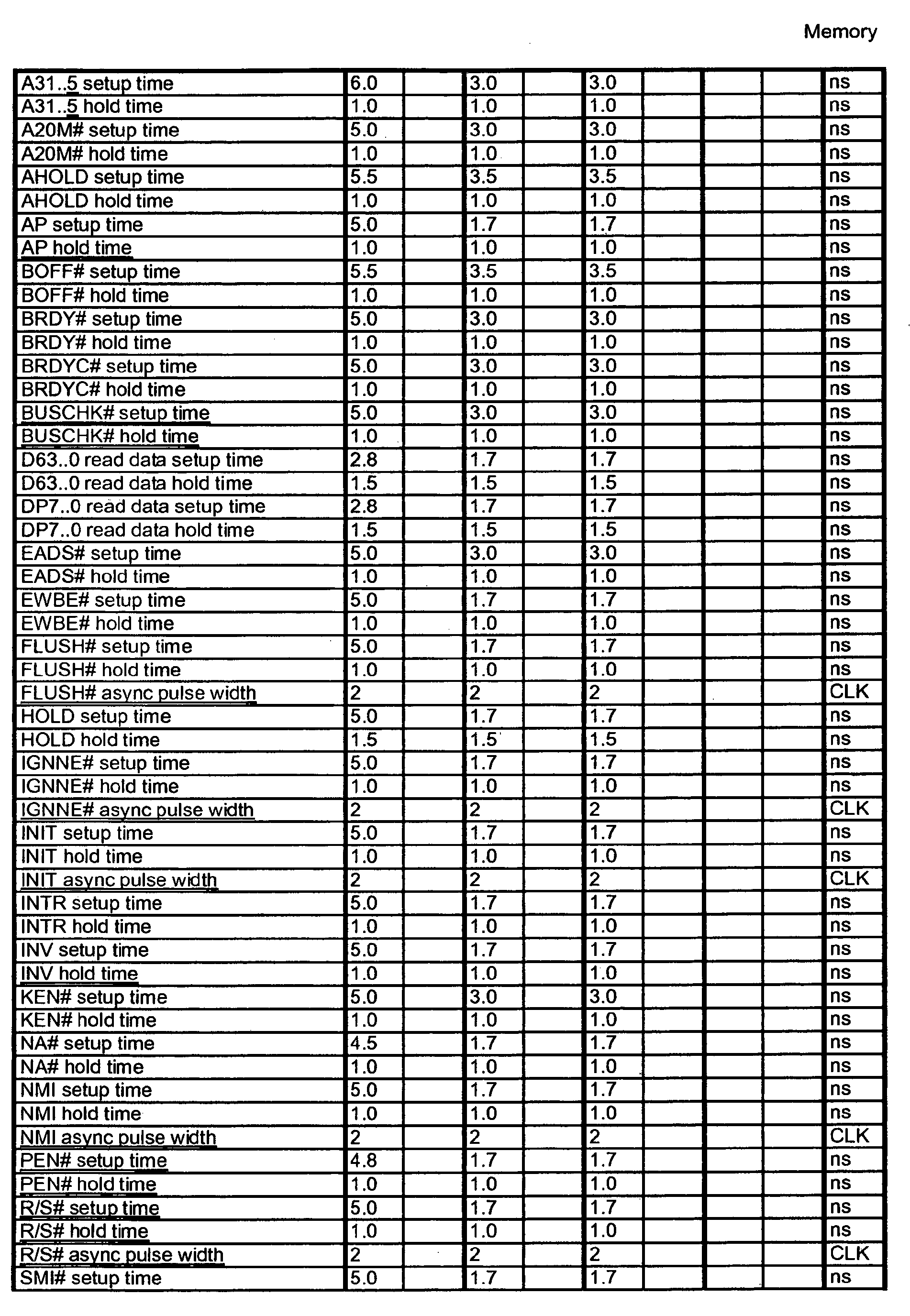

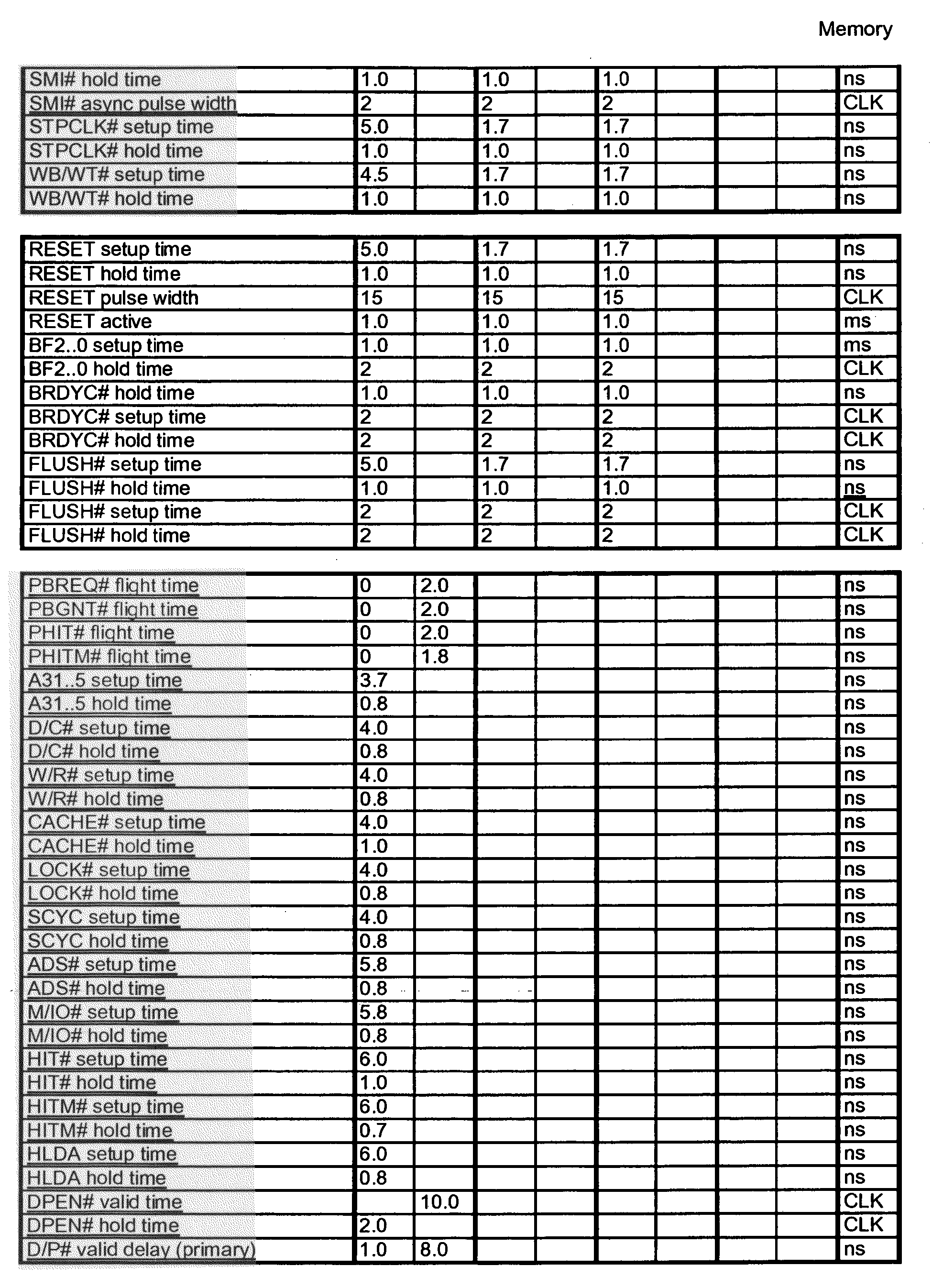

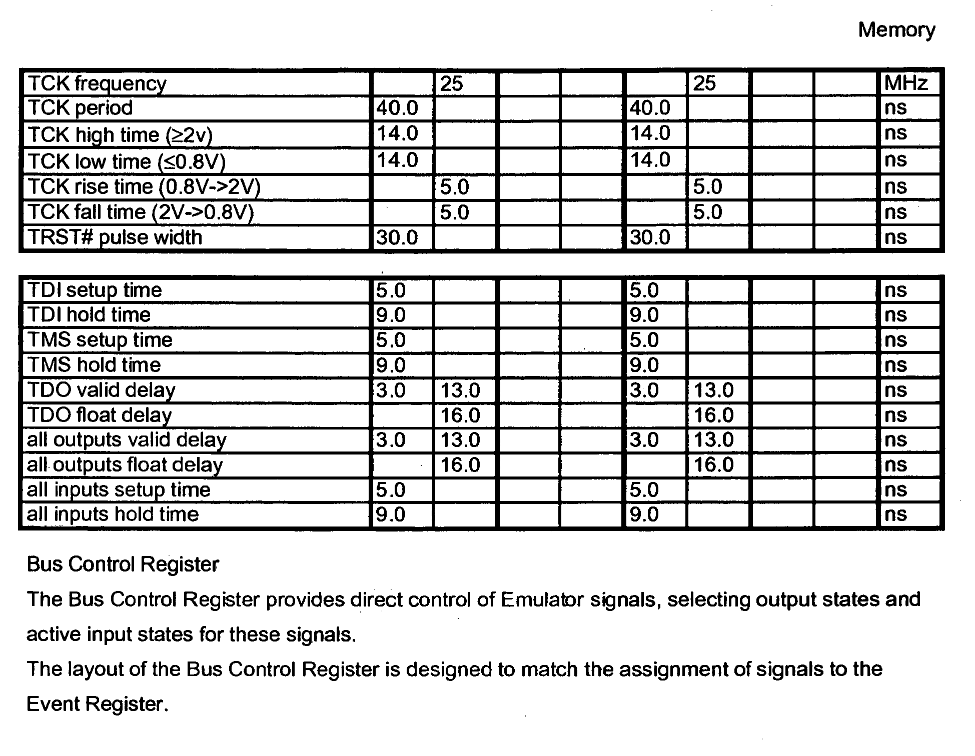

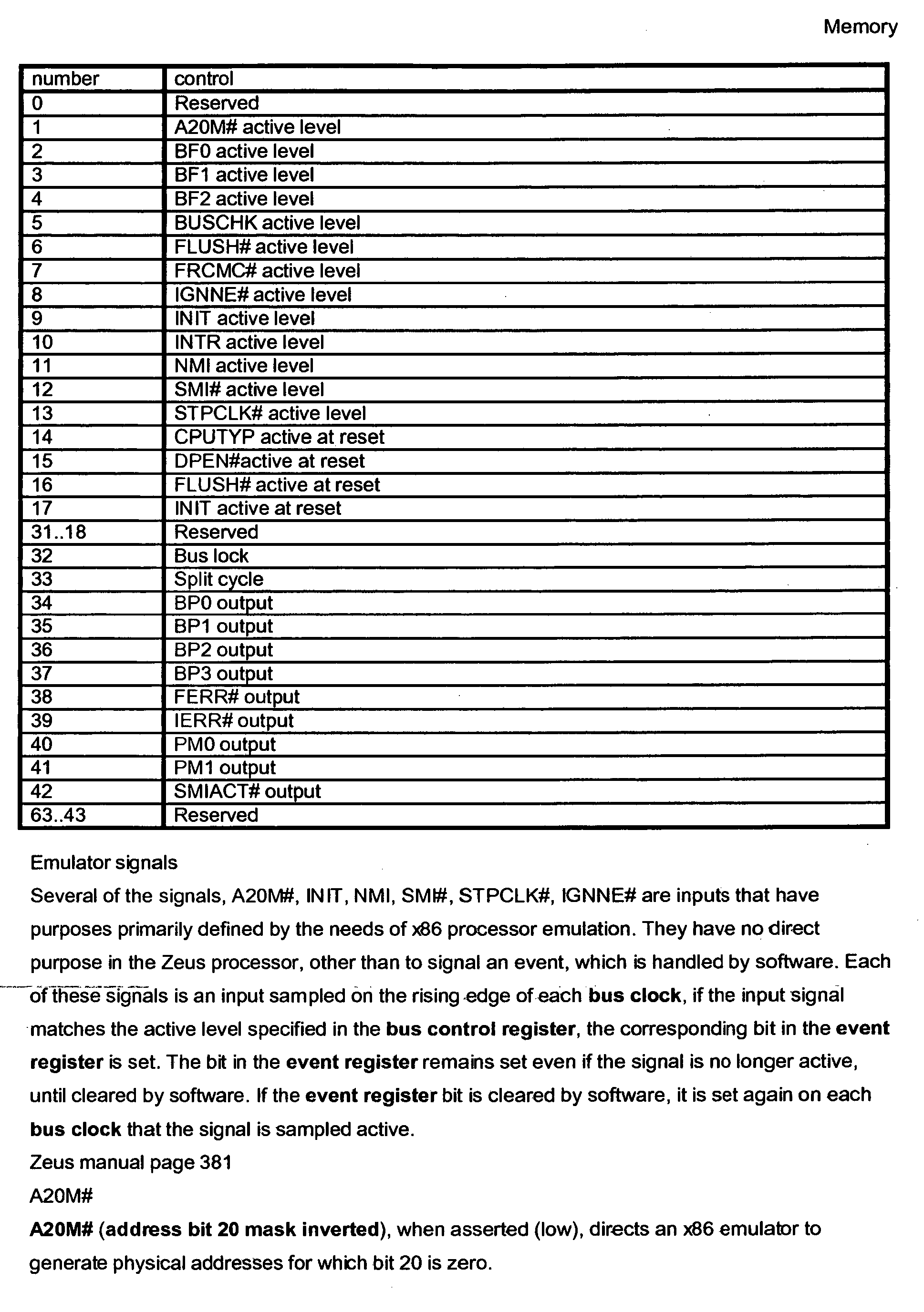

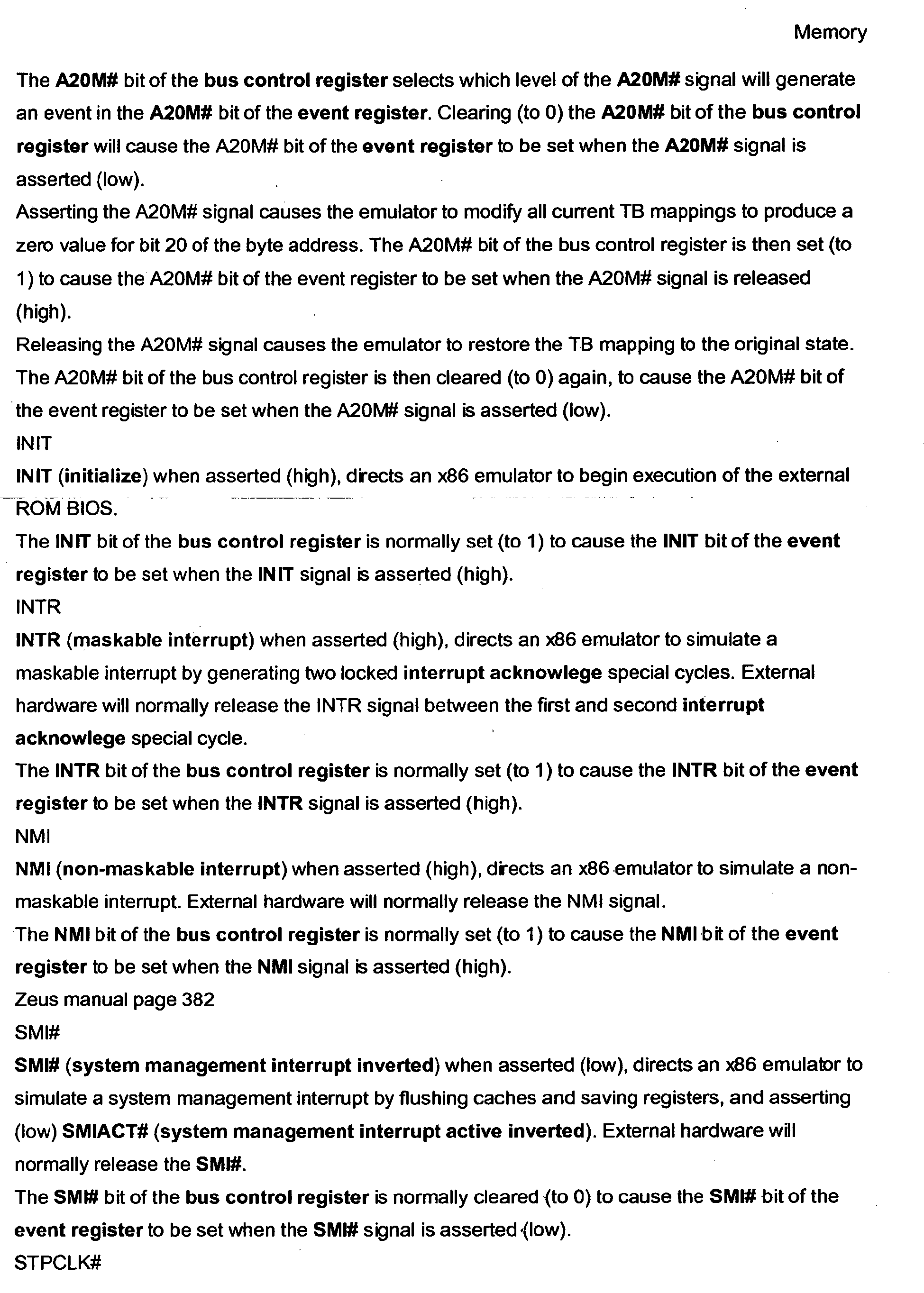

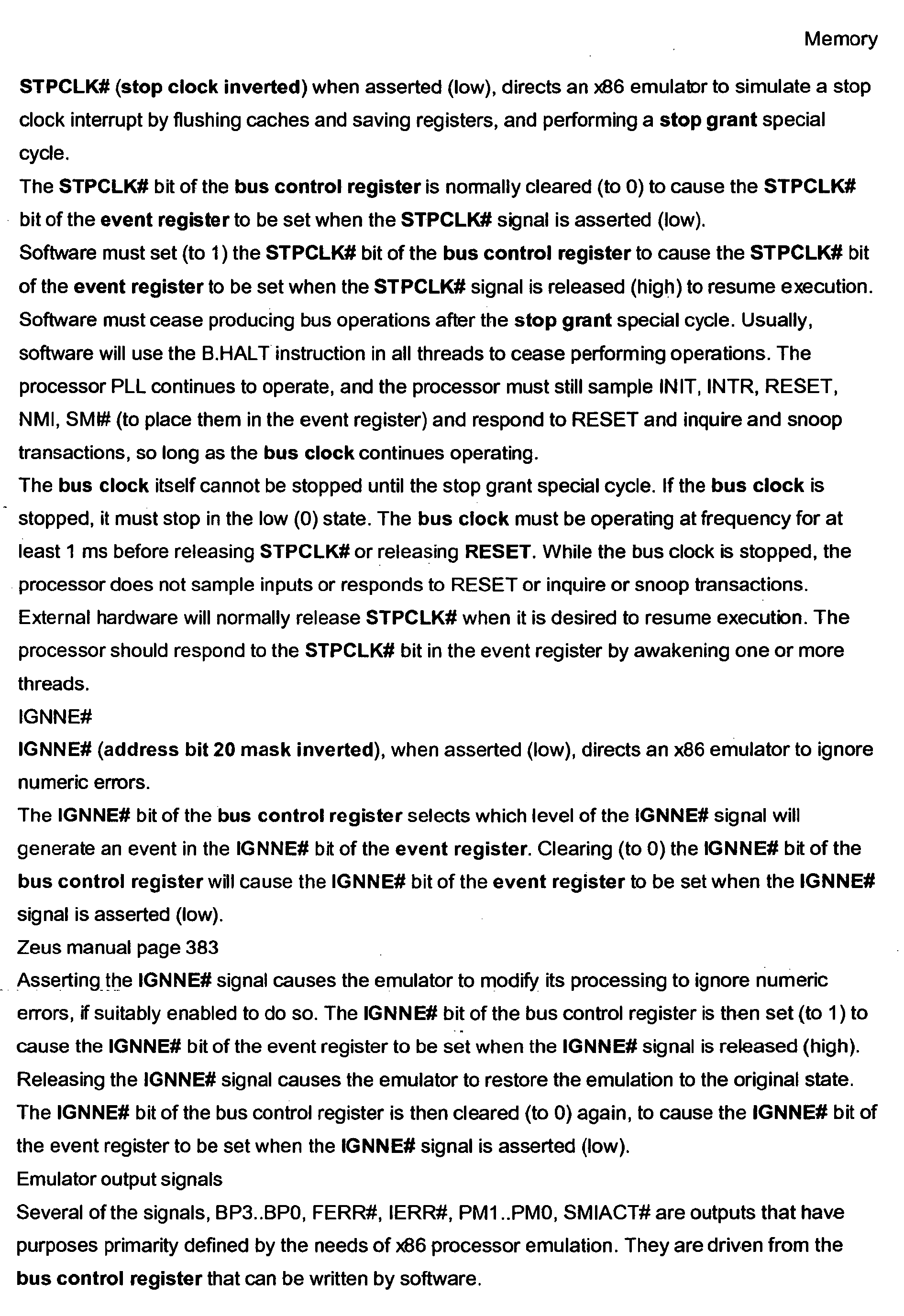

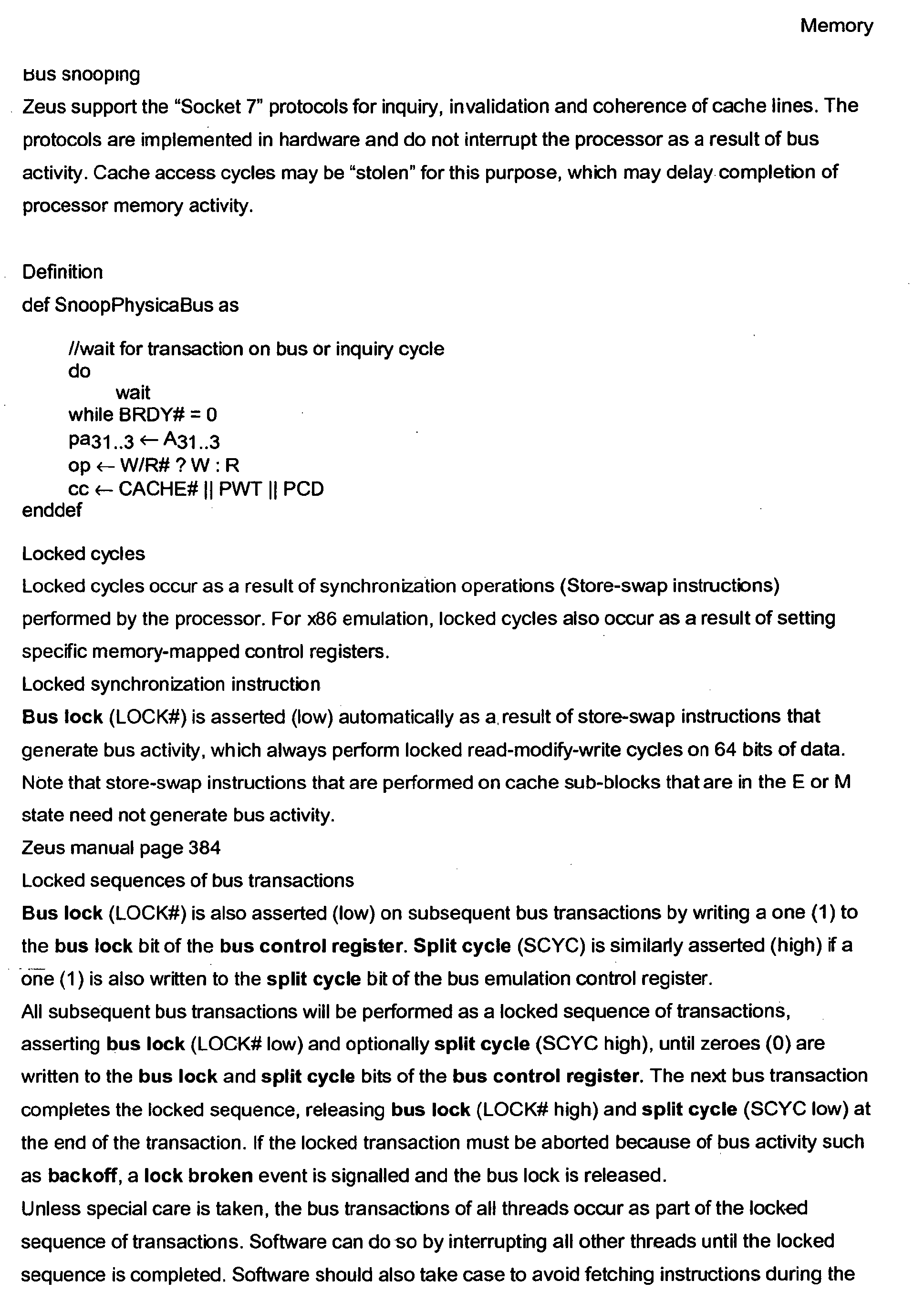

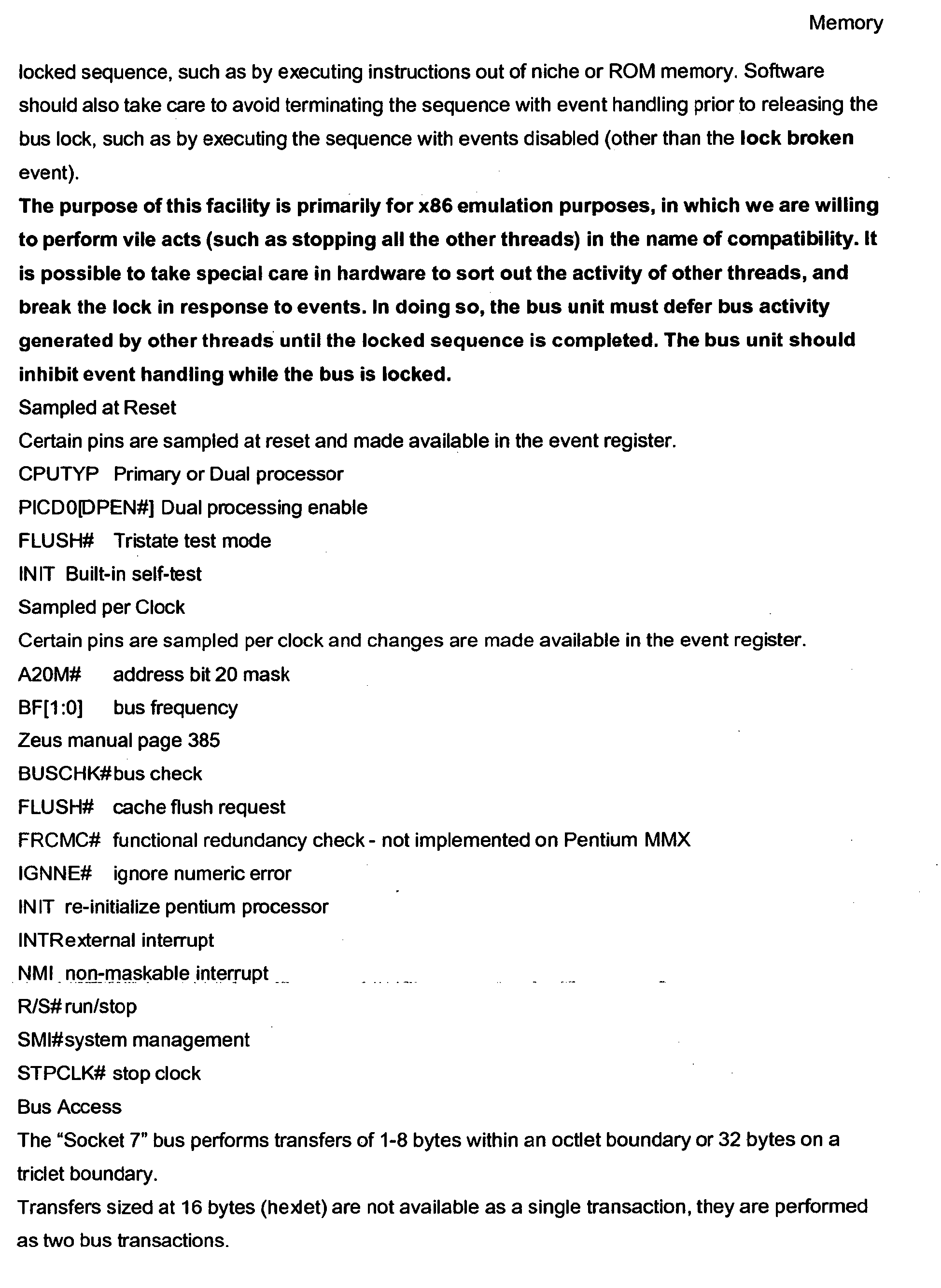

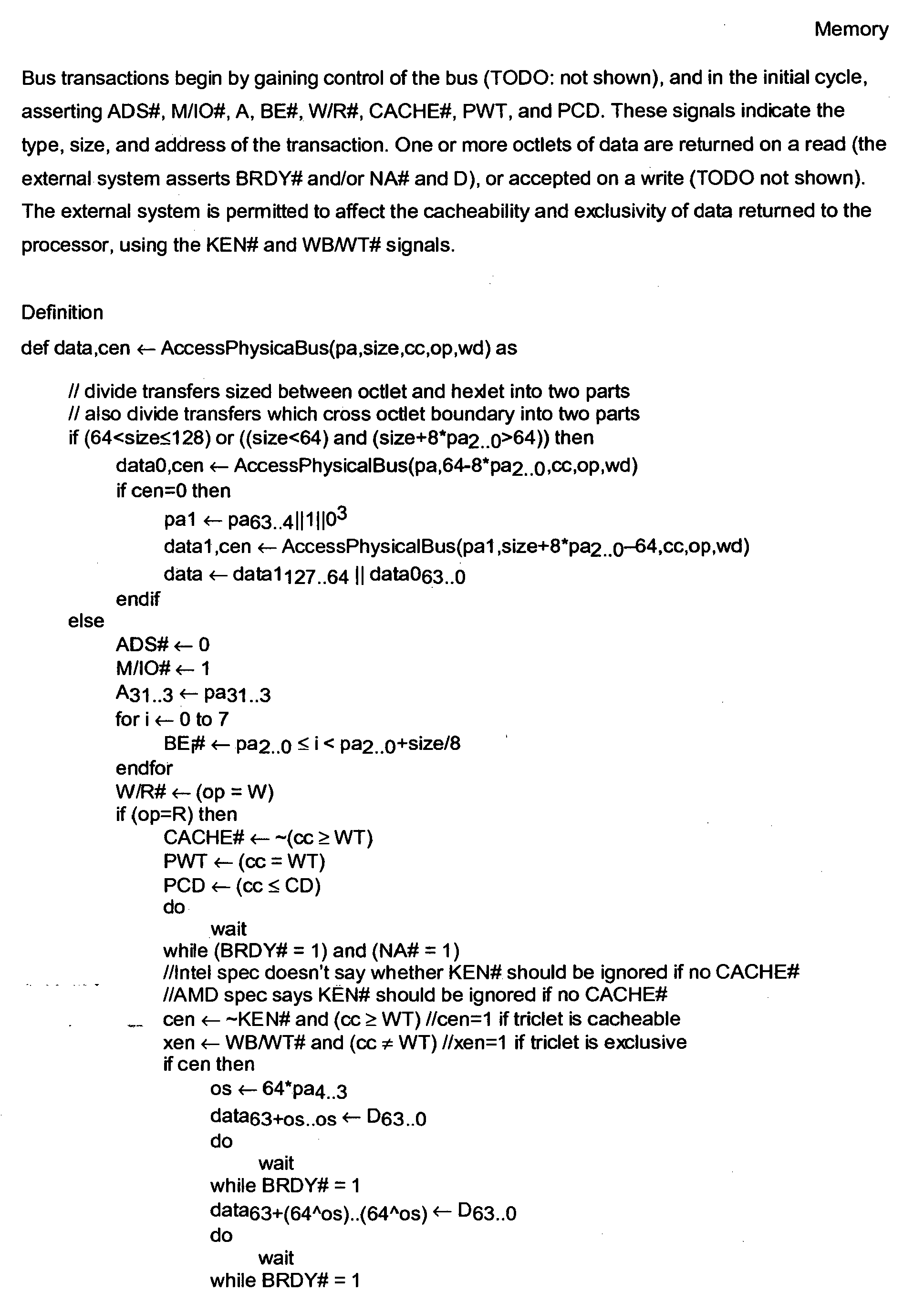

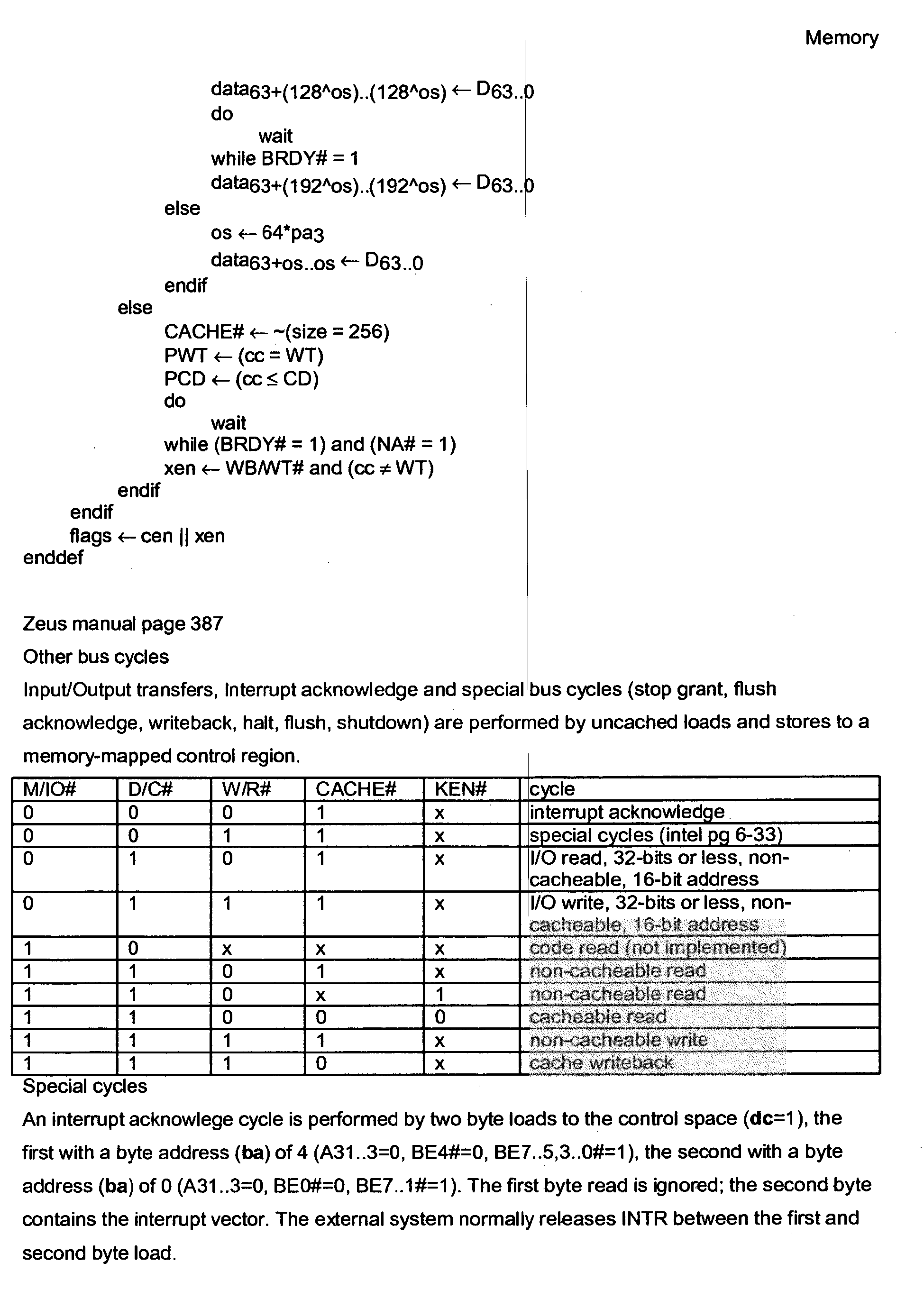

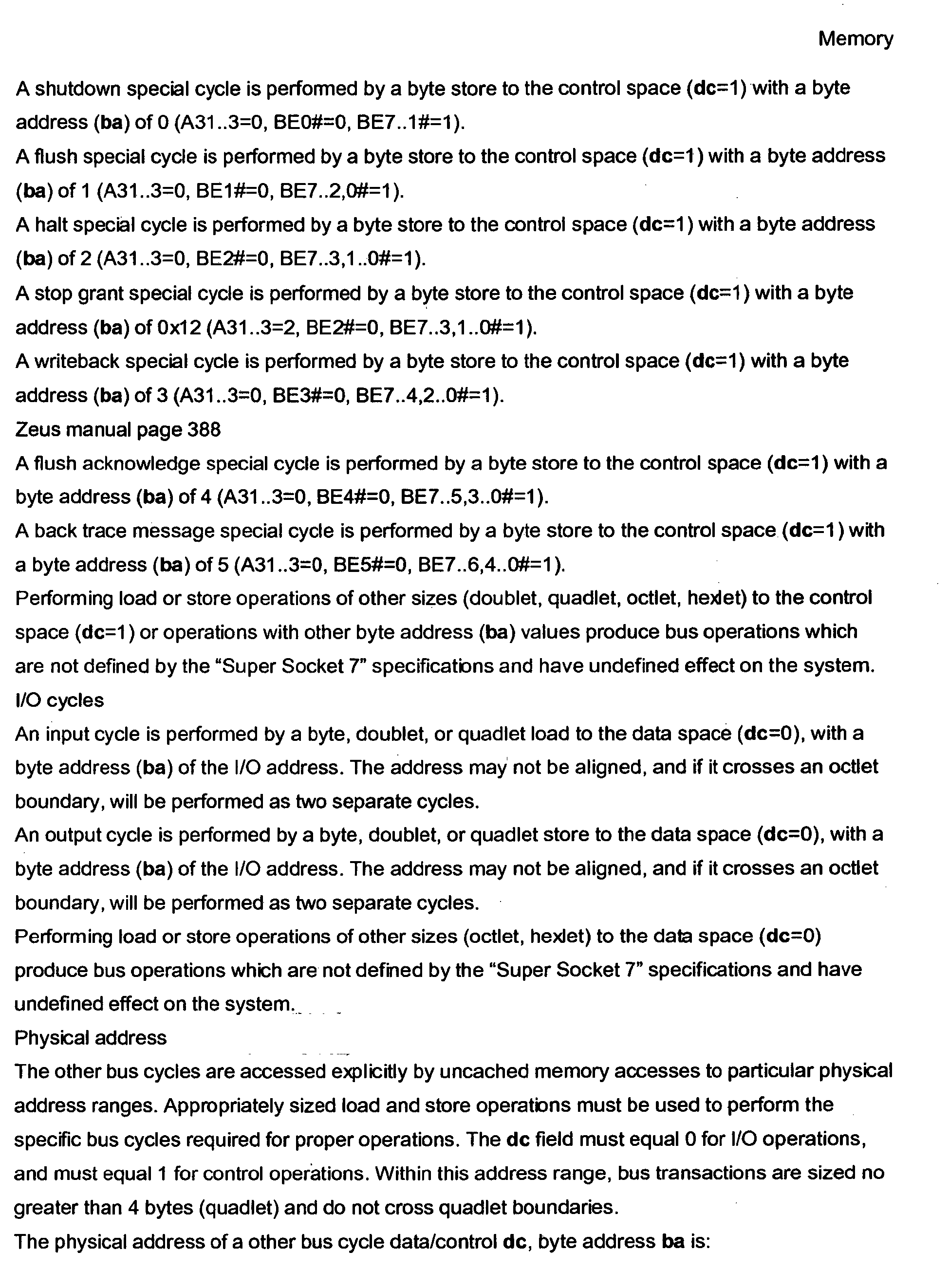

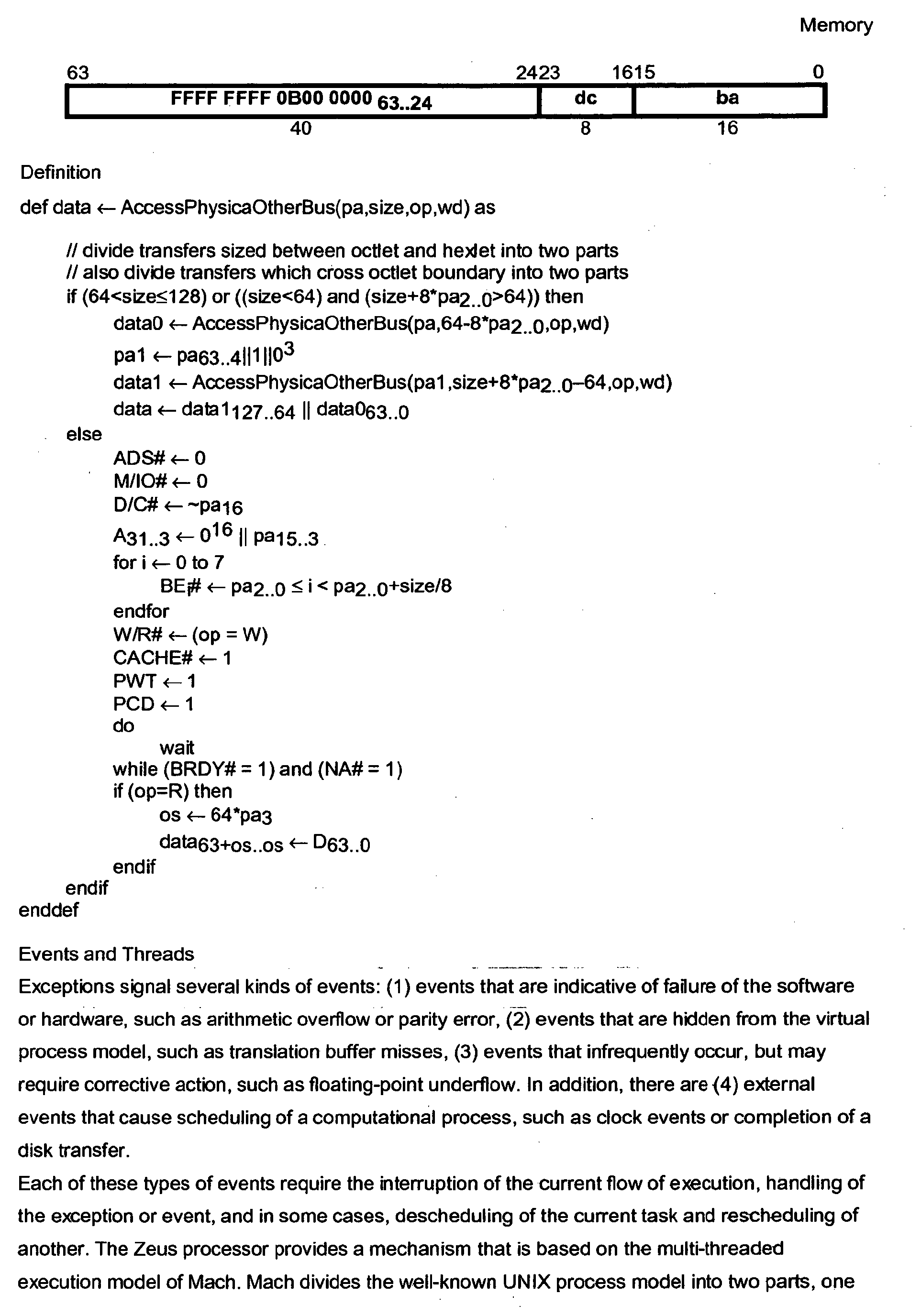

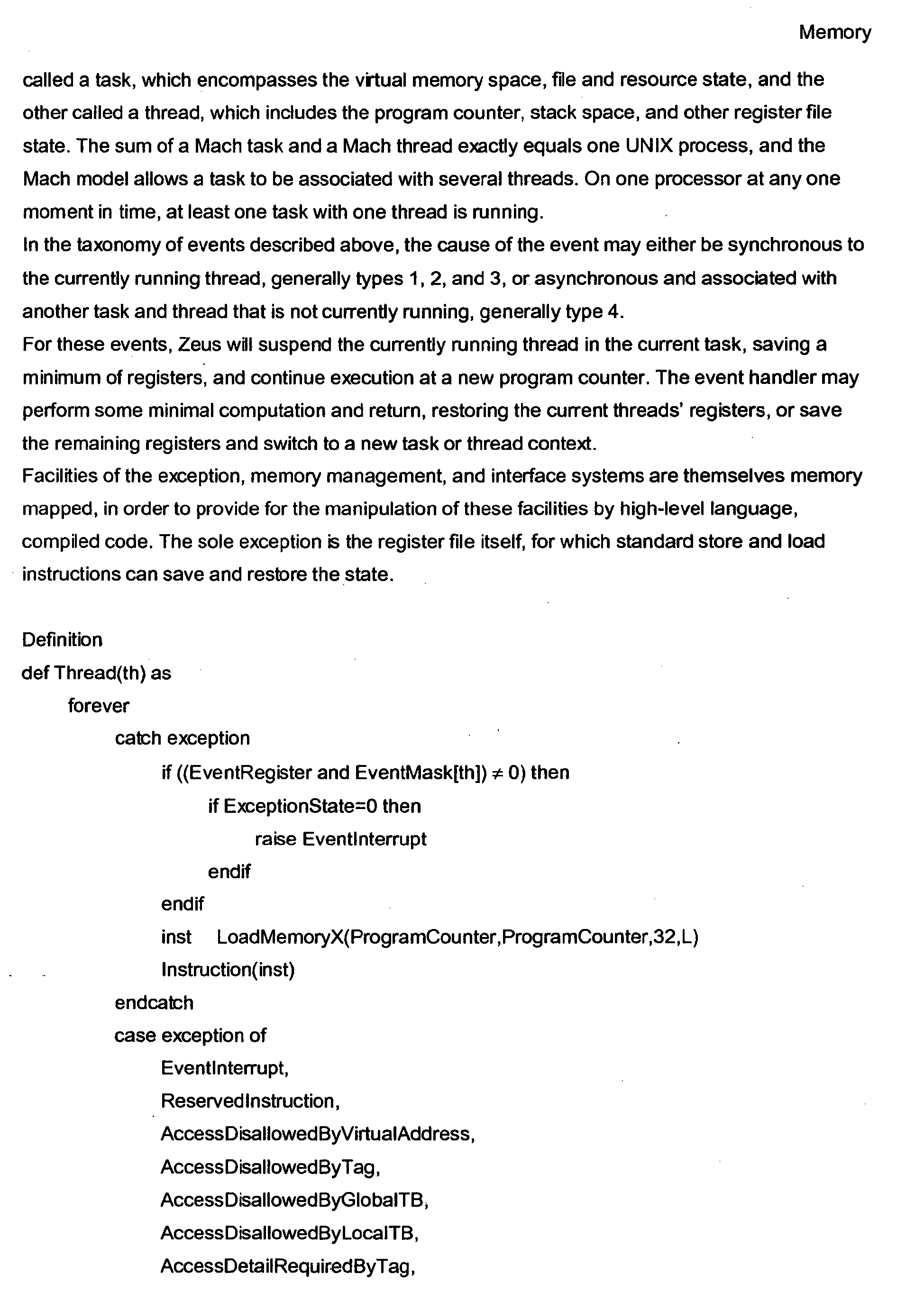

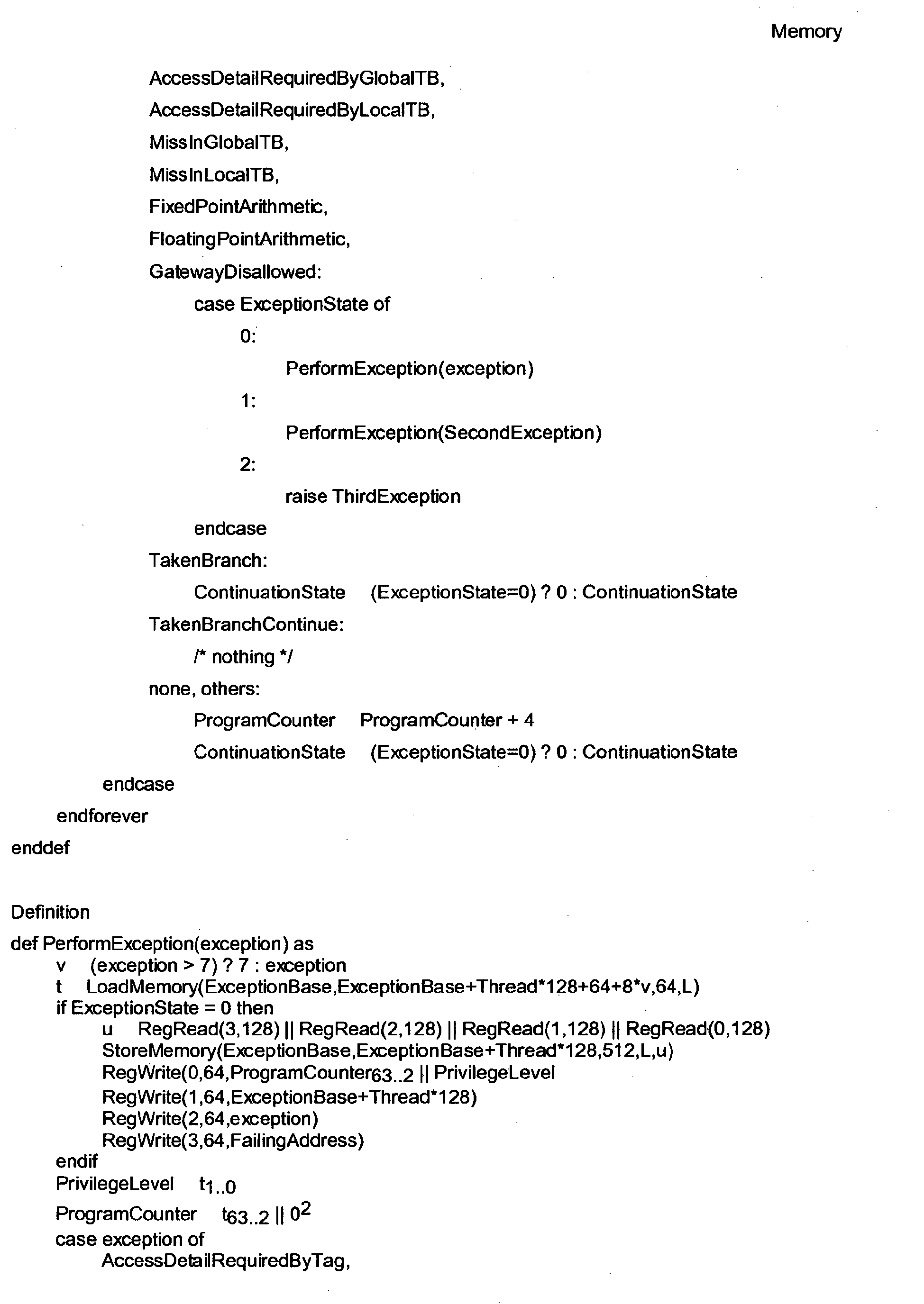

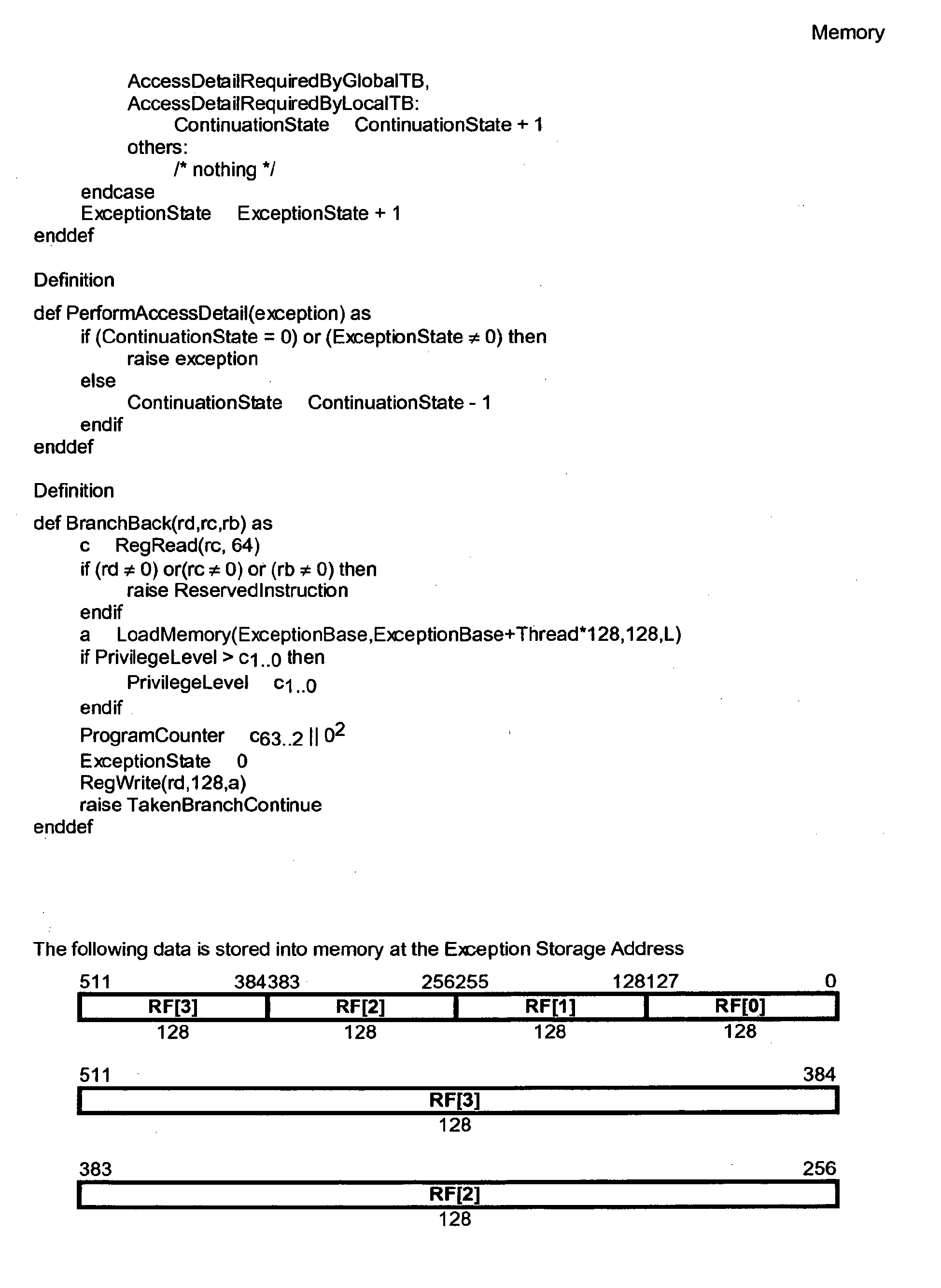

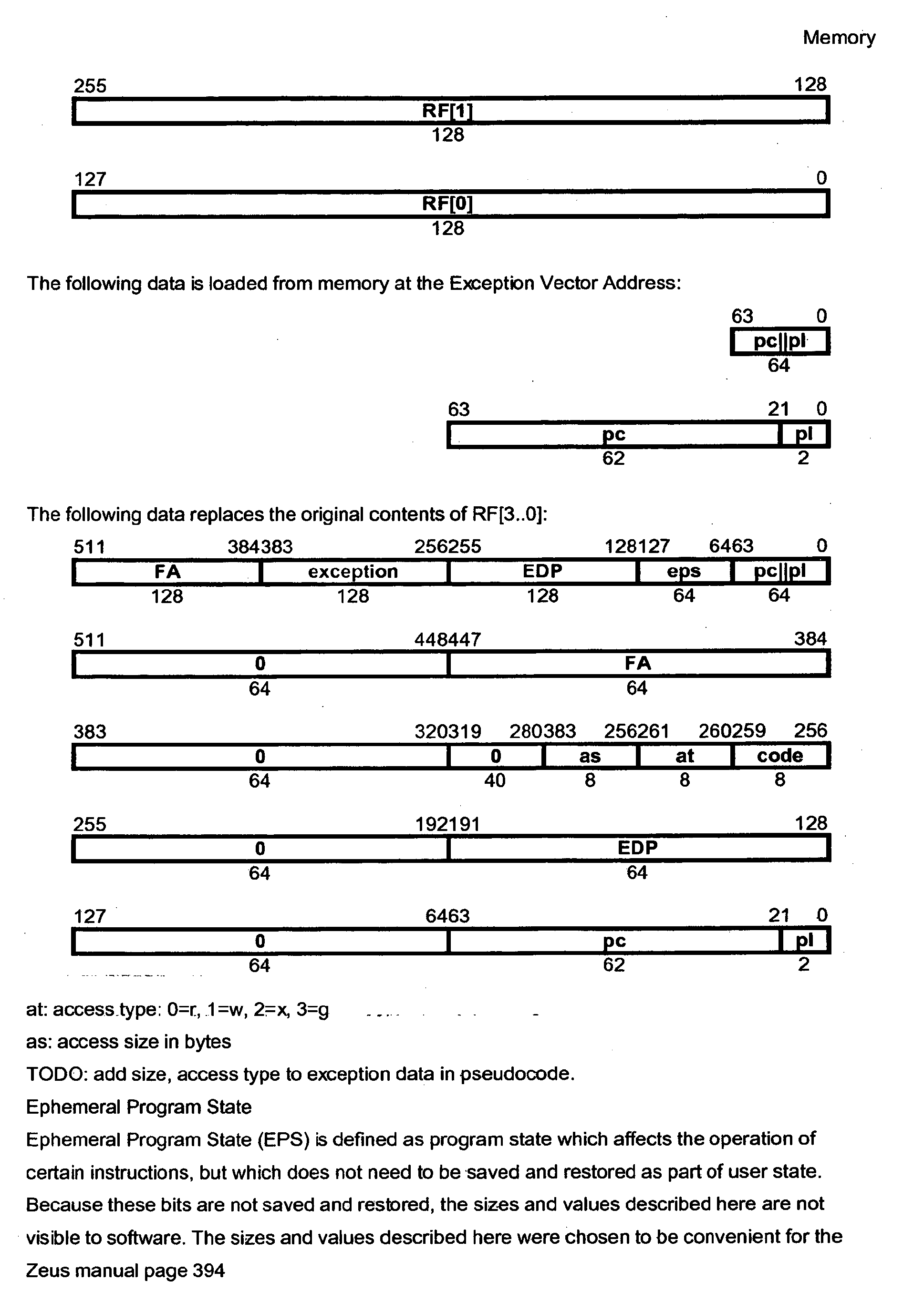

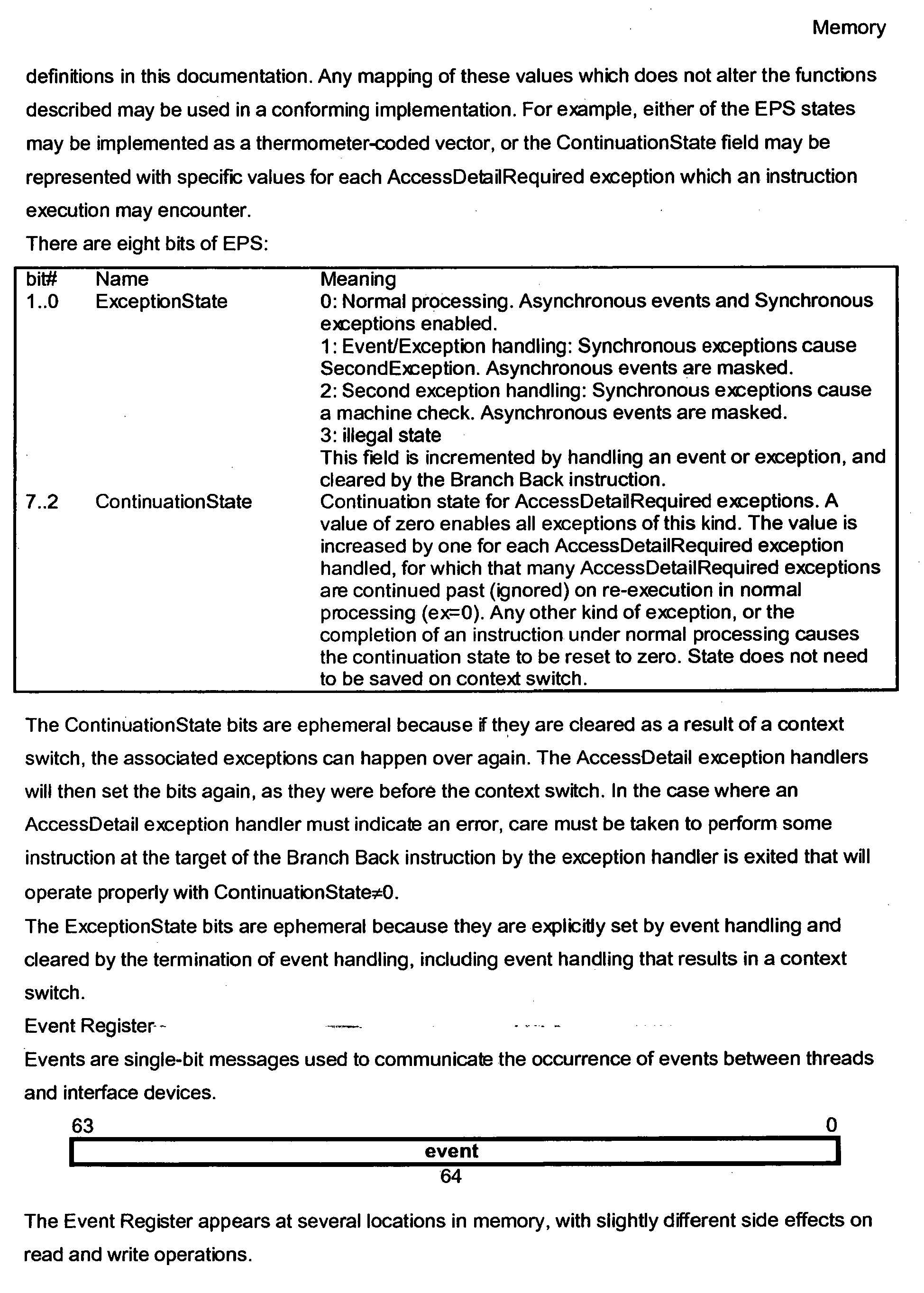

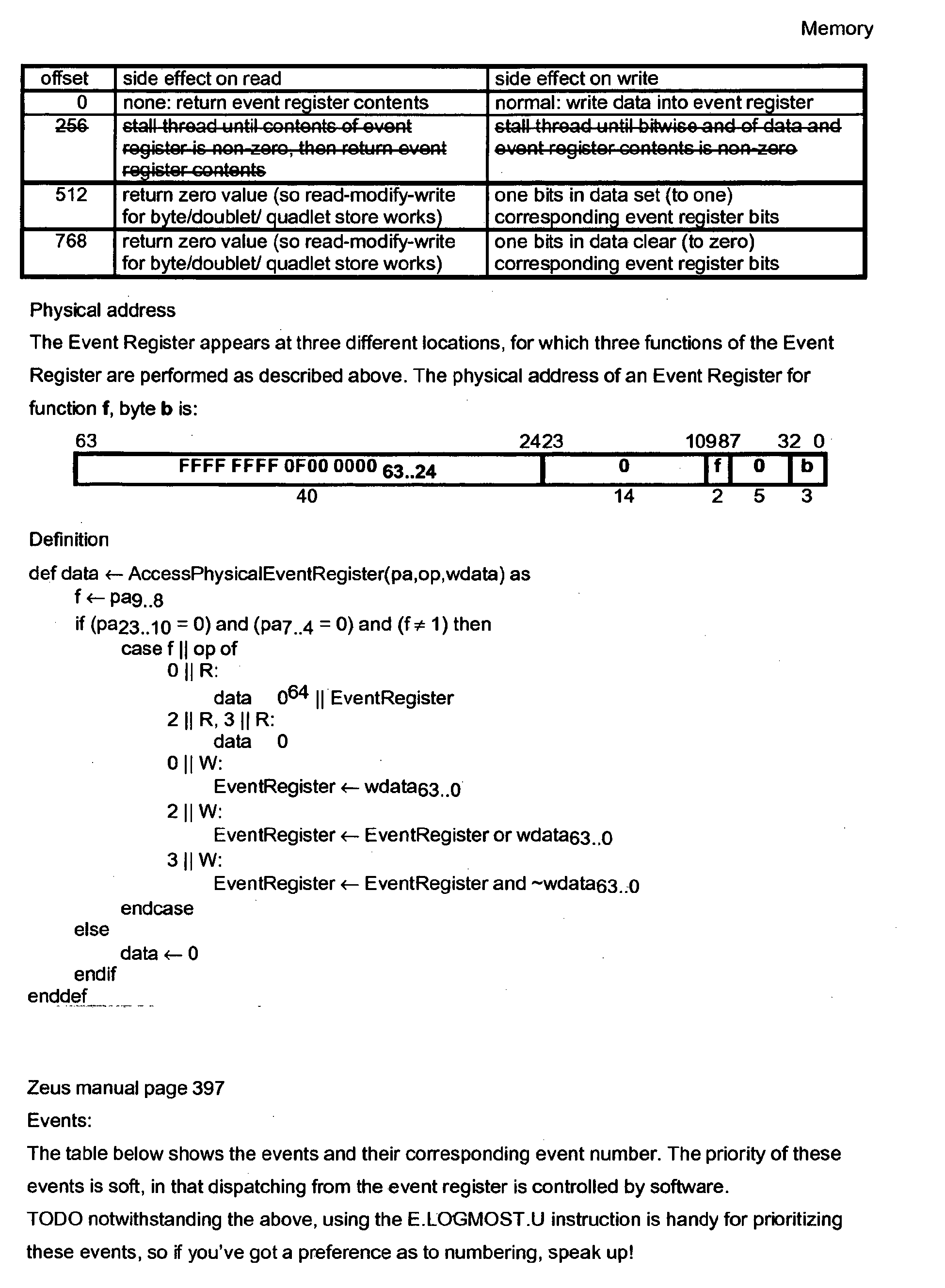

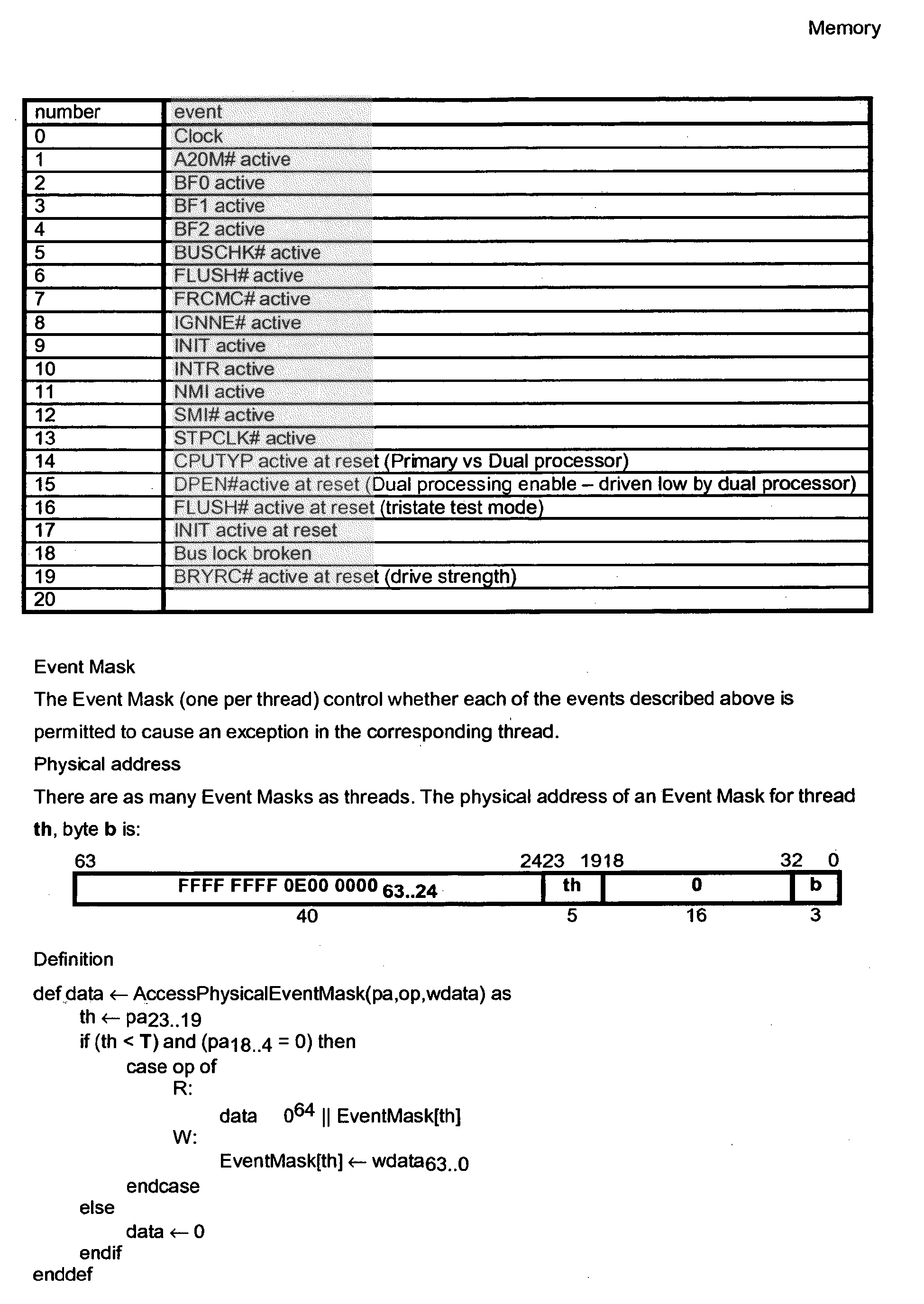

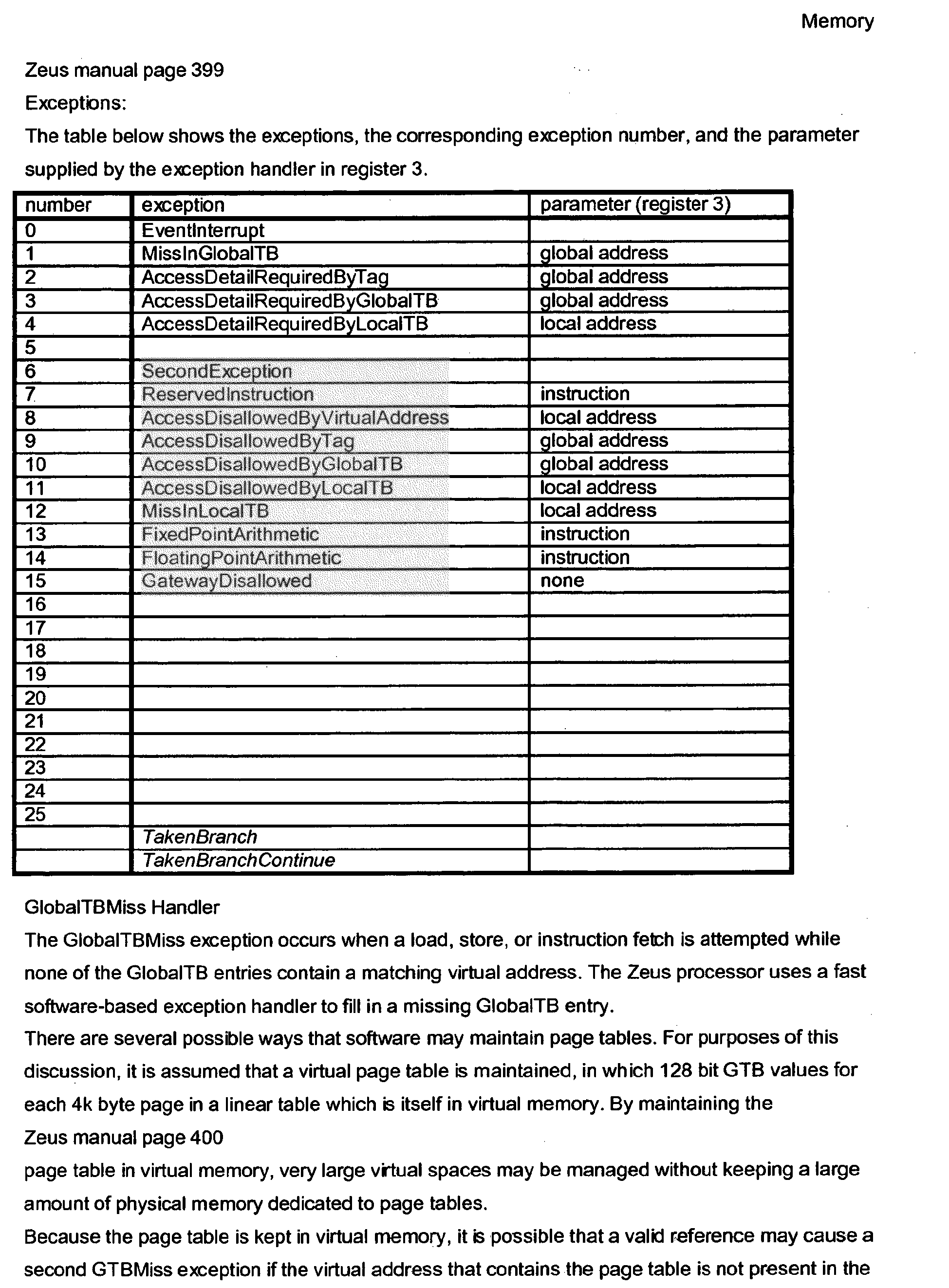

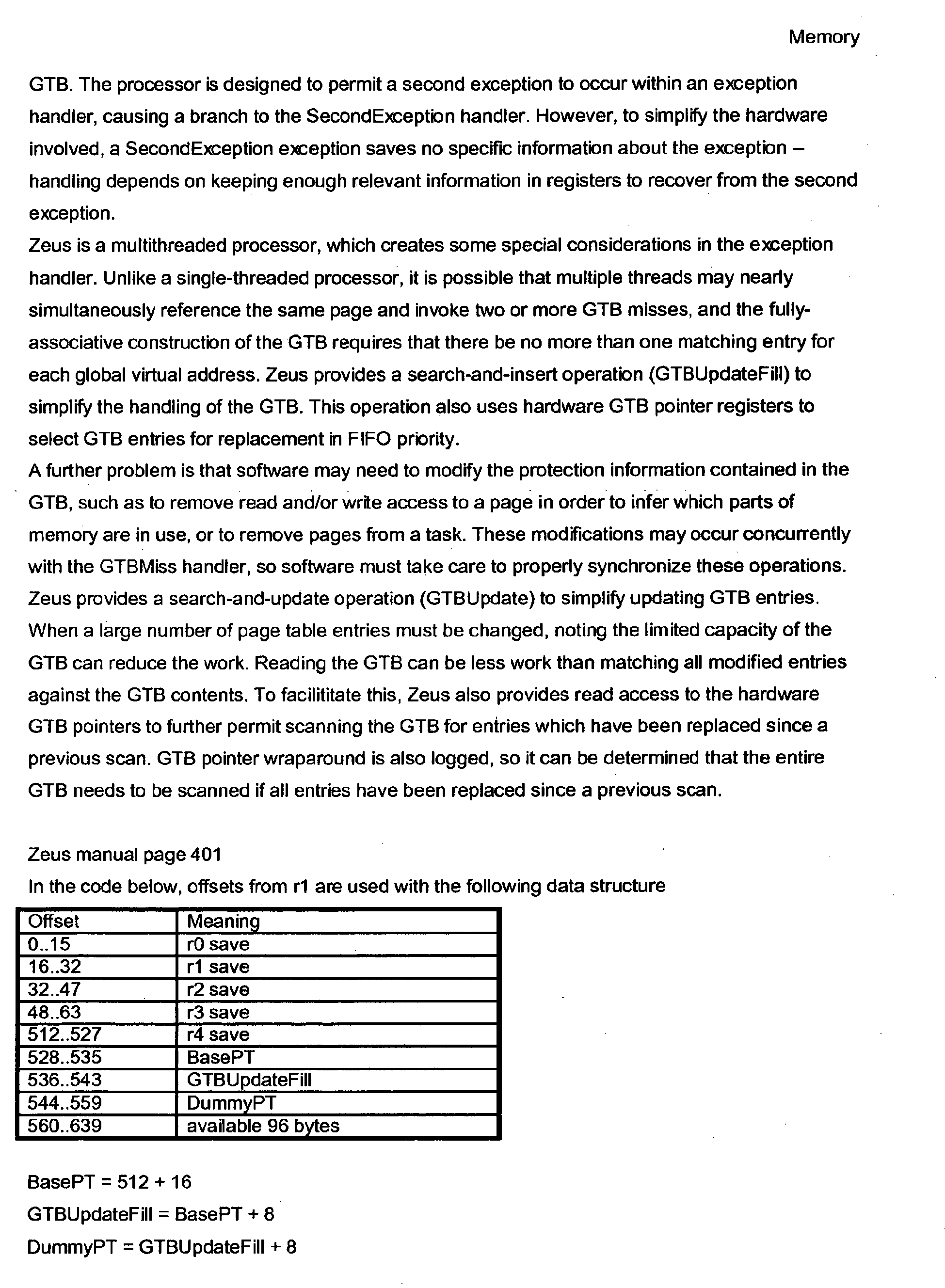

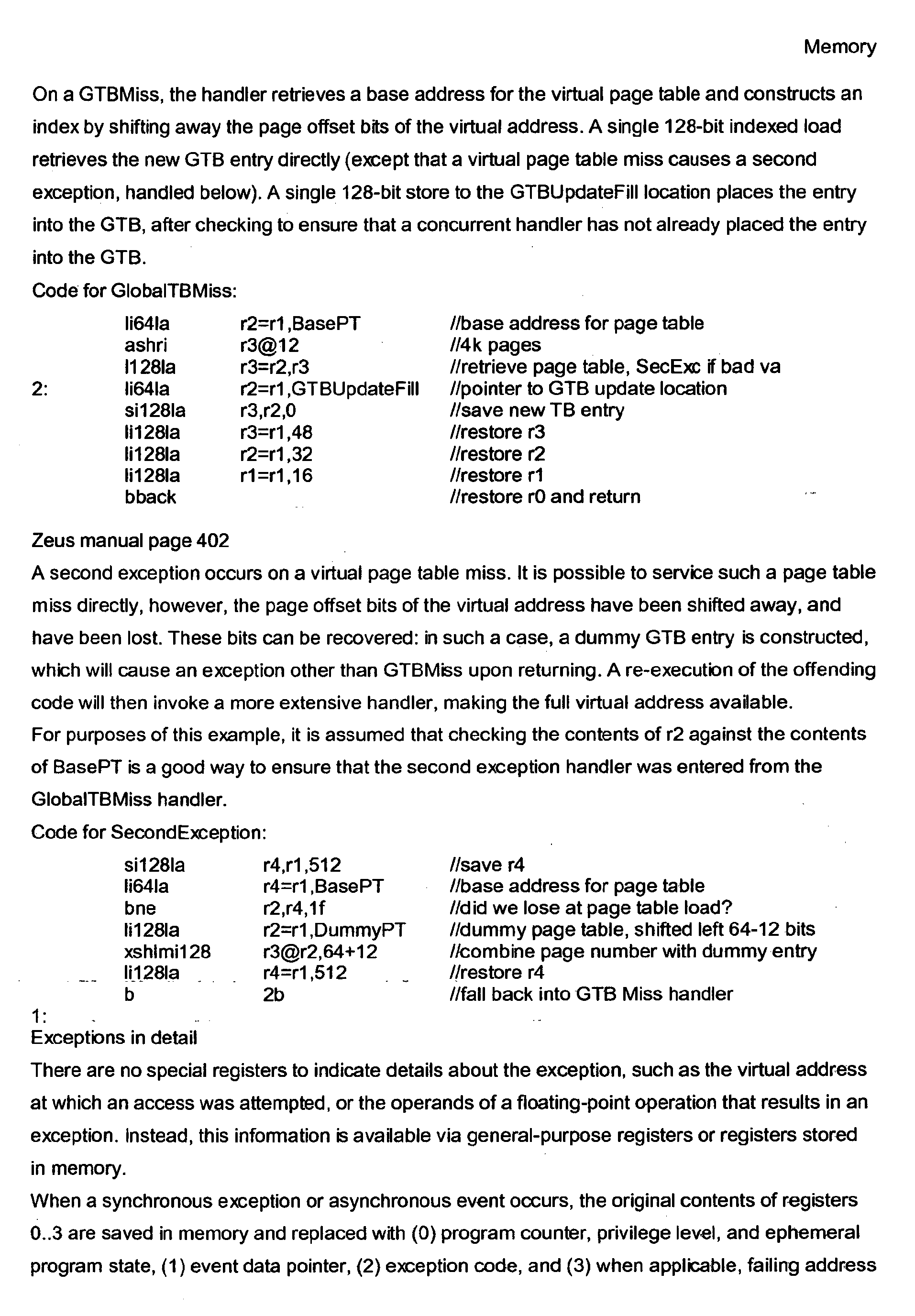

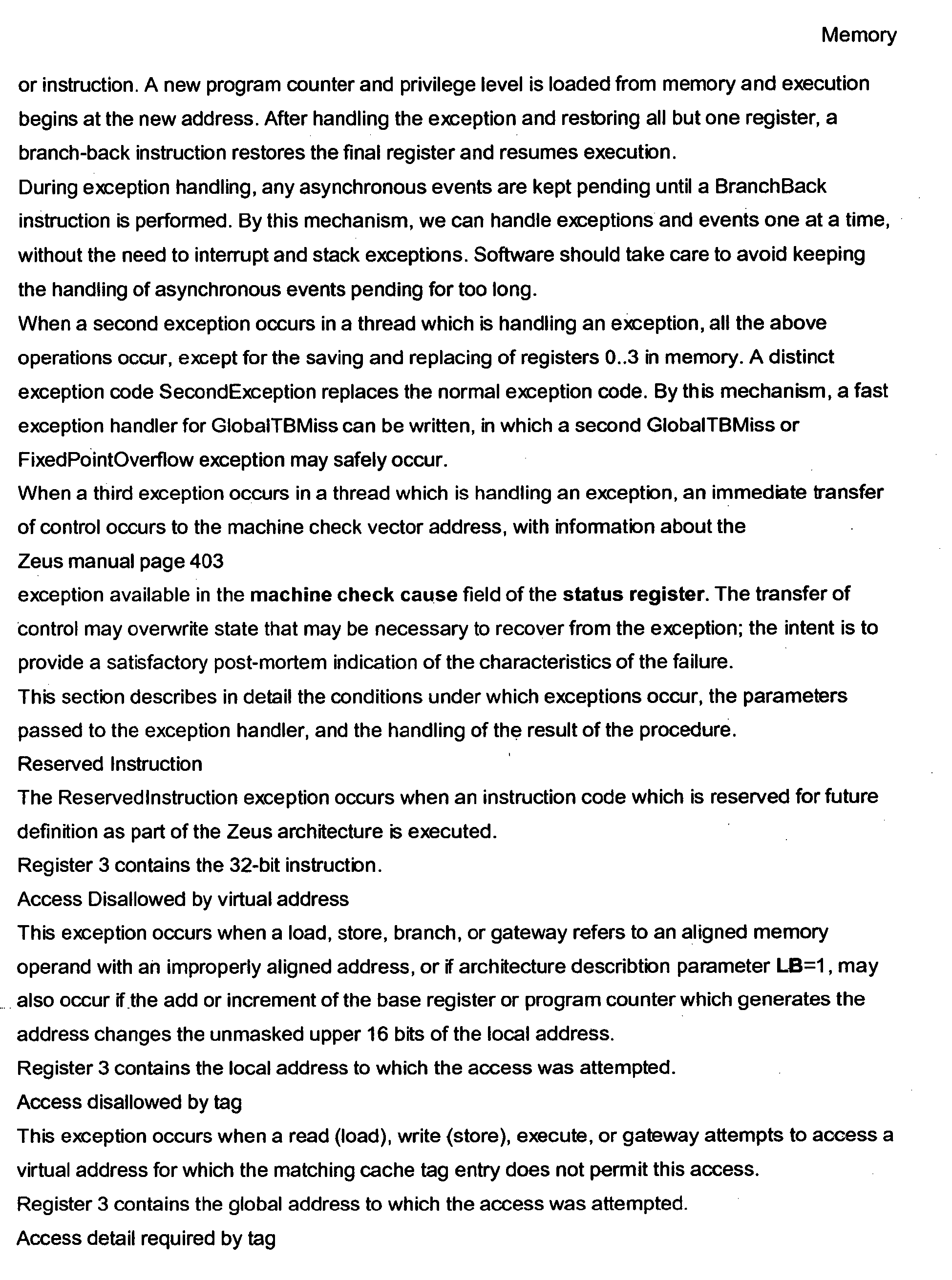

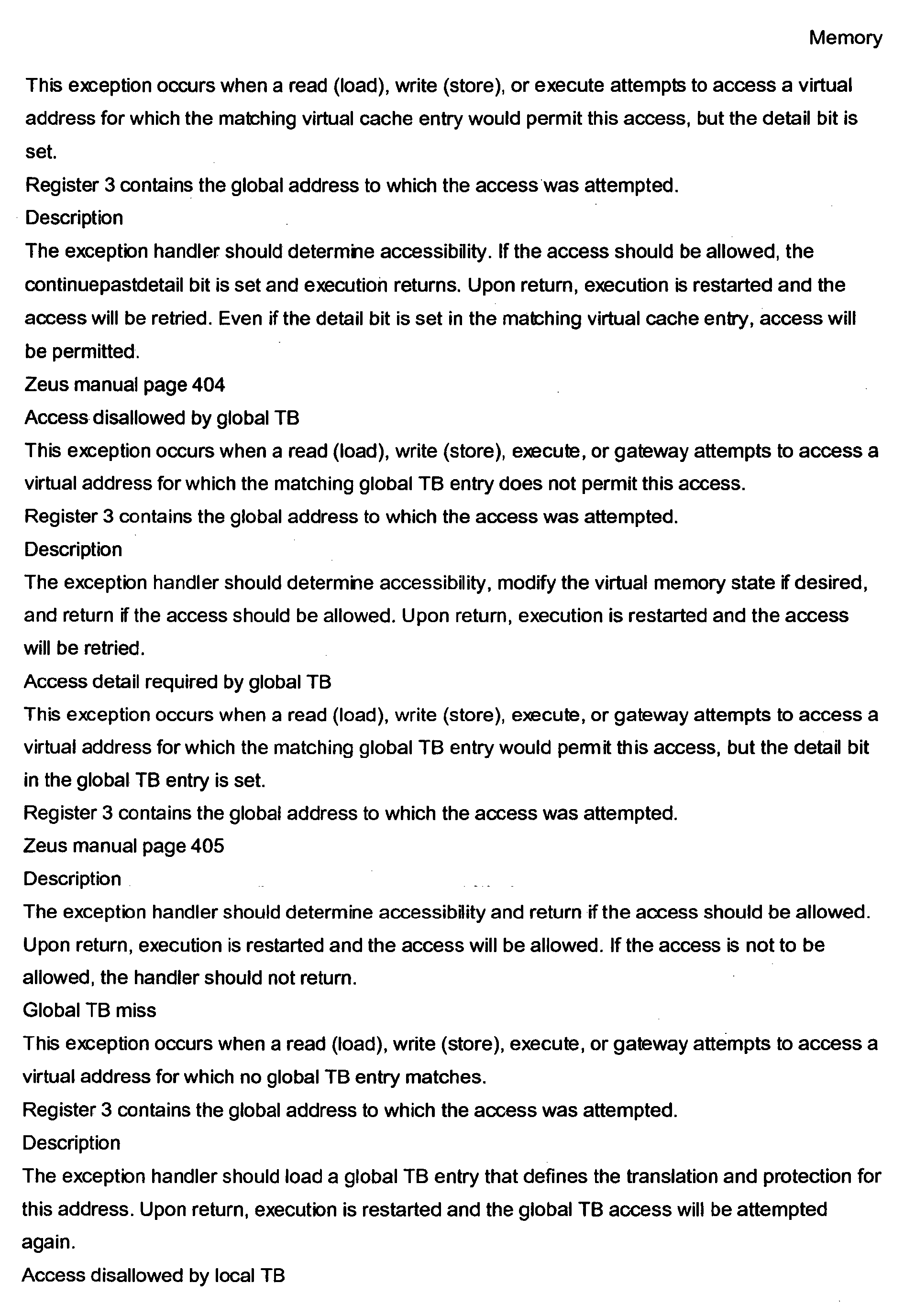

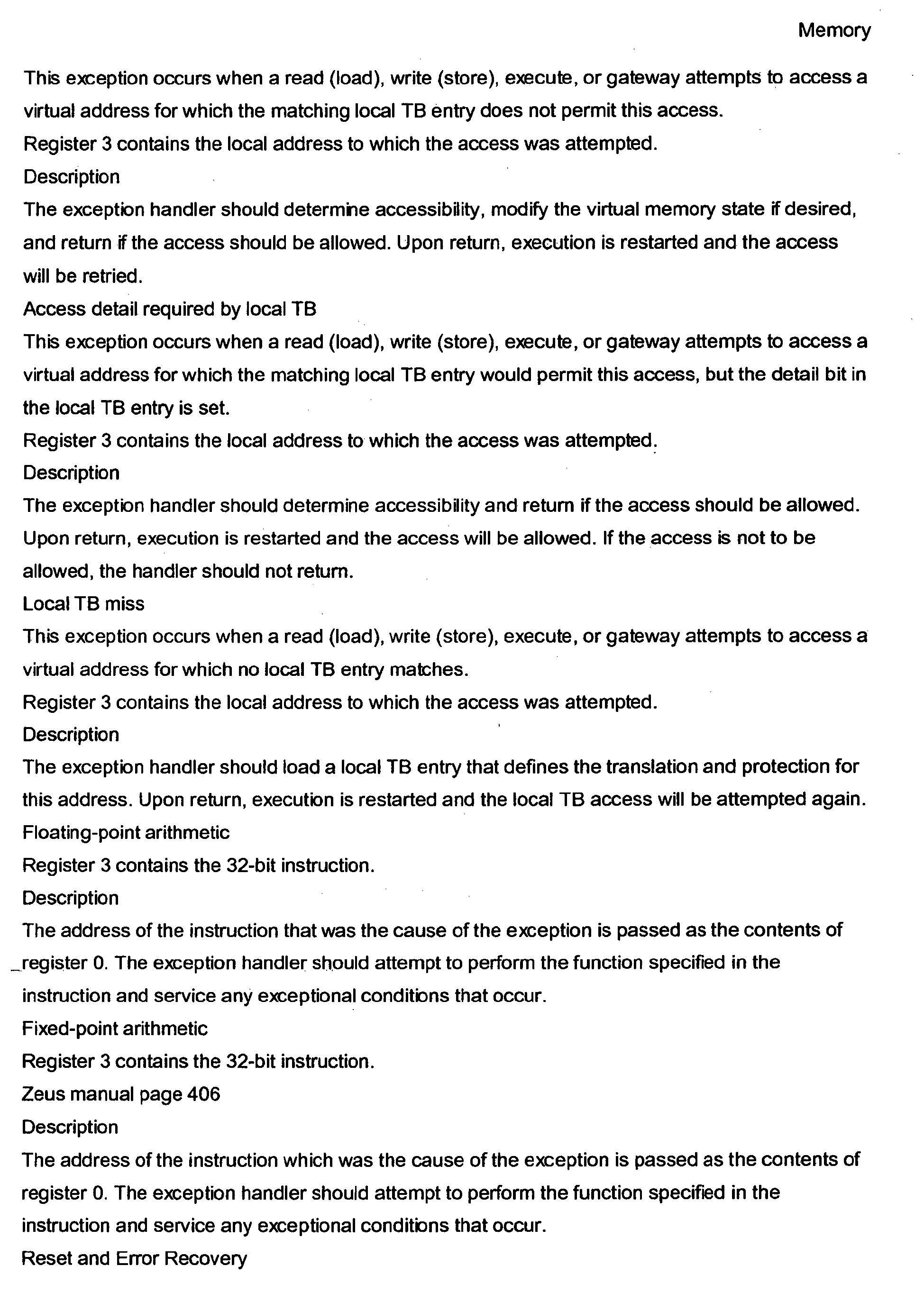

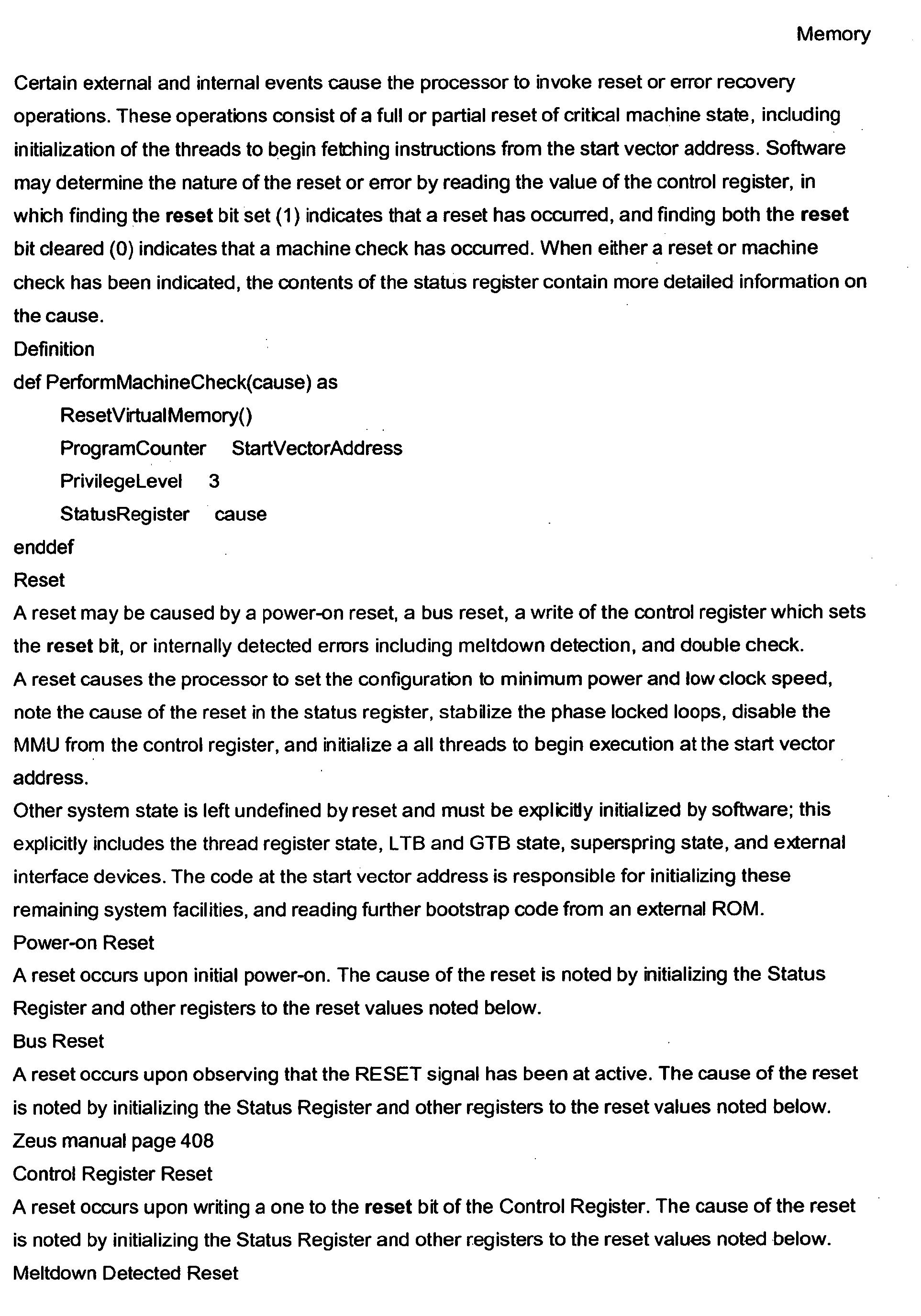

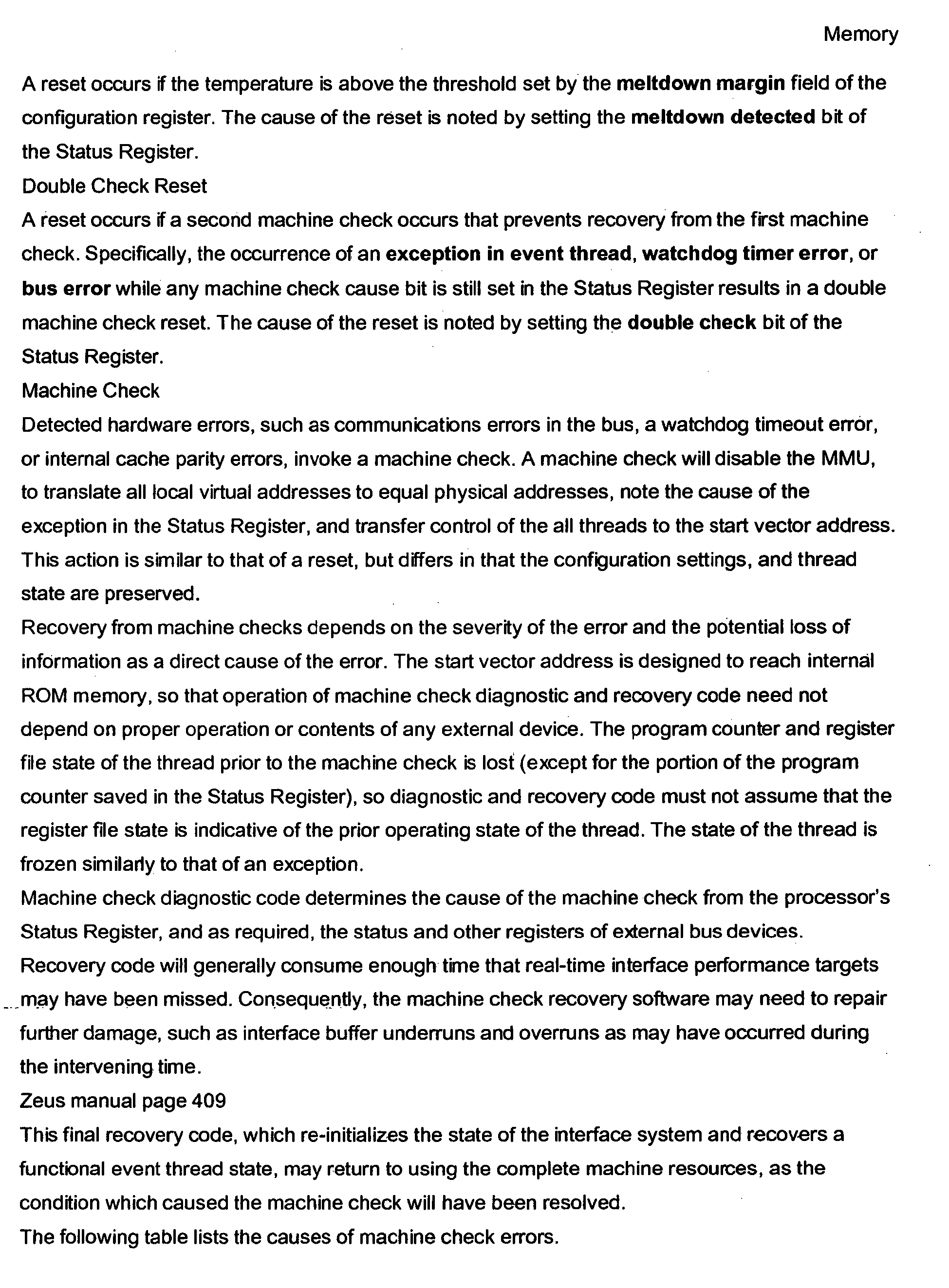

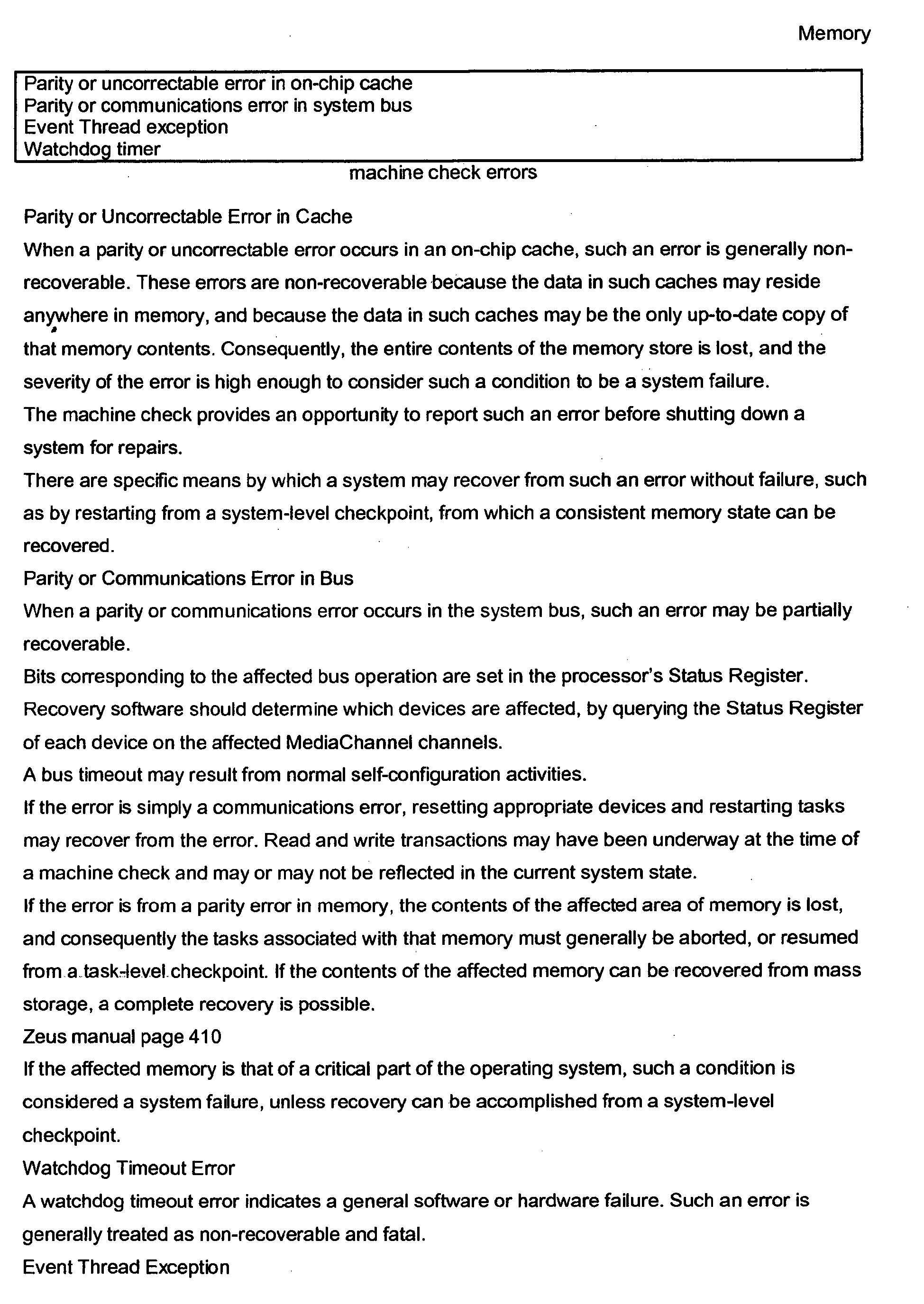

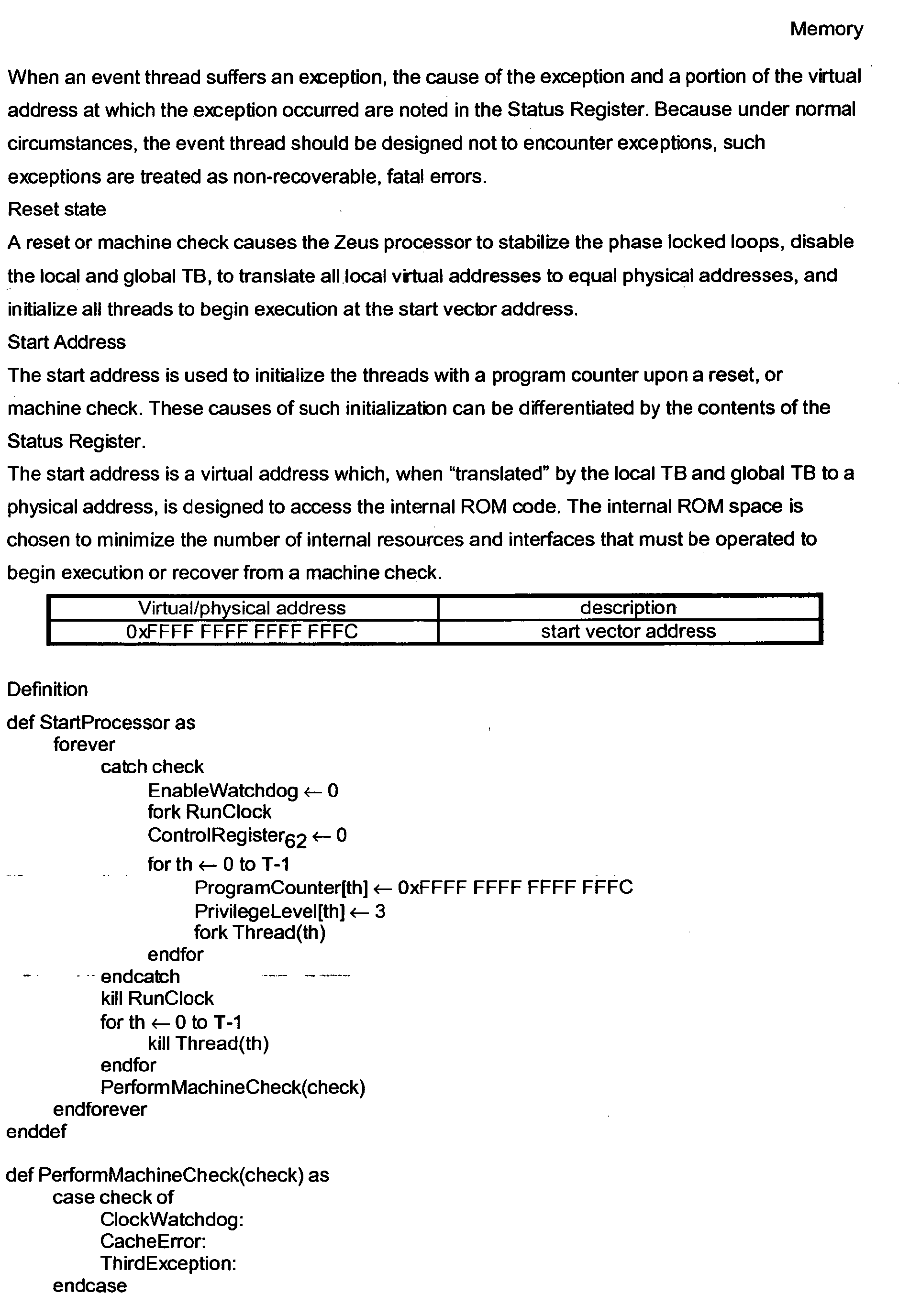

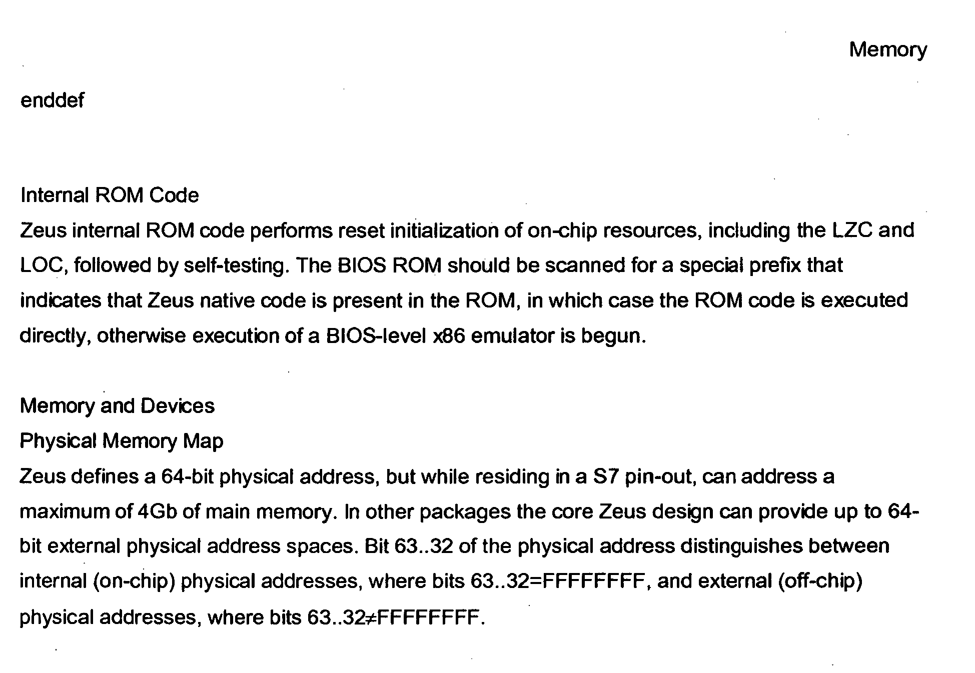

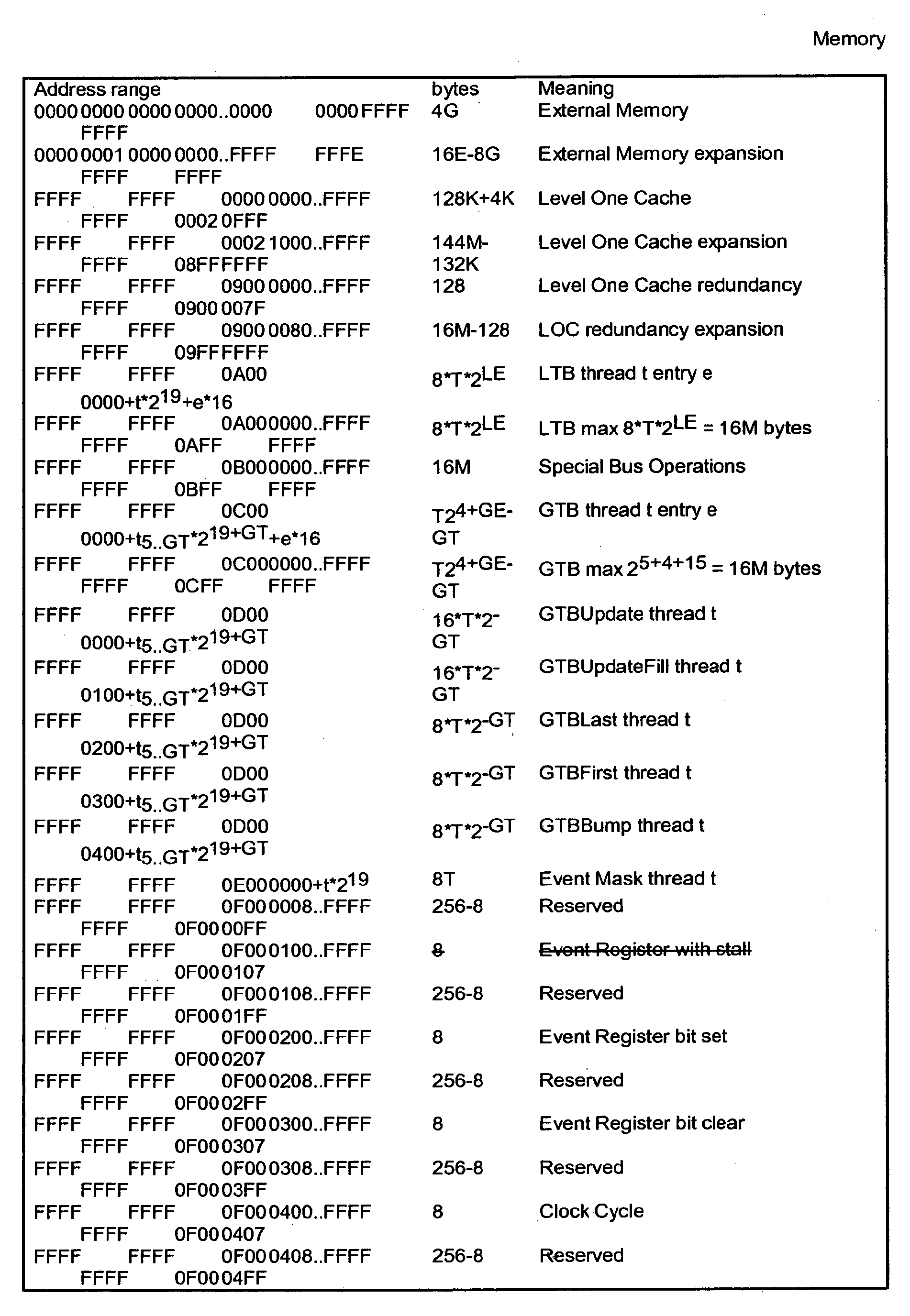

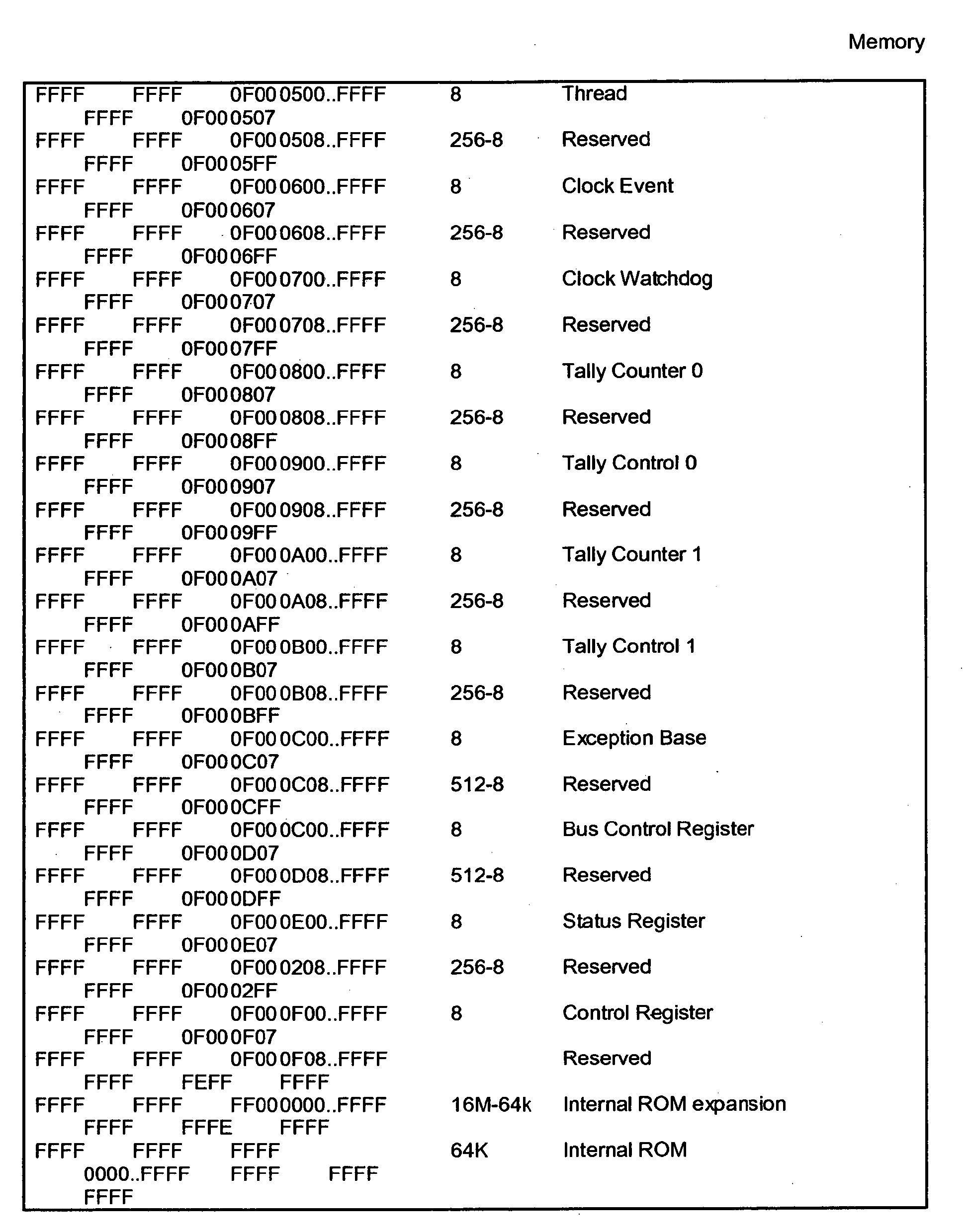

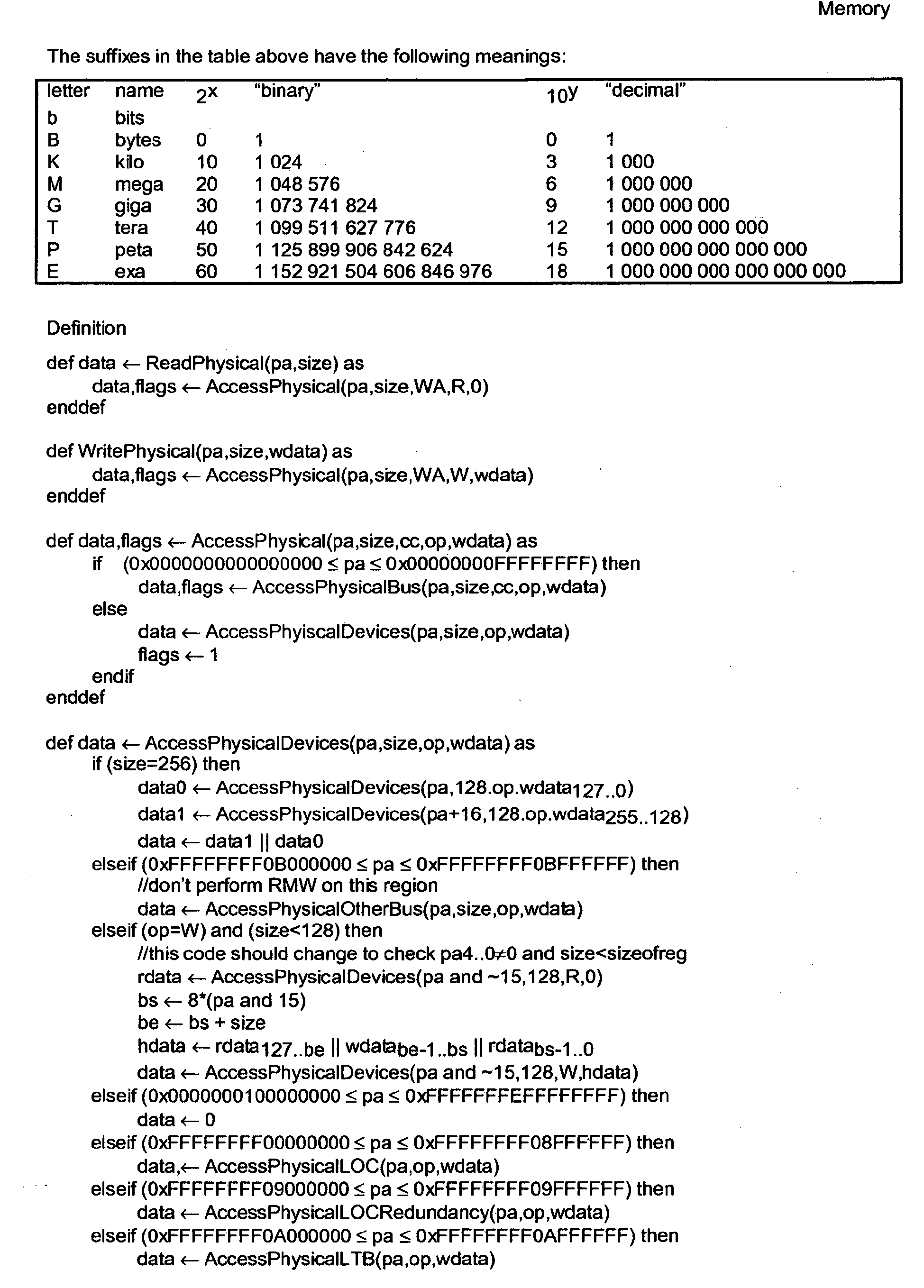

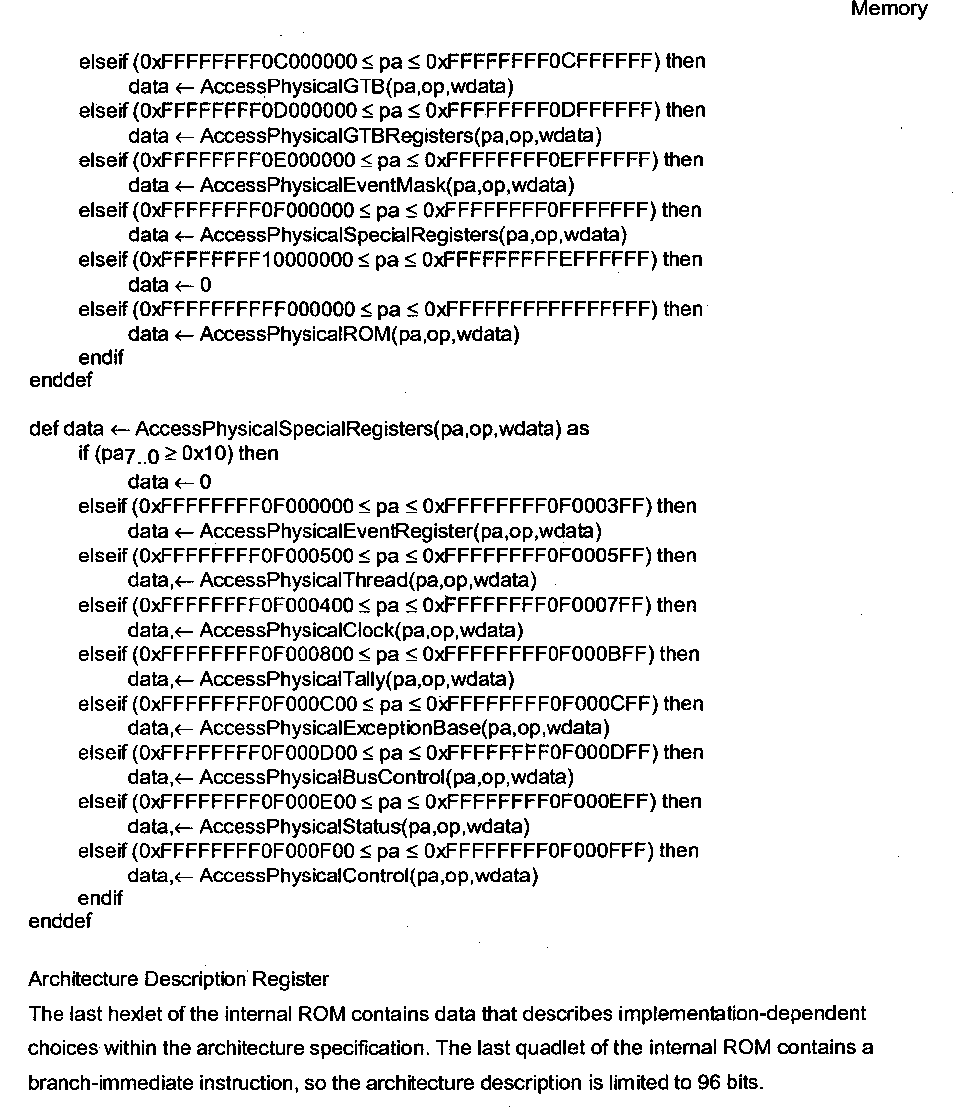

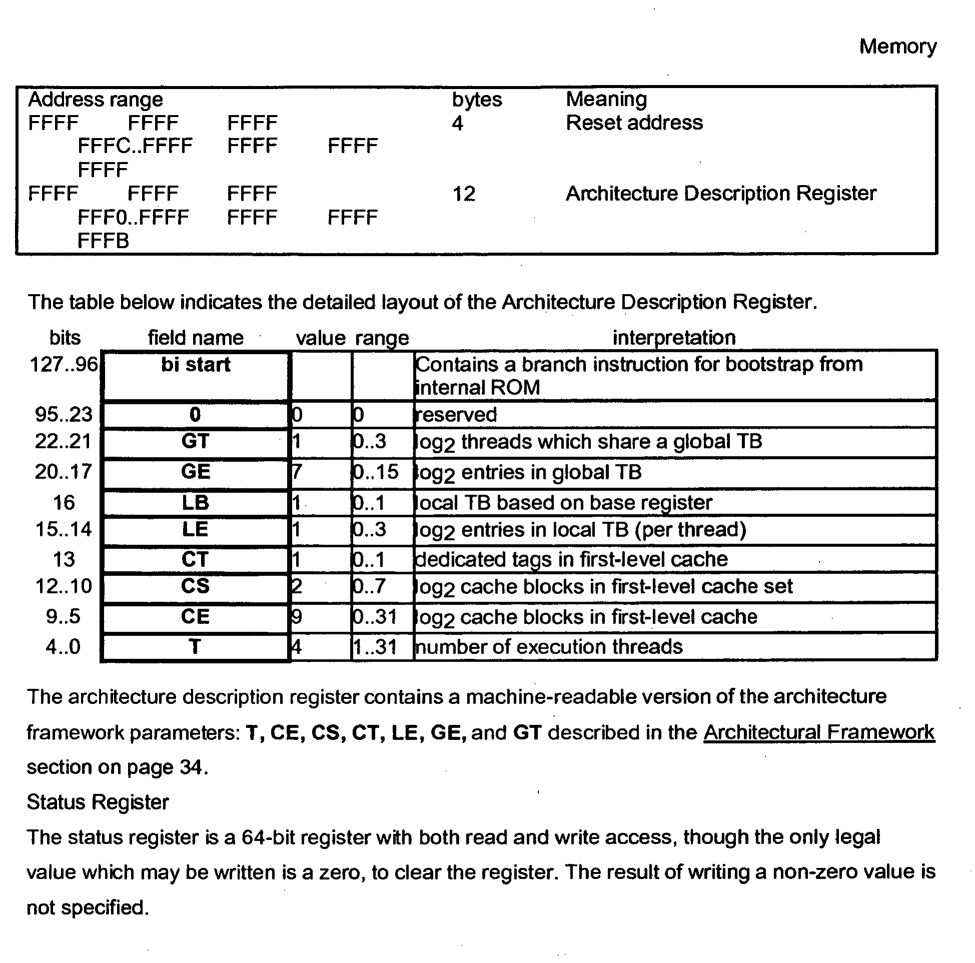

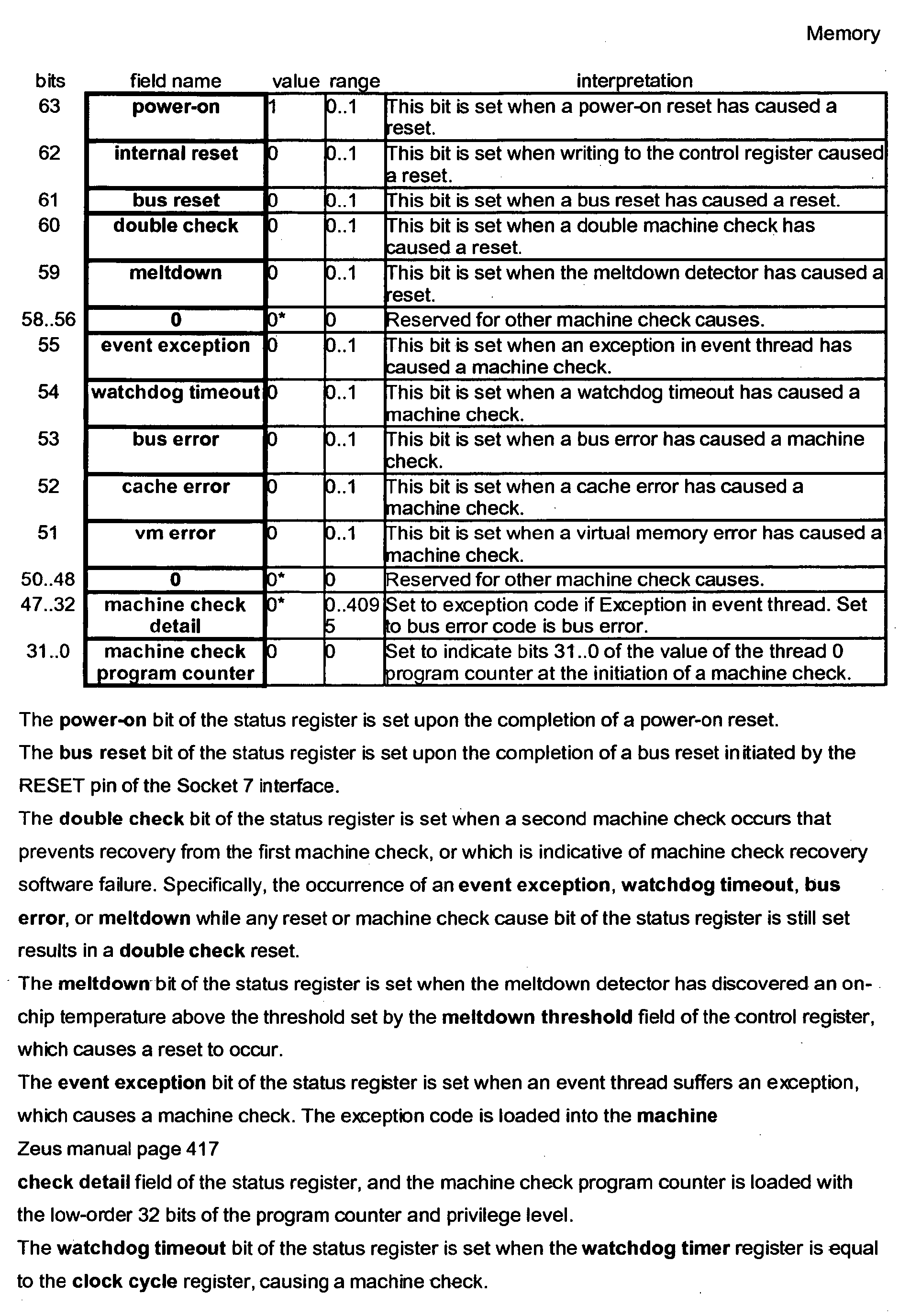

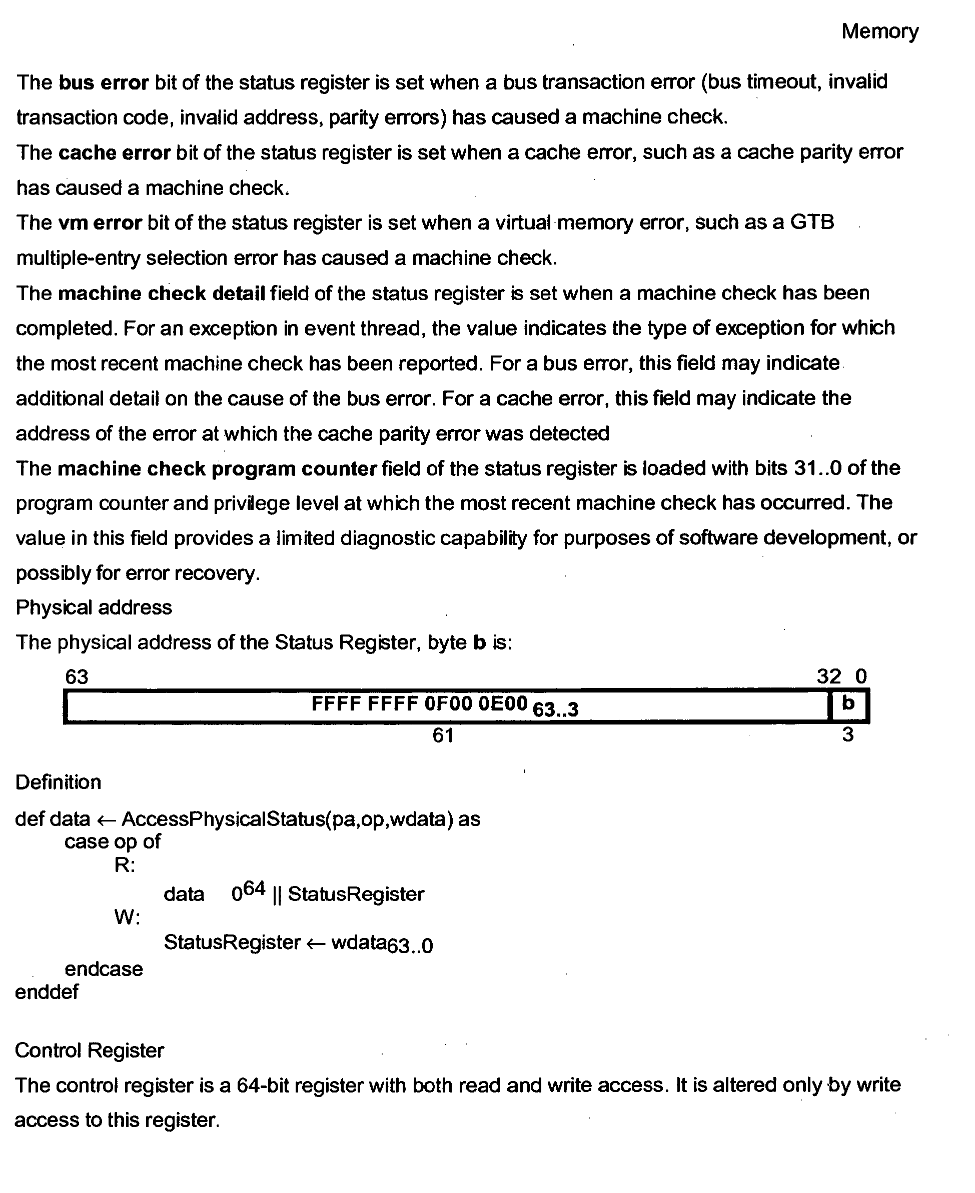

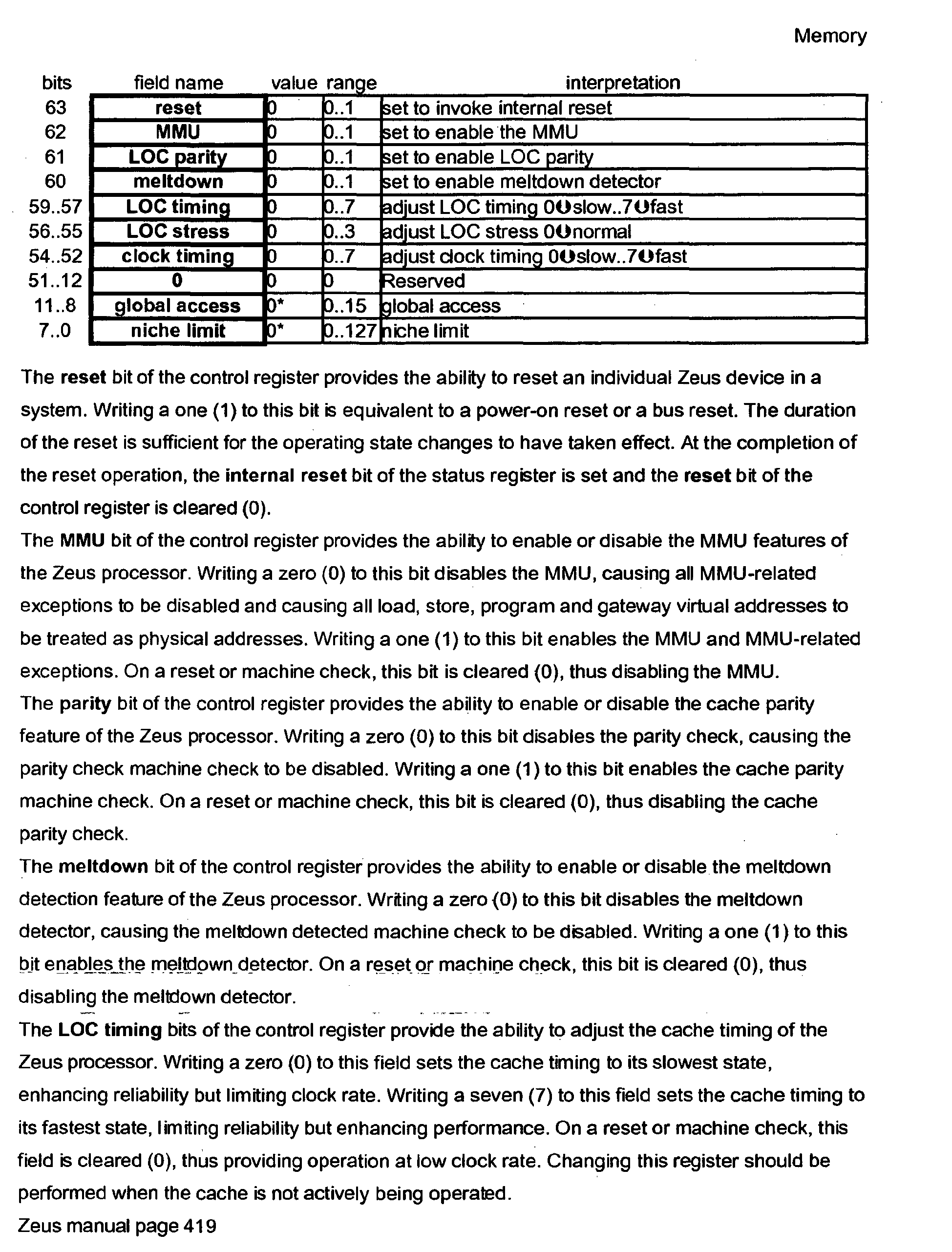

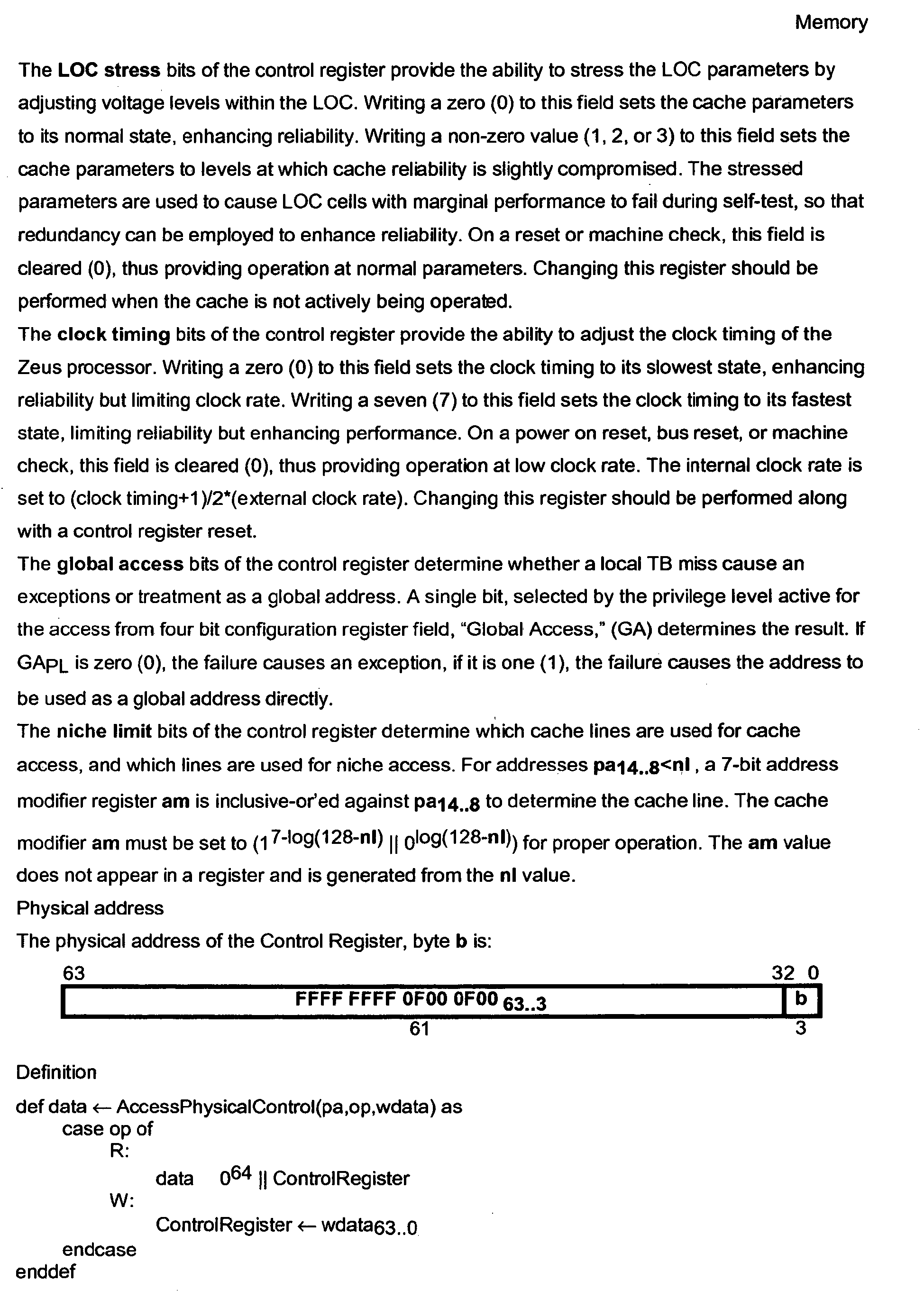

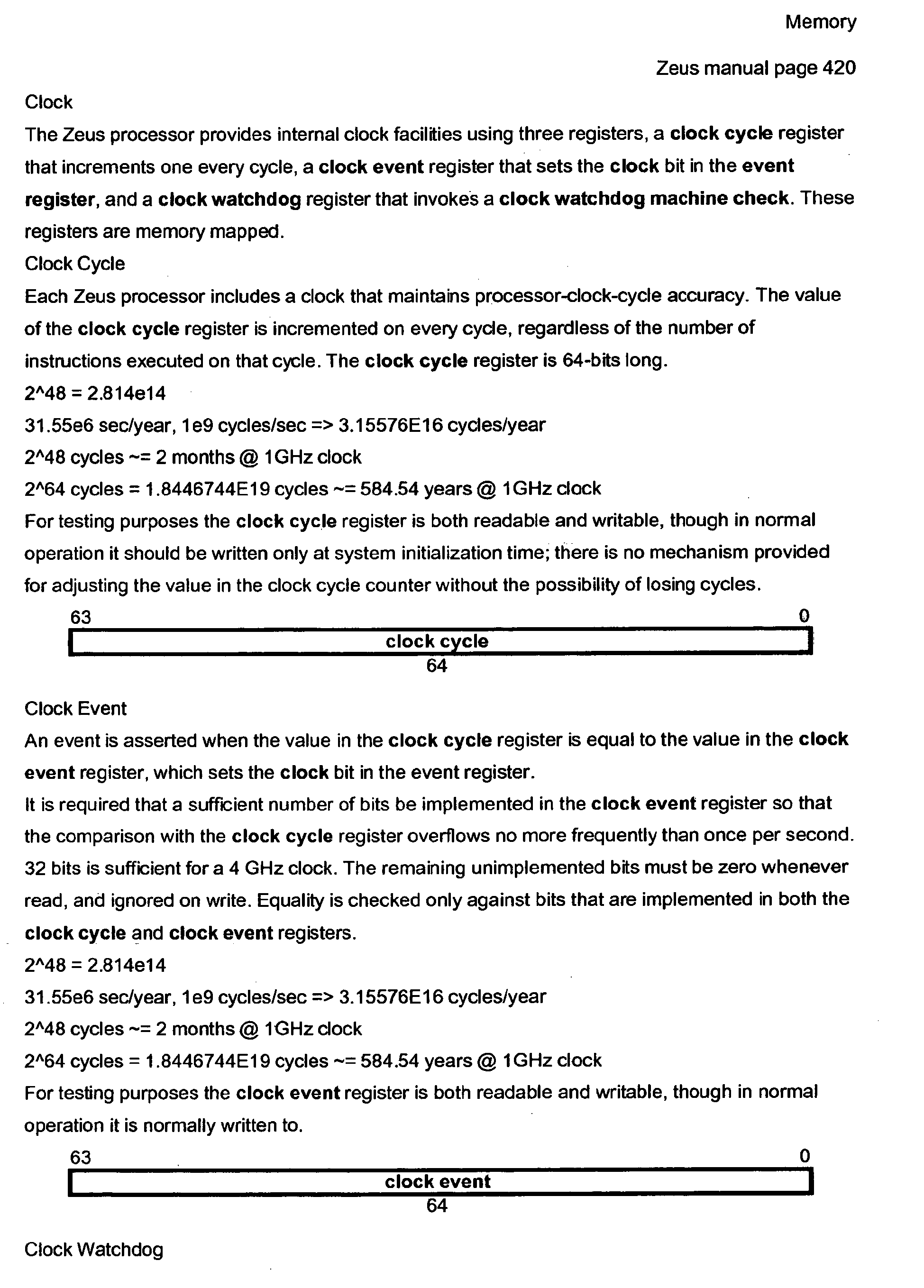

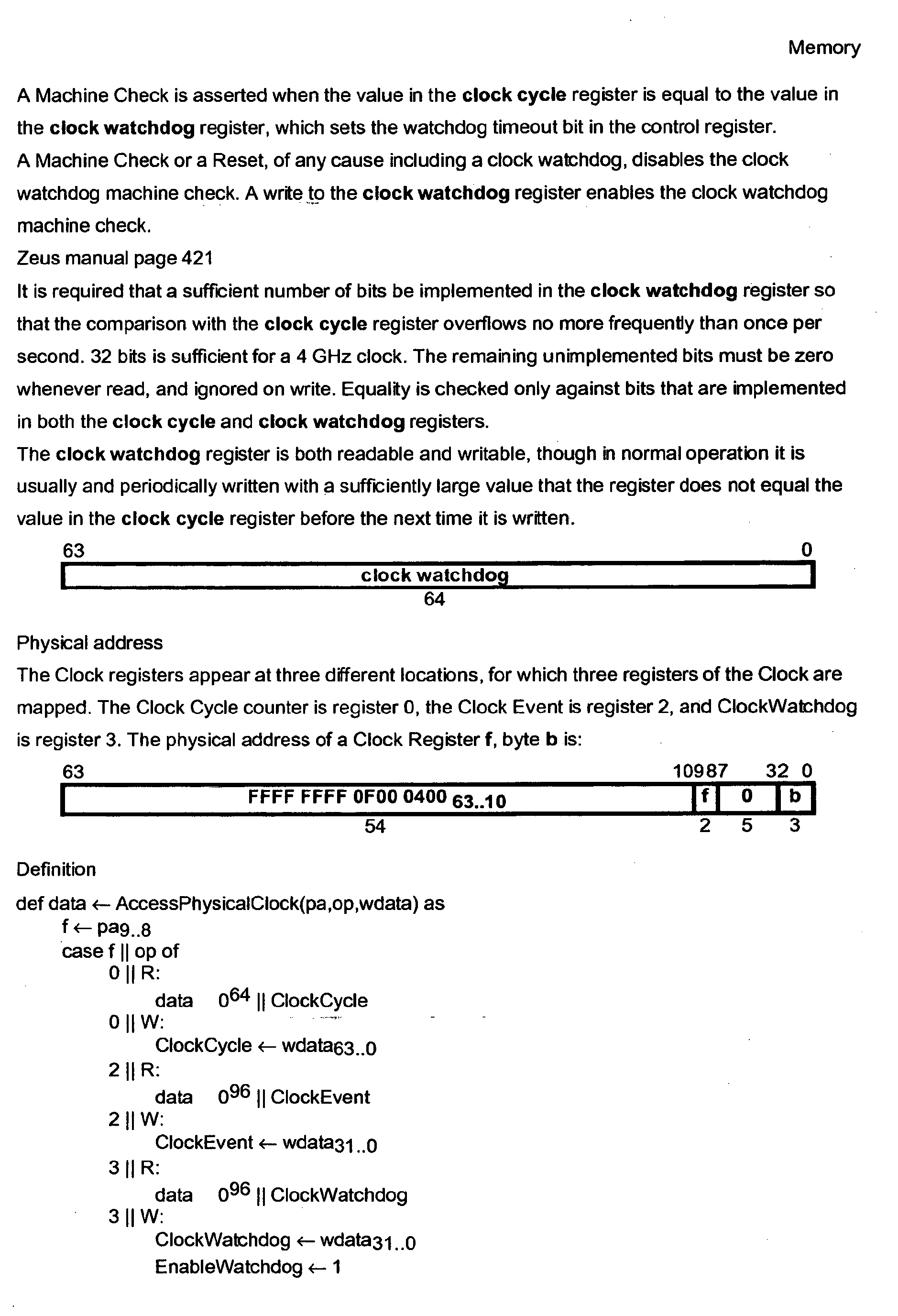

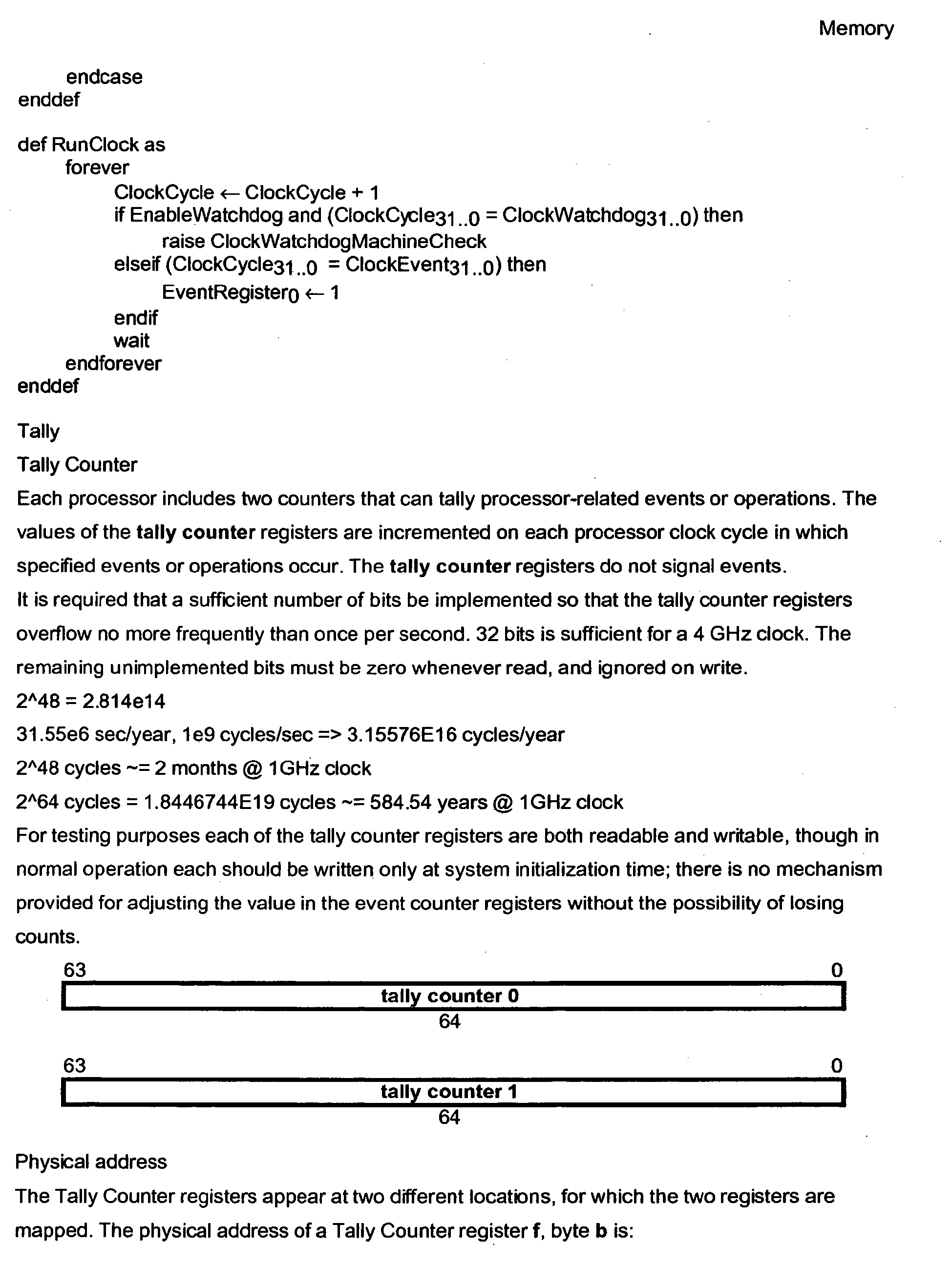

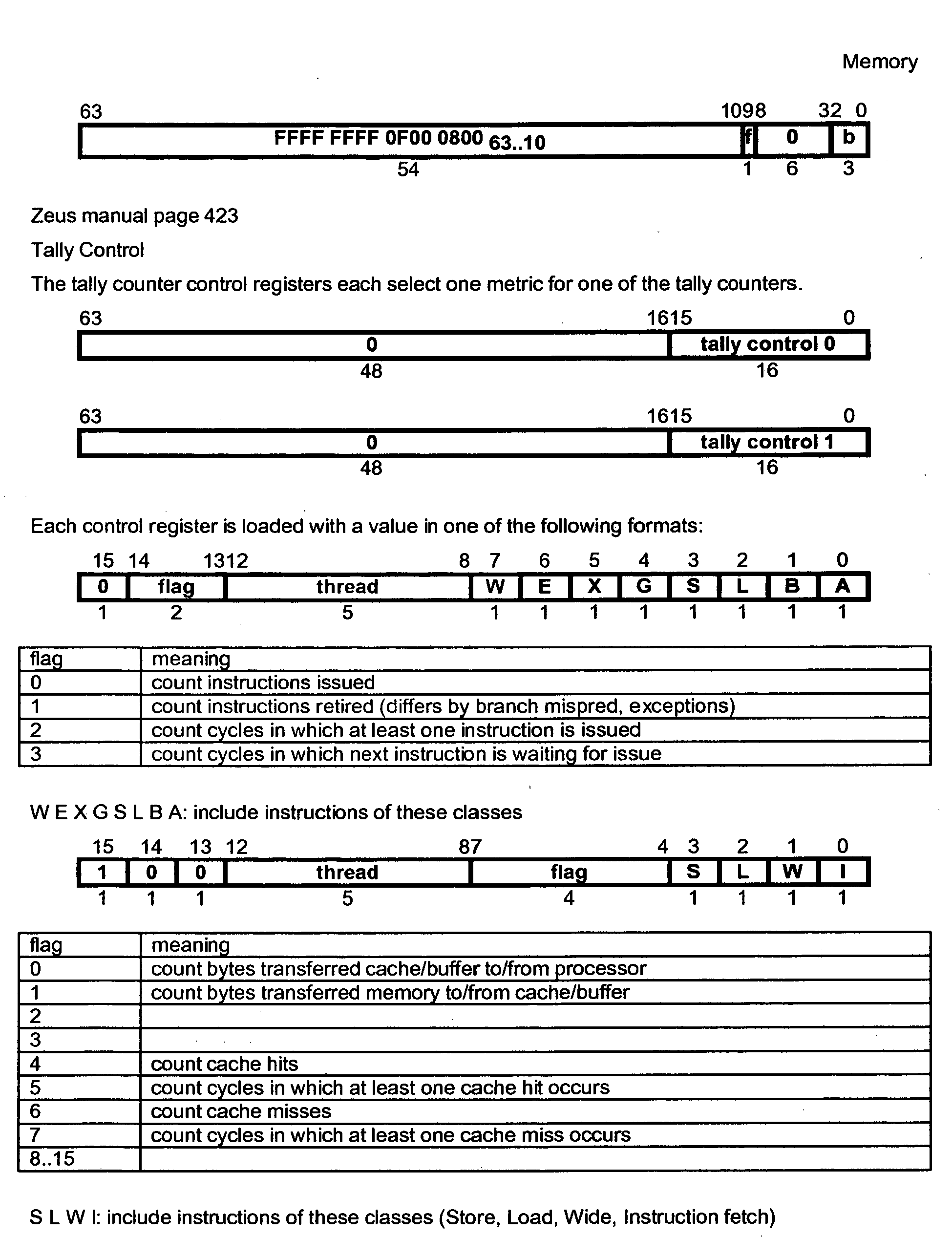

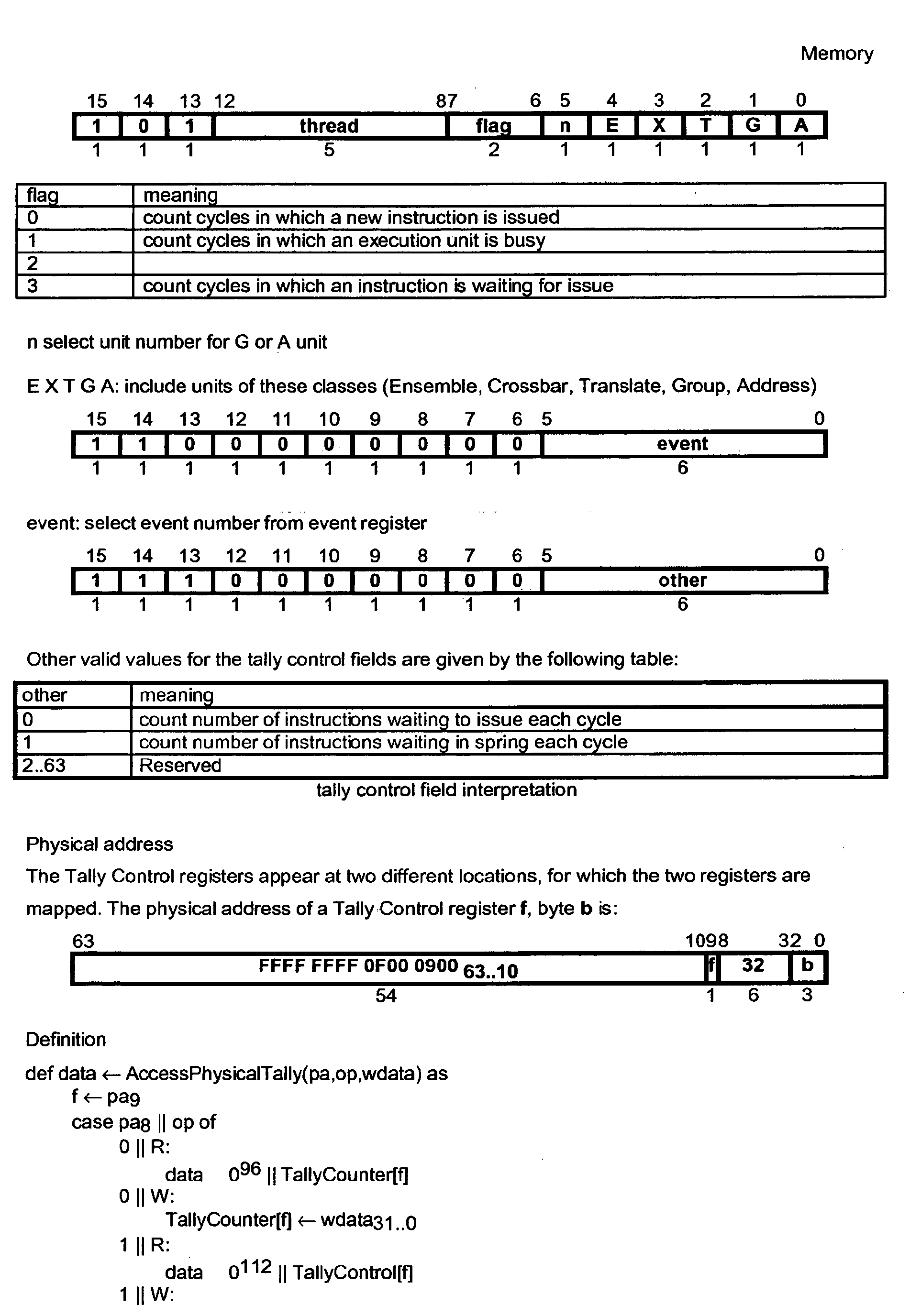

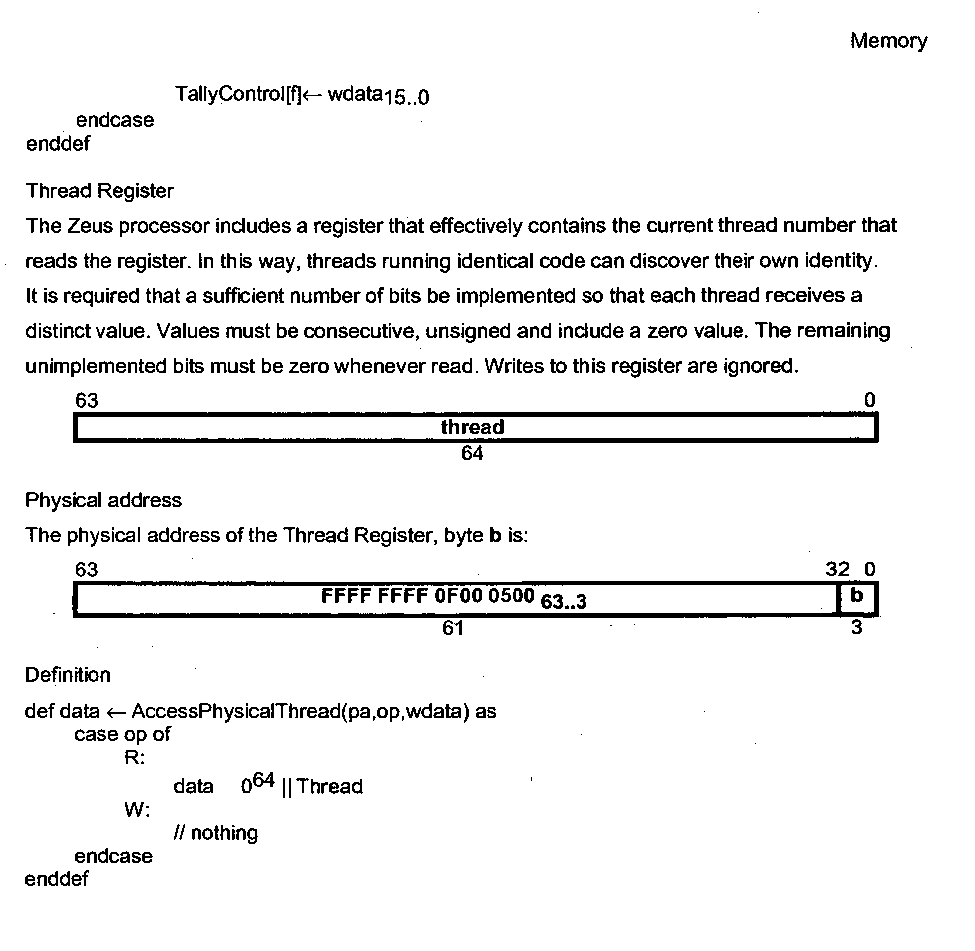

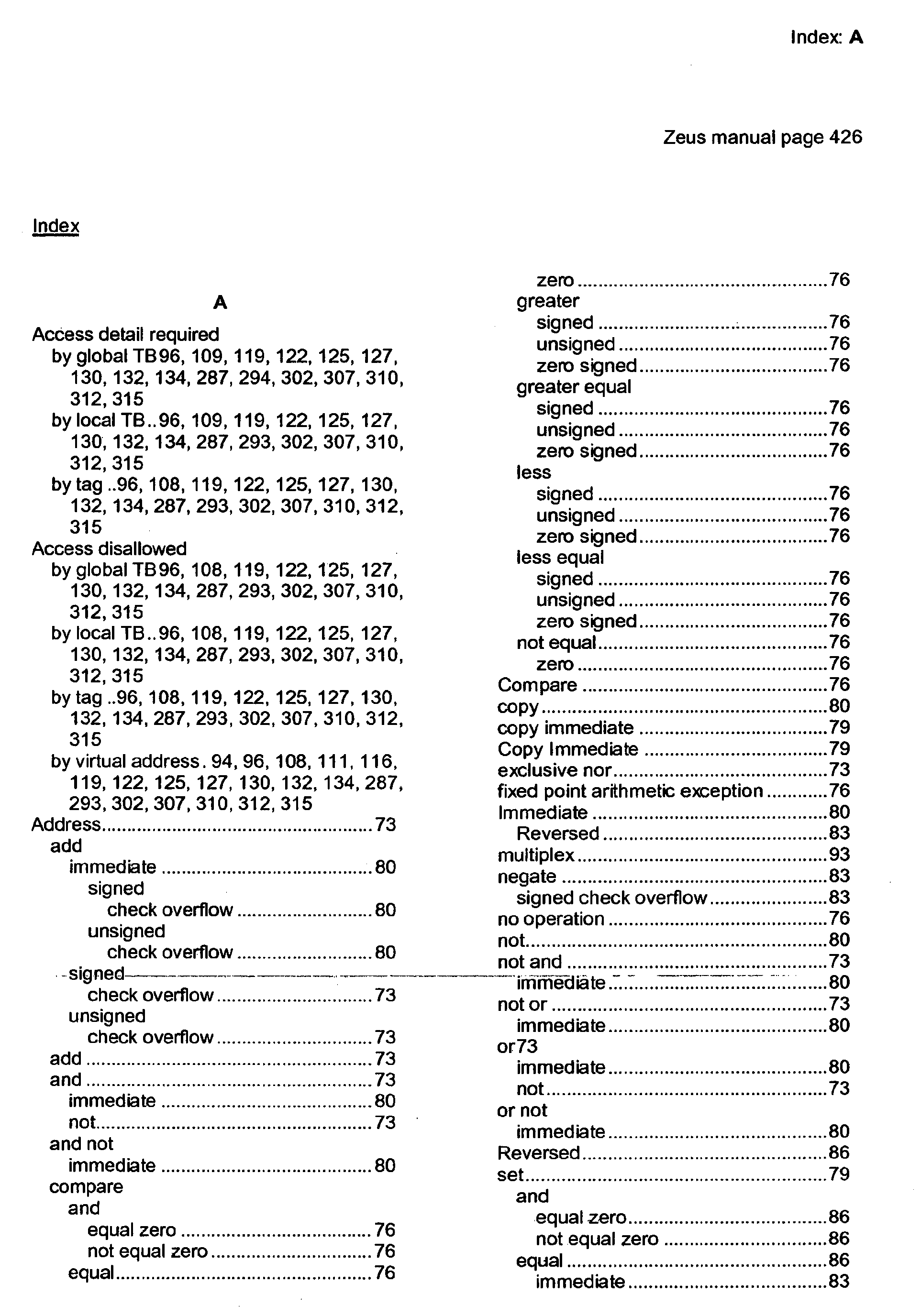

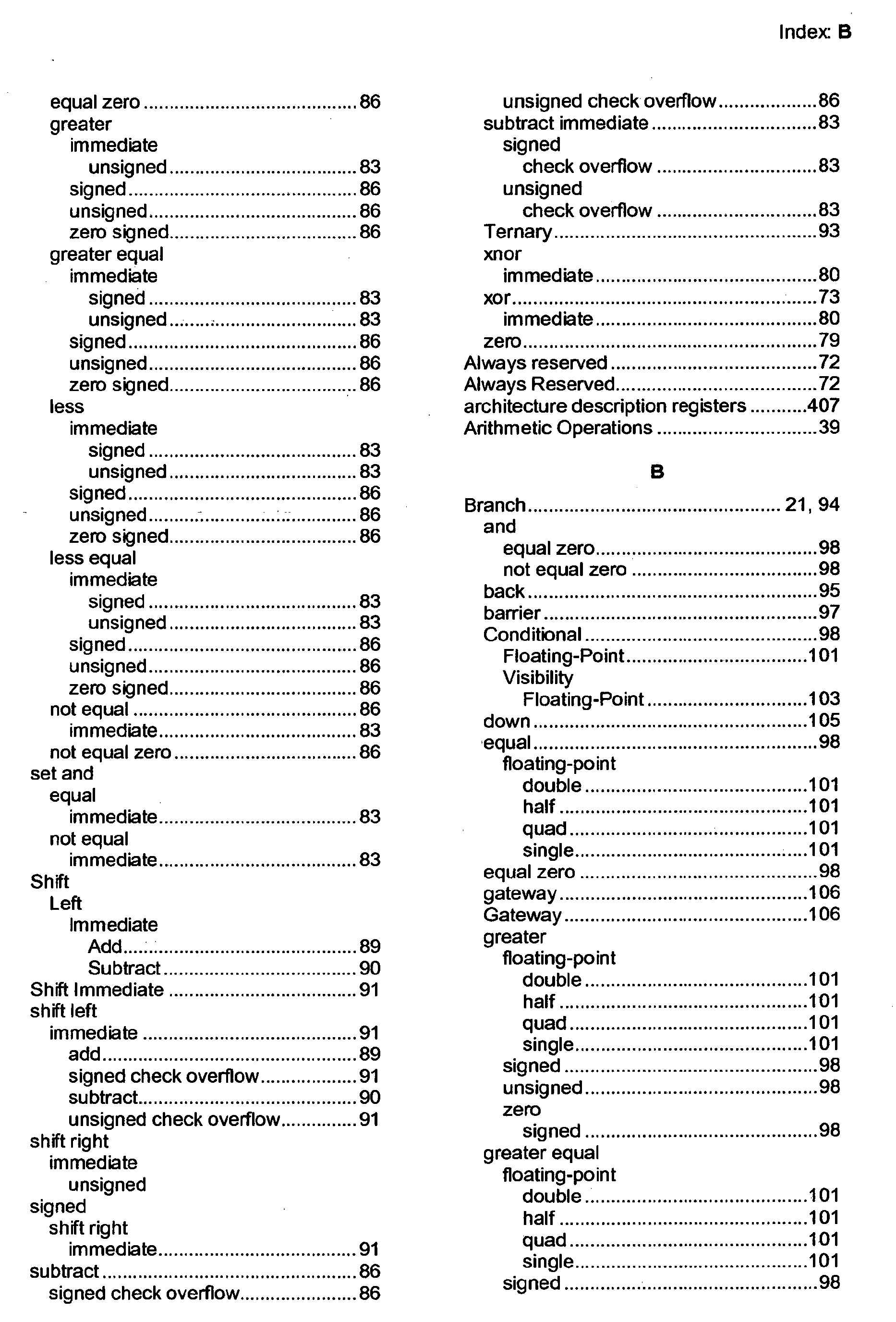

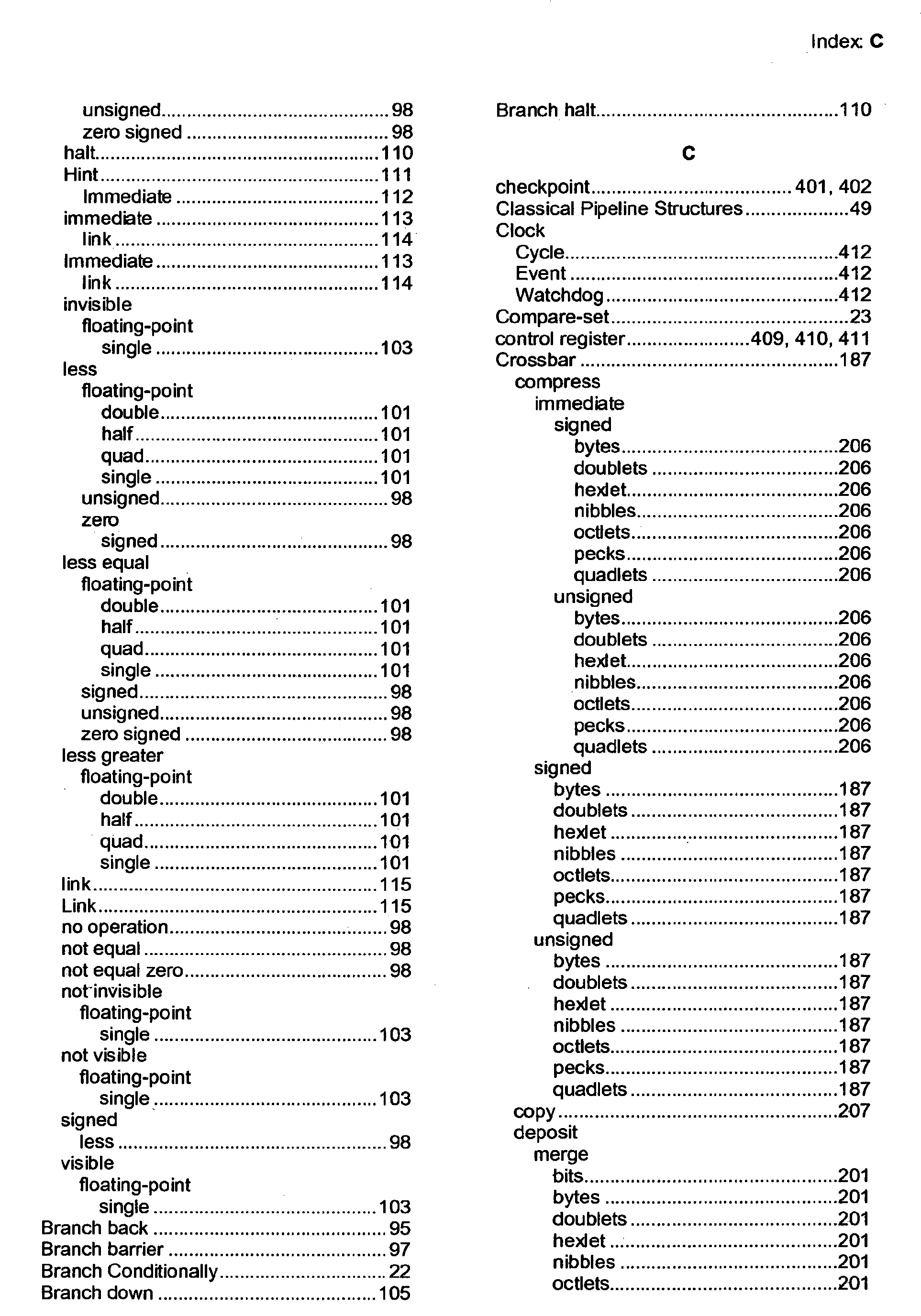

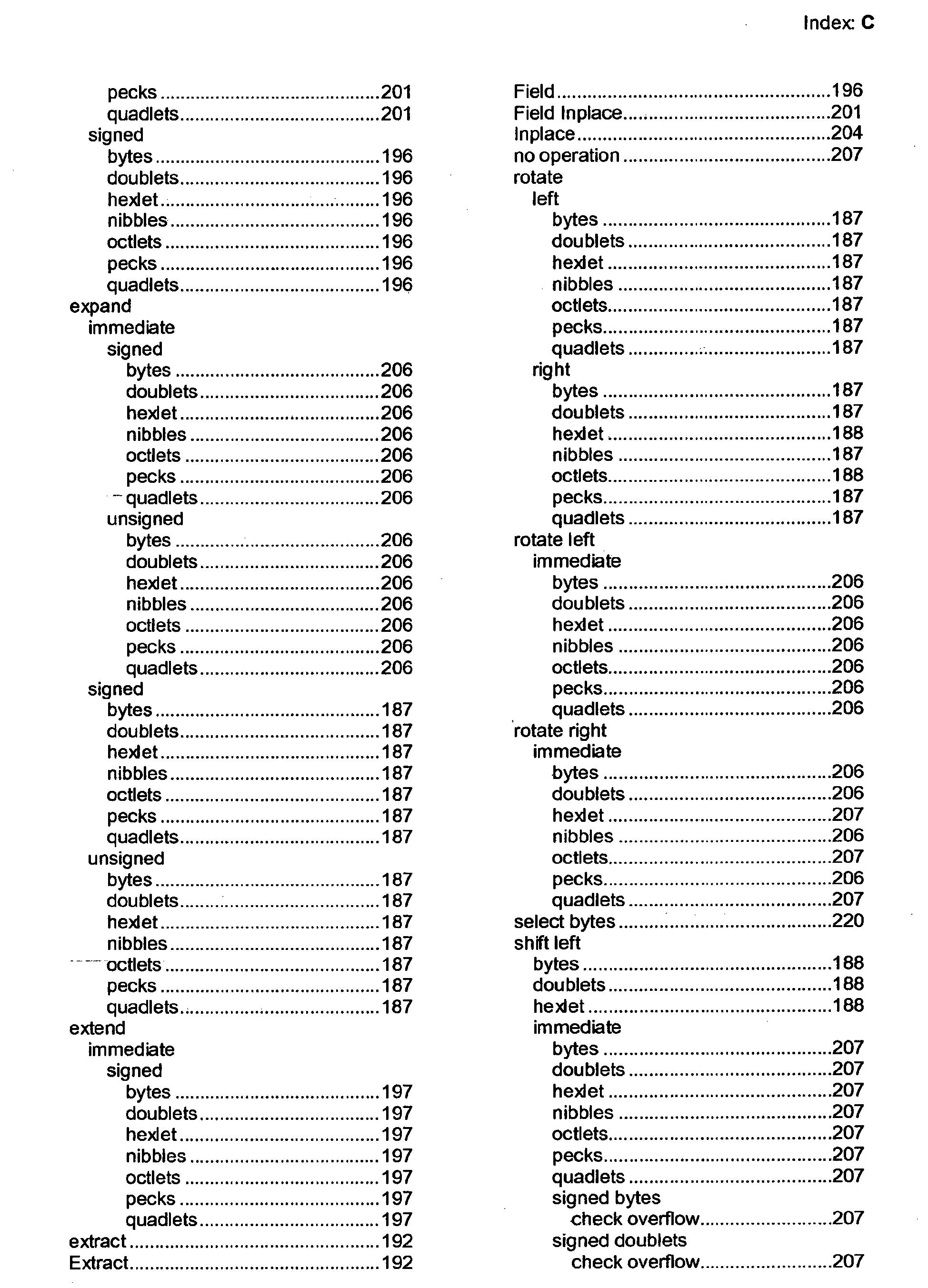

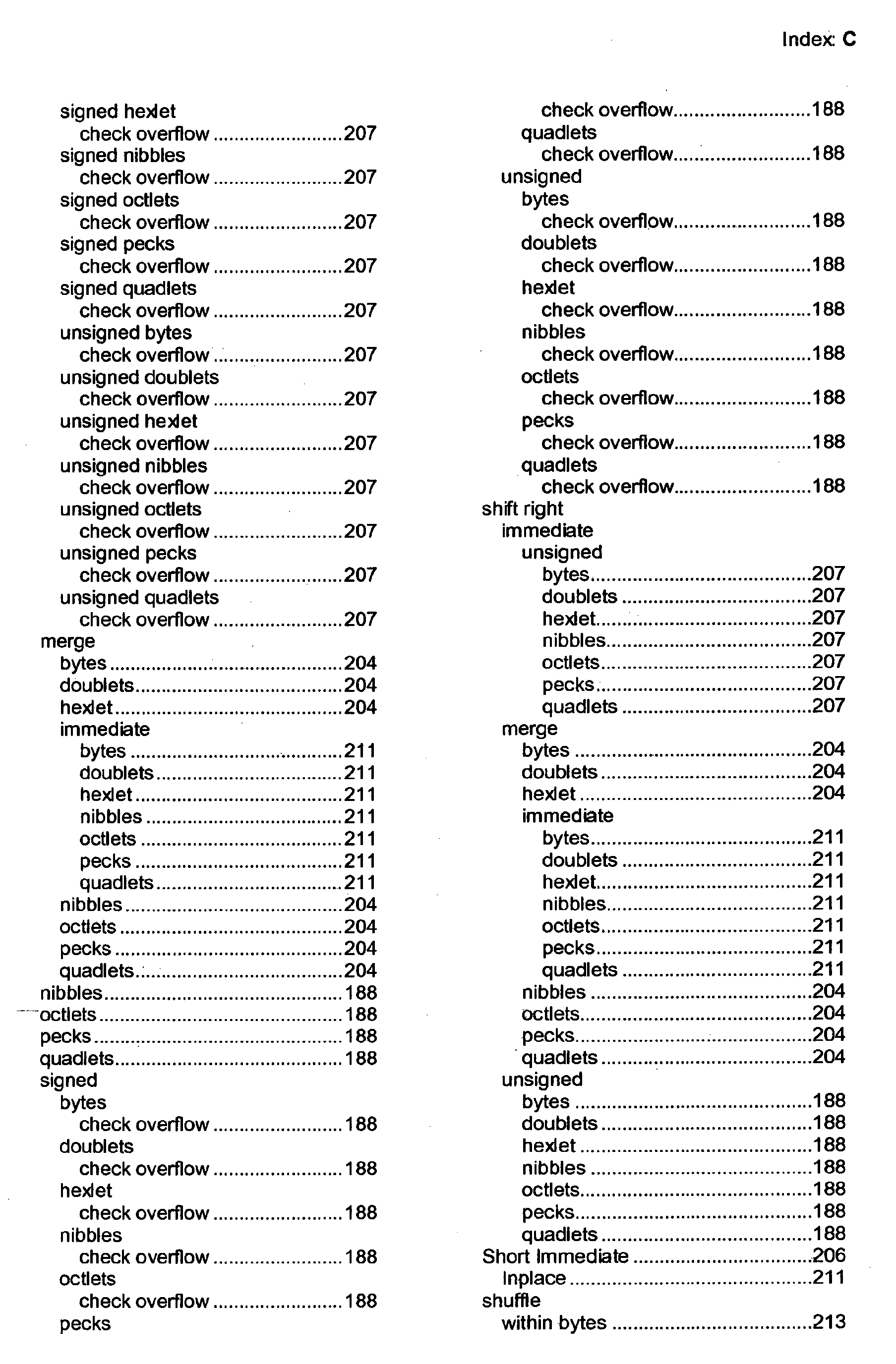

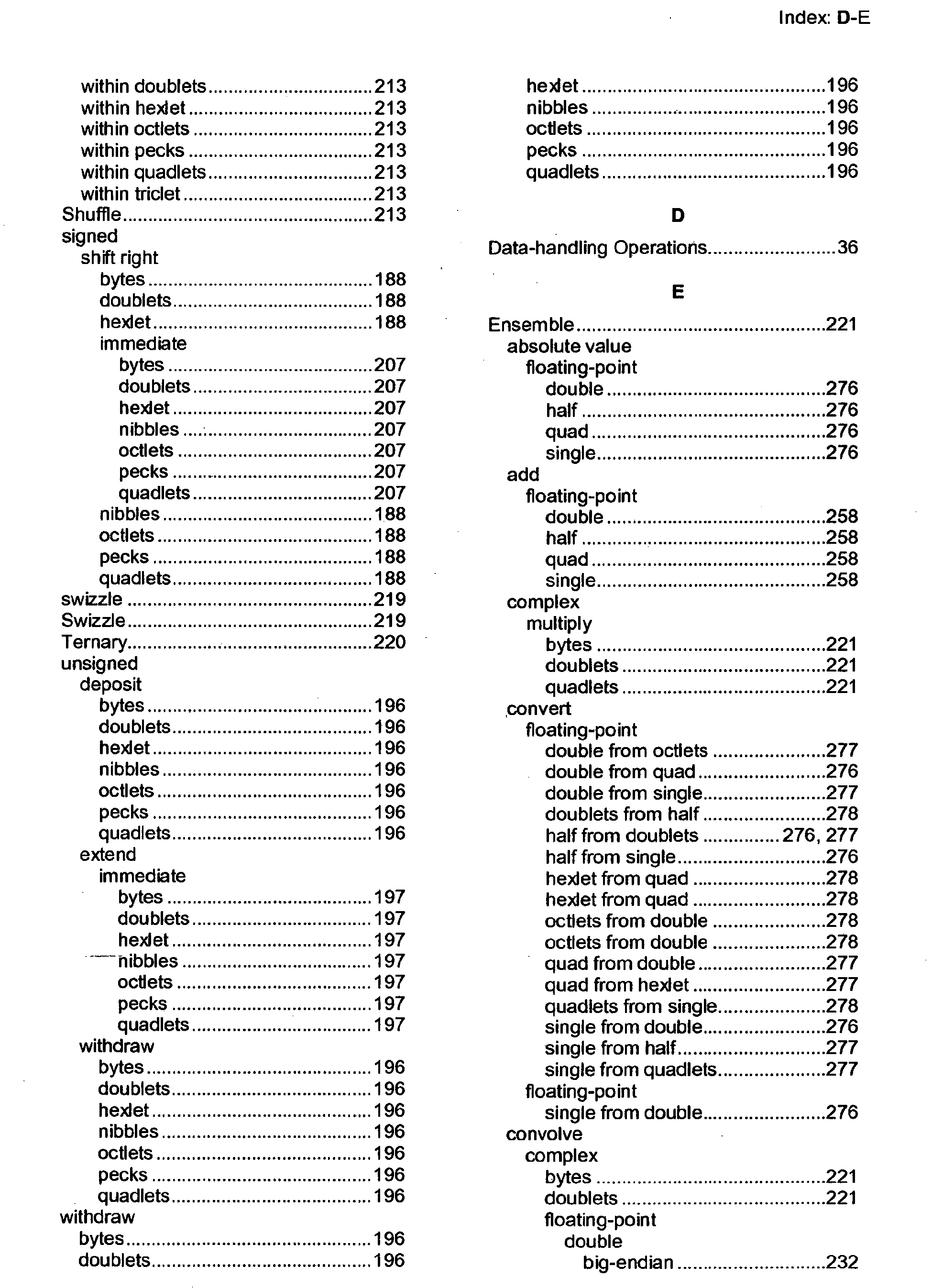

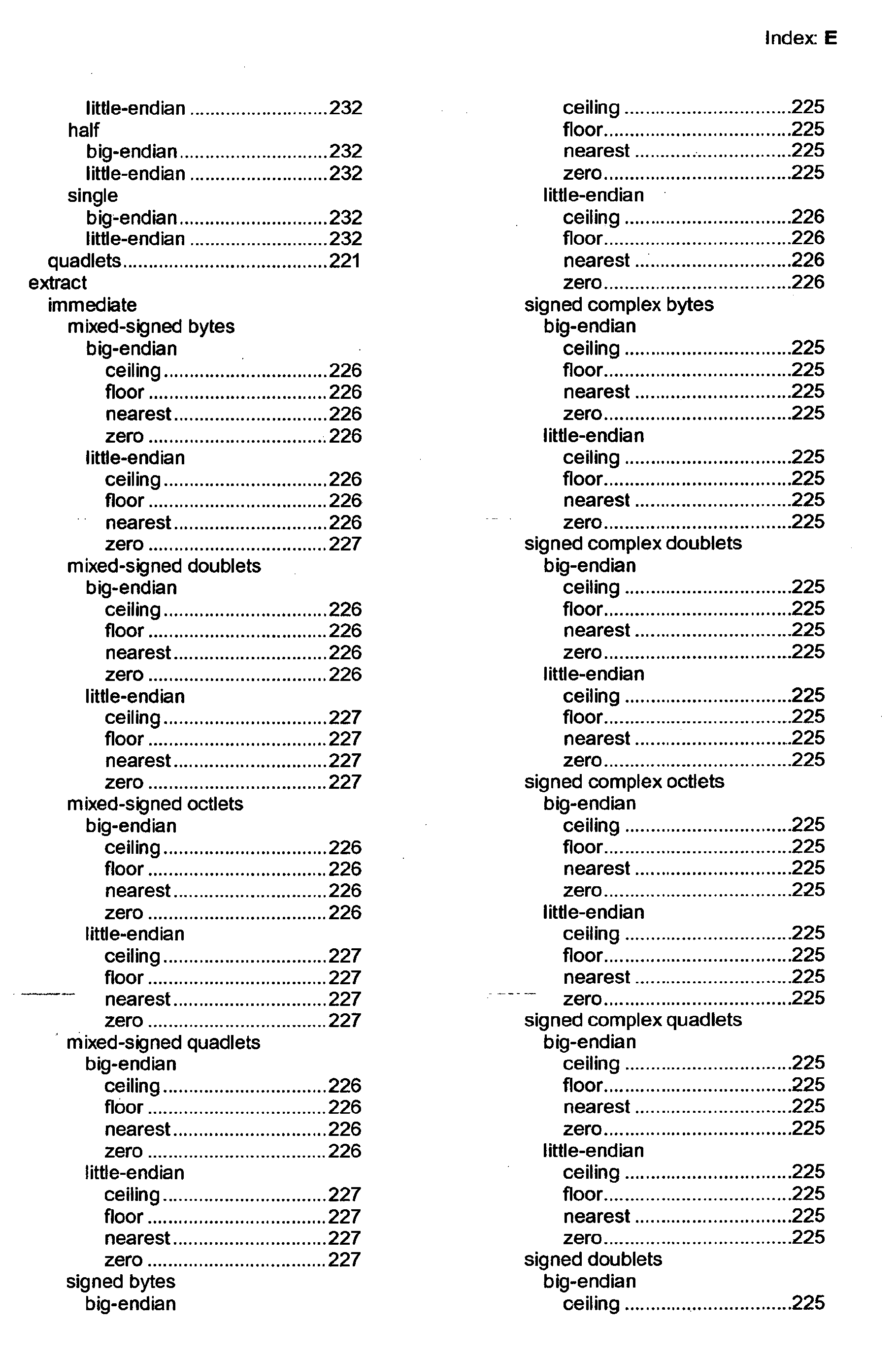

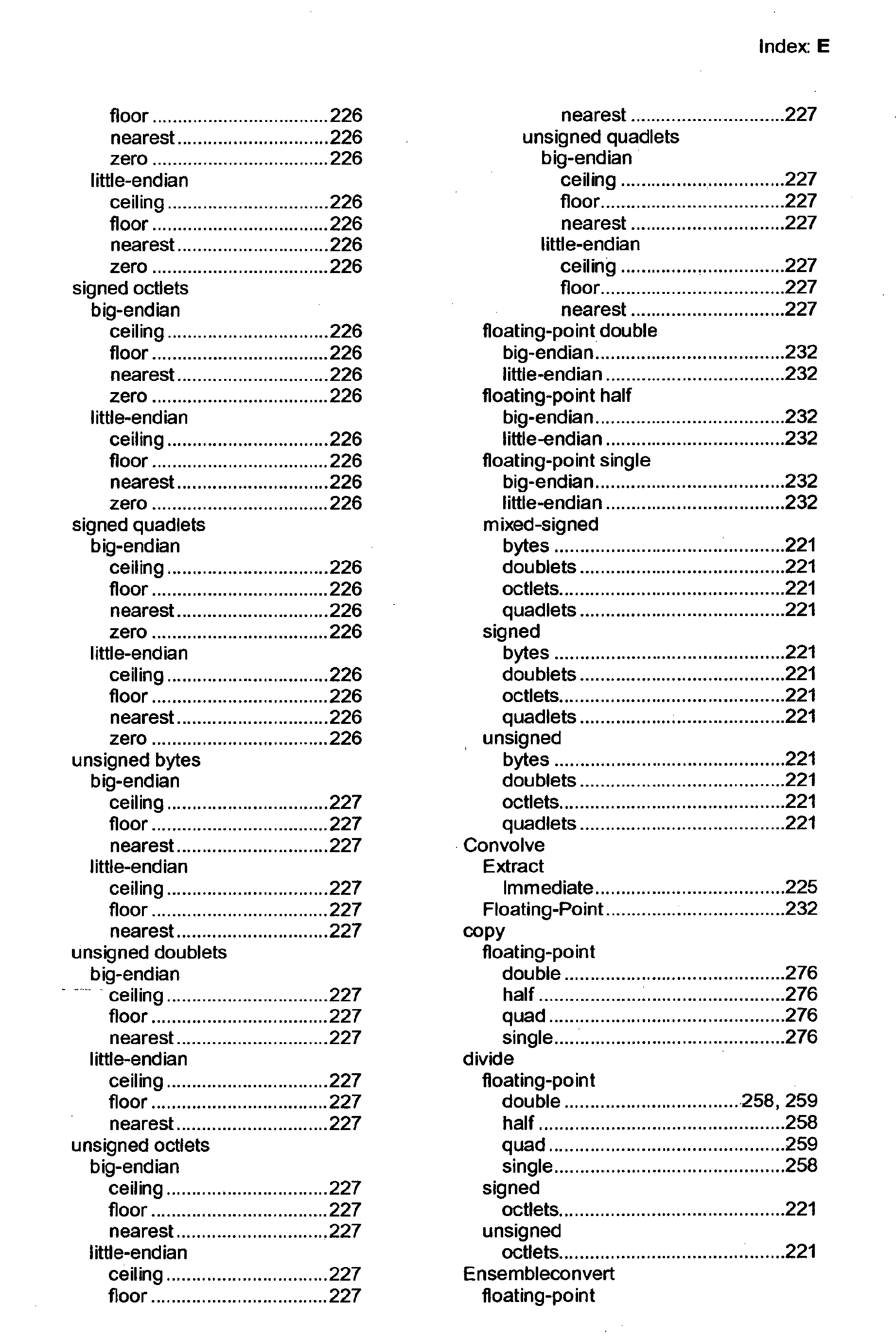

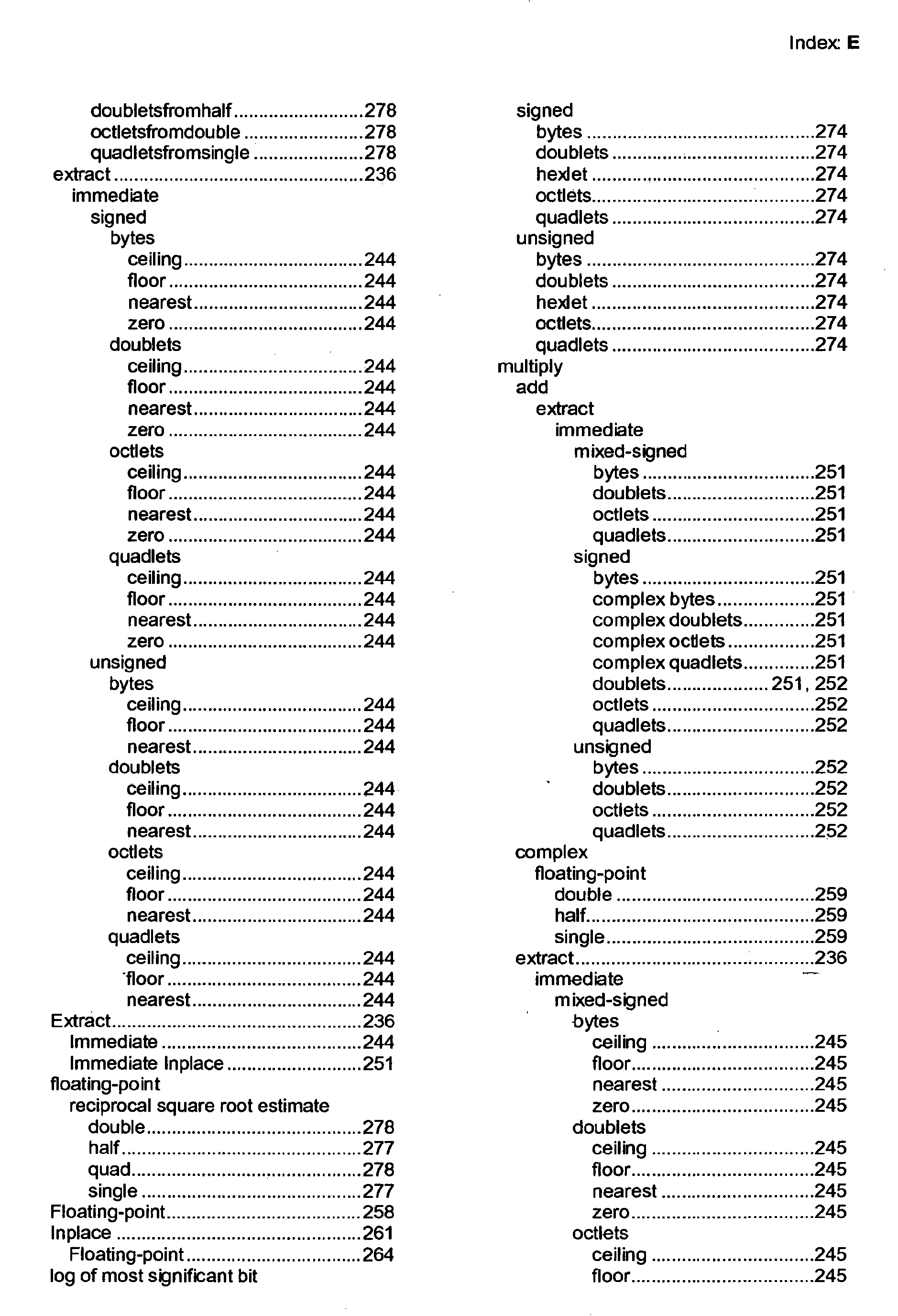

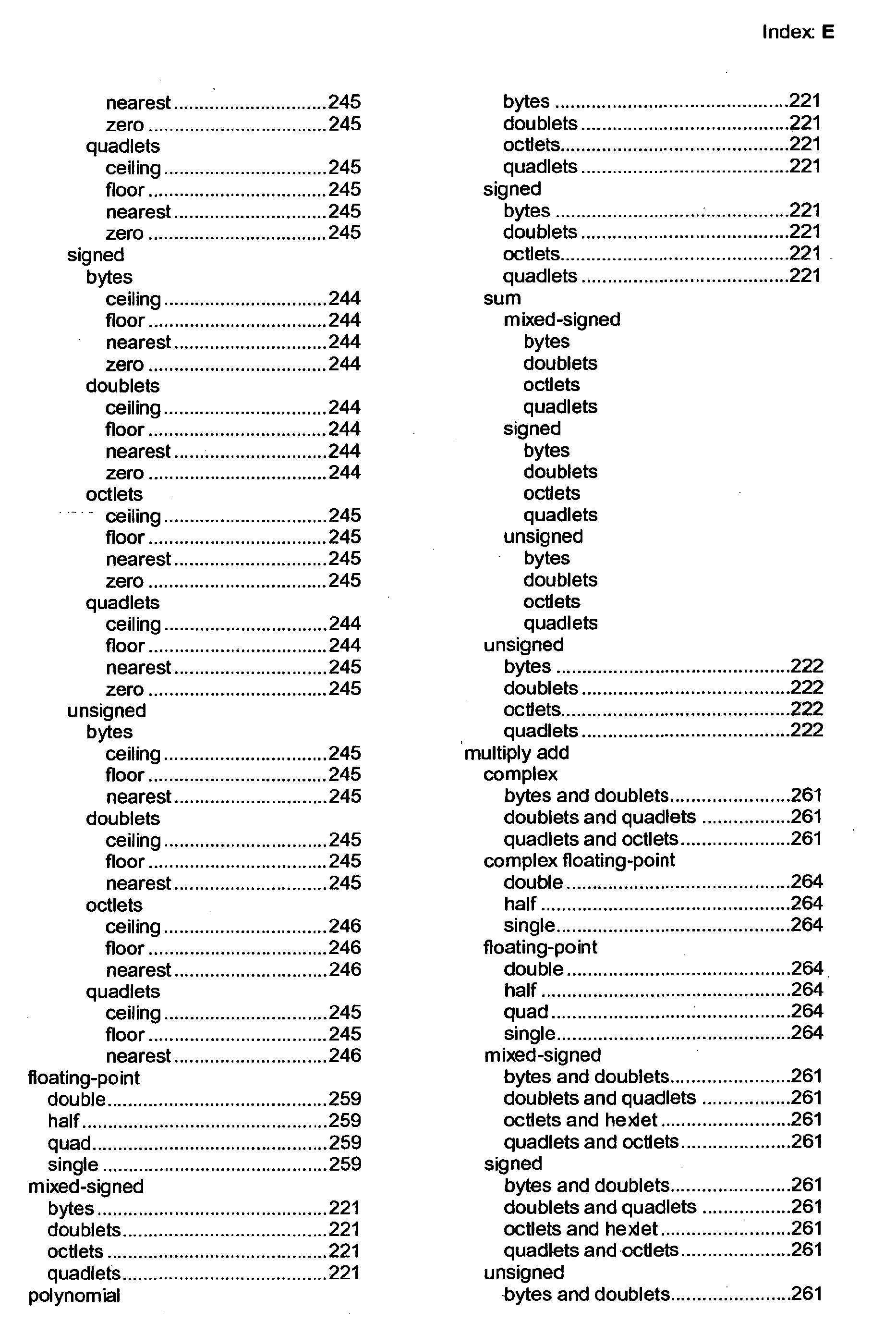

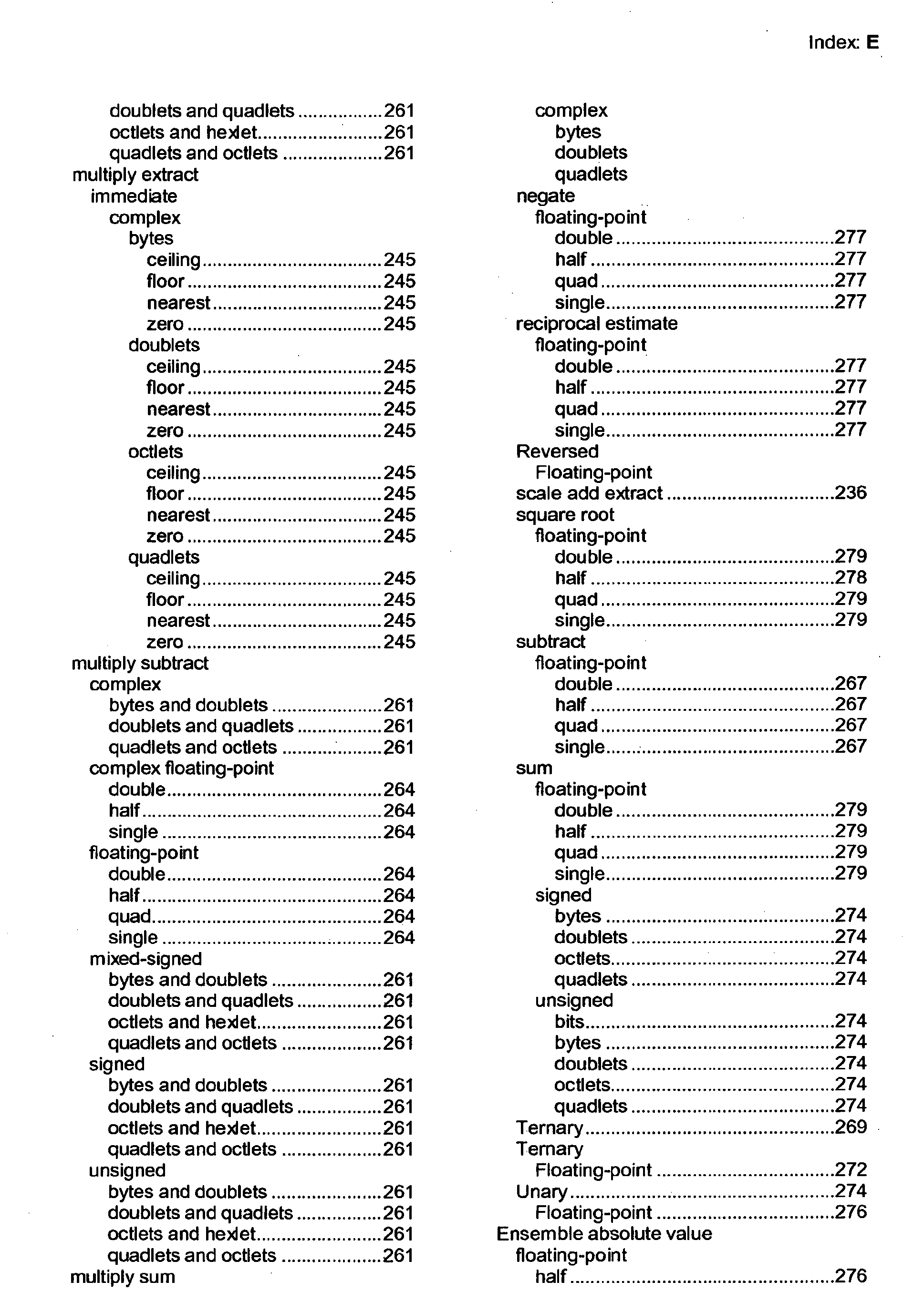

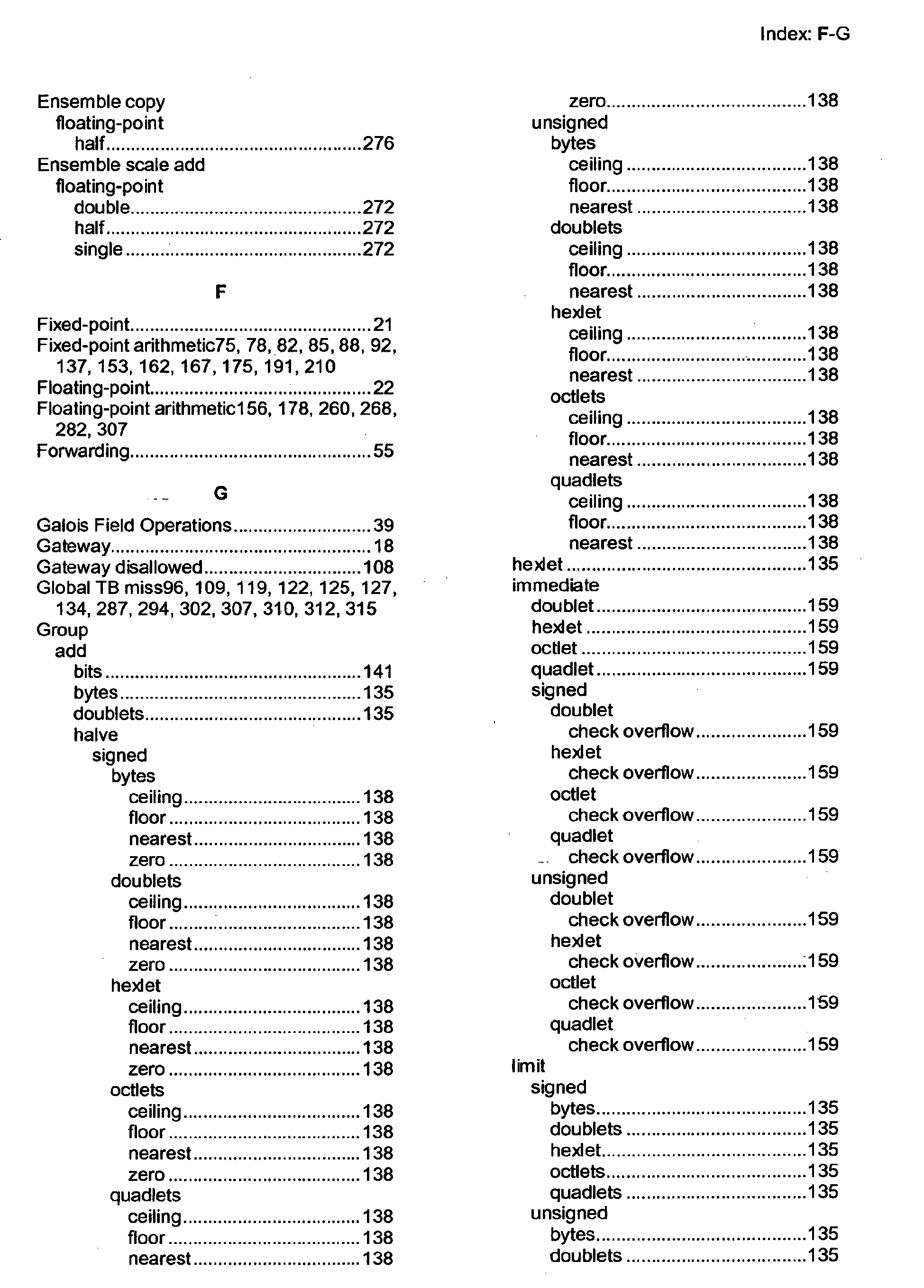

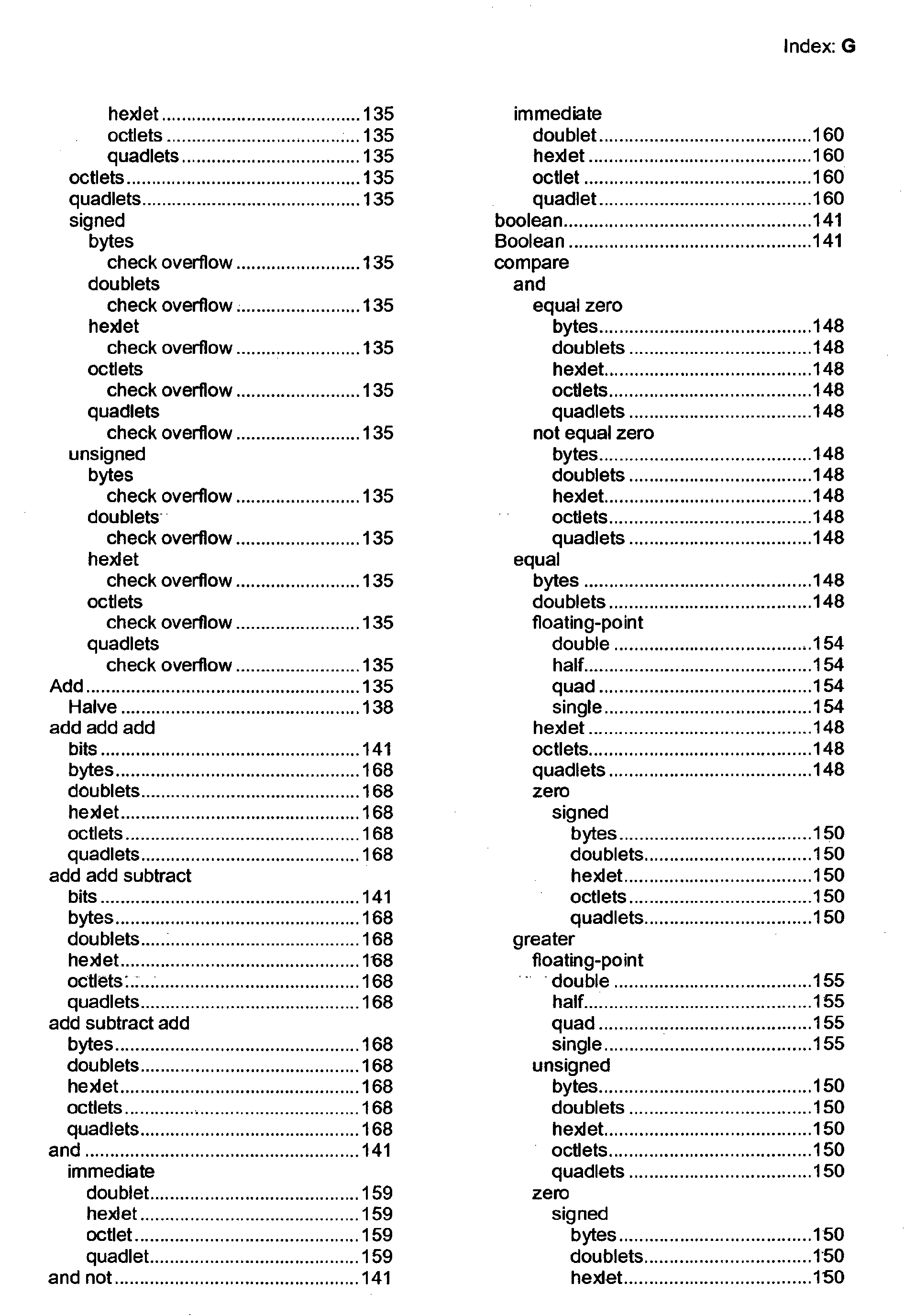

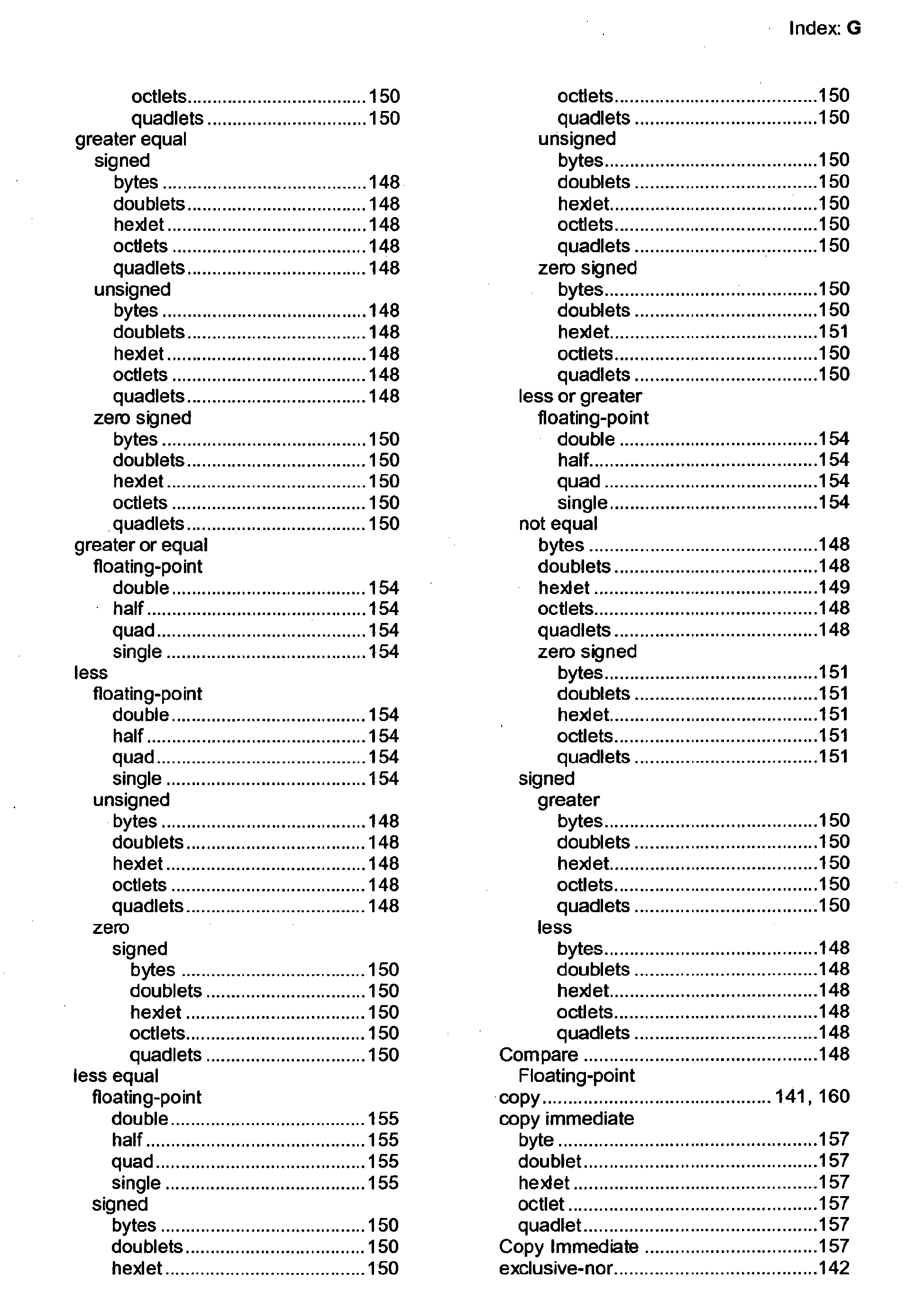

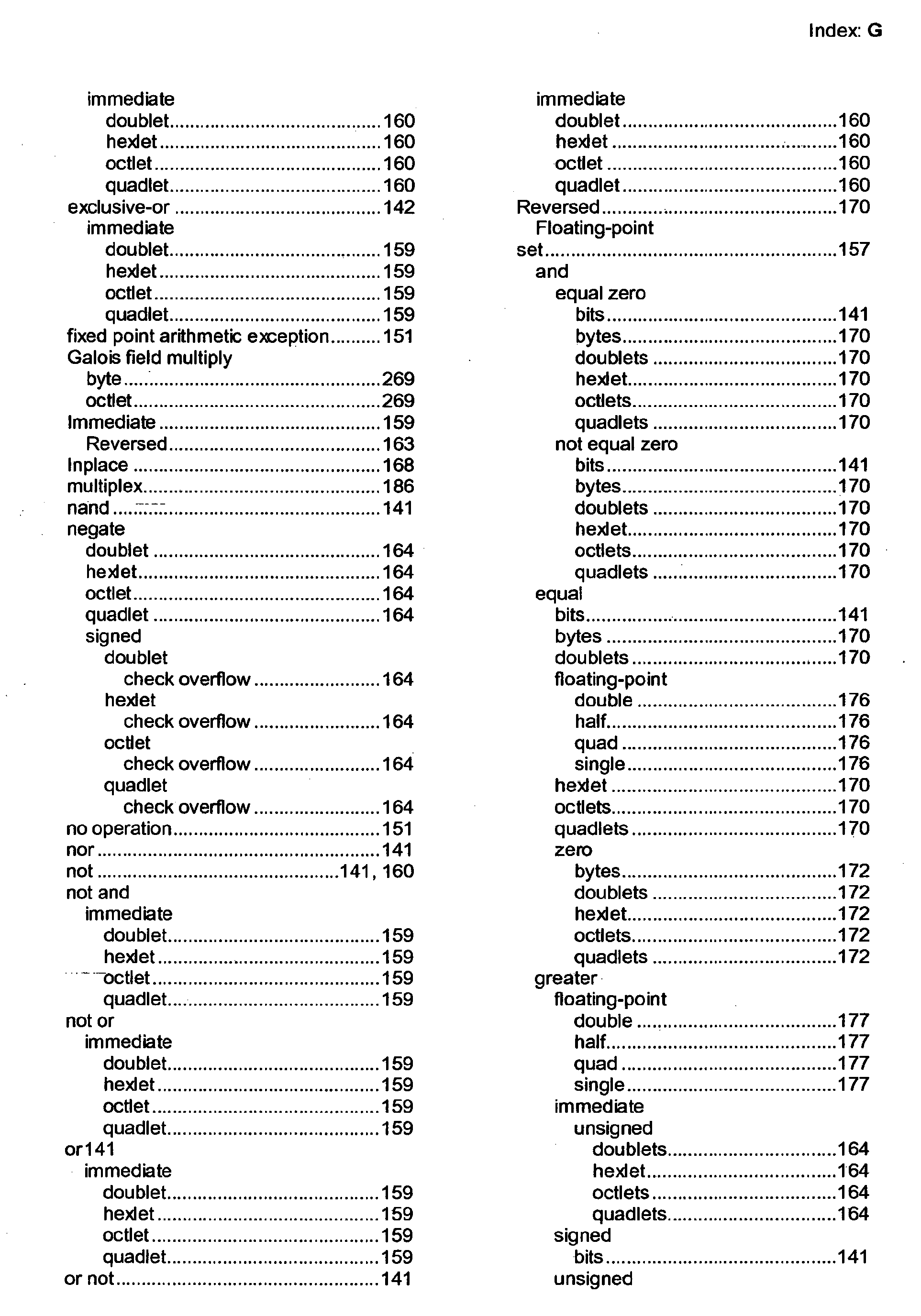

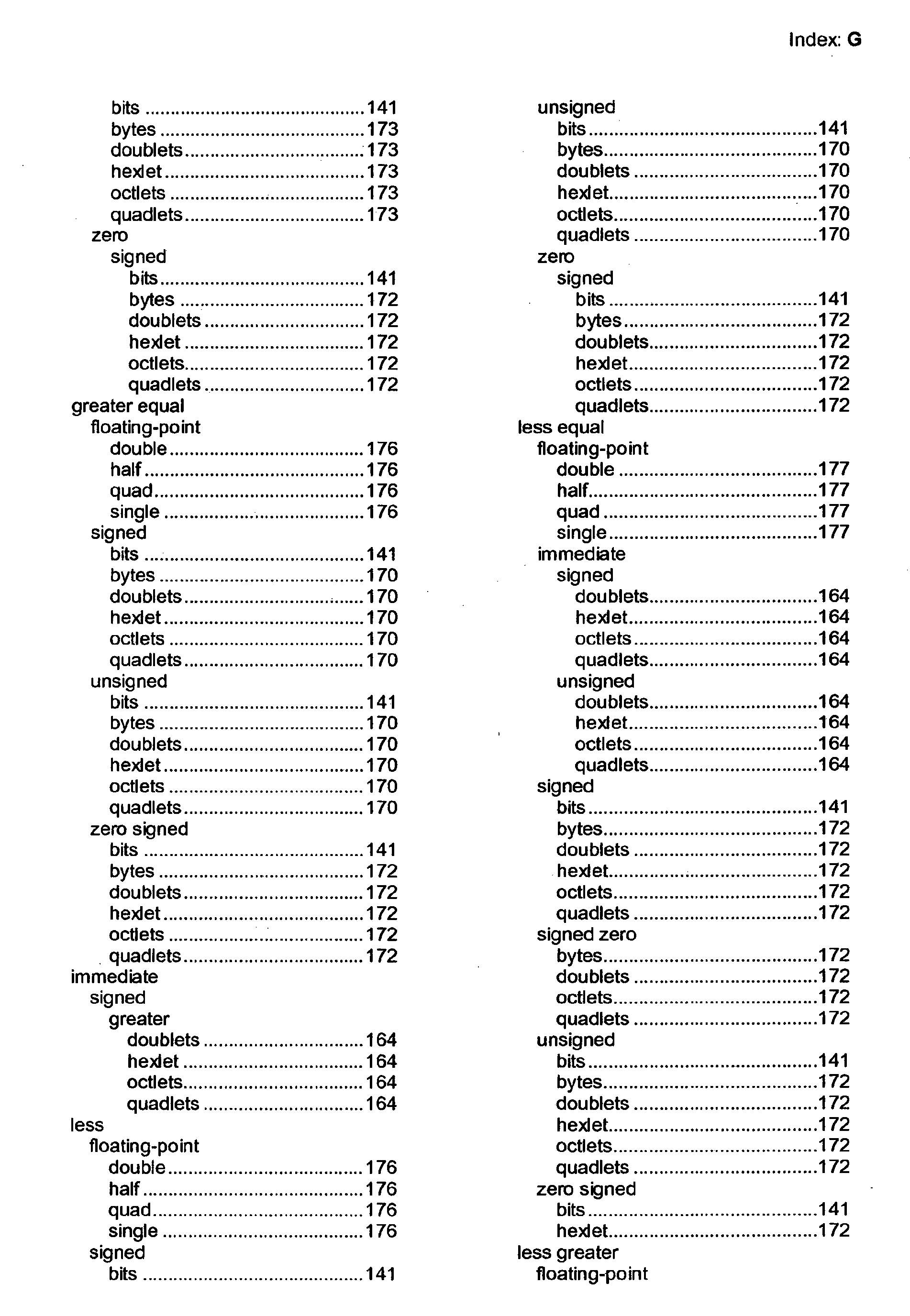

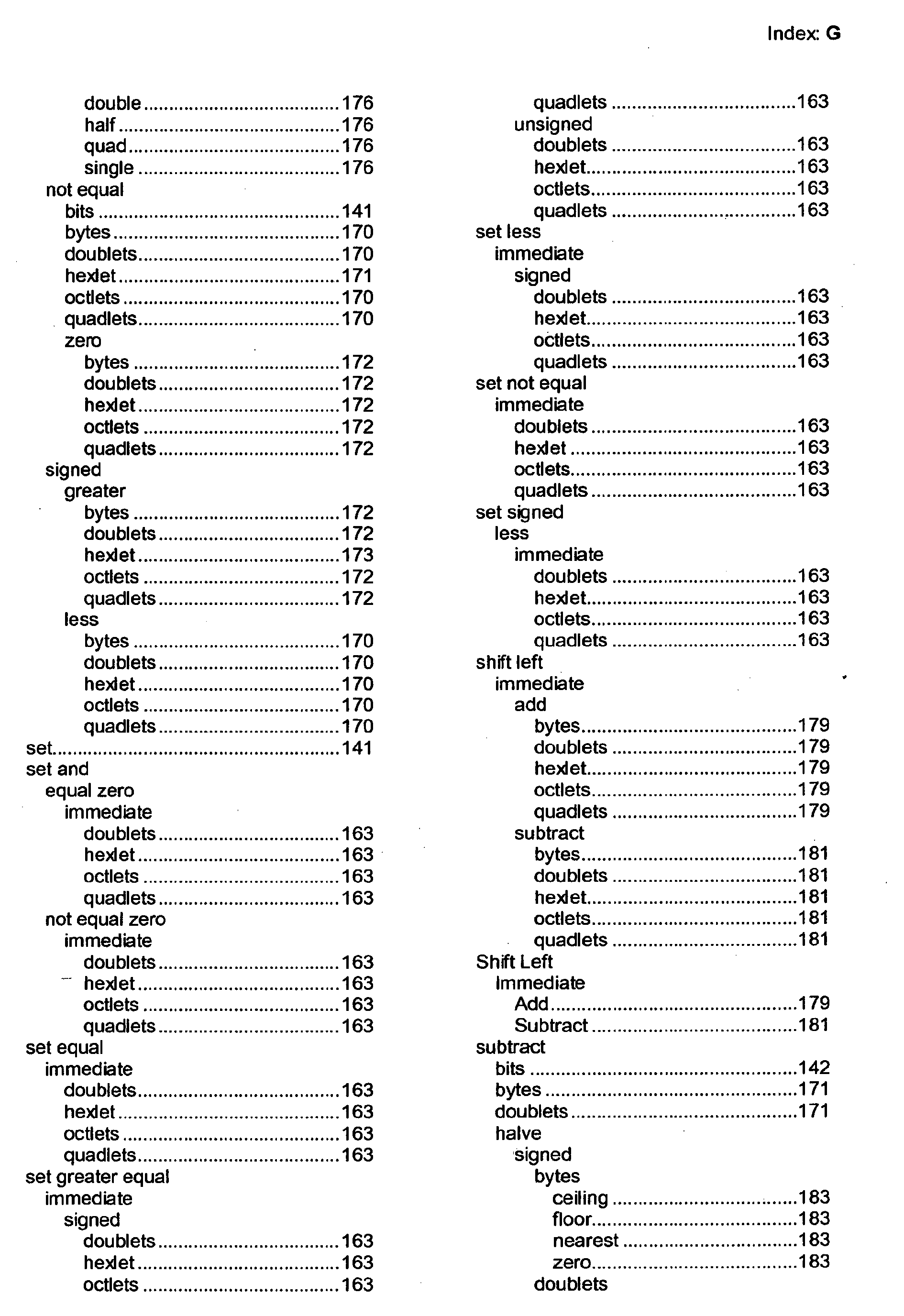

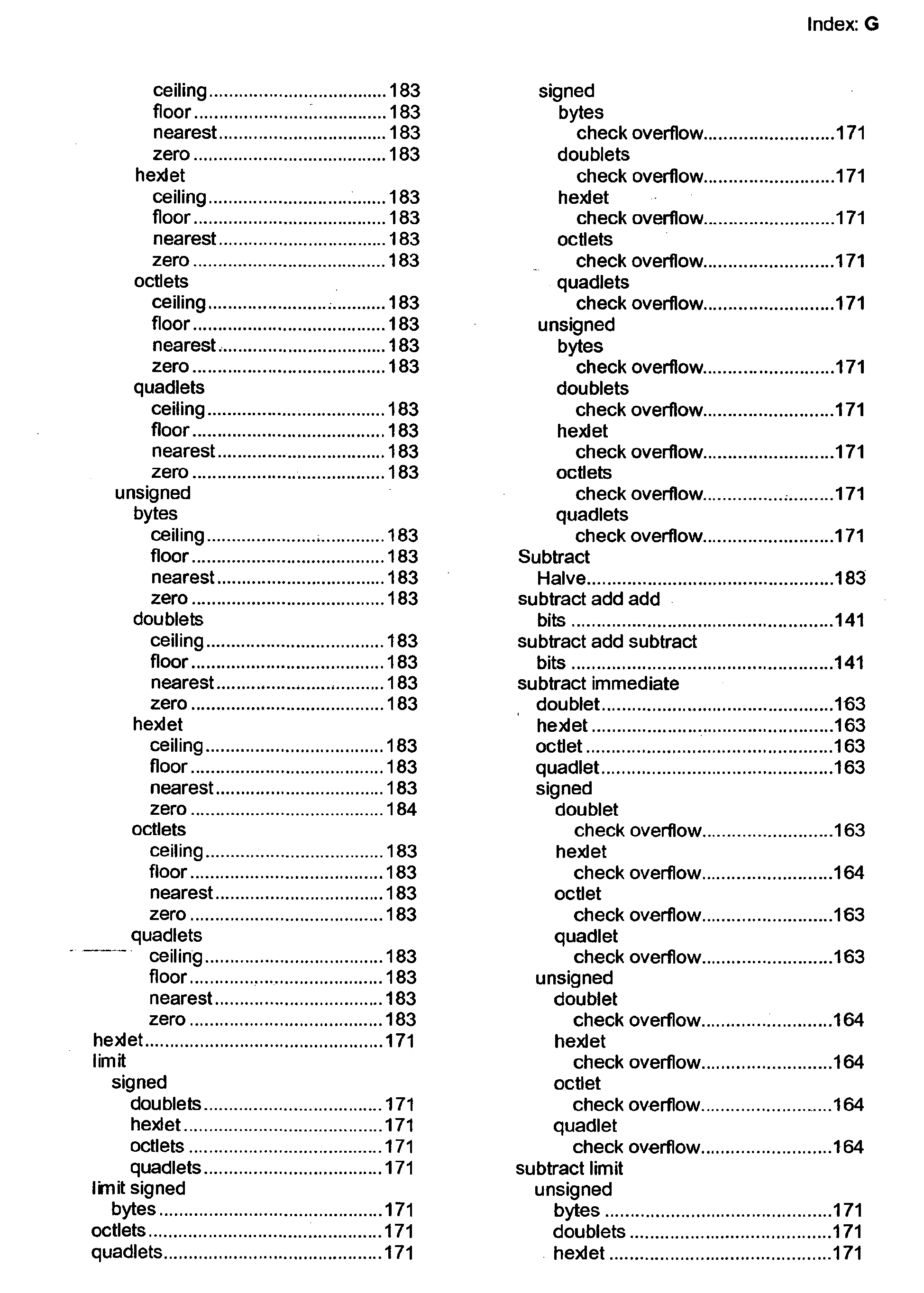

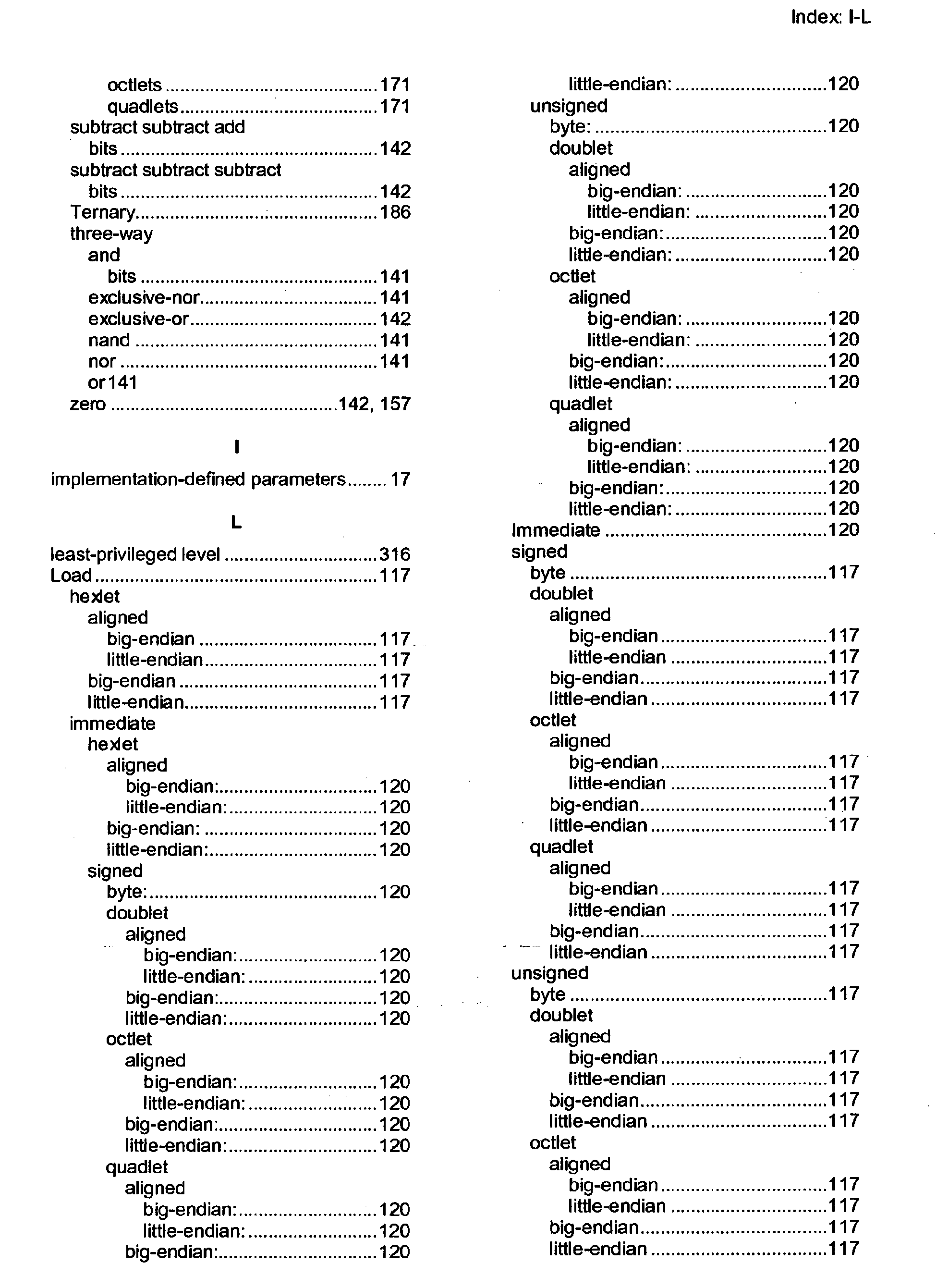

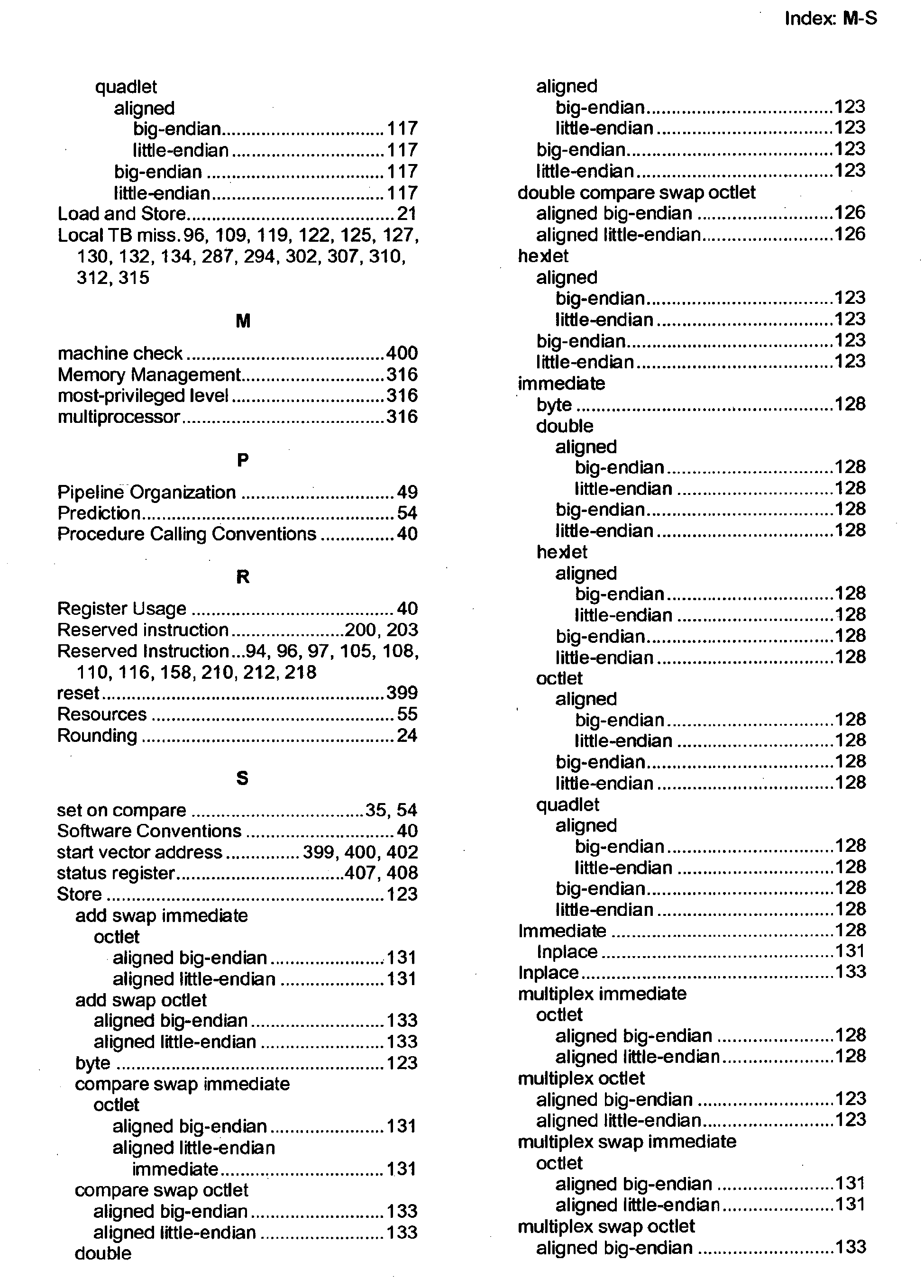

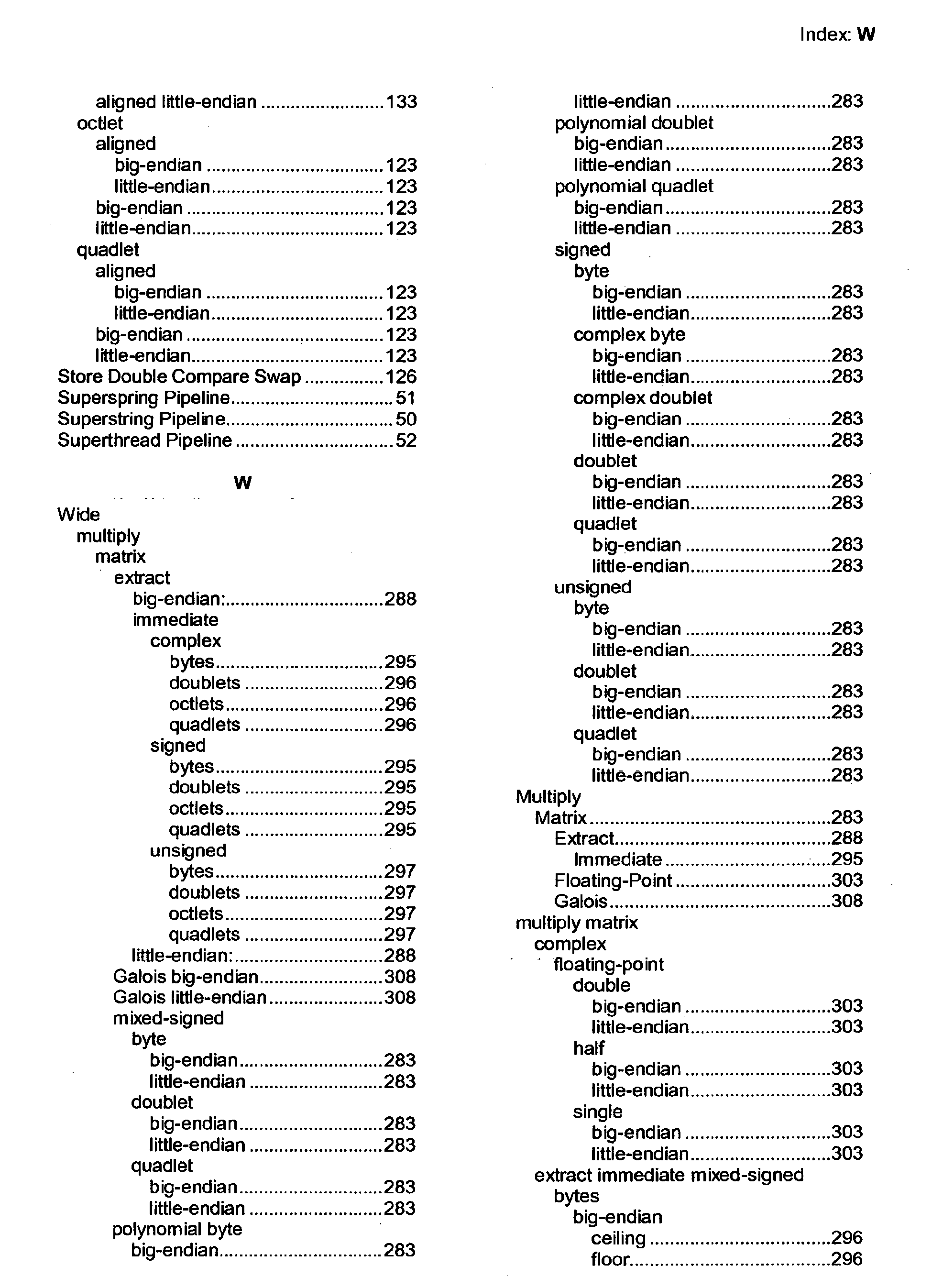

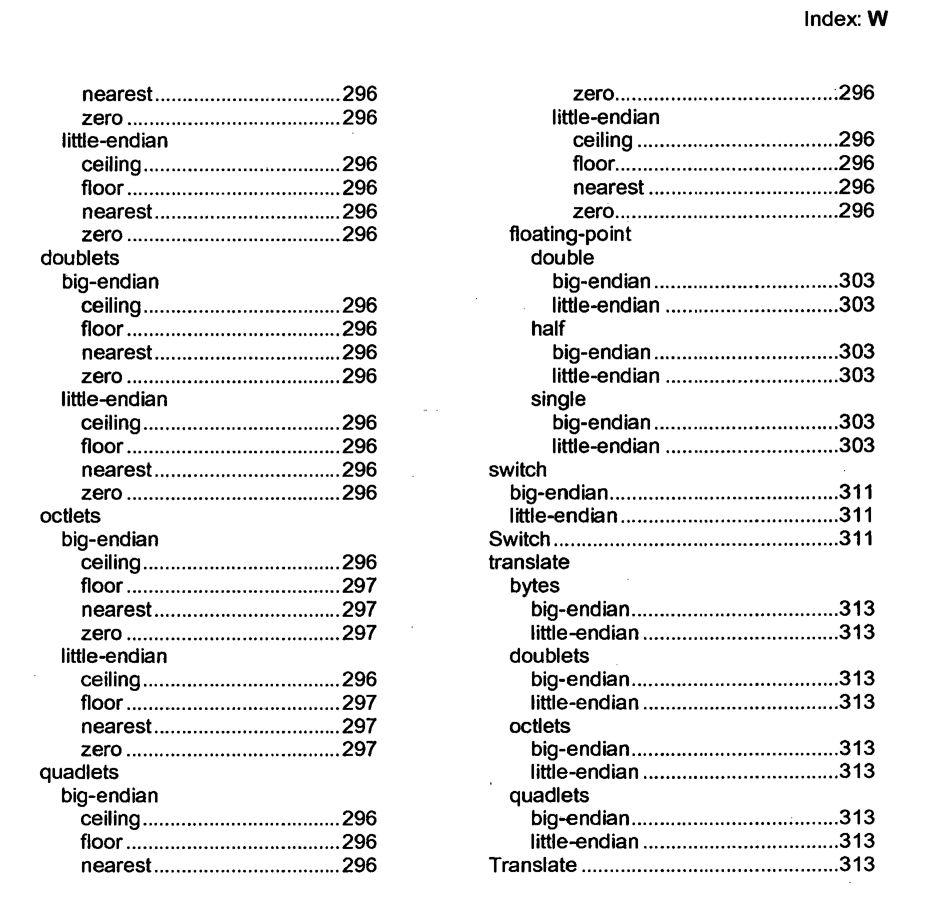

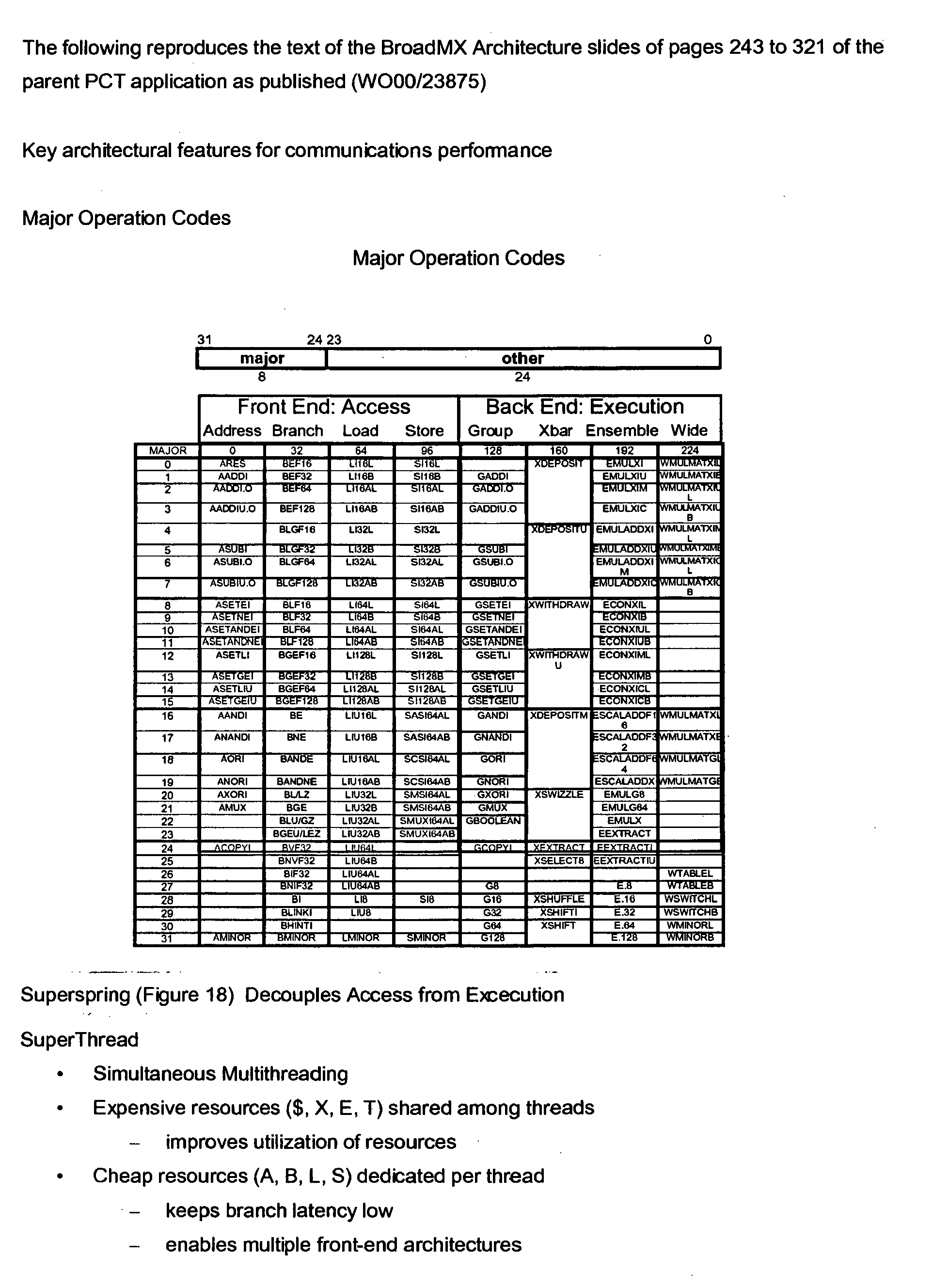

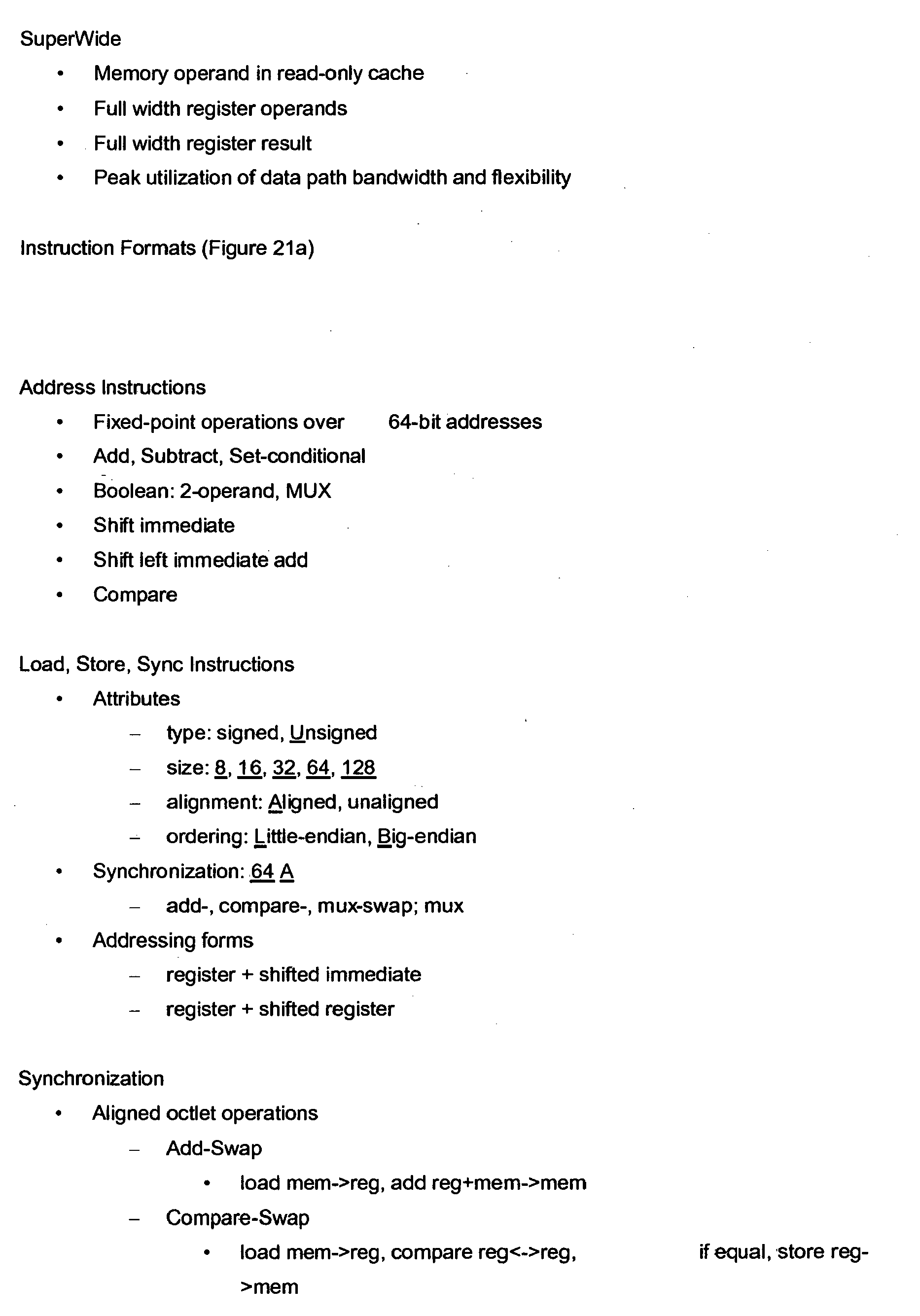

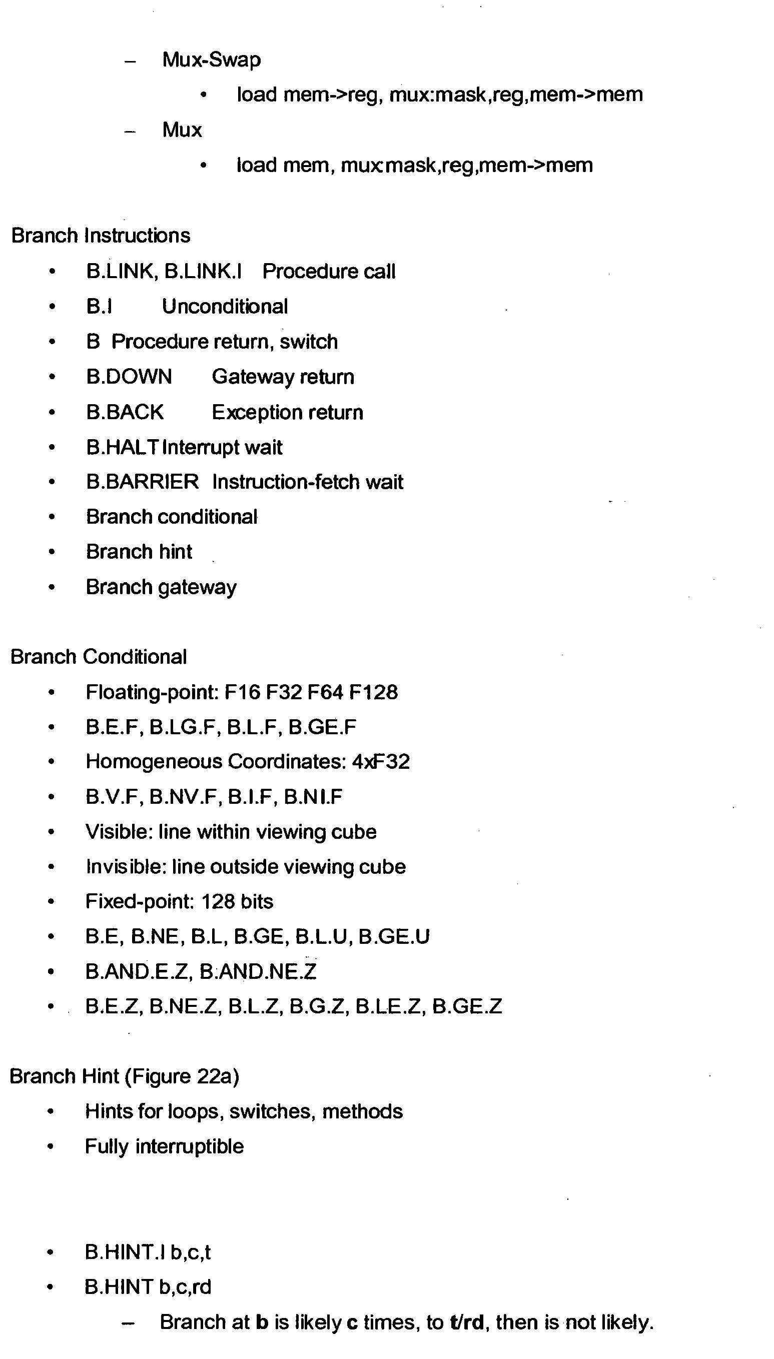

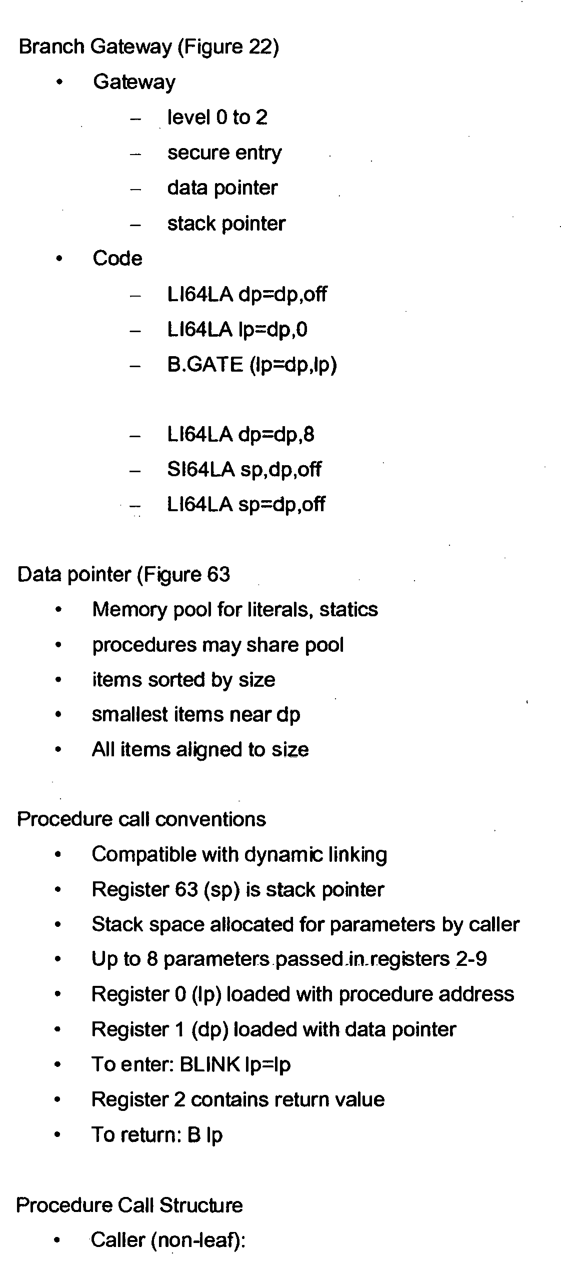

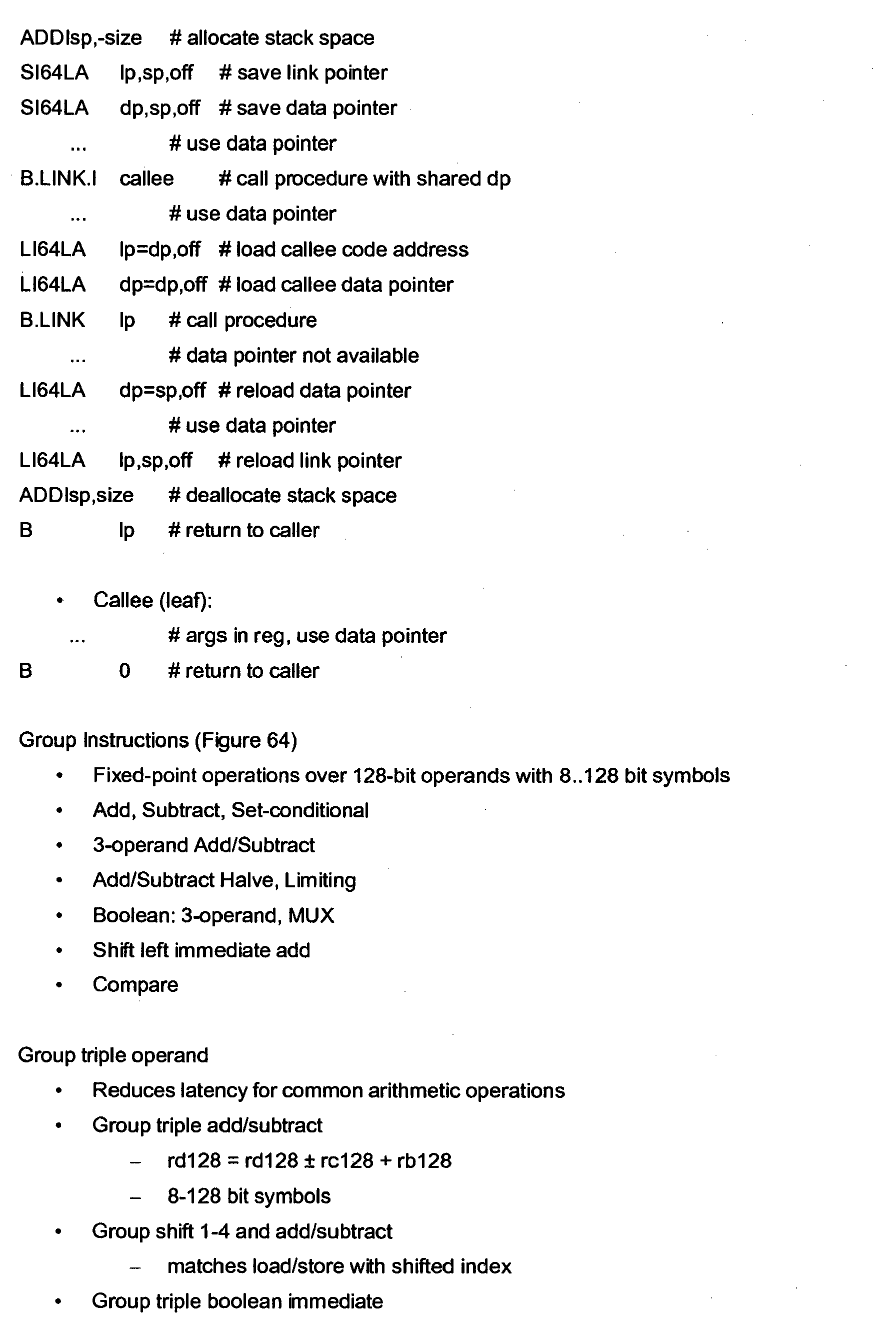

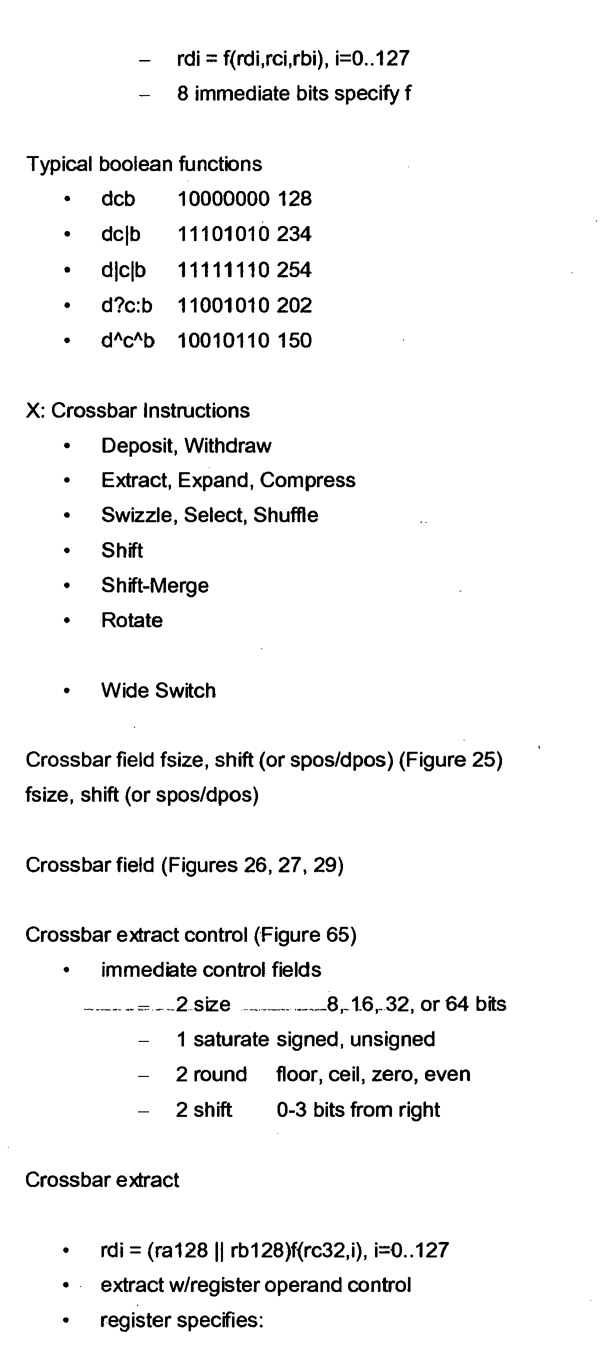

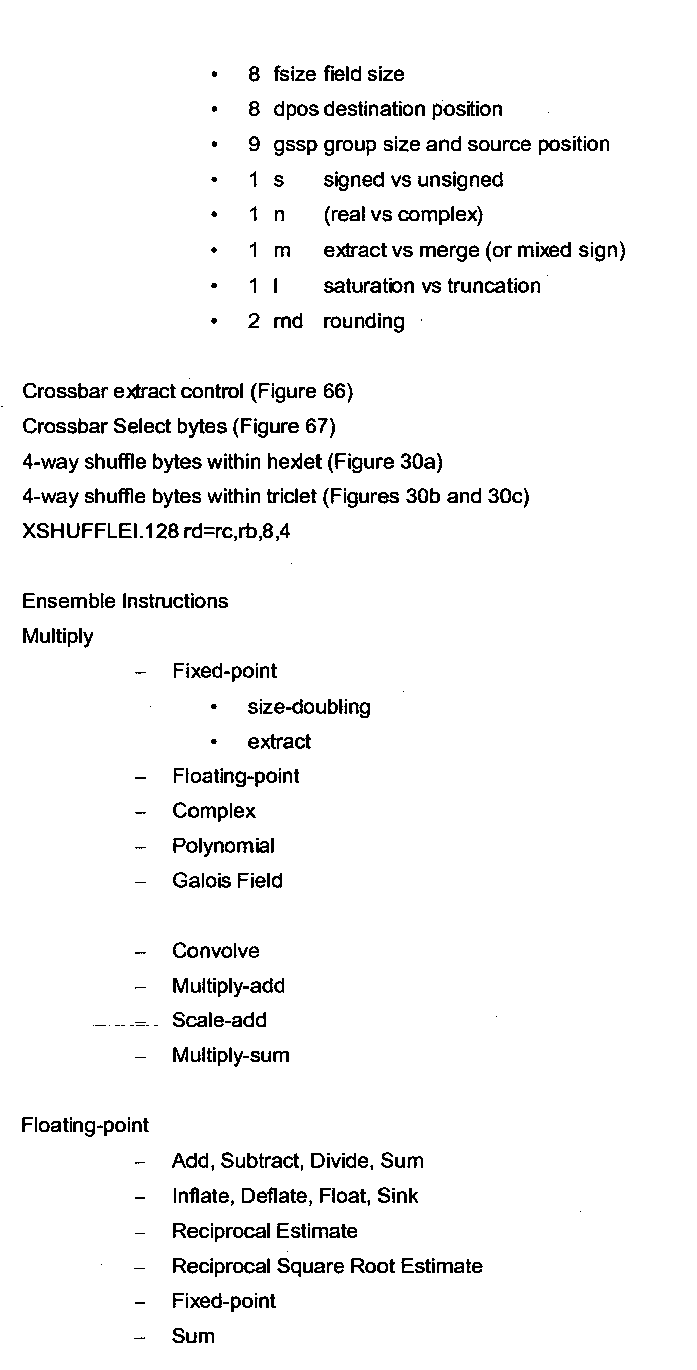

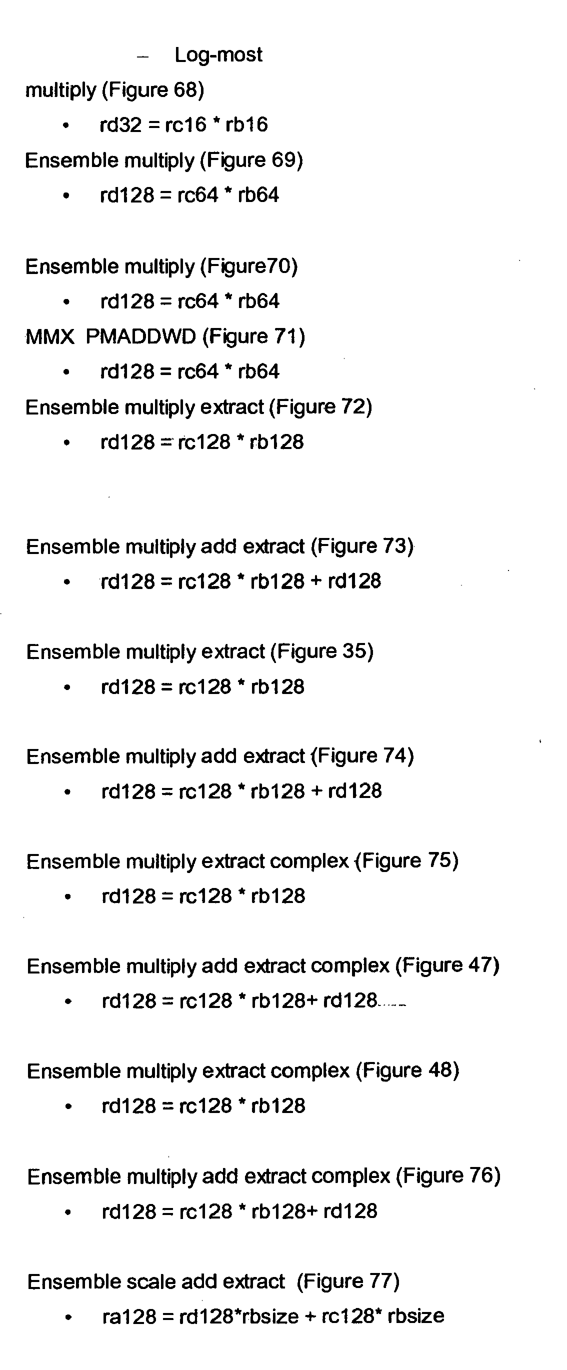

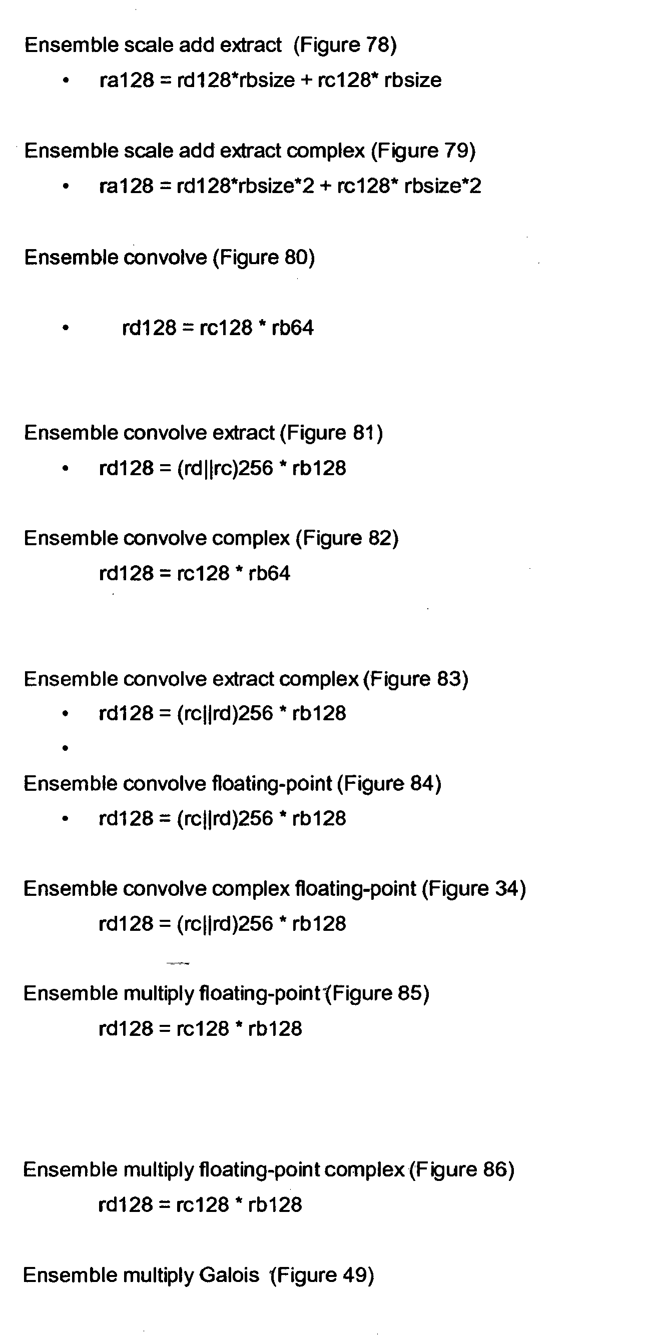

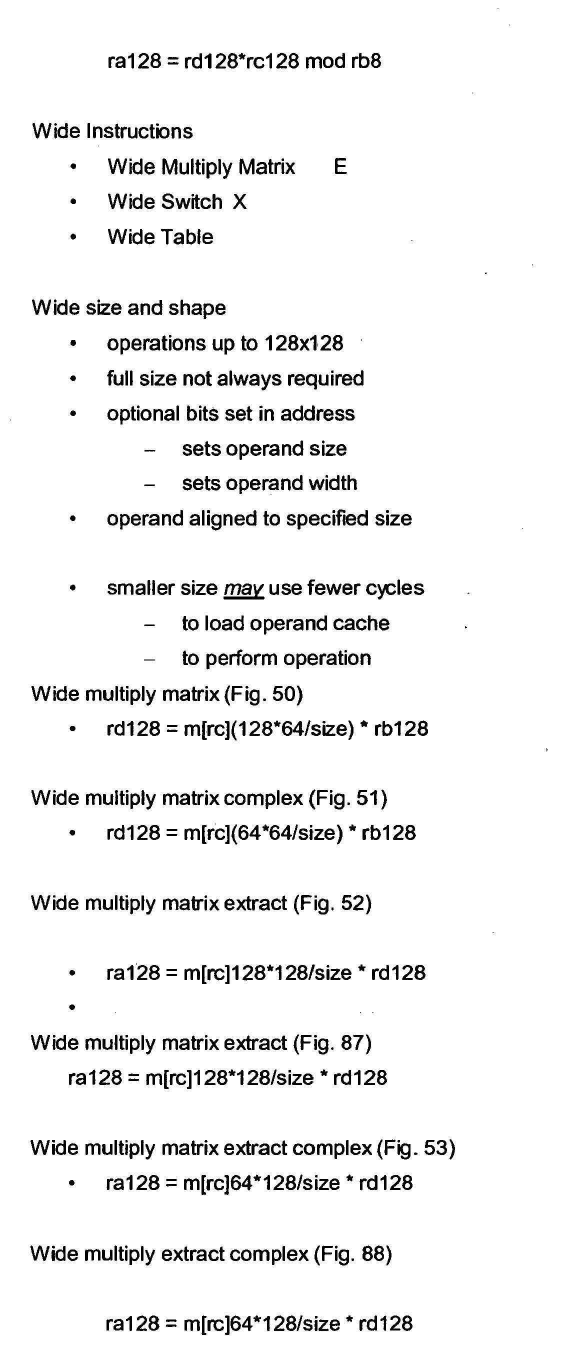

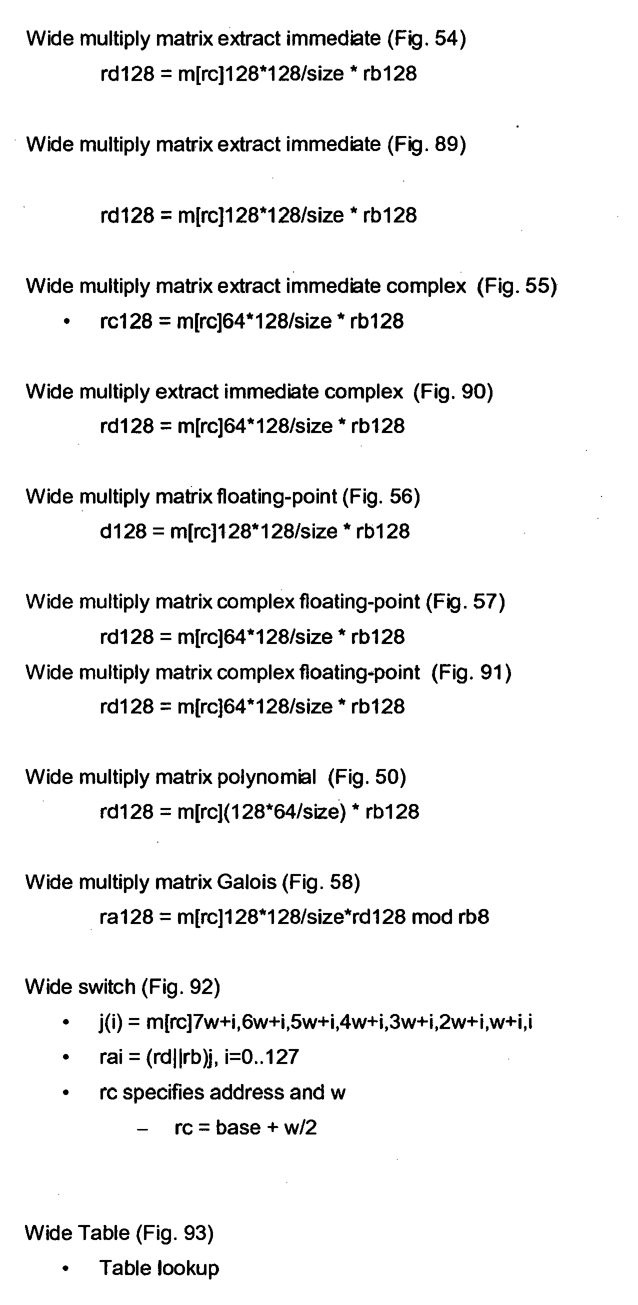

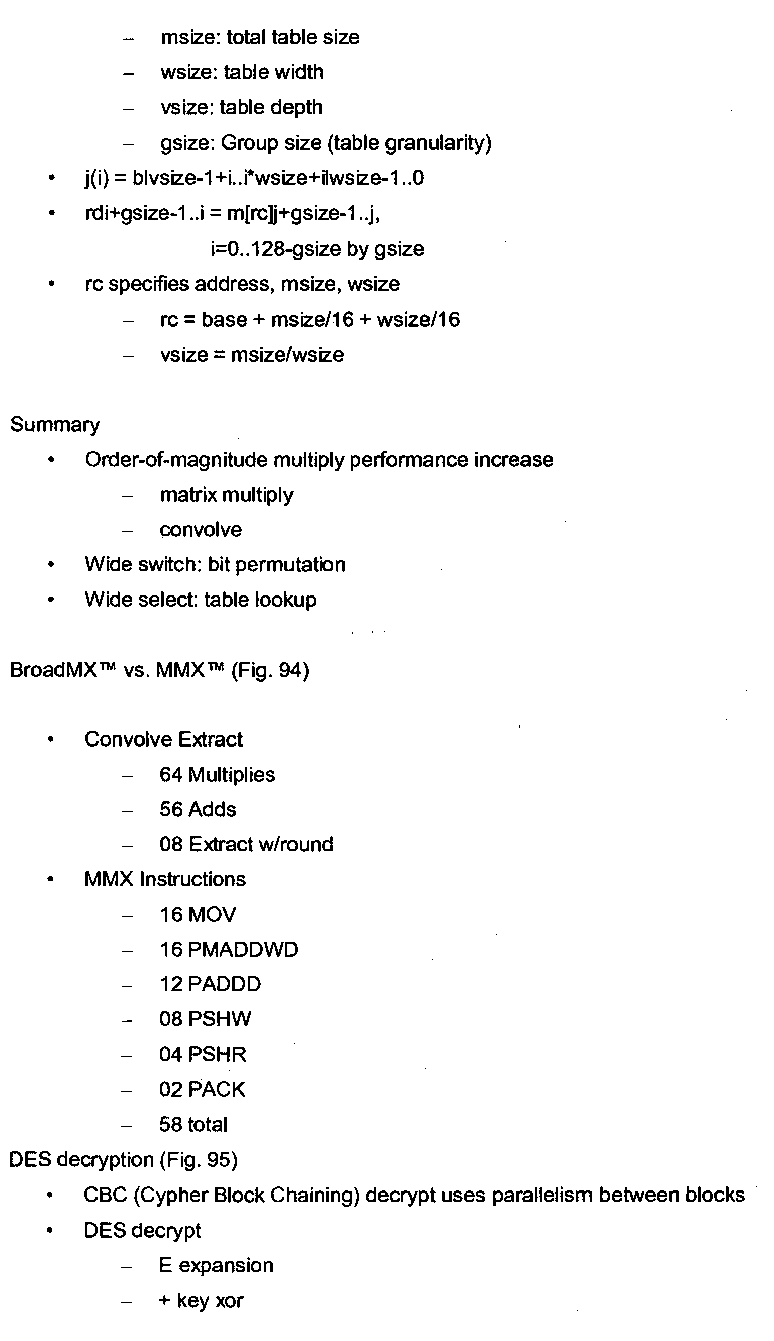

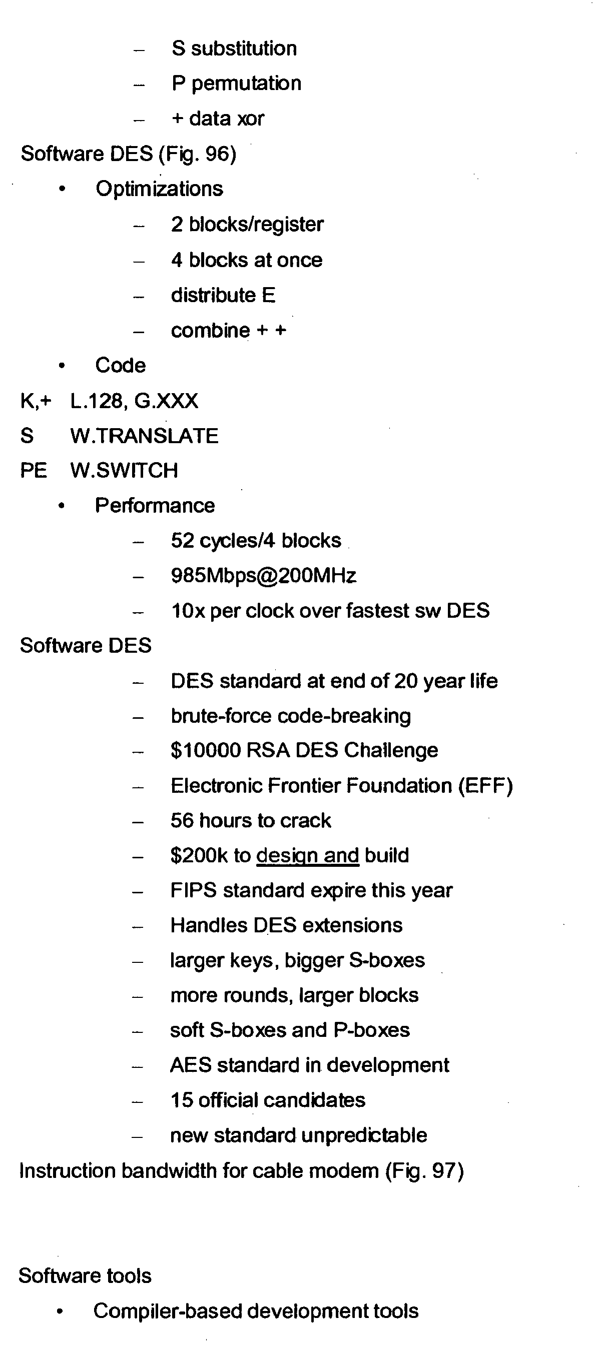

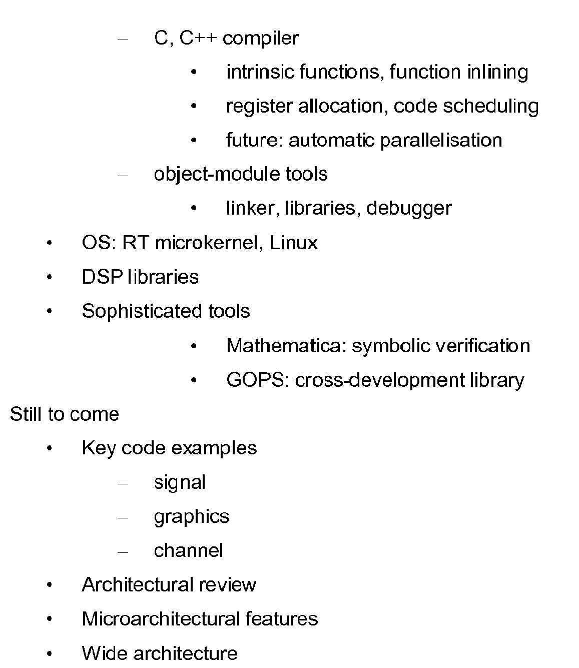

## Claims

1. A processor comprising:
a first data path having a first bit width;
a second data path having a second bit width greater than the first bit width;
a plurality of third data paths (155-158) having a combined bit width less than the second bit width;
a wide operand storage (714) coupled to the first data path and to the second data path for storing a wide operand (735) received over the first data path, the wide operand having a size with a number of bits greater than the first bit width, such that said reception of said wide operand requires more than one transfer over the first data path;
a register file (720) including registers (127, 128, 720A...720n) having the first bit width, the register file being connected to the third data paths, and including at least one wide operand register to specify an address and the size of the wide operand;
a functional unit (740) capable of performing operations in response to instructions, the functional unit coupled by the second data path to the wide operand storage, and coupled by the third data paths to the register file (720); and
wherein the functional unit (740) executes a single wide translate instruction containing instruction fields specifying (i) the wide operand register to cause retrieval of the wide operand for storage in the wide operand storage, the wide operand comprising a table of values; (ii) a source register containing a plurality of data elements; and (iii) a results register, wherein the data elements of the source register specify rows in the table, and positions of those data elements within the source register define columns in the table, and wherein the wide translate instruction causes the values at the intersections of the specified row and the specified column for every data element in the source register to be copied in parallel into the results register at the same position as the data element within the source register.

2. A processor as in claim 1, wherein the wide translate instruction further specifies the size of the data elements within the source register.

3. A processor as in claim 2, wherein the wide translate instruction defines the number of rows within the table.

4. A processor as in claim 1, 2 or 3, wherein if the table specified by the wide operand has fewer rows than the size of the data elements in the source register can specify, multiple copies of the table are made, such that every bit in each data element specifies a row in the table.

5. A processor as in claim 4 wherein if the table has fewer rows than the size of the data elements in the source register can specify, at least one bit in each data element is ignored in specifying the row in the table.

6. A processor as in any preceding claim wherein the table has 4, 8, 16, 32, 64, 128 or 256 rows.

7. A processor as in any of claims 1 to 5, wherein the source register comprises a register having at least 16 8-bit bytes, the eight bits in each byte specifying one row of 256 rows in the table.

8. A processor as in claim 6 wherein the wide translate instruction partitions the source register into data elements of 1, 2, 4, or 8 bytes.

9. A processor as in any of the preceding claims, wherein the functional unit (740) is capable of initiating only one instruction at a time, and the wide operand specifier register includes information that specifies both the address and size of the wide operand.

10. A processor as in claim 9, wherein when the wide translate instruction is executed the processor reads the wide operand specifier from a general register, and more significant bits in the wide operand specifier provide the address in a memory from which to fetch the wide operand (735), and less significant bits in the wide operand specifier specify the size of the wide operand.

11. A processor as in any of the preceding claims, wherein in performing a later operation specifying the wide operand stored in the wide operand storage, the system:
determines if the wide operand is already stored within the wide operand storage; and
if the wide operand is already stored in the wide operand storage, reuses the wide operand from the wide operand storage in the later operation.

12. A processor as in claim 11, wherein if the wide operand (735) has been changed, the wide operand called for by the later operation is retrieved from the main memory.

13. A method performed by a processor including a first data path having a first bit width, a second data path having a second bit width greater than the first bit width, a plurality of third data paths (155-158) having a combined bit width less than the second bit width, a wide operand storage (714) coupled to the first data path and the second data path for storing a wide operand (735) received over the first data path, the wide operand having a size with a number of bits greater than the first bit width such that said reception of said wide operand requires more than one transfer over the first data path, a register file (720) including registers (127, 128, 720A...720n) having the first bit width, the register file being connected to the third data paths, and including at least one wide operand register to specify an address and the size of the wide operand, the method comprising:
executing a single wide translate instruction containing instruction fields specifying (i) the wide operand register to cause retrieval of the wide operand for storage in the wide operand storage, the wide operand comprising a table of values; (ii) a source register containing a plurality of data elements; and (iii) a results register, wherein the data elements of the source register specify rows in the table, and positions of those data elements within the source register define columns in the table, and wherein the wide translate instruction causes:
retrieval of the wide operand for storage in the wide operand storage, the wide operand comprising a table of values; and
the values at the intersections of the specified row and the specified column for every data element in the source register to be copied in parallel into the results register at the same position as the data element within the source register.

14. A method as in claim 13, wherein the wide translate instruction further specifies the size of the data elements within the source register.

15. A method as in claim 13 or 14, wherein the wide translate instruction defines the number of rows within the table.

16. A method as in claim 13, 14 or 15, wherein if the table specified by the wide operand has fewer rows than the size of the data elements in the source register can specify, multiple copies of the table are made, such that every bit in each data element specifies a row in the table.

17. A method as in claim 16, wherein if the table has fewer rows than the size of the data elements in the source register can specify, at least one bit in each data element is ignored in specifying the row in the table.

18. A method as in any of claims 13 to 17, wherein the table has 4, 8, 16, 32, 64, 128 or 256 rows.

19. A method as in any of claims 13 to 17, wherein the source register comprises a register having at least 16 8-bit bytes, the eight bits in each byte specifying one row of 256 rows in the table.

20. A method as in any of claims 13 to 19, wherein the wide translate instruction partitions the source register into data elements of 1, 2, 4, or 8 bytes.

21. A method as in any of claims 13 to 19, wherein the functional unit is capable of initiating only one instruction at a time, and the wide operand specifier register includes information that specifies both the address and size of the wide operand.

22. A method as in claim 21, wherein when the wide translate instruction is executed the processor reads the wide operand specifier from a general register, and more significant bits in the wide operand specifier provide the address in a memory from which to fetch the wide operand, and less significant bits in the wide operand specifier specify the size of the wide operand.

23. A method as in any of claims 13 to 22, wherein in performing a later operation specifying the wide operand (735) stored in the wide operand storage (714), the system:
determines if the wide operand is already stored within the wide operand storage (714); and
if the wide operand is already stored in the wide operand storage, reuses the wide operand from the wide operand storage in the later operation.

24. A method as in claim 23, wherein if the wide operand has been changed, the wide operand called for by the later operation is retrieved from the main memory.

25. A data processing system comprising:
a processor according to any of claims 1 to 12 , the processor being a programmable processor on a single integrated circuit;
a main memory external to the single integrated circuit;
a bus (137) coupled to the main memory;
the programmable processor including a bus interface (118) coupling the programmable processor to the bus.

26. A computer readable medium comprising computer readable code for causing the processor to perform the steps of any of claims 13 to 24.

## Patentansprüche

1. Prozessor, der Folgendes umfasst:
einen ersten Datenpfad, der eine erste Bitbreite aufweist;
einen zweiten Datenpfad, der eine zweite Bitbreite aufweist, die größer als die erste Bitbreite ist;
eine Vielzahl von dritten Datenpfaden (155-158), die eine kombinierte Bitbreite aufweisen, die kleiner als die zweite Bitbreite ist;
einen Speicher für breite Operanden (714), der mit dem ersten Datenpfad und dem zweiten Datenpfad gekoppelt ist, zum Speichern eines breiten Operanden (735), der über den ersten Datenpfad empfangen wird, wobei der breite Operand eine Größe mit einer Anzahl von Bits aufweist, die größer ist als die erste Bitbreite, so dass der genannte Empfang des genannten breiten Operanden mehr als einen Transfer über den ersten Datenpfad erfordert;
eine Registerdatei (720), die Register (127, 128, 720A ... 720n) umfasst, die die erste Bitbreite aufweisen, wobei die Registerdatei mit den dritten Datenpfaden verbunden ist, und mindestens ein Register für breite Operanden umfasst, um eine Adresse und die Größe des breiten Operanden anzugeben;
eine Funktionseinheit (740), die Operationen als Reaktion auf Anweisungen durchführen kann, wobei die Funktionseinheit durch den zweiten Datenpfad mit dem Speicher für breite Operanden gekoppelt ist, und durch die dritten Datenpfade mit der Registerdatei (720) gekoppelt ist; und
wobei die Funktionseinheit (740) einen einzelnen breiten Übersetzungsbefehl ausführt, der Befehlsfelder enthält, die Folgendes angeben: (i) das Register für breite Operanden, das den Abruf des breiten Operanden zur Speicherung in dem Speicher für breite Operanden veranlasst, wobei der breite Operand eine Tabelle von Werten umfasst; (ii) ein Quell-Register, das eine Vielzahl von Datenelementen umfasst; und (iii) ein Ergebnisregister, wobei die Datenelemente des Quell-Registers Zeilen in der Tabelle angeben, und Positionen dieser Datenelemente in dem Quell-Register Spalten in der Tabelle definieren, und wobei der breite Übersetzungsbefehl veranlasst, dass die Werte an den Schnittpunkten der angegebenen Zeile und der angegebenen Spalte für jedes Datenelement in dem Quell-Register an der gleichen Position wie das Datenelement in dem Quell-Register parallel in das Ergebnisregister kopiert werden.

2. Prozessor nach Anspruch 1, wobei der breite Übersetzungsbefehl ferner die Größe der Datenelemente in dem Quell-Register angibt.

3. Prozessor nach Anspruch 2, wobei der breite Übersetzungsbefehl die Anzahl der Zeilen in der Tabelle definiert.

4. Prozessor nach Anspruch 1, 2 oder 3, wobei, wenn die Tabelle, die durch den breiten Operanden angegeben wird, weniger Zeilen aufweist, als die Größe der Datenelemente in dem Quell-Register angeben kann, mehrere Kopien der Tabelle erstellt werden, so dass jedes Bit in jedem Datenelement eine Zeile in der Tabelle angibt.

5. Prozessor nach Anspruch 4, wobei, wenn die Tabelle, weniger Zeilen aufweist, als die Größe der Datenelemente in dem Quell-Register angeben kann, mindestens ein Bit in jedem Datenelement bei der Angabe der Zeile in der Tabelle ignoriert wird.

6. Prozessor nach einem der vorhergehenden Ansprüche, wobei die Tabelle 4, 8, 16, 32, 64, 128 oder 256 Zeilen aufweist.

7. Prozessor nach einem der Ansprüche 1 bis 5, wobei das Quell-Register ein Register umfasst, das mindestens 16 8-Bit-Bytes aufweist, wobei die acht Bits in jedem Byte eine Zeile von 256 Zeilen in der Tabelle angeben.

8. Prozessor nach Anspruch 6, wobei der breite Übersetzungsbefehl das Quell-Register in Datenelemente von 1, 2, 4 oder 8 Bytes partitioniert.

9. Prozessor nach einem der vorhergehenden Ansprüche, wobei die Funktionseinheit (740) nur einen Befehl zu einem Zeitpunkt initiieren kann, und das Register für breite Operandenspezifizierer Informationen umfasst, die sowohl die Adresse als auch die Größe des breiten Operanden angeben.

10. Prozessor nach Anspruch 9, wobei, wenn der breite Übersetzungsbefehl ausgeführt wird, der Prozessor den breiten Operandenspezifizierer aus einem allgemeinen Register liest, und mehr signifikante Bits in dem breiten Operandenspezifizierer die Adresse in einem Speicher angeben, aus dem der breite Operand (735) abzurufen ist, und weniger signifikante Bits in dem breiten Operandenspezifizierer die Größe des breiten Operanden angeben.

11. Prozessor nach einem der vorhergehenden Ansprüche, wobei bei der Durchführung einer späteren Operation, die den breiten Operanden angibt, der in dem Speicher für breite Operanden gespeichert ist, das System
ermittelt, ob der breite Operand bereits in dem Speicher für breite Operanden gespeichert ist; und
wenn der breite Operand bereits in dem Speicher für breite Operanden gespeichert ist, der breite Operand aus dem Speicher für breite Operanden in der späteren Operation verwendet wird.

12. Prozessor nach Anspruch 11, wobei, wenn der breite Operand (735) geändert wurde, der breite Operand, der durch die spätere Operation aufgerufen wurde, aus dem Hauptspeicher abgerufen wird.

13. Verfahren, das durch einen Prozessor durchgeführt wird, der Folgendes umfasst: einen ersten Datenpfad, der eine erste Bitbreite aufweist, einen zweiten Datenpfad, der eine zweite Bitbreite aufweist, die größer als die erste Bitbreite ist, eine Vielzahl von dritten Datenpfaden (155-158), die eine kombinierte Bitbreite aufweisen, die kleiner als die zweite Bitbreite ist, einen Speicher (714) für breite Operanden, der mit dem ersten Datenpfad und dem zweiten Datenpfad gekoppelt ist, um einen breiten Operanden (735) zu speichern, der über den ersten Datenpfad empfangen wird, wobei der breite Operand eine Größe mit einer Anzahl von Bits aufweist, die größer ist als die erste Bitbreite, so dass der genannte Empfang des genannten breiten Operanden mehr als einen Transfer über den ersten Datenpfad erfordert; eine Registerdatei (720), die Register (127, 128, 720A ... 720n) umfasst, die die erste Bitbreite aufweisen, wobei die Registerdatei mit den dritten Datenpfaden verbunden ist, und mindestens ein Register für breite Operanden umfasst, um eine Adresse und die Größe des breiten Operanden anzugeben, wobei das Verfahren Folgendes umfasst:
Ausführen eines einzelnen breiten Übersetzungsbefehls, der Befehlsfelder enthält, die Folgendes angeben: (i) das Register für breite Operanden, das den Abruf des breiten Operanden zur Speicherung in dem Speicher für breite Operanden veranlasst, wobei der breite Operand eine Tabelle von Werten umfasst; (ii) ein Quell-Register, das eine Vielzahl von Datenelementen umfasst; und (iii) ein Ergebnisregister, wobei die Datenelemente des Quell-Registers Zeilen in der Tabelle angeben, und Positionen dieser Datenelemente in dem Quell-Register Spalten in der Tabelle definieren, und wobei der breite Übersetzungsbefehl Folgendes veranlasst:
Abrufen des breiten Operanden zur Speicherung in dem Speicher für breite Operanden, wobei der breite Operand eine Tabelle von Werten umfasst; und
die Werte an den Schnittpunkten der angegebenen Zeile und der angegebenen Spalte für jedes Datenelement in dem Quell-Register an der gleichen Position wie das Datenelement in dem Quell-Register parallel in das Ergebnisregister kopiert werden.

14. Verfahren nach Anspruch 13, wobei der breite Übersetzungsbefehl ferner die Größe der Datenelemente in dem Quell-Register angibt.

15. Verfahren nach Anspruch 13 oder 14, wobei der breite Übersetzungsbefehl die Anzahl der Zeilen in der Tabelle definiert.

16. Verfahren nach Anspruch 13, 14 oder 15, wobei, wenn die Tabelle, die durch den breiten Operanden angegeben wird, weniger Zeilen aufweist, als die Größe der Datenelemente in dem Quell-Register angeben kann, mehrere Kopien der Tabelle erstellt werden, so dass jedes Bit in jedem Datenelement eine Zeile in der Tabelle angibt.

17. Verfahren nach Anspruch 16, wobei, wenn die Tabelle, weniger Zeilen aufweist, als die Größe der Datenelemente in dem Quell-Register angeben kann, mindestens ein Bit in jedem Datenelement bei der Angabe der Zeile in der Tabelle ignoriert wird.

18. Verfahren nach einem der Ansprüche 13 bis 17, wobei die Tabelle 4, 8, 16, 32, 64, 128 oder 256 Zeilen aufweist.

19. Verfahren nach einem der Ansprüche 13 bis 17, wobei das Quell-Register ein Register umfasst, das mindestens 16 8-Bit-Bytes aufweist, wobei die acht Bits in jedem Byte eine Zeile von 256 Zeilen in der Tabelle angeben.

20. Verfahren nach einem der Ansprüche 13 bis 19, wobei der breite Übersetzungsbefehl das Quell-Register in Datenelemente von 1, 2, 4 oder 8 Bytes partitioniert.

21. Verfahren nach einem der Ansprüche 13 bis 19, wobei die Funktionseinheit nur einen Befehl zu einem Zeitpunkt initiieren kann, und das Register für breite Operandenspezifizierer Informationen umfasst, die sowohl die Adresse als auch die Größe des breiten Operanden angeben.

22. Verfahren nach Anspruch 21, wobei, wenn der breite Übersetzungsbefehl ausgeführt wird, der Prozessor den breiten Operandenspezifizierer aus einem allgemeinen Register liest, und mehr signifikante Bits in dem breiten Operandenspezifizierer die Adresse in einem Speicher angeben, aus dem der breite Operand abzurufen ist, und weniger signifikante Bits in dem breiten Operandenspezifizierer die Größe des breiten Operanden angeben.

23. Verfahren nach einem der Ansprüche 13 bis 22, wobei bei der Durchführung einer späteren Operation, die den breiten Operanden (735) angibt, der in dem Speicher (714) für breite Operanden gespeichert ist, das System
ermittelt, ob der breite Operand bereits in dem Speicher (714) für breite Operanden gespeichert ist; und
wenn der breite Operand bereits in dem Speicher für breite Operanden gespeichert ist, der breite Operand aus dem Speicher für breite Operanden in der späteren Operation verwendet wird.

24. Verfahren nach Anspruch 23, wobei, wenn der breite Operand geändert wurde, der breite Operand, der durch die spätere Operation aufgerufen wurde, aus dem Hauptspeicher abgerufen wird.

25. Datenverarbeitungssystem, das Folgendes umfasst:
einen Prozessor nach einem der Ansprüche 1 bis 12, wobei der Prozessor ein programmierbarer Prozessor in einem einzelnen integrierten Schaltkreis ist;
einen Hauptspeicher außerhalb des einzelnen integrierten Schaltkreises;
eine Busleitung (137), die mit dem Hauptspeicher gekoppelt ist;
wobei der programmierbare Prozessor eine Busschnittstelle (118) umfasst, die den programmierbaren Prozessor mit der Busleitung koppelt.

26. Computerlesbares Medium, das computerlesbaren Code umfasst, um den Prozessor zu veranlassen, die Schritte nach einem der Ansprüche 13 bis 24 auszuführen.

## Revendications

1. Processeur comprenant :
un premier chemin de données ayant une première largeur de bit ;
un deuxième chemin de données ayant une seconde largeur de bit supérieure à la première largeur de bit ;
une pluralité de troisièmes chemins de données (155-158) ayant une largeur de bit combinée inférieure à la seconde largeur de bit ;
une mémoire d'opérande large (714) couplée au premier chemin de données et au deuxième chemin de données et destinée à mémoriser un opérande large (735) reçu sur le premier chemin de données, l'opérande large ayant une taille avec un nombre de bits supérieur à la première largeur de bit, si bien que ladite réception dudit opérande large nécessite plus qu'un seul transfert sur le premier chemin de données ;
un fichier de registres (720) comportant des registres (127, 128, 720A ... 720n) ayant la première largeur de bit, le fichier de registres étant connecté aux troisièmes chemins de données, et comportant au moins un registre d'opérande large pour spécifier une adresse et la taille de l'opérande large ;
une unité fonctionnelle (740) capable d'exécuter des opérations en réponse à des instructions, l'unité fonctionnelle étant couplée par le deuxième chemin de données à la mémoire d'opérande large, et couplée par les troisièmes chemins de données au fichier de registres (720) ; et
dans lequel l'unité fonctionnelle (740) exécute une instruction large de traduction unique contenant des champs d'instruction spécifiant (i) le registre d'opérande large pour entraîner le recouvrement de l'opérande large en vue de sa mémorisation dans la mémoire d'opérande large, l'opérande large comprenant une table de valeurs ; (ii) un registre source contenant une pluralité d'éléments de données ; et (iii) un registre de résultats, dans lequel les éléments de données du registre source spécifient des rangées dans la table, et les positions de ces éléments de données dans le registre source définissent des colonnes dans la table, et dans lequel l'instruction large de traduction entraîne une copie en parallèle des valeurs situées aux intersections de la rangée spécifiée et de la colonne spécifiée de chaque élément de données situé dans le registre source dans le registre de résultats à la même position que celle de l'élément de données dans le registre source.

2. Processeur selon la revendication 1, dans lequel l'instruction large de traduction spécifie en outre la taille des éléments de données dans le registre source.

3. Processeur selon la revendication 2, dans lequel l'instruction large de traduction définit le nombre de rangées dans la table.

4. Processeur selon la revendication 1, 2 ou 3, dans lequel si la table spécifiée par l'opérande large comporte moins de rangées que la taille des éléments de données situés dans le registre source peut spécifier, de multiples copies de la table sont effectuées, de telle sorte que chaque bit dans chaque élément de données spécifie une rangée dans la table.

5. Processeur selon la revendication 4, dans lequel si la table comporte moins de rangées que la taille des éléments de données dans le registre source peut spécifier, au moins un bit dans chaque élément de données est ignoré dans la spécification de la rangée dans la table.

6. Processeur selon l'une quelconque des revendications précédentes, dans lequel la table compte 4, 8, 16, 32, 64, 128 ou 256 rangées.

7. Processeur selon l'une quelconque des revendications 1 à 5, dans lequel le registre source comprend un registre ayant au moins 16 octets de 8 bits, les huit bits dans chaque octet spécifiant une rangée de 256 rangées dans la table.

8. Processeur selon la revendication 6, dans lequel l'instruction large de traduction partitionne le registre source en éléments de données de 1, 2, 4, ou 8 octets.

9. Processeur selon l'une quelconque des revendications précédentes, dans lequel l'unité fonctionnelle (740) est capable de lancer uniquement une instruction à la fois, et le registre de spécificateur d'opérande large comporte des informations qui spécifient à la fois l'adresse et la taille de l'opérande large.

10. Processeur selon la revendication 9, dans lequel à l'exécution de l'instruction large de traduction, le processeur lit le spécificateur d'opérande large depuis un registre général, et les bits de poids fort dans le spécificateur d'opérande large fournissent l'adresse dans une mémoire à partir de laquelle l'opérande large (735) peut être extrait, et les bits de poids faible dans le spécificateur d'opérande large spécifient la taille de l'opérande large.

11. Processeur selon l'une quelconque des revendications précédentes, dans lequel à l'exécution d'une opération ultérieure spécifiant l'opérande large mémorisé dans la mémoire d'opérande large, le système :
détermine si l'opérande large est déjà mémorisé dans la mémoire d'opérande large ; et
si l'opérande large est déjà mémorisé dans la mémoire d'opérande large, réutilise l'opérande large depuis la mémoire d'opérande large dans l'opération ultérieure.

12. Processeur selon la revendication 11, dans lequel si l'opérande large (735) a été changé, l'opérande large demandé par l'opération ultérieure est recouvré à partir de la mémoire principale.

13. Procédé exécuté par un processeur comprenant un premier chemin de données ayant une première largeur de bit, un deuxième chemin de données ayant une seconde largeur de bit supérieure à la première largeur de bit,
une pluralité de troisièmes chemins de données (155-158) ayant une largeur de bit combinée inférieure à la seconde largeur de bit, une mémoire d'opérande large (714) couplée au premier chemin de données et au deuxième chemin de données et destinée à mémoriser un opérande large (735) reçu sur le premier chemin de données, l'opérande large ayant une taille avec un nombre de bits supérieur à la première largeur de bit, si bien que ladite réception de ladite opérande large nécessite plus qu'un seul transfert sur le premier chemin de données, un fichier de registres (720) comportant des registres (127, 128, 720A ... 720n) ayant la première largeur de bit, le fichier de registres étant connecté aux troisièmes chemins de données, et comportant au moins un registre d'opérande large pour spécifier une adresse et la taille de l'opérande large, le procédé comprenant :
l'exécution d'une instruction large de traduction unique contenant des champs d'instruction spécifiant (i) le registre d'opérande large pour entraîner le recouvrement de l'opérande large en vue de sa mémorisation dans la mémoire d'opérande large, l'opérande large comprenant une table de valeurs ; (ii) un registre source contenant une pluralité d'éléments de données ; et (iii) un registre de résultats, dans lequel les éléments de données du registre source spécifient des rangées dans la table, et les positions de ces éléments de données dans le registre source définissent des colonnes dans la table, et dans lequel l'instruction large de traduction entraîne :
un recouvrement de l'opérande large en vue de sa mémorisation dans la mémoire d'opérande large, l'opérande large comprenant une table de valeurs ; et
la copie en parallèle des valeurs situées aux intersections de la rangée spécifiée et de la colonne spécifiée de chaque élément de données situé dans le registre source dans le registre de résultats à la même position que celle de l'élément de données dans le registre source.

14. Procédé selon la revendication 13, dans lequel l'instruction large de traduction spécifie en outre la taille des éléments de données dans le registre source.

15. Procédé selon la revendication 13 ou 14, dans lequel l'instruction large de traduction définit le nombre de rangées dans la table.

16. Procédé selon la revendication 13, 14 ou 15, dans lequel si la table spécifiée par l'opérande large comporte moins de rangées que la taille des éléments de données dans le registre source peut spécifier, de multiples copies de la table sont effectuées, de telle sorte que chaque bit dans chaque élément de données spécifie une rangée dans la table.

17. Procédé selon la revendication 16, dans lequel si la table comporte moins de rangées que la taille des éléments de données dans le registre source peut spécifier, au moins un bit dans chaque élément de données est ignoré dans la spécification de la rangée dans la table.

18. Procédé selon l'une quelconque des revendications 13 à 17, dans lequel la table compte 4, 8, 16, 32, 64, 128 ou 256 rangées.

19. Procédé selon l'une quelconque des revendications 13 à 17, dans lequel le registre source comprend un registre ayant au moins 16 octets de 8 bits, les huit bits dans chaque octet spécifiant une rangée de 256 rangées dans la table.

20. Procédé selon l'une quelconque des revendications 13 à 19, dans lequel l'instruction large de traduction partitionne le registre source en éléments de données de 1, 2, 4, ou 8 octets.

21. Procédé selon l'une quelconque des revendications 13 à 19, dans lequel l'unité fonctionnelle est capable de lancer uniquement une instruction à la fois, et le registre de spécificateur d'opérande large comporte des informations qui spécifient à la fois l'adresse et la taille de l'opérande large.

22. Procédé selon la revendication 21, dans lequel à l'exécution de l'instruction large de traduction, le processeur lit le spécificateur d'opérande large dans un registre général, et les bits de poids fort dans le spécificateur d'opérande large fournissent l'adresse dans une mémoire à partir de laquelle l'opérande large peut être extrait, et les bits de poids faible dans le spécificateur d'opérande large spécifient la taille de l'opérande large.

23. Procédé selon l'une quelconque des revendications 13 à 22, dans lequel à l'exécution d'une opération ultérieure spécifiant l'opérande large (735) mémorisé dans la mémoire d'opérande large (714), le système :
détermine si l'opérande large est déjà mémorisé dans la mémoire d'opérande large (714) ; et
si l'opérande large est déjà mémorisé dans la mémoire d'opérande large, réutilise l'opérande large depuis la mémoire d'opérande large dans l'opération ultérieure.

24. Procédé selon la revendication 23, dans lequel si l'opérande large a été changé, l'opérande large demandé par l'opération ultérieure est recouvré à partir de la mémoire principale.

25. Système de traitement de données comprenant :
un processeur selon l'une quelconque des revendications 1 à 12, le processeur étant un processeur programmable sur un circuit intégré unique ;
une mémoire principale externe au circuit intégré unique ;
un bus (137) couplé à la mémoire principale ;
le processeur programmable comportant une interface de bus (118) couplant le processeur programmable au bus.

26. Support lisible par ordinateur comprenant un code lisible par ordinateur pour amener le processeur à exécuter les étapes selon l'une quelconque des revendications 13 à 24.
